# EUROPÄISCHE PATENTANMELDUNG

(11) **EP 4 826 492 A2**
(43) Veröffentlichungstag der Anmeldung: **21.10.2026**
(21) Anmeldenummer: 26195615.5
(22) Anmeldetag: 07.03.2023
(51) Int. Cl.: G06F 1/26

(54) **QUANTENCOMPUTERSYSTEM UND VERFAHREN ZUM BETRIEB EINES VERLEGBAREN QUANTENCOMPUTERS**

(30) Priorität: 08.03.2022 DE 102022105464; 08.03.2022 DE 102022105465; 08.03.2022 DE 102022004989; 17.05.2022 DE 102022112269; 20.05.2022 DE 102022112677; 09.01.2023 DE 102023100265; 28.01.2023 DE 102023102094; 28.01.2023 DE 202023100401 U; 06.02.2023 DE 102023102767; 06.02.2023 DE 102023102766; 06.02.2023 DE 102023102852; 06.02.2023 DE 202023100548 U; 20.02.2023 DE 102023104159; 20.02.2023 DE 102023104158; 20.02.2023 DE 202023100801 U; 06.03.2023 DE 102023105496; 06.03.2023 DE 202023101056 U; 06.03.2023 DE 102023105495
(62) Dokumentnummer(n) der früheren Anmeldung(en) nach Art. 76 EPÜ: 23710284.3 / 4 490 675
(71) Anmelder: SaxonQ GmbH, 04107 Leipzig (DE)
(72) Erfinder: BURCHARD, Bernd, 45276 Essen (DE); STAACKE, Robert, 04317 Leipzig (DE); MEIJER, Jan Berend, 44892 Bochum (DE); GRUNDMANN, Marius, 04105 Leipzig (DE)
(74) Vertreter: Pearl Cohen EU

(57) **Zusammenfassung**

Bereitgestellt wird ein Quantencomputersystem umfassend einen verlegbaren Quantencomputer und eine Energieversorgungseinrichtung zur zumindest teilweisen Versorgung des Quantencomputers mit elektrischer Energie. Das Quantencomputersystem ist dadurch gekennzeichnet, dass die Energieversorgungeinrichtung verlegbar ausgebildet ist, und dass die Energieversorgungseinrichtung eine erste Spannungsregelstufe und eine zweite Spannungsregelstufe aufweist und dazu eingerichtet ist, eine von einer Energiequelle bereitgestellte elektrische Energie durch eine mehrstufige Spannungsregelung mittels der ersten Spannungsregelstufe und der zweiten Spannungsstufe zur zumindest teilweisen Versorgung des Quantencomputers auf einen vorbestimmten Spannungswert zu regeln.

## Beschreibung

Bereitgestellt werden ein Quantencomputersystem, eine mobile Datenverarbeitungsvorrichtung, ein Fahrzeug, ein Waffensystem, eine Verwendung einer verlegbaren Energieversorgungseinrichtung, ein Verfahren zum Betrieb eines verlegbaren Quantencomputers, eine Verwendung, eine Verwendung eines Closed-Loop Helium Gas Cooling Systems, und ein Verfahren zur Steuerung eines verlegbaren Waffensystems. Die Ausführungsformen liegen somit insbesondere auf den Gebieten der Quantencomputersysteme und deren Anwendungen.

Herkömmlicherweise erfordern Quantencomputersysteme für deren Betrieb eine Laborumgebung mit präzise definierten und kontrollierten Eigenschaften. Insbesondere erfordern Quantencomputersysteme häufig tiefkalte Temperaturen und eine äußerst stabile Versorgung mit Energie, um deren Betrieb zu ermöglichen. Dies schränkt den Betrieb der Quantencomputersysteme erheblich ein und erlaubt herkömmlicherweise den Betrieb von Quantencomputersystemen nur in einer speziell dafür bereitgestellten Umgebung.

Der Offenbarung liegt daher die Aufgabe zugrunde, die Flexibilität für den Betrieb eines Quantencomputersystems zu erhöhen und optional einen Betrieb eines Quantencomputersystems auch außerhalb spezieller Laborumgebungen zu ermöglichen.

Die Aufgabe wird gelöst durch die Gegenstände der jeweiligen unabhängigen Ansprüche. Optionale Ausgestaltungen sind in den Unteransprüchen und in der Beschreibung angegeben.

In einem ersten Aspekt wird ein Quantencomputersystem bereitgestellt, umfassend einen verlegbaren Quantencomputer und eine Energieversorgungseinrichtung zur zumindest teilweisen Versorgung des Quantencomputers mit elektrischer Energie. Das Quantencomputersystem ist dabei dadurch gekennzeichnet, dass die Energieversorgungeinrichtung verlegbar ausgebildet ist. Zudem weist die Energieversorgungseinrichtung eine erste Spannungsregelstufe und eine zweite Spannungsregelstufe auf, und ist dazu eingerichtet, eine von einer Energiequelle bereitgestellte elektrische Energie durch eine mehrstufige Spannungsregelung mittels der ersten Spannungsregelstufe und der zweiten Spannungsstufe zur zumindest teilweisen Versorgung des Quantencomputers auf einen vorbestimmten Spannungswert zu regeln.

Eine Energieversorgungseinrichtung kann dabei eine Einrichtung zur Versorgung des Quantencomputers und etwaiger weiterer für den Betrieb des Quantencomputersystems bereitgestellter Komponenten mit elektrischer Energie darstellen.

Eine Spannungsregelstufe kann dabei eine elektrische und/oder elektronische Schaltung sein, welche zur Steuerung und/oder Regelung einer elektrischen Spannung und/oder eines elektrischen Stroms und/oder einer elektrischen Leistung, die dem Quantencomputer für dessen Betrieb bereitgestellt wird, geeignet ist. Eine mehrstufige Spannungsregelung ist dabei eine elektrische und/oder elektronische Schaltung, in welcher die elektrische Spannung und/oder der elektrische Strom und/oder die elektrische Leistung nacheinander auf jeweils vorbestimmte Werte und/oder Eigenschaften konditioniert wird. Dass die Energieversorgungseinrichtung zur zumindest teilweisen Versorgung des Quantencomputers mit elektrischer Energie eingerichtet ist, bedeutet dabei, dass optional die Versorgung des Quantencomputers mit elektrischer Energie zu jedem Zeitpunkt durch die Energieversorgungseinrichtung erfolgt. Vielmehr kann zu manchen Zeitpunkten eine Energieversorgung durch andere Energiequellen erfolgen, etwa zu Zeitpunkten und/oder in Zeiträumen, in denen der Quantencomputer keine Quantenoperationen ausführt und/oder keine Quantencomputerprogramme ausführt.

Ein derart ausgestaltetes Quantencomputersystem bietet den Vorteil, dass von der Energieversorgung herrührende Störungen wirksam vom Quantencomputer ferngehalten werden können, und auf diese Weise unerwünschte Einflüsse der Energieversorgung auf den Betrieb des Quantencomputers vermieden werden können. Dies bietet dabei zudem den Vorteil, dass das Quantencomputersystem mit einer Vielzahl von unterschiedlichen Quellen von elektrischer Energie betrieben werden kann, da etwaige Schwankungen und/oder Änderungen in der bereitgestellten Spannung und/oder dem bereitgestellten Strom durch die Energieversorgungseinrichtung reduziert oder gar ganz vermieden werden können. So kann beispielsweise eine Versorgungsspannung, welche durch ein Bordnetz eines Kraftfahrzeugs bereitgestellt wird, in einem großen Bereich variieren, etwa in einem Bereich von 4 V bis 24 V. Ein zuverlässiger Betrieb eines Quantencomputers mit elektrischer Energie, die durch ein solches Bordnetz bereitgestellt wird, kann daher eine entsprechende Flexibilität des Quantencomputersystems erfordern, welche trotz etwaiger Schwankungen eine für den Betrieb des Quantencomputers ausreichend rauschfreie und/oder störungsfreie Spannungsversorgung ermöglicht. Dies kann durch eine Energieversorgungseinrichtung mit mehrstufiger Spannungsregelung, wie oben angegeben, erzielt werden. Somit bietet ein Quantencomputersystem mit den oben angegebenen Merkmalen eine Flexibilität, welche es ermöglicht, einen Quantencomputer in Umgebungen mit unterschiedlichen Versorgungen mit elektrischer Energie zu betreiben. Demnach bietet dies den Vorteil, dass die Flexibilität für den Betrieb des Quantencomputers erhöht wird und auch eine Verlegbarkeit des Quantencomputersystems ermöglicht wird.

Die erste Spannungsregelstufe kann optional einen Spannungswandler und/oder einen Spannungsregler und/oder einen Stromregler aufweisen oder als Spannungswandler oder Spannungsregler oder Stromregler ausgebildet sein. Optional kann die erste Spannungsregelstufe einen Schaltregler aufweisen, welcher dazu ausgelegt ist, einen Spannungsabbau zu bewirken. Die zweite Spannungsregelstufe kann optional einen Linearregler aufweisen oder als solcher ausgebildet sein. Der zweite Spannungsregler kann optional zur Feinregelung der Spannung bzw. des Stroms dienen. Dadurch kann der Energieverbrauch der mehrstufigen Spannungsregelung gering gehalten werden. Außerdem kann dies den Vorteil bieten, dass eine störungsarme bzw. transientenarme Spannungsversorgung für das Quantencomputersystem bzw. für den Quantencomputer bereitgestellt werden kann, wodurch ein zuverlässiger Betrieb des Quantencomputers begünstigt werden kann.

Die zweite Spannungsregelstufe kann dabei der ersten Spannungsregelstufe nachgeschaltet sein. Mit anderen Worten kann die mehrstufige Spannungsregelung sequenziell erfolgen. Dies kann besonders vorteilhaft für die Abschirmung des Quantencomputers vor Störungen und/oder Schwankungen, die aus der Energieversorgung herrühren, vorteilhaft sein.

Optional kann das Quantencomputersystem ferner zumindest eine Energiereserve aufweisen, wobei die zumindest eine Energiereserve dazu ausgelegt sein kann, als Energiequelle zu dienen und die elektrische Energie für die Energieversorgungseinrichtung für die mehrstufige Spannungsregelung bereitzustellen. Außerdem kann das Quantencomputersystem optional eine Ladevorrichtung aufweisen, wobei die Ladevorrichtung dazu ausgelegt sein kann, die zumindest eine Energiereserve zu laden. Die Ladevorrichtung kann optional ein Schaltnetzteil aufweisen oder als solches ausgebildet sein. Dies kann besonders vorteilhaft sein, um etwaige Störungen des Quantencomputers beim Durchführen von Quantenoperationen durch die Ladevorrichtungen zu vermeiden. Des Weiteren kann das Quantencomputersystem ferner eine Trennvorrichtung aufweisen, welche dazu ausgelegt ist, die Energiereserve und die Ladevorrichtung in kontrollierbarer Weise miteinander zu verbinden und voneinander zu trennen. Dies kann den Vorteil bieten, dass das Quantencomputersystem zumindest teilweise und/oder zumindest zeitweise, durch die bereitgestellte Energiequelle mit elektrischer Energie versorgt werden kann und optional sodann nicht auf die Bereitstellung von elektrischer Energie durch eine externe Energiequelle angewiesen ist. Dass das Quantencomputersystem zumindest teilweise durch die Energiereserve mit Energie versorgt wird, bedeutet dabei, dass zumindest manche, optional jedoch alle, Komponenten des Quantencomputersystems mit elektrischer Energie versorgt werden können, während optional andere Komponenten anderweitig mit Energie versorgt werden können. Beispielsweise können manche Komponenten eine oder mehrere eigene Energiereserven aufweisen. Das Bereitstellen einer Trennvorrichtung kann dabei den Vorteil bieten, dass etwaige Störungen und/oder Schwankungen, die von einer externen Energiequelle herrühren, besonders wirksam vom Quantencomputer ferngehalten werden können.

Die zumindest eine Energiereserve kann eine oder mehrere der folgenden Elemente aufweisen: eine Batterie, einen Akkumulator, einen Kondensator, einen Zusammenschaltung zumindest einer Batterie und/oder zumindest eines Akkumulators und/oder zumindest eines Kondensators. Dies ermöglicht, elektrische Energie zu speichern, und für den Betrieb des Quantencomputers bereitzustellen, wenn keine geeignete externe Energiequelle zur Verfügung steht. Dies kann somit vorteilhaft für einen mobilen Einsatz des Quantencomputersystems sein, da zumindest für einen vorbestimmten Zeitraum eine Unabhängigkeit von einer externen Energiequelle geschaffen wird. Optional kann die Art der Energiereserve nach der Stabilität der damit bereitzustellenden elektrischen Energie und/oder nach der Menge an bereitzustellender elektrischer Energie ausgewählt werden. Die Menge der von der Energiereserve bereitstellbaren elektrischen Energie kann einen Einfluss auf die Zeitdauer haben, über welche das Quantencomputersystem den Quantencomputer unabhängig von einer externen Energiequelle betreiben kann.

Das Quantencomputersystem kann dabei in einem ersten Betriebsmodus betreibbar sein, wobei das Quantencomputersystem im ersten Betriebsmodus derart konfiguriert ist, dass die Trennvorrichtung die Ladevorrichtung und die Energiereserve miteinander verbindet, und die Ladevorrichtung die Energiereserve mit elektrischer Energie einer externen Energieversorgung lädt. Mit anderen Worten, das Quantencomputersystem kann sich im ersten Betriebsmodus in einem Ladezustand befinden.

Dabei kann das Quantencomputersystem im ersten Betriebsmodus derart konfiguriert sein, dass die Ladevorrichtung in Verbindung mit der externen Energieversorgung als Energiequelle dient, die die elektrische Energie der externen Energieversorgung der Energieversorgungseinrichtung für die mehrstufige Spannungsregelung bereitstellt. Mit anderen Worten kann im ersten Betriebsmodus über die Ladevorrichtung das Quantencomputersystem direkt mit Energie aus der externen Energieversorgung betrieben werden. D. h., dass optional im ersten Betriebsmodus die Versorgung des Quantencomputersystems und/oder des Quantencomputers nicht mit Energie aus der Energiereserve des Quantencomputersystems erfolgt, sondern mit Energie aus der externen Energieversorgung, welche durch die Ladevorrichtung und die mehrstufige Spannungsregelung aufbereitet bzw. konditioniert werden kann. Dadurch kann optional im ersten Betriebsmodus die Energiereserve des Quantencomputersystems geschont und für solche Situationen bereitgehalten werden, in denen keine Versorgung des Quantencomputers und/oder Quantencomputersystems durch eine geeignete externe Energieversorgung möglich ist.

Das Quantencomputersystem kann optional in einem zweiten Betriebsmodus betreibbar sein, wobei das Quantencomputersystem im zweiten Betriebsmodus derart konfiguriert sein kann, dass die Trennvorrichtung die Ladevorrichtung und die Energiereserve voneinander trennt. Zudem kann das Quantencomputersystem im zweiten Betriebsmodus derart konfiguriert sein, dass die Trennvorrichtung die Ladevorrichtung und die Energieversorgungseinrichtung voneinander trennt, und dass die Energiereserve als Energiequelle dient und der Energieversorgungseinrichtung die elektrische Energie für die mehrstufige Spannungsregelung bereitstellt. Mit anderen Worten kann das Quantencomputersystem im zweiten Betriebsmodus optional dazu eingerichtet sein, dass die Trennvorrichtung das Quantencomputersystem von der externen Energieversorgung und optional von der Ladevorrichtung trennt und der Quantencomputer und/oder das Quantencomputersystem von der Energiereserve des Quantencomputersystems versorgt werden. Dies kann den Vorteil bieten, dass das Quantencomputersystem unabhängig von einer externen Energieversorgung betrieben werden kann und/oder dass etwaige Störungen und/oder Schwankungen, welche von einer externen Energieversorgungseinrichtung herrühren, vom Quantencomputer ferngehalten werden können.

Das Quantencomputersystem kann optional dazu eingerichtet sein, im zweiten Betriebsmodus betrieben zu werden, während der Quantencomputer eine Quantenoperation durchführt und/oder ein Quantencomputerprogramm ausführt. Dies kann den Vorteil bieten, dass das Risiko etwaiger Störungen der Quantenoperation und/oder der Ausführung des Quantencomputerprogramms reduziert werden können, und die Zuverlässigkeit von Quantenoperationen und/oder der Ausführung von Quantencomputerprogrammen erhöht werden kann.

Der Quantencomputer und/oder das Quantencomputersystem können optional eine oder mehrere der folgenden Teilvorrichtungen aufweisen: einen Fotodetektor, einen Verstärker, einen Lichtquellentreiber, eine Lichtquelle, Vorrichtungen (mWA, MW/RF-AWFG) zur Erzeugung eines elektromagnetischen Wellenfeldes, einen Wellenformgenerator, und einen Mikrowellen- und/oder Radiowellenfrequenzgenerator zur Erzeugung vorgebbarer Wellenformen. Dabei können zumindest eine der Teilvorrichtungen und optional alle der Teilvorrichtungen eine interne Spannungsstabilisierung aufweisen. Diese internen Spannungsstabilisierungen können zusätzlich zur mehrstufigen Spannungsregelung des Quantencomputersystems ausgebildet sein. Dies kann die Zuverlässigkeit des Betriebs des Quantencomputers weiter verbessern.

Die Energieversorgungseinrichtung kann dazu eingerichtet sein, das Quantencomputersystem während eines Verlegens des Quantencomputersystems mit elektrischer Energie zu versorgen. Mit anderen Worten, kann die Energieversorgungseinrichtung mobil ausgelegt sein, um optional das Quantencomputersystem ortsungebunden mit elektrischer Energie zu versorgen. Optional kann das Quantencomputersystem verlegbar ausgebildet sein.

"Verlegbar" bzw. "Verlegbarkeit" bedeutet dabei im Sinne der Offenbarung, dass das Quantencomputersystem bzw. die jeweilige Teilvorrichtung dazu geeignet und ausgelegt ist, in kurzer Zeit von einem ersten Ort zu einem zweiten Ort verbracht zu werden, und sowohl am ersten Ort als auch am zweiten Ort und/oder während der Verbringung vom ersten Ort an den zweiten Ort betrieben zu werden. Unter "kurzer Zeit" (Vorschlag) ist hier typischerweise eine Zeit kürzer als ein Tag, besser kürzer als 12 h, besser kürzer als 6 h, besser kürzer als 2 h, besser kürzer als 1 h, besser kürzer als 30 min, besser kürzer als 15 Min, besser kürzer als 5 min, besser kürzer als 2 min, besser kürzer als 1 min zu verstehen. Die Zeit zur Verlegung der Vorrichtung von einem ersten Ort zu einem zweiten Ort kann auch 0 s betragen, wenn die Vorrichtung quasi sofort aus Benutzersicht einsatzbereit ist und/oder permanent einsatzbereit ist, und sich beispielsweise einfach nur bewegt, also während der Bewegung beispielsweise einsatzfähig bleibt. Wobei "Einsatzbereitschaft" bzw. "einsatzbereit"hier im Sinne der hier vorgelegten Schrift das Bereitstehen zum bestimmungsgemäßen Gebrauch bedeutet. Insbesondere kann die Einsatzbereitschaft die Befähigung zur Durchführung von Quantenoperationen und/oder zur Ausführung von Quantencomputerprogrammen beinhalten.

Der verlegbare Quantencomputer **QC** erhält optional seine Energie über eine Energieversorgung EV. Eine Ladevorrichtung **LDV** der Energieversorgung **EV** erhält die Energie optional extern aus einer Energiequelle **PWR.**

Einen guten Überblick über mögliche elektrische Energiequellen gibt das Buch: Vasily Y. Ushakov (Autor), "Electrical Power Engineering: Current State, Problems and Perspectives (Green Energy and Technology)", Taschenbuch - 18. August 2018, Springer; 1st ed. 2018 Edition (18. August 2018), ISBN-10: 3319872850, ISBN-13: 978-3319872858.

Die Energiequelle kann optional eine oder mehrere der im Folgenden genannten Energiequellen aufweisen. Die Energiequelle kann dabei einen Teil der Energieversorgungseinrichtung des Quantencomputersystems bilden oder separat von der Energieversorgungseinrichtung ausgebildet sein.

### Elektrischer Generator

Die Energiequelle kann optional als elektrischer Generator ausgebildet sein, oder einen solchen umfassen, der dazu ausgelegt ist, mechanische Energie in elektrische Energie umzusetzen. Bei der mechanischen Energie kann es sich optional um eine über eine Welle übertragene Energie oder die Energie eines sich bewegenden Fluids handeln. Es kann sich optional um eine elektrische Maschine, wie einen Synchron- oder Asynchron- oder Gleichstrommotor, einen Linearmotor, einen Reluktanzmotor und/oder einen BLDC-Motor oder dergleichen handeln, die die mechanische Energie einer linearen und/oder rotatorischen Bewegung mittels Induktion in Leitungen eines Stators und/oder Rotors in elektrische Energie umsetzen können. Es kann sich optional auch um einen magnetohydrodynamischen Generator, kurz als MHD-Generator bezeichnet, handeln, der die Bewegung eines elektrisch leitenden Fluids in elektrische Energie umsetzt. Bei dem Fluid kann es sich optional um ein Plasma und/oder eine elektrisch leitende Flüssigkeit, beispielsweise eine Salzlösung und/oder ein geschmolzenes Metall handeln. Die Energiequelle kann optional einen Kernreaktor, einen Verbrennungsmotor, eine Heizvorrichtung, ein Jet-Triebwerk, ein Raketentriebwerk, einen Schiffsantrieb, einen Stirlingmotor, eine Turbine, eine Wasserturbine, eine Gasturbine, eine Wind-Turbine, ein Gezeitenkraftwerk, und/oder ein Wellenkraftwerk und/oder dergleichen aufweisen oder als solches ausgebildet sein. Magnetohydrodynamische Generatoren sind beispielsweise aus den folgenden Schriften bekannt: DE 20 2021 101 169 U1, WO 2021 159 117 A1, EP 3 863 165 A1, US 2021 147 061 A1, CN 108 831 576 B, US 2019 368 464 A1, WO 2019 143 396 A2, EP 3 646 452 B1, CN 20 634 1126 U, EP 3 279 603 B1, EP 3 400 642 B1, EP 3 345 290 B1, EP 3 093 966 B1, WO 2016 100 008 A2, DE 10 2014 225 346 A1, RU 2014 143 858 A, EP 3 007 350 B1, US 2016 377 029 A1, RU 2 566 620 C2, EP 3 075 064 A1, EP 2 874 292 B1, EP 2 986 852 B1, CN 10 385 5907 B, RU 126 229 U1, WO 2014 031 037 A2. Ferner wird hinsichtlich optional verwendbarer Energiequellen auf das folgende Buch verwiesen: Hugo K. Messerle (Autor ), "Magnetohydrodynamic Electrical Power Generation (UNESCO Energy Engineering Series)", John Wiley & Sons Ltd (1. August 1995), ISBN-10: 0471942529, ISBN-13: 978-0471942528.

### Elektrochemische Zelle

Die Energiequelle kann optional eine elektrochemische Zelle aufweisen oder als solche ausgebildet sein. Dabei kann es sich beispielsweise um eine elektrochemische Zelle im weitesten Sinne handeln, die mittels chemischer Reaktionen elektrische Energie bereitstellt. Zu diesen elektrochemischen Zellen gehören beispielsweise Akkumulatoren, Batterien und Brennstoffzellen.

### Nukleare Energiequellen

Bei den nuklearen Energiequellen unterscheidet die hier vorgelegte Schrift zwischen solchen, die auf der einen Seite die nukleare Energie zuerst in mechanische Energie, beispielsweise mittels Dampfkreisläufen und Turbinen umsetzen und dann, beispielsweise mittels eines oder mehrerer der oben erwähnten Generatoren, in elektrische Energie umsetzen, und solche, die die nukleare Energie direkt in elektrische Energie umsetzen. Hier nennt die hier vorgelegte Schrift beispielhaft betavoltaische Zellen und thermonukleare Generatoren. Letztere können dahingehend vorteilhaft sein, dass sie mit vertretbarem technischen Aufwand mobil ausgeführt werden können. Die hier in Betracht gezogenen Radionuklidbatterien sind optional dazu ausgelegt, eines oder mehrere der folgenden Isotope zu nutzen: ⁶⁰Co, ⁹⁰Sr, ¹⁰⁶Ru, ¹⁴⁴Cs, 117Pm, ²¹⁰Pm, ²¹⁰Po, ²³⁸Pu, ²⁴²Cm, ²⁴¹Am, ²⁴³Am. Optional ist der verlegbare Quantencomputer **QC** durch eine Strahlenabschirmung), optional aus Blei, vor der Strahlung einer solchen nuklearen Energiequelle geschützt. Zu den Radionuklidbatterien gehören beispielsweise auch betavoltaische Zellen, die beispielsweise Betastrahlung von Betastrahler unmittelbar in elektrische Energie umsetzen können. Solche Radionuklidbatterien sind beispielsweise aus den folgenden Schriften bekannt: DE 1 240 967 B, DE 1 564 070 B1, DE 2 124 465 B2, DE 7 219 216 U, DE 19 782 844 538 B1, DE 69 411 078 T2, US 5 443 657 A, US 5 859 484 A, DE 19 602 875 A1, DE 19 738 066 A1, DE 19 957 669 A1, DE 19 957 669 A1, US 8 552 616 B2, WO 2009 103 974 A1 und US 2018 226 165 A1.

Die Energiequelle kann optional auch eine oder mehrere erneuerbare Energiequelle, wie etwa eine Solarzelle und/oder ein Wasserkraftwerk mit einer Wasserturbine und einem Generator und/oder eine Windkraftanlage mit einer Windturbine und einem Generator aufweisen oder als solche ausgebildet sein.

Die Energiequelle kann optional ein herkömmliches Kohle-, Braunkohle, Öl- und/oder Gaskraftwerk aufweisen oder als solches ausgebildet sein, welche kohlenstoffhaltige und/oder kohlenwasserstoffhaltige Brennstoffe verfeuern, um thermische Energie zu erzeugen und dann die thermische Energie in mechanische Energie umsetzen und dann die mechanische Energie in elektrische Energie umzusetzen.

Die Energiequelle kann optional sogenannte Energy Harvesting Devices aufweisen oder als solche ausgebildet sein. Dabei handelt es sich um Vorrichtungen, die in der Umwelt oder anderweitig ohnehin vorhandene Energieunterschiede nutzen, um z. B. aus der Bewegungsenergie einer Person oder eines anderen bewegten Objekts oder aus thermischen Unterschieden, wie beispielsweise in Heizungssystemen oder dergleichen, elektrische Energie zu gewinnen.

Schließlich kann die Energiequelle ganz einfach auch das Stromnetz sein, wobei die Primärenergiequelle, welche die elektrische Energie in das Stromnetz einspeist, in diesem Fall unbestimmt bleiben kann.

Das Quantencomputersystem weist optional eine Ladevorrichtung **LDV** auf. Die Ladevorrichtung **LDV** kann einen Teil der Energieversorgungseinrichtung bilden oder separat vor der Energieversorgungseinrichtung ausgebildet sein. Optional bereitet die Ladevorrichtung **LDV** die Energie der Energieversorgung **PWR** der Ladevorrichtung **LDV** soweit auf, dass die Ladevorrichtung **LDV** mit der Energie der Energieversorgung **PWR** eine oder mehrere Energiereserven **BENG, BENG2** laden kann. Beispielsweise kann die Ladevorrichtung **LDV** dazu einen Spannungswandler und/oder einen Buck-Konverter und/oder einen Boost-Konverter und/oder einen Buck-Boost-Konverter aufweisen, je nach Art der Energieversorgung **PWR.** Optional überwacht die Ladevorrichtung **LDV** den Ladevorgang der jeweiligen Energiereserve **BENG, BENG2,** wenn sie diese lädt.

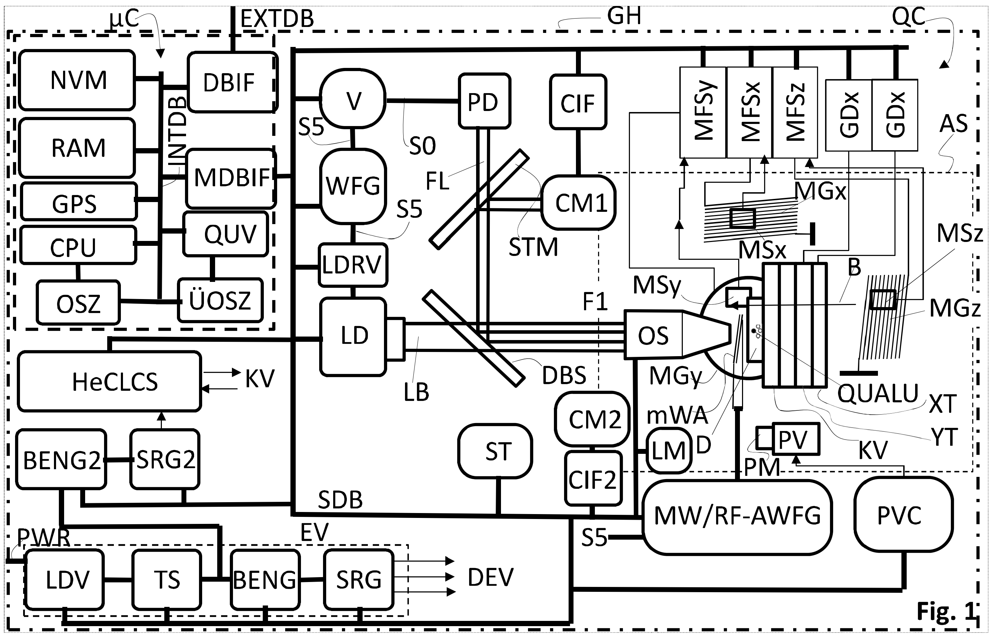

Sofern der Quantencomputer **QC** kein Quantencomputerprogramm ausführt und/oder keine Quantenoperationen durchführt, kann die Ladevorrichtung **LDV** optional auch Vorrichtungsteile des verlegbaren Quantencomputers **QC** über jeweilige Energieaufbereitungsvorrichtungen **SRG, SRG2** versorgen. Optional lädt die Ladevorrichtung **LDV** dann auch eine oder mehrere der Energiereserven **BENG, BENG2** des verlegbaren Quantencomputers **QC.** In dem Beispiel der Figur 1 weist der vorgeschlagene verlegbare Quantencomputer **QC** beispielhaft zwei Energiereserven **BENG, BENG2** und zwei Energieaufbereitungsvorrichtungen **SRG, SRG2** auf. Die hier vorgelegte Schrift weist darauf hin, dass die Anzahl der Energiereserven, Energieaufbereitungsvorrichtungen und Ladevorrichtungen und Trennvorrichtungen von den Angaben in den präsentierten Beispielen abweichen kann. Die Ladevorrichtung **LDV** stellt optional eine Barriere für Transienten der Energieversorgung **PWR** dar. Die Ladevorrichtung **LDV** kann gemäß manchen optionalen Ausführungsformen diese transienten Störungen der Energieversorgung **PWR** nicht vollständig unterdrücken. Auch kann die Ladevorrichtung **LDV,** beispielsweise wenn die Ladevorrichtung **LDV** ein Schaltnetzteil ist, optional selbst transiente Störungen hervorrufen. Daher kann es vorteilhaft sein, ein oder mehrere rauscharme Energiereserven **BENG, BENG2** für die Versorgung besonders störanfälliger Vorrichtungsteile des Quantencomputersystems bereitzustellen, wie etwa den Fotodetektor **PD,** den Verstärker **V,** den Lichtquellentreiber **LDRV,** die Lichtquelle **LD** und/oder ggf. für magnetfelderzeugenden Vorrichtungsteile **MFSx, MFSy, MFSz, MGx, MGy, MGz** und Vorrichtungsteile mit zeitlich besonders sensitivem Signalschema, wie der Wellenformgenerator **WFG,** und/oder den Mikrowellen- und/oder Radiowellenfrequenzgenerator **MW/RF-AWFG** zur Erzeugung weitestgehend frei vorgebbarer Wellenformen (Englisch: Arbitrary-Wave-Form-Generator). Optional sind diese Vorrichtungsteile dazu eingerichtet, innerhalb dieser Vorrichtungsteile ihre internen Versorgungsspannungen nochmals aufzubereiten und/oder zu stabilisieren, um das Rauschen und/oder Störungen der Energieversorgung maximal zu unterdrücken. Optional umfasst der Quantencomputer **QC** zur Versorgung der Vorrichtungsteile aus der einen Energiereserve oder der Mehrzahl von Energiereserven **BENG, BENG2** eine oder mehrere Energieaufbereitungsvorrichtungen **SRG, SRG2.** Die Energieaufbereitungsvorrichtungen passen optional den Spannungspegel, der von der Ladevorrichtung **LDV** bzw. den Energiereserven **BENG, BENG2** geliefert wird, auf einen geeigneten Spannungspegel des jeweils versorgten Vorrichtungsteils des Quantencomputers **QC** optional mit einem Spannungsvorhalt an. In einer zweiten Regelstufe, die optional ein Linear-Regler ist oder einen solchen aufweist, können dann beispielsweise diese Linearregler den Spannungsvorhalt nutzen, um die eigentliche Versorgungsspannung der betreffenden Vorrichtungssteile des Quantencomputersystems rauscharm und präzise einzustellen.

Optional trennen eine oder mehrere Trennvorrichtungen **TS** die eine Ladevorrichtung bzw. die mehreren Ladevorrichtungen **LDV** von der einen Energieaufbereitungsvorrichtung bzw. den mehreren Energieaufbereitungsvorrichtungen **SRG, SRG2** und/oder der einen rauscharmen Energiereserve bzw. den mehreren rauscharmen Energiereserven **BENG, BENG2,** wenn der Quantencomputer ein Quantencomputerprogramm ausführt und/oder eine Quantenoperation durchführt. Die eine oder die mehreren Trennvorrichtungen können dabei jeweils einen Teil der Energieversorgungseinrichtung bilden oder separat von dieser ausgebildet sein. Eine Quantenoperation im Sinne der hier vorgelegten Schrift ist eine Manipulation eines Quantenpunkts **NV1, NV2, NV3** und/oder eines Kernquantenpunkts **CI1₁, CI1₂, CI1₃, CI2₁, CI2₂, CI2₃**, **CI3₁, CI3₂, CI3₃**. Ein Quantencomputerprogramm ist im Sinne der hier vorgestellten Schrift ein Programm, dass mindestens eine Quantenoperation umfasst. Optional kodieren eine oder mehrere binäre Daten im Speicher **NVN, RAM** der Steuervorrichtung **µC** des verlegbaren Quantencomputers **QC** eine solche Quantenoperation. Beispielsweise kann es sich um ein vorbestimmtes Datenwort handeln. Eine Quantenoperation im Sinne der hier vorgelegten Schrift manipuliert optional zumindest den Quantenzustand zumindest eines Quantenpunkts der **Quantenpunkte NV1, NV2, NV3** des verlegbaren Quantencomputers **QC** und/oder manipuliert optional zumindest den Quantenzustand zumindest eines Kernquantenpunkts der Kernquantenpunkte **CI1₁, CI1₂, CI1₃, CI2₁**, **CI2₂, CI2₃, CI3₁, CI3₂, CI3₃** des verlegbaren Quantencomputers **QC.** Das Datenwort, das eine solche Quantenoperation symbolisiert, bezeichnet die technische Lehre der hier vorgelegten Schrift auch als Quanten-Op-Code. Ein Quantencomputerprogramm umfasst optional zumindest einen Quanten-Op-Code. In dem vorstehenden Fall, wenn der verlegbare Quantencomputer **QC** ein Quantencomputerprogramm ausführt und/oder eine Quantenoperation durchführt, versorgen die eine Energiereserve bzw. die mehreren Energiereserven **BENG, BENG2** optional die eine Energieaufbereitungsvorrichtung bzw. den mehreren Energieaufbereitungsvorrichtungen **SRG, SRG2** optional mit elektrischer Energie, die besonders rauscharm ist.

Optional verbinden eine oder mehrere Trennvorrichtungen **TS** die eine Ladevorrichtung bzw. die mehreren Ladevorrichtungen **LDV** mit der einen Energieaufbereitungsvorrichtung bzw. den mehreren Energieaufbereitungsvorrichtungen **SRG, SRG2** und/oder der einen rauscharmen Energiereserve bzw. von den mehreren rauscharmen Energiereserven **BENG, BENG2,** wenn der verlegbare Quantencomputer **QC** kein Quantencomputerprogramm ausführt und/oder keine Quantenoperation durchführt. In diesem Fall lädt die Ladevorrichtung **LDV** optional die eine Energiereserve bzw. die mehreren Energiereserven **BENG, BENG2** und versorgt ggf. die eine Energieaufbereitungsvorrichtung bzw. den mehreren Energieaufbereitungsvorrichtungen **SRG, SRG2** mit elektrischer Energie, die typischerweise nun weniger rauscharm ist.

Optional weist das oben-beschriebene Quantencomputersystem ferner zumindest ein Magnetfeldsensorsystem und zumindest einen Magnetfeldgenerator auf. Dabei ist das Quantencomputersystem optional dazu eingerichtet, mittels des zumindest einen Magnetfeldsensorsystems eine Änderung eines vorherrschenden Magnetfelds zu ermitteln und mittels des Magnetfeldgenerators die ermittelte Änderung des Magnetfelds am Ort des Quantencomputers zumindest teilweise zu kompensieren.

In einem weiteren Aspekt wird ein Quantencomputersystem umfassend einen verlegbaren Quantencomputer bereitgestellt, wobei das Quantencomputersystem dadurch gekennzeichnet ist, dass das Quantencomputersystem ferner zumindest ein Magnetfeldsensorsystem und zumindest einen Magnetfeldgenerator aufweist. Dabei ist das Quantencomputersystem dazu eingerichtet, mittels des zumindest einen Magnetfeldsensorsystems eine Änderung eines vorherrschenden Magnetfelds zu ermitteln und mittels des Magnetfeldgenerators die ermittelte Änderung des Magnetfelds am Ort des Quantencomputers zumindest teilweise zu kompensieren.

Ein Magnetfeldsensorsystem ist dabei ein System mit einem oder mehreren Magnetfeldsensoren. Das Magnetfeldsensorsystem kann optional weitere Komponenten aufweisen, welche für den Betrieb des einen oder der mehreren Magnetfeldsensoren vorteilhaft oder erforderlich sein können.

Ein Magnetfeldgenerator ist dabei eine Vorrichtung, welche dazu ausgelegt ist, ein Magnetfeld zu erzeugen und/oder in kontrollierbarer Weise zu ändern. So kann der Magnetfeldgenerator dazu ausgelegt sein, in kontrollierbarer Weise ein Magnetfeld derart bereitzustellen, dass dadurch ein etwaiges externes Magnetfeld und/oder eine Änderung eines externen Magnetfelds zumindest teilweise kompensiert wird, um eine unerwünschte Einwirkung des externen Magnetfelds oder dessen Änderung abzuschwächen oder vollständig zu kompensieren.

Ein Quantencomputersystem gemäß diesem Aspekt bietet den Vorteil, dass unerwünschte Einflüsse von Magnetfeldern, insbesondere von externen Magnetfeldern, auf den Quantencomputer und optional auf andere Komponenten des Quantencomputersystems zuverlässig reduziert oder gar minimiert oder gar eliminiert werden können. Dadurch können unerwünschte Beeinträchtigungen des Quantencomputers vermieden werden und die Zuverlässigkeit des Betriebes des Quantencomputers erhöht werden. Optional können dadurch etwaige Fehlerquoten des Quantencomputers bei der Durchführung von Quantenoperationen und/oder beim Ausführen von Quantencomputerprogrammen verringert werden, und entsprechend die Genauigkeit und/oder die Zuverlässigkeit des Quantencomputersystems erhöht werden.

Optional ist das Magnetfeldsensorsystem dazu ausgelegt, das Magnetfeld in drei Raumrichtungen zu erfassen. Dabei kann das Quantencomputersystem dazu ausgelegt sein, die dreidimensionale Änderung des vorherrschenden Magnetfelds zu ermitteln. Dies kann die Möglichkeit bieten, den Quantencomputer von unerwünschten Magnetfeldern und/oder unerwünschten Änderungen von Magnetfeldern in allen drei Raumrichtungen zumindest teilweise abzuschirmen und einen möglichst störungsfreien und/oder fehlerfreien Betrieb des Quantencomputers zu ermöglichen.

Das Magnetfeldsensorsystem kann dazu ausgelegt sein, einen dreidimensionalen Vektor einer magnetischen Flussdichte B am Ort des Quantencomputers und/oder in unmittelbarer Umgebung des Quantencomputers zu messen. Dies kann den Vorteil bieten, dass eine möglichst genaue Kenntnis des zu kompensierenden und/oder zu stabilisierenden Magnetfelds erlangt werden kann und auf diese Weise ein möglichst störungsfreier und/oder fehlerfreier Betrieb des Quantencomputersystems erreicht werden kann.

Der zumindest eine Magnetfeldgenerator kann zumindest ein Magnetfelderzeugungsmittel aufweisen Das zumindest eine Magnetfelderzeugungsmittel kann optional eines oder mehrere der folgenden Elemente aufweisen: zumindest einen Permanentmagneten, zumindest einen Elektromagneten, zumindest eine Helmholtzspule, und zumindest ein Helmholtzspulenpaar. Optional können mehrere Helmholtzspulen und/oder mehrere Helmholtzspulenpaare in unterschiedlichen Raumrichtungen orientiert und angeordnet sein, sodass damit das Magnetfeld am Ort des Quantencomputers in mehreren Raumrichtungen zumindest teilweise kompensiert oder stabilisiert werden kann. Optional kann das zumindest eine Magnetfelderzeugungsmittel einen magnetischen Kreis bilden.

Der Magnetfeldgenerator kann optional zumindest eine Positioniervorrichtung aufweisen, welche dazu ausgelegt ist, eine Position und/oder Orientierung des zumindest einen Magnetfelderzeugungsmittels relativ zum Quantencomputer zu ändern. Dies kann eine Einfache Anpassung des durch den Magnetfeldgenerator erzeugten Magnetfeldes ermöglichen. Insbesondere kann dies ermöglichen, einen oder mehrere Permanentmagneten für die Erzeugung des Magnetfelds zu verwenden und dennoch die Möglichkeit zu bieten, das durch den Magnetfeldgenerator am Ort des Quantencomputers bereitgestellte Magnetfeld kontrolliert anpassen zu können.

Das Quantencomputersystem kann ferner dazu eingerichtet sein, ein Erdmagnetfeld am Ort des Quantencomputers zumindest teilweise zu kompensieren. Dies kann die Möglichkeit bieten, unerwünschte Einflüsse des Erdmagnetfelds auf den Quantencomputer gezielt abzuschwächen oder zu kompensieren.

Das Quantencomputersystem kann dabei optional ferner eine Positionsbestimmungsvorrichtung aufweisen. Zudem kann das Quantencomputersystem dabei ferner dazu eingerichtet sein, unter Verwendung der Positionsbestimmungsvorrichtung eine Position und/oder Orientierung des Quantencomputers relativ zur Erde zu ermitteln und auf Basis der ermittelten Position und/oder Orientierung des Quantencomputers relativ zur Erde das zu kompensierende Erdmagnetfeld am Ort des Quantencomputers zu bestimmen.

Dies kann die Möglichkeit bieten, auf automatisierte Weise gezielt das Erdmagnetfeld oder eine Änderung des Erdmagnetfelds, insbesondere bei einer Bewegung des Quantencomputersystem im Erdmagnetfeld, abzuschwächen, zu kompensieren und/oder zu stabilisieren. Dabei kann das Quantencomputersystem optional ferner dazu ausgelegt sein, eine Positionsänderung und/oder Orientierungsänderung des Quantencomputers zu ermitteln und eine Vorhersage für eine zu erwartende Änderung des zu kompensierenden Erdmagnetfelds am Ort des Quantencomputers zu generieren. Dabei kann das Quantencomputersystem ferner dazu ausgelegt sein, eine kartografische Information über das Erdmagnetfeld für die Vorhersage des zu erwartenden Erdmagnetfelds und/oder eine zu erwartende Änderung des zu kompensierenden Erdmagnetfelds zu verwenden.

Das Quantencomputersystem kann ferner eine Abschirmung umfassen, wobei das Quantencomputersystem dazu ausgelegt ist, mittels der Abschirmung zumindest manche Teilvorrichtungen des Quantencomputersystems zumindest teilweise von elektrischen Feldern und/oder Magnetfeldern abzuschirmen. Dies kann den unerwünschten Einfluss von externen Magnetfeldern auf den Quantencomputer weiter reduzieren und/oder den erforderlichen Aufwand für eine Abschwächung und/oder Kompensation von Magnetfeldern und/oder der Änderung von Magnetfeldern am Ort des Quantencomputers reduzieren.

Das Quantencomputersystem kann ferner ein Gehäuse umfassen, wobei die Abschirmung zumindest teilweise innerhalb des Gehäuses angeordnet ist und/oder zumindest teilweise in das Gehäuse integriert ist. Dies kann die Anzahl der Bauteile und/oder die Komplexität des Aufbaus des Quantencomputersystems reduzieren. Das Gehäuse kann dazu ausgelegt ein, einen Faraday'schen Käfig um den Quantencomputer zu bilden. Dadurch kann der Quantencomputer durch das Gehäuse zumindest teilweise von externen elektrischen Feldern abgeschirmt werden und entsprechend eine Stabilität des Betriebs des Quantencomputers erhöht werden. Die Abschirmung kann optional derart ausgebildet sein, dass die Abschirmung den Quantencomputer gegenüber anderen Komponenten des Quantencomputersystem abschirmt. Dies kann vorteilhaft sein, um einen unerwünschten Einfluss von solchen Komponenten des Quantencomputersystems, welche elektrische und/oder magnetische Felder erzeugen, auf den Quantencomputer zu reduzieren. Das Gehäuse kann optional mehrere Teilgehäuse aufweisen, wobei der Quantencomputer in einem der mehreren Teilgehäuse angeordnet ist und wobei das Teilgehäuse, in welchem der Quantencomputer angeordnet ist, zumindest einen Teil der Abschirmung aufweist, die den Quantencomputer gegenüber anderen Komponenten des Quantencomputersystems abschirmt.

Die Abschirmung und/oder das Gehäuse können optional zumindest teilweise aus einem µ-Metall ausgebildet sein oder ein µ-Metall umfassen. Dies kann eine besonders effektive Abschirmung des Quantencomputers gegenüber externen Magnetfeldern bewirken.

Optional kann die Energieversorgungseinrichtung des Quantencomputersystems zumindest teilweise innerhalb der Abschirmung angeordnet sein. Dies kann den Vorteil bieten, dass die Energieversorgungseinrichtung vor unerwünschten Einflüssen durch externe elektrische und/oder magnetische Felder zumindest teilweise geschützt werden kann.

Im Folgenden werden optionale Merkmale des Magnetfeldsensorsystems und des Magnetfeldgenerators, sowie deren Funktionsweise im Quantencomputersystem erläutert.

Um den Einfluss externer Magnetfelder zu verringern, ist es sinnvoll den vorgeschlagenen Quantencomputer **QC** mit einer Abschirmung **AS** gegen diese externen magnetischen Felder zu versehen. Diese Abschirmung kann beispielsweise eine passive Abschirmung **AS** beispielsweise in Form von µ-Metall-Matten und/oder eine aktive Abschirmung **AS** in Form eines magnetfelderzeugenden Systems sein, das ein magnetisches Gegenfeld zu einem externen magnetischen Störfeld erzeugt und dieses dadurch in seiner Wirkung reduziert und/oder sogar kompensiert. Optional umfasst daher der vorgeschlagene Quantencomputer einen oder mehrere Magnetfeldsensoren **MSx, MSy, MSz** zur Erfassung der Stärke der magnetischen Flussdichte B und/oder der magnetischen Feldstärke H. Die Magnetfeldsensoren werden (Vorschlag: hier) auch als Sensoren bezeichnet. Optional nutzt die Steuervorrichtung **µC** die durch den einen oder die mehreren Sensoren **MSx, MSy, MSz** erfassten Werte der magnetischen Flussdichte B und/oder der magnetischen Feldstärke H zur Steuerung von Magnetfelderzeugungsmitteln **MGx, MGy, MGz.** Die Magnetfelderzeugungsmittel **MGx, MGy, MGz** erzeugen optional eine kompensierende magnetische Flussdichte B eines magnetischen Gegenfeldes, das die magnetische Flussdichte B des magnetischen Störfeldes kompensiert.

Optional erfasst ein erster Sensor **MSx** die Stärke der magnetischen Flussdichte B und/oder der magnetischen Feldstärke H in einer ersten Richtung, beispielsweise entlang einer X-Achse. Eine erste Magnetfeldsteuerung **MFSx** versorgt optional ein erstes Magnetfelderzeugungsmittel **MGx** des Magnetfeldgenerators mit elektrischer Energie. Das erste Magnetfelderzeugungsmittel **MGx** erzeugt optional eine magnetische Flussdichte Bₓ, die optional im Wesentlichen eine Richtung aufweist, die optional der ersten Richtung, also beispielsweise der Richtung der X-Achse, entspricht. Die erste Magnetfeldsteuerung **MFSx** des Magnetfeldgenerators bestromt optional das erste Magnetfelderzeugungsmittel **MGx** mit einem ersten elektrischen Strom **Ix.** Optional steuert eine Steuervorrichtung **µC** des Quantencomputersystems das erste Magnetfelderzeugungsmittel **MGx** über die erste Magnetfeldsteuerung **MFSx.** Optional regelt die erste Magnetfeldsteuerung **MFSx** die Erzeugung der magnetischen Flussdichte Bₓ durch das erste Magnetfelderzeugungsmittel **MGx** so, dass die vom ersten Sensor **MSx** erfasste, magnetische Flussdichte B bzw. die vom ersten Sensor **MSx** erfasste magnetische Feldstärke H einem ersten Wert entspricht. Optional ist dieser erste Wert Null. Hierfür wertet die erste Magnetfeldsteuerung **MFSx** optional den vom ersten Sensor **MSx** erfassten Wert der magnetischen Flussdichte B bzw. den vom ersten Sensor **MSx** erfassten Wert der magnetischen Feldstärke H aus.

Optional erfasst ein zweiter Sensor **MSy** des Magnetfeldsensorsystems die Stärke der magnetischen Flussdichte B und/oder der magnetischen Feldstärke H in einer zweiten Richtung, beispielsweise einer Y-Achse. Optional ist die Richtung der Y-Achse senkrecht zur Richtung der X-Achse gewählt. Eine zweite Magnetfeldsteuerung **MFSy** des Magnetfeldgenerators versorgt optional ein zweites Magnetfelderzeugungsmittel **MGy** des Magnetfeldgenerators mit elektrischer Energie. Das zweite Magnetfelderzeugungsmittel **MGy** erzeugt optional eine magnetische Flussdichte B_{y}, die optional im Wesentlichen eine Richtung aufweist, die optional der zweiten Richtung, also beispielsweise der Richtung der Y-Achse, entspricht. Die zweite Magnetfeldsteuerung **MFSy** bestromt optional das zweite Magnetfelderzeugungsmittel **MGy** mit einem zweiten elektrischen Strom **Iy**. Optional steuert die Steuervorrichtung **µC** das zweite Magnetfelderzeugungsmittel **MGy** über die zweite Magnetfeldsteuerung **MFSy.** Optional regelt die zweite Magnetfeldsteuerung **MFSy** die Erzeugung der magnetischen Flussdichte B_{y} durch das zweite Magnetfelderzeugungsmittel **MGy** in der Art, dass die vom zweiten Sensor **MSy** erfasste magnetische Flussdichte B bzw. die vom zweiten Sensor **MSy** erfasste magnetische Feldstärke H einem zweiten Wert entspricht. Optional ist dieser zweite Wert Null. Hierfür wertet die zweite Magnetfeldsteuerung **MFSy** den vom zweiten Sensor **MSy** erfassten Wert der magnetischen Flussdichte B bzw. den vom zweiten Sensor **MSy** erfassten Wert der magnetischen Feldstärke H aus.

Optional erfasst ein dritter Sensor **MSz** des Magnetfeldsensorsystems die Stärke der magnetischen Flussdichte B und/oder der magnetischen Feldstärke H in einer dritten Richtung, beispielsweise einer Z-Achse. Optional ist die Richtung der Z-Achse senkrecht zur Richtung der X-Achse und senkrecht zur Richtung der Y-Achse gewählt. Eine dritte Magnetfeldsteuerung **MFSz** des Magnetfeldgenerators versorgt optional ein drittes Magnetfelderzeugungsmittel **MGz** des Magnetfeldgenerators mit elektrischer Energie. Das dritte Magnetfelderzeugungsmittel **MGz** erzeugt optional eine magnetische Flussdichte B_{z}, die optional im Wesentlichen eine Richtung aufweist, die optional der dritten Richtung, also beispielsweise der Richtung der Z-Achse, entspricht. Die dritte Magnetfeldsteuerung **MFSz** bestromt optional das dritte Magnetfelderzeugungsmittel **MGz** mit einem dritten elektrischen Strom Iz. Optional steuert die Steuervorrichtung **µC** das dritte Magnetfelderzeugungsmittel **MGz** über die dritte Magnetfeldsteuerung **MFSz.** Optional regelt die dritte Magnetfeldsteuerung **MFSz** die Erzeugung der magnetischen Flussdichte B_{z} durch das dritte Magnetfelderzeugungsmittel **MGz** in der Art, dass die vom dritten Sensor **MSz** erfasste magnetische Flussdichte B bzw. die vom dritten Sensor **MSz** erfasste magnetische Feldstärke H einem dritten Wert entspricht. Optional ist dieser dritte Wert Null. Hierfür wertet die dritte Magnetfeldsteuerung **MFSz** den vom dritten Sensor **MSz** erfassten Wert der magnetischen Flussdichte B bzw. den vom dritten Sensor **MSz** erfassten Wert der magnetischen Feldstärke H aus.

Der Quantencomputer **QC** des Quantencomputersystems verfügt optional über ein optisches System **OS,** das es der Lichtquelle **LED** erlaubt, die Quantenpunkte **NV1, NV2, NV3** mit Pumpstrahlung **LB** zu bestrahlen. Optional handelt es sich bei dem optischen System **OS** um ein konfokales Mikroskop. Optional ermöglicht das optische System **OS** aber auch eine optische Auslesung des Zustands von Quantenpunkten **NV1, NV2, NV3** des verlegbaren Quantencomputers **QC.** Hierzu weist der verlegbare Quantencomputer **QC** des verlegbaren Quantencomputersystems **QUSYS** beispielsweise optional einen dichroitischen Spiegel **DBS** auf, der die von den Quantenpunkten **NV1, NV2, NV3** emittierte Fluoreszenzstrahlung **FL** passieren lässt, und die Pumpstrahlung **LB** der Lichtquelle **LD** auf die Quantenpunkte **NV1, NV2, NV3** umlenkt, und die Pumpstrahlung **LB** von dem Fotodetektor **PD** zur Detektion der Fluoreszenzstrahlung **FL** abhält. Statt eines dichroitischen Spiegels **DBS** kann der verlegbare Quantencomputer **QC** des Quantencomputersystems **QUSYS** beispielsweise auch einen dichroitischen Spiegel **DBS** aufweisen, der die von den Quantenpunkten **NV1, NV2, NV3** emittierte Fluoreszenzstrahlung **FL** wegspiegelt und die Pumpstrahlung **LB** der Lichtquelle **LD** über das optische System **OS** auf die Quantenpunkte **NV1, NV2, NV3** passieren lässt, sodass die Pumpstrahlung **LB** der Lichtquelle **LD** diese Quantenpunkte **NV1, NV2, NV3** mit Pumpstrahlung **LB** der Pumpstrahlungswellenlänge **λₚₘₚ** bestrahlt. In dem Fall erfasst optional das optische System **OS** die Fluoreszenzstrahlung **FL** der Quantenpunkte **NV1, NV2, NV3** und der dichroitischen Spiegel **DBS** spiegelt diese Fluoreszenzstrahlung **FL** auf den Fotodetektor **PD** zur Detektion der Fluoreszenzstrahlung **FL.** Der Quantencomputer **QC** kann somit, insbesondere wenn er eine optische Auslesung der Zustände der Quantenpunkte **NV1, NV2, NV3** verwendet, einen Fotodetektor **PD** zur Erfassung der Fluoreszenzstrahlung **FL** der Quantenpunkte **NV1, NV2, NV3** umfassen. Der Fotodetektor **PD** erzeugt optional in Abhängigkeit von der Fluoreszenzstrahlung **FL** ein Empfangssignal **S0.** Ein im Signalpfad nachfolgender Verstärker **V** verstärkt und filtert optional das Empfangssignal **S0** zu einem verstärkten Empfangssignal **S1.** Der Verstärker **V** kann somit zur Verstärkung und/oder Filterung des Ausgangssignals des Fotodetektors **PD** dienen, das typischerweise das Empfangssignal **S0** ist. Optional ist das verstärkte Empfangssignal **S1** ein digitalisiertes Signal bestehend aus einem oder mehreren Abtastwerten. Optional erfasst die Steuervorrichtung **µC** beispielsweise mittels eines Analog-zu-Digital-Wandlers **ADCV** den Wert des verstärkten Empfangssignals **S1.** Das Quantencomputersystem kann somit, sofern es eine elektronische Auslesung der Zustände der Quantenpunkte **NV1, NV2, NV3** verwendet, eine entsprechende Vorrichtung zum elektronischen Auslesen der Zustände der Quantenpunkte **NV1, NV2, NV3** umfassen. An dieser Stelle verweist die hier vorgelegte Schrift ausdrücklich nochmals auf die Schrift DE 10 2020 125 189 A1. Optional sind diese Vorrichtungsteile des Quantencomputersystems in einem optional gemeinsamen Gehäuse **GH** untergebracht, das optional im Sinne der hier vorgelegten Schrift Teil des Quantencomputersystems ist. Optional befinden sich die Quantenpunkte **NV1, NV2, NV3** und die Kernquantenpunkte **CI1₁, CI1₂, CI1₃, CI2₁, CI2₂, CI2₃, CI3₁, CI3₂, CI3₃** innerhalb eines Substrats **D** des Quantencomputers. Optional ist das Substrat **D** mit Dotierstoffen dotiert. Optional umfasst das Substrat **D** im Wesentlichen optional zumindest im Wirkungsbereich der Quantenpunkte **NV1, NV2, NV3** im Wesentlichen Atome ohne ein magnetisches Moment. Im Falle von Diamant als Material des Substrats **D** umfasst der Diamant optional im Wesentlichen ¹²C-Isotope. Optional bilden im Falle der Verwendung von NV-Zentren in Diamant als Quantenpunkte **NV1, NV2, NV3** Sauerstoffatome ¹⁶O, ¹⁸O und/oder Phosphor- und/oder Schwefelatome ³²S, ³⁴S, ³⁶S ohne magnetisches Moment in dem Substrat **D** im Bereich der Quantenpunkte **NV1, NV2, NV3** die Dotierung aus. Diese Dotierung im Bereich der Quantenpunkte **NV1, NV2, NV3** kann insbesondere die folgenden beiden Vorteile bieten. Zum Ersten können diese Dotieratome das Fermi-Niveau E_{F} im Bereich der Quantenpunkte **NV1, NV2, NV3** verändern. Im Falle der Verwendung von NV-Zentren als Quantenpunkten **NV1, NV2, NV3** diese Dotierung mit den besagten Dotieratomen das Fermi-Niveau E_{F} im Bereich dieser Quantenpunkte **NV1, NV2, NV3** verschieben. Im Falle einer n-Dotierung kann diese das Fermi-Niveau E_{F} im Bereich dieser Quantenpunkte **NV1, NV2, NV3** so verschieben, dass das Fermi-Niveau angehoben wird und dass daher dann die energetisch niedriger liegenden NV-Zentren optional elektrisch negativ geladen sind. Die NV-Zentren können dann daher NV⁻ -Zentren darstellen. Da NV⁻-Zentren aufgrund des negativen Ladungselektrons über ein magnetisches Moment dieser Elektronenkonfiguration verfügen, können NV⁻-Zentren somit für die Verwendung als Quantenpunkte **NV1, NV2, NV3** besonders geeignet sein. Zum Zweiten kann diese Dotierung, die optional eine n-Dotierung ist, dazu führen, dass die Fehlstellen (Englisch: Vacancies) im Diamant während der Implantation zur Bildung der NV-Zentren elektrisch geladen sind und sich daher aufgrund der elektrischen Abstoßung der negativ geladenen Einzelfehlstellen nicht zusammenballen. Hierdurch kann die Konzentration der Einzelfehlstellen auf einem hohen Niveau gehalten werden, was die Wahrscheinlichkeit einer Bildung von NV-Zentren bei der Implantation von Stickstoff in Diamant anhebt. Dabei können zum Beispiel mit einer Dotierung eines Diamant Substrats **D** mit Schwefel zeitlich vor der Stickstoff-Implantation gute Ergebnisse erzielt werden. Optional erfolgt die Dotierung mit einem Schwefelisotop ohne magnetisches Kernmoment. Solche Isotope sind die Isotope ³²S, ³⁴S, ³⁶S. Eine Alternative kann eine Dotierung mit den Sauerstoffisotopen ¹⁶O, ¹⁸O darstellen. Alternativ oder zusätzlich kann eine n-Dotierung mit Phosphor erfolgen. Allerdings weist Phosphor ein magnetisches Kernmoment auf. Eine n-Dotierung mit Atomen, die kein magnetisches Kernmoment aufweisen, kann wünschenswert sein. Eine Verschiebung des Fermi-Niveaus E_{F} mit anderen Mitteln, beispielsweise mittels auf ein geeignetes Potenzial gegenüber dem Substrat **D** vorgeladenen, optional sehr dünnen Elektroden, kann ebenfalls die gewünschten Effekte herbeiführen. Optional kann das Substrat **D** des verlegbaren Quantencomputers somit zumindest zeitweise lokal eine Verschiebung des Fermi-Niveaus E_{F} aufweisen, sodass dieses dann energetisch derart verschoben ist, dass die Ausbeute an Quantenpunkten **NV1, NV2, NV3** in Form von NV-Zentren während der Implantation der Stickstoffatome erhöht ist. In analoger Weise kann optional das Fermi-Niveau E_{F} anderer Substratmaterialien und/oder in Relation zu anderen paramagnetischen Zentren (z. B. des ST1-Zentrums) bei der Ausbildung dieser paramagnetischen Zentren beeinflusst werden. Optional befinden sich die Lichtquelle **LD** und der Lichtquellentreiber **LDRV** und das Substrat **D** und die Vorrichtungen zur Erzeugung des elektromagnetischen Wellenfeldes **MW/RF-AWFG, mWA, MGx, MGy, MGz** und die Steuervorrichtung **µC** und die Speicher **RAM, NVM** der Steuervorrichtung **µC** und das optische System **OS** und ggf. der Verstärker **V** und die Abschirmung **AS** sich innerhalb des Gehäuses **GH,** wodurch sie optional gegenüber von außen eindringender elektromagnetischer Störstrahlung abgeschirmt sind. Hierzu umfasst das Material des Gehäuses **GH** optional ein elektrisch leitfähiges Material. Optional bildet das Gehäuse **GH** einen Faraday'schen Käfig. Optional umfasst das Material des Gehäuses **GH** auch ein Material zur Abschirmung magnetostatischer und/oder quasistatischer magnetischer Felder. Hierfür umfasst das Material des Gehäuses **GH** optional sogenanntes µ-Metall, bei dem es sich um ein besonders weichmagnetisches Material handeln kann. Dies kann die Abschirmung gegen Magnetfelder besonders begünstigen.

Das optionale, hier für die Verwendung in einem Quantencomputersystem und in quantentechnologischen Vorrichtungen vorgeschlagene µ-Metall (Mumetall, englisch Mu-metal oder englisch permalloy) gehört typischerweise zu einer Gruppe weichmagnetischer Nickel-Eisen-Legierungen, welche optional einen Anteil von 72 % bis 80 % Nickel sowie Anteile von Kupfer, Molybdän, Kobalt und/oder Chrom aufweisen, und welche eine hohe magnetische Permeabilität aufweisen, die in dem vorgeschlagenen verlegbaren Quantencomputersystem bzw. der vorgeschlagenen quantentechnologischen Vorrichtung zur Abschirmung **AS** niederfrequenter externer Magnetfelder vorteilhaft Verwendung finden kann.

Solches µ-Metall kann eine hohe Permeabilität (beispielsweise in einem Bereich von µᵣ = 50.000 bis 140.000 oder mehr) aufweisen, die bewirkt, dass sich der magnetische Fluss der externen niederfrequenten Magnetfelder im Material des Gehäuses **GH** des verlegbaren Quantencomputersystems konzentriert. Dieser Effekt kann bei der Abschirmung **AS** niederfrequenter oder statischer magnetischer Störfelder zu einer beachtlichen Schirmdämpfung führen. Somit sind die Quantenpunkte **NV1, NV2, NV3** und Kernquantenpunkte **CI1₁, CI1₂, CI1₃, CI2₁, CI2₂, CI2₃, CI3₁, CI3₂, CI3₃** auch dann gegen solche externen magnetischen Felder abgeschirmt, wenn der verlegbare Quantencomputer **QC** im Zuge einer Verlegung die räumliche Orientierung und/oder den Ort ändert, wobei mit einer solchen Änderung der Orientierung des verlegbaren Quantencomputers **QC** und/oder der Ortsänderung eines solchen verlegbaren Quantencomputers **QC** eine Änderung der Orientierung und/oder der Stärke der magnetischen Felder, die auf den verlegbaren Quantencomputer **QC** einwirken, relativ zum verlegbaren Quantencomputer **QC** einhergehen kann. Dies kann insbesondere dann von Vorteil sein, wenn der verlegbare Quantencomputer **QC** z. B. zur Gewichtsersparnis nicht über eine aktive Schirmung bzw. gegen externe magnetische Felder bzw. eine aktive Reduktion oder Kompensation des Magnetfelds verfügt, die das störende Magnetfeld mittels eines Magnetfeldsensors **MSX, MSy, MSz** erfassen würde und mittels geeigneter Mittel **MFSx, MFSy, MFSz, MGX, MGy, MGz** ein magnetisches Gegenfeld zur Kompensation erzeugen würde.

Die Abschirmung **AS** des Quantencomputersystems kann einen Teil des Gehäuses **GH** des verlegbaren Quantencomputers **QC** bilden oder das Gehäuse **GH** des verlegbaren Quantencomputers **QC** selbst darstellen. Wie bereits beschrieben, kann die Steuervorrichtung **µC** die Lichtquelle **LD** mit Hilfe des besagten Lichtquellentreibers **LDRV** steuern. Dabei erzeugt die Steuervorrichtung **µC** optional ein Lichtquellensteuersignal, das beispielsweise das Sendesignal **S5** sein kann, mittels geeigneter Mittel. Der Lichtquellentreiber **LDRV** versorgt dann optional die Lichtquelle **LD** in Abhängigkeit von dem Lichtquellensteuersignal der Steuervorrichtung **µC** mit elektrischer Energie. Die Lichtquelle **LD** erzeugt optional die Pumpstrahlung **LB** in Abhängigkeit von dem Lichtquellensteuersignal der Steuervorrichtung **µC**. Optional erzeugt somit die Lichtquelle **LD** die Pumpstrahlung **LB** in Abhängigkeit von dem Sendesignal **S5.** In dem Fall der Figur 1 übermittelt die Steuervorrichtung **µC** optional das Lichtquellensteuersignal über den Steuerdatenbus **SDB** und den Wellenformgenerator **WFG** als Sendesignal **S5.** Im Folgenden kann der Leser also zur Vereinfachung und zum besseren Verständnis annehmen, dass in der Figur 1 das Lichtquellensteuersignal gleich dem Sendesignal **S5** ist. Die Lichtquelle **LD** kann dann mittels des optischen Systems **OS** den Quantenpunkt oder die mehreren Quantenpunkte **NV1, NV2, NV3** mit Pumpstrahlung **LB** einer Pumpstrahlungswellenlänge λ**ₚₘₚ**. bestrahlen. Die Pumpstrahlungswellenlänge **λₚₘₚ** liegt optional zwischen 400 nm bis 700 nm und/oder zwischen 450 nm bis 650 nm und/oder 500 nm bis 550 nm und/oder 515 nm bis 540 nm und/oder bei einer Wellenlänge von 532 nm. Im Falle von NV-Zentren in Diamant kann die Verwendung einer Laser-Diode der Firma OSRAM vom Typ PLT5 520B mit 520nm Wellenlänge als beispielhafte Quelle der Pumpstrahlung **LB** für die Bestrahlung von NV-Zentren in Diamant als Material des Substrats **D** Verwendung finden. Die Quantenpunkte **NV1, NV2, NV3** emittieren dann optional in Abhängigkeit von ihrem Zustand und von der Pumpstrahlung **LB** Fluoreszenzstrahlung **FL** mit einer Fluoreszenzwellenlänge **λ**_{fl}. Im Falle von NV-Zentren als paramagnetischen Zentren von Quantenpunkten kann die Fluoreszenzwellenlänge optional in einem Wellenlängenbereich um 638 nm liegen. Die Intensität **I_{fl}** der Fluoreszenzstrahlung **FL** kann dabei von der Intensität **Iₚₘₚ** der Pumpstrahlung **LB** und damit auch von dem Lichtquellensteuersignal abhängen. Der eine Quantenpunkt oder die mehreren Quantenpunkte **NV1, NV2, NV3** können somit Fluoreszenzstrahlung **FL** mit einer Fluoreszenzstrahlungswellenlänge λ**_{fl}** bei Bestrahlung mit elektromagnetischer Strahlung, der Pumpstrahlungswellenlänge **λₚₘₚ** emittieren. Im Falle einer optischen Auslesung des Zustands der Quantenpunkte **NV1, NV2, NV3** bzw. des Quantenpunkts kann der Fotodetektor **PD** mittels des optischen Systems **OS** die Fluoreszenzstrahlung **FL** erfassen und die Fluoreszenzstrahlung **FL** in ein Empfängerausgangssignal **S0** umwandeln. Das Empfängerausgangssignal **S0** kann von der Fluoreszenzstrahlung **FL** abhängen, die den Fotodetektor **PD** trifft. Optional hängt das Empfängerausgangssignal **S0** von Intensität **I_{fl}** der Fluoreszenzstrahlung **FL,** die den Fotodetektor **PD** trifft, ab. In dem Fall der optischen Auslesung des Zustands des oder der Quantenpunkte **NV1, NV2, NV3** verstärkt und/oder filtert der Verstärker **V** optional das Empfängerausgangssignal **S0** und stellt das Signal optional dem Rechnerkern **CPU** der Steuervorrichtung **µC** als verstärktes Empfangssignal **S1** zur Verfügung. Optional legt der Verstärker V die Werte der Abtastwerte des verstärkten und mittels eines Analog-zu-Digital-Wandlers des Verstärkers V digitalisierten Abtastwerte des verstärkten Empfangssignals **S1** in einem Speicher des Verstärkers V ab. Der Rechnerkern **CPU** der Steuervorrichtung **µC** des verlegbaren Quantencomputers QC kann dann beispielsweise über den Steuerdatenbus **SDB** diese Abtastwerte des verstärkten Empfangssignals S1 aus dem Speicher des Verstärkers **V** abfragen und weiterverarbeiten. Im Falle der elektronischen Auslesung der Quantenpunkte **NV1, V2, NV3** erzeugen in Figur 1 zur besseren Übersicht nicht eingezeichnete Vorrichtungen **HS1** bis **HS3** und **VS1** zum elektronischen Auslesen der Zustände der Quantenpunkte **NV1, NV2, NV3** mit einer Kontrolleinheit B **CBB** ein zweites Empfangssignal. Wie bereits beschrieben, kann die Steuervorrichtung **µC** des verlegbaren Quantencomputers **QC** die eine oder mehreren Vorrichtungen zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃** steuern. Durch Ansteuerung der einen oder mehreren Vorrichtungen (**LH1, LH2, LH3, LV1**) zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃**, **CI3₁**, **CI3₂, CI3₃** und/oder durch Steuerung der Emission der Lichtquelle **LD** kann die Steuervorrichtung **µC** des verlegbaren Quantencomputers **QC** somit die Zustände der Quantenpunkte **NV1, NV2, NV3** und/oder Kernquantenpunkte **CI1₁, CI1₂, CI1₃, CI2₁, CI2₂, CI2₃, CI3₁, CI3₂, CI3₃** ändern und/oder miteinander verkoppeln. Optional verfügt die Steuervorrichtung **µC** des verlegbaren Quantencomputers **QC** über Mittel, um aus einem oder mehreren Empfangssignalen, insbesondere aus dem ersten Empfangssignal und oder dem zweiten Empfangssignal ein Messwertsignal mit einem oder mehreren Messwerten zu erzeugen. Da diese Empfangssignale von den Zuständen der Quantenpunkte **NV1, NV2, NV3** und/oder Kernquantenpunkte **CI1₁, CI1₂, CI1₃, CI2₁, CI2₂, CI2₃, CI3₁, CI3₂, CI3₃** abhängen hängt das Messwertsignal typischerweise somit ebenfalls von Zuständen der Quantenpunkte **NV1, NV2, NV3** und/oder Kernquantenpunkte **CI1₁, CI1₂, CI1₃, CI2₁, CI2₂, CI2₃, CI3₁, CI3₂, CI3₃** ab.

Zur Erreichung der Verlegbarkeit wurde bis hierher die Verwendung eines raumtemperaturfähigen verlegbaren Quantencomputers **QC** auf Basis von paramagnetischen Zentren als Quantenpunkten **NV1, NV2, NV3** unter Verwendung nuklearer magnetischer Momente als Kernquantenpunkte **CI1₁, CI1₂, CI1₃, CI2₁, CI2₂, CI2₃, CI3₁, CI3₂, CI3₃** mit optischer Pumpstrahlung **LB** und optischer Zustandsauslesung oder elektronischer Zustandsauslesung der Quantenpunktzustände der Quantenpunkte **NV1, NV2, NV3** und einer geeigneten, verlegbaren, möglichst passiven Abschirmung **AS** beschrieben.

Der hier vorgelegte Vorschlag schlägt nun vor, dass das verlegbare Quantencomputersystem **QC** und/oder die mobile Vorrichtung optional eine verlegbare Energieversorgung **EV** bzw. Energieversorgungseinrichtung zur Versorgung des verlegbaren Quantencomputers **QC** mit Energie aufweist, wie sie oben beschrieben ist. Dies kann die Verlegbarkeit des Quantencomputersystems begünstigen. Optional befindet sich die Energieversorgung **EV** bzw. Energieversorgungseinrichtung innerhalb des Gehäuses **GH.** Dabei kann das Gehäuse **GH** ein Teilgehäuse mit einem magnetisch abgeschirmten Bereich umfassen, in dem sich die für Magnetfelder empfindlichen Teilvorrichtungen des verlegbaren Quantencomputersystems befinden. Außerhalb dieses Teilgehäuses, aber noch innerhalb des Gehäuses **GH** befinden sich optional die Teile des verlegbaren Quantencomputersystems, die zum Ersten (Sinn?) nicht oder weniger empfindlich gegen magnetische und elektromagnetische externe Störfelder sind und/oder selbst elektromagnetische und/oder magnetische Störfelder erzeugen.

Die Energieversorgungseinrichtung ist daher optional außerhalb des Teilgehäuses aber innerhalb des Gehäuses **GH** des verlegbaren Quantencomputersystems platziert. Die Quantencomputer **QC1 bis QC16** eines Quantencomputersystems **QUSYS** können auch ein gemeinsames Gehäuse **GH** aufweisen.

Optional umfasst das verlegbare Quantencomputersystem ein System zur Kompensation externer Magnetfelder und des Erdmagnetfelds. Dieses System zur Kompensation externer Magnetfelder kann das Magnetfeldsensorsystem und den Magnetfeldgenerator aufweisen. Entsprechend verfügt das vorgeschlagene mobile, verlegbare Quantencomputersystem optional über ein Magnetfeldsensorsystem, welches auch als Sensorsystem bezeichnet werden kann, zur dreidimensionalen Erfassung des dreidimensionalen Vektors der magnetischen Flussdichte B. Optional erfasst das Sensorsystem zur dreidimensionalen Erfassung des dreidimensionalen Vektors der magnetischen Flussdichte B diesen dreidimensionalen Vektor der magnetischen Flussdichte B in der Nähe des Substrats **D.** Beispielsweise kann das Sensorsystem zur dreidimensionalen Erfassung des dreidimensionalen Vektors der magnetischen Flussdichte B drei Magnetfeldsensoren **MSx, MSy, MSz** für die drei Raumrichtungen X, Y, und Z umfassen. Es ist denkbar, ein einziges Sensorsystem einzusetzen, wenn es die Ausrichtung des Magnetfelds zulässt. Beispielsweise kann das Quantencomputersystem einen Magnetfeldsensor MSx für die magnetische Flussdichte Bₓ in Richtung der X-Achse umfassen. Optional kann der Quantencomputer **QC** einen Magnetfeldsensor MSy für die magnetische Flussdichte B_{y} in Richtung der Y-Achse umfassen. Optional kann der Quantencomputer **QC** einen Magnetfeldsensor MSz für die magnetische Flussdichte B_{z} in Richtung der Z-Achse umfassen.

Optional umfasst das vorgeschlagene mobile Quantencomputersystem einen Magnetfeldgenerator, d. h. eine oder mehrere magnetfelderzeugende Vorrichtungen **PM, MGx, MGy, MGz,** die in der vorliegenden Offenbarung auch als Magnetfelderzeugungsmittel bezeichnet werden. Die magnetfelderzeugenden Vorrichtungen können optional Permanentmagnete **PM** und/oder Spulen **MGx, MGy, MGz,** insbesondere Helmholtzspulen und Helmholtzspulenpaare, als Magnetfelderzeugungsmittel umfassen. Die Permanentmagnete **PM** erzeugen permanent eine magnetische Flussdichte. Die Spulen **MGx, MGy, MGz** erzeugen eine magnetische Flussdichte entsprechend ihrer elektrischen Bestromung. Optional sind die Permanentmagneten **PM** und die Magnetfelderzeugungsmittel **MGx, MGy, MGz** Teil eines magnetischen Kreises. Optional, aber nicht notwendigerweise umfasst der magnetische Kreis ein Joch. Optional befindet sich der Permanentmagnet **PM** in einem Luftspalt. Optional weist der Magnetfeldgenerator eine oder mehrere Positioniervorrichtungen **PV** auf, um den Permanentmagneten **PM** relativ zu Substrat **D** und/oder in dem Luftspalt neu zu positionieren und so die auf das Subastrat **D** mit den Quantenpunkten einwirkende magnetische Flussdichte B zu verändern.

Optional umfasst das Quantencomputersystem und optional die Steuervorrichtung **µC** des Quantencomputersystems eine Navigationsvorrichtung **GPS,** die dem Rechnerkern **CPU** der Steuervorrichtung **µC** die aktuelle Position mitteilt. Optional kann die Steuervorrichtung **µC** mit Hilfe geomagnetischer Karten des Erdmagnetfelds die sich daraus ergebende Erdmagnetfeldstärke und deren magnetischen Flussdichteanteil bestimmen. Wird der Quantencomputer **QC** translatorisch bewegt, oder rotiert, so kann beispielsweise der Rechnerkern **CPU** der Steuervorrichtung **µC** Vorhersagewerte für zukünftige translatorische Koordinaten und/oder zukünftige Rotationen über den externen Datenbus **EXTDB** erhalten, oder aus erhaltenen oder ermittelten Geschwindigkeitswerten und Rotationsgeschwindigkeitswerten voraussagen. Daher kann dann optional der Rechnerkern **CPU** der Steuervorrichtung **µC** Änderungen des auf die Quantenpunkte **NV1, NV2, NV3** und die Kernquantenpunkte **CI1₁, CI1₂, CI1₃, CI2₁, CI2₂, CI2₃, CI3₁, CI3₂, CI3₃** zukünftig einwirkenden Magnetfelds voraussagen und mittels einer Veränderung des im Quantencomputer QC erzeugten Magnetfelds mittels der magnetfelderzeugende Vorrichtungen **PM, MGx, MGy, MGz** kompensieren.

Ein optionales Verfahren zur Verhinderung von Störungen des Betriebs des verlegbaren Quantencomputers QC durch Änderungen externer Magnetfelder infolge einer Bewegung des verlegbaren Quantencomputers QC kann optional die folgenden Schritte umfassen:
In einem ersten Schritt a) stellt die Steuervorrichtung **µC** optional beispielsweise mittels Magnetfeldsensoren **MSx, MSy, MSz** eines Magnetfeldsensorsystems das derzeit wirkende externe Magnetfeld fest. In einem zweiten Schritt erfasst die Steuervorrichtung **µC** optional mittels eines Navigationssystems **NAV** und/oder einer Positionsermittlungsvorrichtung **GPS** die aktuellen Koordinaten und/oder die aktuelle Geschwindigkeit und/oder Beschleunigung. Auf Basis dieser Daten und ggf. zusätzlicher Daten, wie zum Beispiel einer elektronischen Karte des Erdmagnetfeldes kann die Steuervorrichtung **µC** des verlegbaren Quantencomputersystems optional das zu erwartende neue externe Magnetfeld bestimmen und optional die Bestromung der Magnetfelderzeugungsmittel **MGx, MGy, MGz** des Magnetfeldgenerators so anpassen, dass diese Änderung des externen Magnetfelds durch die Bewegung des Verlegbaren Quantencomputersystems im Wesentlichen nicht wirksam wird und die Berechnungsergebnisse von Quantencomputerprogrammen des verlegbaren Quantencomputersystems im Wesentlichen nicht beeinflussen.

Zur Vereinfachung der Darstellung nehmen wir hier an, dass die Navigationsvorrichtung **GPS** nicht nur die translatorischen Koordinaten bestimmt, also beispielsweise die Position auf der Erdoberfläche, sondern auch die winkelmäßige Ausrichtung des verlegbaren Quantencomputers **QC** und die Winkelgeschwindigkeit der Veränderung dieser Winkel. Durch Berücksichtigung der translatorischen Veränderungen und der rotatorischen Veränderungen der Position und Ausrichtung des verlegbaren Quantencomputers **QC** kann das Rechnersystem **CPU** des verlegbaren Quantencomputersystems die notwendige Anpassung der Magnetfelderzeugung besonders genau vorausberechnen und die magnetfelderzeugenden Vorrichtungen **PM, MGx, MGy, MGz** des Magnetfeldgenerators geeignet steuern.

Hierzu kann der Rechnerkern **CPU** der Steuervorrichtung **µC** beispielsweise die erste Magnetfeldsteuerung **MFSx** des Magnetfeldgenerators veranlassen, die Bestromung des ersten Magnetfelderzeugungsmittels **MGx,** das optional eine magnetische Flussdichte Bₓ erzeugt, mit elektrischem Strom anzupassen. Hierzu kann der Rechnerkern **CPU** der Steuervorrichtung **µC** optional auch die zweite Magnetfeldsteuerung **MFSy** veranlassen, die Bestromung des zweiten Magnetfelderzeugungsmittels **MGy,** das optional eine magnetische Flussdichte B_{y} erzeugt, mit elektrischem Strom anzupassen. Hierzu kann der Rechnerkern **CPU** der Steuervorrichtung **µC** optional auch die dritte Magnetfeldsteuerung **MFSz** veranlassen, die Bestromung des dritten Magnetfelderzeugungsmittels **MGz,** das optional eine magnetische Flussdichte B_{z} erzeugt, mit elektrischem Strom anzupassen.

Hierzu kann der Rechnerkern **CPU** der Steuervorrichtung **µC** optional auch die Positioniervorrichtung **PV** des Permanentmagneten **PM** veranlassen, die Positionierung des Permanentmagneten PM der optional eine permanente, räumlich inhomogene magnetische Flussdichte B erzeugt, räumlich anzupassen und damit die magnetische Flussdichte am Ort der Quantenpunkte **NV1, NV2, NV3** und der Kernquantenpunkte **CI1₁, CI1₂, CI1₃, CI2₁, CI2₂, CI2₃, CI3₁, CI3₂, CI3₃** anzupassen.

Der Rechnerkern **CPU** der Steuervorrichtung **µC** erfasst mittels der besagten Magnetfeldsensoren **MSx, MSy, MSz** optional das tatsächliche Magnetfeld und regelt die magnetische Flussdichte optional mittels der unmittelbar zuvor beschriebenen Stellgliedern in Form der magnetfelderzeugenden Vorrichtungen **PM, MGx, MGy, MGz** nach, um Abweichungen zwischen dem erfassten Vektor der magnetischen Flussdichte und dem gewünschten Vektor der magnetischen Flussdichte auszugleichen.

Optional umfasst das Quantencomputersystem ein Beschleunigungssensorsystem, das translatorische und/oder rotatorische Beschleunigungen des Quantencomputers und/oder des Quantencomputersystems erkennen kann, und die entsprechenden Werte an den Rechnerkern **CPU** der Steuervorrichtung **µC** des Quantencomputers **QC** liefern kann, sodass dieser ggf. Gegenmaßnahmen in Form von Gegenbeschleunigungen mittels eines Lageregelungssystems ergreifen kann. Ggf. kann der Rechnerkern **CPU** der Steuervorrichtung **µC** des Quantencomputersystems für einige solcher Gegenmaßnahmen die Positioniervorrichtung **PV** des Permanentmagneten **PM** und/oder die translatorische Positioniervorrichtung **XT** in X-Richtung und/oder die translatorische Positioniervorrichtung **YT** in Y-Richtung nutzen. Auch kann ggf. der Rechnerkern **CPU** der Steuervorrichtung **µC** des verlegbaren Quantencomputers **QC** den Fokus des optischen Systems **OS** in Abhängigkeit von solchen Koordinatenprognosen und/oder Geschwindigkeitsprognosen und/oder Beschleunigungsprognosen für translatorische Bewegungen und rotatorische Bewegungen modifizieren, um den Fokus zu halten. Optional kann der Rechnerkern **CPU** der Steuervorrichtung **µC** des verlegbaren Quantencomputers **QC** auf Basis solcher Koordinatenprognosen und/oder Geschwindigkeitsprognosen und/oder Beschleunigungsprognosen für translatorische Bewegungen und rotatorische Bewegungen Deformationen und mechanische Schwingungen innerhalb des verlegbaren Quantencomputers **QC** vorhersagen und ggf.. solche mittels geeigneter Sensoren wie Kameras und Positions- und Abstandssensoren innerhalb des Quantencomputers **QC** erkennen und kompensieren.

Optional kann das Quantencomputersystem ferner eine Kühlvorrichtung aufweisen, welche dazu eingerichtet ist, eine Temperatur von Quantenpunkten **NV1, NV2, NV3** des Quantencomputers und/oder die Temperatur von Kernquantenpunkten **CI1₁, CI1₂, CI1₃, CI2₁, CI2₂, CI2₃, CI3₁, CI3₂, CI3₃** des Quantencomputers und/oder eine Temperatur eines Substrats D des Quantencomputers zu senken, wobei die Kühlvorrichtung verlegbar ausgebildet ist.

In einem weiteren Aspekt betrifft die Offenbarung demnach ein Quantencomputersystem, umfassend einen Quantencomputer, und eine Kühlvorrichtung, welche dazu ausgelegt ist, eine Temperatur von Quantenpunkten **NV1, NV2, NV3** des Quantencomputers und/oder die Temperatur von Kernquantenpunkten **CI1₁, CI1₂, CI1₃, CI2₁, CI2₂, CI2₃, CI3₁, CI3₂, CI3₃** des Quantencomputers und/oder eine Temperatur eines Substrats **D** des Quantencomputers zu senken. Das Quantencomputersystem ist dabei dadurch gekennzeichnet, dass die Kühlvorrichtung verlegbar ausgebildet ist.

Dass die Kühlvorrichtung dazu ausgelegt ist, eine Temperatur von Quantenpunkten und/oder Kernquantenpunkten zu senken, bedeutet dabei, dass die Kühlvorrichtung dazu ausgelegt ist, die thermische Energie der Quantenpunkte und/oder Kernquantenpunkte und/oder einer direkten Umgebung der Quantenpunkte und/oder Kernquantenpunkte im Substrat zu senken.

Dass die Kühlvorrichtung verlegbar ausgebildet ist, bedeutet dabei, dass die Kühlvorrichtung mit dem Quantencomputersystem verlegbar ist, wobei "verlegbar" im Sinne der obigen Erläuterungen zu verstehen ist. Insbesondere kann die Kühlvorrichtung optional dazu geeignet und/oder ausgelegt sein, den Quantencomputer des Quantencomputersystems während einer Bewegung des Quantencomputerystems zu kühlen und dadurch die Temperatur der Quantenpunkte und/oder Kernquantenpunkte zu senken oder auf einer niedrigeren Temperatur als die Umgebungstemperatur des Quantencomputersystems zu halten.

Dies bietet den Vorteil, dass eine Kühlung des Quantencomputers auch in einem verlegbaren Quantencomputersystem ermöglicht wird und somit ein Betrieb des Quantencomputers in gekühltem Zustand nicht an einen stationären Betrieb gebunden ist. Vielmehr kann durch die verlegbare Kühlvorrichtung auch während des Verlegens des Quantencomputersystems, d. h., während das Quantencomputersystem beispielsweise bewegt wird, gekühlt werden, und kann dadurch optional eine Anzahl von nutzbaren Quantenpunkten und/oder Kernquantenpunkten des Quantencomputers erhöht werden, und/oder kann eine Funktion des Quantencomputers verbessert werden im Vergleich zu einem ungekühlten Betrieb, etwa bei Raumtemperatur.

Optional weist die Kühlvorrichtung zumindest ein Closed Loop Helium Gas Cooling System auf oder ist als solches ausgebildet. Dies bietet den Vorteil, dass das Kühlsystem besonders mobil ausgestaltet werden kann und entsprechend in ein verlegbares Quantencomputersystem integriert oder mit diesem kombiniert werden kann, ohne die Verlegbarkeit des Quantencomputersystems signifikant einzuschränken. Außerdem bietet dies den Vorteil, dass die Kühlvorrichtung in einem sehr großen Temperaturbereich einsetzbar sein kann, wie beispielsweise von Raumtemperatur bis zu einer Temperatur von etwa 10 K. Somit bietet ein auf einem Closed Loop Helium Gas Cooling System beruhendes System eine sehr große Flexibilität, welche die Verlegbarkeit des Quantencomputersystems begünstigt.

Optional ist das Quantencomputersystem dazu ausgelegt, die Kühlvorrichtung mittels einer verlegbaren Energieversorgungseinrichtung des Quantencomputersystems mit elektrischer Energie zu versorgen. Dies bietet den Vorteil, dass auch die Kühlvorrichtung auch während dem Verlegen des Quantencomputersystems, oder in anderen Situationen, in denen keine externe Energiequelle bereitsteht, betrieben werden kann. Dadurch wird die die Flexibilität des verlegbaren Quantencomputersystems signifikant erhöht.

Somit weist das verlegbare Quantencomputersystem optional eine oder mehrere verlegbare Kühlvorrichtungen **KV** auf, die zusammen mit dem verlegbaren Quantencomputersystem verlegbar sind. Eine oder mehrere der verlegbaren Kühlvorrichtungen **KV** sind dabei optional dazu geeignet und/oder vorgesehen, die Spin-Temperatur von Quantenpunkten **NV1, NV2, NV3** und/oder Kernquantenpunkten **CI1₁, CI1₂, CI1₃, CI2₁, CI2₂, CI2₃, CI3₁, CI3₂, CI3₃** und/oder die Temperatur des Substrats **D** zu senken.

Optional senken eine oder mehrere solcher Kühlvorrichtungen **KV** die Temperatur von Quantenpunkten **NV1, NV2, NV3** und/oder die Temperatur von Kernquantenpunkten **CI1₁, CI1₂, CI1₃, CI2₁, CI2₂, CI2₃, CI3₁, CI3₂, CI3₃** und/oder die Temperatur des Substrats **D** soweit, dass der verlegbare Quantencomputer **QC** mit einer gegenüber der verringerten ersten Anzahl an Quantenpunkten **NV1, NV2, NV3** erhöhten dritten Anzahl an Quantenpunkten **NV1, NV2, NV3** arbeiten kann. Optional senken eine oder mehrere solcher Kühlvorrichtungen **KV** die Temperatur von Quantenpunkten **NV1, NV2, NV3** und/oder die Temperatur von Kernquantenpunkten **CI1₁, CI1₂, CI1₃, CI2₁, CI2₂, CI2₃, CI3₁, CI3₂, CI3₃** und/oder die Temperatur des Substrats **D** soweit, dass der Quantencomputer **QC** mit einer gegenüber der verringerten zweiten Anzahl an Kernquantenpunkten **CI1₁, CI1₂, CI1₃, CI2₁, CI2₂, CI2₃, CI3₁, CI3₂, CI3₃** mit einer erhöhten vierten Anzahl an Kernquantenpunkten **CI1₁, CI1₂, CI1₃, CI2₁, CI2₂, CI2₃, CI3₁, CI3₂, CI3₃** arbeiten kann.

Optional umfassen eine oder mehrere der verlegbaren Kühlvorrichtungen **KV** des Quantencomputers **QC** ein oder mehrere Closed Loop Helium Gas Cooling-Systeme **HeCLCS** oder ein oder mehrere verlegbare Closed Loop Helium Gas Cooling Systeme **HeCLCS.**

Optional umfasst das verlegbare Quantencomputersystem eine zweite verlegbare Energieversorgung **BENG2,** die von der ersten verlegbaren Energieversorgung **BENG** verschieden ist. Optional versorgt die zweite verlegbare Energieversorgung **BENG2** ein oder mehrere der verlegbaren Kühlvorrichtungen **KV** und/oder ein oder mehrere der Closed Loop Helium Gas Cooling-Systeme **HeCLCS** mit Energie. Dies kann den Vorteil bieten, dass die Energie für den Betrieb der einen oder mehreren Kühlvorrichtungen in anderer Form bereitgestellt werden kann, wie die Energieversorgung für den Quantencomputer. So kann etwa für den Betrieb der einen oder mehreren Kühlvorrichtungen ein geringeres Maß an Stabilisierung der bereitgestellten elektrischen Energie ausreichend sein, als für den Betrieb des Quantencomputers. Auf diese Weise kann etwa die Menge an bereitzustellender Energie, welche in besonderem Maße stabilisiert ist, reduziert werden, wodurch ein Aufwand für die Stabilisierung der Energie für das Quantencomputersystem verringert werden kann und entsprechend eine Komplexität des Quantencomputersystems gering gehalten werden kann.

Optional umfasst das Quantencomputersystem ferner eine Stabilisierungsvorrichtung und ist dazu eingerichtet, mittels der Stabilisierungsvorrichtung mechanische Einwirkungen auf den Quantencomputer zumindest teilweise zu kompensieren.

Somit wird in einem weiteren Aspekt ein Quantencomputersystem bereitgestellt, welches einen verlegbaren Quantencomputer umfasst und dadurch gekennzeichnet ist, dass das Quantencomputersystem ferner eine Stabilisierungsvorrichtung aufweist, und dazu eingerichtet ist, mittels der Stabilisierungsvorrichtung eine mechanische Einwirkung auf den Quantencomputer zumindest teilweise zu kompensieren.

Die zu kompensierenden mechanischen Einwirkungen können dabei solche Einwirkungen sein, welche eine Beschleunigung und/oder eine Änderung einer Beschleunigung des Quantencomputers verursachen. Die Vermeidung und/oder Kompensation solcher mechanischen Einwirkungen kann als eine mechanische Stabilisierung des Quantencomputers erachtet werden.

Dies bietet den Vorteil, dass auch in Situationen, in welchen mechanische Einwirkungen auf das Quantencomputersystem auftreten können und/oder nicht vermeidbar sind, die mechanischen Einwirkungen zumindest teilweise vom Quantencomputer ferngehalten werden können. Dies kann die Verlegbarkeit des Quantencomputersystems weiter begünstigen und insbesondere einen Betrieb des Quantencomputers während des Verlegens des Quantencomputersystems ermöglichen, auch wenn während des Verlegens mechanische Einwirkungen auf das Quantencomputersystems nicht immer vermeidbar sein können.

Die Stabilisierungsvorrichtung kann dazu eingerichtet sein, eine Beschleunigung des Quantencomputers zu ermitteln, und/oder eine zu erwartende Beschleunigung des Quantencomputers vorherzusagen, und/oder eine Beschleunigung des Quantencomputers zumindest teilweise zu kompensieren, und/oder eine Wirkung einer Beschleunigung auf den Quantencomputer abzuschwächen. Gleichermaßen kann die Stabilisierungsvorrichtung dazu eingerichtet sein, alternativ oder zusätzlich zu den Beschleunigungen eine jeweilige Änderung der Beschleunigung vorherzusagen bzw. zu kompensieren. Dies kann den Vorteil bieten, dass mechanische Einwirkungen besonders zuverlässig vom Quantencomputer ferngehalten werden können und entsprechend ein zuverlässiger Betrieb auch dann ermöglicht werden kann, wenn mechanische Einwirkungen auf das Quantencomputersystem nicht vermieden werden können.

Die Stabilisierungsvorrichtung kann optional eines oder mehrere der folgenden Elemente aufweisen: einen oder mehrere Beschleunigungssensoren und/oder ein oder mehrere Beschleunigungssensorsysteme zum Ermitteln einer Beschleunigung des Quantencomputers, einen oder mehrere Positionsverschiebesensoren zum Ermitteln einer Positionsverschiebung des Quantencomputers, ein oder mehrere Lageregelungssysteme zum Regeln einer Lage des Quantencomputers, einen oder mehrere Positioniertische und/oder einen oder mehrere Positioniervorrichtungen zur Positionierung des Quantencomputers, eine oder mehrere Bilderfassungseinrichtungen und/oder eine oder mehrere Bildverarbeitungsvorrichtungen zur Erfassung und/oder Verarbeitung von Bildern des Quantencomputers, und fluoreszierende Defektzentren in einem Substrat des Quantencomputers, welche eine andere Fluoreszenzwellenlänge aufweisen, als Quantenpunkte des Quantencomputers, welche für eine Verwendung als Quantenbits im Quantencomputer vorgesehen sind. Dadurch lassen sich mechanische Einwirkungen, insbesondere anhand von Beschleunigungen und/oder Änderungen von Beschleunigungen besonders zuverlässig ermitteln und kompensieren.

Das Quantencomputersystem kann optional mehrere Teilvorrichtungen aufweisen, wobei die Stabilisierungsvorrichtung ferner dazu ausgelegt sein kann, eine Übertragung mechanischer Stöße und/oder von mechanischen Schwingungen auf zumindest manche der Teilvorrichtungen abzuschwächen und/oder zu dämpfen. Alternativ oder zusätzlich kann die Stabilisierungsvorrichtung ferner dazu ausgelegt sein, eine Übertragung mechanischer Stöße und/oder von mechanischen Schwingungen zumindest mancher Teilvorrichtungen relativ zueinander abzuschwächen und/oder zu dämpfen. Dies kann eine zuverlässige Abschirmung des Quantencomputers von externen und internen Einwirkungen des Quantencomputersystems ermöglichen.

Die Stabilisierungsvorrichtung kann optional zum Abschwächen und/oder Dämpfen einer Übertragung von mechanischen Stößen und/oder Schwingungen auf die zumindest manchen Teilvorrichtungen solche Mittel umfassen, die in Versorgungsleitungen zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) eingefügt sind. Alternativ oder zusätzlich kann dazu die Stabilisierungsvorrichtung solche Mittel umfassen, die in Datenleitungen (SDA) zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) eingefügt sind. Alternativ oder zusätzlich kann dazu die Stabilisierungsvorrichtung solche Mittel umfassen, die spezielle mechanische, zumindest abschnittsweise Ausformungen von Versorgungsleitungen zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) umfassen. Alternativ oder zusätzlich kann dazu die Stabilisierungsvorrichtung solche Mittel umfassen, die spezielle mechanische, zumindest abschnittweise Ausformungen von Datenleitungen (SDA) zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) umfassen. Damit kann eine besonders zuverlässige Abschirmung des Quantencomputers vor mechanischen Einwirkungen auf das Quantencomputersystem erreicht werden.

Das Quantencomputersystem kann ferner dazu eingerichtet sein, ein Vorliegen eines nicht-statistischen Fehlers und/oder eines nicht-statistischen Quantenfehlers des Quantencomputers zu erfassen und optional bei ermitteltem Vorliegen eines nicht-statistischen Fehlers und/oder eines nicht-statistischen Quantenfehlers des Quantencomputers eine Gegenmaßnahme durchzuführen und/oder zu initiieren und/oder ein Hinweissignal auszugeben. Dadurch kann das Risiko eines fehlerhaften Betriebs des Quantencomputers bei der Durchführung von Quantenoperationen und/oder beim Ausführen von Quantenberechnungen verringert werden.

Optional ist die Steuervorrichtung **µC** des Quantencomputersystems zur Steuerung von Mitteln zum Erfassen von Messergebnissen ausgelegt.

Das verlegbare Quantencomputersystem umfasst somit optional darüber hinaus Mittel **(PV, XT, YT, CM1, OS, STM, CIF, µC),** die dazu eingerichtet sind, Änderungen der Beschleunigung, insbesondere während einer Verlegung des verlegbaren Quantencomputers (**QC**), vorherzusagen. Dies ermöglicht optional die Einleitung und/oder Vorbereitung von Gegenmaßnahmen bevor diese notwendig werden. Dies kann insbesondere dann von Vorteil sein, wenn Spulen im Zuge solcher Gegenmaßnahmen bestromt werden müssen und/oder Kondensatoren oder parasitäre Kapazitäten im Zuge solcher Gegenmaßnahmen umgeladen werden müssen.

Das verlegbare Quantencomputersystem (**QC**) umfasst darüber hinaus optional Mittel **(PV, XT, YT, CM1, OS, STM, CIF, µC),** die dazu eingerichtet sind, Änderungen der Beschleunigung, insbesondere während einer Verlegung des verlegbaren Quantencomputers (**QC**), zu erfassen. Dies ermöglicht die Regelung von Gegenmaßnahmen.

Das verlegbare Quantencomputersystem (**QC**) umfasst darüber hinaus optional Mittel **(PV, XT, YT, CM1, OS, STM, CIF, µC),** die dazu eingerichtet sind, Änderungen der Beschleunigung, insbesondere während einer Verlegung des verlegbaren Quantencomputers (**QC**), zu kompensieren. Damit kann eine mögliche Gegenmaßnahme zur zumindest teilweisen Kompensation der festgestellten Beschleunigungen und/oder Änderungen von Beschleunigungen bewirkt werden.

Das verlegbare Quantencomputersystem (**QC**) umfasst darüber hinaus optional Mittel **(PV, XT, YT, CM1, OS, STM, CIF, µC),** die dazu eingerichtet sind, die Wirkung solcher Änderungen der Beschleunigung, insbesondere während einer Verlegung des verlegbaren Quantencomputers (**QC**), zu vermindern. Sofern keine vollständige Kompensation, aus welchen Gründen auch immer, möglich sein sollte, kann das Quantencomputersystem optional dazu eingerichtet sein, auf diese Weise die Arbeitsfähigkeit des Quantencomputers aufrecht zu erhalten.

Die Mittel (**PV, XT, YT, CM1, OS, STM, CIF, µC**) können dabei insbesondere ein oder mehrere Beschleunigungssensorsysteme und/oder Beschleunigungssensoren und/oder ein oder mehrere Positionsverschiebungssensoren und/oder ein oder mehrere Lageregelungssysteme und/oder einen oder mehrere Positioniertische und/oder Positioniervorrichtungen und/oder eine oder mehrere Bilderfassungsvorrichtungen und/oder Bildverarbeitungsvorrichtungen umfassen. Die Mittel (**PV, XT, YT, CM1, OS, STM, CIF, µC**) können dabei optional fluoreszierende Defektzentren im Substrat **D** mit anderen Fluoreszenzwellenlängen umfassen, die bei Bestrahlung mit einer zu diesen anderen Defektzentren passenden Pumpstrahlung eine Fluoreszenzstrahlung mit einer von der Fluoreszenzwellenlänge λ_{fl} der Quantenpunkte (**NV1, NV2, NV3**) der Quantenbits verschiedenen Fluoreszenzwellenlänge emittieren.

Optional kann eine Lichtquelle **LD** des Quantencomputersystems eine erste Pumpstrahlungsquelle für elektromagnetische Strahlung mit der ersten Pumpstrahlungswellenlänge λₚₘₚ zur Anregung der Fluoreszenzstrahlung λ_{fl} einer ersten Sorte paramagnetischer Zentren der Quantenpunkte der Quantenbits des Quantencomputers **QC,** beispielsweise von NV-Zentren, umfassen.

Optional kann die Lichtquelle **LD** eine zweite Pumpstrahlungsquelle für elektromagnetische Strahlung mit einer zweiten Pumpstrahlungswellenlänge λₚₘₚ zur Anregung der Fluoreszenzstrahlung λ_{fl} einer zweiten Sorte paramagnetischen Zentren der Quantenpunkte der Quantenbits des Quantencomputers **QC,** beispielsweise von SiV-Zentren, umfassen. Optional kann die Lichtquelle noch weitere Pumpstrahlungsquellen für die Bereitstellung von Pumpstrahlung mit noch weiteren Wellenlängen aufweisen. Optional kann die Lichtquelle **LD** eine n-te Pumpstrahlungsquelle für elektromagnetische Strahlung mit einer n-ten Pumpstrahlungswellenlänge λₚₘₚ zur Anregung der Fluoreszenzstrahlung λ_{fl} einer n-ten Sorte paramagnetischer Zentren der Quantenpunkte der Quantenbits des Quantencomputers **QC** umfassen. Optional unterscheidet sich die erste Sorte paramagnetischer Zentren von allen anderen n-1 Sorten paramagnetischer Zentren, die der Quantencomputer **QC** als Quantenpunkte von Quantenbits des Quantencomputers **QC** aufweist. Mit anderen Worten sind die Sorten der paramagnetischen Zentren paarweise verschieden.

Typischerweise unterscheidet sich die erste Pumpstrahlungswellenlänge der ersten Sorte paramagnetischer Zentren, die der Quantencomputer **QC** als Quantenpunkte von Quantenbits des Quantencomputers **QC** benutzt, von den n-1 anderen Pumpstrahlungswellenlänge der anderen n-1 Sorten paramagnetischer Zentren, die der Quantencomputer **QC** als Quantenpunkte von Quantenbits des Quantencomputers **QC** aufweist. Mit anderen Worten sind die Pumpstrahlungswellenlängen für die jeweiligen Sorten von paramagnetischen Zentren paarweise verschieden.

Optional unterscheidet sich die erste Fluoreszenzstrahlungswellenlänge der ersten Sorte paramagnetischer Zentren, die der Quantencomputer **QC** als Quantenpunkte von Quantenbits des Quantencomputers **QC** aufweist, von den n-1 anderen Fluoreszenzstrahlungswellenlänge der anderen n-1 Sorten paramagnetischer Zentren, die der Quantencomputer **QC** als Quantenpunkte von Quantenbits des Quantencomputers **QC** aufweist. Mit anderen Worten ist die Fluoreszenzstrahlungswellenlänge der jeweiligen Sorten von paramagnetischen Zentren paarweise verschieden.

Für die Nachregelung der Positionierung zur zumindest teilweisen Kompensation von mechanischen Einflüssen auf den Quantencomputer kann das Quantencomputersystem die besagten anderen Defektzentren in einem Kristall des Substrats **D** benutzen. Bei Bestrahlung mit einer weiteren Pumpstrahlung mit einer weiteren Pumpstrahlungswellenlänge emittieren diese anderen Defektzentren eine weitere Fluoreszenzstrahlung mit einer weiteren Fluoreszenzstrahlungswellenlänge. Optional unterscheidet sich die weitere Sorte der besagten andere Defektzentren von allen anderen n-1 Sorten paramagnetischer Zentren, die der Quantencomputer **QC** als Quantenpunkte von Quantenbits des Quantencomputers **QC** benutzt. Optional unterscheidet sich die weitere Pumpstrahlungswellenlänge der besagten anderen Defektzentren von den n anderen Pumpstrahlungswellenlänge der anderen n Sorten paramagnetischer Zentren, die der Quantencomputer **QC** als Quantenpunkte von Quantenbits des Quantencomputers **QC** benutzt.

Typischerweise unterscheidet sich die weitere Fluoreszenzstrahlungswellenlänge der besagten andere Defektzentren von den n anderen Fluoreszenzstrahlungswellenlänge der anderen n Sorten paramagnetischer Zentren, die der Quantencomputer **QC** als Quantenpunkte von Quantenbits des Quantencomputers **QC** aufweist. Mit anderen Worten sind die Fluoreszenzstrahlungswellenlängen der zugehörigen Arten von Defektzentren paarweise verschieden. Optional kann die Lichtquelle **LD** eine weitere Pumpstrahlungsquelle für elektromagnetische Strahlung mit der weiteren Pumpstrahlungswellenlänge λₚₘₚ zur Anregung der weiteren Fluoreszenzstrahlung λ_{fl} der besagten anderen Defektzentren umfassen.

Optional verfügt die Lichtquelle **LD** über ein System von Spiegeln und/oder Prismen und/oder Strahlteilern und/oder halbdurchlässigen Spiegeln, um die verschiedenen Lichtbündel der verschiedenen Pumpstrahlungen zu einem einzigen Lichtbündel zusammenzufassen, mit dem das optische System **OS** dann das Substrat **D** mit den paramagnetischen Zentren der Quantenpunkte und den anderen Defektzentren bestrahlen kann. Ein frequenzselektives Prisma und/oder Spiegelsystem, oder dergleichen, kann dann durch Auswertung der Strahlungswellenlängen die verschiedenen Fluoreszenzstrahlungen wieder voneinander separieren. In dem Beispiel der Figur 1 kann optional die erste Kamera **CM1** beispielsweise die Position der anderen Defektzentren bestimmen und mittels einer Bildverarbeitungs-Software die Defokussierung und den x- und y-Versatz des Substrats **D** gegenüber dem optischen System **OS** feststellen. Dies ermöglicht eine Positionskorrektur durch die translatorische Positioniervorrichtung in X-Richtung **XT** und die translatorische Positioniervorrichtung in Y-Richtung **YT,** sowie die Refokussierung durch das optische System **OS.** Optional umfasst das Quantencomputersystem **QC** zur Anwendung dieses Verfahrens optional je Sorte verwendeter paramagnetischer Zentren und für die anderen Defektzentren über jeweils einen halbdurchlässigen Spiegel **STM** und jeweils eine Kamera **CM1** und jeweils eine Kameraschnittstelle **CIF.** Optional befindet sich im Strahlengang vor der jeweiligen Kamera ein wellenlängensensitives optisches Funktionselement, das dafür sorgt, dass nur die Fluoreszenzstrahlung des betreffenden paramagnetischen Zentrums bzw. des anderen Defektzentrums die zugeordnete Kamera **CM1** erreicht. Die Steuervorrichtung **µC** steuert optional alle Komponenten der Lichtquelle **LD.** Die Steuervorrichtung **µC** steuert optional die Positionskorrektur durch die translatorische Positioniervorrichtung in X-Richtung **XT** und die translatorische Positioniervorrichtung in Y-Richtung **YT,** sowie die Refokussierung durch das optische System **OS.** Die Steuervorrichtung **µC** erfasst optional die von den ersten Kameras **CM1** erfassten Bilder. Die Steuervorrichtung µC kann optional das von der ersten Kamera für die anderen Defektzentren erfasste Bild der weiteren Fluoreszenzstrahlung der anderen Defektzentren auswerten, und mittels einer Bildverarbeitungs-Software einen Messwert für die Defokussierung des optischen Systems **OS** gegenüber dem Substrat **D** und einen Messwert für den x-Versatz des Substrats **D** gegenüber dem optischen System **OS** und einen Messwert für den y-Versatz des Substrats **D** gegenüber dem optischen System **OS** bestimmen. Die Steuervorrichtung **µC** steuert mit Hilfe dieser Messwerte optional die Positionskorrektur durch die translatorische Positioniervorrichtung in X-Richtung **XT** und die translatorische Positioniervorrichtung in Y-Richtung **YT,** sowie die Refokussierung durch das optische System **OS.**

Das verlegbare Quantencomputersystem **QC** umfasst optional Mittel (**PV, XT, YT, CM1, OS, STM, CIF, µC**), die dazu eingerichtet sind, eine Beschleunigung, insbesondere während einer Verlegung des verlegbaren Quantencomputers **QC,** vorherzusagen und/oder eine Beschleunigung, insbesondere während einer Verlegung des verlegbaren Quantencomputers **QC,** zu erfassen und/oder eine Beschleunigung, insbesondere während einer Verlegung des verlegbaren Quantencomputers **QC,** zu kompensieren und/oder die Wirkung einer Beschleunigung, insbesondere während einer Verlegung des verlegbaren Quantencomputers **QC,** zu vermindern. Solche dritten Mittel können beispielsweise ein oder mehrere Beschleunigungssensorsysteme für das Substrat **D** und/oder für Vorrichtungsteile des Quantencomputers **QC** und/oder für den Quantencomputer **QC** und/oder Beschleunigungssensoren für das Substrat **D** und/oder für Vorrichtungsteile des Quantencomputers **QC** und/oder für den Quantencomputer **QC** und/oder ein oder mehrere Positionsverschiebungssensoren für das Substrat **D** relativ zu Vorrichtungsteilen des Quantencomputers **QC** und/oder für Vorrichtungsteile des Quantencomputers **QC** zueinander und/oder für den Quantencomputer **QC** relativ zu einem außenliegenden Referenzpunkt etc. umfassen. Solche Mittel können optional ein oder mehrere Lageregelungssysteme umfassen, die beispielsweise Teil des Quantencomputers **QC** und/oder der Steuervorrichtung **µC** sein können. Solche Mittel können beispielsweise einen oder mehrere Positioniertische umfassen, die ein oder mehrere Komponenten der optischen Funktionselemente des Quantencomputersystems zueinander im Wesentlichen in Position halten können. Die Positioniertische können optional 1 bis 6 translatorische und rotatorische Freiheitsgrade verstellen. Optional kann die Steuervorrichtung **µC** diese Positioniertische über den Steuerdatenbus **SDB** steuern. Die Positioniervorrichtung in X-Richtung **XT** und die translatorische Positioniervorrichtung in Y-Richtung **YT** sind mögliche Ausgestaltungen solcher Positioniertische.

Das verlegbare Quantencomputersystem umfasst optional eine oder mehrere Bilderfassungsvorrichtungen und/oder Bildverarbeitungsvorrichtung als Mittel (**PV, XT, YT, CM1, OS, STM, CIF, µC**), um Verdrehungen und/oder Versätze von Funktionselementen des Quantencomputersystems **QC** erkennen zu können. In diesem Zusammenhang hat das hier vorgelegte Dokument bereits vorgeschlagen, dass das Substrat **D** des verlegbaren Quantencomputer **QC** optional andere fluoreszierende Defektzentren mit anderen Fluoreszenzwellenlängen, die eine Fluoreszenzstrahlung mit einer von der Fluoreszenzwellenlänge λ_{fl} der Quantenpunkte (**NV1, NV2, NV3**) der Quantenbits verschieden Fluoreszenzwellenlänge aufweisen, umfasst, um die Repositionierung des Substrats **D** gegenüber dem optischen System **OS** zu ermöglichen.

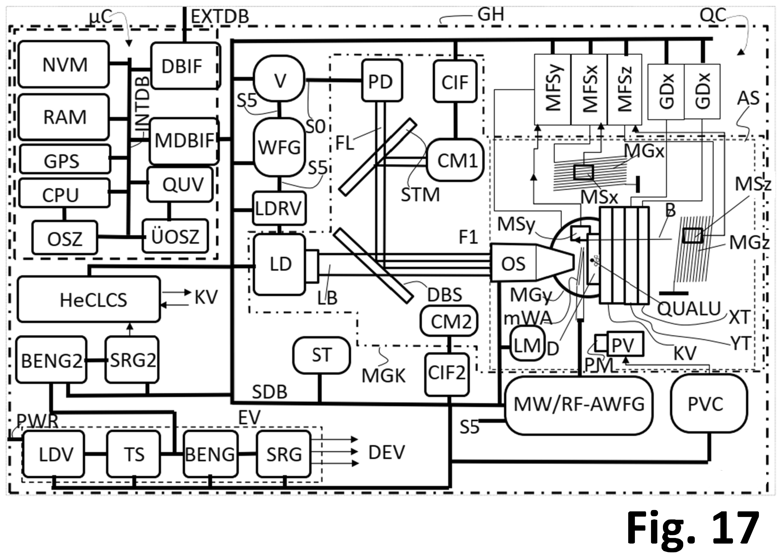

Optional umfasst das Quantencomputersystem **QC** Mittel **QUV,** die dazu eingerichtet sind, die Übertragung mechanischer Stöße und/oder Schwingungen, unter optischen Vorrichtungsteilen (**D, OS, DBS, STM, PD, CM1, LD**) und/oder weiteren Hilfsvorrichtungsteilen (**KV, XT, YT, MGx, MGy, MGz, MSx, MSy, MSz, MWA, CM2, LM, HECLCS**) der optischen Teilvorrichtungen des Quantencomputersystems untereinander zu verhindern und/oder zu dämpfen. Alternativ oder zusätzlich zu den bereits benannten Positioniervorrichtungen, die als aktive Funktionselemente diesem Zweck dienen können und die das hier vorgelegte Dokument bereits benannt hat, kann das Quantencomputersystem auch passive Funktionselemente, wie Federn und/oder Stoßdämpfer und/oder elastische Lagerungen mit einer Verlustkomponente aufweisen. Ein Schwingungsdämpfer ist dabei ein System zur Dämpfung von mechanischen Schwingungen (Vibrationen, Erschütterungen, Stößen). Dabei kann das Ziel darin bestehen, Bewegungsenergie in Wärmeenergie umzuwandeln. Beispielsweise können derartige Mittel Reibungsbremsen umfassen, die typischerweise frequenzunabhängig arbeiten und sich an einem Gegenstück abstützen, welches entweder ruht oder eine andere Resonanzfrequenz aufweist. Optional befindet sich das Gegenstück außerhalb des Quantencomputers **QC** oder zumindest mechanisch separat von den optischen Funktionselementen (**LD, DBS, OS, D, KV, XT, YT, MWA, MGX, MGy, MGz, MGz, PM, PV, MSy, MSx, MSz, STM, PD, CM1, CM2**) des Quantencomputers **QC.** Optional verbindet die in Figur 17 schematisch gezeichnete mechanische Grundkonstruktion **MGK** die optischen Funktionselementen (**LD, DBS, OS, D, KV, XT, YT, MWA, MGX, MGy, MGz, MGz, PM, PV, MSy, MSx, MSz, STM, PD, CM1, CM2**) des Quantencomputers **QC** miteinander. Optional schützen vierte Mittel diese mechanische Grundkonstruktion und die mit ihr verbundenen optischen Funktionselemente (**LD, DBS, OS, D, KV, XT, YT, MWA, MGX, MGy, MGz, MGz, PM, PV, MSy, MSx, MSz, STM, PD, CM1, CM2**) des Quantencomputersystems vor Schwingungen, Körperschall und/oder kleinen Beschleunigungen. Die als "Stoßdämpfer" bezeichneten Schwingungsdämpfer etwa, die Teile der Radaufhängung der meisten gefederten Fahrzeuge sind, reduzieren lineare Schwingungen. Drehschwingungsdämpfer wie etwa Planflächendämpfer reduzieren Drehschwingungen. Schwingungstilger, die auf bestimmte Frequenzbereiche abgestimmt sind, die sich frei mit dem schwingenden Objekt bewegen und keine externe Verankerung benötigen, können lineare Schwingungen begrenzen. Eine Methode zur Beeinflussung der Resonanzfrequenz ist die Veränderung von Masse oder Steifigkeit der Konstruktion, um ein Aufschwingen durch äußere Anregung zu vermeiden. Optional sind diese Mittel zur Dämpfung von mechanischen Stößen und/oder Schwingungen zwischen einer mechanischen Grundkonstruktion **MGK** mit den mit ihr verbundenen optischen Funktionselementen (**LD, DBS, OS, D, KV, XT, YT, MWA, MGX, MGy, MGz, MGz, PM, PV, MSy, MSx, MSz, STM, PD, CM1, CM2**) einerseits und dem Gehäuse **GH** des Quantencomputers **QC** eingefügt. In dem Fall dämpfen sie eine Übertragung von Körperschall etc. von dem Gehäuse **GH** des Quantencomputers **QC** und von den übrigen Vorrichtungsteilen des Quantencomputers **QC** auf die mechanische Grundkonstruktion **MGK** mit den mit ihr verbundenen optischen Funktionselementen (**LD, DBS, OS, D, KV, XT, YT, MWA, MGX, MGy, MGz, MGz, PM, PV, MSy, MSx, MSz, STM, PD, CM1, CM2**). Optional sind diese Mittel zwischen dem Gehäuse **GH** des Quantencomputers **QC** und den Auflagern des Quantencomputers **QC** eingefügt, auf denen dieser mechanisch gelagert ist. In dem Fall dämpfen sie eine Übertragung von Körperschall etc. von der mobilen Vorrichtung, also etwa einem Fahrzeug (im Sinne des hier vorgelegten Dokuments) auf das dem Gehäuse **GH** des Quantencomputers **QC** und dessen Vorrichtungsteile.

Somit verfügt das Quantencomputersystem optional über weitere Mittel, die dazu eingerichtet sind, die Übertragung mechanischer Stöße und/oder Schwingungen, zu optischen Vorrichtungsteilen (**D, OS, DBS, STM, PD, CM1, LD**) des Quantencomputers **QC** und/oder zu den weiteren Hilfsvorrichtungsteilen (**KV, XT, YT, MGx, MGy, MGz, MSx, MSy, MSz, MWA, CM2, LM, HECLCS**) der optischen Teilvorrichtungen des Quantencomputers **QC,** insbesondere über Körperschall, zu verhindern und/oder zu dämpfen. Diese Mittel können beispielsweise u. a. in Versorgungsleitungen zu optischen Vorrichtungsteilen (**D, OS, DBS, STM, PD, CM1, LD**) des Quantencomputers **QC** und/oder zu den weiteren Hilfsvorrichtungsteilen (**KV, XT, YT, MGx, MGy, MGz, MSx, MSy, MSz, MWA, CM2, LM, HECLCS**) eingefügt sein. Beispielsweise können Drähte und/oder Leitungen in Form mechanischer Federn spiralförmig ausgeführt sein, um die Übertragung von Kräften auszuschließen. Solche Mittel können beispielsweise auch in Datenleitungen **SDA** zu optischen Vorrichtungsteilen (**D, OS, DBS, STM, PD, CM1, LD**) des Quantencomputers **QC** und/oder zu den weiteren Hilfsvorrichtungsteilen (**KV, XT, YT, MGx, MGy, MGz, MSx, MSy, MSz, MWA, CM2, LM, HECLCS**) eingefügt sein. Solche Mittel können spezielle mechanische, zumindest abschnittsweise Ausformungen (z. B. besagte Federn) von Versorgungsleitungen zu optischen Vorrichtungsteilen (**D, OS, DBS, STM, PD, CM1, LD**) des Quantencomputers **QC** und/oder zu den weiteren Hilfsvorrichtungsteilen (**KV, XT, YT, MGx, MGy, MGz, MSx, MSy, MSz, MWA, CM2, LM, HECLCS**) umfassen. Solche Mittel können spezielle mechanische, zumindest abschnittsweise Ausformungen (z. B. besagte Federn) von Datenleitungen **SDA** zu optischen Vorrichtungsteilen (**D, OS, DBS, STM, PD, CM1, LD**) des Quantencomputers **QC** und/oder zu den weiteren Hilfsvorrichtungsteilen (**KV, XT, YT, MGx, MGy, MGz, MSx, MSy, MSz, MWA, CM2, LM, HECLCS**) umfassen.

Optional umfasst das Quantencomputersystem **QC** weitere Mittel, insbesondere eine Quantencomputerüberwachungsvorrichtung **QUV,** die dazu eingerichtet sind, einen nicht statistischen Fehler des Quantencomputers **QC** zu erfassen und/oder beiAuftreten eines nicht statistischen Fehlers des Quantencomputers **QC** Gegenmaßnahmen durchzuführen oder zu initiieren. Optional umfasst der Quantencomputer **QC** weitere Mittel, insbesondere eine Quantencomputerüberwachungsvorrichtung **QUV,** die dazu eingerichtet sind, einen nicht statistischen Fehler des Quantencomputers **QC** zu erfassen und/oder bei Auftreten eines nicht statistischen Fehlers des Quantencomputers **QC** einen solchen nicht statistischen Fehler an ein übergeordnetes System, z. B. eine zentrale Steuereinheit **ZSE,** zu signalisieren.

Optional umfasst der Quantencomputer **QC** weitere Mittel, insbesondere eine Quantencomputerüberwachungsvorrichtung **QUV,** die dazu eingerichtet sind, einen nicht statistischen Quantenfehler des Quantencomputers **QC** zu erfassen und/oder bei Auftreten eines nicht statistischen Fehlers des Quantencomputers **QC** Gegenmaßnahmen durchzuführen oder zu initiieren. Optional umfasst der Quantencomputer **QC** weitere Mittel, insbesondere eine Quantencomputerüberwachungsvorrichtung **QUV,** die dazu eingerichtet sind, einen nicht statistischen Quantenfehler des Quantencomputers **QC** zu erfassen und/oder bei Auftreten eines nicht statistischen Fehlers des Quantencomputers **QC** einen solchen nicht statistischen Quantenfehler an ein übergeordnetes System, z. B. eine zentrale Steuereinheit **ZSE,** zu signalisieren.

Optional erzielt erst das Zusammenwirken der verschiedenen Mittel, Teilvorrichtungen und Merkmale des Quantencomputersystems die Wirkung eines störungsfreien Betriebes nach einer Verlegung des Quantencomputers **QC** und/oder während der Verlegung des Quantencomputers **QC.**

Der Begriff "Überwachen" ist dabei so zu verstehen, dass die Quantencomputerüberwachungsvorrichtung **QUV** eine zusätzliche Vorrichtung zu den Teilvorrichtungen des Quantencomputers **QC** darstellen kann, welche optional die anderen Teilvorrichtungen überwachen kann. Die Quantencomputerüberwachungsvorrichtung **QUV** kann bezogen auf die Steuervorrichtung **µC** die Funktion eines Watchdogs innehaben. Bezogen auf die Quantenkomponenten des Quantencomputers **QC** kann die Quantencomputerüberwachungsvorrichtung **QUV** weitere, darüberhinausgehende Funktionen innehaben. Da der Betrieb der Quantenkomponenten des Quantencomputers **QC** maßgeblich durch statistische Gesetze bestimmt ist und ansonsten auch nicht deterministische Anteile haben kann, kann die Anwendung eines konventionellen Watchdogs primär für die Steuervorrichtung **µC** vorteilhaft sein, während für die Anwendung auf die Quantenkomponenten des Quantencomputers **QC** und deren Zusammenwirken untereinander und mit der Steuervorrichtung **µC** und den anderen Vorrichtungsteilen des Quantencomputers **QC** ein konventioneller Watchdog nicht geeignet sein kann. Das hier vorgelegte Dokument stellt mit der Quantencomputerüberwachungsvorrichtung **QUV** einen neuen zusätzlichen Vorrichtungsteil vor, der auch diese nicht deterministischen Teile des Quantencomputers **QC** auf Defekte überwacht. Unter "Überwachung" ist hier zunächst im Normalbetrieb die Beobachtung der Vorgänge im Quantencomputer **QC** und die Bewertung dieser Beobachtungen gemeint. Das hier vorgelegte Dokument schlägt auch vor, dass die Quantencomputerüberwachungsvorrichtung **QUV** dazu eingerichtet ist, dem Quantencomputer **QC** zwischen zwei Quantencomputerprogrammberechnungen vordefinierte Aufgaben zu stellen und die Antwort des Quantencomputers **QC** nach Zeitpunkt und Inhalt statistisch zu bewerten. Eine solche Quantencomputerüberwachungsvorrichtung **QUV** ist somit das Quantencomputeräquivalent für einen Quantencomputer **QC** zu einem Question-And-Answer-Watchdog für einen normalenProzessor. Ohne die Quantencomputerüberwachungsvorrichtung **QUV** kann der Quantencomputer **QC** also immer noch einen funktionsfähigen Quantencomputer **QC** darstellen. Die Quantencomputerüberwachungsvorrichtung QUV ist nicht notwendigerweise eine Steuervorrichtung **µC,** die in Abhängigkeit von erfassten Quantenzuständen der Quantenbits des Quantencomputers Programmverzweigungen und/oder Sprünge im Quantencomputerprogrammablauf initiiert.

Das offenbarungsgemäße Quantencomputersystem kann ferner einen Rotationssensor umfassen, wobei das Quantencomputersystem dazu eingerichtet sein kann, mittels des Rotationssensors eine Rotationsbewegung und/oder eine Orientierung des Quantencomputers zu ermitteln.

In einem weiteren Aspekt wird Quantencomputersystem bereitgestellt, welches einen verlegbaren Quantencomputer umfasst. Das Quantencomputersystem ist dadurch gekennzeichnet, dass das Quantencomputersystem ferner einen Rotationssensor aufweist und dazu eingerichtet ist, mittels des Rotationssensors eine Rotationsbewegung und/oder eine Ausrichtung des Quantencomputers und/oder des Quantencomputersystems zu ermitteln. Insbesondere kann das Ermitteln der Rotationsbewegung während des Betriebs des Quantencomputers erfolgen.

Dies bietet den Vorteil, dass die Ausrichtung und/oder Rotationsbewegungen des Quantencomputers erfasst und die Auswirkungen auf den Betrieb des Quantencomputers ermittelt werden können. Damit können die Auswirkungen beim Betrieb des Quantencomputers beürcksichtigt werden und/oder Maßnahmen zur zumindest teilweisen Kompensation und/oder Vermeidung der Auswirkung können getroffen werden. Dies kann ermöglichen, einen verlegbaren Quantencomputer auch in Bewegung zu betreiben, wenn Änderungen der Ausrichtung und/oder Rotationsbewegungen des Quantencomputersystems zur erwarten sind.

Insbesondere bietet dies den Vorteil, dass ein Betreib des Quantencomputers dann ermöglicht oder verbessert werden kann, wenn manche oder alle Quantenbits des Quantencomputers durch eine Änderung der Ausrichtung des Quantencomputers beeinflussbar sind und insbesondere wenn unterschiedliche Arten von Quantenbits des Quantencumputers, etwa Quantenbits und Kernquantenbits, auf unterschiedliche Weise durch Rotationswegebungen beeinflusst werden. Dadurch, dass die Rotationsbewegungen und/oder Änderungen der Ausrichtung ermittelt werden, können diese bei der Ansteuerung des Quantencomputers, insbesondere bei der Manipulation der Quantenbits, berücksichtigt werden.

Der Rotationssensor kann dazu ausgelegt sein, eine Ausrichtung und/oder eine Rotationsbewegung und/oder eine Rotationsbeschleunigung des Quantencomputers zu ermitteln. Die Ausrichtung und/oder Rotationsbewegung kann dabei eine Achse, zwei Achsen oder drei Achsen betreffen, um welche sich die Ausrichtung des Quantencomputer bzw. Quantencomputersystems drehen kann. Optional kann die Ermittlung einer Rotationsbewegung ein Ermitteln einer Rotationsbeschleunigung umfassen.

Das Quantencomputersystem kann ferner dazu eingerichtet sein, eine Auswirkung der ermittelten Rotationsbewegung und/oder Ausrichtung auf den Quantencomputer zumindest teilweise zu kompensieren oder zu vermeiden. Dies kann vorteilhaft für einen zuverlässigen Betrieb des Quantencomputers sein, während dieser bewegt wird.

Das Quantencomputersystem kann dazu eingerichtet sein, die Auswirkung der ermittelten Rotationsbewegung und/oder Ausrichtung während eines Betriebs des Quantencomputers zumindest teilweise durch eine Anpassung einer Ansteuerung des Quantencomputers zu kompensieren. Die Anpassung der Ansteuerung des Quantencomputers kann optional eine oder mehrere Anpassungen von Parametern für eine Manipulation eines Quantenbits und/oder eines Kernquantenbits des Quantencomputers umfassen. Dies kann einen Betrieb des Quantencomputers während der Bewegung des Quantencomputers ermöglichen oder verbessern und/oder eine rotatorische Stabilisierung des Quantencomputers entbehrlich machen.

Die Anpassung der Ansteuerung des Quantencomputers kann optional eine oder mehrere Anpassungen der folgenden Parameter aufweisen:
- eine Kopplungsgrundfrequenz und/oder eine Kopplungsgrundphasenlage für eine Kopplung zwischen Paaren aus koppelbaren Quantenbits (QUB1, QUB2) untereinander;
- eine Kopplungsgrundfrequenz und/oder Kopplungsgrundphasenlage für eine Kopplung zwischen koppelbaren Paaren aus je einem Quantenbit (QUB) und einem Kernquantenbit (CQUB);
- eine Kopplungsgrundfrequenz und/oder Kopplungsgrundphasenlage für eine Kopplung zwischen Paaren aus koppelbaren jeweils zwei Kernquantenbits (CQUB1, CQUB2) untereinander.

Dadurch können Auswirkungen von Ändeurngen der Ausrichtung und/oder von Rotationsbewegungen des Quantencomputers auf die unterschiedlichen Quantenbits zumindest teilweise kompensiert werden, um einen zuverlässigen Betrieb des Quantencomputers zu ermöglichen.

In einem weiteren Aspekt wird ein Quantencomputersystem umfassend einen verlegbaren Quantencomputer bereitgestellt. Das Quantencomputersystem ist dadurch gekennzeichnet, dass das Quantencomputersystem ferner eine Rotationsentkopplungsvorrichtung aufweist. Optinoal ist der Quantencomputer in der Quantencomputer drehbar gelagert. Dabei ist das Quantencomputersystem dazu eingerichet, die Auswirkung einer Rotationsbewegung und/oder Ausrichtung des Quantencomputers zumindest während eines Betriebs des Quantencomputers zumindest teilweise durch ein Entkoppeln des Quantencomputers von seiner Umgebung mittels der Rotationsentkopplungsvorrichtung zu kompensieren oder zu vermeiden.

Durch die drehbare Lagerung können Änderungen der Ausrichtung und/oder Rotationsbewegungen der Umgebung vom Quantencomputer ferngehalten werden und auf diese Weise unerwünschte Auswirkungen vermieden werden. Dies kann eine anderweitge Kompensation der Änderung der Ausrichtung und/oder von Rotationsbewegungen, etwa durch eine Änderung von Parametern zur Ansteuerung des Quantencomputers, entbehrlich machen. Dadurch kann die Zuverlässigkeit des Betriebs des Quantencomputers während desen Bewegung verbessert und/oder vereinfacht werden. Die Rotationsentkopplungsvorrichtung kann optional eine kardanische Aufhängung aufweisen. Dies kann eine rotatorische Entkopplung des Quantencomputers von dessen Umgebung mit mechanischen Mitteln erlauben. Optional können auch andere Komponenten des Quantencomputersystems oder alle Komponenten des Quantencomputersystems mit dem Quantencomputer in der Rotationsentkopplungsvorrichtung angeordnet sein.

Die Rotationsentkopplungsvorrichtung kann ferner einen oder mehrere Kreisel aufweisen und/oder mit einem oder mehreren Kreiseln verbunden ist und dazu eingerichtet ist, mittels des einen oder der mehreren Kreisel und der Rotationsentkopplungsvorrichtung eine Drehnung des Quantencomputers relativ zu seiner Umgebung zumindest teilweise zu reduzieren oder zu vermeiden.

Der Quantencomputer kann relativ zu einer Energieversorgungseinrichtung des Quantencomputersystem drehbar sein. Dies bietet den Vorteil, dass die Energieversorgungseinrichtung nicht notwendigerweise drehbar gelagert sein muss, wenn der Quantencomputer drehbar gelager ist. Dadurch kann die Komplexität des Quantencomputersystems verringern. Das Quantencomputersystem kann ferner zumindest einen Schleifring aufweisen, wobei der zumidenst eine Schleifring den Quantencomputer mit der Energieversorgungseinrichtung verbindet. Dies kann eine zuverlässige Energieversorgung des Quantencomputers sicherstellen, wenngleich dieser relativ zur Energieversorgungseinrichtung drehbar gelagert ist.

Das Quantencomputersystem kann ferner dazu eingerichtet sein, einen die ermittelte Rotationsbewegung und/oder die Ausrichtung des Quantencomputers charakterisierenden Messwert bereitzustellen. Dies kann den Vorteil bieten, dass der Quantencomputer zur Messung der Rotationsbewegung und/oder der Ausrichtung verwendet werden kann. Optional kann das Quantencomputersystem oder der Quantencomputer als Gyrometer ausgebildet sein oder einen Teil eines Gyrometers bildet.

Das Quantencomputersystem kann dabei derart ausgebildet sein, dass der Quantencomputer ein Substrat mit einem oder mehreren im Substrat angeordneten Quantenpunkten aufweist.

Der eine oder die mehreren Quantenpunkte können optional jeweils durch ein oder mehrere paramagnetische Zentren gebildet werden, oder jeweils ein paramagnetisches Zentrum umfassen.

Das eine oder die mehreren paramagnetischen Zentren können jeweils als NV-Zentrum und/oder als SiV-Zentrum und/oder als TiV-Zentrum und/oder als GeV-Zentrum und/oder als SnV-Zentrum und/oder als NiN4-Zentrum und/oder als PbV-Zentrum und/oder als TR1-Zentrum und/oder als TR12-Zentrum ausgebildet sein.

Die folgende Tabelle bietet eine beispielhafte Übersicht über optionale Materialien für den Kristall des Substrats und mögliche Arten von Störstellenzentren zusammen mit den zugehörigen Wellenlängen der Zero Phonon Line (ZPL) und möglichen Pumpwellenlänge(n) für die optische Anregung der jeweiligen Art von Störstellenzentrum. Die letzte Spalte gibt Referenzen an, welche weitere Informationen zu den jeweiligen Störstellenzentren enthalten können, und deren Offenbarung, sofern in der jeweiligen Jurisdiktion zulässig, hiermit durch Verweis in die Offenbarung der vorliegenden Schrift aufgenommen sind.

| **Material des Kristalls des Substrats D** | **Art des Störstellenzentrum** | **ZPL** | **Option. Pumpwellenlänge** | **Referenz** |
|---|---|---|---|---|
| Diamant | NV-Zentrum | | 520nm, 532nm | |
| Diamant | SiV-Zentrum | 738 nm | 685 nm | /2/, /3/, /4/ |
| Diamant | GeV-Zentrum | 602 nm | 532 nm | /4/, /5/ |
| Diamant | SnV-Zentrum | 620 nm | 532 nm | /4/, /6/ |
| Diamant | PbV-Zentrum | 520 nm, 552 nm, 715 nm | 532 nm | /4/, /7/ |
| Diamant | ST1-Zentrum | 555 nm | 532 nm | /15/ |
| Diamant | TR1 | | | |
| Diamant | TR12-Zentrum | 471 nm | 410 nm | /16/ |
| Silizium | G-Zentrum | 1278,38 nm | 637 nm | /8/ |
| Siliziumkarbid | V_{SI}-Zentrum | 862 nm(V1) 4H, 858,2 nm(V1') 4H 917 nm(V2) 4H, 865 nm(V1) 6H, 887 nm(V2) 6H, 907 nm(V3) 6H | 730 nm, | /1/, /9/, /10/ |
| Siliziumkarbid | DV-Zentrum | 1.078 - 1.132 nm | 730 nm | /9/ |
| Siliziumkarbid | V_{C}V_{SI}-Zentrum | 1:093-1:140 nm 6H | 730 nm | /9/ |
| Siliziumkarbid | | 648;7 nm 4H, 6H, 3C | 730 nm | /9/ |
| | | 651.8 nm 4H, 6H, 3C | | |
| | | 665.1 nm 4H, 6H, 3C | | |
| | | 668.5 nm 4H, 6H, 3C | | |
| | | 671.7 nm 4H, 6H, 3C | | |
| | | 673 nm 4H, 6H, 3C | | |
| | | 675.2 nm 4H, 6H, 3C | | |
| | | 676.5 nm 4H, 6H, 3C | | |
| Siliziumkarbid | N_{C}V_{SI}-Zentrum | 1.180 nm-1.242 nm 6H | 730 nm | /9/, /13/, /14/ |

Die in der obigen Tabelle genannten Referenzen lauten wie folgt:

| Nr. | Referenz |
|---|---|
| /1/ | Marina Radulaski, Matthias Widmann, Matthias Niethammer, Jingyuan Linda Zhang, Sang-Yun Lee, Torsten Rendler, Konstantinos G. Lagoudakis, Nguyen Tien Son, Erik Janzén, Takeshi Ohshima, Jörg Wrachtrup, Jelena Vučković, "Scalable Quantum Photonics with Single Color Centers in Silicon Carbide", Nano Letters 17 (3), 1782-1786 (2017), DOI: 10.1021/acs.nanolett.6b05102, arXiv:1612.02874 |
| /2/ | C. Wang, C. Kurtsiefer, H. Weinfurter, and B. Burchard, "Single photon emission from SiV centres in diamond produced by ion implantation" J. Phys. B: At. Mol.Opt. Phys., 39 (37), 2006 DOI 10.1088/0953-4075/39/1/005 |
| /3/ | Björn Tegetmeyer, "Luminescence properties of SiV-centers in diamond diodes" Promotionsschrift, Universität Freiburg, 30.01.2018 |
| /4/ | Carlo Bradac, Weibo Gao, Jacopo Forneris, Matt Trusheim, Igor Aharonovich, "Quantum Nanophotonics with Group IV defects in Diamond", DOI: 10.1038/s41467-020-14316-x, arXiv:1906.10992 |
| /5/ | Rasmus Høy Jensen, Erika Janitz, Yannik Fontana, Yi He, Olivier Gobron, Ilya P. Radko, Mihir Bhaskar, Ruffin Evans, Cesar Daniel Rodriguez Rosenblueth, Lilian Childress, Alexander Huck, Ulrik Lund Andersen, "Cavity-Enhanced Photon Emission from a Single Germanium-Vacancy Center in a Diamond Membrane", arXiv:1912.05247v3 [quant-ph] 25 May 2020 |
| /6/ | Takayuki Iwasaki, Yoshiyuki Miyamoto, Takashi Taniguchi, Petr Siyushev, Mathias H. Metsch, Fedor Jelezko, Mutsuko Hatano, "Tin-Vacancy Quantum Emitters in Diamond", Phys. Rev. Lett. 119, 253601 (2017), DOI: 10.1103/PhysRevLett.119.253601, arXiv:1708.03576 [quant-ph] |
| /7/ | Matthew E. Trusheim, Noel H. Wan, Kevin C. Chen, Christopher J. Ciccarino, Ravishankar Sundararaman, Girish Malladi, Eric Bersin, Michael Walsh, Benjamin Lienhard, Hassaram Bakhru, Prineha Narang, Dirk Englund, "Lead-Related Quantum Emitters in Diamond" Phys. Rev. B 99, 075430 (2019), DOI: 10.1103/PhysRevB.99.075430, arXiv:1805.12202 [quant-ph] |
| /8/ | M. Hollenbach, Y. Berencén, U. Kentsch, M. Helm, G. V. Astakhov "Engineering telecom single-photon emitters in silicon for scalable quantum photonics" Opt. Express 28, 26111 (2020), DOI: 10.1364/OE.397377, arXiv:2008.09425 [physics.app-ph] |
| /9/ | Castelletto and Alberto Boretti, "Silicon carbide color centers for quantum applications" 2020 J. Phys. Photonics2 022001 |
| /10/ | V. Ivády, J. Davidsson, N. T. Son, T. Ohshima, I. A. Abrikosov, A. Gali, "Identification of Si-vacancy related room-temperature qubits in 4H silicon carbide", Phys. Rev.B, 2017, 96,161114 |
| /11/ | J. Davidsson, V. Ivády, R. Armiento, N. T. Son, A. Gali, I. A. Abrikosov, "First principles predictions of magneto-optical data for semiconductor point defect identification: the case of divacancy defects in 4H-SiC", New J. Phys., 2018, 20, 023035 |
| /12/ | J. Davidsson, V. Ivády, R. Armiento, T. Ohshima, N. T. Son, A. Gali, I. A. Abrikosov "Identification of divacancy and silicon vacancy qubits in 6H-SiC", Appl. Phys. Lett. 2019, 114, 112107 |
| | |
| /13/ | S. A. Zargaleh, S. Hameau, B. Eble, F. Margaillan, H. J. von Bardeleben, J. L. Cantin, W. Gao, "Nitrogen vacancy center in cubic silicon carbide: a promising qubit in the 1.5µm spectral range for photonic quantum networks" Phys. Rev.B, 2018, 98, 165203 |
| /14/ | S. A. Zargaleh et al "Evidence for near-infrared photoluminescence of nitrogen vacancy centers in 4H-SiC" Phys. Rev.B, 2016, 94, 060102 |
| /15/ | P. Balasubramanian, M. H. Metsch, Reddy, R. Prithvi, J. Lachlan, N. B. Manson, M. W. Doherty, F. Jelezko, "Discovery of ST1 centers in natural diamond" Nanophotonics, Vol. 8, Nr. 11, 2019, Seiten 1993-2002. https://doi.org/10.1515/nanoph-2019-0148 |
| /16/ | J. Foglszinger, A. Denisenko, T. Kornher, M. Schreck, W. Knolle, B. Yavkin, R. Kolesov, J. Wrachtrup "ODMR on Single TR12 Centers in Diamond" arXiv:2104.04746v1 [physics.optics] |

Das Substrat kann zumindest teilweise aus Diamant ausgebildet sein.

Der Quantencomputer kann ferner einen oder mehrere Kernquantenpunkte aufweisen.

Der Quantencomputer kann zudem eine, mehrere oder alle der folgenden Komponenten aufweisen:
- ein Substrat **(D);**
- ein oder mehrere in dem Substrat angeordnete Quantenpunkten **(NV1, NV2, NV3);**
- eine Lichtquelle **(LD);**
- einen Lichtquellentreiber **(LDRV);**
- eine oder mehrere Vorrichtungen **(mWA, MW/RF-AWFG)** zur Erzeugung eines elektromagnetischen Wellenfeldes am jeweiligen Ort der Quantenpunkte **(NV1, NV2, NV3);**
- eine Steuervorrichtung (µ**C**);
- einen oder mehrere Speicher **(RAM, NVM)** der Steuervorrichtung (**µC**);
- einen Wellenformgenerator **(WFG);**
- ein optisches System **(OS);**
- eine Quantenzustandsauslesevorrichtung, wobei die Quantenzustandsauslesevorrichtung optional einen Fotodetektor **(PD)** und einen Verstärker **(V)** und/oder eine Vorrichtung zum elektronischen Auslesen der Zustände der Quantenpunkte **(NV1, NV2, NV3)** umfasst.

Dabei kann das Substrat **(D)** derart dotiert sein, dass das Fermi-Niveau im Substrat im Bereich der Quantenpunkte **(NV1, NV2, NV3)** derart verschoben ist, dass die Quantenpunkte **(NV1, NV2, NV3)** elektrisch geladen sind.

Dabei kann der Wellenformgenerator **(WFG)** dazu eingerichtet sein, ein Lichtquellensteuersignal **(S5)** zu erzeugen.

Dabei kann der Lichtquellentreiber **(LDRV)** dazu eingerichtet sein, die Lichtquelle **(LD)** in Abhängigkeit vom Lichtquellensteuersignal **(S5)** mit elektrischer Energie zu versorgen.

Dabei kann die Steuervorrichtung (**µC**) dazu eingerichtet sein, den Wellenformgenerator **(WFG)** zu steuern.

Dabei kann die Lichtquelle **(LD)** dazu eingerichtet sein, mittels des optischen Systems **(OS)** den einen oder die mehreren Quantenpunkte **(NV1, NV2, NV3)** mit Pumpstrahlung **(LB)** einer Pumpstrahlungswellenlänge (λₚₘₚ) zu bestrahlen.

Dabei können der eine oder die mehreren Quantenpunkte **(NV1, NV2, NV3)** dazu ausgelegt sein, Fluoreszenzstrahlung **(FL)** mit einer Fluoreszenzstrahlungswellenlänge (λ_{fl}) bei Bestrahlung mit der Pumpstrahlung **(LB)** zu emittieren.

Dabei kann der Fotodetektor **(PD)** dazu eingerichtet sein, mittels des optischen Systems **(OS)** zumindest einen Teil der Fluoreszenzstrahlung **(FL)** zu erfassen und in ein Empfängerausgangssignal (**S0**) zu wandeln, wobei der Verstärker **(V)** dazu eingerichtet sein kann, das Empfängerausgangssignal zu einem Empfangssignal **(S1)** zu verstärken und zu filtern und/oder wobei die Vorrichtung zum elektronischen Auslesen der Zustände der Quantenpunkte **(NV1, NV2, NV3)** dazu eingerichtet sein kann, ein Empfangssignal **(S1)** zu erzeugen.

Dabei kann die Steuereinrichtung (**µC**) dazu eingerichtet sein, die eine oder die mehreren Vorrichtungen **(mWA, MW/RF-AWFG)** zur Erzeugung eines elektromagnetischen Wellenfeldes am jeweiligen Ort der Quantenpunkte **(NV1, NV2, NV3)** zu steuern.

Dabei kann die Steuereinrichtung (**µC**) dazu eingerichtet sein, durch Ansteuerung der einen oder der mehreren Vorrichtungen **(mWA, MW/RF-AWFG)** zur Erzeugung eines elektromagnetischen Wellenfeldes am jeweiligen Ort der Quantenpunkte **(NV1, NV2, NV3)** und/oder durch Steuerung der Emission der Pumpstrahlung (LB) durch die Lichtquelle (LD) Zustände der Quantenpunkte **(NV1, NV2, NV3)** zu ändern und/oder miteinander zu verkoppeln.

Dabei kann die Steuereinrichtung (**µC**) dazu eingerichtet sein, aus einem oder mehreren Empfangssignalen **(S1)** ein Messwertsignal **(S4)** mit einem oder mehreren Messwerten zu erzeugen, wobei das Messwertsignal **(S4)** von Zuständen der Quantenpunkte **(NV1, NV2, NV3)** abhängt.

Das Quantencomputersystem und/oder der Quantencomputer können optional derart ausgebildet sein, wie in der DE 10 2020 101 784 B3 beschrieben. Dabei kann die technische Lehre im Ganzen oder einzelne Merkmale der DE 10 2020 101 784 B3 Anwendung finden. Die Inhalte der

DE 10 2020 101 784 B3 werden dabei durch Verweis in die Offenbarung des vorliegenden Anmeldungstextes aufgenommen, sofern dies in der jeweiligen Jurisdiktion zulässig ist.

In einem weiteren Aspekt wird eine mobile Datenverarbeitungsvorrichtung bereitgestellt, welche dadurch gekennzeichnet ist, dass die mobile Datenverarbeitungsvorrichtung ein Quantencomputersystem gemäß einem der vorhergehenden Ansprüche aufweist. Diese bietet den Vorteil, dass mittels der mobilen Datenverarbeitungsvorrichtung NP-vollständige Probleme gelöst werden können. Entsprechend können durch die mobile Datenverarbeitungsvorrichtung flexibel und ortsungebunden und optional auch während der Bewegung der Datenverarbeitungsvorrichtung NP-vollständige Probleme gelöst werden. Die Datenverarbeitungsvorrichtung kann dabei in verschiedenen Formen ausgebildet sein und/oder in mobilen Vorrichtungen unterschiedlichster Arten integriert sein. Dies ermöglicht somit die Verwendung eines Quantencomputers in mobilen Vorrichtungen.

Die mobile Datenverarbeitungsvorrichtung kann optional als eines der folgenden Geräte ausgebildet sein:
- ein tragbares Quantencomputersystem;
- ein mobiles Quantencomputersystem;
- ein Smartphone;
- ein Tablet-Computer;
- ein Personal Computer;
- ein Laptop-Computer;
- ein Grafikbeschleuniger; und
- eine Spielkonsole.

Dies bietet den Vorteil, dass durch die einen Quantencomputer aufweisenden mobile Datenverarbeitungsvorrichtung diese dazu befähigt werden kann, NP-vollständige Probleme zu lösen und dennoch die Verlegbarkeit beizubehalten.

In einem weiteren Aspekt wird ein Fahrzeug bereitgestellt, welches dadurch gekennzeichnet ist, dass das Fahrzeug ein Quantencomputersystem gemäß einem der vorhergehenden Ansprüche aufweist. Dies bietet den Vorteil, dass das Fahrzeug dazu befähigt ist, NP-vollständige Probleme zu lösen.

Das Fahrzeug kann optional als eines der folgenden Fahrzeuge ausgebildet sein:
- ein Kraftfahrzeug;
- ein Landfahrzeug;
- ein schienengebundenes Landfahrzeug;
- ein Personenkraftwagen;
- ein Lastkraftwagen;
- ein Bus;
- ein Motorrad;
- ein taktisches Fahrzeug;
- ein Fahrrad;
- ein Elektrofahrzeug;
- ein unbemanntes Fahrzeug;
- ein Wasserfahrzeug;
- ein Schiff;
- ein Boot;
- ein unbemanntes Wasserfahrzeug;
- ein Unterwasserfahrzeug;
- ein Schwimmkörper;
- ein Unterwasserschwimmkörper;
- eine Boje;
- ein Torpedo;
- ein Luftfahrzeug;
- ein Flugzeug;
- ein Hubschrauber;
- eine Rakete;
- ein unbemanntes Luftfahrzeug;
- eine Drohne;
- eine Roboterdrohne;
- ein Ballon;
- ein Roboter;
- ein Raumflugkörper;
- ein Satellit; und
- eine Raumstation.

Dadurch werden vielfältige Anwendungsbereiche von Computern durch die Befähigung zur Lösung NP-vollständiger Probleme bereichert.

In einem weiteren Aspekt wird ein Waffensystem bereitgestellt, welches dadurch gekennzeichnet ist, dass das Waffensystem verlegbar ist und ein Quantencomputersystem gemäß einem der vorhergehenden Ansprüche aufweist. Dies bietet den Vorteil, dass das Waffensystem dazu befähigt wird, NP-vollständige Probleme zu lösen, wodurch das Waffensystem anderen Waffensystemen überlegen sein kann, welche nicht dazu in der Lage sind, NP-vollständige Probleme zu lösen.

Das Waffensystem kann optional als eines der folgenden Waffensysteme ausgebildet sein oder eines oder mehrere der folgenden Elemente aufweisen:
- ein Geschoss;
- ein Gefechtskopf;
- eine Landmine;
- eine Rakete;
- ein Torpedo;
- eine Seemine;
- ein Panzer;
- ein Artilleriegeschütz;
- ein Feuerleitfahrzeug;
- ein Kampfflugzeug;
- ein Kampfhubschrauber;
- ein taktisches Fahrzeug;
- ein militärisches Wasserfahrzeug;
- ein Satellit; und
- ein Ballon.

Durch die Einbringung eines verlegbaren Quantencomputers in ein solches Waffensystem können dessen Fähigkeiten erweitert werden, ohne jedoch die Mobilität des Waffensystems einzuschränken.

Das Waffensystem kann ferner ein Feuerleitsystem aufweisen, wobei das Feuerleitsystem dazu eingerichtet ist, eine Zielermittlung und/oder Zielidentifikation und/oder eine Zielklassifizierung und/oder eine Zielzuweisung und/oder Auswahl von Munition und/oder ein Bereitstellen eines Vorschlags zur Zielbekämpfung unter Verwendung des Quantencomputersystems durchzuführen. Dies bietet den Vorteil, dass sich dieses Quantencomputersystem, zur Durchführung der zuvor genannten Vorgänge, der Lösung NP-vollständiger Probleme bedienen kann. Dadurch kann etwa das Feuerleitsystem zu besseren Lösungen und/oder in kürzerer Zeit zu Lösungen kommen, als dies ohne die Verwendung eines Quantencomputers möglich wäre.

Im Falle eines Fahrzeugs für militärische Zwecke oder Waffensystems kann das Fahrzeug bzw. das Waffensystem mit Hilfe des Quantencomputers QC optional eine zeitliche Reihenfolge oder Priorisierung der Bekämpfung mehrerer Ziele ermitteln. Im Falle eines Fahrzeugs für militärische Zwecke oder Waffensystems kann das Fahrzeug bzw. das Waffensystem mit Hilfe des Quantencomputers QC optional einen Zeitpunkt zur Bekämpfung eines Ziels ermitteln. Im Falle eines Fahrzeugs für militärische Zwecke oder Waffensystems kann das Fahrzeug bzw. das Waffensystem mit Hilfe des Quantencomputers QC einen Waffentyp und/oder eine Munition zur Bekämpfung eines Ziels ermitteln. Die hier vorgelegte Schrift schlägt u. a. als eine mögliche Ausgestaltung ein Fahrzeug vor, das mit Hilfe des Quantencomputers QC eine Route für das Fahrzeug ermittelt. Im Falle eines Fahrzeugs für militärische Zwecke oder Waffensystems kann das Fahrzeug bzw. das Waffensystem mit Hilfe des Quantencomputers QC eine Route und/oder eine Trajektorie für eine Waffe und/oder einen Gefechtskopf und/oder ein Geschoss und/oder eine Munition und/oder ein anderes Fahrzeug ermitteln.

In einem weiteren Aspekt wird eine Verwendung einer verlegbaren Energieversorgungseinrichtung zur zumindest teilweisen Versorgung eines verlegbaren Quantencomputers mit elektrischer Energie bereitgestellt. Die Verwendung ist dadurch gekennzeichnet, dass die verlegbare Energieversorgungeinrichtung eine erste Spannungsregelstufe und eine zweite Spannungsregelstufe aufweist und dazu eingerichtet ist, eine von einer Energiequelle bereitgestellte elektrische Energie durch eine mehrstufige Spannungsregelung mittels der ersten Spannungsregelstufe und der zweiten Spannungsstufe zur zumindest teilweisen Versorgung des Quantencomputers auf einen vorbestimmten Spannungswert zu regeln.

Die für das Quantencomputersystem offenbarten Merkmale und Vorteile sind dabei auch für diese Verwendung als offenbart anzusehen.

In einem weiteren Aspekt wird ein Verfahren zum Betrieb eines verlegbaren Quantencomputers bereitgestellt, umfassend ein Bereitstellen einer verlegbaren Energiereserve als Energiequelle für elektrische Energie. Das Verfahren ist dadurch gekennzeichnet, dass das Verfahren ferner ein Bereitstellen einer verlegbaren Energieversorgungseinrichtung mit einer ersten Spannungsregelstufe und einer zweiten Spannungsregelstufe umfasst, sowie ein Verbinden der Energiereserve mit der Energieversorgungseinrichtung, und ein Bereitstellen der elektrischen Energie aus der Energiereserve für die Energieversorgungseinrichtung. Außerdem umfasst das Verfahren ein Regeln einer Spannung der bereitgestellten elektrischen Energie auf einen ersten Spannungswert mittels der ersten Spannungsregelstufe der Energieversorgungseinrichtung, ein Regeln der durch die erste Spannungsregelstufe mit dem ersten Spannungswert bereitgestellten elektrischen Energie auf einen zweiten Spannungswert mittels einer zweiten Spannungsregelstufe, sowie ein Betreiben des Quantencomputers mit der durch die zweite Spannungsregelstufe mit dem zweiten Spannungswert bereitgestellten elektrischen Energie und Ausführen einer Quantenoperation und/oder eines Quantencomputerprogrammprodukts mittels des Quantencomputers.

Die Merkmale und Vorteile, welche für ein Quantencomputersystem mit einer Energieversorgungseinrichtung offenbart sind, sind auch für das Verfahren zum Betrieb eines verlegbaren Quantencomputers als offenbart anzusehen und umgekehrt.

In einem weiteren Aspekt wird ein Verfahren zum Betrieb eines verlegbaren Quantencomputers bereitgestellt, welches dadurch gekennzeichnet ist, dass das Verfahren ein Ermitteln einer Änderung eines vorherrschenden Magnetfelds mittels eines Magnetfeldsensorsystems, und ein zumindest teilweises Kompensieren der Änderung des Magnetfelds am Ort des Quantencomputers mittels eines Magnetfeldgenerators umfasst.

Das Verfahren kann ferner ein Bestimmen einer Positionsänderung und/oder Orientierungsänderung des Quantencomputers relativ zur Erde umfassen, sowie ein Generieren einer Vorhersage für eine zu erwartende Änderung des zu kompensierenden Erdmagnetfelds am Ort des Quantencomputers aufgrund der Positionsänderung und/oder Orientierungsänderung. Dabei kann das zumindest teilweise Kompensieren der Änderung des Magnetfelds am Ort des Quantencomputers unter Berücksichtigung der generierten Vorhersage erfolgen.

Das Generieren der Vorhersage kann unter Verwendung einer kartografischen Information über das Erdmagnetfeld erfolgen.

Die Merkmale und Vorteile, welche für ein Quantencomputersystem mit einem Magnetfeldsensorsystem und einem Magnetfeldgenerator offenbart sind, sind auch für das Verfahren zum Betrieb eines verlegbaren Quantencomputers als offenbart anzusehen und umgekehrt.

In einem weiteren Aspekt wird eine Verwendung einer kartografischen Information über das Erdmagnetfeld zum Bestimmen eines zu kompensierenden Magnetfelds am Ort eines verlegbaren Quantencomputers und/oder zum Generieren einer Vorhersage für eine zu erwartende Änderung des zu kompensierenden Erdmagnetfelds am Ort des Quantencomputers bereitgestellt.

Die für das Quantencomputersystem offenbarten Merkmale und Vorteile sind dabei auch für diese Verwendung als offenbart anzusehen.

In einem weiteren Aspekt wird ein Verfahren zum Betrieb eines verlegbaren Quantencomputers mit einem Substrat, und einem oder mehreren im Substrat angeordneten Quantenpunkten bereitgestellt. Das Verfahren umfasst ein Bereitstellen einer verlegbaren Kühlvorrichtung, sowie ein Senken einer Temperatur des zumindest einen Quantenpunkts im Substrat mittels der verlegbaren Kühlvorrichtung derart, dass eine Anzahl der Quantenpunkte, welche dem Quantencomputer für das einer Quantenoperation und/odereines Quantencomputerprogramms zur Verfügung stehen, erhöht wird.

Die für das Quantencomputersystem offenbarten Merkmale und Vorteile sind dabei auch für dieses Verfahren als offenbart anzusehen.

Die verlegbare Kühlvorrichtung kann dabei optional zumindest ein Closed Loop Helium Gas Cooling System aufweisen oder als solches ausgebildet sein.

In einem weiteren Aspekt wird die Verwendung eines Closed Loop Helium Gas Cooling Systems zum Senken einer Temperatur zumindest eines Quantenpunkts in einem Substrat eines verlegbaren Quantencomputers bereitgestellt.

Die für das Quantencomputersystem offenbarten Merkmale und Vorteile sind dabei auch für diese Verwendung als offenbart anzusehen.

In einem weiteren Aspekt wird ein Verfahren zum Betrieb eines verlegbaren Quantencomputers bereitgestellt. Das Verfahren umfasst ein Ermitteln einer Beschleunigung des Quantencomputers, sowie zumindest teilweise ein Kompensieren der Beschleunigung des Quantencomputers und/oder Abschwächen einer Wirkung der Beschleunigung auf den Quantencomputer.

Das Verfahren kann dabei ferner ein Generieren einer Vorhersage bezüglich einer zu erwartenden Beschleunigung und/oder Änderung einer Beschleunigung des Quantencomputers umfassen, wobei das zumindest teilweise Kompensieren der Beschleunigung des Quantencomputers unter Verwendung der generierten Vorhersage erfolgen kann.

Die für das Quantencomputersystem offenbarten Merkmale und Vorteile sind dabei auch für dieses Verfahren als offenbart anzusehen.

In einem weiteren Aspekt wird ein Verfahren zur Steuerung eines verlegbaren Waffensystems mit einem Quantencomputer breitgestellt. Das Verfahren umfasst ein Erfassen von Umfelddaten des Waffensystems mittels eines Sensors. Zudem umfasst das Verfahren ein Auswerten der Umfelddaten und Identifizieren eines oder mehrerer Objekte im Umfeld des Waffensystems mittels des Quantencomputers, sowie ein Klassifizieren des einen oder der mehreren identifizierten Objekte hinsichtlich einer Gefährlichkeit und/oder Verwundbarkeit und/oder strategischen Wirkung des einen oder der mehreren Objekte mittels des Quantencomputers. Darüber hinaus umfasst das Verfahren ein Festlegen eines oder mehrerer der folgenden Parameter: eine zu verwendende Waffe des Waffensystems, eine zu verwendende Munition des Waffensystems, eine zu verwendende Konfiguration des Waffensystems, eine Auswahl eines oder mehrerer zu bekämpfender Ziele aus dem einen oder den mehreren klassifizierten Objekten, und eine Reihenfolge einer geplanten Bekämpfung mehrerer zu bekämpfender Ziele.

Das Klassifizieren des einen oder der mehreren identifizierten Objekte mittels des Quantencomputers kann dabei unter Verwendung von künstlicher Intelligenz erfolgen.

In einem weiteren Aspekt wird ein Verfahren zum Betrieb eines verlegbaren Quantencomputers bereitgestellt. Das Verfahren umfasst ein Ermitteln einer Beschleunigung des Quantencomputers, und ein zumindest teilweises Kompensieren der Beschleunigung des Quantencomputers und/oder Abschwächen einer Wirkung der Beschleunigung auf den Quantencomputer.

Dies bietet den Vorteil, dass etwaige unerwünschte Einwirkungen von Drehbewegungen und/oder Beschleunigungen auf den Quantencomputer vermieden oder reduziert werden können und dadurch eine Zuverlässigkeit des Betriebs des Quantencomputers verbessert und/oder eine Genauigkeit des Quantencomputers erhöht werden kann. Dies kann optional für solche Quantencomputer vorteilhaft sein, welche verschiedene Arten von Quantenbits verwenden, wobei die Quantenbits auf verschiedenartige Weise durch Drehbewegungen und/oder Beschleunigungen beeinflussbar sind. Um dennoch ein zuverlässiges Zusammenwirken der Quantenbits sicherzustellen, können durch das offenbarte Verfahren unerwünschte Einwirkungen auf die Quantenbits zumidnest teilweise reduziert oder vermieden werden.

Optional kann das Verfahren ferner ein Generieren einer Vorhersage bezüglich einer zu erwartenden Beschleunigung und/oder Änderung einer Beschleunigung des Quantencomputers umfassen. Dabei kann das zumindest teilweise Kompensieren der Beschleunigung des Quantencomputers unter Verwendung der generierten Vorhersage erfolgen. Dies kann auf besonders zuverlässige Weise den Betrieb des Quantencomputers stabiliseren. Optional kann dies besonders vorteilhaft für einen Betrieb des Quantencomputers während einer Bewegung des Quantencomputers ein, bei welcher Drehbewegungen des Quantencomputers nicht ausgeschlossen werden können.

In einem weiteren Aspekt wird die Verwendung eines Quantencomputers zur Messung einer Rotationsbewegung bereitgestellt. Dies kann den Vorteil bieten, dass Rotationen und/oder Drehungen und/oder Änderungen der räumlichen Orientation bzw. Ausrichtung besonders genau ermittelt werden können. Dabei kann ein Ermitteln einer Einwirkgung der Rotationsbewegung und/oder der Ausrichtung des Quantencomputers auf den Betrieb des Quantencomputers, insbesondere auf zumindest manche Quantenbits des Quantencomputers erfolgen, um darauf basierend eine ursächliche Änderung der räumlichen Orientierung des Quantencomputers zu bestimmen. Dabei kann sich die räumliche Orientierung von einer oder mehreren Komponenten des Quantencomputersystems zusammen mit der Ausrichtung des Quantencomputers ändern.

In einem weiteren Aspekt wird eine Verwendung eines Quantencomputers als Gyrometer bereitgestellt. Dies bietet den Vorteil, dass ein Gyrometer mit besonders großer Genauigkeit bereitgestellt werden kann.

In einem weiteren Aspekt wird ein Verfahren zur Messung einer Rotationsbewegung bereitgestellt. Das Verfahren umfasst dabei ein Bereitstellen eines Quantencomputers, welcher der Rotationsbewegung ausgesetzt ist. Zudem umfasst das Verfahren ein Ermitteln einer Änderung eines oder mehrerer der folgenden Parameter:
+ einer Kopplungsgrundfrequenz und/oder einer Kopplungsgrundphasenlage für eine Kopplung zwischen Paaren aus koppelbaren Quantenbits (QUB1, QUB2) untereinander;
+ einer Kopplungsgrundfrequenz und/oder einer Kopplungsgrundphasenlage für eine Kopplung zwischen koppelbaren Paaren aus je einem Quantenbit (QUB) und einem Kernquantenbit (CQUB);
+ einer Kopplungsgrundfrequenz und/oder einer Kopplungsgrundphasenlage für eine Kopplung zwischen Paaren aus koppelbaren jeweils zwei Kernquantenbits (CQUB1, CQUB2) untereinander.

Außerdem umfasst das Verfahren ein Bestimmen der Rotationsbewegung anhand der ermittelten Änderung des einen oder der mehreren Parameter.

Dies bietet den Vorteil, dass eine besonders genaue Messung von Rotationsbewegungen und/oder von Änderungen der räumlichen Ausrichtung ermöglicht wird. Die besonders große Genauigkeit kann insbesondere dadurch erreicht werden, dass für das Bestimmen der Rotationsbewegung einer oder mehrere Quanteneffekte verwendet werden.

Das Bestimmen der Rotationsbewegung kann darauf basieren, dass die ermittelte Änderung des einen oder der mehreren Parameter proportional zur Ausprägung der Rotationsbewegung ist. Die Ausprägung der Rotationsbewegung kann dabei eine qualitative und/oder quantitative Ausprägung sein. Eine qualitative Ausprügung kann etwa eine Rotationsrichtung der Rotationsbewegung sein. Eine quantitative Ausprägung kann etwa eine Größe eines Drehwinkels der Rotationsbewegung und/oder eine Winkelgeschwindigkeit und/oder eine Winkelbeschleunigung der Rotationsbewegung sein.

In einem weiteren Aspekt wird ein Verfahren zum Betrieb eines verlegbaren Quantencomputers bereitgestellt. Das Verfahren umfasst ein Ermitteln einer Rotationsbewegung und/oder einer Ausrichtung des Quantencomputers, sowie ein Kompensieren zumindest eines Teils einer Auswirkung der ermitelten Rotationsbewegung und/oder Ausrichtung auf den Quantencomputer. Dies kann den Vorteil bieten, dass unerwünschte Einwirkungen auf den Quantencomputer durch eine Rotationsbewegung und/oder eine Änderung der Ausrichtung des Quantencomputers vermieden oder reduziert werden können. Dadurch kann ein Betrieb des Quantencomputers auch dann ermöglicht oder erleichtert werden, wenn der Quantencomputer in Bewegung ist und Rotationsbewegungen und/oder eine Änderung der Ausrichtung des Quantencomputersystems, welches den Quantencomputer aufweist, nicht ausgeschlossen werden können. Dies kann optoinal vorteilhaft sein, wenn manche oder alle Quantenpunkte bzw. Quantenbits des Quantencomputers durch eine Änderung der Ausrichtung und/oder eine Rotationsbewegung beeinflussbar sind und/oder wenn eine Ansteuerung der Quantenbits bzw. Quantenpunkte die räumlichen Ausrichtung der Quantenpunkte bzw. Quantenbits zu berücksichtigen hat.

Das zumindest teilweise Kompensieren der ermitelten Rotationsbewegung und/oder Ausrichtung kann insbesondere während eines Betrieb des Quantencomputers erfolgt. Optional kann das zumindest teilweise Kompensieren der ermitelten Rotationsbewegung und/oder Ausrichtung insbesondere erfolgen, während der Quantencomputer eine Quantenoperation durchführt und/oder ein Quantencomputerprogramm ausführt und/oder einen Quantenpunkt ausliest und/oder manipuliert.

Das Kompensieren der ermitelten Rotationsbewegung und/oder Ausrichtung auf den Quantencomputer kann ein Anpassen eines oder mehrerer der folgenden Parameter in Abhängigkeit von der ermittelten Rotationsbewegung umfassen:
+ einer Kopplungsgrundfrequenz und/oder einer Kopplungsgrundphasenlage für eine Kopplung zwischen Paaren aus koppelbaren Quantenbits (QUB1, QUB2) untereinander;
+ einer Kopplungsgrundfrequenz und/oder einer Kopplungsgrundphasenlage für eine Kopplung zwischen koppelbaren Paaren aus je einem Quantenbit (QUB) und einem Kernquantenbit (CQUB);
+ einer Kopplungsgrundfrequenz und/oder einer Kopplungsgrundphasenlage für eine Kopplung zwischen Paaren aus koppelbaren jeweils zwei Kernquantenbits (CQUB1, CQUB2) untereinander.

Dies bietet den Vorteil, dass durch derartige Anpassungen ein zuverlässiger Betrieb des Quantencomputers auch dann beibehalten werden kann, wenn sich die räumliche Ausrichtung des Quantencomputers ändert. Außerdem kann dies den Vorteil bieten, dass eine mechanische Kompensation von Rotationsbewegungen und/oder von Änderungen der räumlichen Ausrichtung des Quantencomputers entbehrlich sein kann. Dadurch können die technische Komplexität des Quantencomputersystems verringert und/oder die Herstellungskosten und/oder der Platzbedarf geringgehalten werden. Dies kann eine Miniaturisierung und/oder eine Integration des Quantencomputersystems in mobile Vorrichtungen begünstigen.

In einem weiterem Aspekt wird ein Verfahren zum Betrieb eines verlegbaren Quantencomputers bereitgestellt. Das Verfahren umfasst ein dehbares Lagern des Quantencomputers in einer Rotationsentkopplungsvorrichtung. Außerdem umfasst das Verfahren ein Vermeiden oder Reduzieren einer Auswirkung einer Rotationsbewegung des Quantencomputers auf den Quantencomputer durch ein ein Entkoppeln des Quantencomputers von seiner Umgebung mittels der Rotationsentkopplungsvorrichtung. Dies kann ein Auftreten von Änderungen der räumlichen Ausrichtung und/oder von Rotationsbewegungen des Quantencomputers ermöglichen und dadurch das Auftreten von unerwünschten Einwirkungen auf den Quantencomputer vermeiden oder reduzieren. Die Rotationsentkopplungsvorrichtung kann optional eine kardanische Aufhängung aufweisen.

Die für das Quantencomputersystem offenbarten Merkmale und Vorteile sind dabei auch für dieses Verfahren als offenbart anzusehen.

Optional ist der vorgeschlagene verlegbare Quantencomputer **QC** zusammen mit allen notwendigen Mitteln zu seinem Betrieb Teil des verlegbaren Quantencomputersystem **QUSYS,** also z. B. des Smartphones oder des tragbaren Quantencomputersystems **QUSYS** oder des Fahrzeugs oder des verlegbaren Waffensystems. Die Mittel zum Betrieb des verlegbaren Quantencomputers **QC** sind somit optional ebenfalls verlegbar ausgebildet. Das vorgeschlagene verlegbare Quantencomputersystem **QUSYS** umfasst als verlegbare Mittel für dessen Betrieb und insbesondere optional eine oder mehrere verlegbare Energieversorgungen **EV** und/oder einen oder mehrere verlegbare Quantencomputer **QC.** Im Sinne dieser Schrift sind diese Mittel zum Betrieb des verlegbaren Quantencomputers **QC** optional ebenfalls Teil des Smartphones oder des Kleidungsstücks oder des tragbaren Quantencomputersystem **QUSYS** oder des Fahrzeugs oder des verlegbaren Waffensystems. Dabei ist für die Auslegung der Ansprüche unerheblich, ob der Betrieb des verlegbaren Quantencomputers **QC** trotz des Vorhandenseins aller Mittel zum Betrieb des verlegbaren Quantencomputers **QC** als Teil des verlegbaren Quantencomputers **QC** an Mittel und/oder Kommandos außerhalb des Quantencomputers **QC** gekoppelt ist. Der verlegbare Quantencomputer **QC** kann jedoch ohne Mittel und/oder Kommandos von außerhalb des Quantencomputersystems funktionstüchtig sein. Beispielsweise soll ein verlegbares Quantencomputersystem **QUSYS,** das aufgrund der Programmierung der zentralen Steuereinrichtung **ZSE** und/oder der Programmierung einer Steuervorrichtung **µC** eines Quantencomputers **QC** des Quantencomputersystems **QUSYS** auf ein externes Startkommando wartet, von den Ansprüchen immer noch umfasst sein.

Die mobile verlegbare Energieversorgung **EV** umfasst optional eine oder mehrere verlegbare Ladevorrichtungen **LDV** mit einer oder mehreren Energieversorgungen **PWR** der Ladevorrichtungen **LDV,** eine oder mehrere verlegbare Trennvorrichtungen **TS,** eine oder mehrere verlegbare Energiereserven **BENG** und eine oder mehrere verlegbare Energieaufbereitungsvorrichtungen **SRG.** Die mobile Energieversorgung **EV** umfasst optional eine Energieaufbereitungsvorrichtung **SRG,** insbesondere einen Spannungswandler oder einen Spannungsregler oder einen Stromregler, die verhindert, dass Änderungen des Energieinhalts der Energiereserve **BENG** der Energieversorgung **EV,** beispielsweise des Ladezustands eines Akkumulators als Energiereserve **BENG** der Energieversorgung **EV,** sich auf den verlegbaren Quantencomputer **QC** und/oder das Quantencomputersystem **QUSYS** auswirkt. Dabei versorgen die die mobile Energieversorgung **EV** die Energieaufbereitungsvorrichtung **SRG** mit Energie und die Energieaufbereitungsvorrichtung **SRG** z. B. den verlegbaren Quantencomputer **QC** und ggf. weitere Teile des Quantencomputersystems **QUSYS** mit elektrischer Energie. In dem Fall versorgt also die Energieversorgung **EV** z. B. den Quantencomputer **QC** nur indirekt über die Energieaufbereitungsvorrichtung **SRG** mit elektrischer Energie.

Optional ist der verlegbare Quantencomputer **QC** vorschlagsgemäß dazu eingerichtet und vorgesehen, mit einer verringerten ersten Anzahl an Quantenpunkten **NV1, NV2, NV3** auch bei Raumtemperatur arbeiten zu können. Als Raumtemperatur kann beispielsweise eine Temperatur von 20° C angenommen werden. Raumtemperatur als Betriebstemperatur der Quantenpunkte **NV1, NV2, NV3** führt zu einer Verbreiterung der Resonanzen im Resonanzspektrum, sodass diese sich überlagern. Optional weist der vorgeschlagene verlegbare Quantencomputer **QC** daher eine verlegbare Kühlvorrichtung **KV** auf, die zusammen mit dem verlegbaren Quantencomputer **QC** verlegbar ist. Die betreffende verlegbare Kühlvorrichtung **KV** ist optional dazu geeignet und/oder ausgelegt, die Temperatur der Quantenpunkte **NV1, NV2, NV3** und/oder Kernquantenpunkte **CI1₁, CI1₂, CI1₃, CI2₁, CI2₂, CI2₃, CI3₁, CI3₂, CI3₃** zu senken. Die Absenkung der Betriebstemperatur der Quantenpunkte **NV1, NV2, NV3** führt zu einer Verschmälerung der Resonanzen im Resonanzspektrum, sodass diese sich im Frequenzspektrum in geringerem Maße oder nicht überlagern. Eine solche Kühlung mittels einer Kühlvorrichtung **KV** senkt optional die Temperatur der Quantenpunkte **NV1, NV2, NV3** und/oder Kernquantenpunkte **CI1₁, CI1₂, CI1₃, CI2₁, CI2₂, CI2₃, CI3₁, CI3₂, CI3₃** so weit ab, dass der Quantencomputer **QC** mit einer gegenüber der ersten Anzahl an Quantenpunkten **NV1, NV2, NV3** erhöhten zweiten Anzahl an Quantenpunkten **NV1, NV2, NV3** arbeiten kann.

Optional umfasst das verlegbare Quantencomputersystem als verlegbare Kühlvorrichtung **KV** ein Closed Loop Helium Gas Cooling System **HeCLCS,** das auch als Closed Cycle Cryocoolers bezeichnet wird. Wir verweisen hier beispielsweise auf https://en.wikipedia.org/wiki/Cryocooler.

Eine weitere Ausprägung des Vorschlags betrifft ein verlegbares Quantencomputersystem, das eine zweite verlegbare Energieversorgung aufweist. Die zweite verlegbare Energieversorgung kann mit der ersten verlegbaren Energieversorgung (Bat) ganz oder teilweise identisch sein. Optional versorgt diese zweite verlegbare Energieversorgung **BENG** die verlegbare Kühlvorrichtung **KV,** mit Energie. Dies hat den Vorteil, dass die erste Energieversorgung nicht durch transiente Störungen der Elektromotoren der verlegbaren Kühlvorrichtung **KV** gestört wird.

Eine weitere optionale Ausführungsform betrifft einen verlegbaren Quantencomputer **QC** zur Verwendung in einer mobilen Vorrichtung. Optional ist eine Verwendung in einem Smartphone oder einem tragbaren Quantencomputersystem **QUSYS** oder in einem Fahrzeug **Kfz** oder in einem Waffensystem. Das bedeutet, dass die hier vorgelegte Schrift ein verlegbares Waffensystem mit einem verlegbaren Quantencomputer **QC** vorschlägt, der Teil des verlegbaren Waffensystems ist. Optional ist die Verwendung des verlegbaren Quantencomputers **QC** als Teil des Feuerleitsystems des Waffensystems oder des Navigationssystems **GPS, NAV** des Waffensystems ausgestaltet. Optional verwendet das Waffensystem den verlegbaren Quantencomputer **QC** zu Lösung NP-vollständiger Probleme, wie beispielsweise aber nicht nur die Identifikation von Zielen, die Klassifikation von Zielen, die Zuordnung von Zielen zu bekannten feindlichen Objekten wie Flugzeug und/oder Raketentypen, Fahrzeugtypen, Schiffstypen, Flugkörpertypen, Schwimmkörpertypen, Typen von Unterwasserfahrzeugen, Typen von Unterwasserobjekten, Typen von Raumfahrzeugen, Typen von Satelliten etc. Des Weiteren können die Auswahl der Reihenfolge der Zielbekämpfung und/oder die Auswahl der Waffenmittel und/oder die Auswahl der Munition zur Bekämpfung der Ziele optional zu den Problemen gehören, die das Waffensystem mit Hilfe des verlegbaren Quantencomputers **QC** löst. Außerdem kann das verlegbare Waffensystem mit Hilfe des verlegbaren Quantencomputers **QC** die Route bzw. die Trajektorie eines jeweiligen Geschosses oder Gefechtskopfes oder Waffenträgers zum Ziel mit Hilfe des verlegbaren Quantencomputers **QC** festlegen und/oder modifizieren und/oder überwachen.

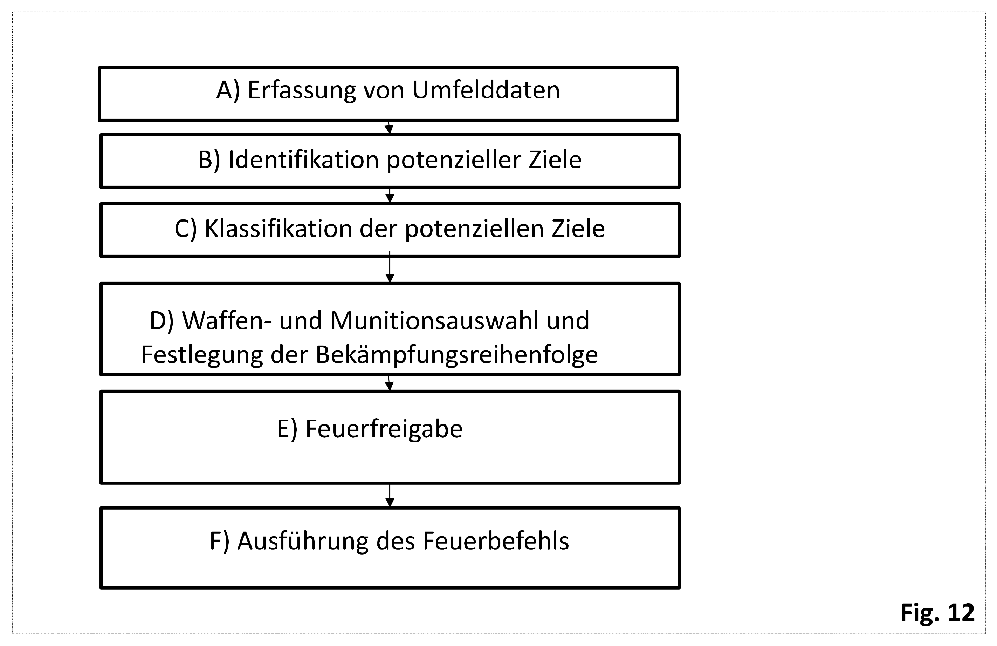

Ein solches Verfahren kann mit der Erfassung von Umfelddaten durch das Quantencomputersystem **QUSYS** in einem Schritt A) beginnen. Die Erfassung der Umfelddaten erfolgt optional mittels geeigneter Sensoren, die Teil des Quantencomputersystems **QUSYS** sein können und/oder die mit diesem Quantencomputersystem **QUSYS** über Datenverbindungen verbunden sind und Umfelddaten an das Quantencomputersystem **QUSYS** übermitteln. In einem Schritt B) kann das Quantencomputersystem **QUSYS** Objekte im Umfeld des Quantencomputersystems **QUSYS** identifizieren, wobei das Umfeld auch entfernt vom Quantencomputersystem **QUSYS** sein kann. Dabei klassifiziert in einem Schritt C) das Quantencomputersystem **QUSYS** optional die identifizierten Objekte im Umfeld des Quantencomputersystems **QUSYS.** Optional klassifiziert das Quantencomputersystem **QUSYS** in dem Schritt C) die Objekte nach Gefährlichkeit und/oder Verwundbarkeit und/oder strategischer Wirkung, um eine Maximierung einer Waffenwirkung zu erzielen. Optional erfolgt diese Klassifikation in Schritt C) mittels eines neuronalen Netzwerkmodells, das das Quantencomputersystem **QUSYS** optional ausführt. Optional nutzt das Quantencomputersystem **QUSYS** für diesen Schritt C) eine oder mehr Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS,** um die Klassifikation der Objekte durchzuführen. In einem Schritt D) kann das Quantencomputersystem **QUSYS** die Waffen und/oder die Munition und/oder die Konfiguration und/oder die Reihenfolge der angegriffenen Objekte und/oder die angegriffenen und/oder die nicht angegriffenen Objekte festlegen. Optional erfolgt diese Festlegung in Schritt D) mittels eines neuronalen Netzwerkmodells, das das Quantencomputersystem **QUSYS** optional ausführt. Optional nutzt das Quantencomputersystem **QUSYS** in dem Schritt D) eine oder mehr Quantenoperationen zur Manipulation des Quantenzustands eines oder mehrerer Quantenpunkte **NV1, NV2, NV3** eines oder mehrerer Quantencomputer **QC1** bis **QC16** des Quantencomputersystems **QUSYS,** um diese Festlegungen durchzuführen. In einem Schritt E) schlägt das Quantencomputersystem **QUSYS** optional eins oder mehrere der festgelegten Angriffsszenarien einem Bediener vor, beispielsweise einem oder mehreren Piloten und/oder einem oder mehreren Feuerleitoffizieren, oder dergleichen mehr. Sofern diese den Feuerbefehl geben, kann beispielsweise das Quantencomputersystem **QUSYS** das freigegebene Angriffsszenario in einem Schritt F) umsetzen. Dies ist in Figur 12 dargestellt.

Optional weist das verlegbare Quantencomputersystem eine Abschirmung **AS** auf. Optional schirmt die Abschirmung **AS** die Quantenpunkte **NV1, NV2, NV3,** also beispielsweise die NV-Zentren, gegen elektromagnetische Felder und/oder elektromagnetische Wellen ab.

Das verlegbare Quantencomputersystem **QC** umfasst optional ein optisches System, das die elektromagnetische Strahlung der Lichtquelle **LD** auf die Quantenpunkte **NV1, NV2, NV3,** also beispielsweise die paramagnetischen Zentren bzw. die NV-Zentren, lenkt. Das optische System **OS** umfasst optional ein konfokales Mikroskop.

Optional umfasst das optische System **OS** eine erste Kamera **CM1,** die dazu ausgelegt ist, die Fluoreszenzstrahlung **FL** der paramagnetischen Zentren **NV1, NV2, NV3** und/oder von Clustern solcher paramagnetischer Zentren, also beispielsweise von NV-Zentren und/oder Clustern von NV-Zentren, zu erfassen. Andere fluoreszierende Defektzentren mit anderen Fluoreszenzwellenlängen sind denkbar und können optional ebenfalls durch die erste Kamera oder eine oder mehrere weitere Kameras erfasst werden. Solche anderen fluoreszierenden Defektzentren mit anderen Fluoreszenzwellenlängen können somit eine Fluoreszenzstrahlung mit einer Fluoreszenzwellenlänge aufweisen, die von der Fluoreszenzwellenlänge λ_{fl} der Quantenpunkte **NV1, NV2, NV3** verschieden ist, und daher beispielsweise mittels eines dichroitischen Spiegels an Stelle des halbdurchlässigen Spiegels **STM** oder mittels eines optischen Filters von der Pumpstrahlung **LB** und der Fluoreszenzstrahlung **FL** der Quantenpunkte **NV1, NV2, NV3** optisch abgetrennt werden kann. Optional ist das Substrat **D** auf einem Positioniertisch gelagert. Der Positioniertisch umfasst optional eine translatorische Positioniervorrichtung **XT** in X-Richtung und eine translatorische Positioniervorrichtung **YT** in Y-Richtung, die die Steuervorrichtung **µC** des Quantencomputers **QC** über den Steuerdatenbus **SDB** optional steuert. Optional erfasst die erste Kamera **CM1** die Position des Substrats **D** relativ zum optischen System **OS** und damit die Position der Quantenpunkte **NV1, NV2, NV3** im Substrat **D.** Damit erfasst die erste Kamera **CM1** die Position der paramagnetischen Zentren, also beispielsweise der NV-Zentren, relativ zum optischen System **OS.** Verlagert sich das Substrat **D** beispielsweise durch mechanische Schwingungen oder andere Störungen relativ zum optischen System **OS,** so kann ein Bildverarbeitungssystem des verlegbaren Quantencomputers **QC** diese mechanische Verlagerung beispielsweise durch Auswertung der Position fluoreszierender paramagnetischer Defektzentren erfassen. Das Bildverarbeitungssystem erfasst dabei optional mittels der ersten Kamera CM1 die Fluoreszenzmuster der Defektzentren und vergleicht deren Position auf dem Bild mit Sollpositionen. Das Bildverarbeitungssystem ermittelt optional einen Verschiebungsvektor und Repositioniert das Substrat **D** mittels des Positioniertisches **XT, YT** gegenüber dem optischen System **OS** in Abhängigkeit von dem ermittelten Verschiebungsvektor. Diese Repositionierung führt die Bildverarbeitungsvorrichtung optional in der Art aus, dass die Position des Quantenpunkts, beispielsweise des paramagnetischen Zentrums bzw. eines Clusters paramagnetischer Zentren, relativ zum optischen System **OS** nach Abschluss der Repositionierung optional im Wesentlichen unverändert ist. Optional ist das Bildverarbeitungssystem Teil des verlegbaren Quantencomputersystems. Typischerweise arbeitet die Steuervorrichtung **µC** des Quantencomputers als das Bildverarbeitungssystem. Das Bildverarbeitungssystem kann aber optional auch eine separate Teilvorrichtung des verlegbaren Quantencomputers **QC** sein. In dem Fall steuert optional die Steuervorrichtung **µC** das gesonderte Bildverarbeitungssystem über den Steuerdatenbus **SDB.** Das Bildverarbeitungssystem kann dann beispielsweise Teil der ersten Kameraschnittstelle **CIF** sein. Statt eines Bildverarbeitungssystems können optional auch andere Positionsverschiebungssensoren die Verlagerungen des Substrats **D** relativ zum optischen System bzw. Positionsverschiebungen des Substrats **D** relativ zum optischen System detektieren. Der vorgeschlagene Quantencomputer **QC** regelt auf Basis der Positionsverschiebungsdaten solcher Positionsverschiebungssensoren die Lage des Substrats **D** relativ zum optischen System **OS** dann nach. Beispielsweise können solche Positionsverschiebungssensoren die erfassten Positionsverschiebungsdaten der Steuervorrichtung **µC** des Quantencomputers **QC** über den Steuerdatenbus **SDB** übermitteln, sodass die Steuervorrichtung **µC** des Quantencomputers **QC** beispielsweise in Abhängigkeit von diesen erfassten Positionsverschiebungsdaten über den Steuerdatenbus **SDB** den Positioniertisch mittels der translatorischen Positioniervorrichtung **XT** in X-Richtung und mittels der translatorischen Positioniervorrichtung **YT** in Y-Richtung das Substrat **D**gegenüber dem optischen System **OS** in Abhängigkeit von diesen ermittelten Positionsverschiebungsdaten wieder so repositionieren kann, als wenn im Wesentlichen keine Verschiebung stattgefunden hätte. Dies kann vorteilhaft sein, um den verlegbaren Quantencomputer QC auch bei Vibrationen, Beschleunigungen und der gleichen betreiben zu können.

Optional umfasst das verlegbare Quantencomputersystem einen Fotodetektor **PD** und einen Verstärker **V.** Der Fotodetektor **PD** erfasst die Fluoreszenzstrahlung **FL** der Quantenpunkte **NV1, NV2, NV3,** wenn die Lichtquelle **LD** sie mit ihrer elektromagnetischen Strahlung, die als Pumpstrahlung **LB** dient, bestrahlt. Dies nutzt das verlegbare Quantencomputersystem optional zum Auslesen des Quantenzustands der Quantenpunkte **NV1, NV2, NV3.** Optional handelt es sich bei den Quantenpunkten **NV1, NV2, NV3** um paramagnetische Zentren. Optional handelt es sich bei den paramagnetischen Zentren um NV-Zentren in Diamant. Der Verstärker **V** kann dazu ausgelegt sein, das Empfängerausgangssignal **S0** des Fotodetektors **PD** zu einem verstärkten Empfängerausgangssignal **S1** zu verstärken und/oder zu filtern. Das verstärkte Empfängerausgangssignal kann optional auch eine geordnete Menge von Daten in einem Speicher des Verstärkers **V** sein, wobei der Rechnerkern **CPU** der Steuervorrichtung **µC** optional über den Steuerdatenbus **SDB** diesen Speicher des Verstärkers **V** zumindest teilweise auslesen kann.

Des Weiteren kann das verlegbare Quantencomputersystem **QC** dazu ausgelegt sein, parallel oder alternativ zu dieser optischen Auslesung des Zustands von Quantenpunkten **NV1, NV2, NV3** auch eine elektronische Auslesung von Quantenpunkten **NV1, NV2, NV3** vorzunehmen. Zu diesem Zweck kann das verlegbare Quantencomputersystem alternativ oder parallel zu dem Fotodetektor **PD** und dem Verstärker **V** eine Vorrichtung zum elektronischen Auslesen der Zustände der Quantenpunkte **NV1, NV2, NV3** aufweisen. Optional umfasst die Vorrichtung zum elektronischen Auslesen der Zustände der Quantenpunkte **NV1, NV2, NV3** elektrisch leitfähige Leitungen zum Anlegen elektrischer Felder im Wirkungsbereich der Quantenpunkte **NV1, NV2, NV3** und Kontakte zur Absaugung von Ladungsträgern im Bereich der Quantenpunkte **NV1, NV2, NV3.** Des Weiteren umfasst die Vorrichtung optional zum elektronischen Auslesen der Zustände der Quantenpunkte **NV1, NV2, NV3** Vorrichtungen zur Bereitstellung der Steuersignale zur Ansteuerung der besagten elektrisch leitfähigen Leitungen zum Anlegen elektrische Felder im Wirkungsbereich der Quantenpunkte **NV1, NV2, NV3.** Des Weiteren umfasst die Vorrichtung optional zum elektronischen Auslesen der Zustände der Quantenpunkte **NV1, NV2, NV3** einen oder mehrere Verstärker zur Verstärkung der über die Kontakte zur Absaugung von Ladungsträgern im Bereich der Quantenpunkte **NV1, NV2, NV3** abgesaugten elektrischen Ströme von Ladungsträgern. Optional weist das Quantencomputersystem einen oder mehrere Digital-zu-Analog-Wandler auf, die an der Erzeugung der Steuersignale zur Ansteuerung der besagten elektrisch leitfähigen Leitungen **LH1, LH2, LH3, LV1** zum Anlegen elektrischer Felder im Wirkungsbereich der Quantenpunkte **NV1, NV2, NV3** mitwirken. Optional weist die erste horizontale Treiberstufe **HD1** zur Ansteuerung des ersten anzusteuernden Quantenpunkts **NV1** einen Analog-zu-Digital-Wandler auf, den der Rechnerkern **CPU** der Steuervorrichtung **µC** über den Steuerdatenbus **STB** optional steuern kann. Optional weist die zweite horizontale Treiberstufe **HD2** zur Ansteuerung des zweiten anzusteuernden Quantenpunkts **NV2** einen Analog-zu-Digital-Wandler auf, den der Rechnerkern **CPU** der Steuervorrichtung **µC** über den Steuerdatenbus **STB** optional steuern kann. Optional weist die dritte horizontale Treiberstufe **HD3** zur Ansteuerung des dritten anzusteuernden Quantenpunkts **NV3** einen Analog-zu-Digital-Wandler auf, den der Rechnerkern **CPU** der Steuervorrichtung **µC** über den Steuerdatenbus **STB** optional steuern kann. Optional steuert die Steuervorrichtung **µC** einen oder mehrere dieser Digital-zu-Analog-Wandler über einen internen Steuerdatenbus **SDB** des verlegbaren Quantencomputersystems an.

In einem weiteren Aspekt wird ein Quantencomputer bereitgestellt, wobei der Quantencomputer einen Quanten-Computer-Stack mit nuklearen Quantenbits und mit elektronischen Quantenbits umfasst und wobei die elektronischen Quantenbits paramagnetische Zentren sind.

Die Qbits des Quantencomputers können aus nuklearen Quantenbits (¹³C) in einem Diamantmaterial gebildet werden Die Qbits können über NV-Zentren als elektronische Quantenbits miteinander innerhalb einer Quanten-ALU verbunden sein. In diesem Zusammenhang wird auf die Patentfamilie der deutschen Patentanmeldung DE102020125169A1 beispielhaft verwiesen, deren Offenbarungsgehalt Teil dieser Anmeldung ist, sofern in der jeweiligen Jurisdiktion zugelassen. Die nuklearen und elektronischen Quantenbits sind Teil des Quantencomputers und können über weitere Hardwareelemente miteinander interagieren, wie sie beispielsweise in den Schutzrechtsanmeldungen der Patentfamilie der deutschen Patentanmeldung DE102020125169A1 beschrieben sind.

Der Quantencomputer (Q-circuit hardware model) kann Radiowellen-Leitungen und -Bauelemente, Mikrowellenleitungen und -bauelemente (RF, HF lines), ein optisches System (ca system), und ein elektrisches Gitter (electric grid), wie es beispielsweise die DE102020125169A1 in ihrer Figur 20 zeigt, umfassen. Auf die Figur 23 der DE102020125169A1 und deren zugehöriger Beschreibung wird hier ebenfalls verwiesen. Bei dem optischen System kann es sich optional um ein konfokales Mikroskop mit einem gepulsten Laser handeln.

Eine Gate-Pulse-Timing Vorrichtung kann die Steuersignale zur zeitgerechten Erzeugung der Signale auf den Radiowellenleitungen und Mikrowellenleitungen erzeugen. Eine Laser-Kontrollvorrichtung (Laser control) kann den Laser steuern, mit dem das optische System gespeist wird. Ein Ein-Ausgangssignalerzeugung(I/O)-Signal kann das elektrische Gitter (electrical grid) steuern. Eine Ablaufsteuerung (SPC) kann die gesamten Vorgänge steuern. Optional umfasst das optische System einen Fotodetektor zum Erfassen von elektromagnetischer Strahlung der Quantenpunkte mit Verstärker, Filter etc. Die Architektur der Hardware des Quantencomputers (Q-circuit hardware model) kann somit optional im Wesentlichen der Architektur der Figur 23 der DE102020125169A1 entsprechen.

Der Quantencomputer kann mit einer zentralen Steuereinheit (Bezugszeichen ZSE in Figur 38 der DE102020125169A1 verbunden sein. Die zentrale Steuereinheit kann dabei ein Steuerverfahren (Transcompiler) in Form eines Transcompiler genannten Steuerprogramms ausführen, das Steuerbefehle (Mnemonics) in konkrete Steuersignale für die Hardwarekomponenten umsetzt, die über diesen einen oder mehrere Datenbusse übermittelt werden. Ein Optimierer (Optimizer) in Form eines Optimierverfahrens, das die zentrale Steuereinheit typischerweise ausführt, optimiert dabei ggf. Einstellungsparameter und ggf. Filterparameter und arbeitet ggf. Messsignale des optischen Systems auf. Ein Fehlerkorrekturverfahren (QEC) in Form eines Fehlerkorrekturprogramms, das die zentrale Steuereinheit typischerweise ausführen kann, korrigiert optional die Fehler, die aufgrund des statistischen Verhaltens der Quantenbits auftreten können. Die Steuerverfahren, die die zentrale Steuereinheit optional ausführen kann, und die die Steuerbefehle (Mnemonics) symbolisieren, entsprechen dabei optional im wesentlichen abstrakten Quantenoperationen (Abstract Q-circuit models), die die zentrale Steuereinheit optional ausführt. Die zentrale Steuereinheit kann Zusammenfassungen solcher Verfahren als Quantenberechnungen (Quantum algorithms) ausführen. Neben diesen quantenspezifischen Komponenten kann eine vorschlagsgemäße Vorrichtung eine klassische Rechner-Hardware in Harvard- oder Von-Neumann-Architektur (classical hardware) aufweisen. Optional ist die zentrale Steuereinheit eine solche klassische Hardware. Die klassische Hardware führt optional klassische Verfahren (classical software, classical algorithms) aus. Die zentrale Steuereinheit führt dann somit insgesamt gemischte Verfahren (Quantum classical hybrid software) der klassischen Datenverarbeitung und der Quantenverarbeitung aus. Der Nutzer kann dann das durch die zentrale Steuereinrichtung zur Verfügung gestellte gemischte Verfahren auf konkrete reale Probleme anwenden. (real-world problem and data sets). Ferner wird ein Verfahren bereitgestellt, das sich in diese Unterverfahren gliedern lässt. Ein derartiges Verfahren kann mit dem Begriff Quanten-Computer-Stack bezeichnet werden.

Ferner wird eine mobile Vorrichtung gemäß einer optionalen Ausführungsform bereitgestellt, wobei die mobile Vorrichtung ein verlegbares Quantencomputersystem **(QUSYS)** gemäß der vorliegenden Offenbarung umfasst. Das Quantencomputersystem **(QUSYS)** umfasst dabei zumindest einen Quantencomputer **(QC1, QC2).** Ferner umfasst die mobile Vorrichtung gemäß der optionalen Ausführungsform einen oder mehrere Sensoren **(SENS)** und/oder Messmittel, wobei die Sensoren **(SENS)** und/oder Messmittel dazu ausgelegt sind, Messwerte über die Umgebung der mobilen Vorrichtung und/oder über Zustände der mobilen Vorrichtung und/oder über Zustände von Insassen der mobilen Vorrichtung und/oder über Nutzer/Nutzerinnen der mobilen Vorrichtung und/oder über Zustände der Zuladung der mobilen Vorrichtung zu erfassen und an das Quantencomputersystem **(QUSYS) zu** liefern. Der eine oder die mehreren Sensoren **(SENS)** und/oder Messmittel der mobile Vorrichtung können dazu ausgelegt sein, zumindest einen der folgenden Messwert-liefernden Sensoren **(SENS)** als Untersystem zu umfassen:
- einen Radar-Sensor und/oder
- ein Mikrofon und/oder
- ein Ultraschallmikrofon und/oder
- ein Infraschallmikrofon und/oder
- einen Ultraschalltransducer und/oder
- einen Infrarotsensor und/oder
- einen Gassensor und/oder
- einen Beschleunigungssensor und/oder
- einen Geschwindigkeitssensor und/oder
- einen Strahlungsdetektor und/oder
- ein bildgebendes System und/oder
- eine Kamera und/oder
- eine Infrarotkamera und/oder
- eine Multispektralkamera und/oder
- ein LIDAR-System und/oder
- ein Ultraschallmesssystem und/oder
- ein Dopplerradarsystem und/oder
- ein Quantenradarsystem und/oder
- einen Quantensensor und/oder
- einen Positionssensor und/oder
- ein Navigationssystem und/oder
- einen GPS-Sensor (oder eine funktionsäquivalente Vorrichtung) und/oder
- einen Lagesensor und/oder
- einen Partikelzähler und/oder
- ein Detektionssystem für biologische Stoffe, insbesondere für biologische Kampstoffe, und/oder
- ein Gravimeter und/oder
- einen Kompass und/oder
- ein Gyroskop und/oder
- einen MEMS-Sensor und/oder
- einen Drucksensor und/oder
- einen Neigungswinkelsensor und/oder
- einen Temperatursensor und/oder
- einen Feuchtesensor und/oder
- einen Windgeschwindigkeitssensor und/oder
- einen Wellenfrontsensor und/oder
- ein mikrofluidisches Messsystem und/oder
- ein Abstandsmesssystem und/oder
- ein Längenmesssystem und/oder
- einen biologischen Sensor zur Detektion biologischer Marker und/oder Viren und/oder Mikroben oder dergleichen und/oder
- ein Sensorsystem zur Erfassung biologischer Messwerte von Fahrzeuginsassen und/oder zur Erfassung biologischer Messwerte lebender Ladung, insbesondere von Tieren und/oder biologischen Materialien, und/oder
- ein Seat-Occupation-Messystem und/oder
- einen Spannungssensor und/oder einen Stromsensor und/oder einen Leistungssensor und/oder
- einen Radarsensor und/oder
- einen LIDAR-Sensor und/oder
- einen Ultraschallsensor und/oder
- einen Kamera basierenden Sensor und/oder
- einen Quantensensor und/oder
- einen Sonarsensor.

Der Quantencomputer **QC** kann dabei dazu ausgelegt sein, in Abhängigkeit von diesen Messwerten eine Lagebeurteilung für den Gesamtzustand der mobilen Vorrichtung und/oder der Umgebung der mobilen Vorrichtung und/oder der Zustände des der mobilen Vorrichtung und/oder der Zustände von Fahrzeuginsassen und/oder von Nutzer/Nutzerinnen der mobilen Vorrichtung und/oder von Zuständen der Zuladung der mobilen Vorrichtung zu ermitteln.

Dabei kann der Quantencomputer **QC** in Abhängigkeit von diesen Messwerten optional die mobile Vorrichtung und/oder Vorrichtungsteile der mobilen Vorrichtung steuern und/oder eine Steuerung der mobilen Vorrichtung oder eines Vorrichtungsteils der mobilen Vorrichtung beeinflussen.

Die Sensoren der mobilen Vorrichtung können dabei einen oder mehrere der folgenden Sensoren aufweisen: Radarsensoren, Lidarsensoren, Ultraschallsensoren, Kamera-basierte Sensoren, Quantensensoren, und Sonarsensoren.

Die Sensoren **(SENS)** können Sensordaten an das Quantencomputersystem **(QUSYS)** übertragen und das Quantencomputersystem (QUSYS) kann dazu eingerichtet sein, einen oder mehrere Quantenalgorithmen auszuführen, welche die Leistungsfähigkeit von Sensoren **(SENS)** steigern und/oder welche die Verarbeitung der Daten und der Sensordaten der Sensoren **(SENS)** und/oder anderer Daten beschleunigen.

Die mobile Vorrichtung kann dazu eingerichtet sein, unter Verwendung zumindest eines Quantencomputers **(QC1, QC2)** des Quantencomputersystems **(QUSYS)** Prozessierungs- und/oder Optimierungsaufgaben in der Sensorfernerkundung und/oder der Erkundung der Erdoberfläche und/oder in der Sonarerkundung und/oder in der Ultraschallerkundung und/oder in der Bilderkennung und/oder in der Bildverarbeitung und/oder der Erkundung der Wasseroberfläche und/oder in der Erkundung eines Meeresvolumens und/oder des Luftraums und/oder des Seegebiets mittels der Sensoren **(SENS)** zu lösen.

Die mobile Vorrichtung kann dazu eingerichtet sein, unter Verwendung zumindest eines Quantencomputers **(QC1, QC2)** des Quantencomputersystems **(QUSYS)** Quantencomputing-Routinen und/oder Quantencomputing-Verfahren im Bereich der Radardatenprozessierung und/oder der Sonardatenprozessierung und/oder der Ultraschalldatenprozessierung und/oder der LIDAR-Datenprozessierung auszuführen.

Die mobile Vorrichtung kann dazu eingerichtet sein, unter Verwendung zumindest eines Quantencomputers **(QC1, QC2)** des Quantencomputersystems **(QUSYS)** eine Fokussierung von Sensor-Rohdaten vorzunehmen.

Die mobile Vorrichtung kann dazu eingerichtet ist, unter Verwendung zumindest eines Quantencomputers **(QC1, QC2)** seines Quantencomputersystems **(QUSYS)** Verfahren der Radarinterferometrie und/oder Sonarinterferometrie auszuführen.

Die mobile Vorrichtung kann dazu eingerichtet sein, unter Verwendung zumindest eines Quantencomputers **(QC1, QC2)** des Quantencomputersystems **(QUSYS)** Radarbilder und/oder LIDAR-Bilder und/oder Sonarbilder und/oder Bilder auf Basis der Sensordaten der Sensoren **(SENS)** und/oder von Satellitendaten und/oder anderen Daten zu erzeugen und/oder auszuwerten.

Die mobile Vorrichtung kann Teil eines Schwarms derartiger mobiler Vorrichtungen sein.

In einem weiteren Aspekt wird ein Quantencomputer (QC) bereitgestellt,
wobei der Quantencomputer (QC) eine Steuervorrichtung (µC) aufweist und
wobei der Quantencomputer (QC) erste Quantenbits (QUB) und/oder elektronische Quantenbits (QUB) mit Quantenpunkten (NV) aufweist und
wobei der Quantencomputer (QC) zweite Quantenbits (CQUB) und/oder zweite nukleare Quantenbits (CQUB) mit Kernquantenpunkten (CI) aufweist und
wobei der Quantencomputer (QC) erste Mittel zur Beeinflussung der ersten Quantenbits (QUB) aufweist und
wobei der Quantencomputer (QC) zweite Mittel zur Beeinflussung der ersten Quantenbits (QUB) und zur Beeinflussung der zweiten Quantenbits (CQUB) mittels der ersten Quantenbits (QUB) aufweist und
wobei die ersten Mittel die zweiten Mittel umfassen können oder die zweiten Mittel die ersten Mittel umfassen können und
wobei der Quantencomputer (QC) dritte Mittel zum Erfassen des Quantenzustands der ersten Quantenbits (QUB) aufweist und
wobei die ersten Quantenbits (QUB) und/oder die ersten elektronischen Quantenbits (QUB) mit Quantenpunkten (NV) Vorrichtungsteile mit einem elektronischen Spin aufweisen und
wobei die zweiten Quantenbits (CQUB) und/oder die ersten nuklearen Quantenbits CQUB) mit Kernquantenpunkten (CI) Vorrichtungsteile mit einem nuklearen Spin aufweisen und
wobei der elektronische Spin der ersten Quantenbits (QUB) sich bei einer Drehung des Quantencomputers (QC) mit dem Quantencomputer (QC) im Wesentlichen mitdreht und
wobei der nukleare Spin der zweiten Quantenbits (CQUB) sich bei einer Drehung des Quantencomputers (QC) im Wesentlichen **nicht** mit dem Quantencomputer (QC) mitdreht und
wobei der Quantencomputer (QC) dazu eingerichtet ist, eine Bewegungsrichtung und/oder eine Rotationsachse (AX1, AX2) aufzuweisen und
wobei der Quantencomputer (QC) dazu eingerichtet ist, Beschleunigungen senkrecht zu seiner Bewegungsrichtung und/oder Rotationsbeschleunigungen um die Rotationsachse (AX1, AX2) ausgesetzt zu werden und
wobei die Steuervorrichtung (µC) dazu eingerichtet ist, ein Quantencomputerprogramm auszuführen, und
wobei das Quantencomputerprogramm Quanten-Op-Codes umfasst und
wobei jeder Quanten-Op-Code eine Manipulation und/oder ein Auslesen des Quantenzustands zumindest eines ersten Quantenbits (QUB) und/oder des Quantenzustands eines zweiten Quantenbits (CQUB) zu symbolisiert, die die Steuervorrichtung (µC) bei Ausführung des Quanten-Op-Codes mit Hilfe der ersten Mittel und/oder der zweiten Mittel und/oder der dritten Mittel ausführt. Der Quantencomputer (QC) kann mindestens zwei erste Quantenbits (QUB1, QUB2) aufweisen und wobei das erste erste Quantenbit (QUB1) mit dem zweiten ersten Quantenbit (QUB2) koppelbar und/oder verschränkbar ist.

Der Quantencomputer (QC) kann ferner mindestens zwei erste Quantenbits (QUB1, QUB2) aufweisen und wobei das erste erste Quantenbit (QUB1) mit dem zweiten ersten Quantenbit (QUB2) direkt mittels direkter Dipol-Dipol-Kopplung zwischen dem ersten ersten Quantenbit (QUB1) und dem zweiten ersten Quantenbit (QUB2) koppelbar und/oder verschränkbar ist.

Der Quantencomputer (QC) kann mindestens ein erstes Quantenbit (QUB) und ein zweites Quantenbit (CQUB) aufweisen, wobei das erste Quantenbit (QUB) mit dem zweiten Quantenbit (CQUB) koppelbar und/oder verschränkbar ist .

Der Quantencomputer (QC) kann optional mindestens zwei erste Quantenbits (NV1, NV2) aufweisen, wobei der Quantencomputer (QC) optional mindestens zwei zweite Quantenbits (CQUB1, CQUB2) aufweist und wobei das erste erstes Quantenbit (QUB1) mit dem ersten zweiten Quantenbit (CQUB1) koppelbar und/oder verschränkbar ist und wobei das zweite erste Quantenbit (QUB2) mit dem zweiten zweiten Quantenbit (CQUB2) koppelbar und/oder verschränkbar ist und wobei das erste erste Quantenbit (QUB1) mit dem zweiten ersten Quantenbit (QUB2) koppelbar und/oder verschränkbar ist.

Dabei können die ersten Quantenbits (QUB, QUB1, QUB2) optional paramagnetische Zentren und/oder NV-Zentren in Diamant und/oder SiV-Zentren in Diamant umfassen.

Dabei können die zweiten Quantenbits (CQUB, CQUB1, CQUB2) nukleare Spins von ¹³C-Isotopen oder ¹⁴N-Isotope oder ¹⁵N-Isotope oder anderer Isotope mit nuklearem Spin umfassen.

Dabei kann der Quantencomputer (QC) Vorrichtungsteile umfassen, die
- Ausrichtungsmesswerte für Drehungen um eine Achse und/oder um zwei Achsen **(AX1, AX2)** und/oder drei Achsen und/oder
- Rotationswerte für Drehungen um eine Achse und/oder um zwei Achsen **(AX1, AX2)** und/oder drei Achsen und/oder
- Rotationsbeschleunigungswerte für Drehungen um eine Achse und/oder um zwei Achsen **(AX1, AX2)** und/oder drei Achsen Rotationsbeschleunigungswerte und/oder
- Beschleunigungswerte für einen translatorischen Freiheitsgrad und/oder zwei translatorische Freiheitsgrade und/oder drei translatorische Freiheitsgrade für den Quantencomputer **QC** bestimmen und/oder eine solche Bestimmung zulassen.

Dabei kann der Quantencomputer (QC) dazu eingerichtet sein, die Kopplungsfrequenzen und/oder Kopplungsphasenlagen
- zwischen den Paaren aus koppelbaren jeweils zwei ersten Quantenbits (QUB1, QUB2) untereinander und/oder
- zwischen den koppelbaren Paaren aus je einem ersten Quantenbit (QUB) und je einem zweiten Quantenbit (CQUB) und/oder
   - zwischen den Paaren aus koppelbaren jeweils zwei zweiten Quantenbits (CQUB1, CQUB2) untereinander
zu bestimmen und als zu verwendende Koppelgrundfrequenzen und/oder Kopplungsgrundphasenlagen abzuspeichern.

Dabei kann der Quantencomputer (QC) einen Rotationssensor (RTS) für die Erfassung von Rotationswerten und/oder Rotationsbeschleunigungswerten für Drehungen um eine Achse oder einen Rotationssensor (RTS) für die Erfassung von Rotationswerten und/oder Rotationsbeschleunigungswerten für Drehungen um zwei Achsen (AX1, AX2) oder einen Rotationssensor (RTS) für die Erfassung von Rotationswerten und/oder Rotationsbeschleunigungswerten für Drehungen um drei Achsen umfassen, und
wobei der Rotationssensor (RTS) des Quantencomputers (QC) die aktuelle Ausrichtung des Quantencomputers (QC) in Form eines oder mehrerer Ausrichtungsmesswerte erfassen kann und/oder
wobei der Rotationssensor (RTS) des Quantencomputers (QC) die aktuelle Rotationsgeschwindigkeit des Quantencomputers (QC) in Form eines oder mehrerer Rotationswerte erfassen kann und/oder
wobei der Rotationssensor (RTS) des Quantencomputers (QC) die aktuelle Rotationsbeschleunigung des Quantencomputers (QC) in Form eines oder mehrerer Rotationsbeschleunigungswerte erfassen kann und wobei der Quantencomputers (QC) dazu eingerichtet sein kann, in Abhängigkeit von den Ausrichtungsmesswerten und/oder den Rotationswerte und/oder den Rotationsbeschleunigungswerten die zu verwendenden Kopplungsfrequenzen und/oder Kopplungsphasenlagen
   - zwischen den Paaren aus koppelbaren jeweils zwei ersten Quantenbits (QUB1, QUB2) untereinander und/oder
   - zwischen den koppelbaren Paaren aus je einem ersten Quantenbit (QUB) und je einem zweiten Quantenbit (CQUB) und/oder
   - zwischen den Paaren aus koppelbaren jeweils zwei zweiten Quantenbits (CQUB1, CQUB2) untereinander aus den zu verwendenden Kopplungsgrundfrequenzen und/oder Kopplungsgrundphasenlagen zu bestimmen, und
wobei der Quantencomputer (QC) dazu eingerichtet ist, bei der Manipulation der ersten Quantenbits (QUB, QUB1, QUB2) und/oder zweiten Quantenbist (CQUB, CQUB1, CQUB2) mittels der ersten Mittel und/oder der zweiten Mittel die so bestimmten zu verwendenden Kopplungsfrequenzen und/oder Kopplungsphasenlagen zu verwenden.

Der Quantencomputer (QC) kann dazu eingerichtet sein, die Kopplungsfrequenzen und/oder Kopplungsphasenlagen
- zwischen Paaren aus koppelbaren jeweils zwei ersten Quantenbits (QUB1, QUB2) untereinander und/oder
- zwischen koppelbaren Paaren aus je einem ersten Quantenbit (QUB) und je einem zweiten Quantenbit (CQUB) und/oder
- zwischen Paaren aus koppelbaren jeweils zwei zweiten Quantenbits (CQUB1, CQUB2) untereinander

zu einem ersten Zeitpunkt zu bestimmen und als Koppelgrundfrequenzen und/oder Kopplungsphasenlagen abzuspeichern und
wobei der Quantencomputer (QC) dazu eingerichtet sein kann, die Kopplungsfrequenzen und/oder Kopplungsphasenlagen
   - zwischen Paaren aus koppelbaren jeweils zwei ersten Quantenbits (QUB1, QUB2) untereinander und/oder
   - zwischen koppelbaren Paaren aus je einem ersten Quantenbit (QUB) und je einem zweiten Quantenbit (CQUB) und/oder
   - zwischen Paaren aus koppelbaren jeweils zwei zweiten Quantenbits (CQUB1, CQUB2) untereinander
zu einem zweiten Zeitpunkt nach dem ersten Zeitpunkt zu bestimmen und als Koppelfrequenzen und/oder Kopplungsphasenlagen zu verwenden und wobei der der Quantencomputer (QC) dazu eingerichtet sein kann, aus einer oder mehreren Koppelgrundfrequenzen und/oder Kopplungsgrundphasenlagen und einer oder mehreren Koppelfrequenzen und/oder Kopplungsphasenlagen eine aktuelle Ausrichtung des Quantencomputers (QC) in Form eines oder mehrerer Ausrichtungsmesswerte zu ermitteln und/oder
wobei der der Quantencomputer (QC) dazu eingerichtet sein kann, aus einer oder mehreren Koppelgrundfrequenzen und/oder Kopplungsgrundphasenlagen und einer oder mehreren Koppelfrequenzen und/oder Kopplungsphasenlagen eine aktuelle Rotationsgeschwindigkeit des Quantencomputers (QC) in Form eines oder mehrerer Rotationsmesswerte zu ermitteln und/oder
wobei der der Quantencomputer (QC) dazu eingerichtet sein kann, aus einer oder mehreren Koppelgrundfrequenzen und/oder Kopplungsgrundphasenlagen und einer oder mehreren Koppelfrequenzen und/oder Kopplungsphasenlagen eine aktuelle Rotationsbeschleunigung des Quantencomputers (QC) in Form eines oder mehrerer Rotationsbeschleunigungsmesswerte zu ermitteln und/oder wobei der der Quantencomputer (QC) dazu eingerichtet sein kann, aus einer oder mehreren Koppelgrundfrequenzen und/oder Kopplungsgrundphasenlagen und einer oder mehreren Koppelfrequenzen und/oder Kopplungsphasenlagen die aktuelle Beschleunigung, insbesondere Gravitationsbeschleunigung, des Quantencomputers (QC) in Form eines oder mehrerer Beschleunigungsmesswerte zu ermitteln und/oder
wobei der der Quantencomputer (QC) dazu eingerichtet sein kann, aus einer oder mehreren Koppelgrundfrequenzen und/oder Kopplungsgrundphasenlagen und einer oder mehreren Koppelfrequenzen und/oder Kopplungsphasenlagen die aktuelle Geschwindigkeit des Quantencomputers (QC) in Form eines oder mehrerer Geschwindigkeitsmesswerte zu ermitteln.

Der Quantencomputer (QC) oder Teile des Quantencomputers (QC) oder eine Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder eine Anordnung von paramagnetischen Zentren des Quantencomputers (QC) können drehbar um eine Achse gelagert sein oder drehbar um zwei Achsen (AX1, AX2) gelagert sind oder drehbar um drei Achsen gelagert sein.

Der Quantencomputer (QC) kann über eine oder mehrere Energiekupplungen (EK1, EK2) verfügen, wobei eine Energiekupplung (EK1, EK2) jeweils dazu eingerichtet sein kann, den Quantencomputer (QC) oder Teile des Quantencomputers (QC) oder die Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder eine Anordnung von paramagnetischen Zentren des Quantencomputers (QC) mit elektrischer oder elektromagnetischer Energie zu versorgen und
wobei die jeweilige Energiekupplung (EK1, EK2) dazu eingerichtet sein kann, dass eine Drehung des Quantencomputers (QC) oder von Teilen des Quantencomputers (QC) oder der Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder der Anordnung von paramagnetischen Zentren des Quantencomputers (QC) um eine zugeordnete Achse (AX1, AX2) die Energieversorgung nicht mitdrehen muss, und wobei die jeweilige Energiekupplung (EK1, EK2) dazu eingerichtet sein kann, die Energie von der Energieversorgung zum Quantencomputer (QC) so zu transportieren, dass eine Verdrehung des Quantencomputers (QC) oder von Teilen des Quantencomputers (QC) oder der Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder der Anordnung von paramagnetischen Zentren des Quantencomputers (QC) gegenüber der Energieversorgung um beliebige Winkel um die zugehörige Achse (AX1, AX2) möglich ist.

Die Energiekupplung (EK1, EK2) kann Schleifringe und Schleifkontakte zum Transport der Energie der Energieversorgung zum Quantencomputer (QC) oder zu Teilen des Quantencomputers (QC) oder zur Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder zur Anordnung von paramagnetischen Zentren des Quantencomputers (QC) umfassen und/oder wobei die Energiekupplung (EK1, EK2) dazu eingerichtet sein kann, die Energie der Energieversorgung mittels induktiver Kopplung zum Quantencomputer (QC) oder zu Teilen des Quantencomputers (QC) oder zur Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder zur Anordnung von paramagnetischen Zentren des Quantencomputers (QC) zu übertragen und/oder wobei die Energiekupplung (EK1, EK2) dazu eingerichtet sein kann,
- die Energie der Energieversorgung mittels elektromagnetischen Wellen und/oder elektromagnetischer Strahlung zum Quantencomputer (QC) oder zu Teilen des Quantencomputers (QC) oder zur Anordnung von ersten elektronischen Quantenbits (QUB, QUB1, QUB2) und oder von und/oder von ersten elektronischen Quantenbits (QUB, QUB1, QUB2) mit Quantenpunkten (NV, NV1, NV2) und/oder von zweiten nuklearen Quantenbits (CQUB, CQUB1, CQUB2) und/oder von zweiten nuklearen Quantenbits (CQUB, CQUB1, CQUB2) mit Kernquantenpunkten (CI, CI1, CI2) und/oder zur Anordnung von paramagnetischen Zentren des Quantencomputers (QC) zu übertragen,
- wobei eine Bestrahlung von Quantenpunkten (NV, NV1, NV2) mit einer Pumpstrahlung (LB) eine Energieversorgung im Sinne dieses Anspruchs ist.

Der Quantencomputer (QC) kann mittels einer kardanischen Aufhängung (KAH) drehbar um eine Achse oder zwei Achsen (AX1, AX2) oder drei Achsen gelagert sein, wobei der Quantencomputer (QC) einen oder mehrere Kreisel (KR) umfassen kann oder mit diesen verbunden sein kann, sodass seine Ausrichtung von Drehungen der kardanischen Aufhängung (KAH) um diese eine Achse oder diese zwei Achsen (AX1, AX2) oder diese drei Achsen nicht verändert wird.

Dabei können ein oder mehrere Kreisel der Kreisel (KR) einen Antrieb aufweisen und wobei der eine Kreisel oder die mehreren Kreisel (KR) und der Antrieb des einen Kreisels oder die Antriebe der Kreisel (KR) im Sinne der hier beanspruchten Ansprüche ein Teil des Quantencomputersystems bzw. Quantencomputers sein können.

In einem weiteren Aspekt wird eine Verwendung eines oben-beschriebenen Quantencomputers als Gyrometer bereitgestellt.

Der Quantencomputer (QC) kann dazu eingerichtet sein, mittels Bestimmung einer oder mehreren Koppelgrundfrequenzen und/oder Kopplungsgrundphasenlagen und mittels Bestimmung einer oder mehreren Koppelfrequenzen und/oder Kopplungsphasenlagen die aktuelle Ausrichtung des Quantencomputers (QC) in Form eines oder mehrerer Ausrichtungsmesswerte und/oder in Form einer oder mehrerer zeitlicher Ableitungen n-ter Ordnung von Ausrichtungsmesswerten und/oder in Form einer oder mehrerer zeitlicher Integrale n-ter Ordnung von Ausrichtungsmesswerten und/oder in Form von gefilterten Werten von Ausrichtungsmesswerten zu ermitteln und/oder
wobei der Quantencomputer (QC) dazu eingerichtet sein kann, mittels Bestimmung einer oder mehreren Koppelgrundfrequenzen und/oder Kopplungsgrundphasenlagen und mittels Bestimmung einer oder mehreren Koppelfrequenzen und/oder Kopplungsphasenlagen die aktuelle Rotationsgeschwindigkeit des Quantencomputers (QC) in Form eines oder mehrerer Rotationsmesswerte und/oder in Form einer oder mehrerer zeitlicher Ableitungen n-ter Ordnung von Rotationsmesswerten und/oder in Form einer oder mehrerer zeitlicher Integrale n-ter Ordnung von Rotationsmesswerten und/oder in Form von gefilterten Werten von Rotationsmesswerten zu ermitteln und/oder wobei der Quantencomputer (QC) dazu eingerichtet sein kann, mittels Bestimmung einer oder mehreren Koppelgrundfrequenzen und/oder Kopplungsgrundphasenlagen und mittels Bestimmung einer oder mehreren Koppelfrequenzen und/oder Kopplungsphasenlagen die aktuelle Rotationsbeschleunigung des Quantencomputers (QC) in Form eines oder mehrerer Rotationsbeschleunigungsmesswerte und/oder in Form einer oder mehrerer zeitlicher Ableitungen n-ter Ordnung von Rotationsbeschleunigungsmesswerten und/oder in Form einer oder mehrerer zeitlicher Integrale n-ter Ordnung von Rotationsbeschleunigungsmesswerten und/oder in Form von gefilterten Werten von Rotationsbeschleunigungsmesswerten zu ermitteln und/oder
wobei der Quantencomputer (QC) dazu eingerichtet sein kann, mittels Bestimmung einer oder mehreren Koppelgrundfrequenzen und/oder Kopplungsgrundphasenlagen und mittels Bestimmung einer oder mehreren Koppelfrequenzen und/oder Kopplungsphasenlagen die aktuelle Geschwindigkeit des Quantencomputers (QC) in Form eines oder mehrerer Geschwindigkeitsmesswerte und/oder in Form einer oder mehrerer zeitlicher Ableitungen n-ter Ordnung von Geschwindigkeitsmesswerten und/oder in Form einer oder mehrerer zeitlicher Integrale n-ter Ordnung von Geschwindigkeitsmesswerten und/oder in Form von gefilterten Werten von Geschwindigkeitsmesswerten zu ermitteln und/oder
wobei der Quantencomputer (QC) dazu eingerichtet sein kann, mittels Bestimmung einer oder mehreren Koppelgrundfrequenzen und/oder Kopplungsgrundphasenlagen und mittels Bestimmung einer oder mehreren Koppelfrequenzen und/oder Kopplungsphasenlagen die aktuelle Beschleunigung des Quantencomputers (QC) in Form eines oder mehrerer Beschleunigungsmesswerte und/oder in Form einer oder mehrerer zeitlicher Ableitungen n-ter Ordnung von Beschleunigungsmesswerte und/oder in Form einer oder mehrerer zeitlicher Integrale n-ter Ordnung von Beschleunigungsmesswerte und/oder in Form von gefilterten Werten von Beschleunigungsmesswerte zu ermitteln und/oder
wobei der Quantencomputer (QC) dazu eingerichtet sein kann, mittels Bestimmung einer oder mehreren Koppelgrundfrequenzen und/oder Kopplungsgrundphasenlagen und mittels Bestimmung einer oder mehreren Koppelfrequenzen und/oder Kopplungsphasenlagen die aktuelle Ortskoordinate des Quantencomputers (QC) in Form eines oder mehrerer Koordinatenmesswerte und/oder in Form einer oder mehrerer zeitlicher Ableitungen n-ter Ordnung von Koordinatenmesswerten und/oder in Form einer oder mehrerer zeitlicher Integrale n-ter Ordnung von Koordinatenmesswerten und/oder in Form von gefilterten Werten von Koordinatenmesswerten zu ermitteln.

Der Quantencomputer (QC) kann dazu eingerichtet sein, mittels Ausführung von Quanten-Op-Codes Messwerte physikalischer Parameter, insbesondere wie Aussichtung, Winkelgeschwindigkeit (Rotationsgeschwindigkeit), Winkelbeschleunigung (Rotationsbeschleunigung), Gravitationsbeschleunigung, Beschleunigung, Geschwindigkeit und/oder Ortskoordinate, zu ermitteln.

In einem weiteren Aspekt wird ein verlegbarer Quantencomputer (QC) bereitgestellt, insbesondere nach einem der vorausgehenden Ansprüche, in einer mobilen Vorrichtung, insbesondere zur Verwendung in einem Smartphone oder einen tragbaren Quantencomputersystem (QUSYS) oder in einem Fahrzeug oder in einem verlegbaren Waffensystem,
- wobei der Quantencomputer (QC) erste Quantenbits (QUB) und/oder zweite Quantenbits (CQUB) umfasst und
- wobei der Quantencomputer (QC) erste Mittel (z.B. WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC) und/oder zweite Mittel (z.B. WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC) zum Manipulieren der Quantenzustände von Quantenbits der Quantenbits (QUB, CQUB) umfasst und
- wobei der Quantencomputer (QC) dritte Mittel (z.B. D, XT, YT, KV, OS, DBS, STM, CM1, PD, V, WFG, CIF, µC) zum Auslesen eines oder mehrerer Quantenzustände (QC) eines oder mehrerer Quantenbits der Quantenbits (QUB, CQUB) umfasst und

wobei eines oder die mehrere Quantenbits der einen oder mehreren ersten Quantenbits (QUB) paramagnetische Zentren umfassen und
wobei der Quantencomputer (QC) eine Steuervorrichtung (µC)
   - zur Steuerung der ersten Mittel und
   - zur Steuerung der zweiten Mittel und
   - zum Erfassen von Messergebnissen der zweiten Mittel umfasst und
gekennzeichnet dadurch,
   - dass der Quantencomputer (QC) vierte Mittel (RTS, PV, XT, YT, CM1, OS, STM, CIF, µC) umfasst, die dazu eingerichtet sind,
      - Änderungen der Beschleunigung und/oder Rotationsbeschleunigung, insbesondere während einer Verlegung des verlegbaren Quantencomputers (QC), vorherzusagen und/oder
      - Änderungen der Beschleunigung und/oder Rotationsbeschleunigung, insbesondere während einer Verlegung des verlegbaren Quantencomputers (QC), zu erfassen und/oder
      - Änderungen der Beschleunigung und/oder Rotationsbeschleunigung, insbesondere während einer Verlegung des verlegbaren Quantencomputers (QC), zu kompensieren und/oder
      - die Wirkung solcher Änderungen der Beschleunigung und/oder Rotationsbeschleunigung, insbesondere während einer Verlegung des verlegbaren Quantencomputers (QC), zu vermindern,
      - wobei die dritten Mittel insbesondere
         - ein oder mehrere Beschleunigungssensorsysteme und/oder Beschleunigungssensoren und/oder
         - ein oder mehrere Geschwindigkeitssensorsystem und/oder ein oder mehrere Geschwindigkeitssensoren und/oder
         - ein oder mehrere Rotationsbeschleunigungssensorsysteme und/oder Rotationsbeschleunigungssensoren und/oder
         - ein oder mehrere Rotationssensorsysteme und/oder Rotationssensoren (RTS) und/oder
         - ein oder mehrere Positionsverschiebungssensoren und/oder
         - ein oder mehrere Lageregelungssystem und/oder
         - einen oder mehrere Positioniertische und/oder Positioniervorrichtungen und/oder
         - eine oder mehrere Bilderfassungsvorrichtungen und/oder Bildverarbeitungsvorrichtungen und/oder
         - andere fluoreszierende Defektzentren im Substrat (D) mit anderen Fluoreszenzwellenlängen, die eine Fluoreszenzstrahlung mit einer von der Fluoreszenzwellenlänge (λ_{fl}) der Quantenpunkte (NV1, NV2, NV3) der Quantenbits verschieden Fluoreszenzwellenlänge aufweisen, umfassen können.

In einem weiteren Aspekt wird ein verlegbarer Quantencomputer (QC) bereitgestellt, insbesondere nach einem der vorausgehenden Ansprüche, insbesondere in einer mobilen Vorrichtung und insbesondere zur Verwendung in einem Smartphone oder einen tragbaren Quantencomputersystem (QUSYS) oder in einem Fahrzeug oder in einem verlegbaren Waffensystem,
- wobei der Quantencomputer (QC) Quantenbits (QUB, CQUB) umfasst und
- wobei der Quantencomputer (QC) erste und zweite Mittel zum Manipulieren der Quantenzustände von Quantenbits der Quantenbits (QUB, CQUB) umfasst und
- wobei der Quantencomputer (QC) dritte Mittel zum Auslesen eines oder mehrerer Quantenzustände eines oder mehrerer Quantenbits der Quantenbits (QUB, CQUB) umfasst und

wobei eines oder die mehrere Quantenbits der einen oder mehreren Quantenbits (QUB) paramagnetische Zentren umfassen und
wobei der Quantencomputer (QC) eine Steuervorrichtung (µC)
   - zur Steuerung der ersten Mittel und
   - zur Steuerung der zweiten Mittel und
   - zur Steuerung der dritten Mittel und
      zum Erfassen von Messergebnissen der dritten Mittel umfasst und
gekennzeichnet dadurch,
   - dass der Quantencomputer (QC) vierte Mittel (PV, XT, YT, CM1, OS, STM, CIF, µC) umfasst, die dazu eingerichtet sind,
      - Änderungen der Beschleunigung und/oder Rotationsbeschleunigung, insbesondere während einer Verlegung des verlegbaren Quantencomputers (QC), vorherzusagen und/oder
      - Änderungen der Beschleunigung und/oder Rotationsbeschleunigung, insbesondere während einer Verlegung des verlegbaren Quantencomputers (QC), zu erfassen und/oder
      - Änderungen der Beschleunigung und/oder Rotationsbeschleunigung, insbesondere während einer Verlegung des verlegbaren Quantencomputers (QC), zu kompensieren und/oder
      - die Wirkung solcher Änderungen der Beschleunigung und/oder Rotationsbeschleunigung,, insbesondere während einer Verlegung des verlegbaren Quantencomputers (QC), zu vermindern,
      - wobei die vierten Mittel insbesondere
         - ein oder mehrere Beschleunigungssensorsysteme und/oder Beschleunigungssensoren und/oder
         - ein oder mehrere Geschwindigkeitssensorsystem und/oder ein oder mehrere Geschwindigkeitssensoren und/oder
         - ein oder mehrere Rotationsbeschleunigungssensorsysteme und/oder Rotationsbeschleunigungssensoren und/oder
         - ein oder mehrere Rotationssensorsysteme und/oder Rotationssensoren (RTS) und/oder
         - ein oder mehrere Positionsverschiebungssensoren und/oder
         - ein oder mehrere Lageregelungssystem und/oder
         - einen oder mehrere Positioniertische und/oder Positioniervorrichtungen und/oder
         - eine oder mehrere Bilderfassungsvorrichtungen und/oder Bildverarbeitungsvorrichtungen und/oder
         - andere fluoreszierende Defektzentren im Substrat (D) mit anderen Fluoreszenzwellenlängen, die eine Fluoreszenzstrahlung mit einer von der Fluoreszenzwellenlänge (λ_{fl}) der Quantenpunkte (NV1, NV2, NV3) der Quantenbits verschieden Fluoreszenzwellenlänge aufweisen, umfassen können, und/oder
   - dass der Quantencomputer (QC) fünfte Mittel (PV, XT, YT, CM1, OS, STM, CIF, µC) umfasst, die dazu eingerichtet sind,
      - eine Beschleunigung und/oder eine Rotationsbeschleunigung, insbesondere während einer Verlegung des verlegbaren Quantencomputers (QC), vorherzusagen und/oder
      - eine Beschleunigung und/oder eine Rotationsbeschleunigung, insbesondere während einer Verlegung des verlegbaren Quantencomputers (QC), zu erfassen und/oder
      - eine Beschleunigung und/oder eine Rotationsbeschleunigung, insbesondere während einer Verlegung des verlegbaren Quantencomputers (QC), zu kompensieren und/oder
      - die Wirkung einer Beschleunigung und/oder eine Rotationsbeschleunigung, insbesondere während einer Verlegung des verlegbaren Quantencomputers (QC), zu vermindern, wobei die fünften Mittel insbesondere
         - ein oder mehrere Beschleunigungssensorsysteme und/oder Beschleunigungssensoren und/oder
         - ein oder mehrere Geschwindigkeitssensorsystem und/oder ein oder mehrere Geschwindigkeitssensoren und/oder
         - eine kardanische Aufhängung (KAH) oder eine funktionsäquivalente Vorrichtung, insbesondere umfassend einen oder mehrere Kreisel (KR), und/oder
         - ein oder mehrere Rotationsbeschleunigungssensorsysteme und/oder Rotationsbeschleunigungssensoren und/oder
         - ein oder mehrere Rotationssensorsysteme und/oder Rotationssensoren (RTS) und/oder
         - ein oder mehrere Positionsverschiebungssensoren und/oder
         - ein oder mehrere Lageregelungssystem und/oder
         - einen oder mehrere Positioniertische und/oder Positioniervorrichtungen und/oder
         - eine oder mehrere Bilderfassungsvorrichtungen und/oder Bildverarbeitungsvorrichtungen und/oder
         - andere fluoreszierende Defektzentren im Substrat (D) mit anderen Fluoreszenzwellenlängen, die eine Fluoreszenzstrahlung mit einer von der Fluoreszenzwellenlänge (λ_{fl}) der Quantenpunkte (NV1, NV2, NV3) der Quantenbits verschieden Fluoreszenzwellenlänge aufweisen, umfassen können, und/oder
   - dass der Quantencomputer (QC) sechste Mittel (QUV) umfasst, die dazu eingerichtet sind, die Übertragung mechanischer Stöße und/oder Schwingungen, unter optischen Vorrichtungsteilen (D, OS, DBS, STM, PD, CM1, LD) und/oder weiteren Hilfsvorrichtungsteilen (KV, XT, YT, MGx, MGy, MGz, MSx, MSy, MSz, MWA, CM2, LM, HECLCS) der optischen Teilvorrichtungen des Quantencomputers (QC) untereinander zu verhindern und/oder zu dämpfen und/oder
   - dass der Quantencomputer (QC) siebte Mittel (QUV) umfasst, die dazu eingerichtet sind, die Übertragung mechanischer Stöße und/oder Schwingungen, zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) der optischen Teilvorrichtungen des Quantencomputers (QC), insbesondere über Körperschall, zu verhindern und/oder zu dämpfen, wobei die siebten Mittel u.a.
      - in Versorgungsleitungen zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) eingefügt sein können und/oder
      - in Datenleitungen (SDA) zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) eingefügt sein können und/oder
      - spezielle mechanische, zumindest abschnittsweise Ausformungen von Versorgungsleitungen zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) umfassen können und/oder
      - spezielle mechanische, zumindest abschnittweise Ausformungen von Datenleitungen (SDA) zu optischen Vorrichtungsteilen (D, OS, DBS, STM, PD, CM1, LD) des Quantencomputers (QC) und/oder zu den weiteren Hilfsvorrichtungsteilen (KV, XT, YT, MGx, MGy, MGz, MSx, MSy, MSz, MWA, CM2, LM, HECLCS) umfassen können und/oder
   - dass der Quantencomputer (QC) achte Mittel (QUV) umfasst, die dazu eingerichtet sind, einen nicht statistischen Fehler des Quantencomputers (QC) zu erfassen und/oder bei Auftreten eines nicht statistischen Fehler des Quantencomputers (QC) Gegenmaßnahmen durchzuführen oder zu initiieren, und/oder
   - dass der Quantencomputer (QC) neunte Mittel (QUV) umfasst, die dazu eingerichtet sind, einen nicht statistischen Fehler des Quantencomputers (QC) zu erfassen und/oder bei Auftreten eines nicht statistischen Fehler des Quantencomputers (QC) einen solchen nicht statistischen Fehler an ein übergeordnetes System zu signalisieren, und/oder
   - dass der Quantencomputer (QC) zehnte Mittel (QUV) umfasst, die dazu eingerichtet sind, einen nicht statistischen Quantenfehler des Quantencomputers (QC) zu erfassen und/oder bei Auftreten eines nicht statistischen Fehler des Quantencomputers (QC) Gegenmaßnahmen durchzuführen oder zu initiieren, und/oder
   - dass der Quantencomputer (QC) elfte Mittel (QUV) umfasst, die dazu eingerichtet sind, einen nicht statistischen Quantenfehler des Quantencomputers (QC) zu erfassen und/oder bei Auftreten eines nicht statistischen Fehler des Quantencomputers (QC) einen solchen nicht statistischen Quantenfehler an ein übergeordnetes System zu signalisieren und/oder
   - dass der Quantencomputer (QC) zwölfte Mittel (MSx, MSy, MSz, MFSx, MFSy, MFSz, PM, MGx, MGy, MGz, PV) umfasst, die dazu eingerichtet sind, Änderungen des Magnetfelds am Ort der Quantenbits (QUB, CQUB) während und/oder nach einer Verlegung des Quantencomputers (QC) zu erfassen und zu kompensieren, und/oder
   - dass der Quantencomputer (QC) dreizehnte Mittel (AS) zur Abschirmung externer Magnetfeldänderungen umfasst.

In einem weiteren Aspekt wird ein Fahrzeug mit einem oben-beschriebenen Quantencomputer (QC) bereitgestellt.

In einem weiteren Aspekt wird ei nGyroskop mit einem Quantencomputer (QC) nach einem oder mehreren der vorhergehenden Ansprüche bereitgestellt.

Für den Betrieb eines Quantencomputers QC kann eine geeignete Mikrocode-Programmierung der Steuervorrichtung µC des Quantencomputers QC vorteilhaft sein. In den nachfolgenden Abschnitten und in der bereits veröffentlichten Patentliteratur werden verschiedene Verfahren und Verfahrensschritte beschrieben, die dazu dienen können, verschiedene Komponenten und insbesondere elektronische Quantenbits QUB und deren Quantenpunkte NV und/oder nukleare Quantenbits CQUB und deren Kernquantenpunkte CI des Quantencomputers QC in vorbestimmter Weise zu manipulieren. Jede dieser Quantenoperationen und konventionellen Operationen kann durch einen Operator-Kode, den Quanten-OP-Code symbolisiert werden. Im Sinne des hier vorgestellten Dokuments ist als ein Quanten-Op-Code ein Code, bei dessen Ausführung durch die Steuervorrichtung µC des Quantencomputers QC der Quantencomputer QC einen Quantenzustand zumindest eines seiner elektronischen Quantenbits QUB oder eines seiner nuklearen Quantenbits CQUB manipuliert und/oder ausliest.

Beispielsweise ist es denkbar, dass der Quantencomputer QC eine programmierbare Logik aufweist. Eine solche programmierbare Logik kann beispielsweise ein FPGA (Abkürzung für den englischen Begriff: Field Programmable Gate Array) oder dergleichen sein.

Optional umfasst der Quantencomputer QC ein FPGA. Optional umfasst das FPGA ein oder mehrere Vorrichtungsteile der Steuervorrichtung µC. Ggf. kann eine programmierbare Logik aber auch ein Vorrichtungsteil der Steuervorrichtung µC sein. Optional empfängt das FPGA Konfigurationsdaten über einen externen Datenbus EXTDB, die die Manipulation der elektronischen Quantenbits QUB und/oder der nuklearen Quantenbits CQUB und/oder die Auslesung der elektronischen Quantenbits QUB und/oder der nuklearen Quantenbits CQUB beim bestimmungsgemäßen Betrieb des Quantencomputers QC beeinflussen. Gleichzeitig können einige Vorrichtungsteile extrem teuer sein. Daraus kann sich die technische Anforderung der nachträglichen Anpassbarkeit bestehender Quantencomputer QC an neue wissenschaftliche und technische Erkenntnisse und an neue Kundenanforderungen aus neuen, heute noch unbekannten Marktanforderungen ergeben.

Optinoal kann die Verwendung eines proFPGA Xilinx Virtex UltraScale+ XCVU13P FPGA Boards für die Realisierung der Digitalteile des Quantencomputers QC vorteilhaft sein. Das Xilinx Virtex UltraScale+ XCVU13P FPGA kann für die Ansteuerung der ersten erste Mittel (z.B. WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC) des Quantencomputers QC und zur Ansteuerung der zweiten Mittel (z.B. WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC) des Quantencomputers QC geeignet sein. Optional umfasst das FPGA auch die digitalen Schaltungsteile der ersten Mittel (z.B. WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC) und der zweiten Mittel (z.B. WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC) in Gänze oder in Teilen.

Optional umfasst das FPGA auch die digitalen Schaltungsteile der dritten Mittel D, XT, YT, KV, OS, DBS, STM, CM1, PD, V, WFG, CIF, µC).

Das hier vorgelegte Dokument schlägt vor, zumindest einen oder mehrere oder alle der folgenden beispielhaften Micro-Codes Als Quanten-Op-Codes vorzusehen:

| Mnemonic | Bedeutung des Quanten-OP-Code |
|---|---|
| MFMW | Ermittlung der gemeinsame Elektron-Elektron Mikrowellenfrequenz (f_{MW}) für ein einzelnes elektronisches Quantenbit **QUB** und/oder einen einzelnen elektronischen Quantenpunkt **NV** |
| MFMWEE | Ermittlung der gemeinsame Elektron1-Elektron2-Mikrowellenfrequenz (f_{MW}) für die Kopplung zweier elektronischer Quantenbits **(QUB1, QUB2)** und/oder für die Kopplung zweier elektronischer Quantenpunkte **(NV1, NV2).** |
| MFMWCE | Ermittlung der Kern-Elektron Mikrowellenfrequenz (f_{MWCE}) für die Kopplung eines elektronischen Quantenbits **QUB** und eines nuklearen Quantenbits **CQUB** in einem eines Kern-Elektron-Quantenregisters beispielsweise umfassen einen |
| | elektronischen Quantenpunkt **NV** und einen Kernquantenpunkt **CI.** |
| MFRWCC | Ermittlung der Kern-Kern Radiowellenfrequenz (f_{RWCC}) eines Kern-Kern-Quantenregisters aus zwei nuklearen Quantenbits **(CQUB1** und **CQUB2)** typischerweise umfassend einen ersten Kernquantenpunkt **CI1** und einen zweiten Kernquantenpunkt **CI2.** |
| MFRWCC | Ermittlung der Elektron-Kern Radiowellenfrequenz (f_{RWEC}) für die Kopplung für die Kopplung eines elektronischen Quantenbits **QUB** und eines nuklearen Quantenbits **CQUB** in einem eines Elektron- Kern-Quantenregisters beispielsweise umfassen einen elektronischen Quantenpunkt **NV** und einen Kernquantenpunkt **CI.** |
| RESQB | Zurücksetzen eines oder mehrerer elektronischer Quantenbits **QUB** und/oder eines oder mehrerer Quantenpunkte **NV** dieser Quantenbits **QUB.** |
| RESQBR | Zurücksetzen eines oder mehrerer elektronischer Quantenbits **QUB** und/oder eines oder mehrerer Quantenpunkte **NV** dieser Quantenbits **QUB** durch Relaxation. |
| RESQRCE | Zurücksetzen eines oder mehrerer Kern-Elektron-Quantenregister umfassend ein elektronisches Quantenbit **QUB** und ein nukleares Quantenbit **CQUB** in einem Kern-Elektron-Quantenregister beispielsweise umfassend einen elektronischen Quantenpunkt **NV** und einen Kernquantenpunkt **CI.** |
| MQBP | Manipulation eines elektronischen Quantenbits **QUB** und/oder eines Quantenpunkts **NV** eines elektronischen Quantenbits **QUB** (CROT Operation). |
| MCBP | Manipulation eines nuklearen Quantenbits **CQUB** und/oder eines Kernquantenpunkts **CI** eines nuklearen Quantenbits **CQUB** (CROT Operation). |
| SMQB | Selektive Manipulation eines elektronischen Quantenbits **QUB** und/oder eines Quantenpunkts **NV** eines elektronischen Quantenbits **QUB** innerhalb eines Quantenregisters aus mehreren elektronischen Quantenbits **(QUB1, QUB1)** und/oder innerhalb eines Quantenregisters aus mehreren Quantenpunkten **(NV1, NV2)** (CROT Operation). |
| KQBQB | Kopplung eines ersten elektronischen Quantenbits **QUB1** mit einem zweiten elektronischen Quantenbit **QUB2** und/oder Kopplung eines ersten Quantenpunkts **NV1** eines ersten elektronischen Quantenbits **QUB1** mit einem zweiten Quantenpunkt **NV2** eines zweiten elektronischen Quantenbits **QUB2** |
| KQBCB | Kopplung ersten elektronischen Quantenbits **QUB1** mit einem nuklearen Quantenbit **CQUB** und/oder Kopplung eines Quantenpunkts **NV** eines ersten elektronischen Quantenbits **QUB1** mit einem Kernquantenpunkt **CI** eines nuklearen Quantenbit **CQUB.** |
| CNQBCBA | CNOT Verknüpfung eines ersten elektronischen Quantenbits **QUB** mit einem nuklearen Quantenbit **CQUB** und/oder CNOT Verknüpfung eines Quantenpunkts **NV** mit einem Kernquantenpunkt **CI** |
| CNQBCBB | CNOT Verknüpfung eines ersten elektronischen Quantenbits **QUB** mit einem mit einem nuklearen Quantenbit **CQUB** und/oder CNOT Verknüpfung eines Quantenunkts **NV** mit einem mit einem Kernquantenpunkt **CI.** |
| CNQBCBC | CNOT-Verknüpfung eines elektronischen Quantenbits **QUB** mit einem nuklearen Quantenbit **CQUB** und/oder CNOT-Verknüpfung eines Quantenpunkts **NV** mit einem Kernquantenpunkt **CI.** |
| VQB | Selektive Bewertung eines elektronischen Quantenbits **QUB1** innerhalb eines Quantenregisters **(QUREG)** mit mindestens zwei elektronischen Quantenbits **(QUB1, QUB2)** und/oder selektive Bewertung eines Quantenpunkts **NV1** innerhalb eines Quantenregisters **(QUREG)** mit mindestens zwei Quantenpunkten **(NV1, NV2).** |
| SCNQB | Selektive CNOT-Operation zur Manipulation des Quantenzustands eines Quantenbits **QUB1** innerhalb eines Quantenregisters aus mehreren elektronischen Quantenbits **(QUB1, QUB2)** und/oder selektive CNOT-Operation zur Manipulation des Quantenzustands eines Quantenpunkts **NV1** innerhalb eines Quantenregisters aus mehreren Quantenpunkten **(NV1, NV2).** |

Es ist denkbar, weitere Operationen durch möglichen Varianten und/oder Kombinationen vorzusehen. Des Weiteren kann es vorteilhaft sein, die manche oder alle der üblichen Assembler Instruktionen üblicher von-Neumann-Rechner und/oder Rechner mit Harvard-Architektur wie Sprünge, Verzweigungen, bedingte Sprünge, Programmzählermanipulationen, Move-Operationen, Additionsoperationen, Schiebeoperationen (links und rechts), Inversion, Bitmanipulationen, Aufruf von Unterroutinen, Stack-Operationen, Stack-Pointer-Operationen etc. weiter zuzulassen.

Auch kann es vorteilhaft sein, diese MNEMONICS und bestimmte, oft verwendete Sequenzen der MNEMONICs ebenfalls hard zu in dem **FPGA** zu kodieren und für diese eigene Mnemonics vorzusehen.

Die entsprechenden Signalabläufe sind optional als Programmteile des Quantencomputerprogramms und/oder eines Quantencomputerbetriebssystems in einem optional nicht flüchtigen Programmspeicher **NVM** der Steuervorrichtung **µC** beispielsweise innerhalb des **FPGAs** abgelegt. Alternativ kann der Quantencomputer **QC** zu Betriebsbeginn des Quantencomputers **QC** die entsprechenden Signalabläufe und Programmteile des Quantencomputerprogramms und/oder eines Quantencomputerbetriebssystems über einen externen Datenbus **EXTDB** oder aus einem Speichermedium in einen Speicher **(RAM, NVM)** des Quantencomputers **QC** laden. Optional ist in dem nichtflüchtigen Speicher **NVM** der Steuervorrichtung **µC** des Quantencomputers **QC** ein Quantencomputerbios abgelegt, das der Steuervorrichtung **µC** bei Ausführung von Programmteilen des Quantencomputerbios das Laden eines Quantencomputerbetriebssystems aus einem Speichermedium und/oder über einen externen Datenbus **EXTDB** und letztlich das Laden eines Quantencomputerprogramms aus einem Speichermedium und/oder über einen externen Datenbus **EXTDB** und deren Ausführung ermöglicht.

Der oder die Speicher **(RAM, NVM)** der Steuervorrichtung **µC** umfassen dann u.a. optional eine Tabelle der Resonanzfrequenzen der elektronischen Quantenbits **QUB** und der zugehörigen Quantenpunkte **NV** und der nuklearen Quantenbits **CQUB** und der zugehörigen Kernquantenpunkte **CI** und deren Kopplungen sowie die zugehörigen Rabi-Frequenzen. Diese Daten können es der Steuervorrichtung **µC** innerhalb des **FPGAs** erlauben, die ersten elektronischen Quantenbits **QUB** und deren Quantenpunkte **NV,** die zweiten nuklearen Quantenbits **CQUB** und deren kernquantenpunkte **CI,** die Paare aus zwei und ggf. mehr ersten elektronischen Quantenbits **QUB** und deren Quantenpunkten **NV,** die Paare aus erstem elektronischem Quantenbit **QUB** mit zugehörigem Quantenpunkt **NV** und zweiten nuklearen Quantenbit **CQUB** mit zugehörigem Kernquantenpunkt CI und ggf. die komplexeren Strukturen selektiv und gezielt anzusprechen und zu manipulieren.

Ein Programm, ein Q-Assembler, übersetzt optional einen in für den Menschen lesbarer Textform vorliegenden Steuercode in binare Code-Sequenzen, die durch die Steuervorrichtung **µC** bei Bedarf ausgeführt werden, wodurch die Steuervorrichtung **µC** des Quantencomputers **QC** in vorgesehener Weise dann die Quanteninformation der ersten elektronischen Quantenbits **QUB** und deren Quantenpunkte **NV,** der zweiten nuklearen Quantenbits **CQUB** und deren Kernquantenpunkte **CI,** der Paare aus zwei und ggf. mehr ersten elektronischen Quantenbits **(QUB1, QUB2)** und der zugehörigen Quantenpunkte **(NV1, NV2),** der Paare aus erste elektronischem Quantenbit **QUB** mit zugehörigem Quantenpunkt **NV** und zweiten nuklearem Quantenbit **CQUB** mit zugehörigem Kernquantenpunkt **CI** und ggf. der komplexeren Strukturen selektiv und gezielt anzusprechen und zu manipulieren. Mit Hilfe dieser Quanten-Assembler-Sprache kann es möglich sein, für den Quantencomputer **QC** komplexere Programme zu-entwickeln, um die Geräte zu bedienen und eine einfache Schnittstelle für die Softwareentwicklung bereitzustellen. Die Steuervorrichtung **µC** des Quantencomputers **QC** führt den binären Mikrocode des Quantencomputerprogramms in ihrem Speicher **(NVM, RAM)** aus. Mikrocode im Sinne des vorgeschlagenen Projekts ist die Verbindung zwischen einem vorgegebenen Binärcode - dem Quantenassembler-Code -, den die Steuervorrichtung **µC** von einem externen Überwachungscomputer ZSE über den externen Datenbus **EXTDB** auf einer Seite empfängt, und der konkreten Folge von Signalen und der entsprechenden Signalformen für die ersten Mittel (z.B. **WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC**) und für die zweiten Mittel (z.B. **WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC)** und für die dritten Mittel (z.B. **D, XT, YT, KV, OS, DBS, STM, CM1, PD, V, WFG, CIF, µC).** In diesem Sinne ist die Steuereinheitsfunktion der Steuervorrichtung **µC** des Quantencomputers **QC** mit der Mikrocode-Programmierung eines herkömmlichen Prozessors vergleichbar.

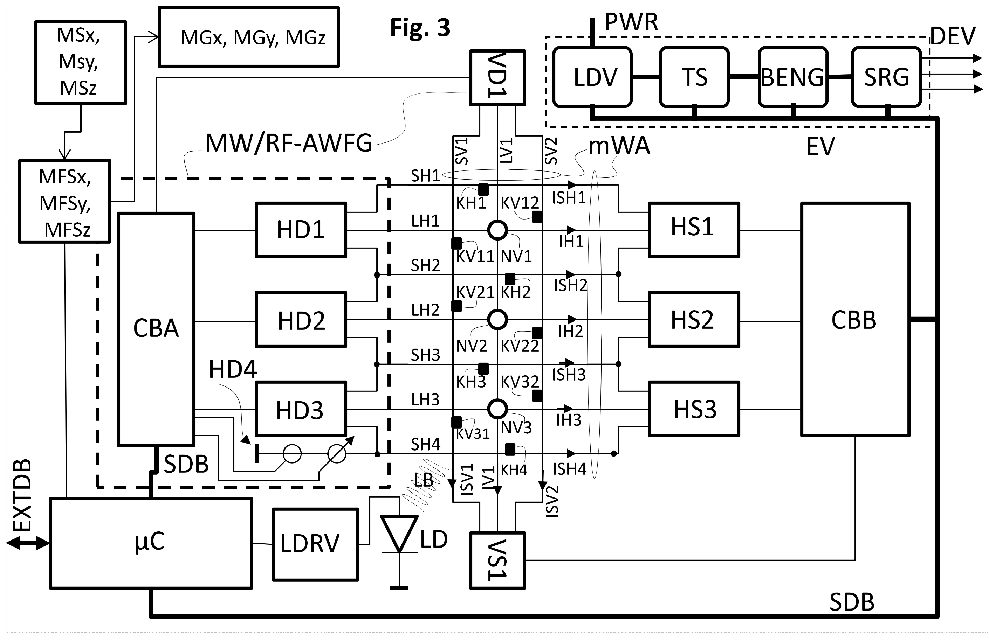

Die Steuervorrichtung **µC** hat optional das Quantencomputerprogramm in ihrem Speicher **(RAM, ROM)** zum Zeitpunkt der Ausführung optional zumindest teilweise gespeichert. Das Quantencomputerprogramm umfasst optional Sequenzen von Quantenassembler-Code in binärer Form, der sich in einem Speicher **(RAM, ROM)** der Steuervorrichtung **µC** befindet. Die Steuervorrichtung **µC** führt den binären Quantenassembler-Code, der sich in einem Speicher **(RAM, ROM)** der Steuervorrichtung **µC** optional als Folge binärer Zahlen befindet, aus und erzeugt optional auf den vertikalen Leitungen und horizontalen Leitungen die Signale unter Zuhilfenahme weiterer Mittel **(CBA, HD1, HD2, HD3, VD1, VS1, HS1, HS2, HS3, LEDDR, LED, CBB)** (siehe auch Figur 3) in Abhängigkeit von diesen optional binären Codes. Dies ermöglicht die Entwicklung von Quantencomputersoftware auf der hier beschriebenen Hardware.

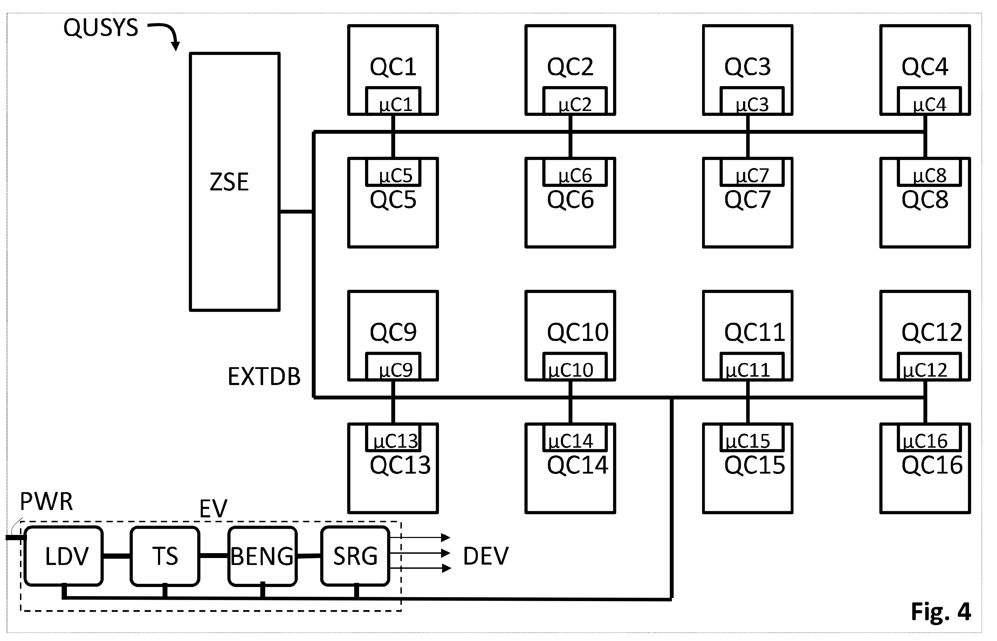

Die folgenden Ausführungen betreffen Grundlagen und optionalen einer optionalen Ausführungsform eines Quantencomputersystems:
Ein externer Überwachungscomputer **ZSE** kann über einen konventionellen externen Datenbus **EXTDB** eine Vielzahl von optional gleich aufgebauten Quantencomputern **(QC1** bis **QC16)** ansprechen. Der externe konventionelle Überwachungscomputer **ZSE** bildet dann mit der Vielzahl von Quantencomputern **(QC1** bis **QC16)** ein Quantencomputersystem **QUSYS.** Optional sind die Quantencomputer **(QC1** bis **QC16)** des Quantencomputersystems **QUSYS** wie hier im Folgenden beschrieben aufgebaut. Der hier beschriebene Aufbau der Quantencomputer **(QC1** bis **QC16)** eines Quantencomputersystems **QUSYS** hat den Vorteil, dass er sehr kompakt und sehr preiswert ist. Die Quantencomputer **(QC1** bis **QC16)** des Quantencomputersystems **QUSYS** können beispielsweise bei Verwendung von Diamant als Material der Substrate D bzw. der epitaktischen Schichten **DEPI** und von NV-Zentren als Quantenpunkten **NV** der ersten elektronischen Quantenbits **QUB** bei Raumtemperatur betrieben werden. Optional verwendet das Quantencomputersystem **QUSYS** eine sehr große Anzahl von Quantencomputern **(QC1** bis **QC16)** für das Quantencomputersystem **QUSYS.** Optional sind alle oder zumindest Gruppen von Quantencomputer **(QC1** bis **QC16)** des Quantencomputersystems **QUSYS** gleich aufgebaut, um Vergleichbarkeit der Quantenberechnungsergebnisse innerhalb einer solchen Gruppen von Quantencomputer **(QC1** bis **QC16)** des Quantencomputersystems **QUSYS** sicherzustellen. Beispielsweise können Sie wie der Quantencomputer **QC** der Figuren 1 und 3 aufgebaut sein. Optional führen Gruppen von Quantencomputern der Quantencomputer **(QC1** bis **QC16)** des Quantencomputersystems **QUSYS** oder alle Quantencomputer **(QC1** bis **QC16)** des Quantencomputersystems **QUSYS** die gleichen Operationen innerhalb einer solchen Gruppen von Quantencomputer **(QC1** bis **QC16)** des Quantencomputersystems **QUSYS** im Wesentlichen zur gleichen Zeit zeitlich parallel aus. Da die Realisierungen der zweiten nuklearen Quantenbits **CQUB** mit Ihren Kernquantenpunkten **CI** und der elektronischen Quantenbits **QUB** mit ihren Quantenpunkten **NV** im Detail unter den Quantencomputern **(QC1** bis **QC16)** voneinander abweichen können, können kleinere Unterschiede bestehen. Wichtig ist, dass die Quantencomputer **(QC1** bis **QC16)** innerhalb einer Gruppe von Quantencomputer **(QC1** bis **QC16)** des Quantencomputersystems **QUSYS** sich funktionsäquivalent zueinander verhalten. Trotzdem werden nicht alle Quantencomputer der Quantencomputer **(QC1** bis **QC16)** bei der Durchführung von Quantenoperationen zu den gleichen Ergebnissen kommen, da Quantencomputer **QC** nur bestimmte Ergebnisse mit einer bestimmten Wahrscheinlichkeit berechnen. Hier kann die große Zahl der Quantencomputer **(QC1** bis **QC16)** des Quantencomputersystems **QUSYS** (siehe auch Figur 4) ausgenutzt werden. Da alle Quantencomputer **(QC1** bis **QC16)** des Quantencomputersystems **QUSYS** optional zumindest zeitweise vorschlagsgemäß und optional parallel in gleicher Weise arbeiten, werden die Quantencomputer **(QC1** bis **QC16)** am häufigsten die korrekten Ergebnisse errechnen und fehlerhafte Werte seltener errechnen. Der externe Überwachungscomputer, in Figur 4 die zentrale Steuereinrichtung **ZSE,** des Quantencomputersystems **QUSYS** fragt über die Datenleitung die Ergebnisse einer in gleicher Weise von allen Quantencomputern **(QC1** bis **QC16)** ausgeführten, längeren Sequenz von Quantenoperationen bei allen betreffenden Quantencomputern **(QC1** bis **QC16)** ab. Der externe Überwachungscomputer, in Figur 4 die zentrale Steuereinrichtung **ZSE,** bewertet alle Ergebnisse nach Häufigkeit der Errechnung durch die Quantencomputer **(QC1** bis **QC16)** des Quantencomputersystems **QUSYS.** Mit Hilfe eines statistischen Verfahrens errechnet der externe Überwachungscomputer des Quantencomputersystems **QUSYS** das wahrscheinlichste Ergebnis aus den Ergebnissen der Quantencomputer **(QC1** bis **QC16)** und wählt dieses als gültiges Zwischenergebnis aus. Danach übermittelt der externe Überwachungscomputer, in Figur 4 die zentrale Steuereinrichtung **ZSE,** des Quantencomputersystems **QUSYS** dieses gültige Zwischenergebnis an alle Quantencomputer **(QC1** bis **QC16)** und veranlasst optional diese zum Ersten ihre jeweiligen ersten elektronischen Quantenbits **QUB** mit deren Quantenpunkten **NV** und ihre jeweiligen zweiten nuklearen Quantenbits **CQUB** mit deren Kernquantenpunkten **CI** zurückzusetzen und dann die Bloch-Vektoren so einzustellen, dass sie dem Zwischenergebnis entsprechen. Danach führen die Quantencomputer **(QC1** bis **QC16)** dann die nächste längere Sequenz von Quantenoperationen aus bis wieder ein zweites Zwischenergebnis vorliegt und dann die nächste Fehlerkorrekturschleife durch den externen Überwachungscomputer, in Figur 4 die zentrale Steuereinrichtung **ZSE,** des Quantencomputersystems **QUSYS** durchgeführt wird.

Ein solches Quantencomputersystem **QUSYS** zeichnet sich somit optional dadurch aus, dass es einen konventionellen externen Überwachungscomputer, in Figur 4 die zentrale Steuereinrichtung **ZSE,** des Quantencomputersystems **QUSYS** umfasst, der mit den Quantencomputern **(QC1** bis **QC16)** des Quantencomputersystems **QUSYS** über einen oder mehrere optional konventionelle Datenbusse **EXTDB** kommuniziert. Die Datenbusse **EXTDB** können konventionelle Datenübertragungstrecken beliebiger Art sein. Optional ist die Anzahl der Quantencomputer **(QC1** bis **QC16)** in dem Quantencomputersystem **QUSYS** größer als 5, besser größer als 10, besser größer als 20, besser größer als 50, besser größer als 100, besser größer als 200, besser größer als 500, besser größer als 100, besser größer als 200, besser größer als 500, besser größer als 1000, besser größer als 2000, besser größer als 5000, besser größer als 10000, besser größer als 20000, besser größer als 50000, besser größer als 100000, besser größer als 200000, besser größer als 50000, besser größer als 1000000. Hier gilt, dass die Auflösung der Fehlerkorrektur umso besser wird, je mehr Quantencomputer **(QC1** bis **QC16)** Teil des Quantencomputersystems **QUSYS** sind. Optional umfasst jeder Quantencomputer **(QC1** bis **QC16)** dabei optional jeweils eine Steuervorrichtung **µC,** die jeweils mit dem externen Überwachungscomputer, in Figur 4 die zentrale Steuereinrichtung **ZSE,** des Quantencomputersystems **QUSYS** über den einen Datenbus **EXTDB** oder die mehreren, optional konventionelle Datenbusse **EXTDB** kommunizieren. Optional umfasst jeder Quantencomputer der Quantencomputer **(QC1** bis **QC16)** Mittel, die geeignet sind, die Zustände ihrer ersten elektronischen Quantenbits **NV** und/oder ihrer zweiten nuklearen Quantenbits **CI** und/oder der Paare von ersten elektronischen Quantenbits **NV** und/oder der Paare aus erstem elektronischen Quantenbits **NV** und zweiten nuklearen Quantenbits **CI** zu manipulieren und ggf. zu kontrollieren. Des Weiteren verfügen die Quantencomputer dieser Quantencomputer **(QC1** bis **QC16)** jeweils optional über Mittel **(LD, LEDDRV)** zur Erzeugung von Pumpstrahlung **LB** mit einer Pumpstrahlungswellenlänge **λₚₘₚ**. (siehe auch Abschnitt ZPL-Tabelle) Ggf. kann diese Erzeugung der Pumpstrahlung **LB** auch zentral für einen oder mehrere oder alle Quantencomputer **(QC1** bis **QC16)** des Quantencomputersystems **QUSYS** erfolgen. In letzterem Fall wird die zugehörige Lichtquelle **LD** dann abweichend von Figur 4 von dem externen Überwachungscomputer des Quantencomputersystems **QUSYS** gesteuert. In Figur 4 entspricht der externe Überwachungscomputer des Quantencomputersystems **QUSYS** der zentralen Steuereinrichtung **ZSE.**

Optional umfasst der Quantencomputer **QC** die besagte Steuervorrichtung **µC.** Dabei sollte die Steuervorrichtung **µC** dazu geeignet und eingerichtet sein, beispielsweise über den besagten Datenbus **EXTDB** Befehle und/oder Kodes und/oder Kode-Folgen zu empfangen. Die die Steuervorrichtung **µC** führt dann optional in Abhängigkeit von diesen empfangenen Befehlen und/oder empfangenen Kodes und/oder empfangenen Kode-Folgen zumindest eine der folgenden Quantenoperationen durch den Quantencomputer **QC** aus: MFMW, MFMWEE, MFMWCE, MFRWCC, FRWCC, RESQB, RESQBR, RESQRCE, MQBP, MCBP, SMQB, KQBQB, KQBCB, CNQBCBA, CNQBCBB, CNQBCBC, VQB, SCNQB. Hierzu erzeugt und moduliert die besagte Steuervorrichtung **µC** je nach empfangenen Befehl die geeigneten Steuersignale auf den m vertikalen Leitungen (LV, LV1 bis LVm) (mit m als ganzer positiver Zahl), den n horizontalen Leitungen (LH, LH1 bis LHn) (mit n als ganzer positiver Zahl) und den zugehörigen Abschirmleitungen sowie zur Ansteuerung der einen Lichtquelle **LD** oder der mehreren Lichtquellen **LD.** Außerdem erfasst die Steuervorrichtung **µC** ggf. Fotoströme **Iₚₕ** und steuert ggf. eine Extraktionsspannung **Vₑₓₜ** für eine elektronische Auslesung.

Hieraus ergibt sich ein geeignetes Verfahren zum Betrieb eines Quantencomputers **QC,** wie das hier vorgelegte Dokument es vorstellt:
In einem ersten Schritt wird eine erste Datei, im Folgenden Source-Code genannt, bereitgestellt. Optional besteht der Source-Code aus Symbolen, die in einer geordneten Reihenfolge im Source-Code angeordnet sind und durch einem Menschen lesbar sind. Den grundlegenden Operationen, die die Steuervorrichtung **µC** ausführen kann und die im Folgenden Quantenassemblerbefehle genannt werden, sind dabei vorbestimmte Zeichenketten zugeordnet. Zu diesen Quantenassemblerbefehle gehören optional zumindest einige, besser alle der bereits erwähnten Quantenoperationen des Quantencomputers **QC,** also insbesondere die Quantenoperationen MFMW, MFMWEE, MFMWCE, MFRWCC, FRWCC, RESQB, RESQBR, RESQRCE, MQBP, MCBP, SMQB, KQBQB, KQBCB, CNQBCBA, CNQBCBB, CNQBCBC, VQB, SCNQB. Optional gehören zu den Quantenassemblerbefehlen aber auch solche Assemblerbefehle, wie sie von konventionellen Computern her bekannt sind.

Solche Quantenassemblerbefehle können beispielsweise die eines 6502-Prozessors und/oder ARM-Prozessors sein, der sich leicht in das **FPGA** beispielsweise als Steuervorrichtung **µC** implementieren lässt:

| TYP | MNEMONIC | BEFEHL | BEDEUTUNG |
|---|---|---|---|
| Ladebefehle | LDA | Load Accumulator | Lade Akkumulator |
| Ladebefehle | LDX | Load X-Register | Lade X-Register |
| Ladebefehle | LDY | Load Y-Register | Lade Y-Register |
| Speicherbefehle | STA | STore Accumulator | Speichere Akkumulator |
| Speicherbefehle | STX | STore X-Register | Speichere X-Register |
| Speicherbefehle | STY | STore Y-Register | Speichere Y-Register |
| Transfer-Befehle | TAX | Transfer Accumulator to X | Kopiere Akkumulator zu X |
| Transfer-Befehle | TAY | Transfer Accumulator to Y | Kopiere Akkumulator zu Y |
| Transfer-Befehle | TXA | Transfer X to Accumulator | Kopiere X zu Akkumulator |
| Transfer-Befehle | TYA | Transfer Y to Accumulator | Kopiere Y zu Akkumulator |
| Transfer-Befehle | TSX | Transfer Stackpointe to X | r Kopiere Stackpointer zu X |
| Transfer-Befehle | TXS | Transfer X to Stackpointer | Kopiere X zu Stackpointer |
| Logische Operationen | AND | And | Logisches "Und" |
| Logische Operationen | ORA | OR Accumulator | Logi-sches "Oder" |
| Logische Operationen | EOR | Exclusive OR | Logi-sches "Entweder/Oder" (XOR) |
| Arithmetische Operationen | ADC | ADd with Carry | Addiere mit Übertrag |
| Arithmetische Operationen | SBC | Subtract with Carry | Subtrahiere mit Übertrag |
| Arithmetische Operationen | INC | INCrement | Inkrementiere Speicherzelle |
| Arithmetische Operationen | DEC | DECrement | Dekrementiere Speicherzelle |
| Arithmetische Operationen | INX | INcrement X | Inkrementiere X-Register |
| Arithmetische Operationen | INY | INcrement Y | Inkrementiere Y-Register |
| Arithmetische Operationen | DEX | DEcrement X | Denkrementiere X-Register |
| Arithmetische Operationen | DEY | DEcrement Y | Denkrementiere Y-Register |
| Bitweises Verschiebeen | ASL | Arithmetical Shift Left | Bitweisees Verschieben nach links |
| Bitweises Verschiebeen | LSR | Logical Shift Right | Bitwei-ses Verschieben nacch rechts |
| Bitweises Verschieben | ROL | ROtate Left | BitweisesRo-tieren nach links |
| Bitweises Verschieben | ROR | ROR ROtate Right | Bitwei-ses Rotieren nach reechts |
| Vergleichs-Operationen | CMP | CoMPare | Vergleiche mit Akkumulator |
| Vergleichs-Operationen X | CPX | ComPare X | Vergleiche mit |
| Vergleichs-Operationen Y | CPY | ComPare Y | Vergleiche mit |
| Vergleichs-Operationen Akkumulator | BIT | BIT test | BIT-Test mit |
| Sprungbefehle (unbedingt) | JMP | JuMP | Unbedingter Sprung |
| Sprungbefehle (unbedingt) | JSR | Jump to SubRoutine | Unterprogrammaufruf |
| Sprungbefehle (unbedingt) | RTS | ReTurn from Subrout | Rückkehr aus Unter-programm |
| Sprungbefehle (unbedingt) | RTI | ReTurn from Interrup | Rückkehr aus Inter-rupt |
| Sprungbefehle (bedingt) | BCC | Branch on Carry Clear | Verzweeige bei gelöschtem Cary-Flag |
| Sprungbefehle (bedingt) | BCS | Branch on Carry Set | Verzweeige bei gesetztem Carry-Flag |
| Sprungbefehle (bedingt) | BEQ | Branch on EQual Zero-FFlag | Ver-zweige bei gesetztem |
| Sprungbefehle (bedingt) | BNE | Branch on Not Equal | Verzweeige bei gelöschtem Zero--Flag |
| Sprungbefehle (bedingt) | BPL | Branch on PLus gelöschtem Negativ-Flag | Ver-zweige bei |
| Sprungbefehle (bedingt) | BMI | Branch on Mlnus | Ver-zweige bei gesetztem Negativ-Flag |
| Sprungbefehle (bedingt) | BVC | Branch on Overflow Clear | Verzweige bei gelöschtem Overflow-Flag |
| Sprungbefehle (bedingt) | BVS | Branch on Overflow Set | Verzweige bei gesetztem Overflow-Flag |
| Flag-Befehl | SEC | SEt Carry | Setze Carry-Flag |
| Flag-Befehl | CLC | CLear Carry | Lösche Carry-Flag |
| Flag-Befehl | SEI | SEt Interrupt | Setze Interrupt-Flag |
| Flag-Befehl | CLI | CLear Interrupt | Lösche Interrupt-Flag |
| Flag-Befehl | CLV | CLear oVerflow | Lösche Overflow-Flag |
| Flag-Befehl | SED | SEt Decimal | Setze Decimal-Flag |
| Flag-Befehl | CLD | CLear Decimal | Lösche Decimal-Flag |
| Stack-Befehle | PHA | PusH Akkumulator | Lege Akkumulatorinhalt auf Stack |
| Stack-Befehle | PLA | PuLI Akkumulator | Hole Akkumulatorwert vom Stack |
| Stack-Befehle | PHP | PusH Processor status | Lege Statusregister auf Stack |
| Stack-Befehle | PLP | PuLI Processor status | Hole Statusregistervom Stack |
| Spezial-Befehle | NOP | No OPeration | Keine Operation |
| Spezial-Befehle | BRK | BReaK | Software-Interrupt |

Diese Liste ist aber nur ein Beispiel möglicher Quantenassemblerbefehle. Jedem Mnemonic ist dabei ein spezifischer, eindeutiger Wert, im folgenden OP-Code genannt, zugeordnet, der die betreffende Operation für die Steuervorrichtung **µC** kodiert. Auch jeder Quantenoperation, insbesondere den Quantenoperationen, die den Mnemonics MFMW, MFMWEE, MFMWCE, MFRWCC, FRWCC, RESQB, RESQBR, RESQRCE, MQBP, MCBP, SMQB, KQBQB, KQBCB, CNQBCBA, CNQBCBB, CNQBCBC, VQB, SCNQB entsprechen, sind typischerweise solche spezifischen, eindeutigen numerischen Wert, d.h. OP-Codes und zwar hier speziell Quanten-OP-Codes, zugeordnet. Findet die Steuervorrichtung **µC** beim Ausführen des Programms einen solchen vorbestimmten numerischen Wert, so führt die Steuervorrichtung **µC** die betreffende Operation entsprechend dem OP-Code durch. Kodiert der aufgefundene Wert mittels eines Quanten-Op-Codes eine Quantenoperation zum Manipulieren und/oder Auslesen des Quantenzustands eines ersten elektronischen Quantenbits **QUB** und/oder des Quantenzustands eines Quantenpunkts **NV** eines Quantenbits **QUB** und/oder zum Manipulieren und/oder Auslesen des Quantenzustands eines zweiten nuklearen Quantenbits **CQUB** und/oder des Quantenzustands eines Kernquantenpunkts **CI** eines zweiten nuklearen Quantenbits **CQUB** so führt die Steuervorrichtung **µC** die diesem Quanten-OP-Code zugeordnete Quantenoperation durch, deren Mnemonic dem betreffenden Quanten-OP-Code zugeordnet ist. Die Steuervorrichtung **µC** manipuliert den Quantenzustand eines ersten elektronischen Quantenbits **QUB** und/oder den Quantenzustand eines Quantenpunkts **NV** eines Quantenbits **QUB** und/oder manipuliert den Quantenzustand eines zweiten nuklearen Quantenbits **CQUB** und/oder den Quantenzustand eines Kernquantenpunkts **CI** eines zweiten nuklearen Quantenbits **CQUB** und/oder liest den Quantenzustand eines ersten elektronischen Quantenbits **QUB** und/oder den Quantenzustand eines Quantenpunkts **NV** eines Quantenbits **QUB** aus und/oder liest den Quantenzustand eines zweiten nuklearen Quantenbits **CQUB** und/oder den Quantenzustand eines Kernquantenpunkts **CI** eines zweiten nuklearen Quantenbits **CQUB** aus.

Neben den Mnemonics der möglichen Operationen und Quantenoperationen umfasst der Source-Code optional auch Daten in Form von Symbolketten. In einem zweiten Schritt übersetzt eine Datenverarbeitungsanlage den Source-Code in eine zweite Datei, im Folgenden Binar-File genannt. Das Binär-File umfasst eine geordnete Folge von Werten. Einige dieser Werte entsprechen dabei optional OP-Codes und Quanten-OP-Codes der betreffenden Mnemonics des Source-Codes. Das Binärfile umfasst darüber hinaus ggf. Daten, die als Zeichenketten im Source-Code kodiert waren. Ggf. umfasst der Source-Code auch Steuerbefehle zur Steuerung der Ausführung dieses zweiten Schrittes durch die Datenverarbeitungsanlage.

Mittels einer Datenverbindung, die optional den externen Datenbus **EXTDB** des Quantencomputers **QC** umfasst, und/oder eines Datenträgers oder eines anderen Speichermediums wird das Binar-File in einen Speicher **(RAM, NVM)** der Steuervorrichtung **µC** in einem dritten Schritt übertragen.

In einem vierten Schritt veranlassen eine Reset-Schaltung oder eine Überwachungsvorrichtung oder dergleichen, die Steuervorrichtung( **µC** veranlasst an einer vorbestimmten Stelle im Speicher mit der Ausführung der OP-Codes und Quanten-OP-Codes zu beginnen. Dabei können den OP-Codes und Quanten-Op-Codes Daten zugeordnet sein, von denen die Ausführung der OP-Codes und/oder Quanten-Op-Codes abhängt. Im Falle der Quanten-OP-Codes können solche Daten, die einem Quanten-OP-Code zugeordnet sind, beispielsweise die oben erwähnten Parameter für Quanten-OP-Code sein.

Optional symbolisiert somit jeder Quanten-Op-Code eine Manipulation und/oder ein Auslesen des Quantenzustands zumindest eines ersten elektronischen Quantenbits **NV** und/oder des Quantenzustands eines zweiten nuklearen Quantenbits **CI,** die die Steuervorrichtung **µC** bei Ausführung des Quanten-Op-Codes mit Hilfe der ersten Mittel (z.B. **WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC)** und/oder der zweiten Mittel (z.B. **WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC)** und/oder der dritten Mittel (z.B. **D, XT, YT, KV, OS, DBS, STM, CM1, PD, V, WFG, CIF, µC)** ausführt. Bei der Ausarbeitung der Erfindung wurde erkannt, dass die Beschleunigungen und Rotationsbeschleunigungen und Rotationen einen Einfluss auf die Anordnung umfassend die ersten elektronischen Quantenbits **QUB** und deren Quantenpunkte **NV** und die zweiten nuklearen Quantenbits **CQUB** und deren Kernquantenpunkte **CI** ausüben, die im Falle eines mobilen Quantencomputers **QC** kompensiert werden sollten und auf der anderen Seite aber auch als Messmittel eines Sensorsystems verwendet werden können. Die wesentliche Erkenntnis des hier vorgelegten Dokuments ist, dass es von Vorteil ist, zwei verschiedene Quantenobjekte für zwei verschiedene Typen von Quantenbits - hier elektronische Quantenbits **QUB** mit Quantenpunkten **NV** und nukleare Quantenbits **CQUB** mit Kernquantenpunkten **CI** -zu verwenden. Dabei ist es erkenntnisgemäß von Vorteil, wenn der erste Typ von Quantenbits zwei verschiedene Typen von Quantenbits von Beschleunigungen und/oder Rotationsbeschleunigungen und/oder Rotationen beeinflusst wird und wenn der der zweite Typ von Quantenbits nicht von Beschleunigungen und/oder Rotationsbeschleunigungen und/oder Rotationen beeinflusst wird.

Im vorliegenden Fall ist der erste Typ von Quantenbits der Typ der elektronischen Quantenbits **QB** mit ihren Quantenpunkten **NV.** Im vorliegenden Fall ist der zweite Typ von Quantenbits der Typ der nuklearen Quantenbits **CQUB** mit ihren Kernquantenpunkten **CI.**

Im vorliegenden Fall ist optional der erste Typ von Quantenbits der Typ der elektronischen Quantenbits **QB** mit ihren Quantenpunkten **NV** in Form paramagnetischer Zentren optional in Diamant und besonders optional in Form von NV-Zentren in Diamant. Im vorliegenden Fall ist der zweite Typ von Quantenbits optional der Typ der nuklearen Quantenbits **CQUB** mit ihren Kernquantenpunkten **CI** in Form von Isotopen mit magnetischen Moment in einem Substrat D, das im Wesentlichen optional Isotope ohne magnetisches Moment umfasst. Im vorliegenden Fall ist der zweite Typ von Quantenbits besonders optional der Typ der nuklearen Quantenbits **CQUB** mit ihren Kernquantenpunkten **CI** in Form von ¹³C- und/oder ¹⁴N- und/oder ¹⁵N-Isotopen mit magnetischen Moment in einem Substrat **D,** das Dimant umfasst. Der Diamant des Substrats **D** umfasst dabei optional im Bereich der Quantenbits **QUB** und/oder der Kernquantenbits **CQUB** im Wesentlichen optional ¹²C-Isotope ohne magnetisches Moment.

Dies ermöglicht die Erfassung dieser der Beschleunigungen und/oder Rotationsbeschleunigungen und/oder Rotationen und deren Kompensation und ist neu gegenüber dem Stand der Technik.

In einer Ausprägung des Vorschlags weist der Quantencomputer **QC** mindestens zwei erste elektronische Quantenbits **(QUB1, QUB2)** mit jeweiligen Quantenpunkten **(NV1, NV2)** auf, wobei das erste erste elektronische Quantenbit **QUB1** mit seinem ersten Quantenpunkt **NV1** mit dem zweiten ersten elektronischen Quantenbit **QUB2** mit dessen zweiten Quantenpunkt **NV2** koppelbar und/oder verschränkbar ist. Dies ermöglicht eine Skalierung der ersten elektronischen Quantenbits **QUB1, QUB2** zu größeren Quantenregistern **QUREG.**

In einer Ausprägung des Vorschlags weist der Quantencomputer **QC** mindestens zwei erste elektronische Quantenbits **(QUB1, QUB2)** mit jeweiligen Quantenpunkten **(NV1, NV2)** auf, wobei das erste erste elektronische Quantenbit **QUB1** mit seinem ersten Quantenpunkt **NV1** mit dem zweiten ersten elektronischen Quantenbit **QUB2** mit dessen zweiten Quantenpunkt **NV2** direkt mittels Dipol-Dipol-Kopplung koppelbar und/oder verschränkbar ist. Dies ermöglicht eine Skalierung der ersten elektronischen Quantenbits **QUB1, QUB2** zu größeren Quantenregistern **QUREG** und den Betrieb des Quantencomputers **QC** bei Raumtemperatur.

In einer Ausprägung des Vorschlags weist der Quantencomputer **QC** mindestens erstes elektronisches Quantenbit **QUB** mit einem Quantenpunkt **NV** und ein zweites nukleares Quantenbit **CQUB** mit einem Kernquantenpunkt **CI** auf. Dabei ist optional das erste elektronische Quantenbit QUB bzw. der Quantenpunkt **NV** des ersten elektronischen Quantenbits **QUB** mit dem zweiten nuklearen Quantenbit **CQUB** und/oder dem Kernquantenpunkt **CI** des zweiten nuklearen Quantenbits **CQUB** koppelbar und/oder verschränkbar. Dies ermöglicht die Nutzung der nukleare Spins als zweite nukleare Quantenbits **CBUB** mit einer wesentlich längeren T2-Zeit.

In einer Ausprägung des Vorschlags weist der Quantencomputer **QC** mindestens zwei erste elektronische Quantenbits **(QUB1, QUB2)** mit jeweiligen Quantenpunkten **(NV1, NV2)** mindestens zwei zweite nukleare Quantenbits **(CQUB1, CQUB2)** auf. Optional sind das erste erste elektronische Quantenbit **QUB1** und/oder dessen Quantenpunkt **NV1** mit dem ersten zweiten nuklearen Quantenbit **CQUB1** und/oder dessen Kernquantenpunkt **CI1** koppelbar und/oder verschränkbar. Optional sind das zweite erste elektronische Quantenbit **QUB2** und/oder dessen Quantenpunkt **NV2** mit dem zweiten zweiten nuklearen Quantenbit **CQUB2** und/oder dessen Kernquantenpunkt **CI2** koppelbar und/oder verschränkbar. Optional ist das erste erste elektronische Quantenbit **QUB1** und/oder dessen Quantenpunkt **NV1** mit dem zweiten ersten Quantenbit **QUB2** und/oder dessen Quantenpunkt **NV** koppelbar und/oder verschränkbar. Dies macht den Quantencomputer **QC** hinsichtlich der Anzahl der ersten elektronischen Quantenbits **QUB** und der zugehörigen Quantenpunkte **NV** und damit der Anzahl der zweiten nuklearen Quantenbits **CQUB** und der zugehörigen Kernquantenunkte **CI** skalierbar. Der Quantencomputer **QC** kann dann von einander entfernte zweite nuklearen Quantenbits **CQUB** und deren Kernquantenpunkte **CI** miteinander über die Ketten aus ersten elektronischen Quantenbits **QUB** und deren Quantenpunkten **NV** koppeln bzw. verschränken.

Optional umfassen die ersten elektronischen Quantenbits **QUB** paramagnetische Zentren und/oder NV-Zentren in Diamant und/oder SiV-Zentren und/oder TR1-Zentren und/oder TR12-Zentren und/oder L1-Zentren und/oder PbV-zentren und/oder GeV-Zentren in Diamant als Quantenpunkte **NV.** Dabei sind NV-Zentren in Diamant als Quantenpunkte **NV** von ersten elektronischen Quantenbits **QUB** besonders optional.

Optional umfassen ein oder mehrere zweite nukleare Quantenbits **CQUB** nukleare Spins von ¹³C-Isotopen und/oder ¹⁴N-Isotopen und/oder ¹⁵N-Isotopen und/oder anderer Isotope mit nuklearem Spin als Kernquantenpunkte **CI** zweiter nuklearer Quantenbits **CQUB.**

Optional der vorschlagsgemäße Quantencomputer **QC** dazu eingerichtet, die Kopplungsfrequenzen und/oder Kopplungsphasenlagen der elektromagnetischen Strahlung zur Manipulation von Paaren aus koppelbaren jeweils zwei ersten elektronischen Quantenbits **QUB1, QUB2** und deren Quantenpunkten **NV1, NV2** untereinander zu bestimmen und als zu verwendende Koppelgrundfrequenzen und/oder Kopplungsphasenlagen abzuspeichern. Optional verwendet der Quantencomputer **QC** bei der Manipulation dieser jeweiligen Paare aus koppelbaren jeweils zwei ersten elektronischen Quantenbits **QUB1, QUB2** und deren Quantenpunkten **NV1, NV2** elektromagnetische Strahlung der Koppelgrundfrequenz des betreffenden Paars aus koppelbaren jeweils zwei ersten elektronischen Quantenbits **QUB1, QUB2** und deren Quantenpunkten **NV1, NV2.**

Optional weist dabei die elektromagnetische Strahlung der Koppelgrundfrequenz des betreffenden Paars aus koppelbaren jeweils zwei ersten elektronischen Quantenbits **QUB1, QUB2** und deren Quantenpunkten **NV1, NV2** neben der Kopplungsgrundfrequenz die Kopplungsgrundphasenlage auf oder eine Phasenlage auf, die von der Kopplungsgrundphasenlage abhängt.

Optional der vorschlagsgemäße Quantencomputer **QC** dazu eingerichtet, die Kopplungsfrequenzen und/oder Kopplungsphasenlagen der elektromagnetischen Strahlung zur Manipulation von koppelbaren Paaren aus je einem ersten elektronischen Quantenbit **QUB** und dessen Quantenpunkt **NV** und je einem zweiten Quantenbit **CQUB** und dessen Kernquantenpunkt **CI** zu bestimmen und als zu verwendende Koppelgrundfrequenzen und/oder Kopplungsgrundphasenlagen abzuspeichern. Optional verwendet der Quantencomputer **QC** bei der Manipulation dieser jeweiligen koppelbaren Paaren aus je einem ersten elektronischen Quantenbit **QUB** und dessen Quantenpunkt **NV** und je einem zweiten Quantenbit **CQUB** und dessen Kernquantenpunkt **CI** elektromagnetische Strahlung der Koppelgrundfrequenz des betreffenden koppelbaren Paaren aus je einem ersten elektronischen Quantenbit **QUB** und dessen Quantenpunkt **NV** und je einem zweiten Quantenbit **CQUB** und dessen Kernquantenpunkt **CI.** Optional weist dabei die elektromagnetische Strahlung der Koppelgrundfrequenz des betreffenden koppelbaren Paaren aus je einem ersten elektronischen Quantenbit **QUB** und dessen Quantenpunkt **NV** und je einem zweiten Quantenbit **CQUB** und dessen Kernquantenpunkt **CI** neben der Kopplungsgrundfrequenz die Kopplungsgrundphasenlage auf oder eine Phasenlage auf, die von der Kopplungsgrundphasenlage abhängt.

Optional der vorschlagsgemäße Quantencomputer **QC** dazu eingerichtet, die Kopplungsfrequenzen und/oder Kopplungsphasenlagen der elektromagnetischen Strahlung zur Manipulation von Paaren aus koppelbaren jeweils zwei zweiten nuklearen Quantenbits **(CQUB1, CQUB2)** und/oder deren jeweiligen Kernquantenpunkten **(CI1, CI2)** untereinander zu bestimmen und als zu verwendende Koppelgrundfrequenzen und/oder Kopplungsgrundphasenlagen abzuspeichern. Optional verwendet der Quantencomputer **QC** bei der Manipulation dieser jeweiligen Paaren aus koppelbaren jeweils zwei zweiten nuklearen Quantenbits **(CQUB1, CQUB2)** und/oder deren jeweiligen Kernquantenpunkten **(CI1, CI2)** elektromagnetische Strahlung der Koppelgrundfrequenz des betreffenden Paaren aus koppelbaren jeweils zwei zweiten nuklearen Quantenbits **(CQUB1, CQUB2)** und/oder deren jeweiligen Kernquantenpunkten **(CI1, CI2).** Optional weist dabei die elektromagnetische Strahlung der Koppelgrundfrequenz des betreffenden Paaren aus koppelbaren jeweils zwei zweiten nuklearen Quantenbits **(CQUB1, CQUB2)** und/oder deren jeweiligen Kernquantenpunkten **(CI1, CI2)** neben der Kopplungsgrundfrequenz die Kopplungsgrundphasenlage auf oder eine Phasenlage auf, die von der Kopplungsgrundphasenlage abhängt.

Optional umfasst der Quantencomputer **QC** einen oder mehrere Rotationssensoren **RTS** für die Erfassung von Rotationswerten und/oder Rotationsbeschleunigungswerten für Drehungen um eine Achse oder einen oder mehrere Rotationssensoren **RTS** für die Erfassung von Rotationswerten und/oder Rotationsbeschleunigungswerten für Drehungen um zwei Achsen oder einen oder mehrere Rotationssensoren **RTS** für die Erfassung von Rotationswerten und/oder Rotationsbeschleunigungswerten für Drehungen um drei Achsen. Der Rotationssensor **RTS** des Quantencomputers **QC** erfasst optional die aktuelle Ausrichtung des Quantencomputers **QC** in Form eines oder mehrerer Ausrichtungsmesswerte. Der Rotationssensor **RTS** des Quantencomputers **QC** erfasst optional die aktuelle Rotationsgeschwindigkeit des Quantencomputers **QC** in Form eines oder mehrerer Rotationswerte. Der Rotationssensor **RTS** des Quantencomputers **QC** erfasst optional die aktuelle Rotationsbeschleunigung des Quantencomputers **QC** in Form eines oder mehrerer Rotationsbeschleunigungswerte.

Optional verfügt der Quantencomputer **QC** über Vorrichtungsteile, die Ausrichtungsmesswerte und/oder Rotationswerte und/oder Rotationsbeschleunigungswerte und/oder Beschleunigungswerte für den Quantencomputer **QC** bestimmen und/oder eine solche Bestimmung zulassen.

Optional verfügt der Quantencomputer **QC** über Vorrichtungsteile, die
- Ausrichtungsmesswerte für Drehungen um eine Achse und/oder um zwei Achsen **(AX1, AX2)** und/oder drei Achsen und/oder
- Rotationswerte für Drehungen um eine Achse und/oder um zwei Achsen **(AX1, AX2)** und/oder drei Achsen und/oder
- Rotationsbeschleunigungswerte für Drehungen um eine Achse und/oder um zwei Achsen **(AX1, AX2)** und/oder drei Achsen Rotationsbeschleunigungswerte und/oder
- Beschleunigungswerte für einen translatorischen Freiheitsgrad und/oder zwei translatorische Freiheitsgrade und/oder drei translatorische Freiheitsgrade
für den Quantencomputer **QC** bestimmen und/oder eine solche Bestimmung zulassen.

Optional verfügt der Quantencomputer **QC** daher während seines Quantencomputerbetriebs über Ausrichtungsmesswerte und/oder Rotationswerte und/oder Rotationsbeschleunigungswerte und/oder Beschleunigungswerte für den Quantencomputer **QC** und/oder über Messwerte, die eine Bestimmung dieser Werte zulassen. Optional ermittelt der Quantencomputer **QC** während seines Quantencomputerbetriebs
- aus bekannten Ausrichtungsmesswerten und/oder
- aus bekannten Rotationswerten und/oder
- aus bekannten Rotationsbeschleunigungswerten und/oder
- aus bekannten Beschleunigungswerten und/oder
- aus bekannten Geschwindigkeitswerten und/oder
- aus bekannten Ortskoordinaten und/oder
- aus Karteninformationen einer elektronischen Karte und/oder
- aus Routen-Informationen über die zukünftige Route eines Fahrzeugs, dessen Teil der Quantencomputer QC ist,
für den Quantencomputer **QC**
- zukünftige Ausrichtungsmesswerte und/oder
- zukünftige Rotationswerte und/oder
- zukünftige Rotationsbeschleunigungswerte und/oder
- zukünftige Beschleunigungswerte und/oder
- zukünftige Geschwindigkeitswerte und/oder
- zukünftige Ortskoordinaten.

Optional ermittelt der Quantencomputer QC mittels
- der zukünftigen Ausrichtungsmesswerte und/oder
- der zukünftigen Rotationswerte und/oder
- der zukünftigen Rotationsbeschleunigungswerte und/oder
- der zukünftigen Beschleunigungswerte und/oder
- der zukünftigen Geschwindigkeitswerte und/oder
- der zukünftigen Ortskoordinaten und/oder
- von Kopplungsgrundfrequenzen und/oder
- Kopplungsgrundphasenlagen
zukünftige Kopplungsgrundfrequenzen und/oder zukünftige Kopplungsgrundphasenlagen für einen zukünftigen Zeitpunkt.

Optional verwendet der Quantencomputer QC diese zukünftigen Kopplungsgrundfrequenzen und/oder zukünftigen Kopplungsgrundphasenlagen zu dem zukünftigen Zeitpunkt als Kopplungsgrundfrequenzen und/oder Kopplungsgrundphasenlagen.

Optional ist der Quantencomputers **QC** dazu eingerichtet, in Abhängigkeit von den Ausrichtungsmesswerten und/oder von den Rotationswerten und/oder von den Rotationsbeschleunigungswerten und/oder von den Beschleunigungswerten die zu verwendenden Kopplungsfrequenzen und Kopplungsphasenlagen zwischen den Paaren aus koppelbaren jeweils zwei elektronischen Quantenbits **(QUB1 QUB2)** und/oder deren Quantenpunkten **(NV1, NV2)** untereinander aus den zu verwendenden Kopplungsgrundfrequenzen und/oder Kopplungsgrundphasenlagen für diese Paaren aus koppelbaren jeweils zwei elektronischen Quantenbits **(QUB1 QUB2)** und/oder deren Quantenpunkten **(NV1, NV2)zu** bestimmen. Dies ermöglicht den Betrieb eines mobilen Quantencomputers **QC** auf Basis paramagnetischer Zentren als Quantenpunkte **NV** von elektronischen Quantenbits **QUB** und auf Basis nuklearer Quantenbits **CQUB** und derer Kernquantenbits **CI.**

Optional ist der Quantencomputers **QC** dazu eingerichtet, in Abhängigkeit von den Ausrichtungsmesswerten und/oder von den Rotationswerten und/oder von den Rotationsbeschleunigungswerten und/oder von den Beschleunigungswerten die zu verwendenden Kopplungsfrequenzen zwischen den koppelbaren Paaren aus je einem ersten elektronischen Quantenbit **QUB** und/oder dessen Quantenpunkt **NV** und je einem zweiten nuklearen Quantenbit **CQUB** und/oder dessen Kernquantenpunkt **CI** aus den zu verwendenden Kopplungsgrundfrequenzen und Kopplungsgrundphasenlagen zu bestimmen. Dies ermöglicht den Betrieb eines mobilen Quantencomputers **QC** auf Basis paramagnetischer Zentren als Quantenpunkte **NV** von elektronischen Quantenbits **QUB** und auf Basis nuklearer Quantenbits **CQUB** und derer Kernquantenbits **CI.**

Optional ist der Quantencomputers **QC** dazu eingerichtet, in Abhängigkeit von den Ausrichtungsmesswerten und/oder von den Rotationswerten und/oder von den Rotationsbeschleunigungswerten und/oder von den Beschleunigungswerten und/oder Geschwindigkeitswerten und/oder Ortskoordinaten des Quantencomputers **QC** die zu verwendenden Kopplungsfrequenzen zwischen den Paaren aus koppelbaren jeweils zwei zweiten nuklearen Quantenbits **CI** untereinander aus den zu verwendenden Kopplungsgrundfrequenzen zu bestimmen.

Optional ist der Quantencomputers **QC** dazu eingerichtet, bei der Manipulation der ersten elektronischen Quantenbits **QUB** und/oder deren Quantenpunkte **NV** und/oder zweiten nuklearen Quantenbits **CQUB** und/oder deren Kernquantenbist CI mittels der ersten Mittel (z.B. **WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC)** und/oder der zweiten Mittel (z.B. **WFG, LDRV, LD, DBS, OS, XT, YT, KV, mWA, MW/RF-AWFG, PM, PV, PVC, MGx, MGy, MGz, MFSx, MFSx, MFSz, MSx, MSy, MSz, GDx, GDy, GDz, µC)** die so bestimmten zu verwendenden Kopplungsfrequenzen zu verwenden.

In einer weiteren Ausprägung ist der vorschlagsgemäße Quantencomputer **QC** dazu eingerichtet, die Kopplungsfrequenzen und/oder Kopplungsphasenlagen optional zwischen Paaren aus koppelbaren jeweils zwei ersten elektronischen Quantenbits **(QUB1, QUB2)** und/oder deren Quantenpunkten **(NV1, NV2)** untereinander zu einem ersten Zeitpunkt zu bestimmen und als Koppelgrundfrequenzen und/oder Kopplungsgrundphasenlagen abzuspeichern. In dieser weiteren Ausprägung ist der vorschlagsgemäße Quantencomputer **QC** optional dazu eingerichtet, die Kopplungsfrequenzen und/oder Kopplungsphasenlagen zwischen koppelbaren Paaren aus je einem ersten elektronischen Quantenbit **QUB** und/oder dessen Quantenpunkt **NV** und je einem zweiten nuklearen Quantenbit **CQUB** und/oder dessen Kernquantenpunkt **CI** zu einem ersten Zeitpunkt zu bestimmen und als Koppelgrundfrequenzen und/oder Kopplungsgrundphasenlagen abzuspeichern. In dieser weiteren Ausprägung ist der vorschlagsgemäße Quantencomputer **QC** optional dazu eingerichtet, die Kopplungsfrequenzen und/oder Kopplungsgrundphasenlagen zwischen Paaren aus koppelbaren jeweils zwei zweiten nuklearen Quantenbits **(CQUB1, CQUB2)** und/oder deren Kernquantenpunkten **(CI1, CI2)** untereinander zu dem ersten Zeitpunkt zu bestimmen und als Koppelgrundfrequenzen und/oder Kopplungsgrundphasenlagen abzuspeichern. In dieser weiteren Ausprägung ist der vorschlagsgemäße Quantencomputer **QC** optional dazu eingerichtet, die Kopplungsfrequenzen und/oder Kopplungsphasenlagen zwischen Paaren aus koppelbaren jeweils zwei ersten elektronischen Quantenbits **(QUB1, QUB2)** und/oder deren Quantenpunkten **(NV1, NV2)** untereinander zu einem zweiten Zeitpunkt nach dem ersten Zeitpunkt zu bestimmen und als Koppelfrequenzen und/oder Kopplungsphasenlagen zu verwenden ggf. abzuspeichern. In dieser weiteren Ausprägung ist der vorschlagsgemäße Quantencomputer **QC** optional dazu eingerichtet, die Kopplungsfrequenzen und/oder Kopplungsphasenlagen zwischen koppelbaren Paaren aus je einem ersten Quantenbit **QUB** und dessen Quantenpunkt **NV** und je einem zweiten Quantenbit **CQUB** und/oder dessen Kernquantenpunkt **CI** zu einem zweiten Zeitpunkt nach dem ersten Zeitpunkt zu bestimmen und als Koppelfrequenzen und/oder Kopplungsphasenlagen zu verwenden ggf. abzuspeichern. In dieser weiteren Ausprägung ist der vorschlagsgemäße Quantencomputer **QC** optional dazu eingerichtet, die Kopplungsfrequenzen und/oder Kopplungsphasenlagen zwischen Paaren aus koppelbaren jeweils zwei zweiten nuklearen Quantenbits **(CQUB1, CQUB2)** und/oder deren Kernquantenpunkten **(CI1, CI2)** untereinander zu einem zweiten Zeitpunkt nach dem ersten Zeitpunkt zu bestimmen und als Koppelfrequenzen und/oder Kopplungsphasenlagen zu verwenden ggf. abzuspeichern. In dieser weiteren Ausprägung ist der vorschlagsgemäße Quantencomputer **QC** optional dazu eingerichtet, aus einer oder mehreren Koppelgrundfrequenzen und/oder Kopplungsgrundphasenlagen und einer oder mehreren Koppelfrequenzen und/oder Kopplungsphasenlagen die aktuelle Ausrichtung des Quantencomputers **QC** in Form eines oder mehrerer Ausrichtungsmesswerte und/oder in Form eines oder mehrerer Rotationswerte und/oder in Form eines oder mehrerer Rotationsbeschleunigungswerte und/oder in Form eines oder mehrerer Beschleunigungswerte zu ermitteln. Dies ermöglicht die Verwendung des Quantencomputers **QC** als Gyroskop.

In einer anderen Ausprägung sind der Quantencomputer **QC** oder Teile des Quantencomputers **QC** oder eine Anordnung von ersten elektronischen Quantenbits **QUB** und/oder von deren Quantenpunkte **NV** und/oder von zweiten nuklearen Quantenbits **CQUB** und/oder von deren Kernquantenpunkte **CI** und/oder eine Anordnung von paramagnetischen Zentren des Quantencomputers **QC** drehbar um eine Achse gelagert oder drehbar um zwei Achsen **(AX1, AX2)** gelagert oder drehbar um drei Achsen gelagert.

In einer weiteren Ausprägung des Quantencomputers **QC** verfügt der Quantencomputer **QC** über eine oder mehrere Energiekupplungen **(EK1, EK2).** Eine Energiekupplung der Energiekupplungen **(EK1, EK2)** ist optional dazu eingerichtet, den Quantencomputer **QC** oder Teile des Quantencomputers **QC** oder die Anordnung von ersten elektronischen Quantenbits **QUB** und/oder von deren Quantenpunkten **NV** und/oder von zweiten nuklearen Quantenbits **CQUB** und/oder von deren Kernquantenpunkten **CI** und/oder die Anordnung von paramagnetischen Zentren des Quantencomputers **QC** mit elektrischer oder elektromagnetischer Energie und/oder Strahlungsenergie zu versorgen. Im Sinne dieses Dokuments ist die Strahlungsenergie der Pumpstrahlung **LB** elektromagnetische Energie insbesondere zu Versorgung der Quantenpunkte NV des Quantenpunkte **NV** mit Energie. In einer dieser Ausprägung des Quantencomputers **QC** ist die Energieversorgung optional dazu eingerichtet ist, dass eine Drehung des Quantencomputers **QC** oder von Teilen des Quantencomputers **QC** oder der Anordnung von ersten elektronischen Quantenbits **QUB** und/oder von Quantenpunkten **NV** und/oder von zweiten nuklearen Quantenbits **CQUB** und/oder von deren Kernquantenpunkten **CI** und/oder der Anordnung von paramagnetischen Zentren des Quantencomputers **QC** um eine Achse **(AX1, AX2)** die Energieversorgung **(LDV, TS, BENG, SRG, BENG2, SRG2, LD, LDRV)** nicht mitdrehen muss. Optional ist die Energiekupplung **(EK1, EK2)** dazu eingerichtet, die Energie von der Energieversorgung **(LDV, TS, BENG, SRG, BENG2, SRG2, LD, LDRV)** zum Quantencomputer **QC** so zu transportieren, dass eine Verdrehung des Quantencomputers **QC** oder von Teilen des Quantencomputers **QC** oder der Anordnung von ersten elektronischen Quantenbits **QUB** und/oder von deren Quantenpunkten **NV** und/oder von zweiten nuklearen Quantenbits **CQUB** und/oder von deren Kernquantenpunkten **CI** und/oder von paramagnetischen Zentren des Quantencomputers **QC** gegenüber der Energieversorgung **(LDV, TS, BENG, SRG, BENG2, SRG2, LD, LDRV)** um beliebige Winkel möglich ist.

In einer weiteren Ausprägung des Quantencomputers **QC** umfasst die Energiekupplung **(EK1, EK2)** beispielsweise elektrisch leitfähige Schleifringe und Schleifkontakte für diese Energieübertragung. In einer weiteren Ausprägung des Quantencomputers **QC** ist die Energiekupplung **(EK1, EK2)** optional dazu eingerichtet, die Energie der Energieversorgung **(LDV, TS, BENG, SRG, BENG2, SRG2, LD, LDRV)** mittels induktiver Kopplung zu dem Quantencomputer **QC** oder zu Teilen des Quantencomputers **QC** oder zu der Anordnung von ersten elektronischen Quantenbits **QUB** und/oder von deren Quantenpunkten **NV** und/oder von zweiten nuklearen Quantenbits **CQUB** und/oder von deren Kernquantenpunkten **CI** und/oder von paramagnetischen Zentren des Quantencomputers **QC** zu übertragen. In der weiteren Ausprägung des Quantencomputers **QC** ist die Energiekupplung **(EK1, EK2)** optional dazu eingerichtet, die Energie der Energieversorgung **(LDV, TS, BENG, SRG, BENG2, SRG2, LD, LDRV)** mittels elektromagnetischen Wellen und/oder elektromagnetischer Strahlung zu dem Quantencomputer **QC** oder zu Teilen des Quantencomputers **QC** oder zu der Anordnung von ersten elektronischen Quantenbits **QUB** und/oder von deren Quantenpunkten **NV** und/oder von zweiten nuklearen Quantenbits **CQUB** und/oder von deren Kernquantenpunkten **CI** und/oder von paramagnetischen Zentren des Quantencomputers **QC** zu übertragen. Dabei ist im Sinne des hier vorgelegten Dokuments eine Bestrahlung von ersten elektronischen Quantenbits **QUB** und/oder deren Quantenpunkten **NV** und/oder der Anordnung von zweiten nuklearen Quantenbits **CQUB** und/oder deren Kernquantenpunkten **CI** und/oder der Anordnung von paramagnetischen Zentren des Quantencomputers **QC** mit einer Pumpstrahlung **LB** eine Energieversorgung der Anordnung von ersten elektronischen Quantenbits **QUB** und/oder von deren Quantenpunkten **NV** und/oder von zweiten nuklearen Quantenbits **CQUB** und/oder von deren Kernquantenpunkten **CI** und/oder von paramagnetischen Zentren des Quantencomputers **QC.**

In einer weiteren Ausprägung des Quantencomputers **QC** ist der Quantencomputer **QC** mittels einer kardanischen Aufhängung **KAH** drehbar um eine Achse oder zwei Achsen **(AX1, AX2)** oder drei Achsen gelagert. Optional umfasst der Quantencomputer **QC** in dieser Ausprägung einen oder mehrere Kreisel **KR** oder ist mit diesen Kreisel **KR** mechanisch verbunden, sodass die Ausrichtung des Quantencomputers **QC** von Drehungen der kardanischen Aufhängung **KAH** um diese eine Achse oder diese zwei Achsen **(AX1, AX2, AX3)** oder diese drei Achsen nicht verändert wird.

In einer weiteren Ausprägung des Quantencomputers **QC** weisen ein oder mehrere Kreisel der Kreisel **KR** einen Antrieb auf. Der eine Kreisel **KR** oder die mehreren Kreisel **KR** und der Antrieb des einen Kreisels **KR** oder die Antriebe der Kreisel **KR** im Sinne des hier vorgelegten Dokuments sind optional ein Teil des Quantencomputers **QC.**

Bei der Ausarbeitung des hier vorgelegten Dokuments wurde erkannt, dass die Verwendung eines Quantencomputers **QC** wie oben beschrieben als Gyrometer denkbar ist. Das hier vorgelegte Dokument beschreibt somit ein Gyrometer, dass einen Quantencomputer **QC** umfasst. Dabei zeichnet sich ein solches Gyrometer auf Basis eines Quantencomputers **QC** durch eine besondere Empfindlichkeit aus. Zur Ermittlung der Gyrometermesswerte des Gyrometers bestimmt der Quantencomputer **QC** des Gyrometers optional einen oder mehrere Ausrichtungsmesswerte und/oder einen oder mehrere Rotationswerte und/oder einen oder mehrere Rotationsbeschleunigungswerte und/oder einen oder mehrere Beschleunigungswerte und/oder einen oder mehrere Geschwindigkeitswerte und/oder eine oder mehrere Ortskoordinaten des Quantencomputers **QC.**

Optional ist der Quantencomputer **QC** dazu eingerichtet, mittels Bestimmung einer oder mehreren Koppelgrundfrequenzen und/oder Koppelgrundphasenlagen und mittels Bestimmung einer oder mehreren Koppelfrequenzen und/oder Koppelphasenlagen die aktuelle Ausrichtung des Quantencomputers **QC** in Form eines oder mehrerer Ausrichtungsmesswerte und/oder in Form einer oder mehrerer zeitlicher Ableitungen n-ter Ordnung von Ausrichtungsmesswerten und/oder in Form einer oder mehrerer zeitlicher Integrale n-ter Ordnung von Ausrichtungsmesswerten und/oder in Form von gefilterten Werten von Ausrichtungsmesswerten zu ermitteln.

Optional ist der Quantencomputer **QC** dazu eingerichtet, mittels Bestimmung einer oder mehreren Koppelgrundfrequenzen und/oder Koppelgrundphasenlagen und mittels Bestimmung einer oder mehreren Koppelfrequenzen und/oder Koppelphasenlagen die aktuelle Rotationsgeschwindigkeit des Quantencomputers **QC** in Form eines oder mehrerer Rotationswerte und/oder in Form einer oder mehrerer zeitlicher Ableitungen n-ter Ordnung von Rotationswerten und/oder in Form einer oder mehrerer zeitlicher Integrale n-ter Ordnung von Rotationswerten und/oder in Form von gefilterten Werten von Rotationswerten zu ermitteln.

Optional ist der Quantencomputer **QC** dazu eingerichtet, mittels Bestimmung einer oder mehreren Koppelgrundfrequenzen und/oder Koppelgrundphasenlagen und mittels Bestimmung einer oder mehreren Koppelfrequenzen und/oder Koppelphasenlagen die aktuelle Rotationsbeschleunigung des Quantencomputers **QC** in Form eines oder mehrerer Rotationsbeschleunigungswerte und/oder in Form einer oder mehrerer zeitlicher Ableitungen n-ter Ordnung von Rotationsbeschleunigungswerten und/oder in Form einer oder mehrerer zeitlicher Integrale n-ter Ordnung von Rotationsbeschleunigungswerten und/oder in Form von gefilterten Werten von Rotationsbeschleunigungswerten zu ermitteln.

Optional ist der Quantencomputer **QC** dazu eingerichtet, mittels Bestimmung einer oder mehreren Koppelgrundfrequenzen und/oder Koppelgrundphasenlagen und mittels Bestimmung einer oder mehreren Koppelfrequenzen und/oder Koppelphasenlagen die aktuelle Beschleunigung des Quantencomputers **QC** in Form eines oder mehrerer Beschleunigungswerte und/oder in Form einer oder mehrerer zeitlicher Ableitungen n-ter Ordnung von Beschleunigungswerten und/oder in Form einer oder mehrerer zeitlicher Integrale n-ter Ordnung von Beschleunigungswerten und/oder in Form von gefilterten Werten von Beschleunigungswerten zu ermitteln.

Optional ist der Quantencomputer **QC** dazu eingerichtet, mittels Bestimmung einer oder mehreren Koppelgrundfrequenzen und/oder Koppelgrundphasenlagen und mittels Bestimmung einer oder mehreren Koppelfrequenzen und/oder Koppelphasenlagen die aktuelle Geschwindigkeit des Quantencomputers **QC** in Form eines oder mehrerer Geschwindigkeitswerte und/oder in Form einer oder mehrerer zeitlicher Ableitungen n-ter Ordnung von Geschwindigkeitswerten und/oder in Form einer oder mehrerer zeitlicher Integrale n-ter Ordnung von Geschwindigkeitswerten und/oder in Form von gefilterten Werten von Geschwindigkeitswerten zu ermitteln.

Optional ist der Quantencomputer **QC** dazu eingerichtet, mittels Bestimmung einer oder mehreren Koppelgrundfrequenzen und/oder Koppelgrundphasenlagen und mittels Bestimmung einer oder mehreren Koppelfrequenzen und/oder Koppelphasenlagen die aktuelle Ortskoordinate des Quantencomputers **QC** in Form eines oder mehrerer Ortskoordinatenwerte und/oder in Form einer oder mehrerer zeitlicher Ableitungen n-ter Ordnung von Ortskoordinatenwerten und/oder in Form einer oder mehrerer zeitlicher Integrale n-ter Ordnung von Ortskoordinatenwerten und/oder in Form von gefilterten Werten von Ortskoordinatenwerten zu ermitteln.

Optional ist der Quantencomputer **QC** dazu eingerichtet, mittels Ausführung von Quanten-Op-Codes Messwerte physikalischer Parameter, insbesondere wie Aussichtung, Winkelgeschwindigkeit, Winkelbeschleunigung, Gravitationsbeschleunigung, Beschleunigung, Geschwindigkeit und/oder Ortskoordinate zu ermitteln.

Gatter Steuerung von NV-Zentren und nuklearen Spins, die mit diesen verkoppelt sind

Im Sinne des hier offengelegten Dokuments bezeichnet das NV-Zentrum die Elektronenkonfiguration des NV-Zentrums. Der nukleare Spin des Stickstoffatoms des NV-Zentrums wird separat benannt.

### Definition des Begriffs Gatter

Gemäß offenbarung kann der Begriff "Gatter" optional wie folgt zu verstehen sein:
Gatter im Sinne des hier vorgelegten Dokuments sind Methoden in Form von Prozessschrittfolgen, die zur Manipulation auslesbarer Zustände mit dem Ziel dienen, vollständige Turingmaschinen aus zeitlich sequentiellen oder parallelen Abfolgen dieser Gatter aufzubauen zu können. Eine Turing-Maschine im Sinne des hier vorgelegten Dokuments ist somit eine Abfolge von solchen Gattern, die ein Quantencomputer ausführt und womit der Quantencomputer den Zustand von Quantenbits und/oder nuklearen Quantenbits des Quantencomputers manipuliert und/oder ausließt.

Eine solche vollständige Turingmaschine auf Basis eines solchen Quantencomputers im Sinne des hier vorgelegten Dokuments erlaubt entsprechend der Turing-Church Vermutung die Lösung aller berechenbare Aufgaben. Klassische Computer sind Turing vollständig. Nach dem Gottesman-Knill Theorem ist ein Quanten Computer Turing vollständig, wenn folgende unitäre Gatter realisiert werden können:
1. Clifford Gatter (Paul: X,Y,Z),
2. H Phasengatter S (T) und
3. das 2 Quantenbitgatter CNOT.

Ein Clifford Gatter ist eine Gruppe von Gattern V (V sei Element der Menge der Clifford Gatter) mit der Eigenschaft U=WVW⁺ mit U und W ebenfalls als Element der Menge der Clifford Gatter.

Im Quantencomputing und in der Quanteninformationstheorie sind die Clifford-Gatter die Elemente der Clifford-Gruppe, einer Menge mathematischer Transformationen, die die n-Qubit-Pauli-Gruppe normalisieren, d. h. Tensor-Produkte von Pauli-Matrizen durch Konjugation auf Tensor-Produkte von Pauli-Matrizen abbilden. Der Begriff wurde von Daniel Gottesman eingeführt und ist nach dem Mathematiker William Kingdon Clifford benannt.[1] Quantenschaltungen, die nur aus Clifford-Gattern bestehen, können aufgrund des **Gottesman-Knill-Theorems** effizient mit einem klassischen Computer simuliert werden.

Dabei sind die Clifford Gatter (Paul: X,Y,Z) redundant. Beispielsweise gilt X=HZH⁺.

Man kann also auf ein Clifford Gatter (Paul: X,Y,Z) verzichten. Der Stand der Technik bezeichnet diese drei Gatter 1 bis 3 auch als universelle Gatter. Der Quantencomputer kann diese elementaren Gatter mittels Operationen, die Spin-Rotationen induzieren, nachbilden. Hierbei ist allerdings das Folgende zu beachten:
a) Das X Gatter stellt eine Spieglung mit einer positiven Abbildungsdeterminante dar. Der NV-Zentren basierende Quantencomputer kann kein X-Gatter realisieren. Das X-Gatter ist eine der Pauli-Matrizen, die den Spin um 180° spiegelt. (im Folgenden als Quantenbit-Flip bezeichnet) Allerdings kann der Quantencomputer ein iX-Gatter realisieren. D.h. bei jeder Gatteroperation kommt eine Phasenverschiebung von 90° hinzu (komplexer Faktor i) Bei einem NV-Zentrum führt der Quantencomputer das X-Gatter dadurch aus, dass er ein Mikrowellensignal mit der Resonanzenergie (Resonanzfrequenz) einer definierten zeitlichen Länge und Amplitude (Rabi-Frequenz=γ_{NV} B mit γ_{NV} als gyromagnetische Moment des NV-Zentrums und B die magnetische Komponente der elektromagnetischen Welle, die senkrecht zu der Richtung des Elektronenspins der Elektronenkonfiguration des NV-Zentrums wirkt) Ein solcher π-Puls hat dann die zeitliche Länge 1/(2γ_{NV} B) (Das entspricht 180°).
b) Rotationen besitzen immer eine negative Determinante. Die Rotationen erzeugen also eine zusätzliche allgemeine Phase, die aber keine Bedeutung besitzt, weil sie nicht messbar sind. Allerdings muss während der Rechnung diese Phase berücksichtigt werden, da sich die Phasen addieren können. Das CROT-Gatter ist eine unitäre Matrize, die den Spin um einen Winkel θ u eine Achsenfläche im vierdimensionalen Raum der Bloch-Kugel dreht. (im Folgenden als Quantenbit-Rotation oder einfach nur CROT bezeichnet) Auch hier kommt bei jeder Gatteroperation eine Phasenverschiebung hinzu. Bei einem NV-Zentrum führt der Quantencomputer das CROT-Gatter dadurch aus, dass er ein Mikrowellensignal mit der Resonanzenergie (Resonanzfrequenz) einer definierten zeitlichen Länge und Amplitude (γ_{NV} B mit γ_{NV} als gyromagnetische Moment des NV-Zentrums und B die magnetische Komponente der elektromagnetischen Welle, die senkrecht zu der Richtung des Elektronenspins der Elektronenkonfiguration des NV-Zentrums wirkt) Ein solcher θ-Puls hat dann die zeitliche Länge 1/(2γ_{NV} B) (θ/180°). Wird die Phase der Mikrowellenansteuerung (bei Kernspins der Radiofrequenzansteuerung) um 90° verschoben, so wechselt die CROT-Ansteuerung, wenn sie zuvor eine Drehung um die X-Achse bewirkte, zu einer Ansteuerung, die eine Drehung um die Y-Achse bewirkt. Die Mikrowellenphasenlage der Mikrowellenansteuerung bestimmt also die Drehachse einer CROT-Operation. Bei nuklearen Spins bestimmt die Radiowellenphasenlage die Drehachse einer CROT-Operation für den nuklearen Spin.

Ein Rotation um 180° in der x-Achse ist somit kein X sondern ein iX Gatter! Genau ergibt sich ein CROT nicht als CNOT sondern als CiNOT. Um einen CNOT zu definieren muss ein zusätzlicher Z(π/2) (Clifford Gatter (Paul,Z) mit zeitlicher Länge π/2) vor oder nach der Ausführung des CROT-Befehls eingefügt werden und auf den konditionellen Partnerquantenbit wirken. Das konditionelle Partnerquantenbit eines NV-Zentrums kann ein nuklearer Spin in der Umgebung des NV-Zentrums sein oder ein anderes NV-Zentrum in der Umgebung des NV-Zentrums sein.

Ein beispielhaftes System zur Erklärung kann beispielsweise ein erstes NV-Zentrum und ein zweites NV-Zentrum und ein drittes NV-Zentrum umfassen, wobei das erste NV-zentrum und das dritte NV-Zentrum wiederum jeweils mit jeweiligen nuklearen Spins koppeln können, die genau einem dieser beiden beispielhaften NV-Zentren zugeordnet sind. Das erste NV-Zentrum und das zweite NV-Zentrum und das dritte NV-Zentrum sind als lineare Kette angeordnet, wobei das erste NV-Zentrum mit dem dritten NV-Zentrum nur über das zweite NV-Zentrum als Ancilla-bitt koppeln kann und nicht direkt koppeln kann. Wird nun durch eine Quantenoperation der Quantenzustand des zweiten NV-Zentrums in den Zustand m=0 gebracht, so entkoppelt diese Quantenoperation das erste NV-Zentrum von dem dritten NV-Zentrum. Wird durch eine andere Quantenoperation der Quantenzustand des zweiten NV-Zentrums in den Zustand m=+1 oder m=-1 gebracht, so können Quantenoperation das erste NV-Zentrum mit dem dritten NV-Zentrum koppeln.

Eine CROT-Operation um die Z-Achse kann durch eine -π/2 -Drehung um die Y-Achse und dann ein X-Gatte und dann eine +π/2-Drehung um die Y-Achse realisiert werden.

Zu Beginn ist nur die Z-Achse durch die Flussdichte des Magnetfelds festgelegt. Mit der erste CROT-Operation legt der Quantencomputer die X-Achse für das NV-Zentrum willkürlich fest. Diese Referenz ist zwar frei wählbar, muss während einer Quantenberechnung aber Referenz (Phasenstabilität) beibehalten werden.

Neben der Ausführung dieser Gatter muss der Quantencomputerseine Quantenbits und seine nuklearen Quantenbits zu Beginn einer Berechnung jeweils in einem definierten Anfangszustand versetzen und nach dem Ausführen aller Operationen der Quantencomputer seine relevanten Quantenbits und/oder seine relevanten nuklearen Quantenbits. Sind alle drei Bedingungen erfüllt, kann dieser Quantencomputer beliebige Rechnungen durchführen und gilt dann als Turingvollständig.

Das Ziel jedes universellen Quantencomputers ist daher die universellen Gatter, so wie die Bedingungen zur Initialisierung und Auslesen der Quantenbits und nuklearen Quantenbits mit hoher Güte zu erreichen.

### Grundlagen:

### Der Hamiltonian für NV-Zentren

Der Hamiltonian für NV-Zentren als Quantenbits lautet: $H = D * {m}^{2} + = {γ}_{NV} * m * B$

Hierbei stehen
- D: für die Nullfeldaufspaltung,
- γ_{NV}: für das gryromagnetisches Verhältnis des NV-Zentrums,
- m: für die Quantenzahl,
- B: für eine externes, auf das NV-Zentrum einwirkendes Magnetfeld in NV-Achse.

Ist sich das externe auf das NV-Zentrum einwirkende Magnetfeld nicht in Richtung der NV-Achse ausgerichtet, so ist typischerweise m keine gute Quantenzahl aufgrund von Interband-Mixing.

### Der Hamiltonian für Atomkerne als nukleare Quantenbits

Der Hamiltonian für Atomkerne als nukleare Quantenbits umfasst einen Zeeman-Anteil und ggf. einen Quadrupolanteil (z.B. ¹⁴N). Der Hamiltonian für Atomkerne als nukleare Quantenbits lautet: $H = γ * I * B + Q * {I}^{2} + {H}_{NV - Kern} ,$

Hierbei stehen
- γ: für das gyromagnetisches Verhältnis,
- I: für die magnetische Quantenzahl,
- B: für das externe, auf den nuklearen Spin einwirkende Magnetfeld,
- Q: Für den Quadrupol Anteil unabhängig von B
- H_{NV_Kern}: Bestimmt die Kopplungsstärke zwischen Kern und NV durch Hyperfein-WW. Der Hyperfeinterm kann in einen parallelen Anteil und senkrechten Anteil gespalten werden. Für die Verschiebung ist nur der parallele Term wichtig.

Das hier vorgelegte Dokumente bezeichnet zur besseren Unterscheidung für Atomkerne deren magnetische Quantenzahl min dem hier vorgelegten Dokument mit I.

Zur magnetischen Quantenzahl m des negative geladenen NV-Zentrums

Die magnetische Quantenzahl m des negative geladenen NV- Zentrums, kann die drei Werte -1, 0, +1 annehmen. Für m=0 ist erzeugt das NV-Zentrum kein Magnetfeld! Der Zustand NV₀ hat nur einen Single Zustand.

Das hier vorgelegte Dokument benennet als typischen Wert des gyromagnetischen Verhältnisses γ_{NV}= 28,130 MHz/mT. Das hier vorgelegte Dokument benennet als typischen Wert der Nullfeldaufspaltung D=2,87 GHz.

### Magnetische Quantenzahl I der Kerne:

Die NV-Zentren sin ein einen Diamantkristall eingebettet der im Wesentlichen Kohlenstoffatome in Form von im Wesentlichen ¹²C-Isotopen ohne Spin und ohne magnetisches Moment umfasst. Einige wenige Atome im Diamantgitter des Diamantkristalls sind optional ¹³C-Isotope. ¹³C-Isotope haben die Spin -1/2 bzw. +1/2. Die ¹³C-Isotope haben typischerweise kein Quadrupolmoment. Für m=0 ist daher bei ¹³C-Atomkernen, die stark mit dem NV-zentrum gekoppelt sind, und einem geringen externen Magnetfeld die Zeeman Komponente durch das externe magnetische Feld gegenüber der Hyperfein-Wechselwirkung vernachlässigbar. Im Sinne des hier vorgelegten Dokuments ist ein geringes externes Magnetfeld ein Magnetfeld mit einer magnetischen Flussdichte am Ort des betreffenden nuklearen Quantenbits, als am Ort des betreffenden nuklearen Spins, kleiner als 100mT. Da der Atomkern der eines Quantenbits nur einen Dipolanteil besitzt, zeigt der Atomkern des nuklearen Quantenbits typischerweise keine Wechselwirkung mit dem ihm zugeordneten mit dem NV-Zentrum, wenn das NV-Zentrum sich in einem Zustand befindet, in dem es die Quantenzahl m=0 aufweist.

Das hier vorgelegte Dokument benennet als typischen Wert für das gyromagnetisches Verhältnis eines Atomkerns eines ¹³C-Isotops, das der Quantencomputer als nukleares Quantenbit nutzt, γ_{13C}=10,7 kHz/mT.

Das hier vorgelegte Dokument benennet als typischen Wert für den Quadrupol Anteil Q unabhängig von B eines ¹³C-Isotops, das der Quantencomputer als nukleares Quantenbit nutzt, Q=0.

Der Übergang der Zustände z.B. m=0 nach m=1 wird durch die Rabi-Frequenz Ω beschrieben. Dabei gilt: $Ω = γ * {B}_{0 .}$

Hierbei ist B₀ die magnetischen Komponente der in das jeweilige Quantenbit des Quantencomputer eingestrahlten elektromagnetischen HF-Welle (englisch: RF) mit der Resonanzfrequenz, die sich aus der Aufspaltung der Zustände ergibt. Dieses Feld ist ein Vektorfeld. Der Quantencomputer muss die Richtung des Feldes bei der Erzeugung der HF-Welle an die Ausrichtung der Leiterbahn angepasst werden. Der Quantencomputer nutzt zur Ansteuerung der jeweiligen nuklearen Spins der Atomkerne (¹³C-Isotope) typischer weise RF (Radiofrequenz). Der Quantencomputer nutzt optional zur Ansteuerung der jeweiligen NV-Zentren MW(Mikrowellen).

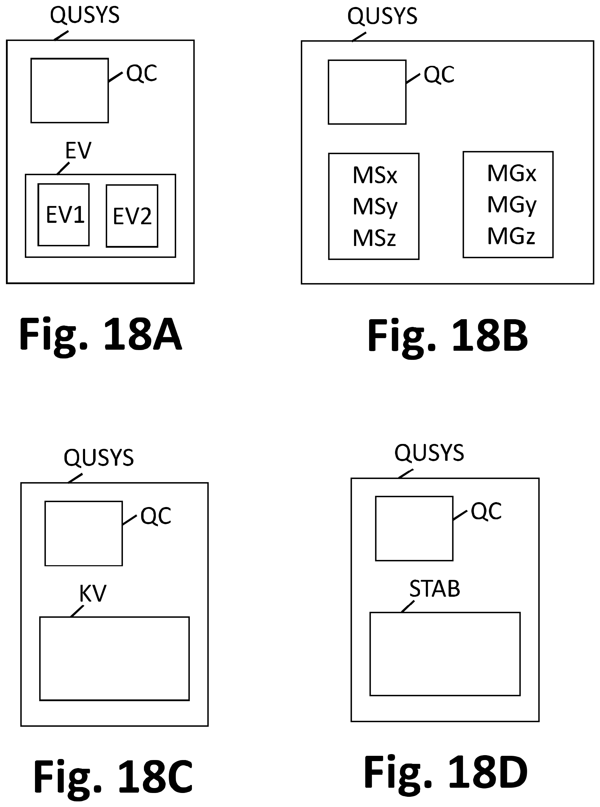

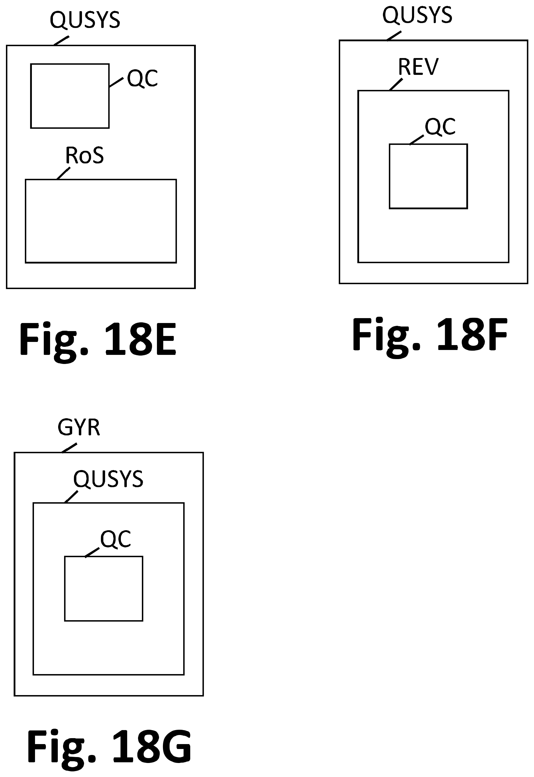

Die Stärke der Hyperfeinwechselwirkung abhängig von der Gitterposition der nuklearen Spins relativ zum Stickstoffatom (N) und zur Fehlstelle (V) innerhalb des Diamantgitters. Das hier vorgelegte Dokument benennt für stark gekoppelte Kerne folgende beispielhaften Werte für die Radiofrequenz der elektromagnetischen Strahlung zur Kopplung des NV-Zentrum mit dem nuklearen Spin des jeweils zugeordneten gekoppelten Kerns, den der Quantencomputer als nukleares Quantenbit nutzt, je nach Gitterposition (siehe Figur 18):
126 MHz (J-Position direkt neben dem Stickstoff), 13,8 MHz (A-Position), 13,2 MHz (B-Position), 6.5 MHz (D-Position), 4,2 MHz (E-Position, F-Position), 2,6 MHz (G-Position, H-Position), 0.8 MHz (schwach gekoppelt)

Das hier vorgestellte Dokument weist ausdrücklich darauf hin, dass der Quantencomputer im späteren Betrieb die Zeeman Aufspaltung je nach Ausrichtung der ¹³C-Isotope relativ zum NV-Zentrum hinzuaddieren oder subtrahieren muss. Das hier vorgestellte Dokument schlägt daher vor, in einer Initialisierungsphase des Quantencomputers die Werte für die Zeemann-Aufspaltung zu ermitteln und diese Werte und/oder die Summen bzw. Differenzwerte in einem Speicher der Steuervorrichtung (µC) des Quantencomputers (QC) abzulegen und für den Betrieb des Quantencomputers (QC) bereitzuhalten. Im Zuge der Ausarbeitung der hier vorgestellten technischen Lehre wurde ermittelt, dass die Zeeman Aufspaltung bei einem Magnetfeld mit einer magnetischen Flussdichte von 50mT am Ort des Paars aus NV-Zentrum und nuklearem Spin typischerweise ca. 0.5 MHz beträgt.

Neben den bereits erwähnten ¹³C-Kohlenstoff-Isotopen, deren nukleare Spins der Quantencomputer mittels der NV-Zentren basierenden Quantenbits als nukleare Quantenbits nutzen kann, kann der Quantencomputer auch die nuklearen Spins der Stickstoffatome der NV-Zentren als nukleare Quantenbits nutzen.

Das ¹⁴N-Stickstoff-Isotop besitzt neben dem Dipolanteil auch einen Quadrupolanteil und wechselwirkt mit der Elektronenspin der Elektronenkonfiguration des zugeordneten NV-Zentrums auch im m=0 Zustand dieses NV-Zentrums.

Das hier vorgelegte Dokument benennet als typischen Wert für das gyromagnetisches Verhältnis eines Atomkerns eines ¹⁴N-Stickstoff-Isotops, das der Quantencomputer als nukleares Quantenbit nutzt, γ_{14N}=3,07 kHz/mT.

Das hier vorgelegte Dokument benennet als typischen Wert für den Quadrupol Anteil Q unabhängig von B eines ¹⁴N-Stickstoff-Isotops, das der Quantencomputer als nukleares Quantenbit nutzt,
Q.= 4945 kHz

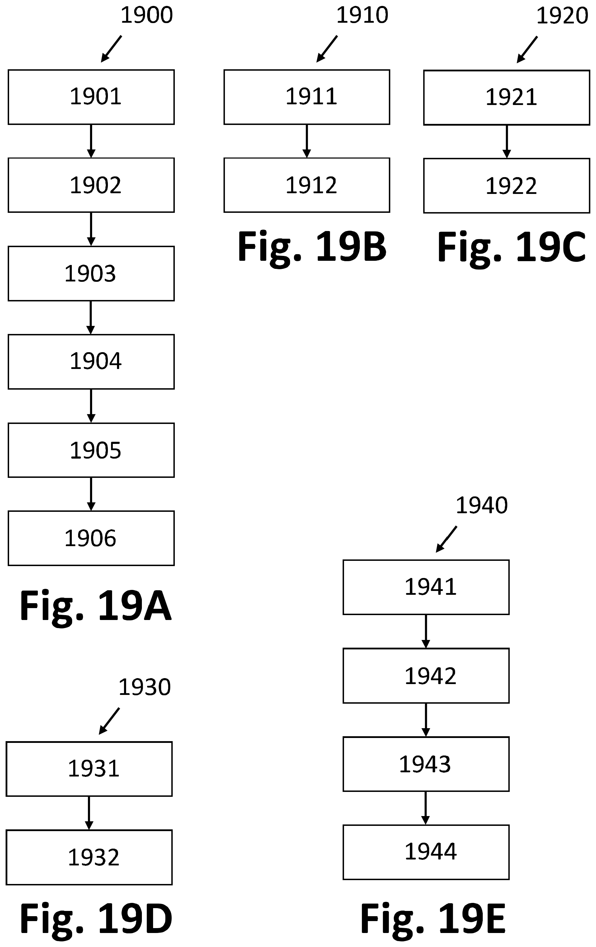

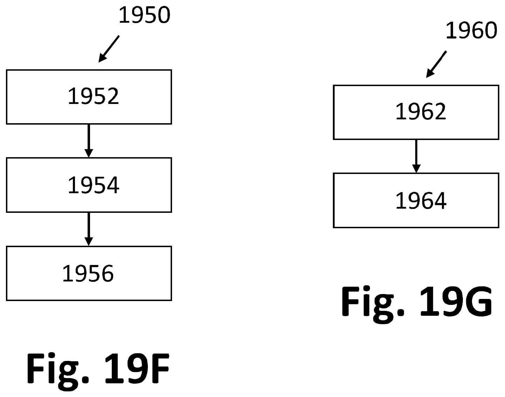

Figur 19 zeigt die Verschiebung der Energieaufspaltung durch Hyperfein-WW hf Zeeman, nZ und Quadrupol Q.
Q= Quadrupol Anteil
hf= Hyperfeinwechselwirkung
nZ=nuklearer Zeeman Aufspaltung

Das hier vorgelegte Dokument weist explizit darauf hin, dass für den Zustand des NV-Zentrums mit der Quantenzahl m=0 typischerweise keine Hyperfein-Wechselwirkung stattfindet.

### Kopplung

Das hier vorgelegte Dokument unterscheidet zwischen stark an das zugeordnete NV-Zentrum über ihren nuklearen Spin gekoppelten Atomkernen und schwach über ihren nuklearen Spin an das NV-zentrum gekoppelten Atomkernen.

Stark an das zugeordnete NV-Zentrum gekoppelte Atomkerne definieren sich durch eine größere Kopplungsstärke (in MHz*h) gegenüber der Linienbreite der Resonanzline des NV-Zentrum beim Übergang von m=0 nach m=1 (in MHz*h). h ist das Planck'sche Wirkungsquantum.

Die Einordnung der Kopplungsstärke bezieht sich daher immer auf die minimale Linienbreite der Resonanzlinie des jeweiligen NV-Zentrums. Während die Kopplungsstärke zwischen dem nuklearen Spin des Atomkerns und dem Elektronenspin des NV-Zentrums von der Position des nuklearen Spins des Atomkerns relativ zum NV-Zentrum und vom Abstand des dem nuklearen Spins des Atomkerns zum NV-Zentrum im Kristallgitter des Diamantkristalls zusammenhängt und nicht veränderbar ist, kann die Linienbreite der Resonanzlinie zwischen zwei definierten Zuständen, abhängig von der Amplitude, Zeitdauer der Einwirkung, Form usw. vergrößert werden. Die minimal erreichbare Linienbreite (Lebensdauer der Zustandes) wird beeinflusst durch die Kristalleigenschaften, die Temperatur des Kristalls und die magnetischen Spins im Umfeld des NV-Zentrums und der zugeordneten nuklearen Spins der nuklearen Quantenbits, sowie durch allgemein extern als auch intern alternierende Magnetfelder.

Im Wesentlichen beeinflusst die Hyperfein-Wechselwirkung des NV-Zentrums beeinflusst (Hyperfein-WW> Linienbreite) in einem kleinen oder moderaten Magnetfeld (<300-500 mT abhängig von der Kopplungsstärke) die Kopplungsstärke stark gekoppelter nuklearer Spins von Atomkernen. Die vom Quantencomputer ausgeführten Gatter sind daher direkt abhängig von dem Spin Zustand der mit den nuklearen gekoppelten NV-Zentren. Man bezeichnet diesen Bereich auch als Freezing-Zone. Da Kernspin-Kernspin Quantenbit-Flips, die zu einer Dekohärenz führen können, durch die NV-Zentren mit m=+1, m=-1 fast vollständig unterdrückt werden (Energieverschiebung zwischen den Spins). Die nuklearen Spins der als nukleare Quantenbits genutzten Atomkerne sind für einen Zustand des ihnen zugeordneten NV-Zentrums mit m=0 eingefroren. Für einen solchen Zustand des NV-Zentrums mit m=0 kann ein ausreichend starkes externes Magnetfeld diese nuklearen Spin-Quantenbit-Flips verhindern.

Die direkte Kopplung zwischen den nuklearen Spins der Atomkerne ist gering. Die direkte Kopplung zwischen den nuklearen Spins der Atomkerne ist gering gegenüber der Kopplung zwischen dem jeweiligen Atomkern zugeordneten NV-Zentrum und dem Spin dieses Atomkerns. Die direkte Kopplung zwischen den nuklearen Spins der Atomkerne untereinander erfolgt daher auf langen Zeitskalen µs- Bereich bis ms-Bereich. Bei der Ausarbeitung der technischen Lehre des hier vorgestellten Dokuments wurde erkannt, dass der Einfluss der direkten Kopplung zwischen den nuklearen Spins der Atomkerne im Allgemeinen vernachlässigt werden kann.

Für schwach an das jeweilige NV-Zentrum gekoppelten nuklearen Spins solcher schwach gekoppelter Atomkerne der nuklearen Quantenbits ist die Aufspaltung durch die Hyperfein-Wechselwirkung vernachlässigbar gegenüber der Wirkung des externen Magnetfeldes. Die schwachgekoppelten Atomkerne verhalten sich in diesem Punkt also genau umgekehrt als die stark gekoppelten Atomkerne.

Das hier vorgeschlagene Dokument schlägt somit einen Quantencomputer vor, der NV-Zentren in Diamant als Quantenbits umfasst und
stark an NV-Zentren gebundene nukleare Spins stark an diese NV-Zentren gekoppelter Atomkerne als nukleare Quantenbits, die die hier vorgelegte Schrift im Folgenden als starke nukleare Quantenbits bezeichnet, umfasst und
schwach an NV-Zentren gebundene nukleare Spins schwach an diese NV-Zentren gekoppelter Atomkerne als nukleare Quantenbits, die die hier vorgelegte Schrift im Folgenden als schwache nukleare Quantenbits bezeichnet, umfasst.

Die Resonanzenergie für die Kopplung dieser schwach gekoppelten nuklearen Spins dieser schwach an das jeweilige NV-zentrum gekoppelte Atomkerne ist somit nur schwach von dem jeweiligen Spinzustand der Elektronenkonfiguration des jeweils mit diesem nuklearen Spin schwach gekoppelten NV-Zentrums abhängig.

### Initialisierung

Im Folgenden erfolgt eine Erläuterung eines optionalen Vorgangs zur Initialisierung eines Quantencomputers:
Die Initialisierung der NV-Zentren optional erfolgt über einen Laserpuls als Pumpstrahlung mit einer definierten zeitlichen Länge und Intensität. Diese zeitliche Länge hängt von der Einkopplung des Laser-Lichtes des Lasers ab und damit von der Tiefe der NV-Zentren im Substrat von der Oberfläche des Diamantkristalls aus gemessen. Außerdem beeinflussen die Fokussierungsbedingungen die Intensität der Pumpstrahlung des Lasers am Ort des jeweiligen NV-Zentrums. Da das NV-Zentrum einen Dipol bildet, ist der Polarisationswinkel ein weiterer bestimmender Faktor. Das NV-Zentrum (gebildet aus einen Stickstoffatom N- und einer Fehlstelle V) definiert eine NV-Zentrums-Achse. Bei der Ausarbeitung der technischen Lehre dieses Dokuments wurde linear polarisiertes Licht als Pumpstrahlung für die NV-Zentren eingesetzt. Sowohl die lineare Polarisation des eingestrahlten Lichtes sollte optional senkrecht zur NV-Zentrumsachse stehen. Ein Ansprechen mit zirkular polarisiertem Licht ist auch möglich, wenn der Pointing-Vektor des Lichts parallel zur Achse des NV-Zentrums steht. In dem Fall können zwei Drehungen gleichzeitig ausgeführt werden. Die vom NV-Zentrum ggf. abgestrahlte Fluoreszenzstrahlung weist typischerweise eine lineare Polarisation mit einer Polarisationsrichtung senkrecht zur NV-Zentrumsachse auf. Optional ist die Mikrowellenstrahlung zur Manipulation des Elektronenspins der Elektronenkonfiguration des NV-Zentrums linear polarisiert, wobei auch hier die Polarisationsrichtung optional senkrecht zur NV-Zentrumsachse steht. Wie zuvor kann auch hier eine Manipulation mit zirkularpolarisierten elektromagnetischen Wellen (Mikrowelle) erfolgen, deren Pointing-Vektor parallel zur NV-Zentrumsachse liegt. In dem Fall kann die Anregung von m=-1 nach m=0 von der Anregung von m=0 nach m=+1 unterschieden werden. Dies kann über eine Cross-Bar-Struktur über dem betreffenden NV-Zentrum mit geeignet phasenverschobenen modulierten Strömen erreicht werden.

Eine Manipulation eines Paar aus NV-Zentrum und einem nuklearen Spin kann bei geeigneter Lage und Orientierung des nuklearen Spins relativ zum NV-Zentrum mit zirkularpolarisierten elektromagnetischen Wellen (Radiowelle) erfolgen, deren Pointing-Vektor parallel zur NV-Zentrumsachse liegt. In dem Fall kann die Anregung von m=-1 nach m=0 von der Anregung von m=0 nach m=+1 unterschieden werden. Dies kann über eine Cross-Bar-Struktur über dem betreffenden NV-Zentrum mit geeignet phasenverschobenen modulierten Strömen erreicht werden. Kerne mit Spin I=1/2 oder I=-1/2 kann die Manipulation mit linearpolarisierten elektromagnetischen Wellen erfolgen. Bei zirkularpolarisieren elektromagnetischen Wellen reagiert der Kerne mit Spin I=1/2 oder I=-1/2 nur auf den entsprechenden linear polarisierten Anteil.

Eine verbesserte Ein- und Auskopplung des Lichtes kann beispielsweise durch µ Linsen oder Pillars erfolgen. Optional weist der Quantencomputer zwischen der Oberfläche des Diamantkristalls und der Lichtquelle für die Erzeugung der Pumpstrahlung, also beispielsweise zwischen der Oberfläche des Diamantkristalls und dem Laser zur Erzeugung des Laserpulses optische Funktionselemente, wie Linsen, Spiegel, Blenden, photonische Kristalle, optische Funktionselemente der diffraktiven und/oder digitalen Optik, Bragg-Filter, Filter, Lichtwellenleiter, Wellenkoppler, Zirkulatoren, Richtkoppler, Anpassschichten etc. auf, die die Einkopplung und/oder Auskopplung verbessern.

Die Resonanzlinenbreite des Zustandes des jeweiligen NV-Zentrums wird durch die eingestrahlte Leistung beeinflusst. Um eine optimale Linienbreite zu erreichen, sollte die Leistung 10 µWatt erfahrungsgemäß nicht überschreiten. Eine Laser Pulsdauer von 3-10 µs hat sich bei der Ausarbeitung der technischen Lehrer in experimentellen Versuchen als in dem verwenden beispielhaften Aufbau optimal für die Initialisierung der NV-Zentren erwiesen.

Die Initialisierung der als nukleare Quantenbits des Quantencomputers verwendeten nuklearen Spins der betreffenden Atomkerne kann der Quantencomputer auf sehr unterschiedliche Arten vornehmen. Gemäß der technischen Lehre des hier vorgelegten Dokuments erscheinen derzeit folgende beispielhaften Methoden am erfolgversprechendsten:
a) SWOP des Quantenzustands des NV-Zentrums mit dem Quantenzustand des nuklearen Spins eines nuklearen Quantenbits unter Hartmann-Hahn Bedingungen (Erklärung folgt),
b) CROT auf den Quantenzustand des NV-Zentrums des Quantenbits, CROT auf das den Quantenzustand des nuklearen Kerns des Atomkerns des nuklearen Quantenbits und Laserpulse zur Re-Initialisierung des Quantenzustand der Elektronenkonfiguration des NV-Zentrums (Einseitiger SWOP)
c) Quantenbit-Flips im ESLAC (excited-state level anti-crossing) und GSLAC (ground-state level anticrossing) (Hyperpolarisation) (Erklärung folgt).

Beim ersten Verfahren a) überträgt bei einem SWOP des Quantenzustands des NV-Zentrums mit dem Quantenzustand des nuklearen Spins eines nuklearen Quantenbits unter Hartmann-Hahn Bedingungen der Quantencomputer unter einer Hartmann-Hahn (HH) Bedingung, die Information des Quantenzustands des NV-Zentrums auf den Quantenzustand des nuklearen Spins des betreffenden jeweiligen Atomkerns. Hierbei setzt der Quantencomputer das NV-Zentrum durch ein Clifford Gatter (Paul: Y) als (π/2)-Puls und anschießenden Clifford Gatter (Paul: X). Dies führt dazu, dass die Ausrichtung des Spins des Elektrons des NV-Zentrums mit einer Rabi-Frequenz (Spinlock) rotiert. Die Rabi-Frequenz wird durch Einstellung des Magnetfelds so eingestellt, dass die Rabi-Frequenz in Resonanz mit der Lamor-Frequenz des nuklearen Spins des Atomkerns liegt, so dass ein definierter Spin-Spin-SWAP (Spin-Austausch) stattfinden kann. Der Übergang des Spin-Spin-Swaps ist dabei wieder durch eine Zeitkonstante als Kopplungskonstante gekennzeichnet. Damit wird ein teilweiser Spin-Spin-Swap steuerbar. (z.B. 50% Spin-Austausch).

Dieses Verfahren kann besonders wirksam sein für die Kopplung zwischen NV-Zentren und schwach an diese gekoppelte nukleare Spins.

Das hier vorgelegte Dokument schlägt also optional einen Quantencomputer vor, der NV-Zentren als Quantenbits umfasst und stark an NV-Zentren von Quantenbits gekoppelte stark gekoppelte nukleare Spins als stark gekoppelte nukleare Quantenbits umfasst und schwach an NV-Zentren von Quantenbits gekoppelte schwach gekoppelte nukleare Spins als schwach gekoppelte nukleare Quantenbits umfasst, wobei der Quantencomputer dazu eingerichtet ist, ein NV-Zentrum eines Quantenbits mit einem schwach gekoppelten nuklearen Spins als schwach gekoppelten nuklearen Quantenbit dadurch zu koppeln, dass er mittels eines Clifford Gatter (Paul: Y) als (π/2)-Puls und durch Einstellung des Magnetfelds und/oder durch Einstellung der Amplitude der Mikrowellenstrahlung des Y- Clifford Gatters die Rabi-Frequenz des Elektronenspins mit der Lamor-Frequenz des nuklearen Spins im Wesentlichen in Übereinstimmung bringt, wobei im Wesentlichen bedeutet, dass dies einen Spin-Spin-Austausch ermöglicht. Das hier vorgelegte Dokument schlägt vor, in der jeweiligen Konstruktion des jeweiligen Quantencomputers im Rahmen einer Nacharbeit die notwendige Präzision jeweils zu bestimmen.

Anschließend re-initialisiert der Quantencomputer das NV-Zentrum durch einen Laserpuls der Pumpstrahlung der Lichtquelle (Laser). Dieses Verfahren ist für schwach an das NV-Zentrum gekoppelte nukleare Spins schwach gekoppelter Atomkerne geeignet.

Das zweite Verfahren b) dient zum Initialisieren stark an das NV-Zentrum gekoppelter nuklearer Spins von Atomkernen nuklearer Quantenbits: Der Quantencomputer führt ein CNOT auf das NV-Zentrum in Abhängig vom Quantenzustand des stark gekoppelten nuklearen Spins des stark gekoppelten Atomkerns des nuklearen Quantenbits durch. Sollte sich der Quantenzustand des stark gekoppelten nuklearen Spins des stark gekoppelten Atomkerns des nuklearen Quantenbits im falschen Quantenzustand befinden, findet der Übergang statt. Sollte sich der Quantenzustand des stark gekoppelten nuklearen Spins des stark gekoppelten Atomkerns des nuklearen Quantenbits nicht im falschen Quantenzustand befinden, findet der Übergang nicht statt. Sollte sich der Quantenzustand des stark gekoppelten nuklearen Spins des stark gekoppelten Atomkerns des nuklearen Quantenbits im falschen Quantenzustand befinden, kann das CNOT auf den nuklearen Spin des stark gekoppelten Atomkerns des nuklearen Quantenbits stattfinden und der Quantencomputer dreht den stak gekoppelten nuklearen Spin des stark gekoppelten Atomkerns des nuklearen Quantenbits mittels Manipulation durch das NV-Zentrum des Quantenbits. Anschließend initialisiert der Quantencomputer das NV-Zentrum durch einen Laserpuls.

Im dritten Verfahren c) führt der Quantencomputer werden Spinflips im "exciting state anti level crossing" (ESLAC) durch. Der Quantencomputer stellt eine magnetische Flussdichte ein, bei der sich im angeregten Zustand des NV-zentrums die Quantenzustände mit m=0 und mit m=-1 energetisch entartet sind. Die nuklearen Spins der Atomkerne der nuklearen Quantenbits heben diese Entartung jedoch auf und es können dann Spin-Spin Flips zwischen den nuklearen Spins der Atomkerne der nuklearen Quantenbits des Quantencomputers und dem Spin der jeweiligen Elektronenkonfiguration des jeweiligen NV-Zentrums stattfinden. Diese Spin-Flips führen zu einer Polarisation der nuklearen Spins der Atomkerne der nuklearen Quantenbits, die mit diesem NV-Zentrum koppeln. In Abhängigkeit vom Magnetfeld kann diese Polarisation dabei positiv (spin-up) oder negativ (spin-down) sein. Leider gelingt diese Art der Initialisierung derzeit nur bei stark gekoppelten Kernen.

Um die Polarisation zu erreichen, muss der Quantencomputer die magnetische Flussdichte des Magnetfelds optimal zu Achse des jeweiligen NV-Zentrums (z-Achse) ausrichten. Hierzu stehen verschiedene Methoden zur Verfügung. Die einfachste ist, dass der Quantencomputer die Lichtintensität des NV-Zentrums unter Änderung der Ausrichtung des Flussdichte des Magnetfelds maximiert, wobei der Quantencomputer den Betrag der Flussdichte konstant hält. Optional ermittelt der Quantencomputer die Ausrichtung der magnetischen Flussdichte mittels der Resonanzline des NV-Übergangs beispielsweise vom Quantenzustand m=0 zu m=1 der Elektronenkonfiguration des NV-Zentrums. Dies kann der Quantencomputer mit Ramsey-Sequenzen erreichen.

### Auslesen

Im folgenden wird ein Vorgang zum Auslesen der Quantenbits gemäß einer optionalen Ausführungsform vorgeschlagen:
Der Quantencomputer liest die Quantenzustände eines NV-Zentrums und der diesem NV-Zentrum zugeordneten nuklearen Spins mittels des NV-Zentrums durch. Dabei unterscheidet der Quantencomputer, ob sich das NV-Zentrum in m=0 oder m=+-1 Quantenzustand befindet.

Befindet sich das NV-Zentrum im m=-1 oder m=+1 Quantenzustand kann der Quantencomputer mittels eines Laserpuls der Lichtquelle als Pumpstrahlungsquelle mit Pumpstrahlungswellenlänge λₚₘₚ das NV-Zentrum anregen. Der angeregte Zustand des NV-Zentrums kann nun jedoch über zwei Wege zerfallen: In 70% der Fälle und mit einer Lebensdauer von ca. 10ns erfolgt die Abregung des angeregten Zustands des NV-Zentrums in dem m-1 Grundzustand durch Aussendung eines Photons. In diesem Fall regt der Laser als Lichtquelle als Pumpstrahlungsquelle mit Pumpstrahlungswellenlänge λₚₘₚ den Quantenzustand des NV-Zentrums sofort wieder an. Mit einer Wahrscheinlichkeit von 30% führt dann das NV-Zentrum einen verbotenen Interbandübergang vom Triplett S=1 zum Singulett S=0 Zustand durch. Dieser Quantenzustand ist metastabil und mit einer Lebensdauer von ca. 100-300ns um eine Größenordnung länger stabil als der direkte Zerfall in den Grundzustand. Nach dieser Zeit zerfällt der Quantenzustand des NV-Zentrums zurück in den Triplett-Zustand (m=0). Dieser Übergang des Quantenzustands des NV-Zentrums findet strahlungslos statt.

Für dem m=0 Zustand ist dieser Übergang zum Singulett unterdrückt, das NV-Zentrum fällt unter Aussendung eines Photon mit der Wellenlänge 636-700 nm zurück in dem Grundzustand bei m=0 und wird durch den Laser fortwährend wieder angeregt.

Da der metastabile Zustand um ca. eine Größenordnung zeitlich länger stabil ist als der strahlende Übergang, kann zwischen m=0 und m=-1,+1 ,aufgrund der unterschiedlichen Anzahl an Photonen pro Laserpuls, unterschieden werden. Der durch den Quantencomputer beobachtbare Kontrast ergibt sich aus dem Verhältnis der beiden verschiedenen Lebensdauern und entspricht einem Faktor 10-30 für die ersten 300-500 ns. Pro Laserpuls kann der Quantencomputer ca. 0.8 Photonen -unter idealen Bedingungen- für den Quantenzustand m=0 des NV-Zentrums bestimmen. Die Anzahl der Photonen für m=-1 oder m=+1 beträgt unter diesen Bedingungen < 0.1 Photonen pro Laserpuls. Der Quantencomputer führt daher optional jede Messung eines Quantenzustands eines NV-Zentrums ca. 1000-5000mal wiederholt durch, um die notwendige Anzahl an Ergebnissen für eine sichere statistische Auswertung und für eine sichere Ermittlung eines Quantenzustands zu erreichen. Die optimale Laserleistung bei der Abstrahlung der Laserpulse durch die Lichtquelle (Pumpstrahlungsquelle) ermittelt der Quantencomputer in einer Initialisierungsphase optional durch Ermittlung einer Sättigungskurve und Extraktion dieser optimalen Laserleistung.

Es gibt verscheidende Möglichkeiten den Kontrast zu erhöhen. Eine erste Methode basiert auf der Möglichkeit den nuklearen Spin des ¹⁴N-Stickstoff-Atomkerns des NV-Zentrums zu nutzen (Dieser steht dann nicht mehr als Qubit zur Verfügung). Im ESLAC findet ein Flip zwischen dem nuklearen Spin des ¹⁴N-Stickstoff-Atomkerns des NV-Zentrums und dem Elektronenspin der Elektronenkonfiguration des NV-Zentrums statt. Dieser Flip führt zu einer Umwandlung des Quantenzustands der Elektronenkonfiguration des NV-Zentrums vom Quantenzustand mit m=-1 zum Quantenzustand mit m=0 oder vom Quantenzustand mit m=0 zum Quantenzustand mit m=+1. Ist der nukleare Spin des ¹⁴N-Stickstoff-Atoms des NV-Zentrums im I=-1 Zustand werden somit 2 Flips benötigt um den nuklearen Spin des ¹⁴N-Stickstoff-Atoms des NV-Zentrums in den stabilen I=+1 zu überführen. Bindet man das ¹⁴N als Ancilla Qubit ein, so vergrößert diese Einbindung die Dunkelphase des NV-Zentrums um einen Faktor 3 und erhöht damit den Kontrast zwischen den Quantenzuständen der Elektronenkonfiguration des NV-Zentrums mit m=0 gegenüber m=-1 ebenfalls um das Dreifache pro Laserpuls.

Das Auslesen der Quantenzustände der nuklearen Spins der Atomkerne der nuklearen Quantenbits führt der Quantencomputer im zweiten Schritt über ein vorgeschaltetes primitives CROT Gatter für das NV-Zentrum abhängig von den jeweiligen Kernzuständen s.u.

Der Quantencomputer führt optional eine Quantencomputerberechnung mehrfach zur Fehlerkorrektur durch. Hierbei sollte der Quantencomputer die CROT alternierend in stochastisch oder zumindest jeweils bei jeder neuen Quantencomputerberechnung neu festgelegten Reihenfolge ausführen, um die Fidelity zu erhöhen. Alle Quantenzustände stark gekoppelter Spins von Atomkernen starkgekoppelter nuklearer Quantenbits überprüft der Quantencomputer optional mittels einer entsprechende CROT-Operation des NV-Zentrums . Optional steuert der Quantencomputer mehrere Frequenzen gleichzeitig an. Die entsprechenden Signale können durch Fourier-Transformation mehrerer Signale vom Zeitbereich in den Frequenzbereich, anschließender Summierung im Frequenzbereich zu eine, Summensignal und Rücktransformation in den Zeitbereich berechnet und dann entsprechend am Ort des NV-Zentrums erzeugt werden. Der Quantencomputer benötigt somit für das Auslesen der nuklearen Quantenzustände von 3 nuklearen Spins von 3 Atomkernen dreier nuklearer Quantenbits 2³=8 CROT-Gatter um Kombinationen von Quantenzuständen zu überprüfen. Befinden sich die Kerne in einem dieser 2³ Kombinationen von Quantenzuständen dieser drei Quantenbits, so erfolgt der NV-Übergang des NV-Zentrums und kann als solcher detektiert werden.

### Gatter für NV-Kern Systeme mit stark gekoppelten Kernen:

Systeme mit stark an die Elektronenkonfiguration eines NV-Zentrums gekoppelten nuklearen Spins von Atomkernen der nuklearen Quantenbits des Quantencomputers sind die Gatter Operationen der gekoppelten nuklearen Spins der Atomkerne der nuklearen Quantenbits immer abhängig von dem Quantenzustand des Elektronenspins der Elektronenkonfiguration des NV-Zentrums und umgekehrt. Dagegen sind die Operationen der stark gekoppelten nuklearen Spins der Atomkerne der nuklearen Quantenbits nicht zwingend abhängig von dem Zustand anderer stark gekoppelter nuklearer Spins der Atomkerne der nuklearen Quantenbits.

Die sich hieraus ergebene primitive Gatter sind daher immer konditionelle Rotationen:
a) CROT_{K} der Kerne in Abhängigkeit vom NV.
b) CROT_{NV} des NV-Zentrum abhängig von allen Quantenzuständen aller stark gekoppelter nuklearer Spins der Atomkerne stark gekoppelter nuklearer Quantenbits.

Definiert die Achse des NV-zentrums (NV-Achse) die z-Achse, können die Rotationen über die x-Achse und y-Achse erfolgen. Eine Rotation in y zeichnet sich durch eine Phasenverschiebung um 90° gegenüber x Rotationen aus. Die Phasenlage wird, wie oben beschrieben, durch die ersten Gatter definiert (Die Lage des Koordinatensystem ist symmetrisch um die z-Achse und damit beliebig.)

Eine Rotation über die z-Achse wird durch eine Kombination von 3 Rotationen erreicht CROT_{_Z}(θ) = CROT_{_Y}(-π/2) CROT_{_X}(θ) CROT_{_Y}(π/2) wie bereits oben beschrieben.

Mit den beiden primitiven Gattern kann der Quantencomputer nun alle universellen Gatter erzeugen:
Dies soll an den folgenden Beispielen dargestellt werden:
Annahme: Magnetfeld B in z-Richtung mit B=51 mT (ESLAC). Es sollen sich zwei ¹³C-Atomkerne auf dem 3. Gitterplatz (13.8 MHz) und 5. Gitterplatz (4.2 MHz) relativ zum NV-Zentrum befinden. Außerdem kann die Elektronenkonfiguration des NV-Zentrums mit einem ¹⁴N- Stickstoffkern Kern des NV-zentrums koppeln.

Der Quantencomputer verwendet den Spinzustand der Elektronenkonfiguration der NV-Zentrums für m=0 und m=-1. Der Quantencomputer verwendet die nuklearen Quantenzustände des ¹⁴N-Stickstoffatoms des NV-Zentrums mit nuklearen Quantenzuständen I=0 und I=+1 als nukleares Quantenbit. Der Quantencomputer verwendet die nuklearen Quantenzustände des ¹³C-Isotops im Umfeld des NV-Zentrums mit nuklearen Quantenzuständen I=-1/2 und +1/2 als weitere nukleare Quantenbits. Der Quantencomputer führt die Initialisierung des Spinzustands der Elektronenkonfiguration der NV-Zentrums und der nuklearen Quantenzustände der nuklearen Spins der nuklearen Quantenbits durch den Laserpuls der Pumpstrahlungsquelle **LD** mit Pumpstrahlungswellenlänge λₚₘₚ aus.

Es ergeben sich somit folgende Gatteroperationen durch Rotation um einen Winkel θ in der Bloch Kugel. θ ist durch die Amplitude und der Länge des RF- bzw. MW-Feldes (und damit der Rabi-Frequenz) definiert. Die Leiterbahnen- und Polarisationsrichtung sowie das Magnetfeld seien optimal eingerichtet. Im ESLAC sind das ¹⁴N-Stickstoff-Atom als nukleares Quantenbit auf I=+1 und die ¹³C-Kohlenstoffisotope als nukleare Quantenbits auf I=+1/2 polarisiert.

Typische Periodendauern der Rabi-Oszillation für 200mV Eingang und 40dB Verstärkung sind wie folgt:

| | |
|---|---|
| NV | 300ns |
| ¹³C_{_1} mit 13.8 MHz | 13us |
| ¹³C_{_2} mit 4,2 MHz | 70us |
| ¹⁴N bei 2.94MHz | 40us |

Aus diesen Werte und den oben genannten Grundlagen ergeben sich nun folgende primitive Gatter:
Für die nuklearen Quantenbits für das zugeordnete NV-Zentrum im m=-1 Quantenzustand ergeben sich folgen RF Puls Frequenzen:

| | |
|---|---|
| 1³C_{**_**1} | CROT mit 13.3 MHz (π=7us) |
| 1³C_{_2} | CROT mit 4.7 MHz (π=35us) |
| ¹⁴N | CROT mit 2.94 MHz (π=20us) |

Für die nuklearen Quantenbits für das zugeordnete NV-Zentrum im m=0 Quantenzustand ergeben sich folgen RF Puls Frequenzen:

| | |
|---|---|
| ¹⁴N: | CROT mit 5.1 MHz (π=20us). |
| ¹³C: | Zustand kann nicht verändert werden. |

Für das NV-Zentrum sind 8 Resonanzenergien entsprechend der Kombination für die Spinzustände der gekoppelten nuklearen Spins der nuklearen Quantenbits zu berücksichtigen. Die sich hieraus ergebenen Frequenzen für den MW-Puls sind notwendig um den Quantenzustand der Elektronenkonfiguration des NV-Zentrums von m=0 nach m=-1 zu treiben. Dabei sind die Rabi-Frequenz unabhängig von dem Kernzuständen und die Pulslängen für alle Kern-Spinzustände der gekoppelten nuklearen Quantenbits identisch. Die hier angegebene Zustände entsprechenden Kernzuständen für ¹³C_{_1}, ¹³C_{_2}, ¹⁴N.

Die folgende Tabelle gibt beispielhafte CROT-Frequenzen (MHz) für verschiedene Kernspin Zustände an, wie sie bei der Ausarbeitung der technischen Lehre dieser Offenlegung ermittelt wurden:

| | |
|---|---|
| 000> | 1400,0 MHz |
| 001> | 1397,06 MHz |
| 010> | 1404,7 MHz |
| 011> | 1401,76 MHz |
| 100> | 1413,2 MHz |
| 101> | 1410,26 MHz |
| 110>. | 1417,9 MHz |
| 111 >. | 1414,96 MHz |

Da die Linienbreite der Resonanz des Elektronenspins der Elektronenkonfiguration des NV-Zentrums mit ca. 0.5 MHz kleiner ist als der frequenzmäßige Abstand der Resonanzen, können alle Übergänge ohne Crossover durchgeführt werden. Nutzt man sehr große Amplituden also kurze Pulse, führt dies dagegen zu einer starken Verbreiterung der Resonanzline (um bis zu 6 MHz).

Mit diesem Pulsen können bei einer Frequenz von 1402 MHz somit die Übergänge 000> 001> 010> und 011> gleichzeitig verändert werden. Ebenfalls können die Resonanzlinien für 100>,101>110 und 111> mit einem Puls der Frequenz 1414 MHz dieser Breite getrieben werden. Durch optimale Pulskontrolle kann ein Übersprechen verringert werden.

Die universale Gatter lassen sich nun als Kombination der primitive Gatter darstellen:

### Für das Quantenbit des NV-Zentrums (Single Gate):

| | |
|---|---|
| iX (θ) (bzw. iX) | wird durch die Summe aller CROT() bzw. durch zwei |
| starke -Pulse mit | beispielsweise 1402 und1414 MHz gebildet. Die Länge |
| definiert dabei den | Drehwinkel bei gleicher Amplitude. |
| iY (θ) (bzw. iY) | wie X nur die Pulse versetzt mit einer 90° Phase. |
| iZ (θ) | gegeben durch Y(-π/2) X(θ) Y(π/2) |
| H | (Hadamard) ist geben durch Y(π/2) Z(π) |
| S | (Phasendrehung um π/4) ist gegeben durch Z(π/4) |

### 2 Qubit Gate:

| | |
|---|---|
| CiNOT(NV, Kern) Qubits | Die Teilsumme der jeweilige Drehungen des nicht abhängigen (4x CROT um die gleiche Achse mit der passenden Frequenz) |
| CCiNOT(NV, Kern) (2xCROT) | Die jeweilige Teilsumme der nicht abhängigen Qubits |
| CCCiNOT(NV, Kern): | ein CROT für 000> |
| CNOT(NV, Kern): | Z(π/2) CiNOT(NV, Kern) |

### Für die Kern Qubits ergeben sich folgende Gatter

### Single Gate:

| | |
|---|---|
| iX : | CROT für m=-1 des NV-Zentrums |

### Falls m nicht bekannt ist:

| | |
|---|---|
| iX: | CROT,X_NV, CROT, X_NV für m=-1 des NV-Zentrums |
| iY: | X mit einer 90° Phasenverschiebung der Radiowelle für m=-1 des |

### NV-Zentrums

| | |
|---|---|
| iZ (θ) | gegeben durch Y(-π/2) X(θ) Y(π/2) für m=-1 des NV-Zentrums |
| H | (Hadamard) ist geben durch Y(π/2) Z(π) für m=-1 des NV-Zentrums |
| S | (Phasendrehung um π/4) ist gegeben durch Z(π/4) für m=-1 des NV-Zentrums |

### 2 Qubit:

| | |
|---|---|
| CiNOT(Kern, NV) Zentrums. | ist ein primitiv Gatter CROT (180°) für m=-1 des NV-Für m=0 wird das Gatter nicht ausgeführt. |
| CiNOT(Kern_1, Kern_2) einen | erfolgt immer über das NV-Zentrum. Es handelt sich um Hadamard auf den nuklearen Spin des Kern_1, CROT auf das NV-Zentrum 2Pi, Hadamard auf Kern_1 |
| CiNOT (Kern_1,Kern_2). CiNOT(Kern1, NV) | CiNOT(Kern_1, NV), CiNOT(NV,Kern_2), für m=-1 |

### Oder falls der Zustand des NVs nicht bekannt ist:

| | |
|---|---|
| CiNOT(Kern_1,Kern_2). | CiNOT(Kern_1,NV), CiNOT(NV_Kern_2) |
| CiNOT(Kern_1, NV), iX_NV, CiNOT(NV,Kern_2) CiNOT(Kern_ 1,NV), iX_NV | CiNOT(Kern_1,NV), |
| SWAP(NV,Kern) | CiNOT(Kern,NV) CiNOT_Y(NV,Kern)Z((π/2) |
| CiNOT(Kern,NV) | |

Damit sind alle universellen Gatter für eine Quantencomputer gemäß einer optionalen Ausführungsform definiert.

Der hier vorgestellte Quantencomputer kann optional durch unterschiedliche Ansteuerung von schwach und stark an die NV-Zentren gekoppelten nuklearen Spins von Atomkernen nuklearer Quantenbits eine höhere Anzahl von Quantenbits bei verbesserter Fidelity realisieren.

Die oben genannten und im Folgenden erläuterten Merkmale und Ausführungsformen sind dabei nicht nur in den jeweils explizit genannten Kombinationen als offenbart anzusehen, sondern sind auch in anderen technisch sinnhaften Kombinationen und Ausführungsformen vom Offenbarungsgehalt umfasst. Insbesondere können die einzelnen Merkmale und Ausgestaltungen zusammenwirken, um eine Verlegbarkeit und/oder Mobilität des Quantencomputersystem herzustellen und/oder zu verbessern. Optional können alle offenbarten Merkmale und/oder Ausgestaltungen in einem Quantencomputersystem realisiert werden.

Weitere Einzelheiten und Vorteile sollen nun anhand der folgenden Beispiele und optionalen Ausführungsformen mit Bezug auf die Figuren näher erläutert werden.

Es zeigen:
- Figur. 1: eine schematische Darstellung eines Quantencomputersystems gemäß einer optionalen Ausführungsform;
- Figur 2: eine schematische Darstellung eines Quantencomputers gemäß einer optionalen Ausführungsform;
- Figur 3: eine schematische Darstellung eines Quantencomputersystems gemäß einer weiteren optionalen Ausführungsform;
- Figur 4:: eine schematische Darstellung eines Quantencomputersystems gemäß einer weiteren optionalen Ausführungsform mit mehreren Quantencomputern;
- Figur 5:: ein als Flugzeug ausgebildetes Fahrzeug gemäß einer optionalen Ausführungsform;
- Figur 6a:: ein als Flugzeug ausgebildetes Fahrzeug gemäß einer weiteren optionalen Ausführungsform;
- Figur 6b:: eine als Container ausgebildete mobile Vorrichtung gemäß einer optionalen Ausführungsform;
- Figur 6c:: ein als Schiff ausgebildetes Fahrzeug gemäß einer optionalen Ausführungsform;
- Figur 6d:: eine als Fabrik ausgebildete Vorrichtung gemäß einer optionalen Ausführungsform;
- Figur 7:: ein als Uboot ausgebildetes Fahrzeug gemäß einer optionalen Ausführungsform;
- Figur 8:: ein als Personenkraftwagen ausgebildetes Fahrzeug gemäß einer optionalen Ausführungsform;
- Figur 9:: ein Verfahren gemäß einer optionalen Ausführungsform;
- Figur 10:: eine schematische Darstellung eines Quantencomputersystems gemäß einer weiteren optionalen Ausführungsform;
- Figur 11:: eine schematische Darstellung eines Quantencomputersystems gemäß einer weiteren optionalen Ausführungsform;
- Figur 12:: ein Verfahren gemäß einer optionalen Ausführungsform;
- Figur 13:: einen beispielhaften Aufbau eines Verstärkers V gemäß einer optionalen Ausführungsform;
- Figur 14:: ein Kleidungsstück gemäß einer optionalen Ausführungsform;
- Figur 15:: ein als Satellit ausgebildetes Fahrzeug gemäß einer optionalen Ausführungsform;
- Figur 16:: eine als Smartphone ausgebildete mobile Vorrichtung gemäß einer optionalen Ausführungsform;
- Figur 17:: eine schematische Darstellung eines Quantencomputersystems gemäß einer weiteren optionalen Ausführungsform;
- Figuren 18A bis 18G:: schematische Darstellungen von Quantencomputersystemen gemäß weiterer optionaler Ausführungsformen;
- Figur 19A bis 19G:: Verfahren gemäß optionalen Ausführungsformen;
- Figur 20:: Aufbauschema eines Software-Stacks gemäß einer optionalen Ausführungsform;
- Figur 21:: einen Drohnenschwarm gemäß einer optionalen Ausführungsform;
- Figur 22:: ein Quantencomputersystem mit einer kardanischen Aufhängung.

In den folgenden Figuren werden gleiche oder ähnliche Elemente in den verschiedenen Ausführungsformen der Einfachheit halber mit gleichen Bezugszeichen bezeichnet.

Mit Verweis auf Figur 1 wird im Folgenden ein Quantencomputersystem gemäß einer optionalen Ausführungsform erläutert. Dabei werden im Detail auch manche Teilvorrichtungen des Quantencomputersystems erläutert.

Diese erläuterte Ausführungsform des Quantencomputersystems kann auf einem Quantencomputersystem basieren, wie in der DE 10 2020 101 784 B3 beschrieben. Die einzelnen Komponenten können dabei das Quantencomputersystem oder den Quantencomputer an sich betreffen. Dabei sollen Quantencomputersysteme, in denen die einzelnen Merkmale den Quantencomputer an sich betreffen, und solchen in denen die einzelnen Merkmale das Quantencomputersystem separat vom Quantencomputer betreffen, gleichermaßen als offenbart angesehen werden. Somit ist die für ein Quantencomputersystem betreffende Offenbarung gleichermaßen für einen Quantencomputer offenbart und umgekehrt.

Die gezeigte optionale Ausführungsform beschreibt einen Quantencomputer mit optischer Auslesung. Alternativ oder ergänzend dazu beschreibt die hier vorgelegte Schrift einen Quantencomputer mit elektrischer Auslesung. Die Basis des hier vorgestellten Quantencomputers sind Quantenpunkte. Optional umfassen die Quantenpunkte paramagnetische Zentren in einem Substrat. Optional umfasst das Substrat Diamant. Optional umfassen die paramagnetischen Zentren NV-Zentren und/oder SiV.-Zentren und/oder TR1-Zentren und/oder TR12-Zentren. Der hier vorgestellte Quantencomputer weist dabei optional eine optische Vorrichtung auf. Die optische Vorrichtung dient optional zum Ersten optional der Bestrahlung von Quantenpunkten und damit der paramagnetischen Zentren mit Pumpstrahlung. Zum Zweiten dient die optische Vorrichtung optional der Extraktion von Fluoreszenzstrahlung der Quantenpunkte. Optional dient somit die optische Vorrichtung der Extraktion von Fluoreszenzstrahlung paramagnetischer Zentren. Optional dient somit die optische Vorrichtung der Extraktion von Fluoreszenzstrahlung von NV-Zentren. Ein optisches Funktionselement der Vorrichtung ist somit optional ein paramagnetisches Zentrum in einem Kristall, insbesondere ein NV-Zentrum in einem Diamantkristall und/oder ein SiV-Zentrum in einem Diamantkristall und/oder ein G-Zentrum in einem Siliziumkristall oder ein paramagnetisches Zentrum in einem Mischkristall aus Elementen der IV. Hauptgruppe des Periodensystems. In diesem Zusammenhang verweist die hier vorgelegte Schrift auf das deutsche Patent DE 10 2020 101 784 B3, dessen technische Lehre vollumfänglicher Teil dieser Offenbarung, soweit dies entsprechend dem Recht des Staates, in dem eine Nationalisierung einer internationalen Anmeldung des Inhalts der hier vorgelegten Schrift erfolgt, dies zulässt.

Optional umfasst ein solcher Quantencomputer eine oder mehrere mikrointegrierte Schaltungen zur Erzeugung der Radiofrequenzsignale, der Mikrowellensignale, der Gleichspannungen und Ansteuerströme und der Ansteuerung der Lichtquelle (LED), die als Pumpstrahlungsquelle zum Zurücksetzen der Quantenpunkte der Quantenbits des verlegbaren Quantencomputers dient.

Alle diese Komponenten des verlegbaren Quantencomputers inklusive der besagten mikrointegrierten Schaltungen sind optional auf dem Schaltungsträger untergebracht, der dadurch besonders kompakt gestaltetsein kann.

Die gezeigte Ausführungsform zeigt ein verlegbares Quantencomputersystem bzw. einen verlegbaren Quantencomputer **QC,** optional in einer mobilen Vorrichtung vor. Wie die hier vorgelegte Schrift den Begriff "mobile Vorrichtung" auffasst, ist oben beschrieben. Kern des Quantencomputers **QC** bildet ein Substrat **D.** Das Substrat **D** weist optional einen oder mehrere Quantenpunkte **NV1, NV2, NV3** auf. Deren Natur wird im Folgenden noch näher erläutert. Die hier vorgelegte Schrift bezieht sich in diesem Zusammenhang aber ausdrücklich auch auf die Schrift DE 10 2020 007 977 B4, deren Inhalt voll umfänglicher Teil des Offenbarungsgehalts der hier vorgelegten Schrift ist, soweit im Falle einer späteren Nationalisierung einer späteren internationalen Anmeldung das Rechtssystem des Staats, in dem die Nationalisierung erfolgt, dies zulässt.

Das Weiteren umfasst der hier vorgestellte verlegbare Quantencomputer **QC** optional eine Lichtquelle **LD** und einen zugehörigen Lichtquellentreiber **LDRV.** Um den Quantenzustand der Quantenpunkte **NV1, NV2, NV3** beeinflussen zu können, weist der vorgeschlagene verlegbare Quantencomputer **QC** optional eine oder mehrere Vorrichtungen **mWA, MW/RF-AWFG** zur Erzeugung eines elektromagnetischen Wellenfeldes am jeweiligen Ort der Quantenpunkte **NV1, NV2, NV3** auf. Optional umfasst der verlegbare Quantencomputer **QC** eine Steuervorrichtung **µC**. Die Steuervorrichtung **µC** steuert optional den Lichtquellentreiber **LDRV** und damit die Emission von Pumpstrahlung **LB** mit der Pumpstrahlungswellenlänge λₚₘₚ. Die Steuervorrichtung **µC** steuert optional auch die eine oder mehrere Vorrichtungen **mWA, MW/RF-AWFG** zur Erzeugung eines elektromagnetischen Wellenfeldes am jeweiligen Ort der Quantenpunkte **NV1, NV2, NV3.** Die Steuervorrichtung **µC** weist optional einen Speicher oder mehrere Speicher **RAM, NVM.** der Steuervorrichtung **µC** für Programmbefehle und Daten auf. Der vorschlagsgemäße Quantencomputer **QC** umfasst optional einen Wellenformgenerator **WFG** zur Steuerung des Lichtquellentreibers **LDRV** mittels eines Sendesignals S5. Die Steuervorrichtung **µC** steuert optional auch den Wellenformgenerator WFG. Der vorgeschlagene Quantencomputer **QC** umfasst optional auch ein optisches System **OS** zur Bestrahlung der Quantenpunkte **NV1, NV2, NV3** im Substrat **D** mit der Pumpstrahlung **LB** der Lichtquelle **LD.** Des Weiteren umfasst der vorgeschlagene verlegbare Quantencomputer **QC** optional eine optische und/oder elektronische Quantenzustandsauslesevorrichtung zum Auslesen der aktuellen Quantenzustände der Quantenpunkte **NV1, NV2, NV3.** Im Fall einer optischen Quantenzustandsauslesevorrichtung umfasst die Quantenzustandsauslesevorrichtung optional einen Fotodetektor **PD** und einen Verstärker **V.** Im Fall einer elektrischen Quantenzustandsauslesevorrichtung umfasst die Quantenzustandsauslesevorrichtung optional Kontakte zur Kontaktierung des Substrats **D** und eine Spannungsquelle zur Erzeugung einer Extraktionsspannung zwischen solchen Kontakten des Substrats **D** und einen Verstärker **V** zu Verstärkung des so extrahierten Fotostromes der Quantenpunkte **NV1, NV2, NV3.** Der Verstärker V kann einen Transimpedanzverstärker als internen Verstärker **IVV** umfassen. In dem Fall umfasst Quantenzustandsauslesevorrichtung eine Vorrichtung zum elektronischen Auslesen der Zustände der Quantenpunkte **NV1, NV2, NV3.** Die Quantenpunkte **NV1, NV2, NV3** befinden sich optional in dem Substrat **D.** Optional ist das Substrat **D** im Bereich der Quantenpunkte **NV1, NV2, NV3** dotiert. Optional verschiebt diese Dotierung das Fermi-Niveau im Bereich der Quantenpunkte **NV1, NV2, NV3** in der Art, dass die Quantenpunkte **NV1, NV2, NV3** elektrisch geladen sind. Optional ist das Substrat **D** im Bereich der Quantenpunkte **NV1, NV2, NV3** n-dotiert. Optional verschiebt diese n-Dotierung das Fermi-Niveau im Bereich der Quantenpunkte **NV1, NV2, NV3** in der Art, dass die Quantenpunkte **NV1, NV2, NV3** negativ elektrisch geladen sind. Typischerweise erzeugt der Wellenformgenerator **WFG** ein Lichtquellensteuersignal **S5** typischerweise in Abhängigkeit von Einstellungen der Steuervorrichtung **µC**. Der Lichtquellentreiber **LDRV** versorgt optional die Lichtquelle **LD** in Abhängigkeit von dem Lichtquellensteuersignal **S5** und ggf. typischerweise in Abhängigkeit von Einstellungen der Steuervorrichtung **µC** mit elektrischer Energie. Die Steuervorrichtung **µC** steuert typischerweise den Wellenformgenerator **WFG.** Die Lichtquelle **LD** bestrahlt zumindest zeitweise mittels des optischen Systems **OS** den Quantenpunkt oder die mehreren Quantenpunkte **NV1, NV2, NV3** mit Pumpstrahlung **LB** der Pumpstrahlungswellenlänge λₚₘₚ. Der eine Quantenpunkt oder die mehreren Quantenpunkte **NV1, NV2, NV3** emittieren Fluoreszenzstrahlung **FL** mit einer Fluoreszenzstrahlungswellenlänge λ_{fl} in Folge der Bestrahlung mit elektromagnetischer Strahlung der Pumpstrahlungswellenlänge λₚₘₚ. Im Falle des optischen Auslesens der Quantenzustände der Quantenpunkte **NV1, NV2, NV3** erfasst der Fotodetektor **PD** mittels des optischen Systems **OS** zumindest einen Teil der Fluoreszenzstrahlung **FL.** Der Fotodetektor **PD** wandelt in diesem Fall zumindest einen Teil der Fluoreszenzstrahlung **FL** in ein Empfängerausgangssignal **S0** um. Ein nachfolgender Verstärker **V** verstärkt und filtert ggf. das Empfängerausgangssignal **S0** zu einem Empfangssignal **S1.** Im Fall der elektronische Auslesung der Quantenzustände der Quantenpunkte **NV1, NV2, NV3** erzeugt die Vorrichtung zum elektronischen Auslesen der Zustände der Quantenpunkte **NV1, NV2, NV3** das Empfangssignal **S1.** Die Steuereinrichtung **µC** steuert die eine oder die mehreren Vorrichtungen **mWA, MW/RF-AWFG** zur Erzeugung eines elektromagnetischen Wellenfeldes am jeweiligen Ort der Quantenpunkte **NV1, NV2, NV3.** Die Steuereinrichtung **µC** kann durch die Steuerung der einen oder mehreren Vorrichtungen **mWA, MW/RF-AWFG** zur Erzeugung eines elektromagnetischen Wellenfeldes am jeweiligen Ort der Quantenpunkte **NV1, NV2, NV3** und/oder durch die Steuerung der Emission der Lichtquelle **LD** Zustände der Quantenpunkte **NV1, NV2, NV3** ändern. Die Steuereinrichtung **µC** kann durch die Steuerung der einen oder der mehreren Vorrichtungen **mWA, MW/RF-AWFG** zur Erzeugung eines elektromagnetischen Wellenfeldes am jeweiligen Ort der Quantenpunkte **NV1, NV2, NV3** und/oder durch die Steuerung der Emission der Lichtquelle **LD** Zustände der Quantenpunkte **NV1, NV2, NV3** miteinander verkoppeln. Die Steuervorrichtung **µC** verfügt hierzu typischerweise über Mittel, um aus einem oder mehreren Empfangssignalen **S1** ein Messwertsignal **S4** mit einem oder mehreren Messwerten zu erzeugen. Dabei hängt das Messwertsignal **S4** von Quantenzuständen der Quantenpunkte **NV1, NV2, NV3** ab. Das Besondere (?) am Quantencomputers **QC** ist, dass der verlegbare Quantencomputer **QC** und/oder die mobile Vorrichtung im Gegensatz zum Stand der Technik eine verlegbare Energieversorgung **(LDV, TS, BENG, SRG)** zur Versorgung zumindest eines Teils der Teilvorrichtungen des Quantencomputers **QC** mit Energie aufweist. Die verlegbare Energieversorgung **(LDV, TS, BENG, SRG)** weist optional eine mobile Energieversorgung **(LDV, TS, BENG)** und eine Energieaufbereitungsvorrichtung **SRG**, insbesondere einen Spannungswandler oder einen Spannungsregler oder einen Stromregler, auf.

Optional weist eine weitere Ausprägung des verlegbaren Quantencomputers **QC** nicht nur Quantenpunkte **NV1, NV2, NV3** auf, sondern auch ein oder mehrere nukleare Kernquantenpunkte **CI1₁, CI1₂, CI1₃**, **CI2₁, CI2₂, CI2₃**, **CI3₁, CI3₂, CI3₃**. In diesem Fall weist der vorgeschlagene verlegbare Quantencomputer QC optional auch eine oder die mehreren Vorrichtungen **mWA, MW/RF-AWFG** zur Erzeugung eines elektromagnetischen Wellenfeldes am jeweiligen Ort der Kernquantenpunkte **CI1₁, CI1₂, CI1₃**, **CI2₁, CI2₂, CI2₃**, **CI3₁, CI3₂, CI3₃** auf. Typischerweise sind die eine oder die mehreren Vorrichtungen **mWA, MW/RF-AWFG** zur Erzeugung eines elektromagnetischen Wellenfeldes am jeweiligen Ort der Kernquantenpunkte **CI1₁, CI1₂, CI1₃**, **CI2₁, CI2₂, CI2₃, CI3₁, CI3₂, CI3₃** ganz oder zumindest in Teilen identisch mit den einen oder den mehreren Vorrichtungen **mWA, MW/RF-AWFG** zur Erzeugung eines elektromagnetischen Wellenfeldes am jeweiligen Ort der Quantenpunkte **NV1, NV2, NV3,** die somit dann gleichzeitig auch eine oder die mehreren Vorrichtungen zur Erzeugung eines elektromagnetischen Wellenfeldes am jeweiligen Ort der Kernquantenpunkte **CI1₁, CI1₂, CI1₃**, **CI2₁, CI2₂, CI2₃, CI3₁, CI3₂, CI3₃** sind Die Quantenpunkte **NV1, NV2, NV3** und die nuklearen Kernquantenpunkte **CI1₁, CI1₂, CI1₃**, **CI2₁, CI2₂, CI2₃, CI3₁, CI3₂, CI3₃** befinden sich optional in dem gemeinsamen Substrat **D.** Die Steuervorrichtung **µC** steuert die eine oder die mehreren Vorrichtungen **mWA, MW/RF-AWFG** zur Erzeugung eines elektromagnetischen Wellenfeldes. Die Steuervorrichtung **µC** kann dann durch Ansteuerung der einen oder mehreren Vorrichtungen **mWA, MW/RF-AWFG** zur Erzeugung eines elektromagnetischen Wellenfeldes und/oder durch Steuerung der Emission der Lichtquelle **LD** Quantenzustände der Quantenpunkte **NV1, NV2, NV3** und/oder Quantenzustände der Kernquantenpunkte **CI1₁, CI1₂, CI1₃**, **CI2₁, CI2₂, CI2₃, CI3₁, CI3₂, CI3₃** ändern. Die Steuervorrichtung **µC** kann dann durch Ansteuerung der einen oder mehreren Vorrichtungen **mWA, MW/RF-AWFG** zur Erzeugung eines elektromagnetischen Wellenfeldes und/oder durch Steuerung der Emission der Lichtquelle **LD** Quantenpunkte **NV1, NV2, NV3** mit anderen Quantenpunkten **NV1, NV2, NV3** verkoppeln Die Steuervorrichtung **µC** kann dann durch Ansteuerung der einen oder mehreren Vorrichtungen **mWA, MW/RF-AWFG** zur Erzeugung eines elektromagnetischen Wellenfeldes und/oder durch Steuerung der Emission der Lichtquelle **LD** Quantenpunkte **NV1, NV2, NV3** mit Kernquantenpunkten **CI1₁, CI1₂, CI1₃**, **CI2₁, CI2₂, CI2₃**, **CI3₁, CI3₂, CI3₃** verkoppeln. Die Steuervorrichtung **µC** kann dann durch Ansteuerung der einen oder mehreren Vorrichtungen **mWA, MW/RF-AWFG** zur Erzeugung eines elektromagnetischen Wellenfeldes und/oder durch Steuerung der Emission der Lichtquelle **LD** Kernquantenpunkte **CI1₁, CI1₂, CI1₃**, **CI2₁, CI2₂, CI2₃**, **CI3₁, CI3₂, CI3₃** mit anderen Kernquantenpunkten **CI1₁, CI1₂, CI1₃**, **CI2₁, CI2₂, CI2₃**, **CI3₁, CI3₂, CI3₃** verkoppeln. Dabei hängt das Messwertsignal **S4** von Quantenzuständen von Quantenpunkten **NV1, NV2, NV3** und/oder von Zuständen von Kernquantenpunkten **CI1₁, CI1₂, CI1₃**, **CI2₁, CI2₂, CI2₃**, **CI3₁, CI3₂, CI3₃** ab.

In einer weiteren Detailierung des verlegbaren Quantencomputers **QC** versorgt die mobile Energieversorgung **(LDV, TS, BENG)** die Energieaufbereitungsvorrichtung **SRG** mit Energie, wobei wiederum die Energieaufbereitungsvorrichtung **SRG** andere Vorrichtungsteile des verlegbaren Quantencomputers **QC** mit elektrischer Energie versorgt.

In einer weiter konkretisierten Variante umfasst die mobile Energieversorgung **(LDV, TS, BENG)** eine Ladevorrichtung **LDV** und eine Trennvorrichtung **TS** und eine Energiereserve **BENG.** Dies ermöglicht eine Verbesserung der EMV-Empfindlichkeit des verlegbaren Quantencomputers **QC** (EMV = elektromagnetische Verträglichkeit). Hierzu weist der vorgeschlagene verlegbare Quantencomputer **QC** optional einen ersten Betriebsmodus und einen zweiten Betriebsmodus auf. In dem ersten Betriebsmodus des verlegbaren Quantencomputers **QC** verbindet zum Ersten die Trennvorrichtung **TS** die Ladevorrichtung **LDV** mit der Energiereserve **BENG,** sodass die Ladevorrichtung **LDV** in diesem ersten Betriebsmodus die Energiereserve **BENG** mit elektrischer Energie einer externen Energieversorgung **PWR** lädt. In dem ersten Betriebsmodus verbindet zum Erstendie Trennvorrichtung **TS** die Ladevorrichtung **LDV** mit der Energieaufbereitungsvorrichtung **SRG**, und zum Zweiten versorgt die Ladevorrichtung **LDV** die Energieaufbereitungsvorrichtung **SRG** mit elektrischer Energie der externen Energieversorgung **PWR.** In dem zweiten Betriebsmodus trennt optional zum Ersten die Trennvorrichtung **TS** die Ladevorrichtung **LDV** von der Energiereserve **BENG** und zum Zweiten die Trennvorrichtung **TS** die Ladevorrichtung **LDV** von der Energieaufbereitungsvorrichtung **SRG**. In dem zweiten Betriebsmodus versorgt zum Dritten optional die Energiereserve **BENG** die Energieaufbereitungsvorrichtung **SRG** mit elektrischer Energie.

In einer weiteren optionalen Ausprägung umfasst der verlegbarer Quantencomputer **QC** ein Gehäuse **GH** und eine Abschirmung **AS.** Optional befinden sich die Lichtquelle **LD** und der Lichtquellentreiber **LDRV** und das Substrat **D** und die Vorrichtungen **mWA, MW/RF-AWFG** zur Erzeugung des elektromagnetischen Wellenfeldes und die Steuervorrichtung **µC** und der Speicher **RAM, NVM** der Steuervorrichtung **µC** und das optische System **OS** und ggf. der Verstärker **V** und die Abschirmung **AS** innerhalb des Gehäuses **GH.** Dies schützt diese Vorrichtungsteile und ggf. die Quantenpunkte **NV1, NV2, NV3** und Kernquantenpunkte **CI1₁, CI1₂, CI1₃**, **CI2₁, CI2₂, CI2₃**, **CI3₁, CI3₂, CI3₃** im Substrat **D** vor störenden EMV-Einflüssen. Typischerweise kann die Abschirmung **AS** Teil des Gehäuses **GH** oder das Gehäuse **GH** selbst sein. Optional befinden sich zumindest Teile der Vorrichtungsteile der Energieversorgung **(LDV, TS, BENG, SRG**) des verlegbaren Quantencomputers **QC** oder solche Teile der Energieversorgung (**LDV**, **TS, BENG, SRG)** des verlegbaren Quantencomputers **QC,** die für eine gewisse Zeit eine autonome Energieversorgung für einen autonomen Betrieb des verlegbaren Quantencomputers **QC** ermöglichen, innerhalb des gemeinsamen Gehäuses **GH.** Optional verfügen die Teile über eine eigene Abschirmung **AS.**

Eine Energieaufbereitungsvorrichtung **SRG** und eine Energiereserve **BENG** der Energieversorgung (**LDV, TS, BENG, SRG)** des Quantencomputers **QC** befinden sich optional innerhalb der Abschirmung **AS.**

Damit der verlegbare Quantencomputer **QC** als mobiler Quantencomputer **QC** auch während der Verlegung betrieben werden kann, umfasst der verlegbare Quantencomputer **QC** optional Mittel zu seinem Betrieb, wobei der verlegbare Quantencomputer **QC** und alle Mitteln zum Betrieb dieses verlegbaren Quantencomputers **QC** Teil einer mobilen Vorrichtung sein können. Damit dies möglich ist, sind diese Mittel zum Betrieb des verlegbaren Quantencomputers **QC** gemäß der optionalen Ausführungsform ebenfalls verlegbar. Aus dem gleichen Grund sind diese Mittel zum Betrieb des verlegbaren Quantencomputers **QC** optional Teil des verlegbaren Quantencomputers **QC.** Sowohl der verlegbare Quantencomputer **QC** als auch diese Mittel zum Betrieb des verlegbaren Quantencomputers **QC** sind optional Teil der mobilen Vorrichtung. Dabei ist es typischerweise unerheblich, ob der Betrieb des verlegbaren Quantencomputers **QC** trotz des Vorhandenseins aller Mittel zum Betrieb des verlegbaren Quantencomputers **QC** als Teil des verlegbaren Quantencomputers **QC** an Mittel und/oder Kommandos von außerhalb des verlegbaren Quantencomputers **QC** gekoppelt ist.

Wie oben bereits erwähnt, ist der verlegbare Quantencomputer **QC** optional Teil einer mobilen Vorrichtung, wobei die mobile Vorrichtung insbesondere ein Smartphone oder ein tragbares Quantencomputersystem oder ein Fahrzeug oder ein Roboter oder ein Flugzeug oder ein Flugkörper oder ein Satellit oder ein Raumflugkörper oder eine Raumstation oder ein Schwimmkörper oder ein Schiff oder ein Unterwasserfahrzeug oder ein Unterwasserschwimmkörper oder ein verlegbares Waffensystem oder eine andere mobile Vorrichtung sein kann.

In einer weiteren optionalen Ausprägung umfasst der verlegbare Quantencomputer **QC** optional eine Positioniervorrichtung **XT, YT**. Die Positioniervorrichtung **XT, YT** kann optional das Substrat **D** so gegenüber dem optischen System **OS** positionieren, dass das optische System **OS** im Zusammenwirken mit der einen oder den mehreren Vorrichtungen **mWA, MW/RF-AWFG** zur Erzeugung eines elektromagnetischen Wellenfeldes zum Ersten in einer ersten Positionierung eine erste Menge von Quantenpunkten mit einer ersten Anzahl von Quantenpunkten und ggf. einer zweiten Anzahl von Kernquantenpunkten ansteuern kann, und zum Zweiten in einer zweiten Positionierung eine zweite Menge von Quantenpunkten mit einer dritten Anzahl von Quantenpunkten und ggf. einer vierten Anzahl von Kernquantenpunkten ansteuern kann. Die Steuervorrichtung **µC** steuert optional die Positioniervorrichtung **XT, YT** für das Substrat **D** in der Art, dass sie die erste Positionierung oder die zweite Positionierung oder weitere Positionierungen einnimmt. Auf diese Weise kann sich der verlegbare Quantencomputer **QC** stets so in Abhängigkeit von seiner Betriebstemperatur im Betrieb und/oder in Betriebspausen umkonfigurieren, dass er stets ein Maximum an Quantenpunkten und Kernquantenpunkten nutzen kann.

In einer weiteren optionalen Ausgestaltung weist daher der verlegbare Quantencomputer **QC** einen Temperatursensor **ST** auf, der einen Temperaturmesswert für die Temperatur des Substrats **D** oder für die Temperatur einer damit thermisch verbundenen Teilvorrichtung des verlegbaren Quantencomputers **QC** ermittelt.

Somit ergibt sich eine optionale Version des verlegbaren Quantencomputers **QC,** wobei der verlegbare Quantencomputer **QC** dazu eingerichtet und vorgesehen ist, mit einer verringerten ersten Anzahl an Quantenpunkten auch bei Raumtemperatur des Substrats **D** oder einem Temperaturmesswert, der einem Wert größer als 0°C entspricht, arbeiten zu können. Gleichzeitig ist der verlegbare Quantencomputer **QC** jedoch ebenfalls eingerichtet und vorgesehen, mit einer erhöhten, dritten Anzahl an Quantenpunkten bei einem Temperaturmesswert, der einem Wert kleiner als 0°C entspricht, arbeiten zu können. Auf diese Weise kann sich der verlegbare Quantencomputer **QC** stets so in Abhängigkeit von seiner Betriebstemperatur im Betrieb und/oder in Betriebspausen umkonfigurieren, dass er stets ein Maximum an Quantenpunkten und Kernquantenpunkten nutzen kann.

Die hier vorgelegte Schrift offenbart daher in einer optionalen Ausprägung einen verlegbaren Quantencomputer **QC,** der dazu eingerichtet und vorgesehen ist, mit einer verringerten zweiten Anzahl an Kernquantenpunkten auch bei Raumtemperatur des Substrats **D** oder einem Temperaturmesswert, der einem Wert größer als 0°C entspricht, arbeiten zu können. Optional ist der verlegbare Quantencomputer **QC** gleichzeitig dazu eingerichtet und vorgesehen, mit einer erhöhten vierten Anzahl an Kernquantenpunkten bei einem Temperaturmesswert, der einem Wert kleiner als 0°C entspricht, arbeiten zu können. Auf diese Weise kann sich der verlegbare Quantencomputer **QC** stets so in Abhängigkeit von seiner Betriebstemperatur im Betrieb und/oder in Betriebspausen umkonfigurieren, dass er stets ein Maximum an Quantenpunkten und Kernquantenpunkten nutzen kann.

In einer weiteren optionalen Ausprägung weist der verlegbare Quantencomputer **QC** eine oder mehrere verlegbare Kühlvorrichtungen **KV** auf, die zusammen mit dem verlegbaren Quantencomputer **(QC)** verlegbar sind. Eine oder mehrere der verlegbaren Kühlvorrichtungen **KV** sind dabei optional dazu geeignet und/oder vorgesehen, die Spin-Temperatur von Quantenpunkten **NV1, NV2, NV3** und/oder Kernquantenpunkten **CI1₁, CI1₂, CI1₃**, **CI2₁, CI2₂, CI2₃**, **CI3₁, CI3₂, CI3₃** und/oder die Temperatur des Substrats **D** zu senken.

In einer weiteren optionalen Ausprägung senken eine oder mehrere solcher Kühlvorrichtungen **KV** die Temperatur von Quantenpunkten **NV1, NV2, NV3** und/oder die Temperatur von Kernquantenpunkten **CI1₁, CI1₂, CI1₃, CI2₁, CI2₂, CI2₃, CI3₁, CI3₂, CI3₃** und/oder die Temperatur des Substrats **D** so weit, dass der verlegbare Quantencomputer **QC** mit einer gegenüber der verringerten ersten Anzahl an Quantenpunkten **NV1, NV2, NV3** erhöhten dritten Anzahl an Quantenpunkten **NV1, NV2, NV3** arbeiten kann. Optional senken eine oder mehrere solcher Kühlvorrichtungen **KV** die Temperatur von Quantenpunkten **NV1, NV2, NV3** und/oder die Temperatur von Kernquantenpunkten **CI1₁, CI1₂, CI1₃**, **CI2₁, CI2₂, CI2₃**, **CI3₁, CI3₂, CI3₃** und/oder die Temperatur des Substrats **D** soweit, dass der Quantencomputer **QC** mit einer gegenüber der verringerten zweiten Anzahl an Kernquantenpunkten **CI1₁, CI1₂, CI1₃**, **CI2₁, CI2₂, CI2₃, CI3₁, CI3₂, CI3₃** mit einer erhöhten vierten Anzahl an Kernquantenpunkten **CI1₁, CI1₂, CI1₃, CI2₁, CI2₂, CI2₃, CI3₁, CI3₂, CI3₃** arbeiten kann.

In einer weiteren optionalen Ausprägung umfassen eine oder mehrere der verlegbaren Kühlvorrichtungen **KV** des Quantencomputers **QC** ein oder mehrere Closed Loop Helium Gas Cooling-Systeme **HeCLCS,** oder ein oder mehrere verlegbare Closed Loop Helium Gas Cooling Systeme **HeCLCS** umfassen ein oder mehrere verlegbare Kühlvorrichtungen **KV.**

In einer weiteren optionalen Ausprägung umfasst der verlegbare Quantencomputer **QC** eine zweite verlegbare Energieversorgung **BENG2,** die von der ersten verlegbaren Energieversorgung **BENG** verschieden ist. Optional versorgt die zweite verlegbare Energieversorgung **BENG2** ein oder mehrere der verlegbaren Kühlvorrichtungen **KV** und/oder ein oder mehrere der Closed Loop Helium Gas Cooling-Systeme **HeCLCS** mit Energie.

In einer anderen optionalen Ausprägung weisen der verlegbare Quantencomputer **QC** und/oder die mobile Vorrichtung eine mobilen Datenschnittstelle **DBIF,** insbesondere eine mobile Funkdatenschnittstelle und/oder eine drahtgebundene Datenschnittstelle, auf. Optional kann mittels dieser Datenschnittstelle **DBIF** in einer weiteren optionalen Ausprägung ein übergeordnetes Rechnersystem, beispielsweise eine zentrale Steuervorrichtung ZSE, die Steuervorrichtung **µC** so steuern, dass die Steuervorrichtung **µC** des verlegbaren Quantencomputers **QC** den verlegbaren Quantencomputer **QC** zur Durchführung zumindest einer Manipulation eines Zustands zumindest eines Quantenbits der Quantenbits **NV1, NV2, NV3** und/oder zur Durchführung zumindest einer Manipulation eines Zustands zumindest eines nuklearen Kernquantenbits der nuklearen Kernquantenbits **CI1₁, CI1₂, CI1₃**, **CI2₁, CI2₂, CI2₃, CI3₁, CI3₂, CI3₃** veranlasst. Dabei steuert die übergeordnete zentrale Steuereinheit **ZSE** optional die Steuervorrichtung **µC** über die mobile Datenschnittstelle **DBIF.**

Optional umfassen die erste verlegbare Energiereserve **BENG** und/oder die zweite verlegbare Energiereserve **BENG2** eine oder mehre Batterien und/oder einen oder mehrere Akkumulatoren oder einen oder mehrere Kondensatoren und/oder eine oder mehrere Zusammenschaltungen mehrerer dieser Energiespeicher. Optional weisen der verlegbare Quantencomputer **QC** und/oder die mobile Vorrichtung eine oder mehrere Ladevorrichtungen LDV auf. Typischerweise sind eine oder mehrere Ladevorrichtungen **LDV** dazu bestimmt und/oder vorgesehen zumindest zeitweise in zumindest einigen oder allen der wiederaufladbaren Energiespeicher **BENG, BENG2** Energie zu speichern.

In einer Variante können in dem verlegbaren Quantencomputer **QC** die erste verlegbare Energiereserve **BENG** und/oder die zweite verlegbare Energiereserve **BENG2** einen oder mehrere Energiespeicher umfassen, die Energie mittels chemischer und/oder elektrochemischer Vorgänge aus zumindest einem oder mehreren Fluiden erzeugen. In dem Fall weisen optional die erste verlegbare Energiereserve **BENG** und/oder die zweite verlegbare Energiereserve **BENG2** und/oder der Quantencomputer **QC** einen oder mehrere Vorratstanks für diese Fluide auf. Einer oder mehrere dieser Vorratstanks versorgen einen oder mehrere Energiespeicher des Quantencomputers **QC** mit einem oder mehreren dieser Fluide, die typischerweise der Erzeugung von Energie dienen. Optional umfassen dabei einer oder mehrere der Energiespeicher eine oder mehrere galvanische Zellen und/oder eine oder mehrere Brennstoffzellen und/oder eine oder mehrere Verbrennungsmaschinen und/oder Turbinen und dergleichen, die jeweils mit einem oder mehreren elektrischen Generatoren gekoppelt sind, und/oder eine oder mehrere thermische Energieumwandlungsmaschinen, die jeweils mit einem oder mehreren elektrischen Generatoren gekoppelt sind. Eine oder mehrere der mobilen Energieversorgungen des Quantencomputers **QC** weisen dabei optional eine oder mehrere Energieaufbereitungsvorrichtungen **SRG,** insbesondere einen oder mehrere Spannungswandler und/oder einen oder mehrere Spannungsregler und/oder einen oder mehrere Stromregler, auf. Einer oder mehrere der Energiespeicher versorgen die Energieaufbereitungsvorrichtungen **SRG** optional mit Energie. Eine oder mehrere der Energieaufbereitungsvorrichtungen **SRG** versorgen optional wiederum ein oder mehrere Vorrichtungsteile des Quantencomputers **QC mit** jeweils für das betreffende Vorrichtungsteil geeigneter, aufbereiteter und stabilisierter elektrischer Energie.

In einer weiteren optionalen Variante des verlegbarer Quantencomputers **QC** umfassen die erste verlegbare Energiereserve **BENG** und/oder die zweite verlegbare Energiereserve **BENG2** einen oder mehrere Energiespeicher, die Energie mittels mechanischer Vorgänge erzeugen. Optional umfassen einer oder mehrere dieser Energiespeicher dann einen oder mehrere Generatoren und/oder eine oder mehrere Lichtmaschinen und/oder einen oder mehrere als Generator betreibbare Elektromotoren. Typischerweise weisen eine oder mehrere mobile Energieversorgungen des Quantencomputers **QC** eine oder mehrere Energieaufbereitungsvorrichtungen **SRG,** insbesondere einen oder mehrere Spannungswandler oder einen oder mehrere Spannungsregler oder einen oder mehrere Stromregler, auf. Einer oder mehrere der Energiespeicher versorgen eine oder mehrere der Energieaufbereitungsvorrichtungen **SRG** mit Energie. Eine oder mehrere der Energieaufbereitungsvorrichtungen **SRG** versorgen dann optional ein oder mehrere andere Vorrichtungsteile des verlegbaren Quantencomputers **QC** mit elektrischer Energie.

In einer weiteren optionalen Variante des verlegbaren Quantencomputers **QC** umfassen die erste verlegbare Energiereserve **BENG** und/oder die zweite verlegbare Energiereserve **BENG2** optional einen oder mehrere Energiespeicher, die elektrische Energie mittels der Umwandlung elektromagnetischer Strahlung, insbesondere Licht, erzeugen. Dazu umfassen optional einer oder mehrere der Energiespeicher eine oder mehrere Solarzellen und/oder eine oder mehrere funktionsäquivalente Vorrichtungen, wie beispielsweise PN-Übergänge. In dem Fall weisen optional eine oder mehrere der mobilen Energieversorgungen des Quantencomputers **QC** eine oder mehrere Energieaufbereitungsvorrichtungen **SRG,** insbesondere einen oder mehrere Spannungswandler und/oder einen oder mehrere Spannungsregler und/oder einen oder mehrere Stromregler, auf. Einer oder mehrere der Energiespeicher der Energiereserve **BENG, BENG2** des Quantencomputers **QC** versorgen dann typischerweise zumindest zeitweise eine oder mehrere der Energieaufbereitungsvorrichtungen **SRG** mit Energie. Eine oder mehrere Energieaufbereitungsvorrichtungen **SRG** versorgen dann damit ein oder mehrere andere Vorrichtungsteile des Quantencomputers **QC** mit elektrischer Energie.

In einer weiteren optionalen Variante des verlegbarer Quantencomputers **QC** umfassen die ersten verlegbare Energiereserve **BENG** und/oder die zweite verlegbare Energiereserve **BENG2** einen oder mehrere Energiespeicher, die Energie mittels nuklearer Vorgänge erzeugen. Eine oder mehrere der mobile Energieversorgungen des Quantencomputers **QC** umfassen eine oder mehrere Energieaufbereitungsvorrichtungen **SRG,** insbesondere einen oder mehrere Spannungswandler und/oder einen oder mehrere Spannungsregler und/oder einen oder mehrere Stromregler. Einer oder mehrere der Energiespeicher der Energiereserve **BENG, BENG2** des Quantencomputers **QC** versorgen optional zumindest zeitweise eine oder mehrere der Energieaufbereitungsvorrichtungen **SRG** mit Energie. Eine oder mehrere dieser Energieaufbereitungsvorrichtungen SRG versorgen dann wiederum einen oder mehrere Vorrichtungsteile des verlegbaren Quantencomputers **QC** mit elektrischer Energie.

In einer weiteren optionalen Ausprägung umfassen einer oder mehrere der Energiespeicher eine oder mehrere thermonukleare Batterien oder Radionuklid Batterien oder eine oder mehrere zu einer solchen thermonuklearen Batterie funktionsäquivalente Vorrichtungen.

In einer weiteren optionalen Variante umfasst das Substrat **D** Diamant. In dem Fall sind optional ein oder mehrere der Quantenpunkte **NV1, NV2, NV3** in dem Substrat **D** als Defektzentren und/oder paramagnetische Zentren in Diamant ausgebildet. Optional sind dann ein oder mehrere der Defektzentren in Diamant NV-Zentren oder ST1-Zentren oder SiV-Zentren oder TR1-Zentren und/oder TR12-Zentren.

Optional umfasst der verlegbare Quantencomputer **QC** ein oder mehrere Kernquantenpunkte **CI1₁, CI1₂, CI1₃**, **CI2₁, CI2₂, CI2₃, CI3₁, CI3₂, CI3₃** auf Basis von Isotopen mit einem magnetischen Moment µ. Dabei sind optional die Kernquantenpunkte **CI1₁, CI1₂, CI1₃, CI2₁, CI2₂, CI2₃, CI3₁, CI3₂, CI3₃** mit Quantenpunkten **NV1, NV2, NV3** gekoppelt.

Optional ist das Substrat **D** im Wesentlichen zumindest Bereichsweise im Bereich der Kernquantenpunkte **CI1₁, CI1₂, CI1₃**, **CI2₁, CI2₂, CI2₃**, **CI3₁, CI3₂, CI3₃** und der Quantenpunkte **NV1, NV2, NV3** isotopenrein. Dies hat den Vorteil, dass die magnetischen Momente der Kernquantenpunkte **CI1₁, CI1₂, CI1₃**, **CI2₁, CI2₂, CI2₃, CI3₁, CI3₂, CI3₃** und der Quantenpunkte **NV1, NV2, NV3** nicht mit solchen parasitären magnetischen Momenten, bedingt durch Verunreinigungen des Substrats **D,** koppeln. Hierzu weisen die Isotope des Substrats **D** abgesehen von Atomen, die die Kernquantenpunkte **CI11, CI12, CI1₃**, **CI2₁, CI2₂, CI2₃, CI3₁, CI3₂, CI3₃** bilden, optional im Wesentlichen kein magnetisches Kernmoment auf.

In einer weiteren optionalen Ausprägung weist der verlegbare Quantencomputer **QC** einen oder mehrere Lüfter und/oder einen oder mehrere Wärmetauscher zum Wärmeaustausch mit der Umgebung und/oder einen oder mehrere Wärmetauscher zum Wärmeaustausch mit der Umgebungsluft und/oder einen oder mehrere Strahlungskühler zum Wärmeaustausch mit der Umgebungsluft oder der Umgebung mittels elektromagnetischer Wärmestrahlung auf.

In einer weiteren optionalen Variante des verlegbaren Quantencomputers **QC** tauschen ein oder mehrere der Lüfter und/oder ein oder mehrere der Wärmetauscher mit einer oder mehrerer der verlegbaren Kühlvorrichtungen **KV** Energie in Form von Wärme aus.

In einer weiteren optionalen Modifikation weist der verlegbare Quantencomputer QC eine interne Schirmung **AS** auf. Die interne Schirmung **AS** schirmt optional das Substrat **D** mit den Quantenpunkten **NV1, NV2, NV3** und ggf. den Kernquantenpunkten **CI1₁, CI1₂, CI1₃**, **CI2₁, CI2₂, CI2₃, CI3₁, CI3₂, CI3₃** gegen elektromagnetische Felder der Steuervorrichtung **µC** und/oder des Speichers **RAM, NVM** und/oder der Energieversorgung **SRG, TS, LDV, BENG, BENG2** und/oder des Lichtquellentreibers **LDRV** und/oder der Lichtquelle **LD** ab. In einer weiteren Modifikation weist der verlegbare Quantencomputer QC eine interne Schirmung **AS** auf. Die interne Schirmung **AS** schirmt optional das Substrat **D** mit den Quantenpunkten **NV1, NV2, NV3** und ggf. den Kernquantenpunkten **CI1₁, CI1₂, CI1₃**, **CI2₁, CI2₂, CI2₃**, **CI3₁, CI3₂, CI3₃** gegen Magnetfelder der Steuervorrichtung **µC** und/oder des Speichers **RAM, NVM** und/oder der Energieversorgung **SRG, TS, LDV, BENG, BENG2** und/oder des Lichtquellentreibers **LDRV** und/oder der Lichtquelle **LD** ab.

Um den verlegbaren Quantencomputer **QC** verlegen zu können, ist der verlegbare Quantencomputer **QC** in diesem Fall optional mit einem oder mehreren Rädern oder einem Fahrgestell oder zu diesen funktionsäquivalenten Vorrichtungsteilen, die auch angetrieben und/oder gebremst sein können, zumindest zeitweise ausgestattet.

In einer anderen optionalen Ausprägung weist der verlegbarer Quantencomputer **QC** zumindest zeitweise eine oder mehrere Antriebsvorrichtungen auf.

Vorschlagsgemäß handelt es sich bei einem oder mehreren der Antriebsvorrichtungen um ein Rad oder eine Schiffsschraube oder einen Propeller oder eine Turbine oder ein Raketentriebwerk oder ein Antriebsrad oder ein MHD-Triebwerk (MHD = magnetohydrodynamisch).

In Ausgestaltungen des verlegbaren Quantencomputers **QC,** die in einem Fluid betrieben und für Verlegungen bewegt werden sollen, ist es zweckmäßig, wenn in gewissen Anwendungsfällen ein solcher verlegbarer Quantencomputer **QC** aerodynamisch und/oder hydrodynamisch geformte Funktionselemente zur Reduzierung und/oder Kontrolle aerodynamischer Effekte und/oder hydrodynamischer Effekte und/oder zur Erzeugung eines dynamischen Auftriebs, insbesondere Flügel und /oder Flaps, aufweist.

In einigen optionalen Ausführungen des verlegbaren Quantencomputers **QC** ist es sinnvoll, elektronische Vorrichtungsteile des Quantencomputers **QC,** zumindest teilweise in strahlenharter Elektronik auszuführen. Solche optional strahlenhart ausgeführte Vorrichtungsteile des Quantencomputers **QC** sind beispielsweise:
- die Steuervorrichtung **µC** und/oder
- der Speicher **RAM, NVM** der Steuervorrichtung **µC** und/oder
- der Rechnerkern **CPU** und/oder
- die Datenschnittstelle **DBIF** und/oder
- die interne Datenschnittstelle **MDBIF** und/oder
- der Lichtquellentreiber **LDRV** und/oder
- der Wellenformgenerator **WFG** und/oder
- der Verstärker **V** und/oder
- der Fotodetektor **PD** und/oder
- die erste Kameraschnittstelle **CIF** und/oder
- die zweite Kameraschnittstelle **CIF2** und/oder
- die erste Kamera **CM1** und/oder
- die zweite Kamera **CM2** und/oder
- der Temperatursensor **ST** und/oder
- der Mikrowellen- und/oder Radiowellenfrequenzgenerator **MW/RF-AWFG** zur Erzeugung weitestgehend frei vorgebbarer Wellenformen und/oder
- die Magnetfeldsensoren **MSx, MSy, MSz** und /oder
- die Magnetfeldsteuerungen **MFSx, MFSy, MFSz** und/oder
- die erste Energieaufbereitungsvorrichtung **SRG** und/oder
- die zweite Energieaufbereitungsvorrichtung **SRG2** und/oder
- die Energiereserve **BENG** und/oder
- die zweite Energiereserve **BENG2** und/oder
- die Trennvorrichtung **TS** und/oder
- die Ladevorrichtung **LDV.**

Dabei bedeutet "strahlenhart" im Sinne der hier vorgelegten Schrift, dass diese Funktionselemente des Quantencomputers **QC** für den Einsatz im Weltraum und/oder in Bereichen erhöhter ionisierender Strahlung, wie beispielsweise Kernreaktoren oder dem Umfeld thermonuklearer Batterien, vorgesehen und/oder geeignet sind.

In vielen optionalen Anwendungsfällen ist es vorteilhaft, wenn der verlegbare Quantencomputer **QC** eine Steuervorrichtung **µC** aufweist, die zumindest zeitweise ein neuronales Netzwerkmodell ausführt. Das neuronale Netzwerkmodell, das die Steuervorrichtung **µC** typischerweise ausführt, verarbeitet dabei Eingangswerte und/oder die Werte von Eingangssignalen. Das neuronale Netzwerkmodell, das die Steuervorrichtung **µC** typischerweise ausführt, gibt Ausgangssignale und/oder Ausgangswerte von Ausgangssignalen aus. Die Steuervorrichtung **µC** beeinflusst dann optional in Abhängigkeit von Ausgangssignalen und/oder Ausgangswerten des neuronalen Netzwerkmodells, das die Steuervorrichtung **µC** typischerweise ausführt, Zustände von Quantenpunkten **NV1, NV2, NV3** und/oder Zustände von Kernquantenpunkten **CI1₁, CI1₂, CI1₃**, **CI2₁, CI2₂, CI2₃**, **CI3₁, CI3₂, CI3₃**. Umgekehrt beeinflusst die Steuervorrichtung **µC** optional in Abhängigkeit von Zuständen von Quantenpunkten **NV1, NV2, NV3** und/oder Zuständen von Kernquantenpunkten **CI1₁, CI1₂, CI1₃**, **CI2₁, CI2₂, CI2₃, CI3₁, CI3₂, CI3₃** Eingangssignale und/oder Eingangswerte des neuronalen Netzwerkmodells, das die Steuervorrichtung **µC** typischerweise ausführt.

Somit offenbart die hier vorgelegte Schrift u. a. ein Smartphone und/oder ein tragbares Quantencomputersystem und/oder ein mobiles Quantencomputersystem und/oder Fahrzeug und/oder Roboter und/oder Flugzeug und/oder Flugkörper und/oder Satellit und/oder ein Raumflugkörper und/oder Raumstation und/oder Schwimmkörper und/oder Schiff und/oder Unterwasserfahrzeug und/oder Oberwasserschwimmkörper und/oder Unterwasserschwimmkörper und/oder verlegbares Waffensystem und/oder Gefechtskopf und/oder Über- oder Unterwasserfahrzeug und/oder Geschoss und/oder andere mobile Vorrichtung und/oder bewegliche Vorrichtung. Dabei bezeichnet die hier vorgelegte Schrift alle diese Objekte im Folgenden als "Fahrzeug", der Einfachheit halber. Die hier vorgelegte Schrift schlägt somit ein Fahrzeug in diesem sehr weiten Sinne vor, das einen verlegbaren Quantencomputer **QC,** wie zuvor beschrieben, umfasst. Die hier vorgelegte Schrift schlägt außerdem umgekehrt einen verlegbaren Quantencomputer, wie er zuvor beschrieben wurde, vor, der ein Fahrzeug in dem zuvor beschriebenen weiten Sinne ist.

In einer weiteren, optionalen Varianten ist der Quantencomputer **QC** dazu vorgesehen, die Datenkommunikation, insbesondere der Steuervorrichtung **µC,** über eine Datenschnittstelle **DBIF** zu entschlüsseln und/oder zu verschlüsseln. Optional handelt es sich um die Datenschnittstelle **DBIF** der Steuervorrichtung **µC**. Optional umfasst ein solches Fahrzeug im weitesten Sinne Sensoren und/oder Messmittel, die Messwerte über die Umgebung des Fahrzeugs und/oder Zustände des Fahrzeugs und/oder Zustände der Fahrzeuginsassen bzw. Nutzer/Nutzerinnen des Fahrzeugs und/oder Zustände der Zuladung des Fahrzeugs an die Steuervorrichtung **µC** liefern. Unter Umständen erhält die Steuervorrichtung **µC** auch Messwerte über die Umgebung des Fahrzeugs über die Datenschnittstelle **DBIF.** Der Quantencomputer **QC** und ggf. die Steuervorrichtung **µC** können optional in Abhängigkeit von solchen Messwerten eine Lagebeurteilung für den Gesamtzustand des Fahrzeugs und/oder der Umgebung des Fahrzeugs ermitteln. Dabei kann der Gesamtzustand des Fahrzeugs im Sinne der hier vorgelegten Schrift den Zustand des Umfelds des Fahrzeugs und/oder den Zustand der Fahrzeuginsassen und/oder den Zustand einer Zuladung des Fahrzeugs umfassen.

In einer weiteren optionalen Ausprägung schlägt die hier vorgelegte Schrift vor, dass zumindest ein oder mehrere Sensoren **SENS** des Fahrzeugs einer der folgenden Messwerte liefernden Sensoren **SENS** ist oder zumindest einen der folgenden Messwert liefernden Sensoren **SENS** als Untersystem umfasst:
- einen Radar-Sensor und/oder
- ein Mikrofon und/oder
- ein Ultraschallmikrofon und/oder
- ein Infraschallmikrofon und/oder
- einen Ultraschalltransducer und/oder
- einen Infrarotsensor und/oder
- einen Gassensor und/oder
- einen Beschleunigungssensor und/oder
- einen Geschwindigkeitssensor und/oder
- einen Strahlungsdetektor und/oder
- ein bildgebendes System und/oder
- eine Kamera und/oder
- eine Infrarotkamera und/oder
- eine Multispektralkamera und/oder
- ein LIDAR-System und/oder
- ein Ultraschallmesssystem und/oder
- ein Dopplerradarsystem und/oder
- ein Quantenradarsystem und/oder
- einen Quantensensor und/oder
- einen Positionssensor und/oder
- ein Navigationssystem und/oder
- einen GPS-Sensor (oder eine funktionsäquivalente Vorrichtung) und/oder
- einen Lagesensor und/oder
- einen Partikelzähler und/oder
- ein Detektionssystem für biologische Stoffe, insbesondere für biologische Kampstoffe, und/oder
- ein Gravimeter und/oder
- einen Kompass und/oder
- ein Gyroskop und/oder
- einen MEMS-Sensor und/oder
- einen Drucksensor und/oder
- einen Neigungswinkelsensor und/oder
- einen Temperatursensor und/oder
- einen Feuchtesensor und/oder
- einen Windgeschwindigkeitssensor und/oder
- einen Wellenfrontsensor und/oder
- ein mikrofluidisches Messsystem und/oder
- ein Abstandsmesssystem und/oder
- ein Längenmesssystem und/oder
- einen biologischen Sensor zur Detektion biologischer Marker und/oder Viren und/oder Mikroben oder dergleichen und/oder
- ein Sensorsystem zur Erfassung biologischer Messwerte von Fahrzeuginsassen und/oder zur Erfassung biologischer Messwerte lebender Ladung, insbesondere von Tieren und/oder biologischen Materialien, und/oder
- ein Seat-Occupation-Messystem und/oder
- einen Spannungssensor und/oder einen Stromsensor und/oder einen Leistungssensor.

Als optionale Weiterentwicklung schlägt die hier vorgelegte Schrift ein Fahrzeug in dem oben beschriebenen weiten Sinne vor, bei dem der Quantencomputer **QC** in Abhängigkeit von diesen Messwerten das Fahrzeug und/oder Vorrichtungsteile des Fahrzeugs steuert und/oder eine Steuerung des Fahrzeugs oder eines Vorrichtungsteils des Fahrzeugs beeinflusst.

Die hier vorgelegte Schrift schlägt des Weiteren eine optionale Variante vor, bei der das Fahrzeug einen Innenraum aufweist und bei der der Quantencomputer **QC** in Abhängigkeit von den Messwerten Parameter des Innenraums des Fahrzeugs und/oder einen Vorrichtungsteil im Innenraum des Fahrzeugs beeinflusst.

Die hier vorgestellte technische Lehre offenbart insbesondere, dass es sich bei dem Fahrzeug optional um ein Waffensystem handeln kann und/oder dass das Fahrzeug ein Waffensystem umfassen kann, das mit dem Quantencomputer **QC** gekoppelt ist.

Für militärische Anwendungen kann das Fahrzeug ein Feuerleitsystem umfassen. Das Feuerleitsystem kann wiederum einen oder mehrere Quantencomputer **QC** umfassen und/oder mit einem oder mehreren Quantencomputern **QC** gekoppelt sein. Dabei hängt optional die Steuerung des Waffensystems durch das Feuerleitsystem zumindest zeitweise von dem Quantencomputer **QC** und dessen Signalisierungen ab. Die Steuerung des Waffensystems durch das Feuerleitsystem geschieht optional im Zusammenwirken des Feuerleitsystems mit dem Quantencomputer **QC.**

Optional umfasst das Fahrzeug eine Bewertungsvorrichtung, die die beabsichtigte Steuerung des Waffensystems hinsichtlich der zu erwartenden Wirkungen vor der Ausführung der Steuerung klassifiziert und eine Steuerungsbefehlsklasse ermittelt. Die Bewertungsvorrichtung verhindert optional eine Ausführung der Steuerung oder schiebt diese Ausführung bis zu einer Freigabe durch einen menschlichen Benutzer auf, wenn der im Zusammenwirken mit dem Quantencomputer **QC** ermittelte Steuerungsbefehl in eine vorgegebene Steuerungsklasse fällt.

Das Fahrzeug kann beispielsweise mit Hilfe des verlegbaren Quantencomputers **QC** ein oder mehrere Ziele identifizieren.

Das Fahrzeug kann dann beispielsweise mit Hilfe des verlegbaren Quantencomputers **QC** das eine Ziel oder die mehreren Ziele insbesondere unter Zuhilfenahme eines neuronalen Netzwerkprogramms klassifizieren, das beispielsweise ein Steuerrechner **µC** des verlegbaren Quantencomputers **QC** ausführen kann.

Im Falle eines Fahrzeugs für militärische Zwecke oder Waffensystems kann das Fahrzeug bzw. das Waffensystem mit Hilfe des Quantencomputers **QC** eine zeitliche Reihenfolge oder Priorisierung der Bekämpfung mehrerer Ziele ermitteln. Im Falle eines Fahrzeugs für militärische Zwecke oder Waffensystems kann das Fahrzeug bzw. das Waffensystem mit Hilfe des Quantencomputers **QC** einen Zeitpunkt zur Bekämpfung eines Ziels ermitteln. Im Falle eines Fahrzeugs für militärische Zwecke oder Waffensystems kann das Fahrzeug bzw. das Waffensystem mit Hilfe des Quantencomputers **QC** einen Waffentyp und/oder eine Munition zur Bekämpfung eines Ziels ermitteln. Die hier vorgelegte Schrift schlägt u. a. als eine mögliche Ausprägung ein Fahrzeug vor, das mit Hilfe des Quantencomputers **QC** eine Route für das Fahrzeug ermittelt. Im Falle eines Fahrzeugs für militärische Zwecke oder Waffensystems kann das Fahrzeug bzw. das Waffensystem mit Hilfe des Quantencomputers **QC** eine Route für eine Waffe oder einen Gefechtskopf oder ein Geschoss oder eine Munition oder ein anderes Fahrzeug ermitteln.

Die hier vorgelegte Schrift schlägt u. a. auch ein Fahrzeug gemäß einer optionalen Ausführungsform vor, bei dem die Steuervorrichtung **µC** zumindest zeitweise ein neuronales Netzwerkmodell ausführt und bei dem das neuronale Netzwerkmodell Eingangswerte und/oder Eingangssignale verarbeitet und Ausgangssignale und/oder Ausgangswerte ausgibt. Wie zuvor bereits beschrieben, beeinflusst optional die Steuervorrichtung **µC** typischerweise in Abhängigkeit von Ausgangssignalen und/oder Ausgangswerten des neuronalen Netzwerkmodells Zustände der Quantenpunkte **NV1, NV2, NV3** und/oder Zustände der Kernquantenpunkte **CI1₁, CI1₂, CI1₃**, **CI2₁, CI2₂, CI2₃**, **CI3₁, CI3₂, CI3₃**. Typischerweise beeinflusst in dieser Ausprägung die Steuervorrichtung **µC** in Abhängigkeit von Zuständen der Quantenpunkte **NV1, NV2, NV3** und/oder Zuständen der Kernquantenpunkte **CI1₁, CI1₂, CI1₃**, **CI2₁, CI2₂, CI2₃**, **CI3₁, CI3₂, CI3₃** Eingangssignale und/oder Eingangswerte des neuronalen Netzwerkmodells.

### Substrat

Wie oben beschrieben, umfasst der verlegbare Quantencomputer **QC** gemäß der erläuterten optionalen Ausführungsform ein Substrat **D** mit einem oder mehreren Quantenpunkten **NV1, NV2, NV3.** Optional umfasst das Substrat **D** Diamant als Substratmaterial. Der Diamant ist optional isotopenrein oder weist zumindest einen isotopenreinen Teilbereich auf, der optional die Quantenpunkte **NV1, NV2, NV3** aufweist. Optional sind die Quantenpunkte **NV1, NV2, NV3** paramagnetische Zentren. In dem Fall, wenn das Substratmaterial des Materials des Substrats **D** Diamant umfasst, handelt es sich bei den paramagnetischen Zentren optional um ST1-Zentren und/oder optional um TR1-Zentren und/oder optional um NV-Zentren. Dies bedeutet, dass Störungen, die von solchen Isotopenverunreinigungen ausgehen, die Funktionstüchtigkeit der Quantenbits nicht oder höchstens ausreichend gering stören. Auf Diamant bezogen heißt das, dass der Diamant optional im Wesentlichen aus ¹²C-Isotopen als Basis-Isotopen besteht. Solche ¹²C-Isotope weisen kein magnetisches Moment auf, das mit den Quantenpunkten **NV1, NV2, NV3** wechselwirken kann. Optional befinden sich in dem isotopenreinem Bereich des Substrats **D** auch die Kernquantenpunkte **CI1₁, CI1₂, CI1₃**, **CI2₁, CI2₂, CI2₃**, **CI3₁, CI3₂, CI3₃**. Wenn hier von Isotopenreinheit die Rede ist, sind die Isotope, die als Kernquantenpunkte **CI1₁, CI1₂, CI1₃**, **CI2₁, CI2₂, CI2₃, CI3₁, CI3₂, CI3₃** dienen, bei der Beurteilung der Isotopenreinheit nicht berücksichtigt. An dieser Stelle verweist diese Schrift ausdrücklich auf die Schrift DE 10 2020 125 189 A1, deren technische Lehre für die folgenden internationalen Verfahren soweit in den betreffenden Anmeldeländern rechtlich jeweils zulässig durch Referenzieren Teil der Offenlegung dieser Schrift ist. Isotopenrein im Sinne dieser Offenlegung und der DE 10 2020 125 189 A1 ist ein Material dann, wenn die Konzentration anderer Isotope als der Basis-Isotope, die das Material dominieren, so gering ist, dass der technische Zweck in einem für die Produktion und den Verkauf von Produkten ausreichenden Maße mit einer wirtschaftlich ausreichenden Produktionsausbeute erreicht wird. Die DE 10 2020 125 189 A1 listet die betreffenden Isotopverhältnisse der relevanten Elemente auf, die die hier offengelegte technische Lehre zu Grunde legt. Da isotopenreine Diamanten extrem teuer sind, ist es sinnvoll, wenn das Substrat **D** ein Diamant-Material umfasst und beispielsweise das Diamant-Material eine epitaktisch zumindest lokal aufgewachsene isotopenreine Schicht, die im Wesentlichen aus ¹²C-Isotopen besteht, umfasst. Diese Schicht kann beispielsweise mittels CVD und anderen Abscheidemethoden auf der ursprünglichen Oberfläche eines als Substrat **D** verwendeten Silizium-Wafers oder einer Diamantoberfläche abgeschieden werden. Im Folgenden umfasst der Begriff Substrat **D** von nun an den Teil der Kombination aus Substrat **D** und epitaktische aufgewachsener Schicht **DEPI,** in dem die Quantenpunkte **NV1, NV2, NV3** gefertigt sind. Typischerweise ist dies die epitaktische Schicht **DEPI.** Der Ausdruck "Im Wesentlichen" bedeutet dabei, dass der Gesamtanteil K_{1G}' der C-Isotope mit magnetischem Moment, die Bestandteil des Substrats **D** sind, bezogen auf 100% der C-Atome, die Bestandteil des Substrats **D** sind, gegenüber dem in den Tabellen der DE 10 2020 125 189 A1 angegebenen natürlichen Gesamtanteil K_{1G} auf einen Anteil K_{1G}' der C-Isotope mit magnetischem Moment, die Bestandteil des Substrats **D** sind, bezogen auf 100% der C-Isotope, die Bestandteil des Substrats **D** sind, herabgesetzt ist. Dabei ist optional dieser Anteil K_{1G}' kleiner als 50%, besser kleiner als 20%, besser kleiner als 10%, besser kleiner als 5%, besser kleiner als 2%, besser kleiner als 1%, besser kleiner als 0,5%, besser kleiner als 0,2%, besser kleiner als 0,1% des natürlichen Gesamtanteils K_{1G'} für C-Isotope mit magnetischem Moment an den C-Isotopen des Substrats **D** im Einwirkungsbereich der Quantenpunkte **NV1, NV2, NV3** und/oder der Kernquantenpunkte **CI1₁, CI1₂, CI1₃**, **CI2₁, CI2₂, CI2₃**, **CI3₁, CI3₂, CI3₃**. Bei der Bestimmung des Anteil K_{1G}' werden diejenigen C-Atome der Kernquantenpunkte **CI1₁, CI1₂, CI1₃**, **CI2₁, CI2₂, CI2₃, CI3₁, CI3₂, CI3₃** nicht berücksichtigt, da deren magnetische Momente ja beabsichtigt und somit nicht parasitär sind.

Die Verwendung von NV-Zentren und/oder ST1-Zentren und/oder TR1-Zentren und/oder TR12-Zentren oder L1-Zentren als Quantenpunkte **NV1, NV2, NV3** der Quantenbits des Quantencomputers ermöglicht dabei optional den Betrieb des Quantencomputers **QC** bei Raumtemperatur und damit überhaupt erst die Verlegbarkeit des Quantencomputers **QC.** Dabei dient die Elektronenspinkonfiguration eines solchen paramagnetischen Zentrums optional jeweils als ein Quantenpunkt der Quantenpunkte **NV1, NV2, NV3.** Optional umfasst der verlegbare Quantencomputer **QC** neben solchen Quantenpunkten **NV1, NV2, NV3** als Quantenbits auch nukleare Kernquantenpunkte **CI1₁, CI1₂, CI1₃**, **CI2₁, CI2₂, CI2₃, CI3₁, CI3₂, CI3₃** als nukleare Kernquantenbits. Typischerweise dienen die magnetischen Momente von Isotopen, die solche von null verschiedenen magnetischen Momente aufgrund eines nuklearen Spins aufweisen, als nukleare Kernquantenpunkte **CI1₁, CI1₂, CI1₃**, **CI2₁, CI2₂, CI2₃**, **CI3₁, CI3₂, CI3₃**. Optional koppeln solche nuklearen magnetischen Momente der betreffenden Isotope der Kernquantenpunkte **CI1₁, CI1₂, CI1₃**, **CI2₁, CI2₂, CI2₃, CI3₁, CI3₂, CI3₃** mit der Elektronenkonfiguration der paramagnetischen Zentren der Quantenpunkte **NV1, NV2, NV3.** Hierdurch kann eine Steuervorrichtung **µC** des Quantencomputers **QC** die nuklearen Kernquantenpunkte **CI1₁, CI1₂, CI1₃**, **CI2₁, CI2₂, CI2₃**, **CI3₁, CI3₂, CI3₃** mittels einer Manipulation der Zustände der Quantenpunkte **NV1, NV2, NV3** manipulieren. Auch kann die Steuervorrichtung **µC** die nuklearen Kernquantenzustände der nuklearen Kernquantenpunkte **CI1₁, CI1₂, CI1₃**, **CI2₁, CI2₂, CI2₃**, **CI3₁, CI3₂, CI3₃** mittels eines elektrischen oder optischen Auslesens der Quantenzustände der Quantenpunkte **NV1, NV2, NV3** erfassen. Auch kann die Steuervorrichtung **µC** voneinander entfernte Kernquantenpunkte **CI1₁**, **CI1₂, CI1₃, CI2₁, CI2₂, CI2₃, CI3₁, CI3₂, CI3₃** mittels Ketten von miteinander verkoppelten Quantenpunkten **NV1, NV2, NV3** miteinander koppeln. Die nuklearen Kernquantenpunkte **CI1₁, CI1₂, CI1₃, CI2₁, CI2₂, CI2₃**, **CI3₁, CI3₂, CI3₃** bilden somit nukleare Kernquantenbits. Bei diesen nuklearen Kernquantenpunkten **CI1₁, CI1₂, CI1₃**, **CI2₁, CI2₂, CI2₃**, **CI3₁, CI3₂, CI3₃** handelt es sich optional um die nuklearen Spins von Isotopen mit einem magnetischen nuklearen Kernmoment. An dieser Stelle verweist die hier vorgelegte Schrift ausdrücklich nochmals auf die Schrift DE 10 2020 125 189 A1, deren technische Lehre für die folgenden internationalen Verfahren, soweit in den betreffenden Anmeldeländern rechtlich jeweils zulässig, durch Referenzieren Teil der Offenlegung dieser Schrift ist. Die nuklearen Kernquantenpunkte **CI1₁, CI1₂, CI1₃**, **CI2₁, CI2₂, CI2₃**, **CI3₁, CI3₂, CI3₃** der nuklearen Kernquantenbits zeichnen sich durch sehr lange T2-Zeiten aus. Optional verwendet der vorgeschlagene verlegbare Quantencomputer **QC** seine Quantenpunkte **NV1, NV2, NV3** zur Steuerung und Verschränkung der Zustände der nuklearen Kernquantenpunkte **CI1₁, CI1₂, CI1₃, CI2₁, CI2₂, CI2₃**, **CI3₁, CI3₂, CI3₃** und zum Auslesen der Kernquantenzustände der nuklearen Kernquantenpunkte **CI1₁, CI1₂, CI1₃, CI2₁, CI2₂, CI2₃, CI3₁, CI3₂, CI3₃**. Das Auslesen der Quantenzustände der Quantenpunkte **NV1, NV2, NV3** kann optisch und/oder elektrisch erfolgen. Hinsichtlich des elektrischen Auslesens verweist diese Schrift ausdrücklich auf die Schrift DE 10 2020 125 189 A1, deren technische Lehre für die folgenden internationalen Verfahren soweit in den betreffenden Anmeldeländern rechtlich jeweils zulässig durch Referenzieren Teil der Offenlegung der hier vorgelegten Schrift ist. Ein weiterer Vorteil des hier vorgeschlagenen verlegbaren Quantencomputers **QC** ist die relativ einfache Bedienbarkeit und die bessere Selektivität der Ansteuerung der Quantenpunkte **NV1, NV2, NV3** der Quantenbits und die gute Skalierbarkeit gegenüber anderen Quantencomputern.

Wie oben beschrieben, umfasst ein Quantencomputer **QC** optional ein Substrat **D** mit einem oder mehreren Quantenpunkten **NV1, NV2, NV3.** Optional weist darüber hinaus das Substrat D optional noch einen oder mehrere nukleare Kernquantenpunkte **CI1₁, CI1₂, CI1₃, CI2₁, CI2₂, CI2₃, CI3₁, CI3₂, CI3₃** auf. Optional handelt es sich bei den Quantenpunkten **NV1, NV2, NV3** um ein oder mehrere paramagnetische Zentren, die ein oder mehrere Quantenbits bilden. Optional handelt es sich bei den nuklearen Kernquantenpunkten **CI1₁, CI1₂, CI1₃, CI2₁, CI2₂, CI2₃, CI3₁, CI3₂, CI3₃** um ein oder mehrere Isotope mit magnetischem Moment, die ein oder mehrere Kernquantenbits bilden. Die hier vorgelegte Schrift nimmt dabei wieder ausdrücklich Bezug auf die DE 10 2020 125 189 A1. Optional handelt es sich somit bei den nuklearen Kernquantenpunkten **CI1₁, CI1₂, CI1₃, CI2₁, CI2₂, CI2₃, CI3₁, CI3₂, CI3₃** um die magnetischen Momente vereinzelter Isotope in der Nähe der Quantenpunkte **NV1, NV2, NV3.** Hierbei bedeutet "Nähe", dass eine Kopplung der magnetischen Momente der betreffenden Isotope, die die nuklearen Kernquantenpunkte **CI1₁, CI1₂, CI1₃, CI2₁, CI2₂, CI2₃, CI3₁, CI3₂, CI3₃** bilden, mit dem in der Nähe liegenden Quantenpunkt des in der Nähe liegenden Quantenbits mit der hier vorgestellten Vorrichtung möglich ist.

Die Quantenpunkte **NV1, NV2, NV3** weisen optional ein magnetisches Moment einer Elektronenkonfiguration des jeweiligen Quantenpunkts auf. Die Quantenpunkte **NV1, NV2, NV3** koppeln im Sinne der technischen Lehre der hier vorgestellten Schrift optional mittels dieses magnetischen Moments miteinander. Optional handelt es sich bei einem oder mehreren Quantenpunkten **NV1, NV2, NV3** um paramagnetische Zentren in dem Substrat **D.** Optional ist das Fermi-Niveau des Substrats **D** im Bereich eines als Quantenpunkts verwendeten paramagnetischen Zentrums so eingestellt, dass das paramagnetische Zentrum elektrisch geladen ist. Optional ist die elektrische Ladung negativ. Im Falle eines NV-Zentrums als paramagnetisches Zentrum ist das NV-Zentrum optional negativ geladen. Im Falle eines NV-Zentrums als paramagnetisches Zentrum ist das NV-Zentrum optional somit ein NV⁻ -Zentrum. Optional umfassen die NV-Zentren in dem Substrat **D** daher NV⁻-Zentren. Optional stellt eine Dotierung des Substrats **D** im Bereich des paramagnetischen Zentrums sicher, dass das paramagnetische Zentrum in der vorgesehenen Weise elektrisch geladen ist. Optional dotieren Isotope ohne magnetisches Moment als Dotieratome das Material des Substrats **D** im Bereich des betreffenden Quantenpunkts der Quantenpunkte **NV1, NV2, NV3.** Optional verschieben diese Dotieratome ohne magnetisches Moment das Fermi-Niveau im Bereich dieses betreffenden Quantenpunkts. Optional verschieben somit diese Dotieratome ohne magnetisches Moment das Fermi-Niveau im Bereich des betreffenden paramagnetischen Zentrums. Optional umfasst das Substrat **D** im Wesentlichen abgesehen von den Isotopen, die als Kernquantenpunkte **CI1₁, CI1₂, CI1₃, CI2₁, CI2₂, CI2₃, CI3₁, CI3₂, CI3₃** der Kernquantenbits dienen, Isotope ohne magnetisches Kernmoment. Da die Atome der III. Hauptgruppe des Periodensystems und der V. Hauptgruppe des Periodensystems in der Regel keine stabilen Isotope ohne magnetisches Moment aufweisen, kommen daher als Material des Substrats (**D**) optional Mischungen und/oder Verbindungen aus Isotopen ohne magnetisches Moment, also beispielsweise aus Isotopen der IV. Hauptgruppe z. B. ¹²C, ¹⁴C, ²⁸Si, ¹⁰Si, ⁷⁰Ge, ⁷²Ge, ⁷⁴Ge, ⁷⁶Ge, ¹¹²Sn, ¹¹⁴Sn, ¹¹⁶Sn, ¹¹⁸Sn, ¹²⁰Sn, ¹²²Sn, ¹²⁴Sn und/oder der VI. Hauptgruppe ¹⁶O, ¹⁸O, ³²S, ³⁴S, ³⁶S, ⁷⁴Se, ⁷⁶Se, ⁷⁸Se, ⁸⁰Se, ⁸²Se, ¹²⁰Te, ¹²²Te, ¹²⁴Te, ¹²⁶Te, ¹²⁸Te, ¹³⁰Te, und/oder der II. Hauptgruppe ²⁴Mg, ²⁶Mg, ⁴⁰Ca, ⁴²Ca, ⁴⁴Ca, ⁴⁶Ca, ⁴⁸Ca, ⁸⁴Sr, ⁸⁶Sr, ⁸⁸Sr, ¹³⁰Ba, ¹³²Ba, ¹³⁴Ba, ¹³⁶Ba, ¹³⁸Ba, und/oder der II. Nebengruppe ⁴⁶Ti, ⁴⁸Ti, ⁵⁰Ti, ⁹⁰Zr, ⁹⁰Zr, ⁹²Zr, ⁹⁴Zr, ⁹⁶Zr, ¹⁷⁴Hf, 176Hf, ¹⁷⁸Hf, und/oder der IV. Nebengruppe ⁵⁰Cr, ⁵²Cr, ⁵³Cr, ⁹²Mo, ⁹⁴Mo, ⁹⁶Mo, ⁹⁸Mo, ¹¹⁰Mo, ¹⁸⁰W, ¹⁸²W, ¹⁸⁴W, ¹⁸⁶W, und/oder der VI. Nebengruppe ⁵⁴Fe, ⁵⁶Fe, ⁵⁸Fe, ⁹⁶Ru, ⁹⁸Ru, ¹⁰⁰Ru, ¹⁰²Ru, ¹⁰⁴Ru, ¹⁸⁴Os, ¹⁸⁶Os, ¹⁸⁸Os, ¹⁹⁹Cs, ¹⁹²Os und/oder der VIII. Nebengruppe ⁵⁸Ni, ⁶⁰Ni, ⁶²Ni, ⁶⁴Ni, ¹⁰²Pd, ¹⁰²Pd, ¹⁰⁴Pd, ¹⁰⁶Pd, ¹⁰⁸Pd, ¹¹⁰Pd, ¹⁹⁰Pt, ¹⁹²Pt, ¹⁹⁴Pt, ¹⁹⁶Pt, ¹⁹⁸Pt und/oder der X. Nebengruppe ⁶⁴Zn, ⁶⁶Zn, ⁶⁸Zn, ⁷⁰Zn, ¹⁰⁶Cd, ¹⁰⁸Cd, ¹¹⁰Cd, ¹¹²Cd, ¹¹⁴Cd, 116Cd, ¹⁹⁶Hg, ¹⁹⁸Hg, ²⁰⁰Hg, ²⁰²Hg, ²⁰⁴Hg und/oder der Lanthaniden: ¹³⁶Ce, ¹³⁸Ce, ¹⁴⁰Ce, ¹⁴²Ce, ¹⁴²Nd, ¹⁴⁴Nd, ¹⁴⁶Nd, ¹⁴⁸Nd, ¹⁵⁰Nd, ¹⁴⁴Sm, ¹⁴⁶Sm, ¹⁴⁸Sm, ¹⁵⁰Sm, ¹⁵²Sm, ¹⁵⁴Sm, ¹⁵²Gd, ¹⁵⁴Gd, ¹⁵⁶Gd, ¹⁵⁸Gd, ¹⁶⁰Gd, ¹⁵⁶Dy, ¹⁵⁸Dy, ¹⁶⁰Dy, ¹⁶²Dy, ¹⁶⁴Dy, ¹⁶²Er, ¹⁶⁴Er, ¹⁶⁶Er, ¹⁶⁶Er, ¹⁷⁰Er, ¹⁶⁸Yb, ¹⁷⁰Yb, ¹⁷²Yb, ¹⁷⁴Yb, ¹⁷⁶Yb, und/oder der Actiniden ²³²Th, ²³⁴Pa, ²³⁴U, ²³⁸U, ²⁴⁴Pu in Frage. Diese Isotope kommen auch als Dotieratome für die Dotierung des Substrats (D) in Frage. Sofern das Substrat **D** Diamant umfasst und sofern die Quantenpunkte **NV1, NV2, NV3** paramagnetische Zentren umfassen, kommen optional ³²S, ³⁴S, ³⁶S, ¹⁶O und ¹⁸O als Dotierisotope zur Verschiebung des Fermi-Niveaus in Frage. Für die Bildung von NV-Zentren in Diamant als Substrat **D** ist eine vorteilhafte Wirkung auch für eine Dotierung mit Phosphor beobachtbar, was aber weniger optimal ist, da die Phosphor-Isotope typischerweise ein magnetisches Moment aufweisen, das mit der Elektronenkonfiguration der paramagnetischen Zentren wechselwirkt. Diese Wechselwirkung ist aber typischerweise unerwünscht.

### Lichtquelle LD

Der verlegbare Quantencomputer **QC** gemäß der in Figur 1 gezeigten optionalen Ausführungsform umfasst eine Lichtquelle **LD**. Bei der Lichtquelle **LD** handelt es sich optional um einen Laser, der Quantenpunkte **NV1, NV2, NV3** des verlegbaren Quantencomputers mit Pumpstrahlung **LB** einer Pumpstrahlungswellenlänge λ**ₚₘₚ** bestrahlen kann. Optional bestrahlt die Lichtquelle **LD** die betreffenden Quantenpunkte **NV1, NV2, NV3** mit Pumpstrahlung **LB**, die in ihrem zeitlichen Intensitätsverlauf pulsmoduliert, also optional gepulst ist.

Optional kann die Lichtquelle **LD** Lichtpulse der Pumpstrahlung **LB** zu durch die Steuervorrichtung **µC** vorgebbaren Lichtpulsstartzeitpunkten **tₛₚ** bezogen auf einen Referenzzeitpunkt **t₀ₚ** mit einer Lichtpulsdauer **t_{dp}** aussenden. Optional steuert eine Steuervorrichtung **µC** des verlegbaren Quantencomputers die Lichtquelle **LD** mit Hilfe eines Lichtquellentreibers **LDRV** über einen Steuerdatenbus **SDB**. Der Lichtquellentreiber **LDRV** versorgt die Lichtquelle **LD** mit Energie. Dabei hängt diese Energieversorgung der Lichtquelle **LD** typischerweise von Steuerbefehlen ab, die der Lichtquellentreiber **LDRV** über den Steuerdatenbus **SDB** von der Steuervorrichtung **µC** erhält. Die Strahlungsleistung der von der Lichtquelle **LD** abgestrahlten Pumpstrahlung **LB** hängt typischerweise von Steuerbefehlen ab, die der Lichtquellentreiber **LDRV** über den Steuerdatenbus **SDB** von der Steuervorrichtung **µC** erhält, sowie von einem oder mehreren Sendesignalen **S5.** Optional handelt es sich bei der Lichtquelle **LD** um einen Halbleiterlaser. Optional handelt es sich bei der Lichtquelle **LD** um eine Laserdiode. Die Verwendung einer LED (Leuchtdiode) als Lichtquelle **LD** ist aber auch denkbar. Bei der beispielhaften Verwendung von NV-Zentren als paramagnetischen Zentren **NV1, NV2, NV3** in Diamant als Quantenpunkten besitzt das als Pumpstrahlung **LB** verwendete Licht der Lichtquelle **LD** optional eine Wellenlänge in einem Wellenlängenbereich von 400 nm bis 700 nm Wellenlänge und/oder besser 450 nm bis 650 nm und/oder besser 500 nm bis 550 nm und/oder besser 515 nm bis 540 nm. Im Zuge der Erarbeitung des technischen Inhalts dieser Schrift ergab eine Wellenlänge von 532 nm der als Pumpstrahlung **LB** verwendeten elektromagnetischen Strahlung der Lichtquelle **LD** gute Resultate. Optional umfasst die Lichtquelle **LD** einen Laser, der optional ein Halbleiterlaser ist. Im Fall von NV-Zentren als paramagnetischen Zentren in Diamant als Substrat **D** hat sich eine Laser-Diode der Firma OSRAM vom Typ PLT5 520B mit 520 nm Wellenlänge als beispielhafte Lichtquelle **LD** für die Bestrahlung der NV-Zentren in Diamant mit Pumpstrahlung **LB** bewährt. Der vorschlaggemäße verlegbare Quantencomputer **QC** umfasst optional den besagten Lichtquellentreiber **LDRV** der die Abstrahlung der Pumpstrahlung **LB** durch die Lichtquelle **LD** steuert.

Optional steuert ein Wellenformgenerator **WFG** den Lichtquellentreiber **LDRV** und damit die Lichtquelle **LD** mittels eines Sendesignals **S5.** Der Wellenformgenerator **WFG** erzeugt das Sendesignal **S5** optional zeitlich synchronisiert zu den Radiofrequenz- und Mikrowellensignalen die der Mikrowellen- und/oder Radiowellenfrequenzgenerator **MW/RF-AWFG** zur Erzeugung weitestgehend frei vorgebbarer Wellenformen (Englisch: Arbitrary-Wave-Form-Generator) erzeugt, und mittels einer Mikrowellen- und/oder Radiowellenantenne **mWA** in das Substrat **D** einstrahlt. Damit bestrahlt die Mikrowellen- und/oder Radiowellenantenne **mWA** die Quantenpunkte **NV1, NV2, NV3** und die Kernquantenpunkte **CI1₁, CI1₂, CI1₃, CI2₁, CI2₂, CI2₃, CI3₁, CI3₂, CI3₃** in einem festen zeitlichen Phasenverhältnis zu den Lichtpulsen der Bestrahlung der Quantenpunkte **NV1, NV2, NV3** und die Kernquantenpunkte **CI1₁, CI1₂, CI1₃, CI2₁, CI2₂, CI2₃, CI3₁, CI3₂, CI3₃** mit Pumpstrahlung **LB** durch die Lichtquelle **LD.** Typischerweise synchronisiert sich der Mikrowellen- und/oder Radiowellenfrequenzgenerator **MW/RF-AWFG** auf das Sendesignal S5 des Wellenformgenerators **WFG**, und zwar optional auf das Sendesignal **S5)**. Hierdurch ist sichergestellt, dass die Phasenlage zwischen den Radio- und Mikrowellensignalen des Mikrowellen- und/oder Radiowellenfrequenzgenerators **MW/RF-AWFG** einerseits, und den Lichtpulsen der Lichtquelle **LD** andererseits, in einem vorbestimmbaren Phasenverhältnis zueinander stehen. Optional stellt der Rechnerkern **CPU** der Steuervorrichtung **µC** des verlegbaren Quantencomputers **QC** die Betriebsparameter des Wellenformgenerators **WFG** und des Mikrowellen- und/oder Radiowellenfrequenzgenerators **MW/RF-AWFG** entsprechend der gewünschten Quantenoperation so ein, dass diese die Quantenzustände der Quantenpunkte **NV1, NV2, NV3** und die Kernquantenzustände der Kernquantenpunkte **CI1₁, CI1₂, CI1₃, CI2₁, CI2₂, CI2₃, CI3₁, CI3₂, CI3₃** wie vorgesehen manipulieren können. Optional umfasst die Lichtquelle **LD** einen Fotodetektor. Optional umfasst das System aus Lichtquelle **LD** und Lichtquellentreiber **LDRV** einen Regler. Der Fotodetektor **PD** der Lichtquelle **LD** kann beispielsweise eine Fotodiode sein, die typischerweise die Intensität der von der Lichtquelle **LD** abgestrahlten Pumpstrahlung **LB** überwacht. Optional ist der Regler Teil des Lichtquellentreibers **LDRV.** Der Lichtquellentreiber **LDRV** treibt optional die Lichtquelle **LD** in Abhängigkeit von dem Sendesignals **S5.** Optional ist der Regler ein P-Regler oder besser ein I-Regler oder besser ein Pl-Regler oder besser ein PID-Regler oder ein Regler mit einem frequenzoptimierten Frequenzgang der Verstärkung der geöffneten Regelschleife bzw. der Schleifenverstärkung. Der Regler vergleicht optional den Wert des Messignals des Fotodetektors der Lichtquelle **LD** mit dem Sendesignal **S5** des Wellenformgenerators **WFG**. In Abhängigkeit von dem Vergleichsergebnis des Werts des Sendesignals **S5** zusammen mit dem Wert des Messignals des Fotodetektors der Lichtquelle **LD** regelt der Regler der Lichtquelle **LD** dann die Intensität der Pumpstrahlung **LB** nach. Der Regler der Lichtquelle **LD** regelt die Intensität der Pumpstrahlung **LB** optional über eine Änderung der Treiberleistung des Lichtquellentreibers **LDRV** nach. In Folge dessen entspricht dann im Idealfall im eingeschwungenen Zustand die Intensität der Pumpstrahlung **LB** bis auf Regelabweichungen im Wesentlichen dem Wert des Sendesignals **S5.** Im Idealfall verfügt der Regler des Lichtquellentreibers **LDRV** über einen Analog-zu-Digital-Wandler und eine Datenschnittstelle zum internen Steuerdatenbus **SDB** des verlegbaren Quantencomputers **QC**. In diesem Fall können der Regler und/oder ein Steuerrechner des Lichtquellentreibers **LDRV** und/oder ein Steuerrechner der Lichtquelle **LD** beispielsweise über den Steuerdatenbus **SDB** des verlegbaren Quantencomputers **QC** die durch den Regler des Lichtquellentreibers **LDRV** der Lichtquelle **LD** und/oder den Steuerrechner der Lichtquelle **LD** und/oder den Regler des Lichtquellentreibers **LDRV** erfassten Intensitätswerte der Pumpstrahlung **LB** der Steuervorrichtung **µC** des verlegbaren Quantencomputers **QC** zur Verfügung stellen. In diesem Fall können der Regler und/oder der besagte Steuerrechner der Lichtquelle **LD** und/oder der Steuerrechner der Lichtquelle **LD** beispielsweise über den Steuerdatenbus **SDB** des verlegbaren Quantencomputers **QC** die anderen Betr7iebsparameter der Lichtquelle **LD,** beispielsweise durch einen Analog-zu-Digital-Wandler und/oder Sensoren innerhalb der Lichtquelle **LD** und/oder des Lichtquellentreibers **LDRV,** wie beispielsweise jeweilige Betriebsspannungen, jeweilige Temperaturen oder dergleichen der Steuervorrichtung **µC** des verlegbaren Quantencomputers **QC** ebenfalls zur Verfügung stellen. Optional verstärken ein Verstärker der Lichtquelle **LD** und/oder ein Verstärker des Lichtquellentreibers **LDRV** das Signal des Fotodetektors der Lichtquelle **LD,** bevor beispielsweise der Analog-zu-Digital-Wandler des Reglers des Lichtquellentreibers **LDRV** dieses in ein digitales Messsignal für den Regler des Lichtquellentreibers **LDRV** der Lichtquelle **LD** wandelt. Über den Steuerdatenbus **SDB** kann die Steuervorrichtung **µC** beispielsweise die Lichtquelle **LD** und/oder den Lichtquellentreiber **LDRV** und deren Komponenten konfigurieren. Solche Konfigurationsziele können beispielsweise der Regler des Lichtquellentreibers **LDRV** der Lichtquelle **LD** und dessen Regelparameter und/oder die Verstärkung und/oder der Frequenzgang des Verstärkers der Lichtquelle **LD** und/oder die Verstärkung und/oder der Frequenzgang des Verstärkers des Lichtquellentreibers **LDRV** und deren Parameter sein. Der Lichtquellentreiber **LDRV** und die Lichtquelle **LD** können eine Einheit bilden. Der Lichtquellentreiber **LDRV** und die Lichtquelle **LD** können über einen oder mehrere gemeinsame Steuerrechner und/oder einen oder mehrere gemeinsame Analog-zu-Digital-Wandler verfügen. Für die Einstellung analoger Steuerparameter können die Lichtquelle **LD** und/oder der Lichtquellentreiber **LDRV** über einen oder mehrere Digital-zu-Analog-Wandler verfügen, die analoge Steuerpegel innerhalb der Lichtquelle **LD** und/oder des Lichtquellentreibers **LDRV** bereitstellen. Die Steuervorrichtung **µC** des Quantencomputers **QC** steuert diese Digital-zu-Analog-Wandler optional über den Steuerdatenbus **SDB**. Der ggf. vorhandene Steuerrechner der Lichtquelle **LD** und/oder der ggf. vorhandene Steuerrechner des Lichtquellentreibers **LDRV** können ggf. auch die Digital-zu-Analog-Wandler steuern.

### Optisches System

Das optische System **OS** des Quantencomputers **QC** gemäß der in Figur 1 gezeigten optionalen Ausführungsform umfasst optional ein konfokales Mikroskop. Die Lichtquelle **LD** strahlt die Pumpstrahlung **LB** ab. In dem Beispiel der Figur 1 passiert die Pumpstrahlung **LB** den dichroitischen Spiegel **DBS.** Das optische System **OS** fokussiert die Pumpstrahlung **LB** auf Quantenpunkte **NV1, NV2, NV3** und/oder nukleare Kernquantenpunkte **CI1₁, CI1₂, CI1₃, CI2₁, CI2₂, CI2₃, CI3₁, CI3₂, CI3₃** im Fokuspunkt des optischen Systems **OS**. Dabei nutzt das optische System **OS** optional sein konfokales Mikroskop. Die Bestrahlung der Quantenpunkte **NV1, NV2, NV3** veranlasst die Quantenpunkte **NV1, NV2, NV3** typischerweise zur Abgabe von Fluoreszenzstrahlung **FL**. Das optische System **OS** erfasst typischerweise zumindest einen Teil der Fluoreszenzstrahlung **FL** der Quantenpunkte **NV1, NV2, NV3.** Das optische System **OS** führt diese erfasste Fluoreszenzstrahlung **FL** über den dichroitischen Spiegel **DBS** dem Fotodetektor **PD** zu. Optional trennen der dichroitische Spiegel **DBS** oder eine andere Vorrichtung die Pumpstrahlung **LB** und die Fluoreszenzstrahlung **FL** so voneinander, dass im Wesentlichen optional nur Fluoreszenzstrahlung **FL** den Fotodetektor **PD** erreicht. Statt eines dichroitische Spiegels **DBS** kann der hier vorgeschlagene Quantencomputer **QC** daher auch eine Kombination aus einem halbdurchlässigen Spiegel und einem optischen Filter umfassen. Dabei ist der optische Filter dann optional relativ zum halbdurchlässigen Spiegel auf der Seite des Fotodetektors **PD** angeordnet. Optional lässt der optische Filter dann Strahlung mit der Fluoreszenzwellenlänge λ_{fl} der Fluoreszenzstrahlung **FL** im Wesentlichen ungedämpft passieren. Optional lässt der optische Filter dabei dann Strahlung mit der Pumpstrahlungswellenlänge λ**ₚₘₚ** der Pumpstrahlung **LB** im Wesentlichen nicht passieren. In dem Beispiel der Figur 1 weist der vorgeschlagene Quantencomputer **QC** einen weiteren halbdurchlässigen oder teilreflektierenden Spiegel **STM** auf. In dem Beispiel der Figur 1 teilt der weitere halbdurchlässige oder teilreflektierende Spiegel **STM** einen Teil der Fluoreszenzstrahlung **FL** ab. Der weitere halbdurchlässige oder teilreflektierende Spiegel **STM** führt diese abgeteilte Fluoreszenzstrahlung **FL** einer beispielhaften ersten Kamera **CM1** zu. Die erste Kamera **CM1** erfasst ein Bild der Fluoreszenzstrahlung **FL** emittierenden Quantenpunkte **NV1, NV2, NV3.** Über eine beispielhafte erste Kameraschnittstelle **CIF** und den Steuerdatenbus **SDB** kann in dem Beispiel der Figur 1 die Steuervorrichtung **µC** auf die erste Kamera **CM1** und das erfasste Bild der ersten Kamera **CM1** zugreifen. Beispielsweise kann ein Nutzer über den externen Datenbus **EXTDB** oder eine andere Schnittstelle der Steuervorrichtung µC über den Steuerrechner **µC** auf das Bild der ersten Kamera **CM1** zugreifen, und Teile des Quantencomputers **QC** in Abhängigkeit von dem erfassten Bild der ersten Kamera **CM1** steuern. Auch kann der Rechnerkern **CPU** der Steuervorrichtung **µC** beispielsweise das erfasste Bild der ersten Kamera **CM1** über den Steuerdatenbus **SDB** abfragen und dann auswerten, oder in einem Speicher **RAM, NVM** speichern, oder anderweitig verarbeiten. Beispielsweise kann der Rechnerkern **CPU** der Steuervorrichtung **µC** ein Bildverarbeitungsprogramm ausführen. Beispielsweise kann der Rechnerkern **CPU** der Steuervorrichtung **µC** oder eine andere geeignete Teilvorrichtung des Quantencomputers **QC** beispielsweise durch Auswertung des von der ersten Kamera **CM1** erfassten Bildes einen mechanischen Versatz der Quantenpunkte **NV1, NV2, NV3** gegenüber dem optischen System **OS** feststellen und einen Versatzvektor ermitteln. Optional korrigieren der Rechnerkern **CPU** der Steuervorrichtung **µC** oder die andere geeignete Teilvorrichtung des Quantencomputers **QC** diesen von ihr festgestellten Versatz der Quantenpunkte **NV1, NV2, NV3** gegenüber dem optischen System **OS**. Beispielsweise können der Rechnerkern **CPU** der Steuervorrichtung **µC** oder die andere geeignete Teilvorrichtung des Quantencomputers **QC** mittels einer translatorischen Positioniervorrichtung in X-Richtung **XT** und/oder einer translatorischen Positioniervorrichtung in Y-Richtung **YT** den festgestellten Versatzvektor eliminieren. Hierzu verschiebt optional die translatorische Positioniervorrichtung in X-Richtung **XT** das Substrat **D** mit der QuantenALU aus Quantenpunkten **NV1, NV2, NV3** und/oder nuklearen Kernquantenpunkten **CI1₁, CI1₂, CI1₃, CI2₁, CI2₂, CI2₃, CI3₁, CI3₂, CI3₃** in X-Richtung in der Art, dass die X-Komponente des festgestellten Versatzvektors optional im Wesentlichen 0 wird. Beispielsweise kann dabei optional die Steuervorrichtung **µC** über den Steuerdatenbus **SDB** mittels einer X-Steuervorrichtung **GDX** für die translatorische Positioniervorrichtung **XT** in X-Richtung steuern und Betriebsparameter der Positioniervorrichtung **XT** in X-Richtung abfragen. Die X-Steuervorrichtung **GDX** für die translatorische Positioniervorrichtung **XT** in X-Richtung ist hierzu optional mit dem Steuerdatenbus **SDB** verbunden. Optional führen dabei der Rechnerkern **CPU** der Steuervorrichtung **µC** oder die andere geeignete Teilvorrichtung des Quantencomputers **QC** einen Regelalgorithmus durch, der einem Pl oder PI-Regler oder einem anderen geeigneten Regler entspricht. Des Weiteren verschiebt optional die translatorische Positioniervorrichtung in Y-Richtung **YT** das Substrat **D** mit der QuantenALU aus Quantenpunkten **NV1, NV2, NV3** und/oder nuklearen Kernquantenpunkten **CI1₁, CI1₂, CI1₃, CI2₁, CI2₂, CI2₃, CI3₁, CI3₂, CI3₃** in Y-Richtung in der Art, dass die Y-Komponente des festgestellten Versatzvektors optional im Wesentlichen 0 wird. Beispielsweise kann dabei optional die Steuervorrichtung **µC** über den Steuerdatenbus **SDB** mittels einer Y-Steuervorrichtung **GDY** für die translatorische Positioniervorrichtung **YT** in Y-Richtung die translatorische Positioniervorrichtung **YT** in Y-Richtung steuern und Betriebsparameter der Positioniervorrichtung **YT** in Y-Richtung abfragen. Die Y-Steuervorrichtung **GDY** für die translatorische Positioniervorrichtung **YT** in Y-Richtung ist hierzu optional mit dem Steuerdatenbus **SDB** verbunden. Optional führen dabei der Rechnerkern **CPU** der Steuervorrichtung **µC** oder die andere geeignete Teilvorrichtung des Quantencomputers **QC** einen Regelalgorithmus durch, der einem PI oder Pl-Regler oder einem anderen geeigneten Regler entspricht. Optional weist der Quantencomputer **QC** auch eine Vorrichtung zur Refokussierung auf. Beispielsweise kann das optische System **OS** eine Teilvorrichtung umfassen, das eine Verschiebung des optischen Systems **OS** in Z-Richtung relativ zum Substrat **D** ermöglicht. Optional kann der Rechnerkern **CPU** der Steuervorrichtung **µC** über den Steuerdatenbus **STB** diese Teilvorrichtung zur Verschiebung des optischen Systems **OS** in Z-Richtung steuern. Optional kann der Rechnerkern **CPU** der Steuervorrichtung **µC** über den Steuerdatenbus **STB** auf Betriebsparameter dieser Teilvorrichtung zur Verschiebung des optischen Systems **OS** in Z-Richtung zugreifen und das konfokale Mikroskop des optischen Systems OS optional automatisch fokussieren. Optional regelt der Rechnerkern **CPU** der Steuervorrichtung **µC** über den Steuerdatenbus **STB** den Abstand zwischen optischem System **OS** und Substrat **D** in der Art nach, in Abhängigkeit von dem erfassten Bild der ersten Kamera **CM1** unter Nutzung dieser Teilvorrichtung zur Verschiebung des optischen Systems **OS** in Z-Richtung, dass der Fokus der erfassten Bilder der ersten Kamera auf den fluoreszierenden Quantenpunkten **NV1, NV2, NV3** liegt und bei einwirkenden mechanischen Störungen auch verbleibt. Sofern die Steuervorrichtung **µC** durch Manipulationen des Quantenzustands von Quantenpunkten **NV1, NV2, NV3** die Fluoreszenzstrahlung **FL** solcher Quantenpunkte **NV1, NV2, NV3** zu weit vermindert oder unterdrückt, so berücksichtigt die Steuervorrichtung **µC** die Fluoreszenzstrahlung **FL** dieser Quantenpunkte **NV1, NV2, NV3** optional nicht weiter für die Dauer dieses Zustands dieser Quantenpunkte **NV1, NV2, NV3** bei der Lageregelung des Substrats **D** gegenüber dem optischen System **OS** bzw. bei der Fokusregelung des optischen Systems **OS**. Sofern die Steuervorrichtung **µC** durch Manipulationen des Quantenzustands von Quantenpunkten **NV1, NV2, NV3** die Fluoreszenzstrahlung **FL** solcher Quantenpunkte **NV1, NV2, NV3** in ausreichendem Maße ermöglicht oder erhöht, so berücksichtigt die Steuervorrichtung **µC** die Fluoreszenzstrahlung **FL** dieser Quantenpunkte **NV1, NV2, NV3** optional wieder für die Dauer dieses Zustands dieser Quantenpunkte **NV1, NV2, NV3** bei der Lageregelung des Substrats **D** gegenüber dem optischen System **OS** bzw. bei der Fokusregelung des optischen Systems **OS**. Der vorgeschlagene Quantencomputer **QC** umfasst also optional einen oder mehrere Regelkreise zur Stabilisierung der räumlichen Position der Quantenpunkte **NV1, NV2, NV3** und/oder nuklearen Kernquantenpunkte **CI1₁, CI1₂, CI1₃, CI2₁, CI2₂, CI2₃, CI3₁, CI3₂, CI3₃** relativ gegenüber dem Fokuspunkt des optischen Systems **OS** und ggf. optional einen oder mehrere Regelkreise zur Stabilisierung des Fokus des optischen Systems **OS** auf die Quantenpunkte **NV1, NV2, NV3** und/oder die nuklearen Kernquantenpunkte **CI1₁, CI1₂, CI1₃, CI2₁, CI2₂, CI2₃, CI3₁, CI3₂, CI3₃** des Substrats **D.**

Optional regelt die Steuervorrichtung **µC** die Lichtquelle **LD** und/oder den Lichtquellentreiber **LDRV** in Abhängigkeit von dem erfassten Bild der ersten Kamera **CM1** nach. Der Lichtquellentreiber **LDRV** ist hierzu optional mit dem Steuerdatenbus **SDB** verbunden. Der Rechnerkern **CPU** kann über diesen Steuerdatenbus **STB** dann den Lichtquellentreiber **LDRV** steuern und dessen Betriebsparameter optional abfragen. Es ist denkbar, dass der vorgeschlagene Quantencomputer **QC** innerhalb der Lichtquelle **LD** und/oder innerhalb des Lichtquellentreibers **LDRV** eine optischen Überwachungsvorrichtung, beispielsweise eine Monitorfotodiode, mit einer dieser Monitorfotodiode zugehörigen Monitordiodenauswertevorrichtung, umfasst, die die Intensität der Emission der Pumpstrahlung **LB** der Lichtquelle **LD** überwacht und deren Parameter erfasst. Der Rechnerkern **CPU** der Steuervorrichtung **µC** kann dann optional über den Steuerdatenbus **SDB** diese erfassten Parameter auslesen. Die Steuervorrichtung **µC** und/oder die besagte optische Überwachungsvorrichtung der Lichtquelle **LD** und/oder des Lichtquellentreibers **LDRV** und/oder eine andere Teilvorrichtung des verlegbaren Quantencomputer **QC** können dann die Intensität der Emission der Pumpstrahlung **LB** der Lichtquelle **LD** beispielsweise in Abhängigkeit vom Wert des Sendesignals **S5** oder eines von Ihnen vorgegebenen anderen Parameters nachregeln.

Der Fotodetektor **PD** erfasst gemäß der in Figur 1 gezeigten optionalen Ausführungsform die Fluoreszenzstrahlung **FL** der Quantenpunkte **NV1, NV2, NV3.** Der Fotodetektor **PD** wandelt die erfasste Fluoreszenzstrahlung **FL** in ein Empfängerausgangssignal **S0.** Ein Verstärker **V** verstärkt und/oder filtert optional das Empfängerausgangssignal **S0.** Optional verstärkt und/oder filtert der Verstärker **V** das Empfängerausgangssignal **S0** in Abhängigkeit vom Sendesignal **S5.** Optional umfasst der Verstärker **V** einen oder mehrere Analog-zu-Digitalwandler. Optional kann der Rechnerkern **CPU** der Steuervorrichtung Werte dieser Analog-zu-Digital-Wandler über den Steuerdatenbus **SDB** abfragen. Optional wandelt ein Analog-zu-Digital-Wandler **ADCV** des Verstärkers im Zusammenwirken mit einem internen Verstärker **IW** des Verstärkers **V** das Empfängerausgangssignal **S0** in Messwerte von Abtastwerten des Empfängerausgangssignals **S0**.Optional ist zu diesem Zweck der Verstärker **V** mit dem Steuerdatenbus **SDB** verbunden. Optional kann der Rechnerkern **CPU** der Steuervorrichtung STV über den Steuerdatenbus **SDB** Betriebsparameter des Verstärkers **V** einstellen und/oder abfragen. Diese Betriebsparameter können beispielsweise die Verstärkung und/oder Filterparameter einer Filterung sein, die der Verstärker **V** durchführt.

### Mikrowellenansteuerung MW/RF-AWFG, mWA

Der verlegbare Quantencomputer **QC** gemäß der in Figur 1 gezeigten optionalen Ausführungsform umfasst optional eine oder mehrere Vorrichtungen **MW/RF-AWFG, mWA** zur Erzeugung eines elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃**. Beispielsweise kann eine solche Vorrichtung **MW/RF-AWFG, mWA** zur Erzeugung eines elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃** einen oder mehrere Mikrowellen/-Radiofrequenzgeneratoren mit optional jeweils frei wählbarer Wellenform **MW/RF-AWFG** und eine oder mehrere über einen oder mehrere Wellenleiter an diese angeschlossenen Antennen **mWA** umfassen. Diese Antennen **mWA** erzeugen dann das besagte elektromagnetische Wellenfeld am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃**.

Ein einfacher Draht kann bereits als Antenne **mWA** dienen, wenn die Quantenpunkte **NV1, NV2, NV3** in ausreichend kleinem Anstand zu dem Draht angeordnet sind. Das besagte elektromagnetische Wellenfeld am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃** hängt dabei von den Ausgangssignalen des einen oder der mehreren Mikrowellen/- Radiofrequenzgeneratoren mit optional jeweils frei wählbarer Wellenform **MW/RF-AWFG** ab. Optional steuert die Steuervorrichtung **µC** über den Steuerdatenbus **SDB** die eine oder mehreren Vorrichtungen **MW/RF-AWFG, mWA** zur Erzeugung eines elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃**. Optional synchronisiert das Sendesignal **S5** die Erzeugung des elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃** durch die eine oder mehreren Vorrichtungen **MW/RF-AWFG, mWA** zur Erzeugung eines elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃**. Beispielsweise kann das Sendesignal **S5** die Erzeugung des elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃** durch die eine oder mehreren Vorrichtungen **MW/RF-AWFG, mWA** zur Erzeugung eines elektromagnetischen Wellenfeldes am jeweiligen Ort der Quantenpunkte **NV1, NV2, NV3** und/oder am jeweiligen Ort der nuklearen Kernquantenpunkte **CI1₁, CI1₂, CI1₃, CI2₁, CI2₂, CI2₃, CI3₁, CI3₂, CI3₃** mit dem Lichtquellentreiber **LDRV** und damit mit der Emission der Pumpstrahlung **LB** der Lichtquelle **LD** synchronisieren.

### Steuervorrichtung µC

Optional umfasst der verlegbare Quantencomputer **QC** gemäß der in Figur 1 gezeigten optionalen Ausführungsform die bereits erwähnte Steuervorrichtung **µC** mit dem Rechnerkern **CPU.** Optional handelt es sich bei der Steuervorrichtung **µC** um einen konventionellen Digitalrechner in Von-Neumann- oder Harvard-Architektur. Die Steuervorrichtung **µC** umfasst optional einen Rechnerkern **CPU** und optional einen oder mehrere Daten- und Programmspeicher **RAM NVM.** Beispielsweise kann es sich um einen ARM-Controller handeln. Beispielsweise kann es sich bei dem Rechnerkern **CPU** um einen ARM-Cortex-A78AE für sicherheitskritische Anwendungen handeln. Der ARM-Cortex-A78AE zeichnet sich dadurch aus, dass er unterstützende Vorrichtungsteile und Funktionen zur Erfüllung der ISO 26262 ASIL B and ASIL D Sicherheitsanforderungen umfasst. Die hier vorgelegte Schrift schlägt daher vor, in bestimmten Fällen einen Rechnerkern **CPU** vorzusehen, der unterstützende Vorrichtungsteile und Funktionen zur Erfüllung der ISO 26262 ASIL B and ASIL D Sicherheitsanforderungen oder funktionsäquivalenter Standards wie IEC 61508 und/oder IEC 62061:2021, EN 61511, EN 50129, EN 62304, US RTCA DO-178B, US RTCA DO-254, EUROCAE ED-12B aufweist. Der Daten- und Programmspeicher **RAM NVM** bzw. die mehreren Daten- und Programmspeicher **RAM NVM** können ganz oder in Teilen als nicht flüchtige Speicher **NVM** und/oder ganz oder in Teilen als flüchtige Speicher **RAM** ausgelegt sein. Der Daten- und Programmspeicher der Steuervorrichtung **µC** kann ganz oder in Teilen nur lesbar sein, und ganz oder in Teilen beschreibbar/lesbar sein. Der Daten- und Programmspeicher **RAM NVM** kann beispielsweise ein RAM, ein SRAM, ein DRAM, ein ROM, ein EEPROM, ein PROM, ein Flash-Speicher und/oder dazu funktionsäquivalente Speicher umfassen. Die Steuervorrichtung **µC** kann eine Bootstrap-Vorrichtung zum Laden des Startprogramms in den Daten- und Programmspeicher umfassen. Der Daten- und Programmspeicher **RAM NVM** der Steuervorrichtung **µC** kann ein BIOS umfassen. Der Daten- und Programmspeicher **RAM NVM** der Steuervorrichtung **µC** kann einen Datenspeicher und/oder einen Programmspeicher umfassen. Der Rechnerkern **CPU** der Steuervorrichtung **µC** kann eine Datenschnittstelle **DBIF** zur Kommunikation mit anderen Rechnersystemen, insbesondere einer übergeordneten zentralen Steuereinheit **ZSE,** und zu Nutzerschnittstellen umfassen. Diese Datenschnittstelle **DBIF** kann drahtgebunden und/oder drahtlos sein. Die hier vorgelegte Schrift verweist auf die einschlägige Literatur zu Datennetzwerken.

### Steuerungsaufgaben der Steuervorrichtung µC

Optional steuert die Steuervorrichtung **µC** des verlegbaren Quantencomputers **QC** gemäß der in Figur 1 gezeigten optionalen Ausführungsform mittels ihres Rechnerkerns **µC** auch die Intensität und Modulation der Pumpstrahlung **LB**, und Intensitätsmodulation der Lichtquelle **LD.** Hierzu kann beispielsweise der Rechnerkern **CPU** der Steuervorrichtung **µC** den zeitlichen Verlauf der Intensität, der von der Lichtquelle **LD** abgestrahlten Pumpstrahlung **LB,** steuern. Optional ist der zeitliche Intensitätsverlauf der Pumpstrahlung **LB** der Lichtquelle **LD** pulsmoduliert. Der Rechnerkern **CPU** der Steuervorrichtung **µC** steuert mittels des Wellenformgenerators **WFG** über den Lichtquellentreiber **LDRV** die Lichtquelle **LED.** Der Rechnerkern **CPU** der Steuervorrichtung **µC** steuert dabei optional die Intensität **Ip** und/oder die zeitliche Lage **tₛₚ** der Pulse und/oder die zeitliche Dauer **t_{dp}** der Pulse der gepulsten Pumpstrahlung **LB** der Lichtquelle **LD.** Über diese Intensität **Ip** der Pulse der Pumpstrahlung **LB** und über die zeitliche Lage **tₛₚ** der Pulse der Pumpstrahlung **LB** und über die zeitliche Dauer t_{dp} der Pulse der Pumpstrahlung **LB** kann somit der Rechnerkern **CPU** der Steuervorrichtung **µC** des verlegbaren Quantencomputers **QC** die Zustände der Quantenpunkte **NV1, NV2, NV3** des vorgeschlagenen verlegbaren Quantencomputers **QC** beeinflussen. Daher kann über diese Intensität **Iₚ** der Pulse der Pumpstrahlung **LB** und über die zeitliche Lage **tₛₚ** der Pulse der Pumpstrahlung **LB** und über die zeitliche Dauer t_{dp} der Pulse der Pumpstrahlung **LB** somit der Rechnerkern **CPU** der Steuervorrichtung **µC** des verlegbaren Quantencomputers **QC** die Zustände von Quantenpunkten **NV1, NV2, NV3** der Quantenpunkte miteinander koppeln. Dabei synchronisiert die Vorrichtung beispielsweise mittels des Rechnerkerns **CPU** der Steuervorrichtung **µC** diese Pulse der Pumpstrahlung **LB** und/oder mittels geeigneter Synchronisationen und/oder mittels Synchronisationssignale mit ggf. von dem Mikrowellen- und/oder Radiowellenfrequenzgenerator **MW/RF-AWFG** erzeugten Mikrowellen- und/oder Radiosignalen zur Ansteuerung der Quantenpunkte **NV1, NV2, NV3** und/oder nuklearen Kernquantenpunkte **CI1₁, CI1₂, CI1₃, CI2₁, CI2₂, CI2₃, CI3₁, CI3₂, CI3₃**. Ein solches Synchronisationssignal kann das Sendesignal **S5** sein. Diese von dem Mikrowellen- und/oder Radiowellenfrequenzgenerator **MW/RF-AWFG** erzeugten Mikrowellen- und/oder Radiosignale beeinflussen die Quantenpunkte **NV1, NV2, NV3** je nach Zustand der Quantenpunkte **NV1, NV2, NV3** ebenfalls. Über solche Beeinflussungen der Zustände der Quantenpunkte **NV1, NV2, NV3** des vorgeschlagenen verlegbaren Quantencomputers **QC** kann der Rechnerkerns **CPU** der Steuervorrichtung **µC** typischerweise auch die Zustände der nuklearen Kernquantenpunkte **CI1₁, CI1₂, CI1₃, CI2₁, CI2₂, CI2₃, CI3₁, CI3₂, CI3₃** beeinflussen und ggf. die Zustände nuklearer Kernquantenpunkte **CI1₁, CI1₂, CI1₃, CI2₁, CI2₂, CI2₃, CI3₁, CI3₂, CI3₃** mit Zuständen von Quantenpunkten **NV1, NV2, NV3** koppeln. Über solche Beeinflussungen der Zustände der Quantenpunkte **NV1, NV2, NV3** des vorgeschlagenen verlegbaren Quantencomputers **QC** kann der Rechnerkern **CPU** der Steuervorrichtung **µC** typischerweise ebenso die Zustände der nuklearen Kernquantenpunkte **CI1, CI2** , **CI3** beeinflussen und ggf. die Zustände der nuklearen Kernquantenpunkte **CI1₁, CI1₂, CI1₃, CI2₁, CI2₂, CI2₃, CI3₁, CI3₂, CI3₃** untereinander koppeln.

Der besagte Rechnerkern **CPU** der Steuervorrichtung **µC** steuert optional die eine oder die mehreren Vorrichtungen **MW/RF-AWFG, mWA** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃**. Diese eine oder mehreren Vorrichtungen **MW/RF-AWFG, mWA** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃** erzeugen optional ein oder mehrere sich ggf. überlagernde elektromagnetische Felder am jeweiligen Ort der Quantenpunkte **NV1, NV2, NV3** und am jeweiligen Ort der nuklearen Kernquantenpunkte **CI1₁, CI1₂, CI1₃, CI2₁, CI2₂, CI2₃, CI3₁, CI3₂, CI3₃.** Diese elektromagnetischen Felder sind dabei optional so gestaltet, dass sie eine geeignete Frequenz, insbesondere eine Mikrowellen- und/oder Radiowellenfrequenz, **f_{HF}** aufweisen, die typischerweise mit einem zeitlichen Hüllkurvenverlauf in Pulsform moduliert ist. Optional ist die Erzeugung der Pulse dieser gepulsten elektromagnetischen Felder mit Mikrowellen- und/oder Radiowellenfrequenz **f_{HF}** mit der Erzeugung der Pulse der Pumpstrahlung **LB** der Lichtquelle **LED** zeitlich, beispielsweise über das Sendesignal **S5,** synchronisiert. Ein solcher Puls dieser gepulsten elektromagnetischen Felder mit Mikrowellen- und/oder Radiowellenfrequenz **f_{HF}** beginnt optional zu einem Pulsstartzeitpunkt **t_{spHF}** relativ zum Referenzzeitpunkt **t_{0HF}** und weist optional eine Pulsdauer **t_{dHF}** auf. Der besagte Rechnerkern **CPU** der Steuervorrichtung **µC** steuert dabei optional die eine oder die mehreren Vorrichtungen **MW/RF-AWFG** zur Erzeugung des besagten elektromagnetischen Wellenfeldes am jeweiligen Ort der Quantenpunkte **NV1, NV2, NV3** und am jeweiligen Ort der nuklearen Kernquantenpunkte **CI1₁, CI1₂, CI1₃, CI2₁, CI2₂, CI2₃, CI3₁, CI3₂,** CI3₃. Optional stellt der besagte Rechnerkern **CPU** der Steuervorrichtung **µC** dabei die Frequenz des elektromagnetischen Feldes f_{HF} ein, das die eine oder die mehreren Vorrichtungen **MW/RF-AWFG** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃** erzeugen. Optional stellt der besagte Rechnerkern **CPU** der Steuervorrichtung **µC** ggf. auch einen Pulsstartzeitpunkt **t_{spHF}** relativ zum Referenzzeitpunkt **t_{0HF}** und ggf. eine Pulsdauer **t_{dHF}** eines zeitlichen Hüllkurvenverlaufs der Abstrahlung eines elektromagnetischen Feldes durch die eine oder die mehreren Vorrichtungen **MW/RF-AWFG** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃** in Pulsform ein. Darüber hinaus stellt optional der besagte Rechnerkern **CPU** der Steuervorrichtung **µC** auch die Amplitude **I_{pHF}** dieses Pulses ein, den diese Vorrichtungen **MW/RF-AWFG, mWA** erzeugen.

Darüber hinaus steuert der Rechnerkern **CPU** der Steuervorrichtung **µC** ggf. weitere Funktionen des verlegbaren Quantencomputers **QC** und dessen Teilvorrichtungen und Verfahren. Die Quantenpunkte **NV1, NV2, NV3** und die Paare aus zwei Quantenpunkten und die Paare aus jeweils einem Quantenpunkt und jeweils einem nuklearen Kernquantenpunkt weisen typischerweise unterschiedliche Resonanzfrequenzen f_{HF} auf. Ursache sind zum Ersten die unterschiedlichen räumlichen Abstande der Quantenpunkte innerhalb der verschiedenen Paare aus zwei Quantenpunkten untereinander, und zum Zweiten die unterschiedlichen räumlichen Abstände innerhalb der verschiedenen Paare aus einem Quantenpunkt und einem diesem Quantenpunkt jeweils zugeordneten nuklearen Kernquantenpunkt. Optional misst der Rechnerkern **CPU** der Steuervorrichtung **µC** zu Beginn des Betriebes und/oder noch in der Fabrikationsstätte in einem Testlauf bzw. Probebetrieb diese Resonanzfrequenzen **f_{HF}** aus. Hierzu nutzt der Rechnerkern **CPU** der Steuervorrichtung **µC** die oben beschriebenen Mittel. An dieser Stelle verweist die hier vorgelegte Schrift ausdrücklich nochmals auf die Schrift DE 10 2020 125 189 A1. Die so ermittelten Resonanzfrequenzwerte speichert der Rechnerkern **CPU** der Steuervorrichtung **µC** optional in einem Speicher **NVM** der Steuervorrichtung **µC** als gespeicherte Resonanzfrequenzen ab. Optional ist dieser Speicher ein nicht flüchtiger Speicher **NVM.** Dies hat den Vorteil, dass diese Ermittlung der Resonanzfrequenzen durch einen Scanvorgang mit einem typischerweise schrittweisen Durchstimmen der Frequenz **f_{HF}** dann seltener notwendig ist und nicht bei jedem Neustart des Quantencomputers **QC** notwendig ist. Im Betrieb nutzt der Rechnerkern **CPU** der Steuervorrichtung **µC** diese im Speicher **NVM** der Steuervorrichtung **µC** gespeicherten Resonanzfrequenzen, um die Frequenz f_{HF} des zu erzeugenden elektromagnetischen Feldes so einzustellen, dass eine oder mehrere Vorrichtungen **MW/RF-AWFG, mWA** zur Erzeugung eines elektromagnetischen Feldes gezielt den Zustand eines ganz bestimmten Quantenpunkts und/oder gezielt den Zustand eines ganz bestimmten Paars von Quantenpunkten und/oder eines ganz bestimmten Paars aus einen Quantenpunkt und einem Kernquantenpunkt und/oder gezielt die Zustände einer ganz bestimmten Gruppe von Quantenpunkten beeinflussen können. An dieser Stelle verweist die hier vorgelegte Schrift ausdrücklich nochmals auf die Schrift DE 10 2020 125 189 A1.

Der Rechnerkern **CPU** der Steuervorrichtung **µC** kann optional über die interne Datenschnittstelle **MDBIF** und den Steuerdatenbus **SDB** den Lichtquellentreiber **LDRV** steuern und Betriebsparameter des Lichtquellentreibers **LDRV** wie beispielsweise interne Temperaturen, interne Versorgungsspannungen etc., auslesen.

Der Rechnerkern **CPU** der Steuervorrichtung **µC** kann optional über die interne Datenschnittstelle **MDBIF** und den Steuerdatenbus **SDB** die Lichtquelle **LD** steuern und Betriebsparameter der Lichtquelle **LD,** wie Temperatur, Lichtabstrahlungsintensität etc. auslesen.

Der Rechnerkern **CPU** der Steuervorrichtung **µC** kann optional über die interne Datenschnittstelle **MDBIF** und den Steuerdatenbus **SDB** den Wellenformgenerator **WFG** steuern, und Betriebsparameter des Wellenformgenerators **WFG** auslesen. Der Rechnerkern **CPU** der Steuervorrichtung **µC** kann optional über die interne Datenschnittstelle **MDBIF** und den Steuerdatenbus **SDB** den Verstärker V steuern und Betriebsparameter des Verstärkers **V,** wie beispielsweise Verstärkungen und/oder Filterparameter, auslesen.

Der Rechnerkern **CPU** der Steuervorrichtung **µC** kann optional über die interne Datenschnittstelle **MDBIF** und den Steuerdatenbus **SDB** die, durch Analog-zu-Digital-Wandler **ADCV** des Verstärkers **V,** und durch den Verstärker V verstärkten und gefilterten, Messwerte des Empfängerausgangssignals **S0** des Fotodetektors **PD** erfassen und auslesen. Sofern möglich, kann der Rechnerkern **CPU** der Steuervorrichtung **µC** optional über die interne Datenschnittstelle **MDBIF** den Fotodetektor **PD** konfigurieren und ggf. weitere Betriebsparameter, wie beispielsweise eine Vorspannung oder eine Temperatur auslesen oder die Vorspannung einstellen.

Der Rechnerkern **CPU** der Steuervorrichtung **µC** kann optional über die interne Datenschnittstelle **MDBIF** und den Steuerdatenbus **SDB** und eine erste Kameraschnittstelle **CIF** die erste Kamera **CM1** konfigurieren und auslesen. Optional erfasst die erste Kamera **CM1** ein Bild des Substrats D. Optional erfasst die erste Kamera **CM1** ein Bild der Verteilung der Fluoreszenzstrahlung **FL** des Substrats D und übermittelt dieses Bild optional an den Rechnerkern **CPU** der Steuervorrichtung **µC**. Optional erfasst die erste Kamera **CM1** also ein Bild der Verteilung der Fluoreszenzstrahlung **FL** der Quantenpunkte **NV1, NV2, NV3** des Substrats **D** und übermittelt dieses Bild optional an den Rechnerkern **CPU** der Steuervorrichtung **µC**. Der Rechnerkern **CPU** der Steuervorrichtung **µC** kann die erste Kamera **CM1** somit steuern und Betriebsparameter und Daten der Kamera **CM1** auslesen.

Der Rechnerkern **CPU** der Steuervorrichtung **µC** kann optional über die interne Datenschnittstelle **MDBIF** und den Steuerdatenbus **SDB** die X-Steuervorrichtung **GDX** für die translatorische Positioniervorrichtung **XT** in X-Richtung steuern und Betriebsparameter der X-Steuervorrichtung **GDX** auslesen und ggf. anpassen.

Der Rechnerkern **CPU** der Steuervorrichtung **µC** kann optional über die interne Datenschnittstelle **MDBIF** und den Steuerdatenbus **SDB** die Y-Steuervorrichtung **GDY** für die translatorische Positioniervorrichtung **YT** in Y-Richtung steuern und Betriebsparameter der Y-Steuervorrichtung **GDY** auslesen und ggf. anpassen. Der Rechnerkern **CPU** der Steuervorrichtung **µC** kann optional über die interne Datenschnittstelle **MDBIF** und den Steuerdatenbus **SDB** und über die X-Steuervorrichtung **GDX** die translatorische Positioniervorrichtung **XT** in X-Richtung steuern und Betriebsparameter der translatorischen Positioniervorrichtung **XT** in X-Richtung auslesen und ggf. anpassen.

Der Rechnerkern **CPU** der Steuervorrichtung **µC** kann optional über die interne Datenschnittstelle **MDBIF** und den Steuerdatenbus **SDB** und über die Y-Steuervorrichtung **GDY** die translatorische Positioniervorrichtung **YT** in Y-Richtung steuern und Betriebsparameter der translatorischen Positioniervorrichtung **YT** in Y-Richtung auslesen und ggf. anpassen.

Optional erfasst der Rechnerkern **CPU** der Steuervorrichtung **µC** die Position des Substrats **D** relativ zum optischen System **OS**. Der Rechnerkern **CPU** der Steuervorrichtung **µC** kann beispielsweise und optional über die interne Datenschnittstelle **MDBIF** und den Steuerdatenbus **SDB** und über die erste Kameraschnittstelle **CIF** und die erste Kamera **CIM1** optional diese Position des Substrats **D** relativ zum optischen System **OS** erfassen und Änderungen dieser Position des Substrats **D** relativ zum optischen System **OS** mittels der Y-Steuervorrichtung **GDY** und der translatorischen Positioniervorrichtung **YT** in Y-Richtung und mittels der X-Steuervorrichtung **GDX** und der translatorischen Positioniervorrichtung **XT** in X-Richtung so korrigieren, dass diese Korrekturen diese Änderungen dieser Position des Substrats **D** relativ zum optischen System **OS** rückgängig machen.

Der Rechnerkern **CPU** der Steuervorrichtung **µC** kann optional über die interne Datenschnittstelle **MDBIF** und den Steuerdatenbus **SDB** einen Temperatursensor **ST** auslesen und ggf. konfigurieren.

Der Rechnerkern **CPU** der Steuervorrichtung **µC** kann optional über die interne Datenschnittstelle **MDBIF** und den Steuerdatenbus **SDB** in Abhängigkeit von der mit dem Temperatursensor **ST** erfassten Temperatur ein oder mehrere Vorrichtungsteile des verlegbaren Quantencomputers **QC** neu konfigurieren oder anders betreiben. Insbesondere kann der Rechnerkern **CPU** der Steuervorrichtung **µC** ein oder mehrere Lüfter des Quantencomputers **QC,** oder funktionsäquivalente Kühlvorrichtungen wie Wasser- oder Ölkühler mit entsprechenden Kühlmittelkreisläufen, in Betrieb setzen, oder in ihren Betriebsparametern so verändern, dass die mit dem Temperatursensor **TS** erfasste Temperatur in einem vorgegebenen Temperaturbereich bleibt. Der vorgeschlagene Quantencomputer **QC** kann einen oder mehrere Temperatursensoren **TS** und einen oder mehrere Kühlmittelkreisläufe und/oder einen oder mehrere Lüfter aufweisen. Als Kühlmittel kommen alle geeigneten Fluide in Frage. Luft, Wasser und Öl sind optionale Beispiele für Kühlmittel. Die Kühlung dient typischerweise der Abfuhr der Abwärme von Vorrichtungsteilen des Quantencomputers **QC**. Typischerweise ist eine Zieltemperatur im Bereich von 0°C bis 50°C optional. Ein militärischer Temperaturbereich von -40°C bis 125°C erscheint sinnvoll für militärische Anwendungen. Statt einer Kühlvorrichtung kann der Quantencomputer **QC** auch eine Heizung für Klimatisierungszwecke aufweisen, wobei der Rechnerkern **CPU** der Steuervorrichtung **µC** optional über die interne Datenschnittstelle **MDBIF** und den Steuerdatenbus **SDB** in Abhängigkeit von der mit dem Temperatursensor **ST** erfassten Temperatur diese Heizung dann so steuert, dass das Innere des Quantencomputers **QC** eine Mindesttemperatur überschreitet. Die Heizung kann beispielsweise elektrisch, chemisch oder thermonuklear sein.

Optional erfasst der Rechnerkern **CPU** der Steuervorrichtung **µC** die Position des Substrats **D** relativ zum optischen System **OS,** und die Position eines Permanentmagneten **PM** relativ zum Substrat **D.** Der Rechnerkern **CPU** der Steuervorrichtung **µC** kann beispielsweise und optional über die interne Datenschnittstelle **MDBIF** und den Steuerdatenbus **SDB** und über die zweite Kameraschnittstelle **CIF2** und die zweite Kamera **CIM2** optional diese Position des Substrats **D** relativ zum optischen System **OS** und die Position eines Permanentmagneten **PM** relativ zum Substrat **D,** beispielsweise in der Seitenansicht, erfassen.

Der Rechnerkern **CPU** der Steuervorrichtung **µC** kann optional über die interne Datenschnittstelle **MDBIF** und den Steuerdatenbus **SDB** und die zweite Kameraschnittstelle **CIF2** die zweite Kamera **CM2** konfigurieren und auslesen. Optional erfasst die zweite Kamera **CM2** ein Bild des Substrats **D** relativ zum optischen System **OS** und die Position eines Permanentmagneten **PM** relativ zum Substrat **D** beispielsweise in der Seitenansicht. Optional beleuchtet zu diesem Zweck eine Leuchte **LM** mit einem Leuchtmittel den Bereich, den die zweite Kamera **CM2** erfassen soll. Optional erfasst die zweite Kamera **CM2** dieses Bild und übermittelt dieses Bild optional an den Rechnerkern **CPU** der Steuervorrichtung **µC**. Der Rechnerkern **CPU** der Steuervorrichtung **µC** kann die zweite Kamera **CM2** somit steuern und Betriebsparameter und Daten der zweiten Kamera **CM2** auslesen. Diese zweite Kamera **CM2** ermöglicht es in Fernwartung den Positioniervorgang und die Positionierung des Substrats **D** gegenüber dem optischen System **OS** mittels der translatorische Positioniervorrichtung **XT** in X-Richtung und der translatorische Positioniervorrichtung **YT** in Y-Richtung zu beobachten und zu überprüfen und ggf. den Positionierungsvorgang und die Positionierung des Substrats **D** gegenüber einem Permanentmagneten **PM** mittels der Positioniervorrichtung **PV** dieses Permanentmagneten **PM** zu beobachten und zu überprüfen, ohne das Gehäuse des Quantencomputers **QC** überprüfen zu müssen. Optional überträgt die zweite Kamera **CM2** das Bild des beobachteten Bildbereichs über die zweite Kameraschnittstelle **CIF2,** den Steuerdatenbus **SDB,** die interne Datenschnittstelle **MDBIF,** den internen Datenbus **INTDB** der Steuervorrichtung **µC,** den Rechnerkern **CPU** der Steuervorrichtung **µC,** die externe Datenschnittstelle **DBIF** der Steuervorrichtung **µC** und den externen Datenbus **EXTDB** an eine übergeordnete Steuereinheit **ZSE** oder einen anderen Rechner, der über eine geeignete Mensch-Maschine-Schnittstelle verfügt. Diese Mensch-Maschine-Schnittstelle kann einen Bildschirm und eine Tastatur oder der gleichen aufweisen, sodass ein Bediener des Quantencomputers **QC** hier Eingaben für die Steuerung von Vorrichtungsteilen des Quantencomputers **QC** oder des Quantencomputers **QC** als Ganzem vornehmen kann. Diese oder eine andere Mensch-Maschine-Schnittstelle kann zur Darstellung von Rechenergebnissen des Quantencomputers **QC** dienen, und/oder Statusmeldungen des Quantencomputers **QC,** insbesondere des Rechnerkerns **CPU** der Steuervorrichtung **µC,** und/oder Betriebsparameter und/oder Statusmeldungen von Vorrichtungsteilen des Quantencomputers **QC,** darstellen. Insbesondere kann die Mensch-Maschine-Schnittstelle Bilder und/oder Video-Sequenzen der ersten Kamera **CM1** und/oder der zweiten Kamera **CM2** darstellen. Diese Bilder und/oder Video-Sequenzen können durch den Rechnerkern **CPU** der Steuervorrichtung **µC** des Quantencomputers **QC** oder einen Rechner, der über den externen Datenbus **EXTDB** mit dem verlegbaren Quantencomputer **QC** verbunden ist, für die Darstellung zuvor bearbeitet worden sein. Bei dem Rechner kann es sich um eine zentrale Steuereinheit **ZSE** handeln. Beispielsweise kann es sich bei diesen Bildern und/oder Video-Sequenzen um Falschfarbenbilder, Bildausschnitte, verzerrte Bilder und/oder Videos oder der gleichen handeln.

Die erste Kamera **CM1** und/oder die zweite Kamera **CM2** müssen nicht notwendigerweise RGB-Kameras sein. Vielmehr können sie auch empfindlich für für den Menschen nicht sichtbare Strahlung sein. Die erste Kamera **CM1** und/oder die zweite Kamera **CM2** können auch Multispektralkameras sein, um beispielsweise die Fluoreszenzstrahlung **FL** der Quantenpunkte **NV1, NV2, NV3** optimal beobachten zu können. Die erste Kamera **CM1** umfasst optional eine Abbildungsoptik und eine bildgebende Fotodetektorschaltung, beispielsweise einen CCD-Sensor-IC, und eine Kameraauswerteelektronik, die an die erste Kameraschnittstelle **CIF** gekoppelt ist. Die zweite Kamera **CM2** umfasst optional eine zweite Abbildungsoptik und eine zweite bildgebende Fotodetektorschaltung, beispielsweise einen zweiten CCD-Sensor-IC, und eine zweite Kameraauswerteelektronik, die an die zweite Kameraschnittstelle **CIF2** gekoppelt ist.

Der Rechnerkern **CPU** der Steuervorrichtung **µC** kann optional über die interne Datenschnittstelle **MDBIF** und den Steuerdatenbus **SDB** eine Steuervorrichtung **PVC** für eine Positioniervorrichtung **PV** des Permanentmagneten **PM** steuern und Betriebsparameter der Steuervorrichtung **PVC** für eine Positioniervorrichtung **PV** des Permanentmagneten **PM** auslesen und ggf. modifizieren.

Beispielsweise kann der Rechnerkern **CPU** der Steuervorrichtung **µC** optional über die interne Datenschnittstelle **MDBIF** und den Steuerdatenbus **SDB** Änderungen der Position des Substrats D relativ zum optischen System **OS** und die Position eines Permanentmagneten **PM** relativ zum Substrat D beispielsweise in der Seitenansicht erfassen und solche Änderungen der Position des Permanentmagneten **PM** relativ zum Substrat D mittels einer Positioniervorrichtung **PV** des Permanentmagneten **PM** wieder ausgleichen. Der Rechnerkern **CPU** der Steuervorrichtung **µC** verwendet hierfür optional die Steuervorrichtung **PVC** für eine Positioniervorrichtung **PV** des Permanentmagneten **PM.** Der Rechnerkern **CPU** der Steuervorrichtung **µC** kann hierdurch optional über die interne Datenschnittstelle **MDBIF** und den Steuerdatenbus **SDB** die Positioniervorrichtung **PV** des Permanentmagneten **PM** mittels der Steuervorrichtung **PVC** steuern und Betriebsparameter der Positioniervorrichtung **PV** auslesen und ggf. modifizieren. Insbesondere kann der Rechnerkern **CPU** der Steuervorrichtung **µC** beispielhaft optional über die interne Datenschnittstelle **MDBIF** und den Steuerdatenbus **SDB** mittels der Positioniervorrichtung **PV** die Position des Permanentmagneten **PM** optional steuern und verändern. Optional kann der Rechnerkern **CPU** der Steuervorrichtung **µC** Änderungen der Position des Permanentmagneten **PM** relativ zum Substrat **D** mittels der zweiten Kamera **CM2** erfassen und mittels der Positioniervorrichtung **PV** wieder kompensieren.

Der Quantencomputer **QC** gemäß der in Figur 1 gezeigten optionalen Ausführungsform umfasst somit erste Mittel (**CM1, CM2**), um Änderungen der Anordnung von Vorrichtungsteilen (**OS, D, PM**) zueinander zu erfassen, und zweite Mittel (**XT**, **YT, PV**), um die erfassten Änderungen rückgängig zu machen. Die ersten Mittel können auch funktionsäquivalente Sensoren, insbesondere Positionssensoren umfassen. Die zweiten Mittel können auch andere funktionsäquivalente Aktoren umfassen.

Der Rechnerkern **CPU** der Steuervorrichtung **µC** kann beispielsweise optional über die interne Datenschnittstelle **MDBIF** und den Steuerdatenbus **SDB** einen Mikrowellen- und/oder Radiowellenfrequenzgenerator **MW/RF-AWFG** zur Erzeugung weitestgehend frei vorgebbarer Wellenformen (Englisch: Arbitrary-Wave-Form-Generator) steuern und dessen Betriebsparameter auslesen und ggf. anpassen. Insbesondere kann beispielsweise optional der Rechnerkern **CPU** der Steuervorrichtung **µC** über die interne Datenschnittstelle **MDBIF** und den Steuerdatenbus **SDB** die erzeugte Wellenformen des Mikrowellen- und/oder Radiowellenfrequenzgenerators **MW/RF-AWFG** programmieren bzw. einstellen oder die eingestellte Wellenform auslesen.

Der Rechnerkern **CPU** der Steuervorrichtung **µC** kann beispielsweise optional über die interne Datenschnittstelle **MDBIF** und den Steuerdatenbus **SDB** die Mikrowellen- und/oder Radiowellenantenne **mWA** einstellen und konfigurieren und/oder eine solche Konfiguration der Mikrowellen- und/oder Radiowellenantenne **mWA** auslesen. Der Mikrowellen- und/oder Radiowellenfrequenzgenerator **MW/RF-AWFG** steuert typischerweise die Mikrowellen- und/oder Radiowellenantenne **mWA** mit der vom Mikrowellen- und/oder Radiowellenfrequenzgenerators **MW/RF-AWFG** erzeugten Wellenformen des Mikrowellen- und/oder Radiowellenfrequenzgenerators **MW/RF-AWFG** an. Die Mikrowellen- und/oder Radiowellenantenne **mWA** bestrahlt das Substrat D mit den Quantenpunkten **NV1, NV2, NV3** mit der elektromagnetischen Strahlung entsprechend der vom Mikrowellen- und/oder Radiowellenfrequenzgenerators **MW/RF-AWFG** erzeugten Wellenformen des Mikrowellen- und/oder Radiowellenfrequenzgenerators **MW/RF-AWFG.**

Hierdurch manipuliert die elektromagnetische Strahlung entsprechend der vom Mikrowellen- und/oder Radiowellenfrequenzgenerators **MW/RF-AWFG** erzeugten Wellenformen des Mikrowellen- und/oder Radiowellenfrequenzgenerators **MW/RF-AWFG** den Quantenzustand der Quantenpunkte **NV1, NV2, NV3** und der Kernquantenpunkte **CI1₁, CI1₂, CI1₃, CI2₁, CI2₂, CI2₃, CI3₁, CI3₂, CI3₃** im Substrat **D.** Hierdurch kann der Rechnerkern **CPU** der Steuervorrichtung **µC** beispielsweise über die interne Datenschnittstelle **MDBIF** und den Steuerdatenbus **SDB** den Quantenzustand der Quantenpunkte **NV1, NV2, NV3** und der Kernquantenpunkte **CI1₁, CI1₂, CI1₃, CI2₁, CI2₂, CI2₃, CI3₁, CI3₂, CI3₃** im Substrat **D** manipulieren. Der Rechnerkern **CPU** der Steuervorrichtung **µC** kann typischerweise über die interne Datenschnittstelle **MDBIF** und den Steuerdatenbus **SDB** mittels des Wellenformgenerators **WFG** und des Lichtquellentreibers **LDRV** und der Lichtquelle **LD** ebenfalls aber in anderer Weise den Quantenzustand der Quantenpunkte **NV1, NV2, NV3** und der Kernquantenpunkte **CI1₁, CI1₂, CI1₃, CI2₁, CI2₂, CI2₃, CI3₁, CI3₂, CI3₃** im Substrat **D** manipulieren.

Der Rechnerkern **CPU** der Steuervorrichtung **µC** kann beispielsweise optional über die interne Datenschnittstelle **MDBIF** und den Steuerdatenbus **SDB** eine Kühlvorrichtung **KV** des Substrats **D** und ggf. in der Figur 1 nicht eingezeichnete Hilfsvorrichtungen der Kühlvorrichtung **KV** des Substrats **D** steuern und deren Statusinformationen erfassen und auslesen. Bei der Hilfsvorrichtung der Kühlvorrichtung **KV** des Substrats **D** kann es sich beispielsweise um ein sogenanntes Closed Loop Helium Gas Cooling-System **HeCLCS** handeln, das Helium als Kühlmittel verwendet. Der Rechnerkern **CPU** der Steuervorrichtung **µC** kann beispielsweise optional über die interne Datenschnittstelle **MDBIF** und den Steuerdatenbus **SDB** das Closed Loop Helium Gas Cooling-System **HeCLCS** steuern. Beispielsweise kann dieses Kühlmittel eine Kühlfläche als Kühlvorrichtung **KV** durchströmen, wobei auf der Oberfläche der als Kühlvorrichtung **KV** dienenden Kühlfläche das Substrat **D** thermisch leitfähig befestigt ist, und wobei hierdurch das Substrat durch das Closed Loop Helium Gas Cooling-System **HeCLCS** gekühlt wird. Optional positionieren die translatorische Positioniervorrichtung **XT** in X-Richtung und die translatorische Positioniervorrichtung **YT** in Y-Richtung den Verbund aus der Kühlvorrichtung **KV** und dem Substrat **D.**

Der Rechnerkern **CPU** der Steuervorrichtung **µC** kann optional über die interne Datenschnittstelle **MDBIF** und den Steuerdatenbus **SDB** eine Ladevorrichtung **LDV** steuern und Betriebsparameter und Daten der Ladevorrichtung **LDV** auslesen. Ein solcher Betriebsparameter kann beispielsweise der Spannungswert der Netzspannung des elektrischen Versorgungsnetzes sein, das die Ladevorrichtung **LDV** mit elektrischer Energie versorgt.

Der Rechnerkern **CPU** der Steuervorrichtung **µC** kann beispielsweise optional über die interne Datenschnittstelle **MDBIF** und den Steuerdatenbus **SDB** eine Trennvorrichtung **TS** steuern und Betriebsparameter und Daten der Trennvorrichtung **TS** auslesen. Beispielsweise kann der Rechnerkern **CPU** der Steuervorrichtung **µC** die Ausgänge der Ladevorrichtung **LDV** von der ersten Energiereserve **BENG** und/oder der zweiten Energiereserve **BENG2** trennen, sodass diese, zum Ersten die erste Energiereserve **BENG** und/oder die zweite Energiereserve **BENG2** nicht mehr mit elektrischer Energie lädt, und zum Zweiten die übrigen Vorrichtungsteile des Quantencomputers nicht oder nur noch wesentlich wenigerstört. Beispielsweise kann der Rechnerkern **CPU** der Steuervorrichtung µC die Ausgänge der Ladevorrichtung **LDV** mit der ersten Energiereserve **BENG** und/oder mit der zweiten Energiereserve **BENG2** verbinden, sodass diese die erste Energiereserve **BENG** und/oder die zweite Energiereserve **BENG2** mit elektrischer Energie lädt.

Der Rechnerkern **CPU** der Steuervorrichtung **µC** kann beispielsweise optional über die interne Datenschnittstelle **MDBIF** und den Steuerdatenbus **SDB** die erste Energiereserve **BENG** steuern und/oder Betriebsparameter und Daten der ersten Energiereserve **BENG** auslesen. Beispielsweise kann die erste Energiereserve **BENG** mehrere Untermodule umfassen, die der Rechnerkern **CPU** der Steuervorrichtung **µC** überwacht. Beispielsweise kann der Rechnerkern **CPU** der Steuervorrichtung **µC** die Temperatur dieser Untermodule und/oder den Druck in diesen Untermodulen und/oder den Ladezustand dieser Untermodule erfassen. Hierzu umfasst die erste Energiereserve **BENG** optional geeignete Sensoren, deren Werte der Rechnerkern **CPU** der Steuervorrichtung **µC** erfassen kann. Im Fehlerfall kann dadurch der Rechnerkern **CPU** der Steuervorrichtung **µC** diesen Fehlerfall an den erfassten Parametern dieser Untermodule erfassen und fehlerhafte Untermodule aus dem Verband herausschalten und die entstehende Lücke überbrücken. Hierzu umfasst die erste Energiereserve **BENG** optional geeignete Schalter und/oder Umschalter, deren Schaltzustand der Rechnerkern **CPU** der Steuervorrichtung **µC** beeinflussen kann. Optional kann hierdurch der Rechnerkern **CPU** der Steuervorrichtung **µC** die Energieversorgung einer ersten Energieaufbereitungsvorrichtung **SRG** beeinflussen.

Der Rechnerkern **CPU** der Steuervorrichtung **µC** kann optional über die interne Datenschnittstelle **MDBIF** und den Steuerdatenbus **SDB** die erste Energieaufbereitungsvorrichtung **SRG** steuern und/oder Betriebsparameter und Daten der ersten Energieaufbereitungsvorrichtung **SRG** erfassen und auslesen. Typischerweise kann hierdurch der Rechnerkern **CPU** der Steuervorrichtung **µC** die Energieversorgung der übrigen Vorrichtungsteile des Quantencomputers **QC** überwachen und steuern.

### Sofern DMA-Zugriffe der übrigen Vorrichtungsteile des Quantencomputers QC zulässig sind, können diese optional über die interne Datenschnittstelle MDBIF und den Steuerdatenbus SDB mittels eines DMA-Zugriffs auf die Steuervorrichtung µC und/oder den Speicher RAM, NVM der Steuervorrichtung µC und/oder den Rechnerkern CPU und/oder die Steuervorrichtung µC und die Datenschnittstelle DBIF und den externen Datenbus EXTDB auf Vorrichtungen außerhalb des Quantencomputers QC zugreifen.

Die ggf. vorhandenen internen Steuerrechner von Vorrichtungsteilen des Quantencomputers **QC** können optional über die Steuervorrichtung **µC** und die Datenschnittstelle **DBIF** und den externen Datenbus **EXTDB** mit Vorrichtungen außerhalb des Quantencomputers **QC** kommunizieren und mit diesen externen Vorrichtungen Daten austauschen. Bei solchen externen Vorrichtungen kann es sich beispielsweise um Steuergeräte eines Kraftfahrzeugs **Kfz** oder der gleichen handeln. Insbesondere ist ein Datenaustausch mit dem Internet oder einem vergleichbaren Datennetzwerk mit einer Vielzahl von Rechnersystemen denkbar. Zu diesen Rechnersystemen kann beispielsweise eine verlegbare zentrale Steuereinheit **ZSE** eines verlegbaren Quantencomputersystems **QUSYS** gehören, deren Teil der verlegbare Quantencomputer **QC** sein kann.

Der Rechnerkern **CPU** der Steuervorrichtung **µC** kann optional den flüchtigen Speicher **RAM** der Steuervorrichtung **µC** mit Daten beschreiben und lesen. Typischerweise umfasst der Dateninhalt des flüchtigen Speichers **RAM** Programmdaten und/oder Betriebsdaten und/oder Programmbefehle.

Der Rechnerkern **CPU** der Steuervorrichtung **µC** kann optional die Daten des nicht flüchtigen Speichers **NVM** der Steuervorrichtung **µC** lesen. Optional umfasst der nicht flüchtige Speicher **NVM** der Steuervorrichtung **µC** einen beschreibbaren nicht flüchtigen Speicher wie einen Flash-Speicher. Typischerweise umfasst der Dateninhalt des nicht flüchtigen Speichers **NVM** Programmdaten und/oder Betriebsdaten und/oder Programmbefehle. Optional umfasst der Dateninhalt eines nicht flüchtigen und beschreibbaren Speichers **NVM** die Parameter der Resonanzfrequenzen für die Ansteuerung der Kernquantenbits **CI1₁, CI1₂, CI1₃, CI2₁, CI2₂, CI2₃, CI3₁**, **CI3₂, CI3₃**.

Der Rechnerkern **CPU** der Steuervorrichtung **µC** kann optional den Speicher **RAM, NVM** der Steuervorrichtung **µC** lesen, und/oder mit Daten beschreiben.

Der Rechnerkern **CPU** der Steuervorrichtung **µC** kann optional über die Datenschnittstelle **DBIF** und den externen Datenbus **EXTDB** auf ein übergeordnetes Rechnersystem, beispielsweise eine zentrale Steuereinheit **ZSE,** und/oder die Steuervorrichtungen anderer Quantencomputer **QC1** bis **QC16** zugreifen.

Der Rechnerkern **CPU** der Steuervorrichtung **µC** kann optional über die interne Datenschnittstelle **MDBIF** auf den Steuerdatenbus **SDB** und über diesen Steuerdatenbus **SDB** auf andere Vorrichtungsteile des verlegbaren Quantencomputers **QC** zugreifen.

Der Rechnerkern **CPU** der Steuervorrichtung **µC** kann optional über die interne Datenschnittstelle **MDBIF** und den Steuerdatenbus **SDB** den Lichtquellentreiber **LDRV** steuern und/oder Betriebsparameter und Daten des Lichtquellentreibers **LDRV** auslesen. Die Steuerungsdaten können beispielsweise die Leuchtintensität und andere einstellbare Betriebsparameter umfassen. Die Daten, die der Rechnerkern **CPU** der Steuervorrichtung **µC** über die interne Datenschnittstelle **MDBIF** und den Steuerdatenbus **SDB** aus dem Lichtquellentreiber **LDRV** auslesen kann, können beispielsweise Stromstärken, interne Werte, elektrische Spannungen, Betriebstemperaturen, Identifikationsdaten, wie beispielsweise die Seriennummer etc., und daraus abgeleitete Werte umfassen. Typischerweise kann hierdurch der Rechnerkern **CPU** der Steuervorrichtung **µC** den Lichtquellentreiber **LDRV** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** den Wellenformgenerator **WFG** steuern und/oder Betriebsparameter und Daten des Wellenformgenerators **WFG** auslesen. Die Steuerungsdaten können beispielsweise die Daten der zu erzeugenden Wellenform des Sendesignals **S5** des Wellenformgenerators **WFG** und/oder die Geschwindigkeit/Frequenz der Erzeugung der so vorgegebenen Wellenform des erzeugten Sendesignals **S5** des Wellenformgenerators **WFG** und andere einstellbare Betriebsparameter des Wellenformgenerators **WFG** umfassen. Die Daten, die der Rechnerkern **CPU** der Steuervorrichtung **µC** über die interne Datenschnittstelle **MDBIF** und den Steuerdatenbus **SDB** aus dem Wellenformgenerator **WFG** auslesen kann, können beispielsweise Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** den Wellenformgenerator **WFG** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** den Verstärker V steuern und/oder Betriebsparameter und Daten des Verstärker V auslesen. Die Steuerungsdaten können beispielsweise die Verstärkung und/oder Filterparameter des Verstärkers V und andere einstellbare Betriebsparameter des Verstärkers V umfassen. Die Daten, die der Rechnerkern **CPU** der Steuervorrichtung **µC** über die interne Datenschnittstelle **MDBIF** und den Steuerdatenbus **SDB** aus dem Verstärker **V** auslesen kann, können beispielsweise interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** den Verstärker **V** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** den Fotodetektor **PD** steuern, und/oder Betriebsparameter und Daten des Fotodetektor **PD** auslesen. Die Steuerungsdaten können beispielsweise die Verstärkung und/oder Filterparameter eines möglicherweise vorhandenen und in den Fotodetektor **PD** integrierten Ansteuerschaltkreises sein, der das eigentliche photonensensitive Element des Fotodetektors **PD** ansteuert und die für die Detektion von Photonen relevanten Werte erfasst und in ein auslesbares Signal wandelt. Die Daten, die der Rechnerkern **CPU** der Steuervorrichtung **µC** über die interne Datenschnittstelle **MDBIF** und den Steuerdatenbus **SDB** aus dem Fotodetektor **PD** auslesen kann, können beispielsweise interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** den Fotodetektor **PD** des Quantencomputers **QC** überwachen und steuern. Im einfachsten Fall kann es sich aber auch um einen vollkommen passiven Fotodetektor **PD** ohne jede Intelligenz handeln, der lediglich ein analoges Ausgangssignal an den Verstärker **V** übergibt.

Der Rechnerkern **CPU** der Steuervorrichtung **µC** kann beispielsweise optional über die interne Datenschnittstelle **MDBIF** und den Steuerdatenbus **SDB** und eine erste Kameraschnittstelle **CIF** die erste Kamera **CM1** steuern und/oder Betriebsparameter und Daten der ersten Kamera **CM1** auslesen. Die Steuerungsdaten können beispielsweise Betriebsparameter der ersten Kamera **CM1** wie Helligkeit, Kontrast, Farbeinstellungen, Blenden, Fokus etc., und andere einstellbare Betriebsparameter der ersten Kamera **CM1** umfassen. Die Daten, die der Rechnerkern **CPU** der Steuervorrichtung **µC** über die interne Datenschnittstelle **MDBIF** und den Steuerdatenbus **SDB** aus der ersten Kamera **CM1** auslesen kann, können beispielsweise die Bilddaten, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die erste Kamera **CM1** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** die erste Kameraschnittstelle **CIF** steuern und/oder Betriebsparameter und Daten der ersten erste Kameraschnittstelle **CIF** auslesen. Die Steuerungsdaten können beispielsweise Betriebsparameter der ersten Kameraschnittstelle **CIF**, wie Speichertiefe, DMA-Zugriffsparameter und andere einstellbare Betriebsparameter der ersten Kameraschnittstelle **CIF** umfassen. Die Daten, die der Rechnerkern **CPU** der Steuervorrichtung **µC** über die interne Datenschnittstelle **MDBIF** und den Steuerdatenbus **SDB** aus der ersten Kameraschnittstelle **CIF** auslesen kann, können beispielsweise die Bilddaten der ersten Kamera **CM1,** interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die erste Kameraschnittstelle **CIF** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** und eine zweite Kameraschnittstelle **CIF2** die zweite Kamera **CM2** steuern und/oder Betriebsparameter und Daten der zweiten Kamera **CM2** auslesen. Die Steuerungsdaten können beispielsweise Betriebsparameter der zweiten Kamera **CM2** wie Helligkeit, Kontrast, Farbeinstellungen, Blenden, Fokus etc. der zweiten Kamera **CM2** und andere einstellbare Betriebsparameter der zweiten Kamera **CM2** umfassen. Die Daten, die der Rechnerkern **CPU** der Steuervorrichtung **µC** über die interne Datenschnittstelle **MDBIF** und den Steuerdatenbus **SDB** aus der zweiten Kamera **CM2** auslesen kann, können beispielsweise die Bilddaten, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die zweite Kamera **CM2** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** die zweite Kameraschnittstelle **CIF2** steuern und/oder Betriebsparameter und Daten der zweiten Kameraschnittstelle **CIF2** auslesen. Die Steuerungsdaten können beispielsweise Betriebsparameter der zweiten Kameraschnittstelle **CIF2** wie Speichertiefe, DMA-Zugriffsparameter und andere einstellbare Betriebsparameter der zweiten Kameraschnittstelle **CIF2** umfassen. Die Daten, die der Rechnerkern **CPU** der Steuervorrichtung **µC** über die interne Datenschnittstelle **MDBIF** und den Steuerdatenbus **SDB** aus der zweiten Kameraschnittstelle **CIF2** auslesen kann, können beispielsweise die Bilddaten der zweiten Kamera **CM2,** interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die zweite Kameraschnittstelle **CIF2** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** eine Leuchte mit einem Leuchtmittel **LM** zur Beleuchtung des Sichtfeldes der zweiten Kamera **CM2** steuern und/oder Betriebsparameter und Daten der Leuchte mit dem Leuchtmittel **LM** auslesen. Die Steuerungsdaten können beispielsweise Betriebsparameter der Leuchte mit dem Leuchtmittel **LM** wie Helligkeit, Ausrichtung und andere einstellbare Betriebsparameter der Leuchte mit dem Leuchtmittel **LM** umfassen. Die Daten, die der Rechnerkern **CPU** der Steuervorrichtung **µC** über die interne Datenschnittstelle **MDBIF** und den Steuerdatenbus **SDB** aus der Leuchte mit dem Leuchtmittel **LM** auslesen kann, können interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die Leuchte mit dem Leuchtmittel **LM** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** einen oder mehrere Temperatursensoren **ST** steuern und/oder Betriebsparameter und Daten des einen oder der mehreren Temperatursensoren **ST** auslesen. Die Steuerungsdaten können beispielsweise Betriebsparameter des einen oder der mehreren Temperatursensoren **ST** und andere einstellbare Betriebsparameter des einen oder der mehreren Temperatursensoren **ST** umfassen. Die Daten, die der Rechnerkern **CPU** der Steuervorrichtung **µC** über die interne Datenschnittstelle **MDBIF** und den Steuerdatenbus **SDB** aus dem einen oder den mehreren Temperatursensoren **ST** auslesen kann, können Temperaturdaten, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** den einen oder die mehreren Temperatursensoren **ST** des Quantencomputers **QC** und des Quantencomputers **QC** selbst überwachen und steuern.

Der eine Temperatursensor **ST** bzw. die mehreren Temperatursensoren **ST** können als temperatursensitive Sensorelemente beispielsweise NTC-Widerstände, PTC-Widerstände, PN-Übergänge, Thermoelemente (z. B. Platin/Rhodium Thermoelemente) oder dergleichen und/oder Auswerteelektroniken umfassen.

Insbesondere wenn der Quantencomputer **QC** in heißen oder sehr kalten Umgebungen eingesetzt werden soll, kann der Quantencomputer **QC** optional eine oder mehrere Heizvorrichtungen und/oder Kühlvorrichtungen für den Quantencomputer **QC** als Ganzes aufweisen. Sofern der Quantencomputer **QC** in heißen oder sehr kalten Umgebungen eingesetzt werden soll, kann dann der Rechnerkern **CPU** der Steuervorrichtung **µC** beispielsweise optional über die interne Datenschnittstelle **MDBIF** und den Steuerdatenbus **SDB** diese eine oder mehreren Heizvorrichtungen für den Quantencomputer **QC** und/oder diese eine oder mehreren Kühlvorrichtungen für den Quantencomputer **QC** als Ganzes steuern und/oder Betriebsparameter und Daten dieser einen oder mehreren Heizvorrichtungen und/oder Kühlvorrichtungen für den Quantencomputer **QC** auslesen. Die Steuerungsdaten können beispielsweise Betriebsparameter der einen oder der mehreren Heizvorrichtungen und/oder einer oder mehreren Kühlvorrichtungen für den Quantencomputer **QC** und andere einstellbare Betriebsparameter der einen oder der mehreren Heizvorrichtungen und/oder Kühlvorrichtungen für den Quantencomputer **QC** umfassen. Die Daten, die der Rechnerkern **CPU** der Steuervorrichtung **µC** über die interne Datenschnittstelle **MDBIF** und den Steuerdatenbus **SDB** aus dem einen oder den mehreren Heizvorrichtungen und/oder Kühlvorrichtungen für den Quantencomputer **QC** auslesen kann, können Temperaturdaten, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die eine oder die mehreren Heizvorrichtungen und/oder Kühlvorrichtungen für den Quantencomputer **QC** überwachen und steuern.

Der Rechnerkern **CPU** der Steuervorrichtung **µC** kann optional über die interne Datenschnittstelle **MDBIF** und den Steuerdatenbus **SDB** den Mikrowellen- und/oder Radiowellenfrequenzgenerator **MW/RF-AWFG** zur Erzeugung weitestgehend frei vorgebbarer Wellenformen steuern und/oder Betriebsparameter und Daten des Mikrowellen- und/oder Radiowellenfrequenzgenerators **MW/RF-AWFG** auslesen. Die Steuerungsdaten können beispielsweise Betriebsparameter des Mikrowellen- und/oder Radiowellenfrequenzgenerators **MW/RF-AWFG** wie Wellenform, Wellenfrequenz, Amplitude, und zeitliche Verzögerung gegenüber einem Synchronisationssignal, wie beispielsweise dem Sendesignal **S5,** und andere einstellbare Betriebsparameter des Mikrowellen- und/oder Radiowellenfrequenzgenerators **MW/RF-AWFG** umfassen. Die Daten, die der Rechnerkern **CPU** der Steuervorrichtung **µC** über die interne Datenschnittstelle **MDBIF** und den Steuerdatenbus **SDB** aus dem Mikrowellen- und/oder Radiowellenfrequenzgenerator **MW/RF-AWFG** auslesen kann, können interne Stromstärken, interne Werte, elektrische Spannungen, Betriebstemperaturen, Identifikationsdaten wie beispielsewise die Seriennummer etc., und daraus abgeleitete Werte etc. umfassen. Typischerweise kann hierdurch der Rechnerkern **CPU** der Steuervorrichtung **µC** den Mikrowellen- und/oder Radiowellenfrequenzgenerator **MW/RF-AWFG** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** und über die Magnetfeldsteuerungen **MFSx, MFSy, MFSz** die Magnetfeldsensoren **MSx, MSy, MSz** steuern und/oder Betriebsparameter und Daten der Magnetfeldsensoren **MSx, MSy, MSz** auslesen. Die Steuerungsdaten können beispielsweise Betriebsparameter der Magnetfeldsensoren **MSx, MSy, MSz** wie Empfindlichkeit, Bestromung und andere einstellbare Betriebsparameter des Mikrowellen- und/oder Radiowellenfrequenzgenerators **MW/RF-AWFG** umfassen. Die Daten, die der Rechnerkern **CPU** der Steuervorrichtung **µC** über die interne Datenschnittstelle **MDBIF** und den Steuerdatenbus **SDB** aus den Magnetfeldsensoren **MSx, MSy, MSz** auslesen kann, können die Magnetfeldmesswerte, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die Magnetfeldsensoren **MSx, MSy, MSz** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** die erste Magnetfeldsteuerung **MFSx** steuern und/oder Betriebsparameter und Daten der ersten Magnetfeldsteuerung **MFSx** auslesen. Die Steuerungsdaten können beispielsweise Betriebsparameter der ersten Magnetfeldsteuerung **MFSx** wie die einzustellende Stärke der magnetischen Flussdichte Bₓ in Richtung der ersten Richtung, die einzustellende Bestromung des ersten Magnetfelderzeugungsmittels **MGx** und andere einstellbare Betriebsparameter der ersten Magnetfeldsteuerung **MFSx** umfassen. Die Daten, die der Rechnerkern **CPU** der Steuervorrichtung **µC** über die interne Datenschnittstelle **MDBIF** und den Steuerdatenbus **SDB** aus der ersten Magnetfeldsteuerung **MFSx** auslesen kann, können die Magnetfeldmesswerte, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die erste Magnetfeldsteuerung **MFSx** des Quantencomputers **QC** überwachen und steuern. Der Rechnerkern **CPU** der Steuervorrichtung **µC** kann beispielsweise optional über die interne Datenschnittstelle **MDBIF** und den Steuerdatenbus **SDB** die zweite Magnetfeldsteuerung **MFSy** steuern und/oder Betriebsparameter und Daten der zweiten Magnetfeldsteuerung **MFSy** auslesen. Die Steuerungsdaten können beispielsweise Betriebsparameter der zweiten Magnetfeldsteuerung **MFSy** wie die einzustellende Stärke der magnetischen Flussdichte B_{y} in Richtung der zweiten Richtung, die einzustellende Bestromung des zweiten Magnetfelderzeugungsmittels **MGy** und andere einstellbare Betriebsparameter der zweiten Magnetfeldsteuerung **MFSy** umfassen. Die Daten, die der Rechnerkern **CPU** der Steuervorrichtung **µC** über die interne Datenschnittstelle **MDBIF** und den Steuerdatenbus **SDB** aus der zweiten Magnetfeldsteuerung **MFSy** auslesen kann, können die Magnetfeldmesswerte, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die zweite Magnetfeldsteuerung **MFSy** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** die dritte Magnetfeldsteuerung **MFSz** steuern und/oder Betriebsparameter und Daten der dritten Magnetfeldsteuerung **MFSz** auslesen. Die Steuerungsdaten können beispielsweise Betriebsparameter der dritten Magnetfeldsteuerung **MFSz** wie die einzustellende Stärke der magnetischen Flussdichte B_{z} in Richtung der dritten Richtung, die einzustellende Bestromung des dritten Magnetfelderzeugungsmittels **MGy** und andere einstellbare Betriebsparameter der dritten Magnetfeldsteuerung **MFSz** umfassen. Die Daten, die der Rechnerkern **CPU** der Steuervorrichtung **µC** über die interne Datenschnittstelle **MDBIF** und den Steuerdatenbus **SDB** aus der dritten Magnetfeldsteuerung **MFSz** auslesen kann, können die Magnetfeldmesswerte, interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die dritte Magnetfeldsteuerung **MFSz** des Quantencomputers **QC** überwachen und steuern. Der Rechnerkern **CPU** der Steuervorrichtung **µC** kann beispielsweise optional über die interne Datenschnittstelle **MDBIF** und den Steuerdatenbus **SDB** die erste Energieaufbereitungsvorrichtung **SRG** steuern und/oder Betriebsparameter und Daten der ersten Energieaufbereitungsvorrichtung **SRG** auslesen. Die Steuerungsdaten können beispielsweise Betriebsparameter der ersten Energieaufbereitungsvorrichtung **SRG** wie die an andere Vorrichtungsteile zu liefernde Spannungswerte und maximale Stromstärken und andere einstellbare Betriebsparameter umfassen. Die Daten, die der Rechnerkern **CPU** der Steuervorrichtung **µC** über die interne Datenschnittstelle **MDBIF** und den Steuerdatenbus **SDB** aus der ersten Energieaufbereitungsvorrichtung **SRG** auslesen kann, können interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die erste Energieaufbereitungsvorrichtung **SRG** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** die zweite Energieaufbereitungsvorrichtung **SRG2** steuern und/oder Betriebsparameter und Daten der zweiten Energieaufbereitungsvorrichtung **SRG2** auslesen. Die Steuerungsdaten können beispielsweise Betriebsparameter der zweiten Energieaufbereitungsvorrichtung **SRG2** wie die an andere Vorrichtungsteile zu liefernde Spannungswerte und maximale Stromstärken und andere einstellbare Betriebsparameter der zweiten Energieaufbereitungsvorrichtung **SRG2** umfassen. Die Daten, die der Rechnerkern **CPU** der Steuervorrichtung **µC** über die interne Datenschnittstelle **MDBIF** und den Steuerdatenbus **SDB** aus der zweiten Energieaufbereitungsvorrichtung **SRG2** auslesen kann, können interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die zweite Energieaufbereitungsvorrichtung **SRG2** des Quantencomputers **QC** überwachen und steuern.

Der Rechnerkern **CPU** der Steuervorrichtung **µC** kann optional über die interne Datenschnittstelle **MDBIF** und den Steuerdatenbus **SDB** die Energiereserve **BENG** steuern und/oder Betriebsparameter und Daten der Energiereserve **BENG** auslesen. Sofern die Energiereserve **BENG** über eine eigene Steuer- und Überwachungsvorrichtung verfügt, kann der Rechnerkern **CPU** der Steuervorrichtung **µC** beispielsweise optional über die interne Datenschnittstelle **MDBIF** und den Steuerdatenbus **SDB** Steuerungsdaten an diese Steuer- und Überwachungsvorrichtung der Energiereserve **BENG** senden. Die Steuerungsdaten können beispielsweise Betriebsparameter der Energiereserve **BENG,** wie maximale Temperaturen etc., umfassen. Die Steuer- und Überwachungsvorrichtung der Energiereserve **BENG** verfügt optional über Mittel, um wichtige, insbesondere sicherheitsrelevante Betriebsparameter der Energiereserve **BENG** zu überwachen. Diese Mittel können Temperatursensoren, Spannungs- und Stromsensoren, oder Drucksensoren zur Messung des Binnendrucks von Batteriezellen, umfassen. Die Daten, die der Rechnerkern **CPU** der Steuervorrichtung **µC** über die interne Datenschnittstelle **MDBIF** und den Steuerdatenbus **SDB** aus der Energiereserve **BENG** auslesen kann, können beispielsweise interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die Energiereserve **BENG** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** die Energiereserve **BENG** steuern und/oder Betriebsparameter und Daten der zweiten Energiereserve **BENG2** auslesen. Sofern die zweite Energiereserve **BENG2** über eine eigene Steuer- und Überwachungsvorrichtung verfügt, kann der Rechnerkern **CPU** der Steuervorrichtung **µC** beispielsweise optional über die interne Datenschnittstelle **MDBIF** und den Steuerdatenbus **SDB** Steuerungsdaten an diese Steuer- und Überwachungsvorrichtung der zweiten Energiereserve **BENG2** senden. Die Steuerungsdaten können beispielsweise Betriebsparameter der zweiten Energiereserve **BENG2,** wie maximale Temperaturen etc., umfassen. Die Steuer- und Überwachungsvorrichtung der zweiten Energiereserve **BENG2** verfügt optional über Mittel, um wichtige, insbesondere sicherheitsrelevante Betriebsparameter der zweiten Energiereserve **BENG2** zu überwachen. Diese Mittel können Temperatursensoren, Spannungs- und Stromsensoren oder Drucksensoren zur Messung des Binnendrucks von Batteriezellen umfassen. Die Daten, die der Rechnerkern **CPU** der Steuervorrichtung **µC** über die interne Datenschnittstelle **MDBIF** und den Steuerdatenbus **SDB** aus der zweiten Energiereserve **BENG2** auslesen kann, können beispielsweise interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die zweite Energiereserve **BENG2** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** die Trennvorrichtung **TS** steuern und/oder Betriebsparameter und Daten der Trennvorrichtung **TS** auslesen. Sofern die Trennvorrichtung **TS** über eine eigene Steuer- und Überwachungsvorrichtung verfügt, kann der Rechnerkern **CPU** der Steuervorrichtung **µC** beispielsweise optional über die interne Datenschnittstelle **MDBIF** und den Steuerdatenbus **SDB** Steuerungsdaten an diese Steuer- und Überwachungsvorrichtung der Trennvorrichtung **TS** senden. Die Steuerungsdaten können beispielsweise Betriebsparameter der Trennvorrichtung **TS** wie Schließzustand (verbunden/getrennt), maximale Temperaturen etc. umfassen. Die Steuer- und Überwachungsvorrichtung der Trennvorrichtung **TS** verfügt optional über Mittel, um wichtige, insbesondere sicherheitsrelevante Betriebsparameter der Trennvorrichtung **TS** zu überwachen. Diese Mittel können Temperatursensoren, Spannungs- und Stromsensoren umfassen. Die Daten, die der Rechnerkern **CPU** der Steuervorrichtung **µC** über die interne Datenschnittstelle **MDBIF** und den Steuerdatenbus **SDB** aus der Trennvorrichtung **TS** auslesen kann, können beispielsweise interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die Trennvorrichtung **TS** des Quantencomputers **QC** überwachen und steuern.

Der Rechnerkern **CPU** der Steuervorrichtung **µC** kann beispielsweise optional über die interne Datenschnittstelle **MDBIF** und den Steuerdatenbus **SDB** die Ladevorrichtung **LDV** steuern und/oder Betriebsparameter und Daten der Ladevorrichtung **LDV** auslesen. Sofern die Ladevorrichtung **LDV** über eine eigene Steuer- und Überwachungsvorrichtung verfügt, kann der Rechnerkern **CPU** der Steuervorrichtung **µC** beispielsweise optional über die interne Datenschnittstelle **MDBIF** und den Steuerdatenbus **SDB** Steuerungsdaten and diese Steuer- und Überwachungsvorrichtung der Ladevorrichtung **LDV** senden. Die Steuerungsdaten können beispielsweise Betriebsparameter der Ladevorrichtung **LDV** wie Netzspannung der Energieversorgung **PWR** der Ladevorrichtung **LDV,** einzustellende Ausgangsspannungen der Ladevorrichtung **LDV,** maximale Temperaturen etc. umfassen. Die Steuer- und Überwachungsvorrichtung der Trennvorrichtung **TS** verfügt optional über Mittel, um wichtige, insbesondere sicherheitsrelevante Betriebsparameter der Ladevorrichtung **LDV** zu überwachen. Diese Mittel können Temperatursensoren, Spannungs- und Stromsensoren umfassen. Die Daten, die der Rechnerkern **CPU** der Steuervorrichtung **µC** über die interne Datenschnittstelle **MDBIF** und den Steuerdatenbus **SDB** aus der Ladevorrichtung **LDV** auslesen kann, können beispielsweise die tatsächliche Netzspannung der Energieversorgung **PWR** der Ladevorrichtung **LDV,** tatsächlich eingestellte Ausgangsspannungen der Ladevorrichtung **LDV,** interne Stromstärken, interne Werte, elektrische Spannungen, Betriebstemperaturen, Identifikationsdaten wie beispielsweise die Seriennummer etc., und daraus abgeleitete Werte umfassen. Typischerweise kann hierdurch der Rechnerkern **CPU** der Steuervorrichtung **µC** die Ladevorrichtung **LDV** des Quantencomputers **QC** überwachen und steuern.

Der verlegbare Quantencomputer **QC** gemäß der in Figur 1 gezeigten optionalen Ausführungsform weist optional eine Quantencomputerüberwachungsvorrichtung **QUV** auf, die den Quantencomputer QC überwacht, während der Quantencomputer **QC** ein Quantencomputerprogramm mit einem Quantencomputerprogrammablauf ausführt, das optional in seinem Speicher **RAM, NVM** abgelegt ist. Die hier vorgelegte Schrift verweist hierzu auf die noch unveröffentlichte deutsche Patentanmeldung DE 10 2021 110 964.7 und deren ggf. durch Prioritätsinanspruchnahme entstandenen Nachanmeldungen. Diese Quantencomputerüberwachungsvorrichtung **QUV** überwacht den korrekten Quantencomputerprogrammablauf des Quantencomputerprogramms des Quantencomputers QC. Optional überwacht die Quantencomputerüberwachungsvorrichtung **QUV** zumindest den Wert und/oder Werteverlauf zumindest eines, besser mehrerer und optimal aller der folgenden Betriebsparameter:
- einen oder mehrere Werte von Betriebsspannungen von Vorrichtungsteilen des Quantencomputers **QC,**
- einen oder mehrere Werte von Stromaufnahmen von Vorrichtungsteilen des Quantencomputers **QC,**
- den Prozessortakt des Rechnerkerns **CPU** der Steuervorrichtung **µC** des Quantencomputers **QC** und/oder dessen Frequenz,
- die Prozessortakte anderer Vorrichtungsteile des Quantencomputers **QC** und/oder deren Frequenz,
- die Lichtabgabe der Lichtquelle **LD** des Quantencomputers **QC,** insbesondere die Intensität der Pumpstrahlung **LB** der Lichtquelle **LD,**
- die Signalerzeugung des Wellenformgenerators **WFG** des Quantencomputers **QC,**
- die Funktionstüchtigkeit der Datenschnittstelle **DBIF,**
- die Funktionstüchtigkeit der internen Datenschnittstelle **MDBIF,**
- die Funktionstüchtigkeit des Lichtquellentreibers **LDRV,**
- die Funktionstüchtigkeit des Verstärkers **V,**
- die Funktionstüchtigkeit des Fotodetektors **PD,**
- die Temperatur mittels eines Temperatursensors **ST,**
- die Funktionstüchtigkeit des Mikrowellen- und/oder Radiowellenfrequenzgenerators **MW/RF-AWFG** zur Erzeugung weitestgehend frei vorgebbarer Wellenformen,
- die Funktionstüchtigkeit der Magnetfeldsensoren **MSx, MSy, MSz,**
- die Funktionstüchtigkeit der Magnetfeldsteuerungen **MFSx, MFSy, MFSz,**
- die Funktionstüchtigkeit der ersten Energieaufbereitungsvorrichtung **SRG,**
- die Funktionstüchtigkeit der zweiten Energieaufbereitungsvorrichtung **SRG2,**
- die Funktionstüchtigkeit der Energiereserve **BENG,**
- die Funktionstüchtigkeit der zweiten Energiereserve **BENG2,**
- die Funktionstüchtigkeit der Trennvorrichtung **TS,**
- die Funktionstüchtigkeit der Ladevorrichtung **LDV,**

- -die Detektionsfähigkeit von elektromagnetischer Strahlung eines Fotodetektors,
- -die bestimmungsgemäß korrekte Erzeugung elektromagnetischer Felder, insbesondere von Mikrowellenfeldern und/oder Radiowellenfeldern durch eine Vorrichtung des Quantencomputers **QC** zur Manipulation eines oder mehrerer Quantenbits **QUB,**
- -den komplexen und/oder realen und/oder imaginären Leitwert einer Leitung und der Mikrowellen- und/oder Radiowellenantenne **MWA,** die Teil der Vorrichtung des Quantencomputers **QC** zur Manipulation eines oder mehrerer Quantenpunkte **NV1, NV2, NV3** ist.

### Quantencomputerüberwachungsvorrichtung QUV

Optional sind die T2-Zeiten der Quantenpunkte **NV1, NV2, NV3** und der Kernquantenpunkte **CI1₁, CI1₂, CI1₃, CI2₁, CI2₂, CI2₃, CI3₁**, **CI3₂, CI3₃** begrenzt. Daher können zwischen zwei Quantencomputerberechnungen zeitliche Pausen entstehen, in denen eine Quantencomputerüberwachungsvorrichtung **QUV** des Quantencomputers **QC** die Funktionstüchtigkeit der restlichen Bereiche des Quantencomputers **QC** prüfen kann.

Optional führt also der Quantencomputer **QC** seine Quantencomputerberechnungen innerhalb von ersten Zeiträumen aus, die typischerweise kürzer als die T2-Zeiten der der Quantenpunkte **NV1, NV2, NV3** und der Kernquantenpunkte **CI1₁, CI1₂, CI1₃, CI2₁, CI2₂, CI2₃, CI3₁, CI3₂, CI3₃** sind. Die Quantencomputerüberwachungsvorrichtung **QUV** führt Prüfungen der übrigen Vorrichtungsteile des Quantencomputers **QC** optional innerhalb von zweiten Zeiträumen durch. Die ersten Zeiträume sind optional von den zweiten Zeiträumen verschieden. Eine Quantencomputerberechnung im Sinne dieser Schrift umfasst optional zumindest eine Quantenoperation, wie beispielsweise eine Initialisierung eines oder mehrerer Quantenpunkte **NV1, NV2, NV3** und der Kernquantenpunkte **CI1₁, CI1₂, CI1₃, CI2₁, CI2₂, CI2₃, CI3₁, CI3₂, CI3₃** und/oder beispielsweise die Ausführung eines Quanten-Gates wie beispielsweise einer CNOT-Operation oder einer CCNOT-Operation oder eines Hadamard-Gates oder eines π-Pulses oder eines X-Gates etc.

Die hier vorgelegte Schrift verweist in diesem Zusammenhang auf das Buch von Steven Prawer (Herausgeber), Igor Aharonovich (Herausgeber), "Quantum Information Processing with Diamond: Principles and Applications", Woodhead Publishing Series in Electronic and Optical Materials, Band 63, Woodhead Publishing, 8. Mai 2014, ISBN-10 : 0857096567, ISBN-13 : 978-0857096562. Da das Ergebnis einer Quantenberechnung des Quantencomputers **QC** nur mit einer gewissen Statistik korrekte Ergebnisse liefert, sammelt die Quantencomputerüberwachungsvorrichtung **QUV** mehrere der als Antwort des restlichen Quantencomputers **QC** von dem Rechnerkern **CPU** übermittelten Ergebnisse mehrerer gleichartiger Anfragen der Quantencomputerüberwachungsvorrichtung **QUV** zur Durchführung von Quantenberechnungen an den Rechnerkern **CPU** des Quantencomputers **QC** und wertet diese optional statistisch aus. Weicht die ermittelte Statistik der von dem Rechnerkern **CPU** übermittelten Ergebnisse mehrerer gleichartiger Anfragen der Quantencomputerüberwachungsvorrichtung **QUV** zur Durchführung von Quantenberechnungen an den Rechnerkern **CPU** des Quantencomputers **QC** von einer erwarteten Statistik um mehr als x*σ ab, so schließt die Quantencomputerüberwachungsvorrichtung **QUV** typischerweise auf einen Fehler des Quantencomputers **QC.** Hierbei steht σ für die Standardabweichung der statistischen Verteilung des Werts der erwarteten Antwort. Optional liegt x in der Größe zwischen 1 und 4. Je nach Art des Fehlers bei der Ausführung eines Quantencomputerprogramms initiiert die Quantencomputerüberwachungsvorrichtung **QUV** des Quantencomputers **QC** eine Gegenmaßnahme, oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Im einfachsten Fall können beispielhafte Gegenmaßnahmen beispielsweise ein Zurücksetzen und neues Initialisieren des Quantencomputers **QC** und/oder von Vorrichtungsteilen des Quantencomputers **QC** und/oder der Start eines umfangreicheren Selbsttestprogrammes umfassen.

Eine optionale Gegenmaßnahme kann beispielsweise auch eine translatorische Verschiebung des Substrats D gegenüber dem optischen System **OS** sein, sodass andere Quantenpunkte **NV1, NV2, NV3** mit anderen Kernquantenpunkten **CI1₁, CI1₂, CI1₃, CI2₁, CI2₂, CI2₃, CI3₁, CI3₂, CI3₃** die bisher benutzten Quantenpunkte **NV1, NV2, NV3** und Kernquantenpunkte **CI1₁, CI1₂, CI1₃, CI2₁, CI2₂, CI2₃, CI3₁, CI3₂, CI3₃** ersetzten. In dem Fall ist eine Neuinitialisierung des Quantencomputers **QC** unvermeidbar. Insbesondere ermittelt der Rechnerkern **CPU** mittels der Verfahren der DE 10 2020 007 977 B4 die Resonanzfrequenzen zur Ansteuerung und Manipulation und Verschränkung der anderen Quantenpunkte **NV1, NV2, NV3** mit anderen Kernquantenpunkten **CI1₁, CI1₂, CI1₃, CI2₁, CI2₂, CI2₃, CI3₁, CI3₂, CI3₃** und speichert diese optional in seinem nicht flüchtigen Speicher **NVM** und weniger optional in seinem flüchtigen Speicher **RAM** ab. Für die eine translatorische Verschiebung des Substrats **D** gegenüber dem optischen System **OS** nutzt der Rechnerkern **CPU** optional die translatorische Positioniervorrichtung **XT** des Substrats **D** in X-Richtung und die translatorische Positioniervorrichtung des Substrats **D** in Y-Richtung.

Optional kann darüber hinaus die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in dem ersten Zeitraum eine vorgegebene Quantencomputerberechnung durchzuführen und das Ergebnis der Quantencomputerberechnung an die Quantencomputerüberwachungsvorrichtung **QUV** zurück zu übermitteln. Antwortet der verlegbare Quantencomputers **QC** nicht innerhalb eines vorgegebenen Zeitfensters an die Quantencomputerüberwachungsvorrichtung **QUV** des verlegbaren Quantencomputers **QC** so kann ein Fehler vorliegen. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des verlegbaren Quantencomputers **QC** mit Werten, die innerhalb von erwarteten Wertebereichen liegen, so bewertet die Quantencomputerüberwachungsvorrichtung **QUV** des Quantencomputers **QC** die Ausführung als fehlerhaft. Hierfür führt die Quantencomputerüberwachungsvorrichtung **QUV** des verlegbaren Quantencomputers **QC** optional statistische Aufzeichnungen. Entspricht die statistische Verteilung der Inhalte der Antworten des Rechnerkerns **CPU** der Steuerungsvorrichtung **µC** des verlegbaren Quantencomputers **QC** nicht einer erwarteten statistischen Verteilung, so schließt die Quantencomputerüberwachungsvorrichtung **QUV** des verlegbaren Quantencomputers **QC** optional ebenfalls auf einen Fehler. Je nach Art des Fehlers initiiert die Quantencomputerüberwachungsvorrichtung **QUV** des verlegbaren Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des verlegbaren Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Eine solche Prüfung prüft optional auch die bestimmungsgemäß korrekte Erzeugung elektromagnetischer Felder, insbesondere von Mikrowellenfeldern und/oder Radiowellenfeldern durch eine Vorrichtung des verlegbaren Quantencomputers **QC** zur Manipulation eines oder mehrerer Quantenpunkte **NV1, NV2, NV3.** Eine solche Prüfung testet zum Teil auch den komplexen und/oder realen und/oder imaginären Leitwert einer Leitung und der Mikrowellen- und/oder Radiowellenantenne **MWA,** die Teil der Vorrichtung des Quantencomputers **QC** zur Manipulation eines oder mehrerer Quantenpunkte **NV1, NV2, NV3** ist.

Optional kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen einen oder mehrere Werte von Betriebsspannungen von Vorrichtungsteilen des Quantencomputers **QC,** von anderen Vorrichtungsteilen in den zweiten Zeiträumen abzufragen und innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen einen oder mehrere Werte von Stromaufnahmen von Vorrichtungsteilen des Quantencomputers **QC,** von anderen Vorrichtungsteilen des Quantencomputers **QC** in den zweiten Zeiträumen abzufragen und innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Der Taktgeber **OSZ** des Rechnerkerns **CPU** der Steuervorrichtung **µC** des Quantencomputers **QC** versorgt optional den Rechnerkern **CPU** der Steuervorrichtung **µC** des Quantencomputers **QC** mit einem Takt zum Betrieb des Rechnerkerns **CPU** der Steuervorrichtung **µC** des Quantencomputers **QC.** Der Taktgeber **OSZ** des Rechnerkerns **CPU** der Steuervorrichtung **µC** des Quantencomputers **QC** kann darüber hinaus optional weitere Digitalschaltungen und Vorrichtungsteile des Quantencomputers **QC** mit einem Takt zum Betrieb dieser Digitalschaltungen und Vorrichtungsteile des Quantencomputers **QC** versorgen.

Optional kann die Quantencomputerüberwachungsvorrichtung **QUV** des Quantencomputers **QC** den Rechnerkern **CPU** veranlassen, insbesondere während oder nach der Durchführung einer Quantencomputerberechnung in den ersten Zeiträumen und/oder dem zweiten Zeitraum, den Prozessortakt mittels des Rechnerkerns **CPU** der Steuervorrichtung **µC** des Quantencomputers **QC** und/oder dessen Frequenz zu überprüfen. Tritt ein Fehler, wie eine falsche Prozessortaktfrequenz oder ein Prozessortakt-Jitter auf, so bewertet die Quantencomputerüberwachungsvorrichtung **QUV** des Quantencomputers **QC** den Prozessortakt als fehlerhaft. Somit überwacht die Quantencomputerüberwachungsvorrichtung **QUV** des Quantencomputers **QC** optional den Taktgeber **OSZ** des Rechnerkerns **CPU** der Steuervorrichtung **µC** des Quantencomputers **QC**.

Je nach Art eines Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen maximalen Häufigkeitswert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional verfügt die Quantencomputerüberwachungsvorrichtung **QUV** des Quantencomputers **QC** über eine eigene Überwachungstakterzeugung ÜOSZ. Optional versorgt die Überwachungstakterzeugung **ÜOSZ** die Quantencomputerüberwachungsvorrichtung **QUV** des Quantencomputers **QC** typischerweise die Quantencomputerüberwachungsvorrichtung **QUV** des Quantencomputers **QC** mit einem Takt zum Betrieb der Quantencomputerüberwachungsvorrichtung **QUV** des Quantencomputers **QC**. Beispielsweise kann der Rechnerkern **CPU** des Quantencomputers **QC** insbesondere nach der Durchführung einer Quantencomputerberechnung in den zweiten Zeiträumen den Prozessortakt der Quantencomputerüberwachungsvorrichtung **QUV** des Quantencomputers **QC** und/oder dessen Frequenz und/oder die Überwachungstakterzeugung **ÜOSZ** überprüfen. Tritt ein Fehler, wie eine falsche Prozessortaktfrequenz oder ein Prozessortakt-Jitter auf, so bewertet der Rechnerkern **CPU** des Quantencomputers **QC** den Prozessortakt der Quantencomputerüberwachungsvorrichtung **QUV** des Quantencomputers **QC** als fehlerhaft. Somit überwacht der Rechnerkern **CPU** des Quantencomputers **QC** optional die Überwachungstakterzeugung **ÜOSZ** der Quantencomputerüberwachungsvorrichtung **QUV** des Quantencomputers **QC.** Je nach Art eines Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional verfügt die Quantencomputerüberwachungsvorrichtung **QUV** über eine separate Energieversorgung mit optional einer weiteren Energiereserve und einer eigenen Energieaufbereitungsvorrichtung. Optional speisen die Ladevorrichtung **LDV** oder eine andere weitere Ladevorrichtung diese weitere eigene Energieaufbereitungsvorrichtung und/oder das Laden dieser weiteren Energiereserve. Diese optionalen Vorrichtungsteile, die weitere Energiereserve, die weitere Energieaufbereitungsvorrichtung und die weitere Ladevorrichtung und ggf. eine weitere Trennvorrichtung der Quantencomputerüberwachungsvorrichtung **QUV** des Quantencomputers **QC** und deren Verbindungsleitungen sind in der Figur 1 zur besseren Übersicht nicht mehr eingezeichnet.

Optional kann die Quantencomputerüberwachungsvorrichtung **QUV** des Quantencomputers **QC** den Rechnerkern **CPU** veranlassen, insbesondere während oder nach der Durchführung einer Quantencomputerberechnung in den ersten Zeiträumen und/oder dem zweiten Zeitraum Prozessortake anderer Vorrichtungsteile des Quantencomputers **QC** und/oder deren Frequenz zu überprüfen. Tritt ein Fehler, wie eine falsche Prozessortaktfrequenz oder ein Prozessortakt-Jitter auf, so bewertet die Quantencomputerüberwachungsvorrichtung **QUV** des Quantencomputers **QC** den betreffenden Prozessortakt als fehlerhaft. Somit überwacht die Quantencomputerüberwachungsvorrichtung **QUV** des Quantencomputers **QC** optional auch die Taktgeber anderer Vorrichtungsteile des Quantencomputers **QC.** Diese Taktgeber anderer Vorrichtungsteile des Quantencomputers **QC** sind in der Figur 1 zur besseren Übersicht ebenfalls nicht eingezeichnet. Je nach Art eines Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers der anderen Prozessortakte anderer Vorrichtungsteile des Quantencomputers **QC** einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Lichtabgabe der Lichtquelle **LD** des Quantencomputers **QC** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen einen oder mehrere Werte von Monitordioden der Lichtquelle **LD** des Quantencomputers **QC** in den zweiten Zeiträumen abzufragen und innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Ansteuerung der Lichtquelle **LD** des Quantencomputers **QC** durch den Lichtquellentreiber **LDRV** und die Funktionstüchtigkeit des Lichtquellentreibers **LDRV** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen mittels eines Analog-zu-Digitalwandlers oder dergleichen einen oder mehrere Werte der Betriebsparameter des Lichtquellentreibers **LDRV** und/oder einen oder mehrere Werte der Ansteuerungssignale des Lichtquellentreibers **LDRV** für die Lichtquelle **LD** des Quantencomputers **QC** in den zweiten Zeiträumen zu erfassen und innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen, die Erzeugung des Sendesignals **S5** durch den Wellenformgenerator **WFG** des Quantencomputers **QC** zu überprüfen. Hierzu kann der Quantencomputer **QC** und/oder der Wellenformgenerator **WFG** über eine Messvorrichtung, beispielsweise ein digitales Speicheroszilloskop oder eine ähnlich Signalerfassungsvorrichtung umfassen, das den zeitlichen Verlauf des Sendesignals **S5** erfasst. Beispielsweise kann es sich um einen Analog-zu-Digitalwandler handeln, der diesen Signalverlauf des Sendesignals **S5** erfasst. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen den Wellenformgenerator **WFG** des Quantencomputers **QC** in den zweiten Zeiträumen zur Erzeugung eines Sendesignals **S5** veranlassen, und mittels der besagten Signalerfassungsvorrichtung den zeitlichen Verlauf des Sendesignals **S5** zu erfassen. Optional bewertet der Rechnerkern **CPU** den so erfassten zeitlichen Verlauf des Sendesignals **S5** und übermittelt das Ergebnis dieser Bewertung an die Quantencomputerüberwachungsvorrichtung **QUV** als Antwort auf die Anfrage der Quantencomputerüberwachungsvorrichtung **QUV.** Ebenso ist es denkbar, dass der Rechnerkern **CPU** des Quantencomputers **QC** den erfassten Signalverlauf des Sendesignals **S5** an die Quantencomputerüberwachungsvorrichtung **QUV** als Antwort auf die Anfrage der Quantencomputerüberwachungsvorrichtung **QUV** übermittelt und dann die Quantencomputerüberwachungsvorrichtung **QUV** den erfassten Signalverlauf des Sendesignals **S5** bewertet. Die Antwort des Rechnerkerns **CPU** soll dabei innerhalb eines vorgegebenen Zeitfensters an die Quantencomputerüberwachungsvorrichtung **QUV** des Quantencomputers **QC** erfolgen. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Erzeugung des Ausgangsignals mittels des Mikrowellen- und/oder Radiowellenfrequenzgenerators **MW/RF-AWFG** des Quantencomputers **QC** zu überprüfen. Hierzu kann der Quantencomputer **QC** und/oder der Mikrowellen- und/oder Radiowellenfrequenzgenerators **MW/RF-AWFG** des Quantencomputers **QC** eine Messvorrichtung, beispielsweise ein digitales Speicheroszilloskop oder eine ähnlich Signalerfassungsvorrichtung, umfassen, die den zeitlichen Verlauf des Ausgangssignals des Mikrowellen- und/oder Radiowellenfrequenzgenerators **MW/RF-AWFG** des Quantencomputers **QC** erfasst. Beispielsweise kann es sich um einen Analog-zu-Digital-Wandler handeln, der diesen Signalverlauf des Ausgangssignals des Mikrowellen- und/oder Radiowellenfrequenzgenerators **MW/RF-AWFG** des Quantencomputers **QC** erfasst. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen den Mikrowellen- und/oder Radiowellenfrequenzgenerator **MW/RF-AWFG** des Quantencomputers **QC** in den zweiten Zeiträumen zur Erzeugung eines Ausgangssignals mit einer bestimmten Wellenform zu Testzwecken zu veranlassen, und mittels der besagten Signalerfassungsvorrichtung den zeitlichen Verlauf des Ausgangssignals des Mikrowellen- und/oder Radiowellenfrequenzgenerators **MW/RF-AWFG** des Quantencomputers **QC** zu erfassen. Auch kann die Quantencomputerüberwachungsvorrichtung **QUV** des Quantencomputers **QC** den Rechnerkern **CPU** mittels der Anfragebotschaft über den internen Datenbus **INTDB** veranlassen, nach der Durchführung einer Quantencomputerberechnung in den ersten Zeiträumen den Mikrowellen- und/oder Radiowellenfrequenzgenerator **MW/RF-AWFG** des Quantencomputers **QC** in den zweiten Zeiträumen zur Erzeugung eines Ausgangssignals mit einer bestimmten Wellenform zu Testzwecken zu veranlassen und mittels der besagten Signalerfassungsvorrichtung die von der Mikrowellen- und/oder Radiowellenantenne **MWA** reflektierte Leistung nach Betrag und/oder Phase zu erfassen und so auf die Impedanz der Mikrowellen- und/oder Radiowellenantenne **MWA** und ihrer Zuleitung zu schließen und diese zu erfassen. Optional bewertet der Rechnerkern **CPU** den so erfassten zeitlichen Verlauf des Ausgangssignals des Mikrowellen- und/oder Radiowellenfrequenzgenerators **MW/RF-AWFG** des Quantencomputers **QC** und /oder der erfassten Messwerte und übermittelt das Ergebnis dieser Bewertung an die Quantencomputerüberwachungsvorrichtung **QUV** als Antwort auf die Anfrage der Quantencomputerüberwachungsvorrichtung **QUV.** Ebenso ist es denkbar, dass der Rechnerkern **CPU** des Quantencomputers **QC** den erfassten Signalverlauf des Ausgangssignals des Mikrowellen- und/oder Radiowellenfrequenzgenerators **MW/RF-AWFG** des Quantencomputers **QC** an die Quantencomputerüberwachungsvorrichtung **QUV** als Antwort auf die Anfrage der Quantencomputerüberwachungsvorrichtung **QUV** übermittelt und dann die Quantencomputerüberwachungsvorrichtung **QUV** den erfassten Signalverlauf des Ausgangssignals des Mikrowellen- und/oder Radiowellenfrequenzgenerators **MW/RF-AWFG** des Quantencomputers **QC** bewertet. Die Antwort des Rechnerkerns **CPU** soll dabei innerhalb eines vorgegebenen Zeitfensters an die Quantencomputerüberwachungsvorrichtung **QUV** des Quantencomputers **QC** erfolgen. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Funktionstüchtigkeit der Datenschnittstelle **DBIF** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen zur Kommunikation über die Datenschnittstelle **DBIF** und den externen Datenbus **EXTDB** mit einem übergeordneten Rechnersystem zu Testzwecken in den zweiten Zeiträumen zu veranlassen. Bei dem übergeordneten Rechnersystem kann es sich beispielsweise um eine zentrale Steuereinheit **ZSE** handeln. Optional antwortet das übergeordnete Rechnersystem innerhalb einer vorgegebenen Zeitspanne mit einer bewertbaren Antwort. Optional bewertet der Rechnerkern **CPU** die über die Datenschnittstelle **DBIF** und den externen Datenbus **EXTDB** von dem externen Rechnersystem erhaltene Nachricht und übermittelt des Ergebnis dieser Bewertung an die Quantencomputerüberwachungsvorrichtung **QUV** als Antwort auf die Anfrage der Quantencomputerüberwachungsvorrichtung **QUV.** Ebenso ist es denkbar, dass der Rechnerkern **CPU** des Quantencomputers **QC** die über die Datenschnittstelle **DBIF** und den externen Datenbus **EXTDB** von dem externen Rechnersystem erhaltene Nachricht an die Quantencomputerüberwachungsvorrichtung **QUV** als Antwort auf die Anfrage der Quantencomputerüberwachungsvorrichtung **QUV** übermittelt und dann die Quantencomputerüberwachungsvorrichtung **QUV** die über die Datenschnittstelle **DBIF** und den externen Datenbus **EXTDB** von dem externen Rechnersystem erhaltene Nachricht bewertet. Die Antwort des Rechnerkerns **CPU** und des übergeordneten Rechnersystems, beispielsweise der zentralen Steuereinrichtung **ZSE,** soll dabei optional innerhalb eines vorgegebenen Zeitfensters an die Quantencomputerüberwachungsvorrichtung **QUV** des Quantencomputers **QC** erfolgen. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung.

Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung, in den zweiten Zeiträumen die Funktionstüchtigkeit der internen Datenschnittstelle **MDBIF** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen zur Kommunikation über die internen Datenschnittstelle **MDBIF** und den Steuerdatenbus **SDB** mit einem internen Rechnerkern eines anderen Vorrichtungsteils des Quantencomputers **QC** in den zweiten Zeiträumen zu veranlassen. Optional antwortet der interne Rechnerkern des anderen Vorrichtungsteils des Quantencomputers **QC** innerhalb einer vorgegebenen Zeitspanne mit einer bewertbaren Antwort. Optional bewertet der Rechnerkern **CPU** die über die interne Datenschnittstelle **MDBIF** und den internen Datenbus **INTDB** und den Steuerdatenbus **SDB** von dem internen Rechnerkern des anderen Vorrichtungsteils des Quantencomputers **QC** erhaltene Nachricht und übermittelt des Ergebnis dieser Bewertung an die Quantencomputerüberwachungsvorrichtung **QUV** als Antwort auf die Anfrage der Quantencomputerüberwachungsvorrichtung **QUV.** Ebenso ist es denkbar, dass der Rechnerkern **CPU** des Quantencomputers **QC** die über die interne Datenschnittstelle **MDBIF** und den internen Datenbus **INTDB** und den Steuerdatenbus **SDB** von dem internen Rechnerkern des anderen Vorrichtungsteils des Quantencomputers **QC** erhaltene Nachricht an die Quantencomputerüberwachungsvorrichtung **QUV** als Antwort auf die Anfrage der Quantencomputerüberwachungsvorrichtung **QUV** übermittelt und dann die Quantencomputerüberwachungsvorrichtung **QUV** die über die internen Datenschnittstelle **MDBIF** und den internen Datenbus **INTDB** und den Steuerdatenbus **SDB** von dem internen Rechnerkern des anderen Vorrichtungsteils des Quantencomputers **QC** erhaltene Nachricht bewertet. Die Antwort des Rechnerkerns **CPU** und des internen Rechnerkerns des anderen Vorrichtungsteils des Quantencomputers **QC** soll dabei optional innerhalb eines vorgegebenen Zeitfensters an die Quantencomputerüberwachungsvorrichtung **QUV** des Quantencomputers **QC** erfolgen. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Funktionstüchtigkeit des Verstärkers **V** und die Funktionstüchtigkeit des Fotodetektors **PD** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen die Lichtquelle **LD** des Quantencomputers **QC** zu einer definierten Lichtemission oder eine Teststrahlungsquelle des Quantencomputers **QC** in den zweiten Zeiträumen zur Abgabe einer Testlichtemission veranlassen, die den Fotodetektor **PD** bestrahlt, und/oder den Fotodetektor **PD** zur Erzeugung eines Testsignals für den Verstärker **V** in den zweiten Zeiträumen veranlasst und die erfassten Werte im Verstärker **V** abfragt und/oder Betriebsparameter des Verstärkers **V** und des Fotodetektor **PD** erfasst und innerhalb eines vorgegebenen Zeitfensters an die Quantencomputerüberwachungsvorrichtung **QUV** des Quantencomputers **QC** weitergibt. Antwortet der Rechnerkern **CPU** nicht innerhalb eines vorgegebenen Zeitfensterst nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Der Rechnerkern **CPU** der Steuervorrichtung **µC** des Quantencomputers **QC** kann die optional vorgesehene Teststrahlungsquelle des Quantencomputers **QC** typischerweise über die interne Datenbusschnittstelle **MDBIF** und den internen Datenbus **INTDB** und den Steuerdatenbus **SDB** steuern. Typischerweise kann die Steuervorrichtung **µC** des Quantencomputers **QC** den Fotodetektor **PD** des Quantencomputers **QC** beispielsweise mittels einer optischen Teststrahlungsquelle mit einem optischen Testsignal bestrahlen, um die Funktionstüchtigkeit des Quantencomputers **QC** sicherzustellen. Zur besseren Übersicht ist diese Teststrahlungsquelle des verlegbaren Quantencomputers **QC** zur Bestrahlung des Fotodetektors **PD** mit Teststrahlung in der Figur 1 nicht eingezeichnet.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen Temperaturen innerhalb des Quantencomputers **QC** mittels eines oder mehrerer Temperatursensoren **ST** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen eine oder mehrere Temperaturen innerhalb des Quantencomputers QC mittels eines oder mehrerer Temperatursensoren **ST** des Quantencomputers **QC** zu erfassen und die erfassten Temperaturmesswerte innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensterst nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Funktionstüchtigkeit der Magnetfeldsensoren **MSx, MSy, MSz** und/oder die Funktionstüchtigkeit der Magnetfeldsteuerungen **MFSx, MFSy, MFSz** und/oder die Funktionstüchtigkeit der Magnetfelderzeugungsmittel **MGx, MGy, MGz** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen mittels der Magnetfeldsteuerungen **MFSx, MFSy, MFSz** und der Magnetfelderzeugungsmittel **MGx, MGy, MGz** des Quantencomputers **QC** verschiedene magnetische Flussdichten einzustellen und mittels der Magnetfeldsensoren **MSx, MSy, MSz** zu erfassen, und die erfassten Messwerte innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Funktionstüchtigkeit der ersten Energieaufbereitungsvorrichtung **SRG** und/oder die Funktionstüchtigkeit der zweiten Energieaufbereitungsvorrichtung **SRG2** und/oder die Funktionstüchtigkeit der weiteren Energieaufbereitungsvorrichtungen zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen mittels der ersten Energieaufbereitungsvorrichtung **SRG** und/oder der zweiten Energieaufbereitungsvorrichtung **SRG2** und/oder der weiteren Energieaufbereitungsvorrichtungen bestimmte Versorgungsspannungen von Vorrichtungsteilen des Quantencomputers **QC** einzustellen und/oder zu modifizieren, und beispielsweise mittels Messvorrichtungen deren Spannungswerte und/oder Stromwerte zu erfassen und die erfassten Messwerte innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Funktionstüchtigkeit der Energiereserve **BENG** und/oder die Funktionstüchtigkeit der zweiten Energiereserve **BENG2** und/oder die Funktionstüchtigkeit ggf. weiterer Energiereserven und/oder ggf. weiterer Vorrichtungsteile oder bereits benannter Vorrichtungsteile des Quantencomputers **QC** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen mittels Ladevorrichtungen, wie der bereits benannten Ladevorrichtung **LDV,** den Ladezustand der Energiereserve **BENG** und/oder die Funktionstüchtigkeit der zweiten Energiereserve **BENG2** und/oder die Funktionstüchtigkeit ggf. weiterer Energiereserven und/oder ggf. weiterer Vorrichtungsteile zu verändern und dabei die Werte der jeweiligen Stromaufnahme und des Spannungsverlaufs mittels geeigneter Messmittel des Quantencomputers **QC** zu erfassen und so beispielsweise auf die Impedanz dieser Energiereserven zu schließen. In dem Fall veranlasst die Quantencomputerüberwachungsvorrichtung **QUV** des Quantencomputers **QC** den Rechnerkern **CPU** mittels der besagten Anfragebotschaft über den internen Datenbus **INTDB** die erfassten Messwerte innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensters nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

Optional kann die Quantencomputerüberwachungsvorrichtung **QUV** des Quantencomputers **QC** den Rechnerkern **CPU** veranlassen, insbesondere nach der Durchführung einer Quantencomputerberechnung in den zweiten Zeiträumen die Funktionstüchtigkeit der Trennvorrichtung **TS** des Quantencomputers **QC** und die Funktionstüchtigkeit der Ladevorrichtung **LDV** des Quantencomputers **QC** zu überprüfen. Beispielsweise kann die Quantencomputerüberwachungsvorrichtung **QUV** des Quantencomputers **QC** den Rechnerkern **CPU** mittels einer Anfragebotschaft über den internen Datenbus **INTDB** veranlassen, nach der Durchführung einer Quantencomputerberechnung in den ersten Zeiträumen die Trennvorrichtung **TS** zu öffnen und mittels der Ladevorrichtungen, wie der bereits benannten Ladevorrichtung **LDV,** den Ladezustand der der Energiereserve **BENG** und/oder die Funktionstüchtigkeit der zweiten Energiereserve **BENG2** und/oder die Funktionstüchtigkeit ggf. weiterer Energiereserven und/oder ggf. weiterer Vorrichtungsteile zu verändern und dabei die Werte der jeweiligen Stromaufnahme und des Spannungsverlaufs mittels geeigneter Messmittel des Quantencomputers **QC** zu erfassen und die Trennvorrichtung **TS** zu schließen und mittels der Ladevorrichtungen, wie der bereits benannten Ladevorrichtung **LDV,** den Ladezustand der der Energiereserve **BENG** und/oder die Funktionstüchtigkeit der zweiten Energiereserve **BENG2** und/oder die Funktionstüchtigkeit ggf. weiterer Energiereserven und/oder ggf. weiterer Vorrichtungsteile erneut zu verändern und dabei zweite Werte der jeweiligen Stromaufnahme und des Spannungsverlaufs mittels geeigneter Messmittel des Quantencomputers **QC** zu erfassen. In dem Fall veranlasst die Quantencomputerüberwachungsvorrichtung **QUV** des Quantencomputers **QC** den Rechnerkern **CPU** mittels der besagten Anfragebotschaft über den internen Datenbus **INTDB** die erfassten Messwerte und zweiten Messwert innerhalb eines vorgegebenen Zeitfensters an die Quantencomputerüberwachungsvorrichtung **QUV** des Quantencomputers **QC** weiterzugeben. Antwortet der Rechnerkern **CPU** nicht innerhalb eines vorgegebenen Zeitfensterst nach der Stellung der Anfrage durch die Quantencomputerüberwachungsvorrichtung **QUV** des Quantencomputers **QC** an den Rechnerkern **CPU** der Steuerungsvorrichtung **µC** des Quantencomputers **QC** mit den zweiten Werten, die innerhalb erwarteter Wertebereiche liegen, so bewertet die Quantencomputerüberwachungsvorrichtung **QUV** des Quantencomputers **QC** die Ausführung als fehlerhaft. Je nach Art des Fehlers initiiert die Quantencomputerüberwachungsvorrichtung **QUV** des Quantencomputers **QC** eine Gegenmaßnahme oder ändert die Datenbasis einer statistischen Auswertung. Überschreitet beispielsweise die Häufigkeit eines bestimmten Fehlers einen zulässigen Wert, so leitet die Quantencomputerüberwachungsvorrichtung **QUV** des Quantencomputers **QC** Gegenmaßnahmen ein. Dabei kann es sich um die in der hier vorgelegten Schrift bereits beschriebenen Gegenmaßnahmen oder andere Gegenmaßnahmen handeln.

### Quantencomputersystem QSYS

Wenn der vorschlagsgemäße verlegbare Quantencomputer **QC** in ein Quantencomputersystem **QUSYS** mit einem zweiten, optional mobilen Quantencomputer **QC2** eingebunden ist, kann es vorteilhaft sein, wenn über mindestens eine Signalverbindung, beispielsweise einen externen Datenbus **EXTDB** von dem Quantencomputer **QC** eine Signalisierung, insbesondere eines Quantencomputerberechnungsergebnisses, an den zweiten Quantencomputer **QC2** und/oder umgekehrt erfolgen kann.

Optional umfasst das verlegbare Quantencomputersystem **QUSYS** mit wenigstens zwei Quantencomputern, einen ersten verlegbaren Quantencomputer **QC1** und einen zweiten verlegbaren Quantencomputer **QC2,** mit mehreren Messeinrichtungen zur Erfassung von Betriebsgrößen des Quantencomputersystems **QUSYS** oder einer Vorrichtung oder eines Systems. Dabei hängen typischer Weise ggf. die Zustände der Vorrichtung bzw. des Systems von dem Quantencomputersystem **QUSYS** ab, wobei der erste verlegbare Quantencomputer **QC1** optional zumindest zweitweise die gleiche Quantencomputerberechnung durchführt, die der zweite verlegbare Quantencomputer **QC2** durchführt. Dabei umfasst die Quantencomputerberechnung optional eine Überwachungsmaßnahme zur Überprüfung der Funktionsfähigkeit des jeweiligen verlegbaren Quantencomputers **QC1, QC2.** Dabei führt optional der erste verlegbare Quantencomputer **QC1** die Quantencomputerberechnung des ersten verlegbaren Quantencomputers **QC1** unabhängig von der Durchführung der Quantencomputerberechnung des zweiten verlegbaren Quantencomputers **QC2** durch. Dies ermöglicht den Vergleich der Ergebnisse der Quantencomputerberechnungen durch die Rechnerkerne **CPU** der Steuervorrichtungen **µC** der verlegbaren Quantencomputer **QC1, QC2** und/oder die Quantencomputerüberwachungsvorrichtungen **QUV** der verlegbaren Quantencomputer **QC1, QC1.**

### Verfahren zur Überwachung

Die hier vorgelegte Schrift schlägt darüber hinaus ein Verfahren gemäß einer optionalen Ausführungsform zur Überwachung des Ablaufs eines auf mindestens einer Steuervorrichtung **µC** eines verlegbaren Quantencomputers **QC** ablauffähigen Quantencomputerprogramms mittels einer Quantencomputerüberwachungsvorrichtung **QUV** des Quantencomputers **QC** vor. Dabei umfasst der verlegbare Quantencomputer **QC** optional Quantenpunkte **NV1, NV2, NV3** und optional Kernquantenpunkte **CI1₁, CI1₂, CI1₃**, **CI2₁, CI2₂, CI2₃**, **CI3₁**, **CI3₂, CI3₃** und die Steuervorrichtung **µC** mit dem Rechnerkern **CPU** und erste Mittel zur Manipulation von Quantenpunkten **NV1, NV2, NV3** und ggf. zur Manipulation von Kernquantenpunkten **CI1₁, CI1₂, CI1₃**, **CI2₁, CI2₂, CI2₃**, **CI3₁**, **CI3₂, CI3₃** des Quantencomputers **QC** und zweite Mittel zum Auslesen des Zustands von Quantenpunkte **NV1, NV2, NV3** und ggf. Kernquantenpunkten **CI1₁, CI1₂, CI1₃**, **CI2₁, CI2₂, CI2₃**, **CI3₁**, **CI3₂, CI3₃** des Quantencomputers **QC.** Dabei steuert optional der Rechnerkern **CPU** der Steuervorrichtung **µC** die ersten Mittel zur Manipulation von Quantenpunkten **NV1, NV2, NV3** und ggf. Kernquantenpunkten **CI1₁, CI1₂, CI1₃**, **CI2₁, CI2₂, CI2₃**, **CI3₁**, **CI3₂, CI3₃** des Quantencomputers **QC** und die zweiten Mittel zum Auslesen des Zustands von Quantenpunkte **NV1, NV2, NV3** und ggf. Kernquantenpunkten **CI1₁, CI1₂, CI1₃**, **CI2₁, CI2₂, CI2₃**, **CI3₁**, **CI3₂, CI3₃** des Quantencomputers **QC.** Dabei löst die Quantencomputerüberwachungsvorrichtung **QUV** optional bei einer Manipulation einer Teilmenge der Quantenpunkte und/oder ggf. der Kernquantenpunkte der Quantenpunkte **NV1, NV2, NV3** und ggf. Kernquantenpunkten **CI1₁, CI1₂, CI1₃**, **CI2₁, CI2₂, CI2₃**, **CI3₁**, **CI3₂, CI3₃** des Quantencomputers **QC** während der Quantencomputerprogrammlaufzeit eine Ausnahmebedingung (Exception), insbesondere eine Unterbrechung (Interrupt) des Quantencomputerprogrammablaufs, aus, wenn diese Manipulation nicht vorgesehen war. Dies kann bei einem Programmsprung durch Störungen wie kosmische Strahlung geschehen, was hierdurch abgefangen wird.

Die hier vorgelegte Schrift schlägt für den verlegbaren Quantencomputer **QC** gemäß der erläuterten optionalen Ausführungsform einen nicht flüchtigen Speicher **NVM** vor, insbesondere einen Read-Only-Memory oder einen Flash-Memory oder einen nicht flüchtigen Speicher, für einen verlegbaren Quantencomputer **QC** insbesondere als Teil eines Steuergeräts eines Fahrzeugs. Optional ist in dem nicht flüchtigen Speicher **NVM** ein Quantencomputerprogramm abgespeichert, das auf mindestens einem Rechnerkern **µC** des Quantencomputers **QC** ablauffähig und zur Ausführung des vorbeschriebenen Verfahrens geeignet ist.

Die hier vorgelegte Schrift schlägt zur weiteren Absicherung der Funktionstüchtigkeit des verlegbaren Quantencomputers **QC** mit mindestens einem Rechnerkern **CPU** einer Steuervorrichtung **µC** und mit einer Quantencomputerüberwachungsvorrichtung **QUV** das Folgende vor:
Auf dem mindestens einen Rechnerkern **CPU** der Steuervorrichtung **µC** soll ein Quantencomputerprogramm ablauffähig sein. Die Quantencomputerüberwachungsvorrichtung **QUV** überwacht während der Quantencomputerprogrammlaufzeit den Ablauf des Quantencomputerprogramms während der Ausführung durch die anderen Vorrichtungsteile des Quantencomputers **QC.** Beim einem Zugriff des Rechnerkerns **CPU** auf einen bestimmten Adressbereich innerhalb eines Speichers **RAM, NVM** der Steuervorrichtung **µC** des Quantencomputers **QC** oder auf andere vorbestimmte Vorrichtungsteile des Quantencomputers **QC** erzeugt die Quantencomputerüberwachungsvorrichtung **QUV** eine Ausnahmebedingung (Exception), insbesondere eine Unterbrechung (Interrupt) des Quantencomputerprogrammablaufs, woraufhin der Rechnerkern **CPU** der Steuervorrichtung **µC** des Quantencomputers **QC** die Ausführung des Quantencomputerprogramms typischerweise in optional vorbestimmter Weise unterbricht.

Der Rechnerkern **CPU** der Steuervorrichtung **µC** oder eine zentrale Steuereinheit **ZSE** oder ein anderes Rechnersystem, die beispielsweise mit dem Rechnerkern **CPU** der Steuervorrichtung **µC** des Quantencomputers **QC** über den externen Datenbus **EXTDB** verbunden sein können, können beispielsweise die Quantencomputerüberwachungsvorrichtung **QUV** konfigurieren. Optional weist der Quantencomputer **QC** und/oder der Rechnerkern **µC** Mittel zum Durchlaufen einer Ausnahmebedingungs-Routine (Exception-Routine) nach dem Auslösen einer Ausnahmebedingung während der Quantencomputerprogrammlaufzeit auf. Die Ausnahmebedingungsroutine kann selbst wieder ein Quantencomputerprogramm sein.

### Weiteres Überwachungsverfahren

Die hier vorgelegte Schrift schlägt ein Verfahren gemäß einer optionalen Ausführungsform zum Betrieb eines verlegbaren Quantencomputersystems **QUSYS** mit einem verlegbaren Quantencomputer **QC** und mit einer Quantencomputerüberwachungsvorrichtung **QUV** mit folgenden beispielhaften Schritten vor:
- Überwachen des korrekten Quantencomputerprogrammablaufs des Quantencomputerprogramms des verlegbaren Quantencomputers **QC,** insbesondere durch die Quantencomputerüberwachungsvorrichtung **QUV** oder ein anderes Rechnersystem;
- Durchführen vorbestimmter Quantencomputerberechnungen mit mindestens einer Quantenoperation zur Berechnung vorbestimmter Quantencomputerberechnungsergebnisse in vorbestimmten Zeiträumen zu vorbestimmten Zeitpunkten, insbesondere durch den Quantencomputer **QC,** und
- Ansteuern einer Quantencomputerüberwachungsvorrichtung **QUV** nach diesen vorbestimmten Zeitpunkten, und Durchführung eines Rücksetzens (Reset-Funktion) oder Re-initialisierens des Quantencomputers **QC** auf einen vordefinierten Quantencomputerprogrammrestartzustand oder dergleichen, wenn diese Ansteuerung nicht in vorbestimmter Weise erfolgt.

### Datenbusse

Der Quantencomputer **QC** gemäß der in Figur 1 gezeigten optionalen Ausführungsform umfasst optional eine Datenschnittstelle **DBIF** mit der der vorschlagsgemäße Quantencomputer **QC** mit übergeordneten Rechnersystemen und/oder anderen Quantencomputern **QC2** kommunizieren und Daten austauschen kann. Insbesondere kann der vorschlagsgemäße Quantencomputer **QC** über die Datenschnittstelle **DBIF** mit einer zentralen Steuereinheit **ZSE** kommunizieren und Daten austauschen. Die Datenschnittstelle kann drahtgebunden und/oder drahtlos sein.

Über die interne Datenschnittstelle **MDBIF** und den Steuerdatenbus **SDB** kann der Rechnerkern **CPU** der Steuervorrichtung **µC** und/oder die Quantencomputerüberwachungsvorrichtung **QUV** mittels des verlegbaren Quantencomputers **QC** mit den Vorrichtungsteilen des Quantencomputers **QC** optional kommunizieren, und Daten und Signale austauschen.

### Magnetisches System

Optional umfasst der verlegbare Quantencomputer **QC** gemäß der in Figur 1 gezeigten Ausführungsform ein System zur Kompensation externer Magnetfelder und des Erdmagnetfelds. Hierzu verfügt der vorgeschlagene mobile verlegbare Quantencomputer **QC** optional über Sensorsysteme zur dreidimensionalen Erfassung des dreidimensionalen Vektors der magnetischen Flussdichte B. Optional erfasst das Sensorsystem zur dreidimensionalen Erfassung des dreidimensionalen Vektors der magnetischen Flussdichte B diesen dreidimensionalen Vektor der magnetischen Flussdichte B in der Nähe des Substrats **D.** Beispielsweise kann das Sensorsystem zur dreidimensionalen Erfassung des dreidimensionalen Vektors der magnetischen Flussdichte B drei Magnetfeldsensoren **MSx, MSy, MSz** für die drei Raumrichtungen X, Y, und Z umfassen. Es ist denkbar ein einziges Sensorsystem einzusetzen, wenn es die Ausrichtung des Magnetfelds zulässt. Beispielsweise kann der Quantencomputer **QC** einen Magnetfeldsensor MSx für die magnetische Flussdichte Bₓ in Richtung der X-Achse umfassen. Beispielsweise kann der Quantencomputer **QC** einen Magnetfeldsensor MSy für die magnetische Flussdichte B_{y} in Richtung der Y-Achse umfassen. Beispielsweise kann der Quantencomputer **QC** einen Magnetfeldsensor MSz für die magnetische Flussdichte B_{z} in Richtung der Z-Achse umfassen.

Optional umfasst der vorgeschlagene mobile Quantencomputer QC magnetfelderzeugende Vorrichtungen **PM, MGx, MGy, MGz.** Die magnetfelderzeugenden Vorrichtungen können Permanentmagnete **PM** und/oder Spulen **MGx, MGy, MGz,** insbesondere Helmholtzspulen und Helmholtzspulenpaare, als Magnetfelderzeugungsmittel umfassen. Die Permanentmagnete **PM** erzeugen permanent eine magnetische Flussdichte. Die Spulen **MGx, MGy, MGz** erzeugen eine magnetische Flussdichte entsprechend ihrer elektrischen Bestromung. Optional sind die Permanentmagneten **PM** und die Magnetfelderzeugungsmittel **MGx, MGy, MGz** Teil eines magnetischen Kreises. Optional, aber nicht notwendigerweise umfasst der magnetische Kreis ein Joch. Optional befindet sich der Permanentmagnet **PM** in einem Luftspalt. Optional kann eine Positioniervorrichtung **PV** den Permanentmagneten **PM** relativ zu dem Substrat **D** und/oder in dem Luftspalt neu positionieren und so die auf das Subastrat **D** mit den Quantenpunkten einwirkende magnetische Flussdichte B verändern.

Optional umfasst die Steuervorrichtung **µC** des Quantencomputers **QC** eine Navigationsvorrichtung **GPS,** die dem Rechnerkern **CPU** der Steuervorrichtung **µC** die aktuelle Position mitteilt. Optional kann die Steuervorrichtung **µC** mit Hilfe geomagnetischer Karten des Erdmagnetfelds die sich daraus ergebende Erdmagnetfeldstärke und deren magnetischen Flussdichteanteil bestimmen. Wird der Quantencomputer **QC** translatorisch bewegt, oder rotiert, so kann beispielsweise der Rechnerkern **CPU** des Quantencomputers **QC** Vorhersagewerte für zukünftige translatorische Koordinaten und/oder zukünftige Rotationen über den externen Datenbus **EXTDB** erhalten oder aus erhaltenen oder ermittelten Geschwindigkeitswerten und Rotationsgeschwindigkeitswerten voraussagen. Daher kann dann der Rechnerkern **CPU** des Quantencomputers **QC** Änderungen des auf die Quantenpunkte **NV1, NV2, NV3** und die Kernquantenpunkte **CI1₁, CI1₂, CI1₃**, **CI2₁, CI2₂, CI2₃**, **CI3₁**, **CI3₂, CI3₃** zukünftig einwirkenden Magnetfelds voraussagen, und mittels einer Veränderung des im Quantencomputer QC erzeugten Magnetfelds mittels der magnetfelderzeugende Vorrichtungen **PM, MGx, MGy, MGz** kompensieren.

Das Verfahren gemäß einer optionalen Ausführungsform zur Verhinderung von Störungen des Betriebs des verlegbaren Quantencomputers QC durch Änderungen externer Magnetfelder infolge einer Bewegung des verlegbaren Quantencomputers QC läuft optional wie folgt ab:
In einem ersten Schritt a) stellt die Steuervorrichtung **µC** optional beispielsweise mittels Magnetfeldsensoren **MSx, MSy, MSz** das derzeit wirkende externe Magnetfeld fest. In einem zweiten Schritt erfasst die Steuervorrichtung **µC** beispielsweise mittels eines Navigationssystems **NAV** und/oder einer Positionsermittlungsvorrichtung **GPS** die aktuellen Koordinaten und/oder die aktuelle Geschwindigkeit und/oder Beschleunigung. Auf Basis dieser Daten und ggf. zusätzlicher Daten, wie zum Beispiel einer elektronischen Karte des Erdmagnetfeldes berechnet beispielsweise die Steuervorrichtung **µC** des verlegbaren Quantencomputers **QC** das zu erwartende neue externe Magnetfeld und passt optional die Bestromung der Magnetfelderzeugungsmittel **MGx, MGy, MGz** so an, dass diese Änderung des externen Magnetfelds durch die Bewegung des Verlegbaren Quantencomputers **QC** im Wesentlichen nicht wirksam wird und die Berechnungsergebnisse von Quantencomputerprogrammen des verlegbaren Quantencomputers **QC** im Wesentlichen nicht beeinflussen.

Zur Vereinfachung der Darstellung wird hier angenommen, dass die Navigationsvorrichtung **GPS** nicht nur die translatorischen Koordinaten bestimmt, also beispielsweise die Position auf der Erdoberfläche, sondern auch die winkelmäßige Ausrichtung des verlegbaren Quantencomputers **QC** und die Winkelgeschwindigkeit der Veränderung dieser Winkel. Nur unter Berücksichtigung der translatorischen Veränderungen und der rotatorischen Veränderungen der Position und Ausrichtung des verlegbaren Quantencomputers **QC** kann das Rechnersystem **CPU** des verlegbaren Quantencomputers **QC** die notwendige Anpassung der Magnetfelderzeugung geeignet vorausberechnen und die magnetfelderzeugende Vorrichtungen **PM, MGx, MGy, MGz** geeignet steuern. Hierzu kann der Rechnerkern **CPU** der Steuervorrichtung **µC** beispielsweise die erste Magnetfeldsteuerung **MFSx** veranlassen, die Bestromung des ersten Magnetfelderzeugungsmittels **MGx,** das optional eine magnetische Flussdichte Bₓ erzeugt, mit elektrischem Strom anzupassen.

Hierzu kann der Rechnerkern **CPU** der Steuervorrichtung **µC** optional auch die zweite Magnetfeldsteuerung **MFSy** veranlassen, die Bestromung des zweiten Magnetfelderzeugungsmittels **MGy,** das optional eine magnetische Flussdichte B_{y} erzeugt, mit elektrischem Strom anzupassen. Hierzu kann der Rechnerkern **CPU** der Steuervorrichtung **µC** optional auch die dritte Magnetfeldsteuerung **MFSz** veranlassen, die Bestromung des dritten Magnetfelderzeugungsmittels **MGz,** das optional eine magnetische Flussdichte B_{z} erzeugt, mit elektrischem Strom anzupassen.

Hierzu kann der Rechnerkern **CPU** der Steuervorrichtung **µC** beispielsweise auch die Positioniervorrichtung **PV** des Permanentmagneten **PM** veranlassen, die Positionierung des Permanentmagneten PM, der optional eine permanente, räumlich inhomogene magnetische Flussdichte B erzeugt, räumlich anzupassen, und damit die magnetische Flussdichte am Ort der Quantenpunkte **NV1, NV2, NV3** und der Kernquantenpunkte **CI1₁, CI1₂, CI1₃**, **CI2₁, CI2₂, CI2₃**, **CI3₁**, **CI3₂, CI3₃** anzupassen.

Der Rechnerkern **CPU** der Steuervorrichtung **µC** erfasst mittels der besagten Magnetfeldsensoren **MSx, MSy, MSz** optional das tatsächliche Magnetfeld und regelt die magnetische Flussdichte mittels der unmittelbar zuvor beschriebenen Stellglieder in Form der magnetfelderzeugende Vorrichtungen **PM, MGx, MGy, MGz** nach, um Abweichungen zwischen dem erfassten Vektor der magnetischen Flussdichte und dem gewünschten Vektor der magnetischen Flussdichte auszugleichen.

Optional umfasst der Quantencomputer **QC** ein Beschleunigungssensorsystem, das translatorische und/oder rotatorische Beschleunigungen erkennen kann und die entsprechenden Werte an den Rechnerkern **CPU** der Steuervorrichtung **µC** des Quantencomputers **QC** liefert, sodass dieser ggf. Gegenmaßnahmen in Form von Gegenbeschleunigungen eines in den Figuren nicht gezeichneten Lageregelungssystems ergreifen kann. Ggf. kann der Rechnerkern **CPU** der Steuervorrichtung **µC** des Quantencomputers **QC** für einige solcher Gegenmaßnahmen die Positioniervorrichtung **PV** des Permanentmagneten **PM** und/oder die translatorische Positioniervorrichtung **XT** in X-Richtung und/oder die translatorische Positioniervorrichtung **YT** in Y-Richtung nutzen Auch kann ggf. der Rechnerkern **CPU** der Steuervorrichtung **µC** des verlegbaren Quantencomputers **QC** den Fokus des optischen Systems **OS** in Abhängigkeit von solchen Koordinatenprognosen und/oder Geschwindigkeitsprognosen und/oder Beschleunigungsprognosen für translatorische Bewegungen und rotatorische Bewegungen modifizieren, um den Fokus zu halten. Beispielsweise kann der Rechnerkern **CPU** der Steuervorrichtung **µC** des verlegbaren Quantencomputers **QC** auf Basis solcher Koordinatenprognosen und/oder Geschwindigkeitsprognosen und/oder Beschleunigungsprognosen für translatorische Bewegungen und rotatorische Bewegungen, Deformationen, und mechanische Schwingungen innerhalb des verlegbaren Quantencomputers **QC** vorhersagen und ggf. solche mittels geeigneter Sensoren wie Kameras und Positions- und Abstandssensoren innerhalb des Quantencomputers **QC** erkennen und kompensieren.

### Energieversorgung

Der verlegbare Quantencomputer **QC** gemäß der in Figur 1 gezeigten optionalen Ausführungsform erhält optional seine Energie über eine Energieversorgung EV. Eine Ladevorrichtung **LDV** der Energieversorgung **EV** erhält die Energie extern aus einer Energiequelle **PWR.** Einen guten Überblick über mögliche elektrische Energiequellen gibt das Buch: Vasily Y. Ushakov (Autor), "Electrical Power Engineering: Current State, Problems and Perspectives (Green Energy and Technology)", Taschenbuch - 18. August 2018, Springer; 1st ed. 2018 Edition (18. August 2018), ISBN-10: 3319872850, ISBN-13: 978-3319872858.

Diese Energiequelle kann beispielsweise eine der folgenden Energiequellen sein:

### Elektrischer Generator

Die Energiequelle kann ein elektrischer Generator sein, der mechanische Energie in elektrische Energie umsetzt. Bei der mechanischen Energie kann es sich beispielsweise um eine über eine Welle übertragene Energie oder die Energie eines sich bewegenden Fluids handeln. Es kann sich beispielsweise um eine elektrische Maschine, wie einen Synchron oder Asynchron oder Gleichstrommotor, einen Linearmotor, einen Reluktanzmotor oder einen BLDC-Motor oder dergleichen handeln, der die mechanische Energie einer linearen und/oder rotatorischen Bewegung mittels Induktion in Leitungen eines Stators und/oder Rotors in elektrische Energie umsetzt. Es kann sich auch um einen magnetohydrodynamischen Generator, kurz als MHD-Generator bezeichnet, handeln, der die Bewegung eines elektrisch leitenden Fluids in elektrische Energie umsetzt. Bei dem Fluid kann es sich um ein Plasma oder eine elektrisch leitende Flüssigkeit, beispielsweise eine Salzlösung oder ein geschmolzenes Metall handeln. Die eigentliche Energiequelle können beispielsweise ein Kernreaktor, ein Verbrennungsmotor, eine Heizvorrichtung, ein Jet-Triebwerk, ein Raketentriebwerk, ein Schiffsantrieb, ein Stirlingmotor, eine Turbine, eine Wasserturbine, eine Gasturbine, eine Wind-Turbine, ein Gezeitenkraftwerk, ein Wellenkraftwerk und dergleichen sein. Magnetohydrodynamische Generatoren sind beispielsweise aus den Schriften DE 20 2021 101 169 U1, WO 2021 159 117 A1, EP 3 863 165 A1, US 2021 147 061 A1, CN 108 831 576 B, US 2019 368 464 A1, WO 2019 143 396 A2, EP 3 646 452 B1, CN 20 634 1126 U, EP 3 279 603 B1, EP 3 400 642 B1, EP 3 345 290 B1, EP 3 093 966 B1, WO 2016 100 008 A2, DE 10 2014 225 346 A1, RU 2014 143 858 A, EP 3 007 350 B1, US 2016 377 029 A1, RU 2 566 620 C2, EP 3 075 064 A1, EP 2 874 292 B1, EP 2 986 852 B1, CN 10 385 5907 B, RU 126 229 U1, WO 2014 031 037 A2 bekannt. Aufgrund der Vielzahl der Schriften verzichtet die hier vorgestellte Schrift auf eine vollständige Aufzählung. Die hier vorgelegte Schrift verweist auf das Buch Hugo K. Messerle (Autor), "Magnetohydrodynamic Electrical Power Generation (UNESCO Energy Engineering Series)", John Wiley & Sons Ltd (1. August 1995), ISBN-10: 0471942529, ISBN-13: 978-0471942528.

### Elektrochemische Zelle

Die Energiequelle kann eine elektrochemische Zelle sein. Dabei kann es sich beispielsweise um eine elektrochemische Zelle im weitesten Sinne handeln, die mittels chemischer Reaktionen elektrische Energie bereitstellt. Zu diesen elektrochemischen Zellen rechnet die die vorgelegte Schrift Akkumulatoren, Batterien und Brennstoffzellen.

### Nukleare Energiequellen

Bei den nuklearen Energiequellen unterscheidet die hier vorgelegte Schrift zwischen solchen, die auf der einen Seite die nukleare Energie zuerst in mechanische Energie, beispielsweise mittels Dampfkreisläufen und Turbinen umsetzen und dann mittels der oben erwähnten Generatoren in elektrische Energie umsetzen und auf der anderen Seite die nukleare Energie direkt in elektrische Energie umsetzen. Hier nennt die hier vorgelegte Schrift beispielhaft betavoltaische Zellen und thermonuklearer Generatoren. Diese haben den Vorteil, dass sie mobil ausgeführt werden können. Daher passen sie besonders gut zu der hier vorgestellten technischen Lehre. Die hier in Betracht gezogenen Radionuklidbatterien nutzen optional die Isotope ⁶⁰Co, ⁹⁰Sr, ¹⁰⁶Ru, ¹¹⁴Cs, ¹⁴⁷Pm, 210Pm, ²¹⁰Po, ²³⁸Pu, ²⁴²Cm, ²⁴¹Am, ²⁴³Am. Optional ist der verlegbare Quantencomputer **QC** durch eine Strahlenschirmung, beispielsweise aus Blei vor der Strahlung einer solchem nuklearen Energiequelle geschützt. Zu den Radionuklidbatterien gehören auch betavoltaische Zellen, die beispielsweise Betastrahlung von Betastrahlern unmittelbar in elektrische Energie umsetzen. Solche Radionuklidbatterien sind beispielsweise aus den Schriften DE 1 240 967 B, DE 1 564 070 B1, DE 2 124 465 B2, DE 7 219 216 U, DE 19 782 844 538 B1, DE 69 411 078 T2, US 5 443 657 A, US 5 859 484 A, DE 19 602 875 A1, DE 19 738 066 A1, DE 19 957 669 A1, DE 19 957 669 A1, US 8 552 616 B2, WO 2009 103 974 A1 und US 2018 226 165 A1 bekannt. Die Energiequelle kann auch eine erneuerbare Energiequelle, wie eine Solarzelle, ein Wasserkraftwerk mit einer Wasserturbine und einem Generator, oder eine Windkraftanlage mit einer Windturbine und einem Generator sein.

Die Energiequelle können auch herkömmliche Kohle-, Öl- und Gaskraftwerke sein, die kohlenstoffhaltige und/oder kohlenwasserstoffhaltige Brennstoffe verfeuern, um thermische Energie zu erzeugen, und dann die thermische Energie in mechanische Energie umsetzen, und dann die mechanische Energie in elektrische Energie umsetzen.

Die Energiequellen können so genannte Energy Harvesting Devices sein. Dabei handelt es sich um Vorrichtungen, die in der Umwelt oder sonst wie ohnehin vorhandene Energieunterschiede nutzen, um z. B. aus der Bewegungsenergie einer Person oder eines anderen bewegten Objekts oder aus thermischen Unterschieden, beispielsweise in Heizungssystemen, oder der gleichen, Energie zu gewinnen.

Schließlich kann die Energiequelle ganz einfach auch das Stromnetz sein, wobei die Primärenergiequelle dann unbestimmt bleiben kann.

Optional bereitet die Ladevorrichtung **LDV** die Energie der Energieversorgung **PWR** der Ladevorrichtung **LDV** soweit auf, dass die Ladevorrichtung **LDV** mit der Energie der Energieversorgung **PWR** eine Energiereserve **BENG, BENG2** laden kann. Beispielsweise kann es sich um einen Spannungswandler und/oder einen Buck-Konverter oder einen Boost-Konverter oder um einen Buck-Boost-Konverter, je nach Art der Energieversorgung **PWR,** handeln. Optional überwacht die Ladevorrichtung **LDV** den Ladevorgang der jeweiligen Energiereserve **BENG, BENG2,** wenn sie diese lädt.

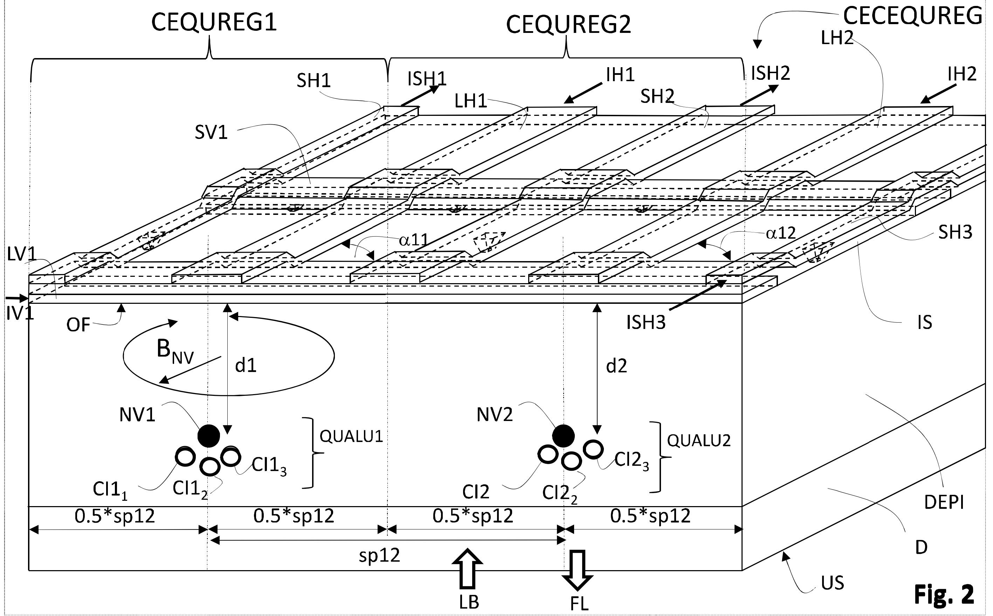

Sofern der Quantencomputer **QC** kein Quantencomputerprogramm ausführt und/oder keine Quantenoperationen durchführt, kann die Ladevorrichtung **LDV** auch Vorrichtungsteile des verlegbaren Quantencomputers **QC** über jeweilige Energieaufbereitungsvorrichtungen **SRG, SRG2** versorgen. Optional lädt die Ladevorrichtung **LDV** dann auch eine oder mehrere der Energiereserven **BENG, BENG2** des verlegbaren Quantencomputers **QC.** In dem Beispiel der Figur 1 weist der vorgeschlagene verlegbare Quantencomputer **QC** beispielhaft zwei Energiereserven **BENG, BENG2** und zwei Energieaufbereitungsvorrichtungen **SRG, SRG2** auf. Die hier vorgelegte Schrift weist darauf hin, dass die Anzahl der Energiereserven, Energieaufbereitungsvorrichtungen und Ladevorrichtungen und Trennvorrichtungen größer als in dem Beispiel der Figur 2 sein kann.

Die Ladevorrichtung **LDV** stellt zwar optional eine Barriere für Transienten der Energieversorgung **PWR** dar. Die Ladevorrichtung **LDV** kann aber diese transienten Störungen der Energieversorgung **PWR** in der Regel nicht vollständig unterdrücken. Auch produziert die Ladevorrichtung **LDV,** beispielsweise wenn die Ladevorrichtung **LDV** ein Schaltnetzteil ist, selbst transiente Störungen. Daher hat es sich bewährt, ein oder mehrere rauscharme Energiereserven **BENG, BENG2** für die Versorgung besonders störanfälliger Vorrichtungsteile wie den Fotodetektor **PD,** den Verstärker **V,** den Lichtquellentreiber **LDRV,** die Lichtquelle **LD** und ggf. für magnetfelderzeugenden Vorrichtungsteile **MFSx, MFSy, MFSz, MGx, MGy, MGz** und Vorrichtungsteile mit zeitlich besonders sensitivem Signalschema wie den Wellenformgenerator **WFG** und den Mikrowellen- und/oder Radiowellenfrequenzgenerator **MW/RF-AWFG** zur Erzeugung weitestgehend frei vorgebbarer Wellenformen (Englisch: Arbitrary-Wave-Form-Generator) vorzusehen. Optional stabilisieren diese Vorrichtungsteile innerhalb dieser Vorrichtungsteile ihre internen Versorgungsspannungen nochmals, um das Rauschen und die Störungen der Energieversorgung maximal zu unterdrücken.

Optional umfasst der Quantencomputer **QC** zur Versorgung der Vorrichtungsteile aus der einen Energiereserve oder der Mehrzahl von Energiereserven **BENG, BENG2** eine oder mehrere Energieaufbereitungsvorrichtungen **SRG, SRG2.** Die Energieaufbereitungsvorrichtungen passen optional den Spannungspegel, der von der Ladevorrichtung **LDV** bzw. den Energiereserven **BENG, BENG2** geliefert wird auf die benötigten Spannungspegel des jeweils versorgten Vorrichtungsteils des Quantencomputers **QC** optional mit einem Spannungsvorhalt an. In einer zweiten Regelstufe, die optional ein Linear-Regler ist können dann beispielsweise diese Linearregler den Spannungsvorhalt nutzen, um die eigentliche Versorgungsspannung der betreffenden Vorrichtungssteile des Quantencomputers **QC** rauscharm und präzise einzustellen.

Optional trennen eine oder mehrere Trennvorrichtungen **TS** die eine Ladevorrichtung bzw. die mehreren Ladevorrichtungen **LDV** von der einen Energieaufbereitungsvorrichtung bzw. den mehreren Energieaufbereitungsvorrichtungen **SRG, SRG2** und/oder von der einen rauscharmen Energiereserve bzw. den mehreren rauscharmen Energiereserven **BENG, BENG2,** wenn der Quantencomputer ein Quantencomputerprogramm ausführt und/oder eine Quantenoperation Eine Quantenoperation im Sinne der hier vorgelegten Schrift ist eine Manipulation eines Quantenpunkts **NV1, NV2, NV3** und/oder eines Kernquantenpunkts **CI1₁, CI1₂, CI1₃**, **CI2₁, CI2₂, CI2₃**, **CI3₁**, **CI3₂, CI3₃.** Ein Quantencomputerprogramm ist im Sinne der hier vorgestellten Schrift ein Programm, dass mindestens eine Quantenoperation umfasst. Optional kodieren ein oder mehrere binäre Daten im Speicher **NVN, RAM** der Steuervorrichtung **µC** des verlegbaren Quantencomputers **QC** eine solche Quantenoperation. Beispielsweise kann es sich um ein vorbestimmtes Datenwort handeln. Eine Quantenoperation im Sinne der hier vorgelegten Schrift manipuliert zumindest den Quantenzustand zumindest eines Quantenpunkts der **Quantenpunkte NV1, NV2, NV3** des verlegbaren Quantencomputers **QC** und/oder manipuliert zumindest den Quantenzustand zumindest eines Kernquantenpunkts der Kernquantenpunkte **CI1₁, CI1₂, CI1₃**, **CI2₁, CI2₂, CI2₃**, **CI3₁**, **CI3₂, CI3₃** des verlegbaren Quantencomputers **QC.** Das Datenwort, das eine solche Quantenoperation symbolisiert bezeichnet die technische Lehre der hier vorgelegten Schrift auch als Quanten-Op-Code. Ein Quantencomputerprogramm umfasst zumindest einen Quanten-Op-Code. In dem vorstehenden Fall, wenn der verlegbare Quantencomputer **QC** ein Quantencomputerprogramm ausführt und/oder eine Quantenoperation durchführt, versorgen die eine Energiereserve bzw. die mehreren Energiereserven **BENG, BENG2** die eine Energieaufbereitungsvorrichtung bzw. die mehreren Energieaufbereitungsvorrichtungen **SRG, SRG2** optional mit elektrischer Energie, die besonders rauscharm ist.

Optional verbinden eine oder mehrere Trennvorrichtungen **TS** die eine Ladevorrichtung bzw. die mehreren Ladevorrichtungen **LDV** mit der einen Energieaufbereitungsvorrichtung bzw. den mehreren Energieaufbereitungsvorrichtungen **SRG, SRG2** und/oder der einen rauscharmen Energiereserve bzw. den mehreren rauscharmen Energiereserven **BENG, BENG2,** wenn der verlegbare Quantencomputer **QC** kein Quantencomputerprogramm ausführt und/oder keine Quantenoperation durchführt. In dem Fall lädt die Ladevorrichtung **LDV** optional die eine Energiereserve bzw. die mehreren Energiereserven **BENG, BENG2** und versorgt ggf. die eine Energieaufbereitungsvorrichtung bzw. mehreren Energieaufbereitungsvorrichtungen **SRG, SRG2** mit elektrischer Energie, die typischerweise nun weniger rauscharm ist.

### Magnetfeldabschirmung

Um den Einfluss externer Magnetfelder zu verringern, kann der Quantencomputer **QC** gemäß der in Figur 1 gezeigten optionalen Ausführungsform mit einer Abschirmung **AS** für diese externen magnetischen Felder versehen sein. Diese Abschirmung kann optional eine passive Abschirmung **AS** beispielsweise in Form von µ-Metall-Matten und/oder eine aktive Abschirmung **AS** in Form eines magnetfelderzeugenden Systems sein, das ein magnetisches Gegenfeld zu einem externen magnetischen Störfeld erzeugt und dieses dadurch in seiner Wirkung reduziert und/oder sogar kompensiert. Optional umfasst daher der vorgeschlagene Quantencomputer einen oder mehrere Sensoren **MSx, MSy, MSz** zur Erfassung der Stärke der magnetischen Flussdichte B und/oder der magnetischen Feldstärke H. Optional nutzt die Steuervorrichtung **µC** die durch den einen oder die mehreren Sensoren **MSx, MSy, MSz** erfassten Werte der magnetischen Flussdichte B und/oder der magnetischen Feldstärke H zur Steuerung von Magnetfelderzeugungsmitteln **MGx, MGy, MGz.** Die Magnetfelderzeugungsmittel **MGx, MGy, MGz** erzeugen optional eine kompensierende magnetische Flussdichte B eines magnetischen Gegenfeldes, dass die magnetische Flussdichte B des magnetischen Störfeldes kompensiert.

Optional erfasst ein erster Sensor **MSx** die Stärke der magnetischen Flussdichte B und/oder der magnetischen Feldstärke H in einer ersten Richtung, beispielsweise einer X-Achse. Eine erste Magnetfeldsteuerung **MFSx** versorgt optional ein erstes Magnetfelderzeugungsmittel **MGx** mit elektrischer Energie. Das erste Magnetfelderzeugungsmittel **MGx** erzeugt optional eine magnetische Flussdichte Bₓ, die optional im Wesentlichen eine Richtung aufweist, die optional der ersten Richtung, also beispielsweise der Richtung der X-Achse, entspricht. Die erste Magnetfeldsteuerung **MFSx** bestromt optional das erste Magnetfelderzeugungsmittel **MGx** mit einem ersten elektrischen Strom **Ix.** Optional steuert die Steuervorrichtung **µC** das erste Magnetfelderzeugungsmittel **MGx** über die erste Magnetfeldsteuerung **MFSx.** Optional regelt die erste Magnetfeldsteuerung **MFSx** die Erzeugung der magnetischen Flussdichte Bₓ durch das erste Magnetfelderzeugungsmittel **MGx** in der Art, dass die vom ersten Sensor **MSx** erfasste magnetische Flussdichte B bzw. die vom ersten Sensor **MSx** erfasste magnetische Feldstärke H einem ersten Wert entspricht. Optional ist dieser erste Wert Null. Hierfür wertet die erste Magnetfeldsteuerung **MFSx** den vom ersten Sensor **MSx** erfassten Wert der magnetischen Flussdichte B bzw. den vom ersten Sensor **MSx** erfassten Wert der magnetischen Feldstärke H aus. Optional erfasst ein zweiter Sensor **MSy** die Stärke der magnetischen Flussdichte B und/oder der magnetischen Feldstärke H in einer zweiten Richtung, beispielsweise einer Y-Achse. Optional ist die Richtung der Y-Achse senkrecht zur Richtung der X-Achse gewählt. Eine zweite Magnetfeldsteuerung **MFSy** versorgt optional ein zweites Magnetfelderzeugungsmittel **MGy** mit elektrischer Energie. Das zweites Magnetfelderzeugungsmittel **MGy** erzeugt optional eine magnetische Flussdichte B_{y}, die optional im Wesentlichen eine Richtung aufweist, die optional der zweiten Richtung, also beispielsweise der Richtung der Y-Achse, entspricht. Die zweite Magnetfeldsteuerung **MFSy** bestromt optional das zweite Magnetfelderzeugungsmittel **MGy** mit einem zweiten elektrischen Strom **Iy**. Optional steuert die Steuervorrichtung **µC** das zweite Magnetfelderzeugungsmittel **MGy** über die zweite Magnetfeldsteuerung **MFSy.** Optional regelt die zweite Magnetfeldsteuerung **MFSy** die Erzeugung der magnetischen Flussdichte B_{y} durch das zweite Magnetfelderzeugungsmittel **MGy** in der Art, dass die vom zweiten Sensor **MSy** erfasste magnetische Flussdichte B bzw. die vom zweiten Sensor **MSy** erfasste magnetische Feldstärke H einem zweiten Wert entspricht. Optional ist dieser zweite Wert Null. Hierfür wertet die zweite Magnetfeldsteuerung **MFSy** den vom zweiten Sensor **MSy** erfassten Wert der magnetischen Flussdichte B bzw. den vom zweiten Sensor **MSy** erfassten Wert der magnetischen Feldstärke H aus.

Optional erfasst ein dritter Sensor **MSz** die Stärke der magnetischen Flussdichte B und/oder der magnetischen Feldstärke H in einer dritten Richtung, beispielsweise einer Z-Achse. Optional ist die Richtung der Z-Achse senkrecht zur Richtung der X-Achse und senkrecht zur Richtung der Y-Achse gewählt. Eine dritte Magnetfeldsteuerung **MFSz** versorgt optional ein drittes Magnetfelderzeugungsmittel **MGz** mit elektrischer Energie. Das dritte Magnetfelderzeugungsmittel **MGz** erzeugt optional eine magnetische Flussdichte B_{z}, die optional im Wesentlichen eine Richtung aufweist, die optional der dritten Richtung, also beispielsweise der Richtung der Z-Achse, entspricht. Die dritte Magnetfeldsteuerung **MFSz** bestromt optional das dritte Magnetfelderzeugungsmittel **MGz** mit einem dritten elektrischen Strom Iz. Optional steuert die Steuervorrichtung **µC** das dritte Magnetfelderzeugungsmittel **MGz** über die dritte Magnetfeldsteuerung **MFSz.** Optional regelt die dritte Magnetfeldsteuerung **MFSz** die Erzeugung der magnetischen Flussdichte B_{z} durch das dritte Magnetfelderzeugungsmittel **MGz** in der Art, dass die vom dritten Sensor **MSz** erfasste magnetische Flussdichte B bzw. die vom dritten Sensor **MSz** erfasste magnetische Feldstärke H einem dritten Wert entspricht. Optional ist dieser dritte Wert Null. Hierfür wertet die dritte Magnetfeldsteuerung **MFSz** den vom dritten Sensor **MSz** erfassten Wert der magnetischen Flussdichte B bzw. den vom dritten Sensor **MSz** erfassten Wert der magnetischen Feldstärke H aus.

Der vorgeschlagene verlegbare Quantencomputer **QC** verfügt typischerweise über ein optisches System **OS,** das es der Lichtquelle **LED** erlaubt, die Quantenpunkte **NV1, NV2, NV3** mit Pumpstrahlung **LB** zu bestrahlen. Optional handelt es sich bei dem optischen System **OS** um ein konfokales Mikroskop. Optional ermöglicht das optische System **OS** aber auch die optische Auslesung des Zustands von Quantenpunkten **NV1, NV2, NV3** des verlegbaren Quantencomputers **QC.** Hierzu weist der verlegbare Quantencomputer **QC** des verlegbaren Quantencomputersystems **QUSYS** beispielsweise optional einen dichroitischen Spiegel **DBS** auf, der die von den Quantenpunkten **NV1, NV2, NV3** emittierte Fluoreszenzstrahlung **FL** passieren lässt und die Pumpstrahlung **LB** der Lichtquelle **LD** auf die Quantenpunkte **NV1, NV2, NV3** lenkt und die Pumpstrahlung **LB** von dem Fotodetektor **PD** zur Detektion der Fluoreszenzstrahlung **FL** abhält. Statt eines dichroitischen Spiegels **DBS** kann der verlegbare Quantencomputer **QC** der Quantencomputersystems **QUSYS** beispielsweise auch einen dichroitischen Spiegel **DBS** aufweisen, der die von den Quantenpunkten **NV1, NV2, NV3** emittierte Fluoreszenzstrahlung **FL** wegspiegelt und die Pumpstrahlung **LB** der Lichtquelle **LD** über das optische System **OS** auf die Quantenpunkte **NV1, NV2, NV3** passieren lässt, sodass die Pumpstrahlung **LB** der Lichtquelle **LD** diese Quantenpunkte **NV1, NV2, NV3** mit Pumpstrahlung **LB** der Pumpstrahlungswellenlänge λ**ₚₘₚ** bestrahlt. In dem Fall erfasst optional das optische System **OS** die Fluoreszenzstrahlung **FL** der Quantenpunkte **NV1, NV2, NV3** und der dichroitischen Spiegel **DBS** spiegelt diese Fluoreszenzstrahlung **FL** auf den Fotodetektor **PD** zur Detektion der Fluoreszenzstrahlung **FL.** Der vorschlagsgemäße verlegbare Quantencomputer **QC** umfasst somit, sofern er eine optische Auslesung der Zustände der Quantenpunkte **NV1, NV2, NV3** verwendet, einen Fotodetektor **PD** zur Erfassung der Fluoreszenzstrahlung **FL** der Quantenpunkte **NV1, NV2, NV3.** Der Fotodetektor **PD** erzeugt typischerweise in Abhängigkeit von der Fluoreszenzstrahlung **FL** ein Empfangssignal **S0**. Ein im Signalpfad nachfolgender Verstärker **V** verstärkt und filtert typischerweise das Empfangssignal **S0** zu einem verstärkten Empfangssignal **S1.** Der Verstärker **V** dient somit typischerweise der Verstärkung und/oder Filterung des Ausgangssignals des Fotodetektors **PD,** das typischerweise das Empfangssignal **S0** ist. Optional ist das verstärkte Empfangssignal **S1** ein digitalisiertes Signal bestehend aus einem oder mehreren Abtastwerten. Optional erfasst die Steuervorrichtung **µC** beispielsweise mittels eines Analog-zu-Digital-Wandlers **ADCV** den Wert des verstärkten Empfangssignals **S1.** Der vorschlagsgemäße verlegbare Quantencomputer **QC** umfasst, sofern er eine elektronische Auslesung der Zustände der Quantenpunkte **NV1, NV2, NV3** verwendet, eine entsprechende Vorrichtung zum elektronischen Auslesen der Zustände der Quantenpunkte **NV1, NV2, NV3.** An dieser Stelle verweist die hier vorgelegte Schrift nochmals ausdrücklich auf die Schrift DE 10 2020 125 189 A1. Optional sind diese Vorrichtungsteile in einem optional gemeinsamen Gehäuse **GH** untergebracht, das optional im Sinne der hier vorgelegten Schrift Teil des verlegbaren Quantencomputers **QC** ist. Wie oben bereits beschrieben, befinden sich die Quantenpunkte **NV1, NV2, NV3** und die Kernquantenpunkte **CI1₁, CI1₂, CI1₃, CI2₁, CI2₂, CI2₃**, **CI3₁**, **CI3₂, CI3₃** optional innerhalb des besagten Substrats **D.** Optional ist das Substrat **D** mit Dotierstoffen dotiert. Optional umfasst das Substrat **D** im Wesentlichen optional zumindest im Wirkungsbereich der Quantenpunkte **NV1, NV2, NV3** im Wesentlichen Atome ohne ein magnetisches Moment. Im Falle von Diamant als Material des Substrats **D** umfasst der Diamant optional im Wesentlichen ¹²C-Isotope. Optional bilden im Falle der Verwendung von NV-Zentren in Diamant als Quantenpunkte **NV1, NV2, NV3** Sauerstoffatome ¹⁶O, ¹⁸O und/oder Phosphor- und/oder Schwefelatome ³²S, ³⁴S, ³⁶S ohne magnetisches Moment in dem Substrat **D** im Bereich der Quantenpunkte **NV1, NV2, NV3** die Dotierung aus. Diese Dotierung im Bereich der Quantenpunkte **NV1, NV2, NV3** hat zwei Aufgaben. Zum Ersten verändern diese Dotieratome das Fermi-Niveau E_{F} im Bereich der Quantenpunkte **NV1, NV2, NV3.** Im Falle der Verwendung von NV-Zentren als Quantenpunkten **NV1, NV2, NV3** verschiebt diese Dotierung mit den besagten Dotieratomen das Fermi-Niveau E_{F} im Bereich dieser Quantenpunkte **NV1, NV2, NV3.** Im Falle einer n-Dotierung verschiebt diese n-Dotierung das Fermi-Niveau E_{F} im Bereich dieser Quantenpunkte **NV1, NV2, NV3** so, dass das Fermi-Niveau angehoben wird und von daher die energetisch niedriger liegenden NV-Zentren optional negativ geladen sind. Die NV-Zentren stellen dann daher NV⁻-Zentren dar. Da NV⁻-Zentren aufgrund des negativen Ladungselektrons über ein magnetisches Moment dieser Elektronenkonfiguration verfügen, sind NV⁻-Zentren somit für die Verwendung als Quantenpunkte **NV1, NV2, NV3** besonders geeignet. Zum Zweiten führt diese Dotierung, die optional eine n-Dotierung ist, dazu, dass die Fehlstellen (Englisch Vacancies) im Diamant während der Implantation zur Bildung der NV-Zentren elektrisch geladen sind und sich daher aufgrund der elektrischen Abstoßung der negativ geladenen Einzelfehlstellen nicht zusammenballen. Hierdurch bleibt die Konzentration der Einzelfehlstellen hoch, was die Wahrscheinlichkeit einer Bildung von NV-Zentren bei der Implantation von Stickstoff in Diamant anhebt. Dabei werden mit einer Dotierung eines Diamant Substrats **D** mit Schwefel zeitlich vor der Stickstoff-Implantation die besten Ergebnisse erzielt. Optional ist eine Dotierung mit einem Schwefelisotop ohne magnetisches Kernmoment. Solche Isotope sind die Isotope ³²S, ³⁴S, ³⁶S. Eine Alternative stellt eine Dotierung mit den Sauerstoffisotopen ¹⁶O, ¹⁸O da, die aber weniger geeignet ist. Es ist bekannt, dass eine n-Dotierung mit Phosphor ebenfalls erfolgreich sein soll. Allerdings weist Phosphor ein magnetisches Kernmoment auf. Grundsätzlich ist also eine N-Dotierung mit Atomen, die kein magnetisches Kernmoment aufweisen sinnvoll. Eine Verschiebung des Fermi-Niveaus E_{F} mit anderen Mitteln, beispielsweise mittels auf ein geeignetes Potenzial gegenüber dem Substrat **D** vorgeladener, optional sehr dünner Elektroden, führte im Vorfeld der Ausarbeitung dieser Schrift ebenfalls zu solchen Effekten. Optional weist das Substrat **D** des verlegbaren Quantencomputers somit zumindest zeitweise lokal eine Verschiebung des Fermi-Niveaus E_{F} auf, sodass dieses dann energetisch so verschoben ist, dass die Ausbeute an Quantenpunkten **NV1, NV2, NV3** in Form von NV-Zentren während der Implantation der Stickstoffatome erhöht ist. In analoger Weise kann das Fermi-Niveau E_{F} anderer Substratmaterialien und/oder in Relation zu anderen paramagnetischen Zentren (z. B. des ST1-Zentrums) bei der Ausbildung dieser paramagnetischen Zentren beeinflusst werden. Optional befinden sich die Lichtquelle **LD** und der Lichtquellentreiber **LDRV** und das Substrat **D** und die Vorrichtungen zur Erzeugung des elektromagnetischen Wellenfeldes **MW/RF-AWFG, mWA, MGx, MGy, MGz** und die Steuervorrichtung **µC** und die Speicher **RAM, NVM** der Steuervorrichtung **µC** und das optische System **OS** und ggf. der Verstärker **V** und die Abschirmung **AS** innerhalb des Gehäuses **GH,** wodurch sie optional gegenüber von außen eindringender elektromagnetischer Störstrahlung abgeschirmt sind. Hierzu umfasst das Material des Gehäuses **GH** optional ein elektrisch leitfähiges Material. Optional bildet das Gehäuse **GH** einen Faraday'schen Käfig. Optional umfasst das Material des Gehäuses **GH** auch ein Material zur Abschirmung gegen magnetostatische und/oder quasistatische magnetischer Felder. Hierfür umfasst das Material des Gehäuses **GH** optional sogenanntes µ-Metall, bei dem es sich um ein besonders weichmagnetisches Material handelt.

Das optionale, hier für die Verwendung in Quantencomputern **QC** und quantentechnologischen Vorrichtungen vorgeschlagene µ-Metall (Mumetall, englisch Mu-metal oder englisch permalloy) kann zu einer Gruppe weichmagnetischer Nickel-Eisen-Legierungen mit 72 bis 80 % Nickel, sowie Anteilen von Kupfer, Molybdän, Kobalt oder Chrom mit hoher magnetischer Permeabilität gehören, die in dem vorgeschlagenen verlegbaren Quantencomputer **QC** bzw. der vorgeschlagenen quantentechnologischen Vorrichtung zur Abschirmung **AS** niederfrequenter externer Magnetfelder eingesetzt wird.

Solches µ-Metall besitzt optional eine hohe Permeabilität (µᵣ=50.000 bis 140.000 oder mehr), die bewirkt, dass sich der magnetische Fluss der externen niederfrequenten Magnetfelder im Material des Gehäuses **GH** des verlegbaren Quantencomputers **QC** konzentriert. Dieser Effekt führt bei der Abschirmung **AS** niederfrequenter oder statischer magnetischer Störfelder zu einer beachtlichen Schirmdämpfung. Somit sind die Quantenpunkte **NV1, NV2, NV3** und Kernquantenpunkte **CI1₁, CI1₂, CI1₃**, **CI2₁, CI2₂, CI2₃**, **CI3₁, CI3₂, CI3₃** auch dann gegen solche externen magnetischen Felder geschirmt, wenn der verlegbare Quantencomputer **QC** im Zuge einer Verlegung die räumliche Orientierung und/oder den Ort ändert, wobei mit einer solchen Änderung der Orientierung des verlegbaren Quantencomputers **QC** und/oder der Ortsänderung eines solchen verlegbaren Quantencomputers **QC** typischerweise eine Änderung der Orientierung und oder der Stärke der magnetischen Felder, die auf den verlegbaren Quantencomputer **QC** einwirken, relativ zum verlegbaren Quantencomputer **QC,** einhergeht. Dies ist insbesondere dann von Vorteil, wenn der verlegbare Quantencomputer **QC** z. B. zur Gewichtsersparnis nicht über eine aktive Schirmung gegen externe magnetische Felder verfügt, die das störende Magnetfeld mittels eines Magnetfeldsensors **MSX, MSy, MSz** erfassen würde und mittels geeigneter Mittel **MFSx, MFSy, MFSz, MGX, MGy, MGz** ein magnetisches Gegenfeld zur Kompensation erzeugen würde.

Die Abschirmung **AS** des Quantencomputers **QC** kann einen Teil des Gehäuses **GH** des verlegbaren Quantencomputers **QC** oder das Gehäuse **GH** des verlegbaren Quantencomputers **QC** selbst sein. Wie bereits beschrieben, steuert die Steuervorrichtung **µC** die Lichtquelle **LD** mit Hilfe des besagten Lichtquellentreibers **LDRV.** Dabei erzeugt die Steuervorrichtung **µC** optional ein Lichtquellensteuersignal, das beispielsweise das Sendesignal **S5** sein kann, mittels geeigneter Mittel. Der Lichtquellentreiber **LDRV** versorgt dann typischerweise die Lichtquelle **LD** in Abhängigkeit von dem Lichtquellensteuersignal der Steuervorrichtung **µC** mit elektrischer Energie. Die Lichtquelle **LD** erzeugt die Pumpstrahlung **LB** somit optional in Abhängigkeit von dem Lichtquellensteuersignal der Steuervorrichtung **µC.** Optional erzeugt somit die Lichtquelle **LD** die Pumpstrahlung **LB** optional in Abhängigkeit von dem Sendesignal **S5.** In dem Fall der Figur 1 übermittelt die Steuervorrichtung **µC** das Lichtquellensteuersignal optional über den Steuerdatenbus **SDB** und den Wellenformgenerator **WFG** als Sendesignal **S5.** Im Folgenden kann der Leser also zur Vereinfachung und zum besseren Verständnis annehmen, dass in der Figur 1 das Lichtquellensteuersignal gleich dem Sendesignal **S5** ist. Die Lichtquelle **LD** bestrahlt dann mittels des optischen Systems **OS** den Quantenpunkt oder die mehreren Quantenpunkte **NV1, NV2, NV3** mit Pumpstrahlung **LB** einer Pumpstrahlungswellenlänge **λₚₘₚ.** Die Pumpstrahlungswellenlänge λ**ₚₘₚ** liegt optional zwischen 400 nm bis 700 nm Wellenlänge und/oder besser zwischen 450 nm bis 650 nm und/oder besser zwischen 500 nm bis 550 nm und/oder besser zwischen 515 nm bis 540 nm und/oder optimalerweise bei einer Wellenlänge von 532 nm. Im Fall von NV-Zentren in Diamant hat sich eine LaserDiode der Firma OSRAM vom Typ PLT5 520B mit 520nm Wellenlänge als beispielhafte Quelle der Pumpstrahlung **LB** für die Bestrahlung von NV-Zentren in Diamant als Material des Substrats D bewährt. Die Quantenpunkte **NV1, NV2, NV3** emittieren dann in Abhängigkeit von ihrem Zustand und von der Pumpstrahlung **LB** Fluoreszenzstrahlung **FL** mit einer Fluoreszenzwellenlänge **λ_{fl}.** Im Fall von NV-Zentren als paramagnetischen Zentren von Quantenpunkten liegt die Fluoreszenzwellenlänge typischerweise im Bereich von 638 nm. Die Intensität **I_{fl}** der Fluoreszenzstrahlung **FL** hängt dabei typischerweise von der Intensität **Iₚₘₚ** der Pumpstrahlung **LB** und damit auch von dem Lichtquellensteuersignal ab. Der eine Quantenpunkt oder die mehreren Quantenpunkte **NV1, NV2, NV3** emittieren somit Fluoreszenzstrahlung **FL** mit einer Fluoreszenzstrahlungswellenlänge **λ_{fl}** bei Bestrahlung mit elektromagnetischer Strahlung der Pumpstrahlungswellenlänge **λₚₘₚ.** Im Falle einer optischen Auslesung des Zustands der Quantenpunkte **NV1, NV2, NV3** bzw. des Quantenpunkts erfasst der Fotodetektor **PD** mittels des optischen Systems **OS** die Fluoreszenzstrahlung **FL** und wandelt die Fluoreszenzstrahlung **FL** in ein Empfängerausgangssignal **S0** um. Das Empfängerausgangssignal **S0** hängt typischerweise von der Fluoreszenzstrahlung **FL ab,** die den Fotodetektor **PD** trifft. Optional hängt das Empfängerausgangssignal **S0** von der Intensität I_{fl} der Fluoreszenzstrahlung **FL,** die den Fotodetektor **PD** trifft, ab. In dem Fall der optischen Auslesung des Zustands des oder der Quantenpunkte **NV1, NV2, NV3** verstärkt und/oder filtert der Verstärker V das Empfängerausgangssignal **S0** und stellt das Signal optional dem Rechnerkern **CPU** der Steuervorrichtung **µC** als verstärktes Empfangssignal **S1** zur Verfügung. Optional legt der Verstärker **V** die Werte der verstärkten, und mittels eines Analog-zu-Digital-Wandlers des Verstärkers V digitalisierten, Abtastwerte des verstärkten Empfangssignals **S1** in einem Speicher des Verstärkers V ab. Der Rechnerkern **CPU** der Steuervorrichtung **µC** des verlegbaren Quantencomputers QC kann dann beispielsweise über den Steuerdatenbus **SDB** diese Abtastwerte des verstärkten Empfangssignals S1 aus dem Speicher des Verstärkers **V** abfragen und weiterverarbeiten. Im Falle der elektronischen Auslesung der Quantenpunkte **NV1, V2, NV3** erzeugen in Figur 1 zur besseren Übersicht nicht eingezeichnete Vorrichtungen **HS1** bis **HS3** und **VS1** zum elektronischen Auslesen der Zustände der Quantenpunkte **NV1, NV2, NV3** mit einer Kontrolleinheit B **CBB** ein zweites Empfangssignal. Wie bereits beschrieben, steuert die die Steuervorrichtung **µC** des verlegbaren Quantencomputers **QC** die eine oder mehreren Vorrichtungen zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃**, **CI3₁**, **CI3₂, CI3₃.** Durch Ansteuerung der einen oder mehreren Vorrichtungen **LH1, LH2, LH3, LV1)** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃**, **CI3₁**, **CI3₂, CI3₃** und/oder durch Steuerung der Emission der Lichtquelle **LD** kann die Steuervorrichtung **µC** des verlegbaren Quantencomputers **QC** somit die Zustände der Quantenpunkte **NV1, NV2, NV3** und/oder Kernquantenpunkte **CI1₁, CI1₂, CI1₃**, **CI2₁, CI2₂, CI2₃**, **CI3₁**, **CI3₂, CI3₃** ändern und/oder miteinander verkoppeln. Optional verfügt die Steuervorrichtung **µC** des verlegbaren Quantencomputers **QC** über Mittel, um aus einem oder mehreren Empfangssignalen, insbesondere aus dem ersten Empfangssignal und oder dem zweiten Empfangssignal ein Messwertsignal mit einem oder mehreren Messwerten zu erzeugen. Da diese Empfangssignale von den Zuständen der Quantenpunkte **NV1, NV2, NV3** und/oder Kernquantenpunkte **CI1₁, CI1₂, CI1₃, CI2₁, CI2₂, CI2₃**, **CI3₁**, **CI3₂, CI3₃** abhängen hängt das Messwertsignal typischerweise somit ebenfalls von Zuständen der Quantenpunkte **NV1, NV2, NV3** und/oder Kernquantenpunkte **CI1₁, CI1₂, CI1₃, CI2₁, CI2₂, CI2₃**, **CI3₁**, **CI3₂, CI3₃** ab.

Zur Erreichung der Verlegbarkeit wurde bis hierher insbesondere die optionale Verwendung eines raumtemperaturfähigen verlegbaren Quantencomputers **QC** auf Basis von paramagnetischen Zentren als Quantenpunkten **NV1, NV2, NV3** unter Verwendung nuklearer magnetischer Momente als Kernquantenpunkten **CI1₁, CI1₂, CI1₃**, **CI2₁, CI2₂, CI2₃**, **CI3₁**, **CI3₂, CI3₃** mit optischer Pumpstrahlung **LB** und optischer Zustandsauslesung oder elektronischer Zustandsauslesung der Quantenpunktzustände der Quantenpunkte **NV1, NV2, NV3** und einer geeigneten verlegbaren, möglichst passiven Abschirmung **AS** vorgeschlagen.

Der hier vorgelegte Vorschlag schlägt nun vor, dass der verlegbare Quantencomputer **QC** und/oder die mobile Vorrichtung optional eine verlegbare Energieversorgung **EV** zur Versorgung des verlegbaren Quantencomputers **QC** mit Energie aufweist. Dies kann die Verlegbarkeit erleichtern bzw. begünstigen. Optional befindet sich die Energieversorgung **EV** innerhalb des Gehäuses **GH.** Dabei kann das Gehäuse **GH** ein Teilgehäuse mit einem magnetisch abgeschirmten Bereich umfassen, in dem sich die für Magnetfelder empfindlichen Teilvorrichtungen des verlegbaren Quantencomputers **QC** befinden. Außerhalb dieses Teilgehäuses, aber noch innerhalb des Gehäuses **GH** befinden sich optional die Teile des verlegbaren Quantencomputers **QC,** die zum Ersten nicht oder weniger empfindlich gegen magnetische und elektromagnetische externe Störfelder sind, und/oder selbst elektromagnetische und/oder magnetische Störfelder erzeugen. Die Energieversorgung **EV** ist daher optional außerhalb des Teilgehäuses, jedoch innerhalb des Gehäuses **GH** des verlegbaren Quantencomputers **QC** platziert. Die Quantencomputer **QC1 bis QC16** eines Quantencomputersystems **QUSYS** können auch ein gemeinsames Gehäuse **GH** aufweisen.

Typischerweise ist der verlegbare Quantencomputer **QC** gemäß der in Figur 1 gezeigten optionalen Ausführungsform zusammen mit allen notwendigen Mitteln zu seinem Betrieb Teil des verlegbaren Quantencomputersystem **QUSYS,** also z. B. des Smartphones oder des tragbaren Quantencomputersystems **QUSYS** oder des Fahrzeugs oder des verlegbaren Waffensystems.

Diese Mittel zum Betrieb des verlegbaren Quantencomputers **QC** können somit optional ebenfalls verlegbar sein. Das vorgeschlagene verlegbare Quantencomputersystem **QUSYS** umfasst als verlegbare Mittel für dessen Betrieb insbesondere eine oder mehrere verlegbare Energieversorgungen **EV** und/oder einen oder mehrere verlegbare Quantencomputer **QC.** Im Sinne dieser Schrift sind diese Mittel zum Betrieb des verlegbaren Quantencomputers **QC** ebenfalls Teil des Smartphones oder des Kleidungsstücks oder des tragbaren Quantencomputersystem **QUSYS** oder des Fahrzeugs oder des verlegbaren Waffensystems. Dabei ist für die Auslegung der Ansprüche unerheblich, ob der Betrieb des verlegbaren Quantencomputers **QC** trotz des Vorhandenseins aller Mittel zum Betrieb des verlegbaren Quantencomputers **QC** als Teil des verlegbaren Quantencomputers **QC** an Mittel und/oder Kommandos außerhalb des Quantencomputers **QC** gekoppelt ist. Wichtig ist, dass der verlegbare Quantencomputer **QC** ohne diese Mittel und/oder Kommandos außerhalb des Quantencomputers **QC** potenziell funktionstüchtig ist. Beispielsweise soll ein verlegbares Quantencomputersystem **QUSYS,** das aufgrund der Programmierung der zentralen Steuereinrichtung **ZSE** und/oder der Programmierung einer Steuervorrichtung **µC** eines Quantencomputers **QC** des Quantencomputersystems **QUSYS** auf ein externes Startkommando wartet, von den Ansprüchen immer noch umfasst sein.

Die mobile verlegbare Energieversorgung **EV** umfasst optional eine oder mehrere verlegbare Ladevorrichtungen **LDV** mit einer oder mehreren Energieversorgungen **PWR** der Ladevorrichtungen **LDV,** eine oder mehrere verlegbare Trennvorrichtungen **TS,** eine oder mehrere verlegbare Energiereserven **BENG** und eine oder mehrere verlegbare Energieaufbereitungsvorrichtungen **SRG.** Die mobile Energieversorgung **EV** umfasst optional eine Energieaufbereitungsvorrichtung **SRG,** insbesondere einen Spannungswandler oder einen Spannungsregler oder einen Stromregler, die verhindert, dass Änderungen des Energieinhalts der Energiereserve **BENG** der Energieversorgung **EV,** beispielsweise des Ladezustands eines Akkumulators als Energiereserve **BENG** der Energieversorgung **EV,** sich auf den verlegbaren Quantencomputer **QC** und/oder das Quantencomputersystem **QUSYS** auswirkt. Dabei versorgt die mobile Energieversorgung **EV** die Energieaufbereitungsvorrichtung **SRG** mit Energie und die Energieaufbereitungsvorrichtung **SRG** z. B. den verlegbaren Quantencomputer **QC** und ggf. weitere Teile des Quantencomputersystems **QUSYS** mit elektrischer Energie. In dem Fall versorgt also die Energieversorgung **EV** z. B. den Quantencomputer **QC** nur indirekt über die Energieaufbereitungsvorrichtung **SRG** mit elektrischer Energie.

Optional ist der verlegbare Quantencomputer **QC** dazu eingerichtet und vorgesehen, mit einer verringerten ersten Anzahl an Quantenpunkten **NV1, NV2, NV3** auch bei Raumtemperatur arbeiten zu können. Raumtemperatur als Betriebstemperatur der Quantenpunkte **NV1, NV2, NV3** führt zu einer Verbreiterung der Resonanzen im Resonanzspektrum, sodass diese sich überlagern. Optional weist der vorgeschlagene verlegbare Quantencomputer **QC** daher eine verlegbare Kühlvorrichtung **KV** auf, die zusammen mit dem verlegbaren Quantencomputer **QC** verlegbar ist. Die betreffende verlegbare Kühlvorrichtung **KV** ist optional dazu geeignet und/oder vorgesehen ist, die Temperatur der Quantenpunkte **NV1, NV2, NV3** und/oder Kernquantenpunkte **CI1₁, CI1₂, CI1₃, CI2₁, CI2₂, CI2₃**, **CI3₁**, **CI3₂, CI3₃** zu senken. Die Absenkung der Betriebstemperatur der Quantenpunkte **NV1, NV2, NV3** führt zu einer Verschmälerung der Resonanzen im Resonanzspektrum, sodass diese sich in geringerem Maße oder nicht überlagern. Eine solche Kühlung mittels einer Kühlvorrichtung **KV** senkt optional die Temperatur der Quantenpunkte **NV1, NV2, NV3** und/oder Kernquantenpunkte **CI1₁, CI1₂, CI1₃, CI2₁, CI2₂, CI2₃**, **CI3₁**, **CI3₂, CI3₃** soweit ab, dass der Quantencomputer **QC** mit einer gegenüber der ersten Anzahl an Quantenpunkten **NV1, NV2, NV3** erhöhten zweiten Anzahl an Quantenpunkten **NV1, NV2, NV3** arbeiten kann.

Optional umfasst der verlegbarer Quantencomputer **QC** als verlegbare Kühlvorrichtung **KV** ein Closed Loop Helium Gas Cooling System **HeCLCS,** das auch als Closed Cycle Cryocooler bezeichnet wird. Wir verweisen hier beispielsweise auf https://en.wikipedia.org/wiki/Cryocooler.

Eine weitere optionale Ausprägung des Vorschlags betrifft einen verlegbaren Quantencomputer, der eine zweite verlegbare Energieversorgung aufweist. Die verlegbare zweite Energieversorgung kann mit der ersten verlegbaren Energieversorgung (Bat) ganz oder teilweise identisch sein. Optional versorgt diese zweite verlegbare Energieversorgung **BENG** die verlegbare Kühlvorrichtung **KV,** mit Energie. Dies hat den Vorteil, dass die erste Energieversorgung nicht durch transiente Störungen der Elektromotoren der verlegbaren Kühlvorrichtung **KV** gestört wird.

Eine weitere optionale Ausprägung des Vorschlags betrifft einen verlegbaren Quantencomputer **QC** zur Verwendung in einer mobilen Vorrichtung. Optional ist eine Verwendung in einem Smartphone oder einem tragbaren Quantencomputersystem **QUSYS** oder in einem Fahrzeug **Kfz** oder in einem Waffensystem. Das bedeutet dass die hier vorgelegte Schrift ein verlegbares Waffensystem mit einem verlegbaren Quantencomputer **QC** vorschlägt, der Teil des verlegbaren Waffensystems ist. Optional ist die Verwendung des verlegbaren Quantencomputers **QC** als Teil des Feuerleitsystems des Waffensystems oder des Navigationssystems **GPS, NAV** des Waffensystems. Optional verwendet das Waffensystem den verlegbaren Quantencomputer **QC** zu Lösung NP-vollständiger Probleme, wie beispielsweise aber nicht nur die Identifikation von Zielen, die Klassifikation von Zielen, Die Zuordnung von Zielen zu bekannten feindlichen Objekten wie Flugzeugen und/oder Raketentypen, Fahrzeugtypen, Schiffstypen, Flugkörpertypen, Schwimmkörpertypen, Typen von Unterwasserfahrzeugen, Typen von Unterwasserobjekten, Typen von Raumfahrzeugen, Typen von Satelliten etc. Des Weiteren können die Auswahl der Reihenfolge der Zielbekämpfung und/oder die Auswahl der Waffenmittel und/oder die Auswahl der Munition zur Bekämpfung der Ziele zu den Problemen gehören, die das Waffensystem mit Hilfe des verlegbaren Quantencomputers **QC** löst. Außerdem kann das verlegbare Waffensystem mit Hilfe des verlegbaren Quantencomputer **QC** die Route des jeweiligen Geschosses oder Gefechtskopfes oder Waffenträgers zum Ziel mit Hilfe des verlegbaren Quantencomputers **QC** festlegen und/oder modifizieren und/oder überwachen.

Ein solches Verfahren beginnt mit der Erfassung von Umfelddaten durch das Quantencomputersystem **QUSYS** in einem Schritt A). Die Erfassung der Umfelddaten erfolgt typischerweise mittels geeigneter Sensoren, die Teil des Quantencomputersystems **QUSYS** sein können oder die mit diesem Quantencomputersystem **QUSYS** über Datenverbindungen verbunden sind und Umfelddaten an das Quantencomputersystem **QUSYS** übermitteln. In einem Schritt B) identifiziert das Quantencomputersystem **QUSYS** Objekte im Umfeld des Quantencomputersystems **QUSYS,** wobei diese Umfeld auch entfernt vom Quantencomputersystem **QUSYS** sein kann. Dabei klassifiziert in einem Schritt C) das Quantencomputersystem **QUSYS** die identifizierten Objekte im Umfeld des Quantencomputersystems **QUSYS.** Typischerweise klassifiziert das Quantencomputersystem **QUSYS** in dem Schritt C) die Objekte nach Gefährlichkeit und/oder Verwundbarkeit und/oder strategischer Wirkung, um eine Maximierung einer Waffenwirkung zu erzielen. Optional erfolgt diese Klassifikation in Schritt C) mittels eines neuronalen Netzwerkmodells, das das Quantencomputersystem **QUSYS** optional ausführt. Optional nutzt das Quantencomputersystem **QUSYS** für diesen Schritt C) eine oder mehr Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS** um die Klassifikation der Objekte durchzuführen. In einem Schritt D legt das Quantencomputersystem **QUSYS** die Waffen und/oder die Munition und/oder die Konfiguration und/oder die Reihenfolge der angegriffenen Objekte und/oder die angegriffenen und/oder die nicht angegriffenen Objekte fest. Optional erfolgt diese Festlegung in Schritt D) mittels eines neuronalen Netzwerkmodells, das das Quantencomputersystem **QUSYS** optional ausführt. Optional nutzt das Quantencomputersystem **QUSYS** in dem Schritt D) eine oder mehrere Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS** um diese Festlegungen durchzuführen. In einem Schritt E) Schlägt das Quantencomputersystem **QUSYS** optional eins oder mehrere dieser festgelegten Angriffsszenarien einem Bediener, beispielsweise einem oder mehreren Piloten und/oder einem oder mehreren Feuerleitoffizieren oder der gleichen vor. Sofern diese den Feuerbefehl geben, kann beispielsweise das Quantencomputersystem **QUSYS** das freigegebene Angriffsszenario in einem Schritt F) umsetzen. Dies ist in Figur 12 dargestellt.

Optional weist der verlegbare Quantencomputer **QC** eine Abschirmung **AS** auf. Optional schirmt die Abschirmung **AS** die Quantenpunkte **NV1, NV2, NV3,** also beispielsweise die NV-Zentren, gegen elektromagnetische Felder und/oder elektromagnetische Wellen ab.

Der verlegbare Quantencomputer **QC** umfasst optional ein optisches System **OS,** das die elektromagnetische Strahlung der Lichtquelle **LD** auf die Quantenpunkte **NV1, NV2, NV3,** also beispielsweise die paramagnetischen Zentren bzw. die NV-Zentren lenkt. Das optische System **OS** umfasst optional ein konfokales Mikroskop.

Optional umfasst das optische System **OS** eine erste Kamera **CM1,** die die Fluoreszenzstrahlung **FL** der paramagnetischen Zentren **NV1, NV2, NV3** und/oder von Clustern solcher paramagnetischer Zentren, also beispielsweise von NV-Zentren und/oder Clustern von NV-Zentren, erfasst. Andere fluoreszierende Defektzentren mit anderen Fluoreszenzwellenlängen sind denkbar. Solche anderen fluoreszierenden Defektzentren mit anderen Fluoreszenzwellenlängen können somit eine Fluoreszenzstrahlung mit einer Fluoreszenzwellenlänge aufweisen, die von der Fluoreszenzwellenlänge λ_{fl} der Quantenpunkte **NV1, NV2, NV3** verschieden ist und daher beispielsweise mittels eines dichroitischen Spiegels an Stelle des halbdurchlässigen Spiegels **STM** oder mittels eines optischen Filters von der Pumpstrahlung **LB** und der Fluoreszenzstrahlung **FL** der Quantenpunkte **NV1, NV2, NV3** optisch abgetrennt werden kann. Optional ist das Substrat **D** auf einem Positioniertisch gelagert. Der Positioniertisch umfasst optional eine translatorische Positioniervorrichtung **XT** in X-Richtung und eine translatorische Positioniervorrichtung **YT** in Y-Richtung die die Steuervorrichtung **µC** des Quantencomputers **QC** über den Steuerdatenbus **SDB** optional steuert.

Optional erfasst die erste Kamera **CM1** die Position des Substrats **D** relativ zum optischen System **OS** und damit die Position der Quantenpunkte **NV1, NV2, NV3** im Substrat **D.** Damit erfasst die erste Kamera **CM1** die Position der paramagnetischen Zentren, also beispielsweise der NV-Zentren, relativ zum optischen System **OS.** Verlagert sich das Substrat **D** beispielsweise durch mechanische Schwingungen oder andere Störungen relativ zum optischen System **OS,** so erfasst ein Bildverarbeitungssystem des verlegbaren Quantencomputers **QC** diese mechanische Verlagerung beispielsweise durch Auswertung der Position fluoreszierender paramagnetischer Defektzentren. Das Bildverarbeitungssystem erfasst dabei optional mittels der ersten Kamera CM1 die Fluoreszenzmuster der Defektzentren und vergleicht deren Position auf dem Bild mit Sollpositionen. Das Bildverarbeitungssystem ermittelt optional einen Verschiebungsvektor und repositioniert das Substrat **D** mittels des Positioniertisches **XT, YT** gegenüber dem optischen System **OS** in Abhängigkeit von dem ermittelten Verschiebungsvektor. Diese Repositionierung führt die Bildverarbeitungsvorrichtung optional in der Art aus, dass die Position des Quantenpunkts, beispielsweise des paramagnetischen Zentrums bzw. eines Clusters paramagnetischer Zentren, relativ zum optischen System **OS** nach Abschluss der Repositionierung optional im Wesentlichen unverändert ist. Optional ist das Bildverarbeitungssystem Teil des verlegbaren Quantencomputers **QC.** Typischerweise arbeitet die Steuervorrichtung **µC** des Quantencomputers als das Bildverarbeitungssystem. Das Bildverarbeitungssystem kann aber auch eine separate Teilvorrichtung des verlegbaren Quantencomputers **QC** sein. In dem Fall steuert optional die Steuervorrichtung **µC** das gesonderte Bildverarbeitungssystem über den Steuerdatenbus **SDB.** Das Bildverarbeitungssystem kann dann beispielsweise Teil der ersten Kameraschnittstelle **CIF** sein. Statt eines Bildverarbeitungssystems können auch andere Positionsverschiebungssensoren die Verlagerungen des Substrats **D** relativ zum optischen System und/oder Positionsverschiebungen des Substrats **D** relativ zum optischen System detektieren. Der vorgeschlagene Quantencomputer **QC** regelt auf Basis der Positionsverschiebungsdaten solcher Positionsverschiebungssensoren die Lage des Substrats **D** relativ zum optischen System **OS** dann nach. Beispielsweise können solche Positionsverschiebungssensoren die erfassten Positionsverschiebungsdaten der Steuervorrichtung **µC** des Quantencomputers **QC** über den Steuerdatenbus **SDB** übermitteln, sodass die Steuervorrichtung **µC** des Quantencomputers **QC** beispielsweise in Abhängigkeit von diesen erfassten Positionsverschiebungsdaten über den Steuerdatenbus **SDB** den Positioniertisch mittels der translatorischen Positioniervorrichtung **XT** in X-Richtung und mittels der translatorischen Positioniervorrichtung **YT** in Y-Richtung und das Substrat **D** gegenüber dem optischen System **OS** in Abhängigkeit von diesen ermittelten Positionsverschiebungsdaten wieder so repositioniert, als wenn im Wesentlichen keine Verschiebung stattgefunden hätte. Dies stellt sicher, dass der verlegbare Quantencomputer QC auch bei Vibrationen, Beschleunigungen und der gleichen funktioniert.

Optional umfasst der verlegbare Quantencomputer **QC** einen Fotodetektor **PD** und einen Verstärker **V.** Der Fotodetektor **PD** erfasst die Fluoreszenzstrahlung **FL** der Quantenpunkte **NV1, NV2, NV3,** wenn die Lichtquelle **LD** sie mit ihrer elektromagnetischen Strahlung, die als Pumpstrahlung **LB** dient, bestrahlt. Dies nutzt der verlegbare Quantencomputer **QC** optional zum Auslesen des Quantenzustands der Quantenpunkte **NV1, NV2, NV3.** Optional handelt es sich bei den Quantenpunkten **NV1, NV2, NV3** um paramagnetische Zentren. Optional handelt es sich bei den paramagnetischen Zentren um NV-Zentren in Diamant. Der Verstärker **V** verstärkt und/oder filtert das Empfängerausgangssignal **S0** des Fotodetektors **PD** zu einem verstärkten Empfängerausgangssignal **S1.** Das verstärkte Empfängerausgangssignal kann beispielsweise auch eine geordnete Menge von Daten in einem Speicher des Verstärkers **V** sein, wobei der Rechnerkern **CPU** der Steuervorrichtung **µC** optional über den Steuerdatenbus **SDB** diesen Speicher des Verstärkers **V** zumindest teilweise auslesen kann.

Des Weiteren kann der verlegbare Quantencomputer **QC** gemäß der in Figur 1 gezeigten optionalen Ausführungsform parallel oder alternativ zu dieser optischen Auslesung des Zustands von Quantenpunkten **NV1, NV2, NV3** auch eine elektronische Auslesung von Quantenpunkten **NV1, NV2, NV3** vornehmen. Zu diesem Zweck kann der verlegbare Quantencomputer **QC** alternativ oder parallel zu dem Fotodetektor **PD** und dem Verstärker **V** eine Vorrichtung zum elektronischen Auslesen der Zustände der Quantenpunkte **NV1, NV2, NV3** aufweisen. Optional umfasst die Vorrichtung zum elektronischen Auslesen der Zustände der Quantenpunkte **NV1, NV2, NV3** elektrisch leitfähige Leitungen zum Anlegen elektrische Felder im Wirkungsbereich der Quantenpunkte **NV1, NV2, NV3** und Kontakte zur Absaugung von Ladungsträgern im Bereich der Quantenpunkte **NV1, NV2, NV3.** Des Weiteren umfasst die Vorrichtung optional zum elektronischen Auslesen der Zustände der Quantenpunkte **NV1, NV2, NV3** Vorrichtungen zur Bereitstellung der Steuersignale zur Ansteuerung der besagten elektrisch leitfähigen Leitungen zum Anlegen elektrische Felder im Wirkungsbereich der Quantenpunkte **NV1, NV2, NV3.** Des Weiteren umfasst die Vorrichtung optional zum elektronischen Auslesen der Zustände der Quantenpunkte **NV1, NV2, NV3** Vorrichtungen zur Verstärkung der über die Kontakte zur Absaugung von Ladungsträgern im Bereich der Quantenpunkte **NV1, NV2, NV3** abgesaugten elektrischen Ströme von Ladungsträgern. Optional weist der vorschlagsgemäße Quantencomputer **QC** einen oder mehrere Digital-zu-Analog-Wandler auf, die an der Erzeugung der Steuersignale zur Ansteuerung der besagten elektrisch leitfähigen Leitungen **LH1, LH2, LH3, LV1** zum Anlegen elektrischer Felder im Wirkungsbereich der Quantenpunkte **NV1, NV2, NV3** mitwirken. Optional weist die erste horizontale Treiberstufe **HD1** zur Ansteuerung des ersten anzusteuernden Quantenpunkts **NV1** einen Analog-zu-Digital-Wandler auf, den der Rechnerkern **CPU** der Steuervorrichtung **µC** über den Steuerdatenbus **STB** optional steuern kann. Optional weist die zweite horizontale Treiberstufe **HD2** zur Ansteuerung des zweiten anzusteuernden Quantenpunkts **NV2** einen Analog-zu-Digital-Wandler auf, den der Rechnerkern **CPU** der Steuervorrichtung **µC** über den Steuerdatenbus **STB** optional steuern kann. Optional weist die dritte horizontale Treiberstufe **HD3** zur Ansteuerung des dritten anzusteuernden Quantenpunkts **NV3** einen Analog-zu-Digital-Wandler auf, den der Rechnerkern **CPU** der Steuervorrichtung **µC** über den Steuerdatenbus **STB** optional steuern kann. Optional steuert die Steuervorrichtung **µC** einen oder mehrere dieser Digital-zu-Analog-Wandler über einen internen Steuerdatenbus **SDB** des verlegbaren Quantencomputers **QC** an.

### Figur 2

Figur 2 zeigt zwei beispielhafte Quantenbits **QUB1, QUB2** eines Quantencomputersystems gemäß einer optionalen Ausführungsform. Im Folgenden beschreibt die hier vorgelegte Schrift zunächst das erste Quantenbit **QUB1.** Das zweite Quantenbit **QUB2** ergibt sich analog. Das Substrat **D** besitzt eine Unterseite **US** auf dem ein Rückseitenkontakt **BSC** angebracht ist. Optional ist das Substrat **D** aus Diamant gefertigt. Optional erfolgt die Bestrahlung der Quantenpunkte **NV1, NV2, NV3** und der Kernquantenpunkte **CI1₁, CI1₂, CI1₃**, **CI2₁, CI2₂, CI2₃**, **CI3₁**, **CI3₂, CI3₃** mit Pumpstrahlung **LB** von der Unterseite **US** des Substrats **D.** Optional weisen die Isotope des Substrats **D** im Wesentlichen kein magnetisches Kernmoment µ auf. Optional ist eine epitaktische Schicht **DEPI** zur Verbesserung der elektronischen Eigenschaften auf dem Substrat **D** aufgebracht. Optional umfassen das Substrat **D** und/oder die epitaktische Schicht **DEPI** im Wesentlichen nur Isotope ohne ein magnetisches Kernmoment µ. Optional umfasst das Substrat **D** und/oder die epitaktische Schicht **DEPI** im Wesentlichen nur einen Isotopentyp eines Isotops ohne ein magnetisches Kernmoment µ. Das Paket aus Substrat **D** und epitaktischer Schicht **DEPI** besitzt eine Oberfläche **OF.** Auf der Oberfläche **OF** ist eine vertikale Leitung **LV1** als Teil einer beispielhaften Crossbar-Struktur aufgebracht, die von einem mit einer vertikalen Modulation modulierten, vertikalen elektrischen Strom **IV1** durchströmt wird. Die Oberfläche **OF** und die vertikale Leitung **LV1** sind von einer Isolation **IS** bedeckt. Optional befindet sich eine weitere Isolation zwischen der vertikalen Leitung **LV1** und der Oberfläche **OF,** um die vertikale Leitung **LV1** elektrisch zu isolieren. Auf der Isolation **IS** ist eine erste horizontale Leitung **LH1** aufgebracht, die von einem mit einer ersten horizontalen Modulation modulierten ersten horizontalen elektrischen Strom **IH1** durchströmt wird. Die erste vertikale Leitung **LV1** und die erste horizontale Leitung **LH1** sind optional gegeneinander elektrisch isoliert. Optional ist der Winkel α₁₁ zwischen der ersten horizontalen Leitung **LH1** und der ersten vertikalen Leitung **LV1** ein rechter Winkel von 90°. Die erste horizontale Leitung **LH1** und die erste vertikale Leitung **LV1** kreuzen sich optional oberhalb des paramagnetischen Zentrums des ersten Quantenpunkts **NV1.** Optional handelt es sich bei dem ersten Quantenpunkt **NV1** um ein NV-Zentrum in Diamant. Optional befindet sich direkt unter dem Kreuzungspunkt der ersten horizontalen Leitung **LH1** mit der ersten vertikalen Leitung **LV1** der erste Quantenpunkt **NV1** in einem ersten Abstand **d1** unter der Oberfläche **OF** in der epitaktischen Schicht **DEPI.** Der erste Abstand **d1** liegt optional zwischen 10 µm und 20 µm, optional zwischen 5 µm und 40 µm, und optional zwischen 2,5 µm und 80 µm. Im Fall von Diamant als Material der epitaktischen Schicht **DEPI** kann der erste Quantenpunkt **NV1** beispielsweise ein NV-Zentrum sein. Auch ist die Verwendung von SiV und/oder TR1-Zentren und/oder TR12-Zentren und anderen paramagnetischen Zentren in Diamant denkbar. Ist die horizontale Modulation des ersten horizontalen Stromes **IH1** gegenüber der vertikalen Modulation des ersten vertikalen Stromes **IV1** um +/-2 verschoben, so ergibt sich dann am Ort des ersten Quantenpunkts **NV1** beispielsweise ein rotierendes Magnetfeld **B_{NV}**, das den ersten Quantenpunkt **NV1** beeinflusst. Dieses kann die Steuervorrichtung **µC** des Quantencomputers **QC** zur Manipulation des ersten Quantenpunkts **NV1** nutzen. Hierbei wählt die Steuervorrichtung **µC** die Frequenz optional so, dass der erste Quantenpunkt **NV1** in Resonanz mit dem rotierenden Magnetfeld **B_{NV}** gerät. Die zeitliche Dauer des Pulses bestimmt dann den Drehwinkel der Quanteninformation des ersten Quantenpunkts **NV1.** Die Polarisationsrichtung bestimmt die Richtung.

Figur 2 illustriert beispielhaft sechs Kernquantenpunkte und zwar zum Ersten einen ersten Kernquantenpunkt **CI1₁**, der dem ersten Quantenpunkt **NV1** zugeordnet ist, und
zum Zweiten einen zweiten Kernquantenpunkt **CI1₂**, der dem ersten Quantenpunkt **NV1** zugeordnet ist, und
zum Dritten einen dritten Kernquantenpunkt **CI1₃**, der dem ersten Quantenpunkt **NV1** zugeordnet ist, und
zum Vierten einen ersten Kernquantenpunkt **CI2₁**, der dem zweiten Quantenpunkt **NV2** zugeordnet ist, und
zum Fünften einen zweiten Kernquantenpunkt **CI2₂**, der dem zweiten Quantenpunkt **NV2** zugeordnet ist, und
zum Sechsten einen dritten Kernquantenpunkt **CI2₃**, der dem zweiten Quantenpunkt **NV2** zugeordnet ist.

Jeder der Kernquantenpunkte bildet mit den Leitungen **LV1, LH1, LH2** jeweils ein Kernquantenbit. In dem jeweiligen Kernquantenbit ist der Quantenpunkt **NV1, NV2** durch den Kernquantenpunkt **CI1₁**, **CI1₂**, **CI1₃** in **QUB1** und **CI2₁**, **CI2₂, CI2₃** in **QUB2** ersetzt.

Isotope mit einem magnetischen Kernspin bilden optional die Kernquantenpunkte **CI1₁**, **CI1₂**, **CI1₃**, **CI2₁**, **CI2₂, CI2₃** in dem Substrat **D.** Im Fall von Diamant als Material der epitaktischen Schicht **DEPI** bzw. des Substrats **D** kann ein Kernquantenpunkt beispielsweise ein ¹³C-Isotop oder ein Atomkern eines Stickstoffatoms eines NV-Zentrums sein.

Figur 2 zeigt dabei beispielhaft ein Quantenregister gemäß einer optionalen Ausführungsform mit einem ersten Quantenbit **QUB1** und einem zweiten Quantenbit **QUB2.** Die Quantenbits **QUB1, QUB2** des Quantenregisters besitzen ein gemeinsames Substrat **D** und eine gemeinsame epitaktische Schicht **DEPI.** Die erste vertikale Leitung des ersten Quantenbits **QUB1** ist die erste vertikale Leitung **LV1** des zweiten Quantenbits **QUB2.** Die erste vertikale Leitung **LV1** und die erste horizontale Leitung **LH1** kreuzen optional oberhalb des ersten Quantenpunkts **NV1**, der optional in einem ersten Abstand **d1** unter der Oberfläche **OF** liegt, in einem optional rechten Winkel α₁₁ von 90°. Die erste vertikale Leitung **LV1** und die zweite horizontale Leitung **LH2** kreuzen optional oberhalb des zweiten Quantenpunkts **NV2**, der optional in einem zweiten Abstand **d2** unter der Oberfläche liegt, in einem optional rechten Winkel α₁₂ von 90°. Optional sind der erste Abstand **d1** und der zweite Abstand **d2** ähnlich zueinander. Bei NV-Zentren in Diamant als Quantenpunkte **NV1, NV2** liegen diese Abstände **d1, d2** optional bei 10 nm bis 20 nm. Ein mit einer horizontalen Modulation modulierter, erster vertikaler Strom **IV1** kann die erste vertikale Leitung **LV1** durchströmen. Ein mit einer ersten horizontalen Modulation modulierten erster horizontaler Strom **IH1** die erste horizontale Leitung **LH1** durchströmen. Ein mit einer zweiten horizontalen Modulation modulierter zweiter horizontaler Strom **IH2** kann die zweite horizontale Leitung **LH2** durchströmen. Der erste Quantenpunkt **NV1** weist zum zweiten Quantenpunkt **NV2** einen Abstand **sp12** auf.

Die Figur 2 zeigt ferner ein beispielhaftes Kern-Elektron-Kern-Elektron-Quantenregister **CECEQUREG** gemäß einer optionalen Ausführungsform.

Das Kern-Elektron-Kern-Elektron-Quantenregister **CECEQUREG** umfasst dabei ein Elektron-Elektron-Quantenregister, bei dem der erste Quantenpunkt **NV1** des ersten Quantenbits **QUB1** mit dem zweiten Quantenpunkt **NV2** des zweiten Quantenbits **QUB2** koppeln kann.

Das Kern-Elektron-Kern-Elektron-Quantenregister **CECEQUREG** umfasst ein erstes Kern-Elektron-Quantenregister, bei dem der erste Quantenpunkt **NV1** des ersten Quantenbits **QUB1** mit dem ersten Kernquantenpunkt **CI1₁** des ersten Kernquantenbits koppeln kann.

Das Kern-Elektron-Kern-Elektron-Quantenregister **CECEQUREG** umfasst ein zweites Kern-Elektron-Quantenregister, bei dem der erste Quantenpunkt **NV1** des ersten Quantenbits **QUB1** mit dem zweiten Kernquantenpunkt **CI1₂** des zweiten Kernquantenbits koppeln kann.

Das Kern-Elektron-Kern-Elektron-Quantenregister umfasst ein drittes Kern-Elektron-Quantenregister, bei dem der erste Quantenpunkt **NV1** des ersten Quantenbits **QUB1** mit dem dritten Kernquantenpunkt **CI1₃** des zweiten Kernquantenbits koppeln kann.

Das Kern-Elektron-Kern-Elektron-Quantenregister umfasst ein viertes Kern-Elektron-Quantenregister, bei dem der zweite Quantenpunkt **NV2** des zweiten Quantenbits **QUB2** mit dem ersten Kernquantenpunkt **CI2₁** des vierten Kernquantenbits koppeln kann.

Das Kern-Elektron-Kern-Elektron-Quantenregister umfasst ein fünftes Kern-Elektron-Quantenregister, bei dem der zweite Quantenpunkt **NV2** des zweiten Quantenbits **QUB2** mit dem zweiten Kernquantenpunkt **CI2₂** des fünften Kernquantenbits koppeln kann.

Das Kern-Elektron-Kern-Elektron-Quantenregister umfasst ein sechstes Kern-Elektron-Quantenregister, bei dem der zweite Quantenpunkt **NV2** des zweiten Quantenbits **QUB2** mit dem dritten Kernquantenpunkt **CI2₃** des sechsten Kernquantenbits koppeln kann.

Dies ist eine einfache Form eines Quantenbusses gemäß einer optionalen Ausführungsform mit einer ersten QuantenALU **QUALU1 (NV1, CI1₁**, **CI1₂, CI1₃)** und einer zweiten QuantenALU **QUALU2 (NV2, CI2₁**, **CI2₂, CI2₃**). Dabei kann die Steuervorrichtung **µC** die Kernquantenpunkte **CI1₁**, **CI1₂, CI1₃** der ersten QuantenALU **NV1, CI1₁, CI1₂**, **CI1₃** und die Kernquantenpunkte der zweiten QuantenALU **QUALU2** mit Hilfe des ersten Quantenpunktes **NV1** und des zweiten Quantenpunkts **NV2** miteinander verschränken. Dabei dienen der erste Quantenpunkt **NV1** und der zweite Quantenpunkt **NV2** optional dem Transport der Abhängigkeit, und die Kernquantenpunkte **CI1₁**, **CI1₂, CI1₃, CI2₁, CI2₂, CI2₃** den Berechnungen und der Speicherung. Ausgenutzt wird hierbei, dass die Reichweite der Kopplung der Quantenpunkte **NV1, NV2** untereinander größer ist als die Reichweite der Kernquantenpunkte **CI1₁**, **CI1₂**, **CI1₃**, **CI2₁**, **CI2₂, CI2₃** untereinander, und dass die T2-Zeit der Kernquantenpunkte **CI1₁**, **CI1₂**, **CI1₃**, **CI2₁**, **CI2₂, CI2₃** länger ist als die der Quantenpunkte **NV1, NV2.**

Typischerweise ist der Abstand zwischen den Kernquantenpunkten **CI1₁**, **CI1₂**, **CI1₃** der ersten QuantenALU **QUALU1** und dem zweiten Quantenpunkt **NV2** größer als die Elektron-Kern-Kopplungsreichweite, sodass der Zustand der Kernquantenpunkte **CI1₁, CI1₂**, **CI1₃** der ersten QuantenALU **QUALU1** den Zustand des zweiten Quantenpunkts **NV2** nicht beeinflussen kann und der Zustand des zweiten Quantenpunkts **NV2** den Zustand der Kernquantenpunkte **CI1₁**, **CI1₂**, **CI1₃** der ersten QuantenALU **QUALU1** nicht beeinflussen kann. Typischerweise ist der Abstand zwischen den Kernquantenpunkten **CI2₁**, **CI2₂, CI2₃** der zweiten QuantenALU **QUALU2** und dem ersten Quantenpunkt **NV1** größer als die Elektron-Kern-Kopplungsreichweite, sodass der Zustand der Kernquantenpunkte **CI2₁**, **CI2₂, CI2₃** der zweiten QuantenALU **QUALU2** den Zustand des ersten Quantenpunkts **NV1** nicht beeinflussen kann und der Zustand des ersten Quantenpunkts **NV1** den Zustand der Kernquantenpunkte **CI2₁**, **CI2₂, CI2₃** der zweiten QuantenALU **QUALU2** nicht direkt beeinflussen kann.

Figur 2 zeigt ferner ein beispielhaftes Quantenregister gemäß einer optionalen Ausführungsform mit einer zweiten horizontalen Abschirmleitung **SH2** und mit einer ersten horizontalen Abschirmleitung **SH1** und mit einer dritten horizontalen Abschirmleitung **SH3.** Die zusätzlichen Abschirmleitungen ermöglichen die Einspeisung weiterer Ströme zur Verbesserung der Selektion der Quantenpunkte während der Ausführung der Operationen durch Bestromung der vertikalen und horizontalen Leitungen. Die beiden zusätzlichen Leitungen ermöglichen eine noch bessere Einstellung.

Figur 2 zeigt ferner ein beispielhaftes zwei-Bit-Elektron-Elektron Quantenregister gemäß einer optionalen Ausführungsform mit einer gemeinsamen ersten vertikalen Leitung **LV1,** mehreren Abschirmleitungen und zwei Quantenpunkten **NV1, NV2.** In der Figur 2 ist zur Erläuterung eines optionalen Ausleseprozesses eine erste vertikale Abschirmleitung **SV1** parallel zu der ersten vertikalen Leitung **LV1** eingezeichnet. Da es sich um ein Querschnittsbild handelt, ist die entsprechende zweite vertikale Abschirmleitung **SV2,** die auf der anderen Seite der ersten vertikalen Leitung **LV1** ebenfalls parallel zu dieser verläuft, nicht eingezeichnet. Durch Kontakte sind die Abschirmleitungen in diesem Beispiel mit dem Substrat D verbunden. Wird nun ein Extraktionsfeld zwischen zwei parallel verlaufende Abschirmleitungen durch Anlegen einer Extraktionsspannung zwischen diesen Abschirmleitungen **SV1, SV2** angelegt, so kommt es zu einem messbaren Stromfluss, wenn die Lichtquelle **LD** die Quantenpunkte **NV1, NV2** mit Pumpstrahlung **LB** bestrahlt und diese sich im richtigen Quantenzustand befinden. Weiteres (Vorschlag zur Prägnanz: ) zu einem 2-Bit-Elektron-Elektron-Register kann beispielsweise in der folgenden Publikation gefunden werden:
Petr Siyushev, Milos Nesladek, Emilie Bourgeois, Michal Gulka, Jaroslav Hruby, Takashi Yamamoto, Michael Trupke, Tokuyuki Teraji, Junichi Isoya, Fedor Jelezko, "Photoelectrical imaging and coherent spin-state readout of single nitrogen-vacancy centers in diamond", Science 363, 728-731 (2019) 15 February 2019

Die beiden Quantenpunkte **NV1, NV2** der Figur 2 sind jeweils Teil mehrerer Kern-Elektron-Quantenregister. Jeder Quantenpunkt **NV1, NV2** ist in dem Beispiel der Figur 2 Teil einer jeweiligen QuantenALU **QUALU1, QUALU2.Der** erste Quantenpunkt **NV1** der ersten QuantenALU **QUALU1** kann im Beispiel der Figur 2 mit einem ersten Kernquantenpunkt **CI1₁** der ersten QuantenALU **QUALU1** wechselwirken, wenn der Mikrowellen- und/oder Radiowellenfrequenzgenerator **MW/RF-AWFG** die erste horizontale Leitung **LH1** und die erste vertikale Leitung **LV1** mit einem ersten horizontalen Strom **IH1** und einem ersten vertikalen Strom **IV1** bestromt, die der Mikrowellen- und/oder Radiowellenfrequenzgenerator **MW/RF-AWFG** mit einer ersten Elektron-Kern-Radiowellenresonanzfrequenz f_{RWEC1_1} für die erste QuantenALU **QUALU1** oder einer ersten Kern-Elektron-Mikrowellenresonanzfrequenz f_{MWCE1_1} für die erste QuantenALU **QUALU1** moduliert. Der Quantencomputer **QC** misst diese erste Elektron-Kern-Radiowellenresonanzfrequenz f_{RWEC1_1} für die erste QuantenALU **QUALU1** und diese erste Kern-Elektron- Mikrowellenresonanzfrequenz (f_{MWCE1_1}) für die erste QuantenALU **QUALU1** optional in einem Initialisierungsschritt einmalig durch eine OMDR-Messung. Der Rechnerkern **CPU** des Quantencomputers **QC** legt die Messwerte in einem Speicher **NVM, RAM** des Rechnerkerns **CPU** der Steuervorrichtung **µC** ab, die dieser abruft, wenn der Rechnerkern **CPU** das entsprechende erste Kern-Elektron-Quantenregister **CEQUREG1** ansteuern soll. Der Rechnerkern **CPU** der Steuervorrichtung **µC** stellt dann die Frequenzen entsprechend ein.

Der erste Quantenpunkt **NV1** der ersten QuantenALU **QUALU1** kann im Beispiel der Figur 2 mit einem zweiten Kernquantenpunkt **CI1₂** der ersten QuantenALU **QUALU1** wechselwirken, wenn der Mikrowellen- und/oder Radiowellenfrequenzgenerator **MW/RF-AWFG** die erste horizontale Leitung **LH1** und die erste vertikale Leitung **LV1** mit einem ersten horizontalen Strom **IH1** und einem ersten vertikalen Strom **IV1** bestromt, die der Mikrowellen- und/oder Radiowellenfrequenzgenerator **MW/RF-AWFG** mit einer zweiten Elektron-Kern-Radiowellenresonanzfrequenz f_{RWEC2_1} für die erste QuantenALU **QUALU1** oder einer zweiten Kern-Elektron-Mikrowellenresonanzfrequenz f_{MWCE2_1} für die erste QuantenALU **QUALU1** moduliert. Der Quantencomputer **QC** misst diese zweite Elektron-Kern-Radiowellenresonanzfrequenz f_{RWEC2_1} für die erste QuantenALU **QUALU1** und diese zweite Kern-Elektron-Mikrowellenresonanzfrequenz f_{MWCE2_1} für die erste QuantenALU **QUALU1** optional in einem Initialisierungsschritt einmalig durch eine OMDR-Messung. Der Rechnerkern **CPU** des Quantencomputers **QC** legt die Messwerte in einem Speicher **NVM, RAM** des Rechnerkerns **CPU** der Steuervorrichtung **µC** ab, die dieser abruft, wenn der Rechnerkern **CPU** das entsprechende erste Kern-Elektron-Quantenregister **CEQUREG1** ansteuern soll. Der Rechnerkern **CPU** der Steuervorrichtung **µC** stellt dann die Frequenzen entsprechend ein.

Der erste Quantenpunkt **NV1** der ersten QuantenALU **QUALU1** kann im Beispiel der Figur 2 mit einem dritten Kernquantenpunkt **CI1₃** der ersten QuantenALU **QUALU1** wechselwirken, wenn der Mikrowellen- und/oder Radiowellenfrequenzgenerator **MW/RF-AWFG** die erste horizontale Leitung **LH1** und die erste vertikale Leitung **LV1** mit einem ersten horizontalen Strom **IH1** und einem ersten vertikalen Strom **IV1** bestromt, die der Mikrowellen- und/oder Radiowellenfrequenzgenerator **MW/RF-AWFG** mit einer dritten Elektron-Kern-Radiowellenresonanzfrequenz f_{RWEC3_1} für die erste QuantenALU **QUALU1** oder einer dritten Kern-Elektron-Mikrowellenresonanzfrequenz f_{MWCE3_1} für die erste QuantenALU **QUALU1** moduliert. Der Quantencomputer **QC** misst diese dritte Elektron-Kern-Radiowellenresonanzfrequenz f_{RWEC3_1} für die erste QuantenALU **QUALU1** und diese dritte Kern-Elektron-Mikrowellenresonanzfrequenz f_{MWCE3_1} für die erste QuantenALU **QUALU1** optional in einem Initialisierungsschritt einmalig durch eine OMDR Messung. Der Rechnerkern **CPU** des Quantencomputers **QC** legt die Messwerte in einem Speicher **NVM, RAM** des Rechnerkerns **CPU** der Steuervorrichtung **µC** ab, die dieser abruft, wenn der Rechnerkern **CPU** das entsprechende erste Kern-Elektron-Quantenregister **CEQUREG1** ansteuern soll. Der Rechnerkern **CPU** der Steuervorrichtung **µC** stellt dann die Frequenzen entsprechend ein.

Der zweite Quantenpunkt **NV2** der zweiten QuantenALU **QUALU2** kann im Beispiel der Figur 2 mit einem ersten Kernquantenpunkt **CI2₁** der zweiten QuantenALU **QUALU2** wechselwirken, wenn der Mikrowellen- und/oder Radiowellenfrequenzgenerator **MW/RF-AWFG** die zweite horizontale Leitung **LH2** und die erste vertikale Leitung **LV1** mit einem zweiten horizontalen Strom **IH2** und einem ersten vertikalen Strom **IV1** bestromt, die der Mikrowellen- und/oder Radiowellenfrequenzgenerator **MW/RF-AWFG** mit einer vierten Elektron-Kern-Radiowellenresonanzfrequenz f_{RWEC1_2} für die zweite QuantenALU **QUALU2** oder einer vierten Kern-Elektron- Mikrowellenresonanzfrequenz f_{MWCE1_2} für die zweite QuantenALU **QUALU2** moduliert. Der Quantencomputer **QC** misst diese vierte Elektron-Kern-Radiowellenresonanzfrequenz f_{RWEC1_2} für die zweite QuantenALU **QUALU2** und diese vierte Kern-Elektron- Mikrowellenresonanzfrequenz (f_{MWCE1_2}) für die zweite QuantenALU **QUALU2** optional in einem Initialisierungsschritt einmalig durch eine OMDR-Messung. Der Rechnerkern **CPU** des Quantencomputers **QC** legt die Messwerte in einem Speicher **NVM, RAM** des Rechnerkerns **CPU** der Steuervorrichtung **µC** ab, die dieser abruft, wenn der Rechnerkern **CPU** das entsprechende erste Kern-Elektron-Quantenregister **CEQUREG1** ansteuern soll. Der Rechnerkern **CPU** der Steuervorrichtung **µC** stellt dann die Frequenzen entsprechend ein.

Der zweite Quantenpunkt **NV2** der zweiten QuantenALU **QUALU2** kann im Beispiel der Figur 2 mit einem zweiten Kernquantenpunkt **CI2₂** der zweiten QuantenALU **QUALU2** wechselwirken, wenn der Mikrowellen- und/oder Radiowellenfrequenzgenerator **MW/RF-AWFG** die zweite horizontale Leitung **LH2** und die erste vertikale Leitung **LV1** mit einem zweiten horizontalen Strom **IH2** und einem ersten vertikalen Strom **IV1** bestromt, die der Mikrowellen- und/oder Radiowellenfrequenzgenerator **MW/RF-AWFG** mit einer fünften Elektron-Kern-Radiowellenresonanzfrequenz f_{RWEC2_2} für die zweite QuantenALU **QUALU2** oder einer fünften Kern-Elektron-Mikrowellenresonanzfrequenz f_{MWCE2_2} für die zweite QuantenALU **QUALU2** moduliert. Der Quantencomputer **QC** misst diese fünfte Elektron-Kern-Radiowellenresonanzfrequenz f_{RWEC2_2} für die zweite QuantenALU **QUALU2** und diese fünfte Kern-Elektron- Mikrowellenresonanzfrequenz f_{MWCE2_2} für die zweite QuantenALU **QUALU2** optional in einem Initialisierungsschritt einmalig durch eine OMDR-Messung. Der Rechnerkern **CPU** des Quantencomputers **QC** legt die Messwerte in einem Speicher **NVM, RAM** des Rechnerkerns **CPU** der Steuervorrichtung **µC** ab, die dieser abruft, wenn der Rechnerkern **CPU** das entsprechende erste Kern-Elektron-Quantenregister **CEQUREG1** ansteuern soll. Der Rechnerkern **CPU** der Steuervorrichtung **µC** stellt dann die Frequenzen entsprechend ein.

Der zweite Quantenpunkt **NV2** der zweiten QuantenALU **QUALU2** kann im Beispiel der Figur 2 mit einem dritten Kernquantenpunkt **CI2₃** der zweiten QuantenALU **QUALU2** wechselwirken, wenn der Mikrowellen- und/oder Radiowellenfrequenzgenerator **MW/RF-AWFG** die zweite horizontale Leitung **LH2** und die erste vertikale Leitung **LV1** mit einem zweiten horizontalen Strom **IH2** und einem ersten vertikalen Strom **IV1** bestromt, die der Mikrowellen- und/oder Radiowellenfrequenzgenerator **MW/RF-AWFG** mit einer sechsten Elektron-Kern-Radiowellenresonanzfrequenz f_{RWEC2_2} für die zweite QuantenALU **QUALU2** oder einer sechsten Kern-Elektron-Mikrowellenresonanzfrequenz f_{MWCE3_2} für die zweite QuantenALU **QUALU2** moduliert. Der Quantencomputer **QC** misst diese sechste Elektron-Kern-Radiowellenresonanzfrequenz f_{RWEC3_2} für die zweite QuantenALU **QUALU2** und diese sechste Kern-Elektron- Mikrowellenresonanzfrequenz (f_{MWCE3_2}) für die zweite QuantenALU **QUALU2** optional in einem Initialisierungsschritt einmalig durch eine OMDR-Messung. Der Rechnerkern **CPU** des Quantencomputers **QC** legt die Messwerte in einem Speicher **NVM, RAM** des Rechnerkerns **CPU** der Steuervorrichtung **µC** ab, die dieser abruft, wenn der Rechnerkern **CPU** das entsprechende erste Kern-Elektron-Quantenregister **CEQUREG1** ansteuern soll. Der Rechnerkern **CPU** der Steuervorrichtung **µC** stellt dann die Frequenzen entsprechend ein.

Da die Reichweite der Kopplung der Quantenpunkte **NV1, NV2** größer ist, können diese miteinander gekoppelt werden. Der zweite Quantenpunkt **NV2** der zweiten QuantenALU **QUALU2** kann in dem Beispiel der Figur 2 mit dem ersten Quantenpunkt **NV1** der ersten QuantenALU **QUALU1** wechselwirken, wenn der Mikrowellen- und/oder Radiowellenfrequenzgenerator **MW/RF-AWFG** die erste horizontale Leitung **LH1** und die zweite horizontale Leitung **LH2** und die erste vertikale Leitung **LV1** mit einem ersten horizontalen Strom **IH1** und einem zweiten horizontalen Strom **IH2** und einem ersten vertikalen Strom **IV1** bestromt, die der Mikrowellen- und/oder Radiowellenfrequenzgenerator **MW/RF-AWFG** mit einer Elektron1-Elektron2- Mikrowellenresonanzfrequenz f_{MWEE12} für die Kopplung des ersten Quantenpunkts **NV1** der ersten QuantenALU **QUALU1** mit dem zweiten Quantenpunkt **NV2** der zweiten QuantenALU **QUALU2** moduliert. Der Rechnerkern **CPU** des Quantencomputers **QC** misst diese Elektron1-Elektron2-Mikrowellenresonanzfrequenz f_{MWEE12} für die Kopplung des ersten Quantenpunkts **NV1** der ersten QuantenALU **QUALU1** optional in dem besagten Initialisierungsschritt einmalig durch eine weitere OMDR-Messung. Der Rechnerkern **CPU** des Quantencomputers **QC** legt die Messwerte in einem Speicher **RAM, NVM** des Rechnerkerns **CPU** der Steuervorrichtung **µC** ab, die dieser Rechnerkern **CPU** abruft, wenn das entsprechende Elektron-Elektron-Quantenregister umfassend den ersten Quantenpunkt **NV1** und den zweiten Quantenpunkt **NV2** angesteuert werden soll. Der Rechnerkern **CPU** der Steuervorrichtung **µC** stellt dann die Frequenzen entsprechend ein.

### Figur 3

Figur 3 zeigt das Blockdiagramm eines Quantencomputers **QC** gemäß einer optionalen Ausführungsform mit einem beispielhaften, schematisch angedeuteten Drei-Bit-Quantenregister, das ggf. auch z. B. durch ein Drei-Bit-Kern-Elektron-Kern-Elektron-Quantenregister (CECEQUREG) mit drei QuantenALUs ersetzt werden könnte. Eine Erweiterung auf ein n-Bit-Quantenregister ist dem Fachmann leicht möglich.

Der Kern der beispielhaften Ansteuervorrichtung der Figur 3 ist eine Steuervorrichtung **µC**, die optional einen Rechnerkern **CPU** umfasst. Optional weist die Gesamtvorrichtung eine Magnetfeldkontrolle optional in Form einer ersten Magnetfeldsteuerung **MFSx** und einer zweiten Magnetfeldsteuerung **MFSy** und einer dritten Magnetfeldsteuerung **MFSz** auf, die ihre Betriebsparameter optional von der besagten Steuervorrichtung **µC** erhält und optional Betriebsstatusdaten an diese Steuervorrichtung **µC** zurückgibt. Die Magnetfeldkontrolle **MFSx, MFSy, MFSz** ist optional ein mehrdimensionaler Regler, dessen Aufgabe es ist, ein externes magnetisches Feld durch aktive Gegenregelung zu kompensieren. Optional nutzt die Magnetfeldkontrolle **MFSx, MFSy, MFSz** hierfür einen oder mehrere Magnetfeldsensoren **MSx, MSy, MSz,** die optional den magnetischen Fluss in dem Quantencomputer **QC** optional in der Nähe der Quantenpunkte **NV1, NV2, NV3** und der nicht in der Figur zu besseren Übersicht eingezeichneten Kernquantenpunkte **CI1₁**, **CI1₂**, **CI1₃**, **CI2₁, CI2₂, CI2₃**, **CI3₁, CI3₂, CI3₃** erfasst. Optional handelt es sich bei den Magnetfeldsensoren **MSx, MSy, MSz** um Quantensensoren. Hier sei beispielhaft auf die Anmeldungen DE 10 2018 127 394.0, DE 10 2019 130 114.9, DE 10 2019 120 076.8 und DE 10 2019 121 137.9 verwiesen. Mit Hilfe der Magnetfeldkontrollvorrichtung, beispielsweise in Form des ersten Magnetfelderzeugungsmittels **MGx** und des zweiten Magnetfelderzeugungsmittels **MGy** und des dritten Magnetfelderzeugungsmittels **MGz** und, regelt die Magnetfeldkontrolle **MFSx, MFSy, MFSz** die magnetische Flussdichte B in der Nähe der Quantenpunkte **NV1, NV2, NV3** und der nicht in der Figur zu besseren Übersicht eingezeichneten Kernquantenpunkte **CI1₁**, **CI1₂, CI1₃**, **CI2₁, CI2₂, CI2₃**, **CI3₁, CI3₂, CI3₃** nach. Die hier vorgelegte Schrift schlägt vor, als Magnetfeldsensoren **MSx, MSy, MSz** optional Quantensensoren zu verwenden, da diese die höhere Genauigkeit aufweisen, um das Magnetfeld ausreichend zu stabilisieren.

Die Steuervorrichtung **µC** steuert optional über eine Kontrolleinheit A **CBA** die horizontalen und vertikalen Treiberstufen **HD1, HD2, HD3** an, die optional die horizontalen Leitungen **LH1, LH2, LH3** und vertikalen Leitungen **LV1** mit den jeweiligen horizontalen und vertikalen Strömen bestromen und die richtigen Frequenzen und zeitlichen Burst-Dauern und Burst-Positionen bezogen auf einen zeitlichen Startpunkt t₀ erzeugen.

Die Kontrolleinheit A **CBA** stellt entsprechend den Vorgaben der Steuervorrichtung **µC** die Frequenz und die Pulsdauer des ersten horizontalen Abschirmstromes **ISH1** für die erste horizontale Abschirmleitung **SH1** in der ersten horizontalen Treiberstufe **HD1** ein.

Die Kontrolleinheit A **CBA** stellt entsprechend den Vorgaben der Steuervorrichtung **µC** die Frequenz und die Pulsdauer des zweiten horizontalen Abschirmstromes **ISH2** für die zweite horizontale Abschirmleitung **SH2** in der ersten horizontalen Treiberstufe **HD1** und in der zweiten horizontalen Treiberstufe **HD2** ein.

Die Kontrolleinheit A **CBA** stellt entsprechend den Vorgaben der Steuervorrichtung **µC** die Frequenz und die Pulsdauer des dritten horizontalen Abschirmstromes **ISH3** für die dritte horizontale Abschirmleitung **SH3** in der zweiten horizontalen Treiberstufe **HD2** und in der dritten horizontalen Treiberstufe **HD3** ein.

Die Kontrolleinheit A **CBA** stellt entsprechend den Vorgaben der Steuervorrichtung **µC** die Frequenz und die Pulsdauer des vierten horizontalen Abschirmstromes **ISH4** für die vierte horizontale Abschirmleitung **SH4** in der dritten horizontalen Treiberstufe **HD3** und in der vierten horizontalen Treiberstufe **HD4,** die aus Platzmangel nur angedeutet ist, ein.

Die Kontrolleinheit A **CBA** stellt entsprechend den Vorgaben der Steuervorrichtung **µC** die Frequenz und die Pulsdauer des ersten horizontalen Stromes **IH1** für die erste horizontale Leitung **LH1** in der ersten horizontalen Treiberstufe **HD1** ein.

Die Kontrolleinheit A **CBA** stellt entsprechend den Vorgaben der Steuervorrichtung **µC** die Frequenz und die Pulsdauer des zweiten horizontalen Stromes **IH2** für die zweite horizontale Leitung **LH2** in der zweiten horizontalen Treiberstufe **HD2** ein.

Die Kontrolleinheit A **CBA** stellt entsprechend den Vorgaben der Steuervorrichtung **µC** die Frequenz und die Pulsdauer des dritten horizontalen Stromes **IH3** für die dritte horizontale Leitung **LH3** in der dritten horizontalen Treiberstufe **HD3** ein.

Die Kontrolleinheit A **CBA** stellt entsprechend den Vorgaben der Steuervorrichtung **µC** die Frequenz und die Pulsdauer des ersten vertikalen Abschirmstromes **ISV1** für die erste vertikale Abschirmleitung **SV1** in der ersten vertikalen Treiberstufe **HV1** ein.

Die Kontrolleinheit A **CBA** stellt entsprechend den Vorgaben der Steuervorrichtung **µC** die Frequenz und die Pulsdauer des ersten vertikalen Stromes **IV1** für die erste vertikale Leitung **LV1** in der ersten vertikalen Treiberstufe **VD1** ein.

Synchronisiert durch die Kontrolleinheit A **CBA** speisen diese Treiberstufen **VD1, HD1, HD2, HD3, HD4** ihren Strom in einem festen Phasenverhältnis bezogen auf einen gemeinsamen Synchronisationszeitpunkt in die Leitungen **SV1, LV1, SV2, SH1, LH1, SH2, LH2, SH3, LH3, SH4** ein.

Die folgenden Vorrichtungselemente des Quantencomputers **QC** gemäß der gezeigten optionalen Ausführungsform sind bei elektronischer Auslesung der Quantenzustände der Quantenpunkte **NV1, NV2, NV3** bzw. der Kernquantenpunkte **CI1₁**, **CI1₂**, **CI1₃**, **CI2₁**, **CI2₂, CI2₃**, **CI3₁, CI3₂, CI3₃** notwendig.

Eine Kontrolleinheit B **CBB** ist über den Steuerdatenbus **SDB** mit der Steuervorrichtung **µC** verbunden. Die Steuervorrichtung konfiguriert die eine Kontrolleinheit B **CBB** über den Steuerdatenbus **SDB** und stellt Betriebsparameter ein und liest Daten und Betriebszustände über den Steuerdatenbus **SDB** aus. Optional erfasst die Kontrolleinheit B CBB den jeweiligen Fotostrom, den die Empfängerstufen **HS1, HS2, HS3, VS1** erfassen und stellt die Messdaten der Steuervorrichtung **µC** über den Steuerdatenbus **SDB** zur Verfügung.

Zuvor konfiguriert die Steuervorrichtung **µC** über den Steuerdatenbus **SDB** und typischerweise über die Kontrolleinheit B **CBB** eine erste horizontale Empfängerstufe **HS1** in der Art, dass sie die von der ersten horizontalen Treiberstufe **HD1** eingespeisten Ströme auf der anderen Seite der Leitungen wieder entnimmt.

Zuvor konfiguriert die Steuervorrichtung **µC** über den Steuerdatenbus **SDB** und typischerweise über die Kontrolleinheit B **CBB** optional eine zweite horizontale Empfängerstufe **HS2** optional in der Art, dass sie die von der zweiten horizontalen Treiberstufe **HD2** eingespeisten Ströme auf der anderen Seite der Leitungen wieder entnimmt.

Zuvor konfiguriert die Steuervorrichtung **µC** über den Steuerdatenbus **SDB** und typischerweise über die Kontrolleinheit B **CBB** eine dritte horizontale Empfängerstufe **HS3** in der Art, dass sie die von der dritten horizontalen Treiberstufe **HD3** eingespeisten Ströme auf der anderen Seite der Leitungen wieder entnimmt.

Zuvor konfiguriert die Steuervorrichtung **µC** über den Steuerdatenbus **SDB** und typischerweise über die Kontrolleinheit B **CBB** eine erste vertikale Empfängerstufe **VS1** in der Art, dass sie die von der ersten vertikalen Treiberstufe **VD1** eingespeisten Ströme auf der anderen Seite der Leitungen wieder entnimmt.

Des Weiteren weist das beispielhafte System der Figur 3 eine Lichtquelle **LD** für Pumpstrahlung **LB** im Sinne dieser Schrift auf. Mittels eines Lichtquellentreibers **LDRV** kann die Steuervorrichtung **µC** die Quantenpunkte **NV1, NV2, NV3** mit der Pumpstrahlung **LB** über das optische System **OS** bestrahlen. Bei Bestrahlung mit dieser Pumpstrahlung **LB** erzeugen die paramagnetischen Zentren der Quantenpunkte **NV1, NV2, NV3** Fotoelektronen, die durch die erste horizontale Empfängerstufe **HS1** und/oder die zweite horizontale Empfängerstufe **HS2** und/oder die dritte horizontale Empfängerstufe **HS3** und/oder die erste vertikale Empfängerstufe **VS1** durch Anlegen eines Extraktionsfeldes beispielsweise an die angeschlossenen Abschirmleitungen **SH1, SH2, SH3, SH4, SV1, SV2** abgesaugt werden können.

Der Mikrowellen- und/oder Radiowellenfrequenzgenerator **MW/RF-AWFG** zur Erzeugung weitestgehend frei vorgebbarer Wellenformen (Englisch: Arbitrary-Wave-Form-Generator) umfasst in dem Beispiel der Figur 3 die Kontrolleinheit A **CBA,** die erste horizontale Treiberstufe **HD1,** die zweite horizontale Treiberstufe **HD2,** die dritte horizontale Treiberstufe **HD2** und die erste vertikale Treiberstufe **VD1.**

Darüber hinaus kann der Mikrowellen- und/oder Radiowellenfrequenzgenerator **MW/RF-AWFG** zur Erzeugung weitestgehend frei vorgebbarer Wellenformen (Englisch: Arbitrary-Wave-Form-Generator) auch so aufgefasst werden, dass er in dem Beispiel der Figur 3 die Kontrolleinheit B **CBB,** die erste horizontale Empfängerstufe **HS1,** die zweite horizontale Empfängerstufe **HS2,** die dritte horizontale Empfängerstufe **HS2** und die erste vertikale Empfängerstufe **VS1** umfasst.

Die Leitungen **SV1, LV1, SV2, SH1, LH1, SH2, LH2, SH3, LH3, SH4** bilden in dem Beispiel der Figur 3 die beispielhafte Mikrowellen- und/oder Radiowellenantenne **mWA.**

### Figur 4

Figur 4 zeigt ein beispielhaftes Quantencomputersystem **QUSYS** gemäß einer optionalen Ausführungsform mit einer beispielhaften zentralen Steuereinheit **ZSE.** Die beispielhafte zentrale Steuereinheit **ZSE** ist in diesem Beispiel über einen optional bidirektionalen Datenbus, den externen Datenbus **EXTDB,** mit einer Vielzahl von Quantencomputern **QC1** bis **QC16** verbunden. Optional umfasst ein solches Quanten-Computersystem **QUSYS** mehr als einen Quantencomputer **QC1** bis **QC16.** In dem Beispiel der Figur 4 umfasst jeder der Quantencomputer **QC1** bis **QC16** je eine Steuervorrichtung **µC1** bis **µC16.** Optional umfasst das Quantencomputersystem **QUSYS** eine Ladevorrichtung **LDV,** die mit der Energie aus einer Energieversorgung **PWR** der Ladevorrichtung **LDV** eine Energiereserve **BENG** lädt und/oder eine Energieaufbereitungsvorrichtung **SRG** mit elektrischer Energie versorgt. Die Energieaufbereitungsvorrichtung **SRG** versorgt ein oder mehrere Vorrichtungsteile des Quantencomputersystems **QUSYS** mit elektrischer Energie aus der Energiereserve **BENG** und/oder mit elektrischer Energie der Ladevorrichtung **LDV.** Optional versorgt die Energieaufbereitungsvorrichtung **SRG** versorgt ein oder mehrere Vorrichtungsteile des Quantencomputersystems **QUSYS** mit elektrischer Energie aus der Energiereserve **BENG,** wenn ein Vorrichtungsteil des Quantencomputersystem **QUSYS** eine Quantenoperation zur Manipulation eines Quantenpunkts **NV1, NV2, NV3** und/oder zur Manipulation eines Kernquantenpunkts **CI1₁**, **CI1₂**, **CI1₃, CI2₁, CI2₂, CI2₃**, **CI3₁, CI3₂, CI3₃** durchführt. In dem Beispiel der Figur 4 sind beispielhaft 16 Quantencomputer **QC1** bis **QC16** über den externen Datenbus **EXTDB** mit der Zentralensteuereinrichtung ZSE verbunden. Bei dem externen Datenbus **EXTDB** kann es sich um ein beliebiges, geeignetes Datenübertragungssystem handeln. Es kann beispielsweise drahtgebunden, drahtlos, lichtwellenleitergebunden, optisch, akustisch, oder funkgestützt sein. Im Falle eines drahtgebundenen Systems kann der externe Datenbus **EXTDB** ganz oder in Teilabschnitten beispielsweise ein Eindrahtdatenbus, wie beispielsweise ein LIN-Bus, oder ein Zweidrahtdatenbus, wie beispielsweise ein CAN-Datenbus, sein. Bei dem externen Datenbus **EXTDB** kann es sich beispielsweise ganz oder in Teilabschnitten um einen komplexeren Datenbus mit mehreren Leitern und/oder mehreren logischen Pegeln etc. handeln. Der externe Datenbus **EXTDB** kann ganz oder in Teilabschnitten beispielsweise ein Ethernet-Datenbus sein. Der externe Datenbus **EXTDB** kann ganz aus einer Art von Datenbus bestehen, oder aus verschiedenen Datenübertragungstrecken unterschiedlicher Art zusammengesetzt sein. Der externe Datenbus **EXTDB** kann sternförmig, wie in dem Beispiel der Figur 4, angeordnet sein. Der externe Datenbus **EXTDB** kann ganz oder in Teilen auch beispielsweise wie in einer Daisy-Chain (https://de.wikipedia.org/wiki/Daisy_Chain) als Verkettung der Busknoten in Form der Quantencomputer **QC1** bis **QC16** ausgeführt sein, wobei dann optional jede der Steuervorrichtungen der betreffenden Quantencomputer dieses Teils des Quantencomputer-Systems **QUSYS** optional über mehr als eine Datenschnittstelle verfügen, um mehr als einen externe Datenbus **EXTDB** an den betreffenden Quantencomputer beispielsweise für eine solche Verkettung anschließen zu können. Es ist denkbar, dass dann einer oder mehrere Quantencomputer der Quantencomputer **QC1** bis **QC16** als Bus-Master und damit als zentrale Steuereinrichtungen **ZSE** für untergeordnete Teil-Netze des Quantencomputersystems **QUSYS** agieren.

Optional handelt es sich bei der zentralen Steuereinrichtung **ZSE** des Quantencomputersystems **QUSYS** um die Steuervorrichtung **µC** eines Quantencomputers **QC.** Optional ist die zentrale Steuervorrichtung **ZSE** des Quantencomputersystems **QUSYS** ein Quantencomputer **QC** mit einer Steuereinrichtung **µC**, wobei hier im Falle der Figur 4 auf die "normalen" Rechnereigenschaften der Steuervorrichtung **µC** abgestellt wird, die das Quantencomputersystem **QUSYS** als zentrale Steuereinrichtung **ZSE** steuern. Aus der Perspektive der Quantencomputer **QC1** bis **QC16** entspricht die zentrale Steuereinrichtung **ZSE** optional einem externen Überwachungscomputer des Quantencomputersystems **QUSYS.**

Das Datenübertragungsnetz des Quantencomputersystems **QSYS** kann ganz oder in Teilen einer linearen Kette von Busknoten in Form der Quantencomputer **QC1** bis **QC16** längs eines Teils des externen Datenbusses **EXTDB** oder längs des externen Datenbusses **EXTDB** entsprechen, die auch zu einem Ring (Stichwort Token-Ring) geschlossen sein.

Das Datenübertragungsnetz des Quantencomputersystems **QSYS** kann ganz oder in Teilen einer Sternstruktur von Busknoten in Form der Quantencomputer **QC1** bis **QC16** gleichen, die an einer oder mehreren Datenleitungen und/oder Datenübertragungsmedien angeschlossen sind. Eine Sternstruktur liegt z. B. bei Funkübertragung der Daten vor. Auch können ein, mehrere oder alle Quantencomputer der Quantencomputer **QC1** bis **QC16** über eine Punkt-Zu-Punkt-Verbindung mit der zentralen Steuereinrichtung **ZSE** verbunden sein. In dem Fall muss die zentrale Steuereinrichtung **ZSE** für jede Punkt-zu-Punkt-Verbindung über eine separate Datenschnittstelle verfügen.

Das Datenübertragungsnetz des Quantencomputersystems **QSYS** kann als Baumstruktur angelegt sein, wobei einzelne Quantencomputer beispielsweise über mehr als eine Datenbusschnittstelle verfügen, und als Bus-Master, also zentrale Steuereinrichtung **ZSE** für Sub-Netze des Datenübertragungsnetzes aus Datenbussen und Quantencomputern dienen können.

Das Quantencomputersystem **QUSYS** kann optional hierarchisch strukturiert sein, wobei die Steuervorrichtungen **µC** einzelner Quantencomputer zentrale Steuereinrichtungen **ZSE** von Unterquantencomputersystemen sein können. Die Unterquantencomputersysteme sind dabei optional selbst Quantencomputersysteme **QUSYS.** Die zentrale Steuereinrichtung **ZSE** des Unterquantencomputersystems ist dabei optional selbst ein Quantencomputer, der optional selbst wieder Teil eines übergeordneten Quantencomputersystems **QUSYS** ist.

Durch diese Hierarchisierung können unterschiedliche Berechnungen in unterschiedlichen Unterquantencomputersystemen parallel bearbeitet werden, wobei die Anzahl der verwendeten Quantencomputer je nach Aufgabe anders gewählt wird.

Optional umfasst somit das Quantencomputersystem **QUSYS** mehrere miteinander gekoppelte Rechnereinheiten. Bei den Rechnereinheiten handelt es sich typischerweise um Rechnerkerne **CPU** der Steuervorrichtungen **µC** der Quantencomputer **QC1** bis **QC16.** Eine solche Rechnereinheit kann ein Programm der künstlichen Intelligenz verwenden, die mit den Quantencomputern und/oder den Quantenregistern und/oder den Quantenbits gekoppelt werden kann. Dabei kann sowohl die Eingabe in das Programm der künstlichen Intelligenz von dem Zustand der Quantenpunkte dieser Komponenten des Quantencomputersystems abhängen, als auch die Ansteuerung der Quantenbits und Quantenpunkte dieser Komponenten des Quantencomputersystems von den Ergebnissen des Programms der künstlichen Intelligenz abhängen. Das Programm der künstlichen Intelligenz kann sowohl in der zentrale Steuereinrichtung **ZSE** als auch in den Steuervorrichtungen **µC1** bis **µC16** der Quantencomputer **QC1** bis **QC16** ausgeführt werden. Hierbei können auch nur Teile des Programms der künstlichen Intelligenz in der zentralen Steuereinrichtung **ZSE** ausgeführt werden, während andere Teile des Programms der künstlichen Intelligenz in der Steuervorrichtungen **µC** von Quantencomputern innerhalb des Quantencomputersystems ausgeführt werden. Optional können hierbei auch nur Teile des Programms der künstlichen Intelligenz in einer der Steuervorrichtungen **µC1** bis **µC16** der Quantencomputer **QC1** bis **QC16** ausgeführt werden, während andere Teile des Programms der künstlichen Intelligenz in anderen Steuervorrichtungen **µC1** bis **µC16** anderer Quantencomputer **QC1** bis **QC16** innerhalb des Quantencomputersystems **QUSYS** ausgeführt werden. Dies Abarbeitung eines Programms der künstlichen Intelligenz kann also über das Quantencomputersystem **QUSYS** verteilt sein oder in einer Steuervorrichtung der Steuervorrichtungen **µC1** bis **µC16** der Quantencomputer **QC1** bis **QC16** konzentriert erfolgen. Dabei wirkt das Programm der künstlichen Intelligenz mit Quantenpunkten **NV1, NV2, NV3** der Quantencomputer **QC1** bis **QC16** zusammen. Die Steuervorrichtung kann also optional ein System aus Steuervorrichtungen **µC1** bis **µC16** sein. Eine Steuervorrichtung kann somit beispielsweise die zentrale Steuereinrichtung **ZSE** eines Quantencomputersystems **QSYS** mit einem oder mehreren Quantenpunkten **NV1, NV2, NV3** und/oder einem oder mehreren Steuervorrichtungen **µC** eines oder mehrerer Quantencomputer **QC1** bis **QC16** mit jeweils einem oder mehreren Quantenpunkten **NV1, NV2, NV3** umfassen. Komplexere Topologien mit weiteren zwischengeschalteten Rechnerknoten und Datenbusverzweigungen sind denkbar. Die Steuervorrichtung, die wie beschrieben auch ein Verbund von Steuervorrichtung sein kann, führt ein Programm der künstlichen Intelligenz aus. Ein solches Programm der künstlichen Intelligenz kann beispielsweise ein neuronales Netzwerkmodell mit neuronalen Netzwerkknoten sein.

Beispielsweise können eine oder mehrere Steuervorrichtungen der Steuervorrichtungen **µC1** bis **µC16** der Quantencomputer **QC1** bis **QC16** und/oder die zentrale Steuereinheit **ZSE** ein Verfahren des maschinellen Lernens ausführen. Die hier vorgelegte Schrift verweist hierzu beispielhaft auf:
Akinori Tanaka, Akio Tomiya, Koji Hashimoto, "Deep Learning and Physics (Mathematical Physics Studies)" 21. Februar 2021, Herausgeber: Springer; 1st ed. 2021 Edition, ISBN-10: 9813361077, ISBN-13: 978-9813361072, und
Ovidiu Calin, "Deep Learning Architectures: A Mathematical Approach (Springer Series in the Data Sciences)", Springer; 1st ed. 2020 Edition (14. Februar 2021), ISBN-10: 3030367231, ISBN-13: 978-3030367237.

Die in diesen Schriften erläuterten Verfahren sind Teil der Offenlegung der hier vorgelegten Schrift, sofern sie durch einen Quantencomputer **QC,** wie ihn die hier vorgestellte Schrift darlegt, ausgeführt werden. Eine der häufigsten Techniken in der künstlichen Intelligenz, die ein Quantencomputer **QC** gemäß einer optionalen Ausführungsform und/oder ein Quantencomputersystem **QUSYS** gemäß einer optionalen Ausführungsform ausführen können, ist maschinelles Lernen. Maschinelles Lernen ist ein selbstadaptiver Algorithmus, den ein Quantencomputer **QC** gemäß einer optionalen Ausführungsform und/oder ein Quantencomputersystem **QUSYS** gemäß einer optionalen Ausführungsform ausführen können. Das sogenannte Deep Learning, das ein Quantencomputer **QC** gemäß einer optionalen Ausführungsform und/oder ein Quantencomputersystem **QUSYS** gemäß einer optionalen Ausführungsform ausführen können, ist typischerweise eine Teilmenge des maschinellen Lernens. Ein Quantencomputer **QC** gemäß einer optionalen Ausführungsform und/oder ein Quantencomputersystem **QUSYS** gemäß einer optionalen Ausführungsform nutzen beim maschinellen Lernen eine Reihe hierarchischer Schichten bzw. eine Hierarchie von Konzepten, um den Prozess des maschinellen Lernens durchzuführen. Optional verwendet der Quantencomputer **QC** gemäß einer optionalen Ausführungsform bzw. das Quantencomputersystem **QUSYS** gemäß einer optionalen Ausführungsform ein Modell künstlicher neuronaler Netze, die virtuell wie das menschliche Gehirn organisiert und konstruiert sind. Die virtuellen Neuronen des neuronalen Netzwerksmodells, das der Quantencomputer **QC** gemäß einer optionalen Ausführungsform bzw. das Quantencomputersystem **QUSYS** gemäß einer optionalen Ausführungsform ausführt, sind optional virtuell wie ein Netz miteinander verbunden. Die erste virtuelle Schicht des neuronalen Netzes, die sichtbare Eingangsschicht, verarbeitet eine Rohdateneingabe, wie beispielsweise die einzelnen Pixel eines Bildes. Die Dateneingabe enthält Variablen, die der Beobachtung zugänglich sind, daher "sichtbare Schicht". Diese erste virtuelle Schicht des neuronalen Netzwerkmodells leitet ihre Ausgaben an die nächste virtuelle Schicht des Netzwerkmodells bei der Ausführung des neuronalen Netzwerkmodells durch den Quantencomputer **QC** gemäß einer optionalen Ausführungsform bzw. durch das Quantencomputersystem **QUSYS** gemäß einer optionalen Ausführungsform weiter. Diese zweite virtuelle Schicht verarbeitet die Informationen der vorherigen virtuellen Schicht und gibt das Ergebnis ebenfalls bei der Ausführung des neuronalen Netzwerkmodells durch den Quantencomputer **QC** bzw. durch das Quantencomputersystem **QUSYS** weiter. Die nächste, dritte virtuelle Schicht des neuronalen Netzwerkmodells nimmt die Informationen der zweiten virtuellen Schicht bei der Ausführung des neuronalen Netzwerkmodells durch den Quantencomputer **QC** bzw. durch das Quantencomputersystem **QUSYS** entgegen. Die dritte virtuelle Schicht des neuronalen Netzwerkmodells verarbeitet diese Informationen bei der Ausführung des neuronalen Netzwerkmodells durch den Quantencomputer **QC** bzw. durch das Quantencomputersystem **QUSYS** weiter. Diese Schichten werden als versteckte Ebenen (Englisch: hidden layers) bezeichnet. Die in ihnen enthaltenen Merkmale werden zunehmend abstrakt. Ihre Werte sind nicht in den Ursprungsdaten angegeben. Stattdessen sollte optional das neuronale Netzwerkmodell bei der Ausführung des neuronalen Netzwerkmodells durch den Quantencomputer **QC** bzw. durch das Quantencomputersystem **QUSYS** bestimmen, welche Konzepte für die Erklärung der Beziehungen in den beobachteten Daten nützlich sind. Dies geht nun über alle virtuellen Ebenen des künstlichen neuronalen Netzwerkmodells so weiter. Das Ergebnis wird in der sichtbaren, letzten virtuellen Schicht bei der Ausführung des neuronalen Netzwerkmodells durch den Quantencomputer **QC** bzw. durch das Quantencomputersystem **QUSYS** ausgegeben. Dies unterteilt die gewünschte komplizierte Datenverarbeitung in eine Reihe von verschachtelten einfachen Zuordnungen, die eine jeweils andere Schicht des neuronalen Netzwerkmodells beschreibt.

Das neuronale Netzwerkmodell verwendet dabei typischerweise einen oder mehrere Eingangswerte und/oder ein oder mehrere Eingangssignale. Das neuronale Netzwerkmodell, liefert typischerweise einen oder mehrere Ausgangswerte und/oder ein oder mehrere Ausgangssignale. Es wird hier nun vorgeschlagen, das Programm der künstlichen Intelligenz durch ein Programm zu ergänzen, das eine oder mehrere der oben erwähnten Quantenoperationen auf einem oder mehreren Quantencomputern der Quantencomputer **QC1** bis **QC16** durchführt. Diese Kopplung kann optional in der einen Richtung dadurch geschehen, dass die Ansteuerung eines oder mehrere Quantenpunkte **QC1** bis **QC16,** insbesondere mittels horizontaler Leitungen **LH1, LH2, LH3** und/oder vertikaler Leitungen **LV1,** von einem oder mehreren Ausgangswerten und/oder einem oder mehreren Ausgangssignalen des neuronalen Netzwerkmodells abhängt. In der anderen Richtung werden zu einem Zeitpunkt Zustände eines oder mehrerer Quantenpunkte ausgelesen und in dem Programm der künstlichen Intelligenz, in diesem Beispiel dem neuronalen Netzwerkmodell, als Eingabe verwendet. Der Wert eines oder mehrerer Eingangswerte und/oder eines oder mehrerer Eingangssignale des Programms der künstlichen Intelligenz, hier des neuronalen Netzwerkmodells, hängt dann von dem Zustand eines oder mehrerer der Quantenpunkte **NV1, NV2, NV3** und/oder einem oder mehreren Kernquantenpunkten **CI1₁**, **CI1₂, CI1₃**, **CI2₁, CI2₂, CI2₃**, **CI3₁, CI3₂, CI3₃** ab.

### Figur 5

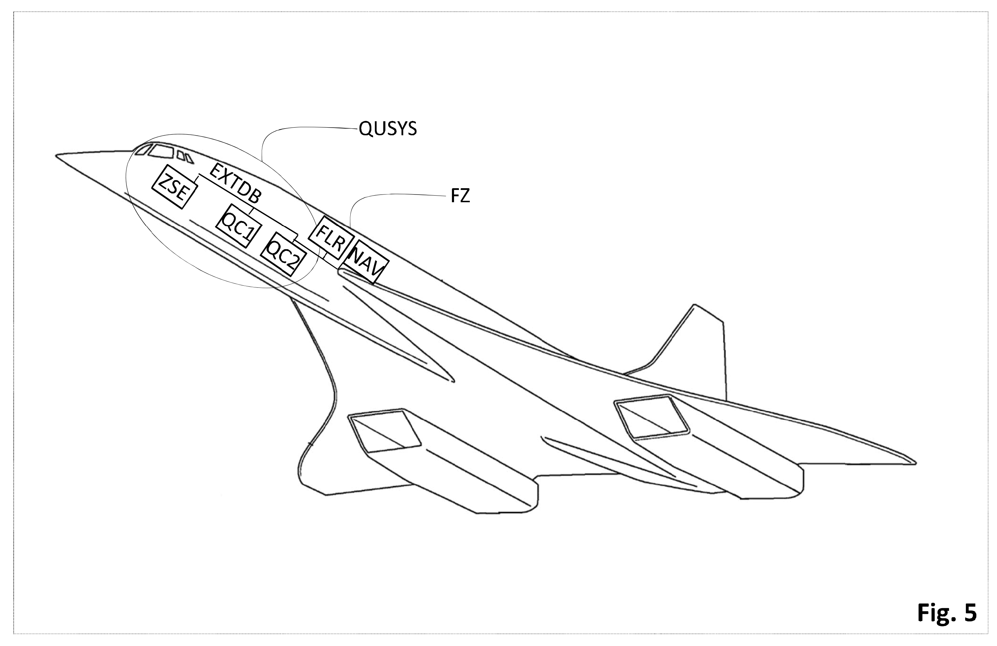

Figur 5 zeigt ein Flugzeug **FZ** gemäß einer optionalen Ausführungsform mit mehreren verlegbaren Quantencomputern **QC1, QC2.** In dem Beispiel der Figur 5 weist das beispielhafte Flugzeug **FZ** einen ersten Quantencomputer **QC1** und einen zweiten Quantencomputer **QC2** und eine zentrale Steuereinheit **ZSE** auf, die mit den beispielhaft zwei Quantencomputern **QC1, QC2** über einen externen Datenbus **EXTDB** verbunden sind. Der externe Datenbus **EXTDB** ist optional Teil des vorschlagsgemäßen Flugzeugs **FZ.** Die verlegbaren Quantencomputer **QC1, QC2** nehmen in dem vorschlagsgemäßen Flugzeug **FZ** optional die Lösung NPharter Probleme wahr.

Nähere Informationen zu NP-harten Problemen finden sich beispielsweise unter
- https://de.wikipedia.org/wiki/NP_(Komplexit%C3%A4tsklasse) und
- https://en.wikipedia.org/wiki/NP-hardness
Solche Probleme können beispielsweise die Anordnung bestimmter Lasten im Frachtraum oder Optimierungsprobleme, wie z. B. die optimale Reiseroute betreffen. Es ist auch denkbar, dass die verlegbaren Quantencomputer **QC1, QC2** in dem Flugzeug **FZ** Aufgaben der künstlichen Intelligenz ausführen oder unterstützen. Optional sind die verlegbaren Quantencomputer **QC1, QC2** über den externen Datenbus **EXTDB** mit der zentralen Steuereinrichtung **ZSE** verbunden, die typischerweise ein anderes Steuergerät des Flugzeugs **FZ** ist. Beispielsweise kann die zentrale Steuereinrichtung **ZSE** ein Rechnersystem im Cockpit des Flugzeugs **FZ** oder in einem Serverraum des Flugzeugs **FZ** sein. Das vorschlagsgemäße Flugzeug **FZ** umfasst somit optional ein Quantencomputersystem **QUSYS** mit mindestens einem Quantencomputer **QC1, QC2.**

Die Quantencomputer **QC1, QC2** können optional die Piloten und die übrigen Rechnersysteme des Flugzeugs **FZ** unterstützen. Beispielsweise können die Quantencomputer **QC1, QC2** des Flugzeugs **FZ** das Fluglageregelungssystem **FLR** und/oder das Navigationssystem und/oder den Autopiloten **NAV** unterstützen, oder deren Funktion ganz oder teilweise übernehmen. Natürlich sind die Funktionen eines Quantencomputers **QC** auf diese Funktionen eines Flugzeugs **FZ** nicht beschränkt.

Weitere optionale Ausführungsformen können beispielsweise umfassen:

### Airborne Weather Radar

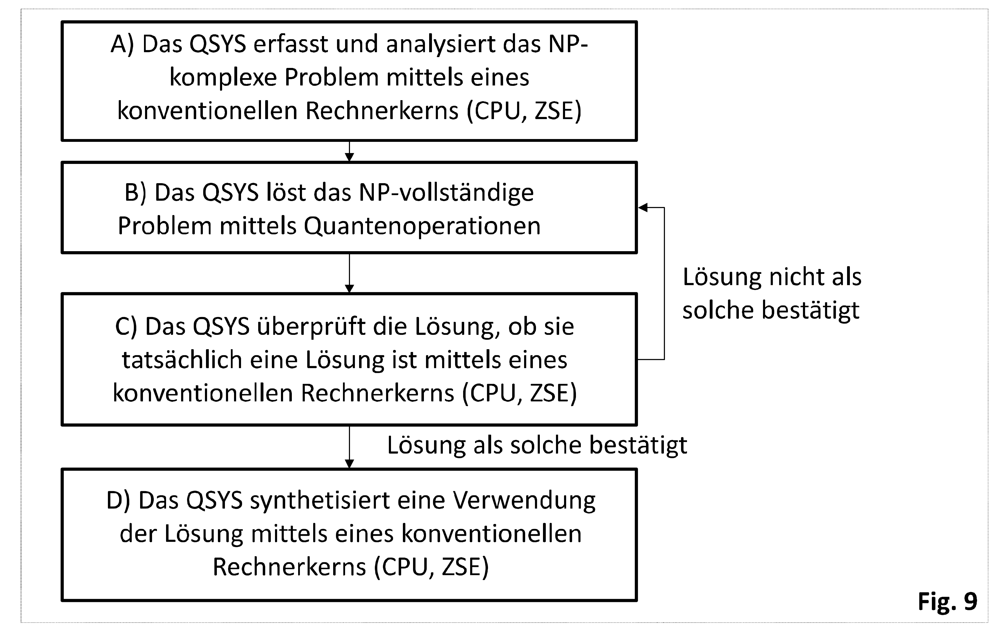

Die Anwendung, und der Prozess der Auswertung des Airborne Weather Radars wird im Folgenden beschrieben. Das Wetterradar kann im Bug hinter einem Radom, einer geschlossenen Schutzhülle (radar nose), des Flugzeugs **FZ** eingebaut sein. Es kann das Wetter in der Umgebung des Flugzeugs ermitteln. Das Wetterradar kann Daten über den externen Datenbus **EXTDB** an einen oder mehrerer Quantencomputer **QC1, QC2** übertragen. Die Quantencomputer **QC1, QC2** können dann die Daten des Wetterradars auswerten. Optional erhalten die Quantencomputer **QC1, QC2** weitere Daten, beispielsweise über Funkschnittstellen des Flugzeugs **FZ** von anderen Stellen, wie beispielsweise Wetterdiensten, Zentralen der Fluggesellschaften, Flugzeugherstellern etc. Typische NP-vollständige Probleme, die besonders gut mit Quantencomputern **QC** in diesem Zusammenhang lösbar sind, sind optional die Bewertung der Wetterdaten und die Optimierung der Flugstrecke hinsichtlich Gefährdung Flugzeit, Kosten, etc. Die Quantencomputer **QC1, QC2** können diese Berechnungen NP-vollständiger Probleme durchführen, und die Piloten frühzeitig vor gefährlichen Wetterphänomenen warnen, und Optimierungsvorschläge unterbreiten. Ggf. können konventionelle Rechnersysteme des Flugzeugs die Ergebnisses der Quantencomputerprogramme, die auf den Quantencomputern **QC1, QC2** ausgeführt wurden, auf konventionelle Weise noch einmal verifizieren, da dann ja keine Optimierungssuche mehr notwendig ist, und den Piloten die Richtigkeit der Quantencomputerberechnung bestätigt. Die hier vorgelegte Schrift verweist hierzu beispielhaft auf Figur 9.

### ECAM (Electronic Centralized Aircraft Monitoring) oder EICAS (Engine Indication and Crew Alerting System)

Als weitere Anwendung kommt beispielsweise eine Unterstützung des ECAM (Electronic Centralized Aircraft Monitoring) durch die Quantencomputer **QC1, QC2** des Quantencomputersystems **QUSYS** des Flugzeugs in Frage. Dieses elektronische System zeigt in dem Flugzeug optional die wichtigsten Triebwerksparameter an und überprüft sämtliche Flugzeugsysteme, etwa für Kraftstoff und Hydraulik. Es meldet Fehler und gibt optional Hinweise, wie das Problem zu beheben ist. Dieses elektronische System zeigt in dem Flugzeug **FZ** optional die wichtigsten Triebwerksparameter an und überprüft sämtliche Flugzeugsysteme, etwa hinsichtlich Kraftstoff und Hydraulik. Es meldet optional vermutete oder erkannte Fehler und gibt Hinweise, wie das Problem zu beheben ist. Hierzu können die Quantencomputer **QC1, QC2** Quantencomputerberechnungen durchführen, um die Wahrscheinlichkeiten kritischer Kombinationen von Flugzeug- und Umweltparametern erkennen zu können und Maßnahmen, Maßnahmenabfolgen und Flugstrecken etc. so zu ermitteln, dass die Wahrscheinlichkeit kritischer Situationen bei maximaler Effektivität minimiert wird.

### TCAS (Traffic Alert and Collision Avoidance System)

Das TCAS ist ein bordeigenes Frühwarnsystem eines Flugzeugs **FZ** gemäß einer optionalen Ausführungsform zur Vermeidung von Flugzeugkollisionen in der Luft. Sind zwei Flugzeuge auf Kollisionskurs, empfiehlt es den beiden Piloten ein geeignetes Ausweichmanöver, um einen drohenden Zusammenstoß abzuwenden. Die Quantencomputer **QC1, QC2** können optional unter Berücksichtigung der Wetterlage etc. Ausweichkurse vorschlagen, die zum Ersten eine minimale Kollisionswahrscheinlichkeit haben und zum anderen auch hinsichtlich der Wetterbedingungen optimal sind.

### Figur 6

### Figur 6a

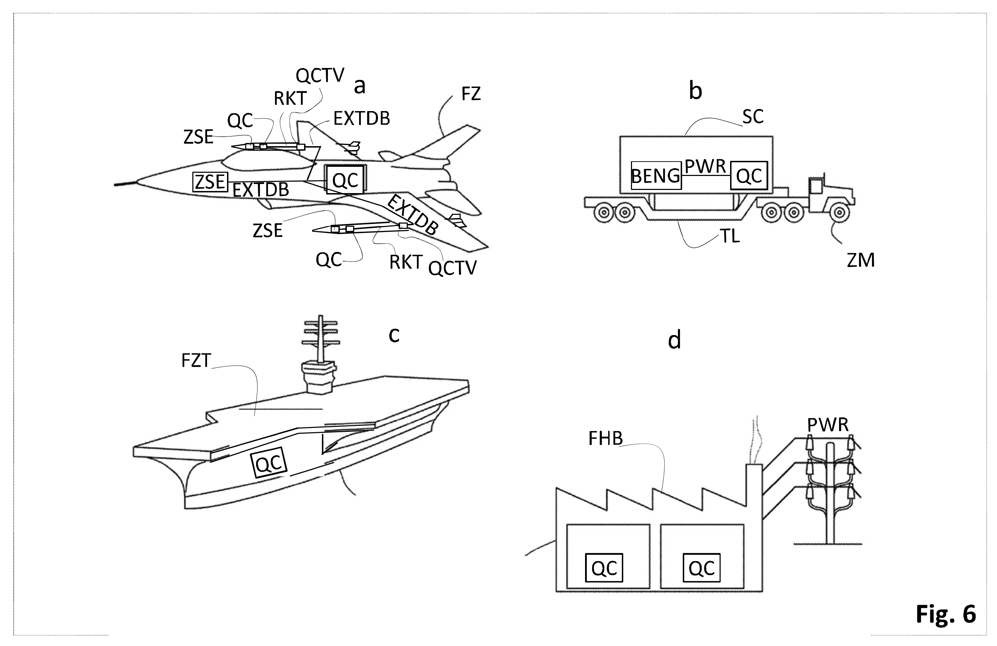

Figur 6a zeigt ein anderes Einsatzbeispiel des vorschlagsgemäßen verlegbaren Quantencomputers **QC** in einem Flugzeug **FZ** gemäß einer optionalen Ausführungsform. In dem Beispiel der Figur 6a handelt es sich um ein militärisches Flugzeug **FZ.** Ein militärisches Flugzeug kann beispielsweise ein Abfangjäger oder ein Langstreckenbomber oder ein allgemeines Kampfflugzeug oder ein Hubschrauber oder dergleichen sein. Es kann sich auch um eine Drohne oder dergleichen handeln.

In dem Beispiel der Figur 6a umfasst das Kampfflugzeug einen Quantencomputer **QC** gemäß einer optionalen Ausführungsform. Der Quantencomputer **QC** kann beispielsweise im Zusammenwirken mit einer zentralen Steuereinheit **ZSE** des Flugzeugs **FZ** das NP-vollständige Problem der Risikobewertung von Objekten im Umfeld des Flugzeugs und/oder entlang der Route zum Ziel, der Zielauswahl und/oder Zielfestlegung und/oder der Reihenfolge der Zielbekämpfung der Munitions- und Waffenauswahl und/oder die schnellste und zugleich risikoärmste Route zum Ziel bearbeiten. Der Quantencomputer **QC** ist in dem Beispiel der Figur 6 über einen externen Datenbus **EXTDB** innerhalb des Flugzeugs **FZ** mit der zentralen Steuereinheit **ZSE** verbunden. Der Quantencomputer **QC** entspricht optional einem Quantencomputer **QC** gemäß der in Figur 1 gezeigten Ausführungsform bzw. der vorhergehenden Beschreibung.

In dem Beispiel der Figur 6a ist das beispielhafte Kampfflugzeug **FZ** mit einer ersten Rakete **RKT** und einer zweiten Rakete **RKT** bewaffnet. Statt der Bewaffnung mit Raketen **RKT** und/oder zusätzlich zur Bewaffnung mit Raketen ist auch die Bewaffnung mit anderen Waffen wie Maschinenkanonen, Störsendern, Aufklärungsvorrichtungen etc. denkbar. Insofern sind die Raketen nur Beispiele für zusätzliches Equipment, das als Zuladung durch das Kampfflugzeug **FZ** transportiert werden kann. Insofern ist das Flugzeug **FZ** nur ein Beispiel für ein Fahrzeug im weitesten Sinne.

In dem Beispiel der Figur 6a verfügt das Fahrzeug in Form des Flugzeugs **FZ** über ein Quantencomputersystem **QUSYS** ähnlich dem der Figur 4 mit einer oder mehreren zentralen Steuervorrichtungen **ZSE,** die über einen oder mehrere externe Datenbusse **EXTDB** mit einem oder mehreren Quantencomputern **QC** verbunden sind.

In dem Beispiel der Figur 6a verfügt die Zuladung in der beispielhaften Form von zwei Raketen **RKT** jeweils über eigene Quantencomputersysteme **QUSYS** ähnlich der Figur 4 mit einer oder mehreren zentralen Steuervorrichtungen **ZSE** der jeweiligen Zuladung, die über einen oder mehrere externe Datenbusse **EXTDB** der jeweiligen Zuladung mit einem oder mehreren Quantencomputern **QC** der jeweiligen Zuladung verbunden sind. In dem Beispiel der Figur 6a verfügt jede der beiden beispielhaften Raketen **RKT** jeweils über ein jeweiliges eigenes Quantencomputersystem **QUSYS** der jeweiligen Rakete **RKT** ähnlich der Figur 4 mit einer oder mehreren jeweiligen zentralen Steuervorrichtungen **ZSE** der jeweiligen Rakete **RKT,** die über einen oder mehrere externe Datenbusse **EXTDB** der jeweiligen Rakete **RKT** mit einem oder mehreren Quantencomputern **QC** der jeweiligen Rakete **RKT** verbunden sind.

Das Kampfflugzeug **FZ** verfügt somit in dem dargestellten Zustand über mehrere Quantencomputersysteme **QUSYS.** Ein erstes Quantencomputersystem **QUSYS** umfasst dabei zumindest eine zentrale Steuereinheit **ZSE** des Kampflugzeugs **FZ** und zumindest einen externen Datenbus **EXTDB** des Kampfflugzeugs **FZ** und zumindest einen Quantencomputer **QC** des Kampfflugzeugs **FZ.** Ein beispielhaftes zweites Quantencomputersystem **QUSYS** umfasst dabei zumindest eine zentrale Steuereinheit **ZSE** der ersten beispielhaften Rakete **RKT** und zumindest einen externen Datenbus **EXTDB** der ersten beispielhaften Rakete **RKT** und zumindest einen Quantencomputer **QC** der ersten beispielhaften Rakete **RKT.** Ein beispielhaftes drittes Quantencomputersystem **QUSYS** umfasst dabei zumindest eine zentrale Steuereinheit **ZSE** der zweiten beispielhaften Rakete **RKT** und zumindest einen externen Datenbus **EXTDB** der zweiten beispielhaften Rakete **RKT** und zumindest einen Quantencomputer **QC** der zweiten beispielhaften Rakete **RKT.**

Die hier vorgelegte Schrift schlägt vor, dass optional ein externer Datenbus **EXTDB** das erste Quantencomputersystem mit dem zweiten und dritten Quantencomputersystem verbindet, solange die Zuladungen, d.h. beispielsweise die Raketen, mit dem Flugzeug **FZ** verbunden sind.

Nach dem Abfeuern der Raketen **RKT,** wenn sich also das Flugzeug **FZ** von seiner Zuladung in Form der Raketen **RKT** trennt, trennt eine Quantencomputersystemtrennvorrichtung **QCTV** das Quantencomputersystem **QUSYS** der abgetrennten Zuladung, hier der abgefeuerten Rakete **RKT,** von dem Quantencomputersystem **QUSYS** des Flugzeugs **FZ.** Das Fahrzeug ist hier beispielhaft ein Flugzeug **FZ.** Es kann sich bei einem Fahrzeug im Sinne der hier vorgelegten Schrift aber auch um ein Kraftfahrzeug, ein Zweirad, ein Dreirad oder einen Lastwagen, ein Nutzfahrzeug, einen Roboter, ein Transportfahrzeug, eine Drohne, eine Roboterdrohne, einen Flugkörper, einen Schwimmkörper, einen Tauchkörper, ein Schiff, ein U-Boot, eine See-Mine, eine Landmine, eine Rakete, ein Geschoss, einen Satelliten, eine Raumstation, einen Anhänger, einen Schleppkahn, einen Container, insbesondere einen See-Container oder dergleichen handeln. Die Quantencomputersystemtrennvorrichtung **QCTV** trennt optional einen externen Datenbus **EXTDB,** der beispielsweise ein erstes Quantencomputersystem **QUSYS** mit einem zweiten Quantencomputersystem **QUSYS** verbindet, im Bedarfsfall auf, sodass das Quantencomputersystem **QUSYS,** das zuvor das erste und das zweite Quantencomputersystem **QUSYS** umfasste, durch die Auftrennung mittels der Quantencomputersystemtrennvorrichtung **QCTV** in zwei separate Quantencomputersysteme **QUSYS** zerfällt. Die Quantencomputersystemtrennvorrichtung **QCTV** kann aber auch umgekehrt ein zuvor separates erstes Quantencomputersystem **QUSYS** mit einem zuvor separaten zweiten Quantencomputersystem **QUSYS** beispielsweise über einen oder mehrere externe Datenbusse **EXTDB** verbinden und im Bedarfsfall koppeln, sodass ein neues, vergrößertes Quantencomputersystem **QUSYS** entsteht, das anschließend das erste und das zweite Quantencomputersystem **QUSYS** umfasst durch die Verbindung dieser beiden Quantencomputersysteme über Quantencomputersystemtrennvorrichtung zu einem Quantencomputersystem **QUSYS** verschmilzt. In einem solchen neuen Quantencomputersystem **QUSYS** aus mindestens zwei zuvor separaten Quantencomputersystemen **QUSYS** ist die zentrale Steuereinheit **ZSE** des Quantencomputersystems **QUSYS** des Fahrzeugs, hier des Kampfflugzeugs **FZ,** optional höher priorisiert als die zentrale Steuereinheit **ZSE** des Quantencomputersystems **QUSYS** der Zuladung, hier der Rakete **RKT.** Diese Verschmelzung ist besonders vorteilhaft während des Ladevorgangs bei dem die Zuladung mit dem Fahrzeug verbunden wird.

Nach der Trennung der Zuladung von dem Fahrzeug kann das Quantencomputersystem **QUSYS** der Zuladung optional autonom agieren. In dem Beispiel der Figur 6a bedeutet dies, dass nach der Trennung der Raketen **RKT** als beispielhafter Zuladung von dem Kampfflugzeug **FZ** als beispielhaftem Fahrzeug das Quantencomputersystem **QUSYS** der Rakete **RKT** optional autonom agieren kann. Es ist jedoch denkbar sein, dass das Quantencomputersystem **QUSYS** der Zuladung, hier in Form einer Rakete **RKT,** nach der Trennung von dem Fahrzeug, hier in Form des Kampfflugzeugs **FZ,** über eine drahtlose oder drahtgebundene oder über einen Lichtwellenleiter oder eine funktionsäquivalente Datenübertragungsstrecke mit dem Quantencomputersystem **QUSYS** des Fahrzeugs, hier des Kampfflugzeugs **FZ,** verbunden bleibt. Auch ist es denkbar, dass beispielsweise jeder der Quantencomputer **QC1** bis **QC16** der Figur 4 der Quantencomputer **QC** eines einzelnen Fahrzeugs, die über eine Funkverbindungsstrecke als externen Datenbus **EXTDB** mit einer zentralen Steuereinheit **ZSE** in einem Führungsfahrzeug und/oder untereinander verbunden sind. Beispielsweise kann es sich bei einem beispielhaften Quantencomputersystem **QUSYS** um einen Drohnenschwarm handeln, bei dem jede der Drohnen einen oder mehrere Quantencomputer **QC** umfasst, die drahtlos, beispielsweise über Funkstrecken oder Laserstrahlverbindungen als externen Datenbus **EXTDB,** miteinander kommunizieren. Im beispielhaften Falle eines Drohnenschwarms kann daher das Quantencomputersystem **QUSYS** der Quantencomputer **QC1** bis **QC16** der beispielhafte Drohnen optional auch keine zentrale Steuereinrichtung **ZSE** umfassen. Optional sind alle Drohnen in etwa gleich gestaltet und organisieren sich dann optional mittels Schwarmtechnologien selbst.

In dem Beispiel der Figur 6a umfasst jede Rakete **RKT** für sich beispielhaft einen Quantencomputer QC. Der Quantencomputer **QC** kann beispielsweise im Zusammenwirken mit einer zentralen Steuereinheit **ZSE** der betreffenden Rakete **RKT** das NP-komplexe Problem der Risikobewertung von Objekten im Umfeld der betreffenden Rakete **RKT** und entlang der Route der betreffenden Rakete **RKT** zum Ziel, der Zielauswahl und Zielfestlegung und der Reihenfolge der Zielbekämpfung der Munitions- und Waffenauswahl und die schnellste und zugleich risikoärmste Route zum Ziel bearbeiten. Bei der Rakete **RKT** kann es sich auch um eine Drohne oder einen Marschflugkörper handeln, der mehrere Ziele bekämpfen kann. Der Quantencomputer **QC** der betreffenden Rakete **RKT** ist in dem Beispiel der Figur 6a über einen externen Datenbus **EXTDB** innerhalb der betreffenden Rakete **RKT** mit der zentralen Steuereinheit **ZSE** der betreffenden Rakete **RKT** verbunden. Der Quantencomputer **QC** der betreffenden Rakete **RKT** entspricht optional einem Quantencomputer **QC** der Figur 1 bzw. der vorhergehenden Beschreibung.

### Figur 6b

Die Figur 6b zeigt einen beispielhaften verlegbaren Quantencomputer **QC** gemäß einer optionalen Ausführungsform in einem See-Container **SC** auf einem Tieflader **TL** mit einer Zugmaschine **ZM.** Sowohl der See-Container **SC** als auch der Tieflader **TL** als auch die Zugmaschine **ZM** können einen oder mehrere Quantencomputer **QC** und/oder jeweils ein oder mehrere Quantencomputersysteme **QUSYS** umfassen. Innerhalb des See-Containers **SC** können ein oder mehrere Quantencomputer **QC** und/oder ein oder mehrere Quantencomputersysteme **QUSYS** platziert sein. Alle diese Quantencomputer **QC** und/oder Quantencomputersysteme **QUSYS** können während des Transports und/oder davor und/oder danach zu einem oder mehreren Quantencomputersystem **QUSYS,** wie am Beispiel der Figur 6a erläutert insbesondere zeitweise zusammengeschaltet sein. In dem Beispiel der Figur 6c versorgt eine zusätzliche Energiereserve **BENG** das Quantencomputersystem **QUSYS** mit dem Quantencomputer **QC** innerhalb des beispielhaften See-Containers **SC** mit elektrischer Energie.

### Figur 6c

Die Figur 6c zeigt einen beispielhaften Flugzeugträger **FZT.** Der beispielhafte Flugzeugträger **FZT** umfasst einen oder mehrere Quantencomputer **QC** und/oder ein oder mehrere Quantencomputersysteme **QUSYS.** Der beispielhafte Flugzeugträger **FZT** ist ein Beispiel für ein Kriegsschiff, das einen oder mehrere Quantencomputer **QC** und/oder ein oder mehrere Quantencomputersysteme **QUSYS** umfasst. Der beispielhafte Flugzeugträger **FZT** ist ein Beispiel für ein Schiff, das einen oder mehrere Quantencomputer **QC** und/oder ein oder mehrere Quantencomputersysteme **QUSYS** umfasst. Der beispielhafte Flugzeugträger **FZT** ist ein Beispiel für einen Schwimmkörper, der einen oder mehrere Quantencomputer **QC** und/oder ein oder mehrere Quantencomputersysteme **QUSYS** umfasst. Der beispielhafte Flugzeugträger **FZT** ist ein Beispiel für ein Fahrzeug, das ein oder mehrere Quantencomputer **QC** und/oder ein oder mehrere Quantencomputersysteme **QUSYS** umfasst. Optional handelt es sich bei den Quantencomputern **QC** und/oder Quantencomputersystemen **QUSYS** um verlegbare Quantencomputer **QC** im Sinne der hier vorgelegten Schrift. Beispielsweise können Quantencomputersysteme **QUSYS** und/oder Quantencomputer **QC** von Flugzeugen **FZ** des Flugzeugträgers **FZT** während des Transports durch den Flugzeugträger **FZT** und/oder in dem Flugzeugträger **FZT** mit einem oder mehreren Quantencomputern **QC** und/oder Quantencomputersystemen **QUSYS** des Flugzeugträgers **FZT** beispielsweise über ein oder mehrere Quantencomputersystemtrennvorrichtungen **QCTV** und einen oder mehrere externe Datenbusse **EXTDB** zu größeren Quantencomputersystemen **QUSYS** verbunden ein.

In dem Beispiel der Figur 6c umfasst der Flugzeugträger **FZT** beispielhaft einen oder mehrere Quantencomputer **QC** und/oder ein oder mehrere Quantencomputersysteme **QUSYS.** Einer oder mehrere dieser Quantencomputer **QC** und/oder ein oder mehreren Quantencomputersysteme **QUSYS** können beispielsweise im Zusammenwirken mit einer zentralen Steuereinheit **ZSE** des Flugzeugträgers **FZT** das NP-vollständige Problem der Risikobewertung von Objekten im Umfeld des Flugzeugträgers **FZT** und entlang der Route zu einem Ziel, der Zielauswahl und Zielfestlegung und der Reihenfolge der Zielbekämpfung der Flugzeug-, Munitions- und Waffenauswahl und die schnellste und zugleich risikoärmste Route zum Ziel bearbeiten. Der bzw. die Quantencomputer **QC** und/oder das Quantencomputersystem bzw. die Quantencomputersysteme **QUSYS** des Flugzeugträgers **FZT** sind optional über einen externen Datenbus **EXTDB** und ggf. geeignete Quantencomputersystemtrennvorrichtungen **QCTV** innerhalb des Flugzeugträgers **FZT** miteinander und mit denen anderer Vorrichtungen auf dem Flugzeugträger **FZT** verbunden. Ein Quantencomputer **QC** des Flugzeugträgers **FZT** entspricht optional einem Quantencomputer **QC** der Figur 1 bzw. der vorhergehenden Beschreibung.

### Figur 6d

Die Figur 6d zeigt eine Fabrikhalle **FHB** als Beispiel einer stationären Vorrichtung in die hier beispielhaft mehrere Quantencomputer **QC** eingebracht wurden. In dem Beispiel der Figur 6d versorgt das normale Stromnetz **PWR** die verlegbaren Quantencomputersysteme **QUSYS** mit ihren Quantencomputern **QC** innerhalb der beispielhaften stationären Vorrichtungen **FBH** mit elektrischer Energie. Die stationäre Vorrichtung **FHB** kann beispielsweise ein oder mehrere Quantencomputersysteme **QUSYS** mit einem oder mehreren Quantencomputern **QC** umfassen. Der bzw. die Quantencomputer **QC** und/oder das Quantencomputersystem bzw. die Quantencomputersysteme **QUSYS** der stationären Vorrichtung **FHB** sind optional über einen externen Datenbus **EXTDB** und ggf. geeignete Quantencomputersystemtrennvorrichtungen **QCTV** innerhalb der stationären Vorrichtung **FHB** miteinander und mit denen anderer Vorrichtungen der stationären Vorrichtung **FHB** verbunden. Ein Quantencomputer **QC** der stationären Vorrichtung **FHB** entspricht optional einem Quantencomputer **QC** der Figur 1 bzw. der vorhergehenden Beschreibung.

### Figur 7

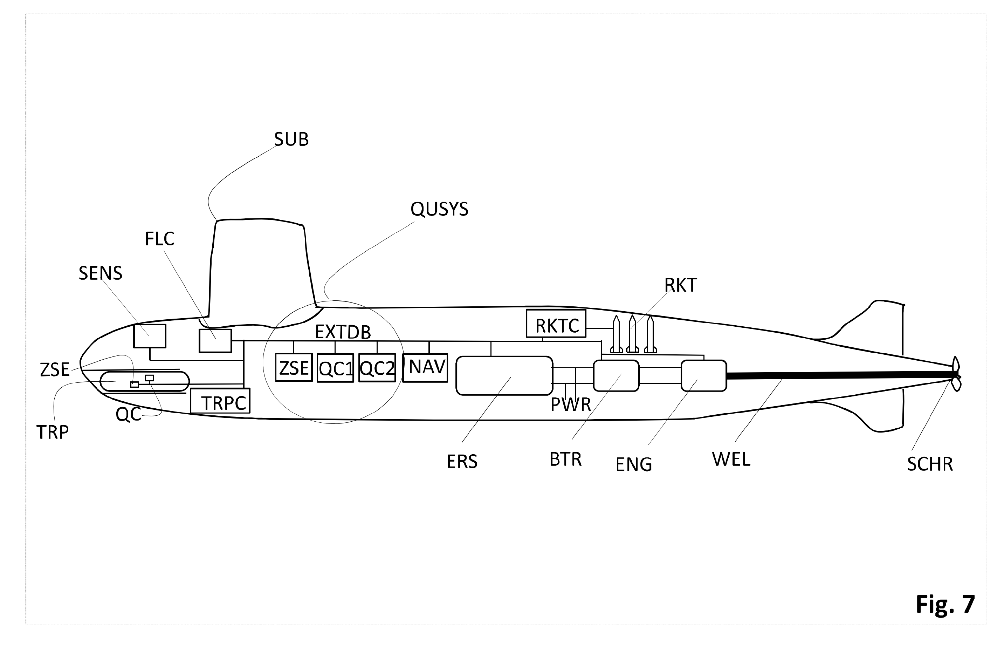

Figur 7 zeigt eine anderes Beispiel eines Fahrzeugs mit einem Quantencomputersystem **QUSYS** gemäß einer optionalen Ausführungsform mit hier beispielhaft zwei Quantencomputern QC. Es handelt sich um ein beispielhaftes Unterseeboot (U-Boot) **SUB.** Das beispielhafte Unterseeboot **SUB** weist ein Energiesystem **ERS** als Energiequelle des U-Boots **SUB** auf. Das Energiesystem **ERS** stellt auch die Energieversorgung **PWR** der Ladevorrichtung **LDV** des Quantencomputersystems **QUSYS** des Unterseeboots **SUB** dar. Das Unterseeboot **SUB** verfügt typischerweise über eine sehr große Energiereserve **BTR.** Ein Antrieb **ENG** treibt in dem Beispiel der Figur 7 das Unterseeboot **SUB** über eine oder mehrere beispielhafte Schiffsschrauben **SCHR** an.

In dem Beispiel der Figur 7 verfügt das Unterseeboot **SUB** über eine Mehrzahl von Raketen **RKT** als Bewaffnung. Es kann sich auch um Marschflugkörper oder andere Vorrichtungen handeln, die sich als vom Unterseeboot **SUB** trennbare Vorrichtungen auf dem Unterseeboot **SUB** befinden. Insofern sind die Raketen **RKT** hier nur Beispiele für Vorrichtungen, die von einem Fahrzeug trennbar sind und sich beispielsweise wie hier als Zuladung auf oder in dem Fahrzeug, hier einem Unterseeboot **SUB,** befinden. Beispielsweise können eine oder mehrere der Raketen **RKT** des Unterseeboots **SUB** ein oder mehrere Quantencomputersysteme **QUSYS** und/oder einen oder mehrere Quantencomputer **QC** umfassen. Optional sind das eine oder die mehreren Quantencomputersysteme **QUSYS** und/oder ein oder mehreren Quantencomputer **QC** mittels einer Quantencomputersystemtrennvorrichtung **QCTV** und eines externen Datenbusses **EXTDB** mit dem einen und/oder den mehreren Quantencomputersystemen **QUSYS** und/oder dem einen oder den mehreren Quantencomputern **QC1, QC2** des Unterseeboots **SUB** verbunden. Die hier vorgelegte Schrift beschrieb die Trennung und Verbindung von Quantencomputersystemen **QUSYS** bereits in der Beschreibung der Figur 6a. Hier nimmt das Unterseeboot **SUB** die Rolle des Flugzeugs **FZ** der Figur 6a ein. Die dort offengelegten Zusammenhänge gelten auch hier soweit zutreffend und werden soweit zutreffend und sinnvoll beansprucht. Eine Raketenabschusskontrolle **RKTC** ist ein Beispiel eines Feuerleitsystems eines Fahrzeugs. Hier ist das Fahrzeug das Unterseeboot **SUB.** In dem Beispiel der Figur 7 können die Raketenabschusskontrolle **RKTC** und das Unterseeboot **SUB** jeweils ein oder mehrere Quantencomputersysteme **QUSYS** und/oder einen oder mehrere Quantencomputer **QC** aufweisen. Da die Raketenabschusskontrolle **RKTC** Teil des Unterseeboots ist, sind auch der eine oder die mehreren Quantencomputersysteme **QUSYS** und/oder der eine oder die mehreren Quantencomputer **QC** der Raketenabschusskontrolle **RKTC** Teil des Unterseeboots **SUB.** Optional verbindet ein externer Datenbus **EXTDB** das eine oder die mehreren Quantencomputersysteme **QUSYS** und/oder den einen oder die mehreren Quantencomputer **QC** der Raketenabschusskontrolle **RKTC** mit dem einen oder den mehreren Quantencomputersystemen **QUSYS** und/oder dem einen oder den mehreren Quantencomputern **QC** des Unterseeboots **SUB.**

In dem Beispiel der Figur 7 verfügt das Unterseeboot **SUB** über eine Mehrzahl von Torpedos **TRP** als Bewaffnung. Es kann sich um Marschflugkörper oder andere Vorrichtungen handeln, die sich als vom Unterseeboot **SUB** trennbare Vorrichtungen auf dem Unterseeboot **SUB** befinden und beispielsweise über die Torpedorohre als Beispiel einer mechanischen Trennvorrichtung beispielsweise durch Abfeuern abgetrennt werden. Insofern sind die Torpedos **TRP** hier nur Beispiele für Vorrichtungen, die von einem Fahrzeug trennbar sind und sich beispielsweise wie hier als Zuladung auf oder in dem Fahrzeug, hier ein Unterseeboot **SUB,** befinden. Beispielsweise können ein oder mehrere der Torpedos **TRP** des Unterseeboots **SUB** ein oder mehrere Quantencomputersysteme **QUSYS** und/oder einen oder mehrere Quantencomputer **QC** umfassen. Optional sind das eine oder die mehreren Quantencomputersysteme **QUSYS** und/oder ein oder mehrere Quantencomputer **QC** mittels einer Quantencomputersystemtrennvorrichtung **QCTV** und eines externen Datenbusses **EXTDB** mit dem einen und/oder den mehreren Quantencomputersystemen **QUSYS** und/oder dem einen oder den mehreren Quantencomputern **QC1, QC2** des Unterseeboots **SUB** verbunden. Die hier vorgelegte Schrift beschreibt die Trennung und Verbindung von Quantencomputersystemen **QUSYS** bereits in der Beschreibung der Figur 6a. Hier nimmt das Unterseeboot **SUB** die Rolle des Flugzeugs **FZ** der Figur 6a ein. Die dort offengelegten Zusammenhänge gelten auch hier soweit zutreffend und werden soweit zutreffend und sinnvoll beansprucht. Eine Torpedoabschusskontrolle **TRPC** ist ein Beispiel eines Feuerleitsystems eines Fahrzeugs. Hier ist das Fahrzeug das Unterseeboot **SUB.** In dem Beispiel der Figur 7 können die Torpedoabschusskontrolle **TRPC** und das Unterseeboot **SUB** jeweils ein oder mehrere Quantencomputersysteme **QUSYS** und/oder einen oder mehrere Quantencomputer **QC** aufweisen. Da die Torpedoabschusskontrolle **TRPC** Teil des Unterseeboots **SUB** ist, sind auch das eine oder die mehreren Quantencomputersysteme **QUSYS** und/oder der eine oder die mehreren Quantencomputer **QC** der Torpedoabschusskontrolle **RKTC** Teil des Unterseeboots **SUB.** Optional verbindet ein externer Datenbus **EXTDB** das eine oder die mehreren Quantencomputersysteme **QUSYS** und/oder den einen oder die mehreren Quantencomputer **QC** der Torpedoabschusskontrolle **TRPC** mit dem einen oder den mehreren Quantencomputersystemen **QUSYS** und/oder dem einen oder den mehreren Quantencomputern **QC** des Unterseeboots **SUB.**

Darüber hinaus verfügt das Unterseeboot **SUB** in dem Beispiel der Figur 7 optional über eine Vielzahl von Sensoren **SENS,** die beispielsweise ein externer Datenbus **EXTDB** mit einem oder mehreren Quantencomputersystemen **QUSYS** und/oder Quantencomputern **QC** an Bord des Unterseeboots **SUB** verbindet. Hierbei kann es sich beispielsweise um Schallsensoren und/oder Ultraschallsensoren, Leitfähigkeitssensoren, Antennen, Sensoren für elektromagnetische und/oder ionisierende Strahlung, Partikeldetektoren, Drucksensoren, Geschwindigkeitssensoren, Positionssensoren, Lagesensoren, Beschleunigungssensoren, Magnetometer, LIDAR-Sensoren, RADAR-Sensoren, Quantensensoren und der gleichen handeln. Bei den Sensoren **SENS** kann es sich auch um Sensorsysteme, Sensorarrays und andere Messysteme handeln. Die Sensoren **SENS** können Messwerte innerhalb und außerhalb des Fahrzeugs, hier eines Unterseeboots **SUB,** erfassen.

In dem Beispiel der Figur 7 können beispielsweise ein oder mehrere Quantencomputer **QC** und/oder ein oder mehrere Quantencomputersysteme **QUSYS** an Bord des Fahrzeugs, hier eines Unterseeboots **SUB,** beispielsweise im Zusammenwirken mit einer zentralen Steuereinheit **ZSE** des Fahrzeugs, das NP-vollständige Problem der Risikobewertung von Objekten im Umfeld des Fahrzeugs, hier beispielhaft des Unterseeboots **SUB,** und/oder entlang des Kurses zum Ziel des Fahrzeugs, der Zielauswahl und Zielfestlegung und der Reihenfolge der Zielbekämpfung der Munitions- und Waffenauswahl und die schnellste und zugleich risikoärmste Route des Fahrzeugs zum Ziel, bearbeiten. Die Quantencomputer **QC1, QC2** des Unterseeboots **SUB** und der anderen Vorrichtungsteile sind in dem Beispiel der Figur 7 über einen externen Datenbus **EXTDB** innerhalb des Unterseeboots **SUB** mit der zentralen Steuereinheit **ZSE** des Unterseeboots **SUB** verbunden. Die Quantencomputer **QC1, QC2** und die anderen Vorrichtungsteile entsprechen optional einem Quantencomputer **QC** der Figur 1 bzw. der vorhergehenden Beschreibung.

### Figur 8

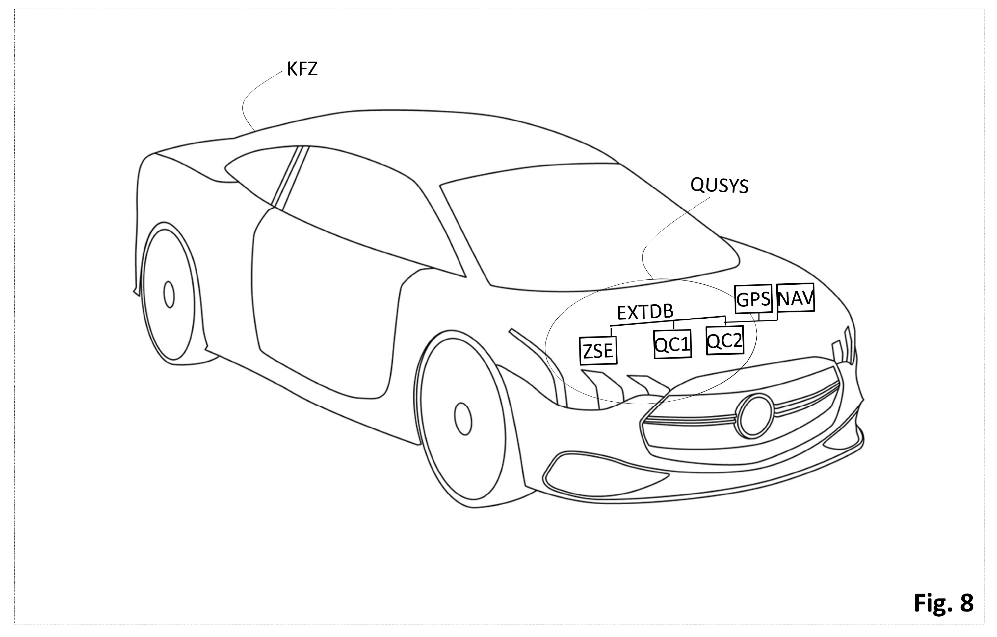

Figur 8 zeigt ein beispielhaftes Fahrzeug gemäß einer optionalen Ausführungsform mit einem ersten Quantencomputer **QC1,** einem zweiten Quantencomputer **QC2,** einer zentralen Steuereinheit **ZSE** und einem externen Datenbus **EXTDB,** der diese zu einem Quantencomputersystem **QUSYS** verbindet. Das Fahrzeug ist in dem Beispiel der Figur 8 ein beispielhaftes Kraftfahrzeug **KFZ.** Als beispielhafte Sensoren **SENS** umfasst das Fahrzeug einen GPS-Empfänger **GPS** zur Ermittlung der aktuellen Position auf der Erdoberfläche und ein Navigationssystem **NAV.** Das Fahrzeug kann einen oder mehrere Quantencomputer **QC** und/oder ein oder mehrere Quantencomputersysteme **QUSYS** umfassen, die über einen oder mehrere externe Datenbusse **EXTDB** miteinander verbunden sein können. Die einen oder mehreren externen Datenbusse können den einen oder die mehreren Quantencomputer **QC** und/oder ein oder mehrere Quantencomputersysteme **QUSYS** mit einem oder mehreren Aktoren und/oder einem oder mehreren Sensoren verbinden. Bei den Sensoren kann es sich auch um Sensorsysteme handeln. Beispielsweise kann es sich um Beschleunigungs- und Lagesensoren, Aufprallsensoren, Ultraschallmesssysteme, Radarsysteme, LIDAR-Systeme, Sensorsysteme des Antriebs und der Energiespeicher etc. handeln. Bei den Aktoren kann es sich um Sender, Laser, Motoren etc. handeln.

In dem Beispiel der Figur 8 können beispielsweise ein oder mehrere Quantencomputer **QC** und/oder ein oder mehrere Quantencomputersysteme **QUSYS** an Bord des Fahrzeugs, hier eines Autos **KFZ,** beispielsweise im Zusammenwirken mit einer zentralen Steuereinheit **ZSE** des Fahrzeugs das NP-vollständige Problem der Risikobewertung von Objekten im Umfeld des Fahrzeugs, hier beispielhaft des Autos **KFZ,** und/oder entlang der Route zum Ziel des Fahrzeugs, der Zielauswahl und Zielfestlegung und der Reihenfolge der Zielanfahrt und die schnellste und zugleich risikoärmste Route des Fahrzeugs zum Ziel bearbeiten. Die Quantencomputer **QC1, QC2** des Fahrzeugs, hier beispielhaft des Autos **KFZ,** und der anderen Vorrichtungsteile des Fahrzeugs, hier beispielhaft des Autos **KFZ,** sind in dem Beispiel der Figur 8 über einen externen Datenbus **EXTDB** innerhalb des Fahrzeugs, hier beispielhaft des Autos **KFZ,** optional mit der zentralen Steuereinheit **ZSE** des Fahrzeugs, hier beispielhaft des Autos **KFZ,** verbunden. Die Quantencomputer **QC1, QC2** und die anderen Vorrichtungsteile entsprechen optional einem Quantencomputer **QC** der Figur 1 bzw. der vorhergehenden Beschreibung.

### Figur 9

Figur 9 zeigt ein Verfahren gemäß einer optionalen Ausführungsform zur Lösung eines NP-vollständigen Problems. Die Ausarbeitung des hier vorgelegten Vorschlags ergab, dass eine Problemlösung mit einem Quantencomputer in vier Schritten erfolgen kann.

Computerprogramme, die auf konventionellen Rechnern mit Harvard- oder Von-Neumann-Architektur laufen, lösen Probleme optional mit den Schritten Analyse, Elaboration und Synthese.

Im Analyseschritt (Schritt A) passt der Rechner das Problem auf die Arbeitsweise des Rechners an. Beispielsweise übersetzt eine Einlese-Routine ein Textfile mit lesbaren Zahlen in Binärdaten, die im Speicher des Rechners abgelegt werden.

In einem zweiten Schritt, der Elaboration (Schritt B), führt der Rechner dann beispielsweise eine Berechnung durch, bei der beispielsweise diese Binärdaten als Eingabedaten dienen, und ermittelt binäre Ergebnisdaten.

In einem dritten Schritt, dem Syntheseschritt (Schritt D), passt der Rechner dieses Ergebnis an den Weiterverwendungszweck an. Beispielsweise könnte in dem hier beschriebenen Beispiel der Rechner die binären Ergebnisdaten in lesbare Ziffern der entsprechenden Zahlen in einem Ausgabetext-File wandeln.

Die Ausarbeitung ergab nun, dass insbesondere in sicherheitsrelevanten Anwendungen nach einer Lösung eines NP-vollständigen Problems im Elaborations-Schritt B) mittels eines Quantencomputers **QC** das Quantencomputersystem **QUSYS** eine Überprüfung in einem Schritt C) durchführen muss. In diesem Prüfschritt C) überprüften das Quantencomputersystem **QUSYS** oder der Quantencomputer **QC** optional mittels eines konventionellen Rechnerkerns **CPU** oder einer zentralen Steuereinheit **ZSE,** ob die in der Elaboration ermittelte Lösung tatsächlich eine Lösung ist, denn bei Quantenoperationen handelt es sich in der Regel um statistische Operationen, die auch falsche Ergebnisse liefern können. Ggf. wiederholt das Quantencomputersystem **QUSYS** die Berechnung.

### Figur 10

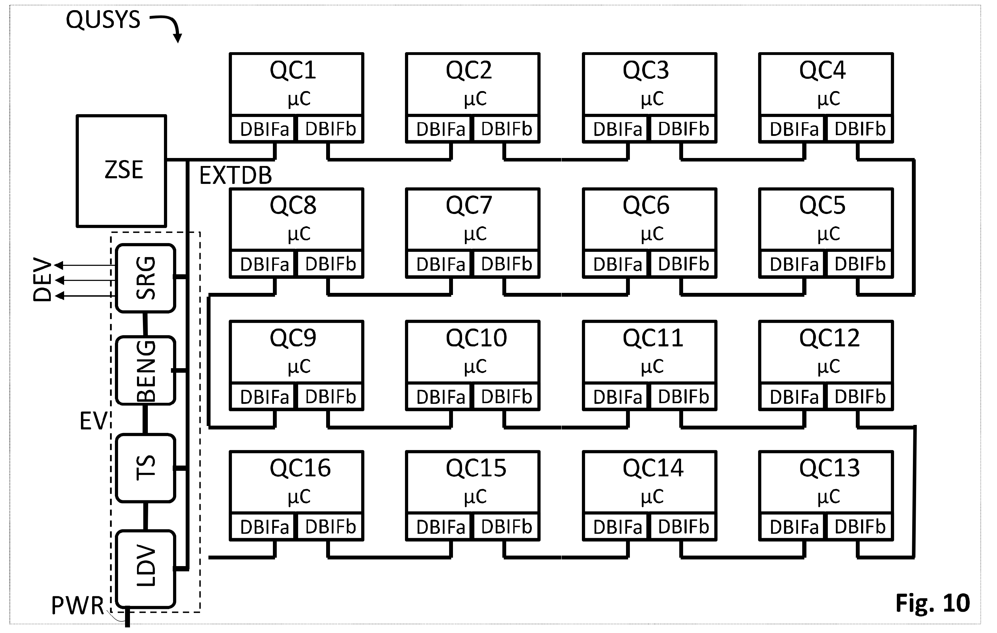

Figur 10 entspricht der Figur 4, wobei gemäß der in Figur 10 gezeigten Ausführungsform beispielhaft 16 Quantencomputer **QC1** bis **QC16** des Quantencomputersystems **QUSYS** gemäß einer optionalen Ausführungsform in den externen Datenbus **EXTDB** beispielhaft eingefügt sind. Die Steuervorrichtung **µC**, beispielsweise jedes Quantencomputers **QC1** bis **QC16,** verfügt über beispielhaft zwei externe Datenschnittstellen **DBIFa** und **DBIFb** anstelle einer Datenbusschnittstelle **DBIF,** wie in Figur 1 dargestellt. Hierdurch kann beispielsweise die zentrale Steuervorrichtung **ZSE** jedem der Quantencomputer **QC** eine eindeutige Busknotenadresse zuweisen. Typischerweise geben die Steuervorrichtungen **µC** der Quantencomputer **QC1** bis **QC16** Daten, die sie von der Datenbusseite mit der zentralen Steuervorrichtung **ZSE** erhalten, nur dann an Quantencomputer und Busknoten der anderen Datenbushälfte weiter, wenn sie selbst bereits eine gültige Busknotenadresse von der zentralen Steuervorrichtung **ZSE** erhalten haben. Auf diese Weise kann die zentrale Steuervorrichtung **ZSE** nach und nach beginnend mit dem ersten Quantencomputer **QC1** allen Quantencomputern der Quantencomputer **QC1** bis **QC16** eine Quantencomputeradresse als Busknotenadresse des externen Datenbusses **EXTDB** zuweisen. Nach dem Einschalten oder einem System-Reset besitzen optional alle Quantencomputer **QC1** bis **QC16** eine typischerweise allen gleiche ungültige Default-Quantencomputeradresse als initiale Busknotenadresse. Dadurch kann die zentrale Steuervorrichtung den noch nicht mit einer gültigen Busknotenadresse versehenen und ihr am nächsten liegenden Quantencomputer der Quantencomputer **QC1** bis **QC16** mit einer gültigen Busknotenadresse versehen. Dadurch kann die zentrale Steuervorrichtung **ZSE** im nächsten Schritt den dahinter liegenden Quantencomputer der Quantencomputer **QC1** bis **QC16** erreichen und initialisieren und so fort, bis alle Quantencomputer der Quantencomputer **QC1** bis **QC16** eine gültige Quantencomputeradresse als Busknotenadresse erhalten haben. Optional führt also das Quantencomputersystem **QSYS** nach dem Einschalten eine Initialisierung der Quantencomputer **QC1** bis **QC16** des Quantencomputersystems **QUSYS** durch. Optional gehört zu der Initialisierung des Quantencomputersystems **QUSYS** auch die Durchführung eines Autoadressierungsverfahrens zur Vergabe von Busknotenadressen an die Busknoten des externen Datenbusses **EXTDB.** In dem Beispiel der Figur 10 sind die Busknoten die Quantencomputer **QC1** bis **QC16.** In dem Beispiel der Figur 10 übernimmt die zentrale Steuervorrichtung **ZSE** optional die Rolle eines Busmaster, der die Busknotenadressen generiert und zuweist und die Quantencomputer **QC1** bis **QC16** steuert.

### Figur 11

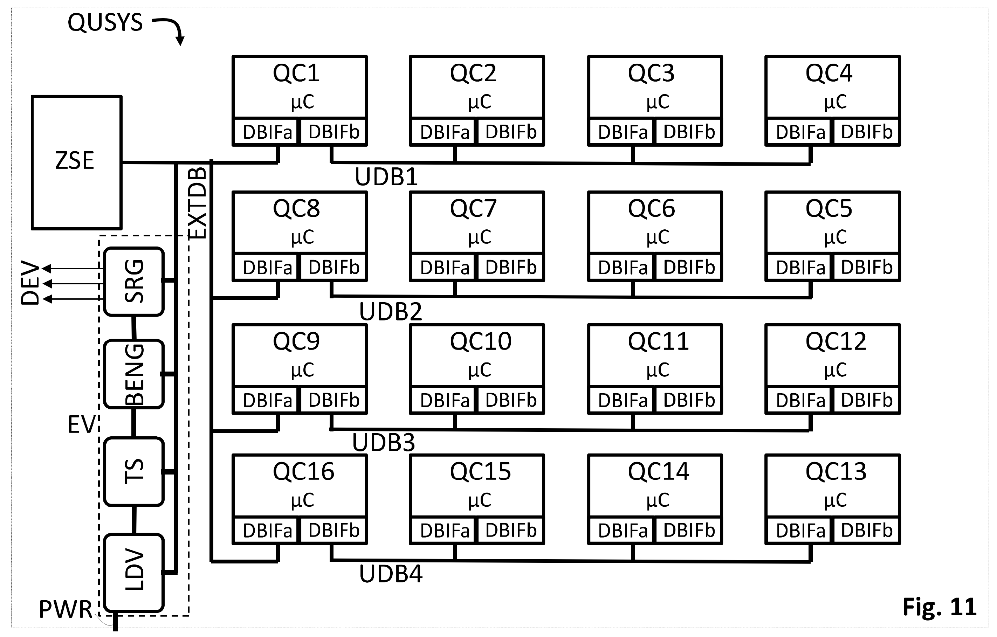

Figur 11 zeigt ein Quantencomputersystem **QUSYS** gemäß einer optionalen Ausführungsform mit vier Unterquantencomputersystemen.

Der erste Quantencomputer **QC1** bildet mit dem zweiten Quantencomputer **QC2** und dem dritten Quantencomputer **QC3** und dem vierten Quantencomputer **QC4** ein erstes Unterquantencomputersystem. Ein erster Unterdatenbus **UDB1** verbindet die Quantencomputer **QC1, QC2, QC3, QC4** des ersten Unterquantencomputersystems. Der erste Quantencomputer **QC1** kann als Busmaster für die anderen Quantencomputer **QC2, QC3, QC4** des ersten Unterquantencomputersystems dienen.

Der fünfte Quantencomputer **QC5** bildet mit dem sechsten Quantencomputer **QC6** und dem siebten Quantencomputer **QC7** und dem achten Quantencomputer **QC8** ein zweites Unterquantencomputersystem. Ein zweiter Unterdatenbus **UDB2** verbindet die Quantencomputer **QC5, QC6, QC7, QC8** des zweiten Unterquantencomputersystems. Der fünfte Quantencomputer **QC5** kann als Busmaster für die anderen Quantencomputer **QC6, QC7, QC8** des zweiten Unterquantencomputersystems dienen.

Der neunte Quantencomputer **QC9** bildet mit dem zehnten Quantencomputer **QC10** und dem elften Quantencomputer **QC11** und dem zwölften Quantencomputer **QC12** ein drittes Unterquantencomputersystem. Ein dritter Unterdatenbus **UDB3** verbindet die Quantencomputer **QC9, QC10, QC11, QC12** des dritten Unterquantencomputersystems. Der neunte Quantencomputer **QC9** kann als Busmaster für die anderen Quantencomputer **QC10, QC11, QC12** des dritten Unterquantencomputersystems dienen.

Der dreizehnte Quantencomputer **QC13** bildet mit dem vierzehnten Quantencomputer **QC14** und dem fünfzehnten Quantencomputer **QC15** und dem sechzehnten Quantencomputer **QC16** ein viertes Unterquantencomputersystem. Ein vierter Unterdatenbus **UDB4** verbindet die Quantencomputer **QC13, QC14, QC15, QC16** des vierten Unterquantencomputersystems. Der dreizehnte Quantencomputer **QC13** kann als Busmaster für die anderen Quantencomputer **QC14, QC15, QC16** des vierten Unterquantencomputersystems dienen.

In dem Beispiel der Figur 11 verbindet der externe Datenbus **EXTDB** den ersten Quantencomputer **QC1** und den fünften Quantencomputer **QC5** und den neunten Quantencomputer **QC9** und den dreizehnten Quantencomputer **QC13** und die zentrale Steuereinheit **ZSE.**

### Figur 12

Figur 12 zeigt ein Verfahren gemäß einer optionalen Ausführungsform zur Lösung eines NP-Vollständigen Problems mit Hilfe eines mobilen verlegbaren Quantencomputers **QC** gemäß einer optionalen Ausführungsform. Ein solches Verfahren beginnt mit der Erfassung von Umfelddaten durch das Quantencomputersystem **QUSYS** in einem Schritt A). Die Erfassung der Umfelddaten erfolgt optional mittels geeigneter Sensoren, die Teil des Quantencomputersystems **QUSYS** sein können oder die mit diesem Quantencomputersystem **QUSYS** über Datenverbindungen verbunden sind und Umfelddaten an das Quantencomputersystem **QUSYS** übermitteln. In einem Schritt B) identifiziert das Quantencomputersystem **QUSYS** Objekte im Umfeld des Quantencomputersystems **QUSYS,** wobei diese Umfeld auch entfernt vom Quantencomputersystem **QUSYS** sein kann. Dabei klassifiziert in einem Schritt C) das Quantencomputersystem **QUSYS** die identifizierten Objekte im Umfeld des Quantencomputersystems **QUSYS.** Typischerweise klassifiziert das Quantencomputersystem **QUSYS** in dem Schritt C) die Objekte nach Gefährlichkeit und/oder Verwundbarkeit und/oder strategischer Wirkung, um eine Maximierung einer Waffenwirkung zu erzielen. Optional erfolgt diese Klassifikation in Schritt C) mittels eines neuronalen Netzwerkmodells, das das Quantencomputersystem **QUSYS** optional ausführt. Optional nutzt das Quantencomputersystem **QUSYS** für diesen Schritt C) eine oder mehrere Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS,** um die Klassifikation der Objekte durchzuführen. In einem Schritt D) legt das Quantencomputersystem **QUSYS** die Waffen und/oder die Munition und/oder die Konfiguration und/oder die Reihenfolge der angegriffenen Objekte, und/oder die anzugreifenden und/oder die nicht anzugreifenden Objekte fest. Optional erfolgt diese Festlegung in Schritt D) mittels eines neuronalen Netzwerkmodells, das das Quantencomputersystem **QUSYS** optional ausführt. Optional nutzt das Quantencomputersystem **QUSYS** in dem Schritt D) eine oder mehrere Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS,** um diese Festlegungen durchzuführen. In einem Schritt E) schlägt das Quantencomputersystem **QUSYS** optional eines oder mehrere dieser festgelegten Angriffsszenarien einem Bediener, beispielsweise einem oder mehreren Piloten und/oder einem oder mehreren Feuerleitoffizieren oder der gleichen vor. Sofern diese den Feuerbefehl geben, kann beispielsweise das Quantencomputersystem **QUSYS** das freigegebene Angriffsszenario in einem Schritt F) umsetzen.

Diese beispielhafte Anwendung kann für die Lösung NP-vollständiger Probleme verallgemeinert werden. Ein solches verallgemeinertes Verfahren beginnt mit der Erfassung von Daten durch das Quantencomputersystem **QUSYS** in einem Schritt A). Die Erfassung der Daten erfolgt typischerweise mittels geeigneter Sensoren und/oder Datenbanken oder anderer Datenquellen, die Teil des Quantencomputersystems **QUSYS** sein können oder die mit diesem Quantencomputersystem **QUSYS** über Datenverbindungen verbunden sind und die Daten an das Quantencomputersystem **QUSYS** übermitteln. In einem Schritt B) identifiziert das Quantencomputersystem **QUSYS** geeignete Datenobjekte. Dabei klassifiziert das Quantencomputersystem **QUSYS** in einem Schritt C) die identifizierten Datenobjekte. Typischerweise klassifiziert das Quantencomputersystem **QUSYS** in dem Schritt C) die Objekte nach Kategorien, die für die Lösung des jeweiligen Problems relevant sind, um eine Maximierung der Wirkung zu erzielen. Optional erfolgt diese Klassifikation in Schritt C) mittels eines neuronalen Netzwerkmodells, das das Quantencomputersystem **QUSYS** optional ausführt. Optional nutzt das Quantencomputersystem **QUSYS** für diesen Schritt C) eine oder mehr Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS,** um die Klassifikation der Datenobjekte durchzuführen. In einem Schritt D) legt das Quantencomputersystem **QUSYS** die Mittel zur Erzielung des Zwecks und die Parameter und Mittelkonfigurationen bei der Anwendung dieser Mittel und/oder die Reihenfolge der bearbeiteten bzw. nicht bearbeiteten Datenobjekte und/oder die Reihenfolge der angewendeten Mittel fest. Optional erfolgt diese Festlegung in Schritt D) mittels eines neuronalen Netzwerkmodells, das das Quantencomputersystem **QUSYS** optional ausführt. Optional nutzt das Quantencomputersystem **QUSYS** in dem Schritt D) eine oder mehrere Quantenoperationen zur Manipulation des Quantenzustand eines oder mehrerer Quantenpunkte **NV1, NV2, NV3** eines oder mehrerer Quantencomputer **QC1** bis **QC16** des Quantencomputersystems **QUSYS,** um diese Festlegungen durchzuführen. In einem Schritt E) schlägt das Quantencomputersystem **QUSYS** optional eines oder mehrere dieser festgelegten Szenarien einem Bediener oder der gleichen vor. Sofern diese ein Startsignal geben, kann beispielsweise das Quantencomputersystem **QUSYS** das freigegebene Szenario in einem Schritt F) umsetzen.

### Figur 13

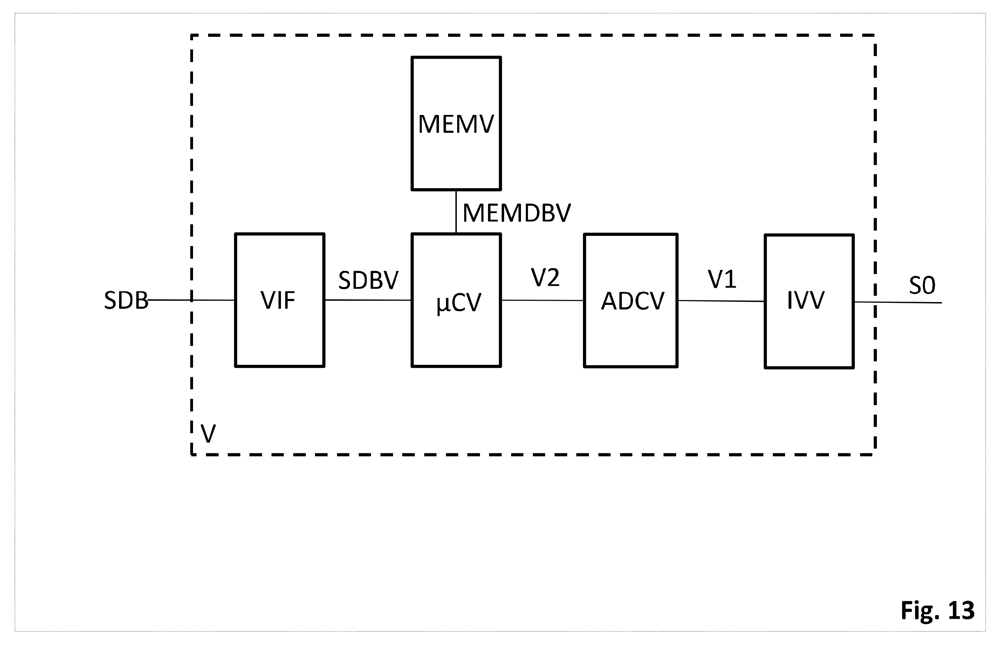

Die Figur 13 zeigt einen beispielhaften Aufbau eines Verstärkers V gemäß einer optionalen Ausführungsform, wie er in der Figur 1 eingezeichnet ist. Ein interner Verstärker **IVV** des Verstärkers V verstärkt und filtert das Empfängerausgangssignal **S0** zu einem Ausgangssignal **V1** des internen Verstärkers **IVV** des Verstärkers **V.** Ein Analog-zu-Digital-Wandler **ADCV** des Verstärkers **V** wandelt das Ausgangssignal **V1** des internen Verstärkers **IVV** des Verstärkers **V** zu digitalisierten Abtastwerten auf einer Datenleitung **V2** zwischen der Steuervorrichtung **µCV** des Verstärkers **V** und dem Analog-zu-Digital-Wandler **ADCV** des Verstärkers **V.** Die Steuervorrichtung **µCV** des Verstärkers **V** legt diese Abtastwerte optional in einem Speicher **MEMV** des Verstärkers **V;** über einen Speicherdatenbus **MEMDBV** zwischen der Steuervorrichtung **µCV** des Verstärkers **V** und dem Speicher **MEMV** des Verstärkers **V** ab. Die Steuervorrichtung **µC** des verlegbaren Quantencomputers **QC** kann dann über den Steuerdatenbus **SDB,** die Datenschnittstelle **VIF** des Verstärkers **V,** den internen Steuerdatenbus **SDBV** des Verstärkers **V** und die Steuervorrichtung **µCV** des Verstärkers **V** auf die Daten im Speicher **MEMV** des Verstärkers **V** zugreifen und diese weiterverarbeiten.

### Figur 14

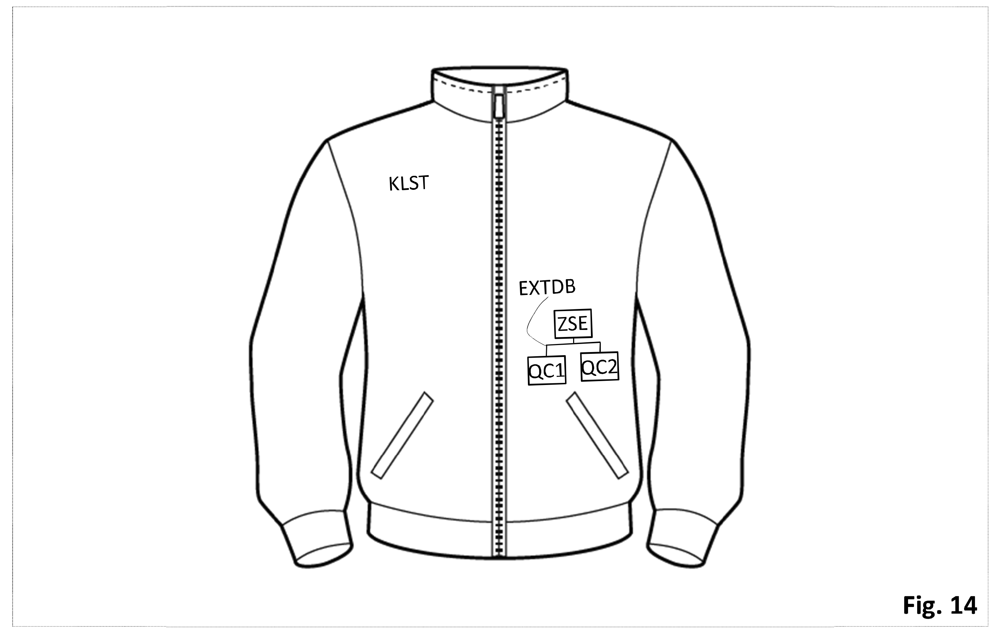

Figur 14 zeigt ein Beispiel eines Kleidungsstücks gemäß einer optionalen Ausführungsform mit einem verlegbaren Quantencomputersystem **QUSYS** gemäß einer optionalen Ausführungsform. Für die Nacharbeit verweist die hier vorgelegte Schrift beispielhaft auf die Schrift WO 2020 239 172 A1, die eine Methode zur CMOS-Integration offenbart.

Die hier vorgelegte Schrift schlägt vor, einen oder mehrere Quantencomputer **QC1, QC2** und eine zentrale Steuereinheit **ZSE** in das Material eines Kleidungsstücks **KLST** einzuarbeiten. Optional entspricht das Quantencomputersystem **QUSYS** dem Quantencomputersystem **QUSYS** der Figuren 4, 10 oder 11 oder ähnlichen. Bei dem Kleidungsstück kann es sich auch um eine Armbanduhr oder dergleichen handeln.

### Figur 15

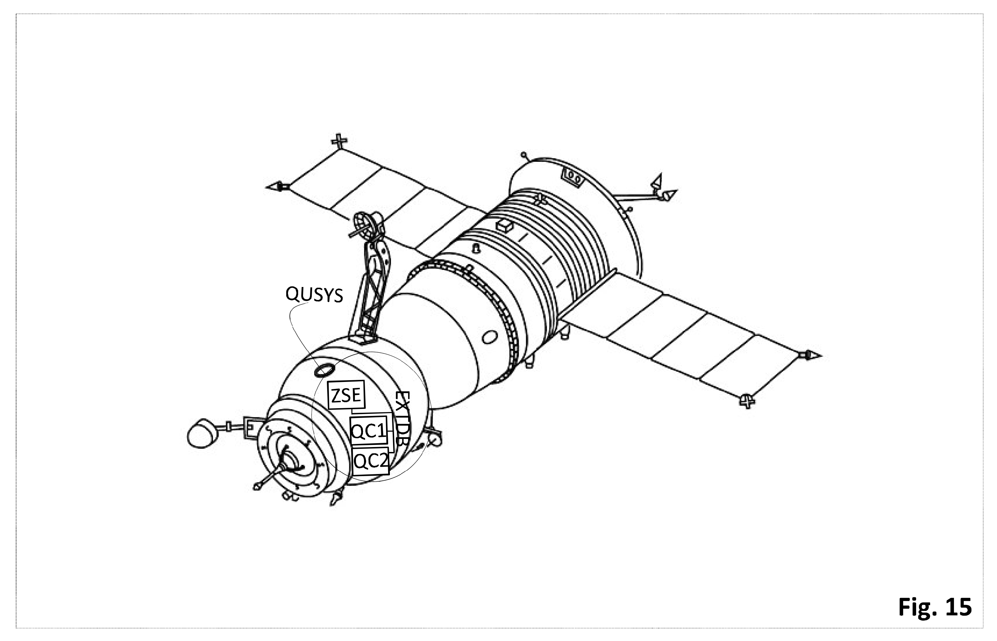

Figur 15 zeigt ein Beispiel eines Satelliten oder Raumfahrzeugs als Beispiel eines Fahrzeugs gemäß einer optionalen Ausführungsform mit einem verlegbaren Quantencomputersystem **QUSYS** gemäß einer optionalen Ausführungsform. Die hier vorgelegte Schrift schlägt vor, einen oder mehrere Quantencomputer **QC1, QC2** und eine zentrale Steuereinheit **ZSE** in den Satelliten oder das Raumfahrzeug zu integrieren. Optional entspricht das Quantencomputersystem **QUSYS** dem Quantencomputersystem **QUSYS** der Figuren 4, 10 oder 11 oder ähnlichen.

### Figur 16

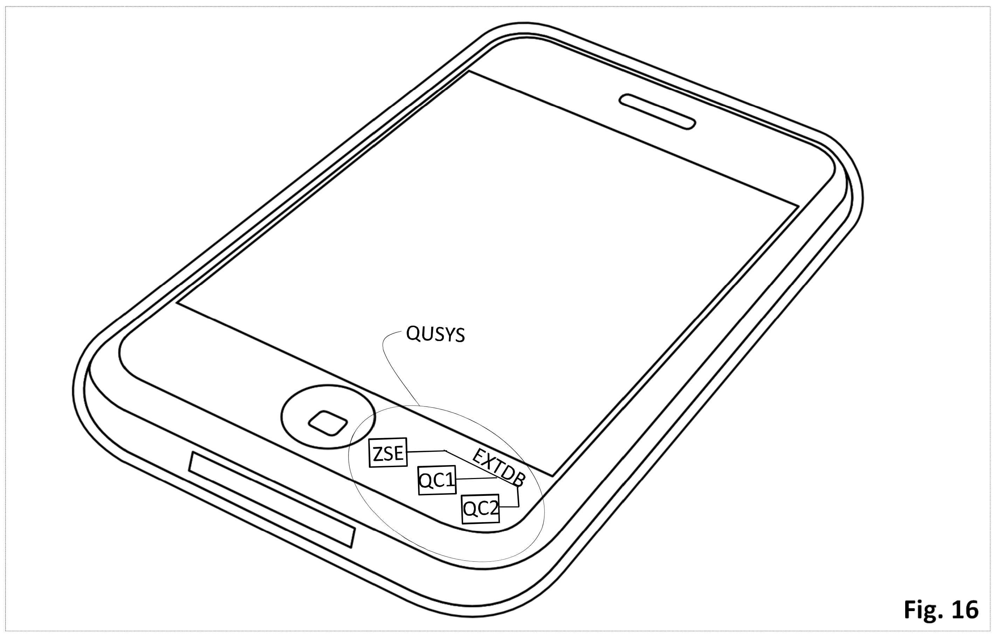

Figur 16 zeigt ein Beispiel eines Smartphones gemäß einer optionalen Ausführungsform mit einem verlegbaren Quantencomputersystem **QUSYS** gemäß einer optionalen Ausführungsform. Die hier vorgelegte Schrift schlägt vor, einen oder mehrere Quantencomputer **QC1, QC2** und eine zentrale Steuereinheit **ZSE** in das Smartphones zu integrieren. Für die Nacharbeit verweist die hier vorgelegte Schrift beispielhaft auf die Schrift WO 2020 239 172 A1, die eine Methode zur CMOS-Integration offenbart. Optional entspricht das Quantencomputersystem **QUSYS** dem Quantencomputersystem **QUSYS** der Figuren 4, 10 oder 11 oder ähnlichen.

### Figur 17

Figur 17 entspricht in vielen Aspekten der Figur 1. Zusätzlich ist jedoch eine mechanische Grundkonstruktion **MGK** eingezeichnet. Optional verbindet die in Figur 17 schematisch gezeichnete mechanische Grundkonstruktion **MGK** die optischen Funktionselementen **(LD, DBS, OS, D, KV, XT, YT, MWA, MGX, MGy, MGz, MGz, PM, PV, MSy, MSx, MSz, STM, PD, CM1, CM2)** des Quantencomputers **QC** miteinander. Optional ist die mechanische Grundkonstruktion **MGK** über vierte Mittel, beispielsweise Schwingungsdämpfer, mit dem Gehäuse **GH** des Quantencomputers **QC** mechanisch verbunden. Die vierten Mittel verhindern oder dämpfen die Übertragungen von Körperschall etc. vom Gehäuse **GH** des Quantencomputers **QC** oder anderen Vorrichtungsteilen des Quantencomputers **QC** auf die mechanische Grundkonstruktion **MGK** mit den optischen Funktionselementen **(LD, DBS, OS, D, KV, XT, YT, MWA, MGX, MGy, MGz, MGz, PM, PV, MSy, MSx, MSz, STM, PD, CM1, CM2)** des Quantencomputers **QC.** Optional ist der Quantencomputer **QC** selbst mechanisch gedämpft durch entsprechende vierte Mittel und an oder in der mobilen Vorrichtung, beispielsweise einem Fahrzeug, befestigt. Das hier vorgelegte Dokument weist auf die vielfältige Definition des Begriffs Fahrzeug in diesem Zusammenhang in diesem Dokument hin.

Die Zuleitungen von Vorrichtungsteilen des Quantencomputers **QC** die nicht direkt mechanisch mit der mechanische Grundkonstruktion **MGK** verbunden sind zu Vorrichtungsteilen **(LD, DBS, OS, D, KV, XT, YT, MWA, MGX, MGy, MGz, MGz, PM, PV, MSy, MSx, MSz, STM, PD, CM1, CM2),** die direkt mit der mechanischen Grundkonstruktion **MGK** verbunden sind, weisen optional fünfte Mittel auf, die dazu eingerichtet sind, die Übertragung von Körperschall und Kräften von den Vorrichtungsteilen des Quantencomputers **QC** die nicht direkt mechanisch mit der mechanische Grundkonstruktion **MGK** verbunden sind zu Vorrichtungsteilen **(LD, DBS, OS, D, KV, XT, YT, MWA, MGX, MGy, MGz, MGz, PM, PV, MSy, MSx, MSz, STM, PD, CM1, CM2)** zu minimieren.

Figur 18A zeigt in einer schematischen Darstellung ein verlegbares Quantencomputersystem **QUSYS,** umfassend einen verlegbaren Quantencomputer **QC** und eine Energieversorgungseinrichtung **EV** zur zumindest teilweisen Versorgung des Quantencomputers **QC** mit elektrischer Energie. Das Quantencomputersystem **QUSYS** ist dadurch gekennzeichnet, dass die Energieversorgungeinrichtung **EV** verlegbar ausgebildet ist, und dass die Energieversorgungseinrichtung **EV** eine erste Spannungsregelstufe **EV1** und eine zweite Spannungsregelstufe **EV2** aufweist und dazu eingerichtet ist, eine von einer Energiequelle bereitgestellte elektrische Energie durch eine mehrstufige Spannungsregelung mittels der ersten Spannungsregelstufe **EV1** und der zweiten Spannungsstufe **EV2** zur zumindest teilweisen Versorgung des Quantencomputers **QC** auf einen vorbestimmten Spannungswert zu regeln.

Figur 18B zeigt in einer schematischen Darstellung ein verlegbares Quantencomputersystem **QUSYS** gemäß einer optionalen Ausführungsform, umfassend einen verlegbaren Quantencomputer **QC.** Das verlegbare Quantencomputersystem **QUSYS** ist dadurch gekennzeichnet, dass das Quantencomputersystem **QUSYS** ferner zumindest ein Magnetfeldsensorsystem **MSx, MSy, MSz** und zumindest einen Magnetfeldgenerator **MGx, MGy, MGz** aufweist. Dabei ist das Quantencomputersystem **QUSYS** dazu eingerichtet, mittels des zumindest einen Magnetfeldsensorsystems **MSx, MSy, MSz** eine Änderung eines vorherrschenden Magnetfelds zu ermitteln und mittels des Magnetfeldgenerators **MGx, MGy, MGz** die ermittelte Änderung des Magnetfelds am Ort des Quantencomputers **QC** zumindest teilweise zu kompensieren.

Figur 18C zeigt in einer schematischen Darstellung ein verlegbares Quantencomputersystem **QUSYS** gemäß einer optionalen Ausführungsform, umfassend einen Quantencomputer **QC** und eine Kühlvorrichtung **KV,** welche dazu eingerichtet ist, eine Temperatur von Quantenpunkten **NV1, NV2, NV3** des Quantencomputers und/oder die Temperatur von Kernquantenpunkten **CI1₁**, **CI1₂, CI1₃**, **CI2₁**, **CI2₂, CI2₃**, **CI3₁, CI3₂, CI3₃** des Quantencomputers **QC** und/oder eine Temperatur eines Substrats **D** des Quantencomputers zu senken. Das Quantencomputersystem ist dadurch gekennzeichnet, dass die Kühlvorrichtung **KV** verlegbar ausgebildet ist.

Figur 18D zeigt in einer schematischen Darstellung ein verlegbares Quantencomputersystem **QUSYS** gemäß einer optionalen Ausführungsform, umfassend einen verlegbaren Quantencomputer **QC.** Das Quantencomputersystem **QUSYS** ist dadurch gekennzeichnet, dass das Quantencomputersystem **QUSYS** ferner eine Stabilisierungsvorrichtung **STAB** aufweist, wobei das Quantencomputersystem dazu eingerichtet ist, mittels der Stabilisierungsvorrichtung **STAB** eine mechanische Einwirkung auf den Quantencomputer zumindest teilweise zu kompensieren.

Figur 18E zeigt in einer schematischen Darstellung ein Quantencomputersystem (QUSYS) gemäß einer optionalen Ausführungsform umfassend einen verlegbaren Quantencomputer (QC) und einen Rotationssensor (RoS). Das Quantencomputersystem ist dazu eingerichtet, mittels des Rotationssensors eine Rotationsbewegung und/oder eine Ausrichtung des Quantencomputers und/oder des Quantencomputersystems zu ermitteln.

Figur 18F zeigt in einer schematischen Darstellung ein Quantencomputersystem (QUSYS) gemäß einer optionalen Ausführungsform umfassend einen verlegbaren Quantencomputer (QC) und eine Rotationsentkopplungsvorrichtung (REV), in welcher der Quantencomputer drehbar gelagert ist. Dabei ist das Quantencomputersystem dazu eingerichet, die Auswirkung einer Rotationsbewegung und/oder Ausrichtung des Quantencomputers zumindest während eines Betriebs des Quantencomputers zumindest teilweise durch ein Entkoppeln des Quantencomputers von seiner Umgebung mittels der Rotationsentkopplungsvorrichtung zu kompensieren oder zu vermeiden.

Figur 18G zeigt in einer schematischen Darstellung ein Gyroskop (GYR) gemäß einer optionalen Ausführungsform umfassend ein Quantencomputersystem (QUSYS) mit einem Quantencomputer (QC). Dabei ist das Gyroskop dazu eingerichtet, mittesl des Quantencomputers eine Rotationsbewegung zu messen.

Figur 19A zeigt in einer schematischen Darstellung Verfahren **1900** gemäß einer optionalen Ausführungsform zum Betrieb eines verlegbaren Quantencomputers **QC.** Das Verfahren umfasst in einem Schritt **1901** ein Bereitstellen einer verlegbaren Energiereserve als Energiequelle für elektrische Energie.

Das Verfahren **1900** ist dabei dadurch gekennzeichnet, dass das Verfahren **1900** in einem weiteren Schritt **1902** ein Bereitstellen einer verlegbaren Energieversorgungseinrichtung mit einer ersten Spannungsregelstufe und einer zweiten Spannungsregelstufe umfasst.

Außerdem umfasst das Verfahren **1900** in einem Schritt **1903** ein Verbinden der Energiereserve mit der Energieversorgungseinrichtung **EV** und Bereitstellen der elektrischen Energie aus der Energiereserve für die Energieversorgungseinrichtung **EV.**

Zudem umfasst das Verfahren **1900** in einem weiteren Schritt **1904** ein Regeln einer Spannung der bereitgestellten elektrischen Energie auf einen ersten Spannungswert mittels der ersten Spannungsregelstufe **EV1** der Energieversorgungseinrichtung **EV.**

In einem Schritt **1905** umfasst das Verfahren **1900** ein Regeln der durch die erste Spannungsregelstufe **EV1** mit dem ersten Spannungswert bereitgestellten elektrischen Energie auf einen zweiten Spannungswert mittels einer zweiten Spannungsregelstufe **EV2.**

In einem Schritt **1906** umfasst das Verfahren **1900** ein Betreiben des Quantencomputers **QC** mit der durch die zweite Spannungsregelstufe **EV2** mit dem zweiten Spannungswert bereitgestellten elektrischen Energie, und Durchführen einer Quantenoperation und/oder eines Quantencomputerprogrammprodukts mittels des Quantencomputers **QC.**

Figur 19B zeigt in einer schematischen Darstellung das Verfahren **1910** gemäß einer optionalen Ausführungsform zum Betrieb eines verlegbaren Quantencomputers **QC.** Das Verfahren **1910** ist dadurch gekennzeichnet, dass das Verfahren **1910** in einem Schritt **1911** ein Ermitteln einer Änderung eines vorherrschenden Magnetfelds mittels eines Magnetfeldsensorsystems **MSx, MSy, MSz** umfasst.

Ferner umfasst das Verfahren **1910** in einem Schritt **1912** ein zumindest teilweises Kompensieren der Änderung des Magnetfelds am Ort des Quantencomputers **QC** mittels eines Magnetfeldgenerators **MGx, MGy, MGz.**

Figur 19C zeigt in einer schematischen Darstellung das Verfahren **1920** gemäß einer optionalen Ausführungsform zum Betrieb eines verlegbaren Quantencomputers **QC** mit einem Substrat **D** und einem oder mehreren im Substrat **D** angeordneten Quantenpunkten. Das Verfahren **1920** umfasst in einem Schritt **1921** ein Bereitstellen einer verlegbaren Kühlvorrichtung **KV** und in einem Schritt **1922** ein Senken einer Temperatur des zumindest einen Quantenpunkts im Substrat **D** mittels der verlegbaren Kühlvorrichtung **KV** derart, dass eine Anzahl der Quantenpunkte, welche dem Quantencomputer **QC** für das Ausführen einer Quantenoperation und/oder eines Quantencomputerprogramms zur Verfügung stehen, erhöht wird.

Figur 19D zeigt in einer schematischen Darstellung das Verfahren 1930 gemäß einer optionalen Ausführungsform zum Betrieb eines verlegbaren Quantencomputers QC. Das Verfahren 1930 umfasst in einem Schritt 1931 ein Ermitteln einer Beschleunigung des Quantencomputers QC und in einem Schritt 1932 ein zumindest teilweises Kompensieren der Beschleunigung des Quantencomputers QC und/oder Abschwächen einer Wirkung der Beschleunigung auf den Quantencomputer QC.

Figur 19E zeigt in einer schematischen Darstellung das Verfahren 1940 gemäß einer optionalen Ausführungsform zur Steuerung eines verlegbaren Waffensystems mit einem Quantencomputer QC. Das Verfahren 1940 umfasst in einem Schritt 1941 ein Erfassen von Umfelddaten des Waffensystems mittels eines Sensors.

In einem Schritt 1942 umfasst das Verfahren 1940 ein Auswerten der Umfelddaten und Identifizieren eines oder mehrerer Objekte im Umfeld des Waffensystems mittels des Quantencomputers QC.

In einem Schritt 1943 umfasst das Verfahren 1940 ein Klassifizieren des einen oder der mehreren identifizierten Objekte hinsichtlich einer Gefährlichkeit und/oder Verwundbarkeit und/oder strategischen Wirkung des einen oder der mehreren Objekte mittels des Quantencomputers QC.

In einem Schritt 1944 umfasst das Verfahren 1940 ein Festlegen eines der folgenden Parameters: eine zu verwendende Waffe des Waffensystems, eine zu verwendende Munition des Waffensystems, eine zu verwendende Konfiguration des Waffensystems, eine Auswahl eines oder mehrerer zu bekämpfender Ziele aus dem einen oder den mehreren klassifizierten Objekten, und eine Reihenfolge einer geplanten Bekämpfung mehrerer zu bekämpfender Ziele.

Figur 19F zeigt schematisch ein Verfahren (1950) gemäß einer optionalen Ausführungsform zur Messung einer Rotationsbewegung.

Das Verfahren (1950) umfasst in einem Schritt (1952) ein Bereitstellen eines Quantencomputers, welcher der Rotationsbewegung ausgesetzt ist.

In einem Schritt (1954) umfasst das Verfahren (1950) ein Ermitteln einer Änderung eines oder mehrerer der folgenden Parameter:
+ einer Kopplungsgrundfrequenz und/oder einer Kopplungsgrundphasenlage für eine Kopplung zwischen Paaren aus koppelbaren Quantenbits (QUB1, QUB2) untereinander;
+ einer Kopplungsgrundfrequenz und/oder einer Kopplungsgrundphasenlage für eine Kopplung zwischen koppelbaren Paaren aus je einem Quantenbit (QUB) und einem Kernquantenbit (CQUB);
+ einer Kopplungsgrundfrequenz und/oder einer Kopplungsgrundphasenlage für eine Kopplung zwischen Paaren aus koppelbaren jeweils zwei Kernquantenbits (COUB1, CQUB2) untereinander.

Im einem Schritt (1956) umfasst das Verfahren (1950) ein Bestimmen der Rotationsbewegung anhand der ermittelten Änderung des einen oder der mehreren Parameter.

Figur 19G zeigt in einer schematischen Darstellung ein Verfahren (1960) gemäß einer optionalen Ausführungsform zum Betrieb eines verlegbaren Quantencomputers.

Das Verfahren (1960) umfasst in einem Schritt (1962) ein dehbares Lagern des Quantencomputers in einer Rotationsentkopplungsvorrichtung.

In einem Schritt (1964) umfasst das Verfahren (1960) ein Vermeiden oder Reduzieren einer Auswirkung einer Rotationsbewegung des Quantencomputers auf den Quantencomputer durch ein ein Entkoppeln des Quantencomputers von seiner Umgebung mittels der Rotationsentkopplungsvorrichtung.

### Figur 20

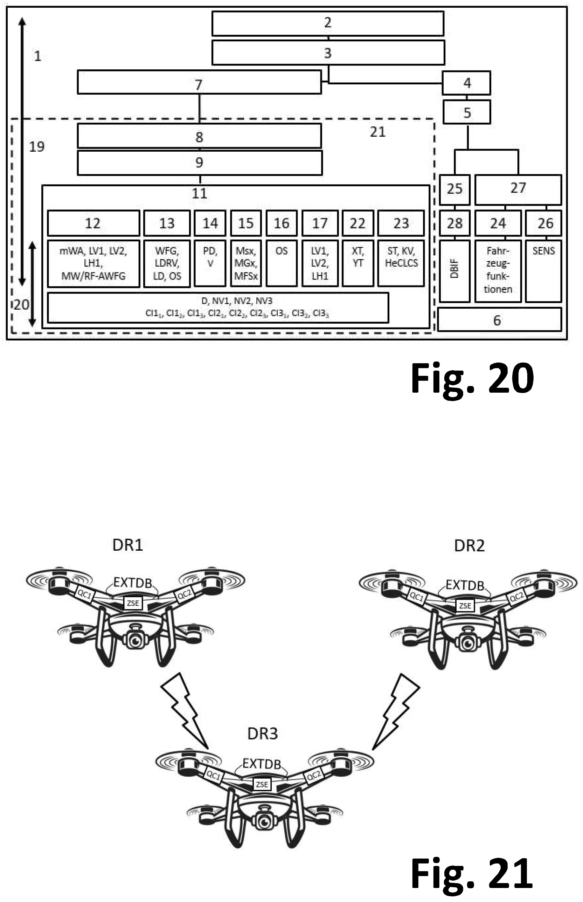

Figur 20 zeigt beispielhaft ein Aufbauschema eines beispielhaften Software-Stacks 1 gemäß einer optionalen Ausführungsform, wie er in Form von Informationen optionaler Inhalt des Speichers **RAM, NVM** der Steuervorrichtung **µC** des Quantencomputers **QC** Verwendung finden kann

Ein Anwendungsprogramm **2** des vorgeschlagenen Quantencomputers **QC** umfasst optional hybride quantentechnologisch/klassische Programme und Software **3.**

Die hybriden quantentechnologischen/klassischen Programme und die Software **3** umfassen optional klassische Algorithmen **4.** Diese klassische Algorithmen **4** befinden sich optional in Form von klassischen Programmen und Software **5** in den Speichern **RAM, NVM** der Steuervorrichtung **µC** des Quantencomputers **QC.** Diese Programme und Software **5** in den Speichern **RAM, NVM** der Steuervorrichtung **µC** des Quantencomputers **QC** liegt dort optional in Form binärer Kodes vor, die die klassischen Hardwarebefehle kodieren, die die klassische Computerhardware **6,** insbesondere in Von-Neumann- oder Harvard-Architektur, dann ausführt. Bei der klassischen Computerhardware **6,** insbesondere bei Von-Neumann- oder Harvard-Architektur, handelt es sich optional um den Rechnerkern **CPU** der Steuervorrichtung **µC** des Quantencomputers **QC.**

Die klassischen Programme und Software **5** können z. B. neben anderen Software-Bestandteilen, die zur Lösung des Problems des Anwendungsprogramms **2** von der Steuervorrichtung **µC** dienen, beispielsweise ein Kryptografieprogramm **25** umfassen, das die Steuervorrichtung **µC** für die Kommunikation und zur Verschlüsselung und/oder Entschlüsselung von Daten, die der Quantencomputer **QC** und/oder die Steuervorrichtung **µC** über die Datenschnittstelle **DBIF** erhalten oder senden, und/oder zur Verschlüsselung und/oder Entschlüsselung von anderen Daten des Quantencomputers **QC** verwendet. Optional handelt es sich bei dem Verfahren, das die Steuervorrichtung bei Ausführung des Kryptografieprogramms **25** verwendet, um ein PQC-sicheres Kryptografieverfahren. Die binärkodierten klassischen Befehle des Kryptografieprogramms **25** für den Rechnerkern **CPU** der Steuervorrichtung **µC** sind optional Teil des Inhalts der Speicher **RAM, NVM** der Steuervorrichtung **µC** des Quantencomputers **QC.**

Optional führt die Steuervorrichtung zur Datenkommunikation mit anderen Quantencomputern **QC1** bis **QC16** und/oder anderen Rechnersystemen, z. B. einer zentralen Steuereinheit **ZSE,** ein Datenschnittstellenprogramm **28** zur Steuerung und Kontrolle einer oder mehrerer Datenschnittstellen **DBIF** aus. Die binärkodierten klassischen Befehle des Datenschnittstellenprogramms **28** für den Rechnerkern **CPU** der Steuervorrichtung **µC** sind optional Teil des Inhalts der Speicher **RAM, NVM** der Steuervorrichtung **µC** des Quantencomputers **QC.**

Die klassischen Programme und Software **5** können z. B. neben anderen Software-Bestandteilen, die zur Lösung des Problems des Anwendungsprogramms **2** von der Steuervorrichtung **µC** dienen können beispielsweise ein Fahrzeugzustandsermittlungsprogramm **27** umfassen, das die Steuervorrichtung **µC** für die Lagebeurteilung des Gesamtzustands des Fahrzeugs und/oder der Umgebung des Fahrzeugs in Abhängigkeit von Messwerten verwendet. Die binärkodierten klassischen Befehle des Fahrzeugzustandsermittlungsprogramms **27** für den Rechnerkern **CPU** der Steuervorrichtung **µC** sind optional Teil des Inhalts der Speicher **RAM, NVM** der Steuervorrichtung **µC** des Quantencomputers **QC.**

Beispielsweise kann das Fahrzeugzustandsermittlungsprogramm **27** den Aufruf eines Datenschnittstellenprogramms **28** zur Steuerung und Kontrolle einer oder mehrerer Datenschnittstellen **DBIF** umfassen. Die binärkodierten klassischen Befehle des Datenschnittstellenprogramms **28** für den Rechnerkern **CPU** der Steuervorrichtung **µC** sind optional Teil des Inhalts der Speicher **RAM, NVM** der Steuervorrichtung **µC** des Quantencomputers **QC.**

Optional kann das Fahrzeugzustandsermittlungsprogramm **27** den Aufruf von einem oder mehreren Messwerterfassungsprogramme **26** zur Abfrage der Messwerte und zur Steuerung und zur Kontrolle der zugehörigen Messsysteme und/oder Sensoren **SENS** umfassen. Die binärkodierten klassischen Befehle des Messwerterfassungsprogramms **26** für den Rechnerkern **CPU** der Steuervorrichtung **µC** sind optional Teil des Inhalts der Speicher **RAM, NVM** der Steuervorrichtung **µC** des Quantencomputers **QC.**

Die hybriden quantentechnologischen/klassischen Programme und die Software **3** umfassen optional quantentechnologische Algorithmen **7.** Quantentechnologische Algorithmen **7** sind optional dadurch gekennzeichnet, dass sie den Quantenzustand zumindest eines oder mehrerer der Quantenpunkte **NV1, NV2, NV3** und/oder den Quantenzustand eines oder mehrerer Kernquantenpunkte **CI1₁, CI1₂, CI1₃, CI2₁, CI2₂, CI2₃, CI3₁, CI3₂, CI3₃** ändern und/oder manipulieren und/oder auslesen.

Die quantentechnologischen Algorithmen **7** umfassen optional abstrakte Quantengatter-Modelle **8.** Optional liegen diese Quantengatter-Modelle **8** innerhalb der quantentechnologischen Algorithmen **7** als binär kodierte quantentechnologische Befehle vor. Die binärkodierten quantentechnologischen Befehle quantentechnologischer Algorithmen **7** kodieren die Ausführungsbefehle für Quantenoperationen und Quanten-Gatter entsprechend den Quantengatter-Modellen 8. Diese binär kodierten quantentechnologische Befehle sind optional Teil des Inhalts der Speichern **RAM, NVM** der Steuervorrichtung **µC** des Quantencomputers **QC.**

Optional umfassen die Informationen im Speicher **RAM, NVM** der Steuervorrichtung **µC** des Quantencomputers **QC** klassische Befehle und Kommandos für den Rechnerkern **CPU** der Steuervorrichtung **µC** des Quantencomputers **QC,** die die Programmdaten eines Transcompilers **9** mit einer Optimierer- und Quantenfehlerkorrekturfunktion sind. Die Steuervorrichtung **µC** des Quantencomputers **QC** führt optional diesen Transcompiler **9** aus. Durch das Ausführen des Transcompilers **9** kann die Steuervorrichtung **µC** die binär kodierten quantentechnologischen Befehle des aktuell bearbeiteten quantentechnologischen Algorithmus **7** identifizieren und diesen den entsprechenden Quantengatter-Modellen **8** zuordnen. In Anhängigkeit von dem identifizierten Quantengatter-Modell **8** für ein Quanten-Gatter führt die Steuervorrichtung dann optional ein oder mehrere Kontrollprogramme der Kontrollprogramme **(12 bis 17, 22,23)** aus. Optional führt der Quantencomputer **QC** die Kontrollprogramme der Kontrollprogramme **(12 bis 17, 22,23)** zeitlich synchronisiert aus. Aus diesem Grund programmiert optional die Steuervorrichtung **µC** die Mittel **(WFG, LDRV, LD, DBS, OS, MW/RF-AWFG, MWA, LH1, LV1, LV2, PD, V)** zum Beeinflussen und/oder Auslesen der Quantenzustände der Quantenpunkte **(NV1, NV2, NV3)** und Kernquantenpunkte **(CI1₁, CI1₂, CI1₃, CI2₁, CI2₂, CI2₃, CI3₁, CI3₂, CI3₃),** und signalisiert dann allen Mitteln **(WFG, LDRV, LD, DBS, OS, MW/RF-AWFG, MWA, LH1, LV1, LV2, PD, V)** zum Beeinflussen und/oder Auslesen der Quantenzustände der Quantenpunkte **(NV1, NV2, NV3)** und Kernquantenpunkte **(CI1₁, CI1₂, CI1₃, CI2₁, CI2₂, CI2₃, CI3₁, CI3₂, CI3₃)** den Start der Durchführung einer Quantengatter-Operation in Form eines Quantengatters, sodass diese die Mittel **(WFG, LDRV, LD, DBS, OS, MW/RF-AWFG, MWA, LH1, LV1, LV2, PD, V)** zum Beeinflussen und/oder Auslesen der Quantenzustände der Quantenpunkte **(NV1, NV2, NV3)** und Kernquantenpunkte **(CI1₁, CI1₂, CI1₃, CI2₁, CI2₂, CI2₃, CI3₁, CI3₂, CI3₃)** das entsprechende Quantengatter optional autonom ausführen. Optional optimiert der Steuerrechner **µC** des Quantencomputers **QC** die Ausführung des quantentechnologischen Algorithmus **7** und die Ausführung des entsprechenden Quantengatter-Modells **8.** Optional führt der Steuerrechner **µC** des Quantencomputers **QC** eine Fehlerkorrektur ggf. erhaltener Quantencomputerberechnungsergebnisse in diesem Zusammenhang mittels Unterprogrammen des Transcompilers **9** durch. Die binären, typischerweise klassischen binären, Befehlscodes des Transcompilers **9** sind typischerweise Teil des Inhalts der Speicher **RAM, NVM** der Steuervorrichtung **µC** des Quantencomputers **QC.**

Zu den Kontrollprogrammen **(12** bis **17, 22, 23)** des Quantengatter-Hardware-Modells **11** gehört optional ein Kontrollprogramm **12** für die Kontrolle und Steuerung des einen oder der mehreren Mikrowellen- und/oder Radiowellenfrequenzgeneratoren **MW/RF-AWFG** zur Erzeugung eines elektromagnetischen Wellenfeldes mittels einer oder mehrerer Mikrowellen-und/oder Radiowellenantennen **mWA,** insbesondere vertikaler Leitungen **LV1, LV2** oder horizontaler Leitungen **LH1** am jeweiligen Ort der Quantenpunkte **NV1, NV2, NV3,** zum Einwirken auf die Quantenzustände der Quantenpunkte **NV1, NV2, NV3** des Quantencomputers **QC** und/oder der Quantenzustände der Kernquantenpunkte **CI1₁, CI1₂, CI1₃, CI2₁, CI2₂, CI2₃, CI3₁, CI3₂, CI3₃** des Quantencomputers **QC.**

Zu den Kontrollprogrammen **(12** bis **17, 22, 23)** des Quantengatter-Hardware-Modells **11** gehört optional ein SPc-Laser-Kontrollprogramm **13** für die Kontrolle und Steuerung des Wellenformgenerators **WFG** und des Lichtquellentreibers **LDRV** und damit der Lichtquelle **LD** für die Erzeugung von Lichtpulsen mittels des Wellenformgenerators **WFG** und des Lichtquellentreibers **LDRV** und der Lichtquelle **LD.**

Zu den Kontrollprogrammen **(12 bis 17, 22, 23)** des Quantengatter-Hardware-Modells **11** gehört optional ein Kontrollprogramm **14** zur Steuerung des Auslesens der Quantenzustände der Quantenpunkte **NV1, NV2, NV3** des Quantencomputers **QC** und/oder der Quantenzustände der Kernquantenpunkte **CI1₁, CI1₂, CI1₃, CI2₁, CI2₂, CI2₃, CI3₁, CI3₂, CI3₃** des Quantencomputers **QC** mittels der Steuervorrichtung **µC.** Optional handelt es sich um ein Kontrollprogramm **14** für die Ansteuerung, die Kontrolle und das Auslesen von Werten der Mittel **PD, V** zum optischen Auslesen der Quantenpunkte **NV1, NV2, NV3** des Quantencomputers **QC** und/oder der Quantenzustände der Kernquantenpunkte **CI1₁, CI1₂, CI1₃, CI2₁, CI2₂, CI2₃, CI3₁, CI3₂, CI3₃** des Quantencomputers **QC** durch die Steuervorrichtung **µC** und/oder um ein Kontrollprogramm **14** für die Ansteuerung, die Kontrolle und das Auslesen von Werten der Mittel zum elektrischen Auslesen der Quantenpunkte **NV1, NV2, NV3** des Quantencomputers **QC** und/oder der Quantenzustände der Kernquantenpunkte **CI1₁, CI1₂, CI1₃, CI2₁, CI2₂, CI2₃, CI3₁, CI3₂, CI3₃** des Quantencomputers **QC.**

Zu den Kontrollprogrammen **(12** bis **17, 22, 23)** des Quantengatter-Hardware-Modells **11** gehört optional ein Kontrollprogramm **15** zur Erfassung der magnetischen Flussdichte **B** im Bereich der Quantenpunkte **NV1, NV2, NV3** des Quantencomputers **QC** und/oder der Quantenzustände der Kernquantenpunkte **CI1₁, CI1₂, CI1₃, CI2₁, CI2₂, CI2₃, CI3₁, CI3₂, CI3₃** des Quantencomputers **QC** mittels Magnetfeldsensoren **MSx** für die magnetische Flussdichte **Bₓ** in Richtung der X-Achse und/oder mittels Magnetfeldsensoren **MSy** für die magnetische Flussdichte **B_{y}** in Richtung der Y-Achse und/oder mittels Magnetfeldsensoren **MSz** für die magnetische Flussdichte **B_{z}** in Richtung der Z-Achse und/oder zur Steuerung und Kontrolle von Magnetfeldsteuerungen **MFSx, MFSy, MFSz** und/oder zur Steuerung und Kontrolle von Magnetfelderzeugungsmitteln **MGx, MGy, MGz.**

Zu den Kontrollprogrammen **(12** bis **17, 22, 23)** des Quantengatter-Hardware-Modells **11** gehört optional ein Kontrollprogramm **16** zur Steuerung des optischen Systems **OS,** um das Einstrahlen des Laser-Strahls **LB** in das Substrat **D** bei Bedarf zu optimieren. Hierbei kann es sich beispielsweise um die Einstellung des Fokus und/oder die Einstellung von Blenden handeln.

Zu den Kontrollprogrammen **(12** bis **17, 22, 23)** des Quantengatter-Hardware-Modells **11** gehört optional ein Kontrollprogramm **17** für die Ausführung durch die Steuervorrichtung **µC** und zur Kontrolle und Einstellung von DC-Strompegeln und/oder DC-Spannungspegeln zu Beeinflussung von bestimmten Quantenpunkten **NV1, NV2, NV3** des Quantencomputers **QC** und/oder bestimmten Kernquantenpunkten **CI1₁, CI1₂, CI1₃, CI2₁, CI2₂, CI2₃, CI3₁, CI3₂, CI3₃** des Quantencomputers **QC** in der Art, dass sie ggf. an einer Hardware-Operation teilnehmen oder an einer Hardware-Operation nicht teilnehmen.

Zu den Kontrollprogrammen **(12** bis **17, 22, 23)** des Quantengatter-Hardware-Modells **11** gehört optional ein Positionskontrollprogramm **22** zur Kontrolle und Steuerung einer Positioniervorrichtung **XT, YT** zur Positionierung und ggf. Ausrichtung des Substrats **D** gegenüber dem optischen System **OS.**

Zu den Kontrollprogrammen **(12** bis **17, 22, 23)** des Quantengatter-Hardware-Modells **11** gehört optional ein Temperaturkontrollprogramm **23** zur Kontrolle einer oder mehrerer Kühlvorrichtungen **KV** und/oder eines oder mehrerer Closed Loop Helium Gas Cooling-Systeme **HeCLCS.**

Die binären, typischerweise klassischen binären, Befehlscodes der Kontrollprogramme **(12** bis **17, 22, 23)** des Quantengatter-Hardware-Modells **11** sind optional Teil des Inhalts der Speicher **RAM, NVM** der Steuervorrichtung **µC** des Quantencomputers **QC.**

Der Software-Stack im Sinne des hier vorgelegten Dokuments umfasst optional einen Hardware-Teil **20** des Software-Stacks **1** und einen Software-Teil **19** des Software-Stacks **1.** Unter anderem in den Mitteln **(WFG, LDRV, LD, DBS, OS, MW/RF-AWFG, MWA, LH1, LV1, LV2, PD, V)** zum elektrischen und/oder optischen Auslesen der Quantenzustände der Quantenpunkte **(NV1, NV2, NV3)** und Kernquantenpunkte **(CI1₁, CI1₂, CI1₃, CI2₁, CI2₂, CI2₃, CI3₁, CI3₂, CI3₃)** und den Mitteln **(XT, YT)** zur Ausrichtung und Positionierung des Substrats **D** gegenüber dem optischen System OS und in den Mitteln **(ST,KV, HeCLCS)** zur Erfassung, Einstellung und Regelung der Temperatur überschneiden sich der Hardware-Teil **20** des Software-Stacks **1** und einen Software-Teil **19** des Software-Stacks **1.**

Darüber hinaus umfasst der Software-Stack **1** im Sinne des hier vorgelegten Dokuments optional weitere beispielhafte Hardware-Teile **(DBIF, Fahrzeugfunktionen, SENS)** des Quantencomputers **QC** und weitere zugehörige Software-Teile **(4, 5, 25 ,27, 28, 24, 26)** Software-Teils **19** des Software-Stacks **1.**

Die quantentechnologischen Algorithmen **7,** die abstrakten Quantengatter-Modelle **8** und/oder der Transcompiler **9** mit Optimierer und Quantenfehlerkorrektur sind optional typische quantentechnologische Bestandteile des Software-Teils **19** des Software-Stacks **1.**

Die Anwendungsprogramme **2** und die hybriden quantentechnologischen/klassischen Programme und die Software **3** (?)sind optional hybride Bestandteile des Software-Stacks **1.**

### Figur 21

Figur 21 zeigt einen beispielhaften Drohnenschwarm gemäß einer optionalen Ausführungsform mit einer ersten Drohne **DR1** und einer zweiten Drohne **DR2** und einer dritten Drohne **DR3.** Die Drohnen sind optional unbemannte Flugkörper. Das Prinzip lässt sich auch auf Schwärme unbemannter Schwimmkörper und unbemannter Roboter, als Beispiel für Landfahrzeuge, übertragen. Auch Mischungen dieser sind denkbar.

Figur 21 zeigt demnach ein weiteres Einsatzbeispiel des offenbarungsgemäßen verlegbaren Quantencomputersystems in den Drohnen **DR1, DR2, DR3** eines Drohnenschwarms. In dem Beispiel der Figur 21 handelt es sich jeweils bei den Drohnen **DR1, DR2, DR3** um beispielhafte Quadrokopter.

In dem Beispiel der Figur 21 umfasst jede Drohne des Beispiels einen ersten Quantencomputer **QC1** und einen zweiten Quantencomputer **QC2.** Die Quantencomputer **QC1, QC2** können beispielsweise im Zusammenwirken mit einer zentralen Steuereinheit **ZSE** der jeweiligen Drohne der Drohnen **DR1, DR2, DR3** das NP-vollständige Problem der Risikobewertung von Objekten im Umfeld des Flugzeugs und entlang der Route zum Ziel, der Zielauswahl und Zielfestlegung und der Reihenfolge der Zielbekämpfung der Munitions- und Waffenauswahl und die schnellste und zugleich risikoärmste Route zum Ziel und die geeignete Formation des Drohnenscharms auf dem Weg dorthin bearbeiten. Die Quantencomputer **QC1, QC2** sind in dem Beispiel der Figur 21 über einen externen Datenbus **EXTDB** innerhalb der jeweiligen Drohne der Drohnen **DR1, DR2, DR3** mit der zentralen Steuereinheit **ZSE** innerhalb der jeweiligen Drohne der Drohnen **DR1, DR2, DR3** verbunden. In dem Beispiel der Figur 18 ist beispielhaft die zentrale Steuereinheit **ZSE** in den externen Datenbus **EXTDB** eingefügt. Die Netzwerke der Drohnen **DR1, DR2, DR3** sind optional mittels drahtloser Verbindungen miteinander verbunden, sodass die Quantencomputer der Drohnen **DR1, DR2, DR3** mit den zentralen Steuereinheiten **ZSE** der Drohnen **DR1, DR2, DR3** ein gemeinsames Quantencomputersystem **QUSYS** bilden. Die Quantencomputer **QC1, QC2** der Drohnen **DR1, DR2, DR3** entsprechen jeweils optional einem Quantencomputer **QC** der Figur 1 bzw. der vorhergehenden Beschreibung.

In dem Beispiel der Figur 21 sind die Drohnen **DR1, DR2, DR3** mit jeweils einer Kamera als Nutzlast versehen. Statt einer solchen Nutzlast ist auch eine Bewaffnung mit Raketen **RKT** und/oder eine Bewaffnung mit anderen Waffen wie Maschinenkanonen, Störsendern, Aufklärungsvorrichtungen etc. denkbar. Insofern sind die Kameras nur Beispiele für zusätzliches Equipment, das als Zuladung durch die Drohnen **DR1, DR2, DR3** transportiert werden kann. Insofern sind die Drohnen **DR1, DR2, DR3** nur ein Beispiel für einen durch einen Quantencomputer gesteuerten Schwarm im weitesten Sinne.

In dem Beispiel der Figur 21 verfügen die Drohnen der Drohnen **DR1, DR2, DR3** über ein jeweiliges Quantencomputersystem **QUSYS** ähnlich der Figur 4 mit einer oder mehreren zentralen Steuervorrichtungen **ZSE,** die über einen oder mehrere externe Datenbusse **EXTDB** mit einem oder mehreren Quantencomputern **QC1, QC2** verbunden sind.

Der Drohnenschwarm verfügt somit in dem dargestellten Zustand über mehrere Quantencomputersysteme **QUSYS** in den jeweiligen Drohnen **DR1, DR2, DR3.**

Ein erstes Quantencomputersystem **QUSYS** einer ersten Drohne **DR1** umfasst dabei zumindest eine zentrale Steuereinheit **ZSE** der ersten Drohne **DR1** und zumindest einen externen Datenbus **EXTDB** der ersten Drohne **DR1** und zumindest einen ersten Quantencomputer **QC1** der ersten Drohne **DR1** und in dem Beispiel einen zweiten Quantencomputer **QC2** der ersten Drohne **DR1.**

Ein zweites Quantencomputersystem **QUSYS** einer zweiten Drohne **DR2** umfasst dabei zumindest eine zentrale Steuereinheit **ZSE** der zweiten Drohne **DR2** und zumindest einen externen Datenbus **EXTDB** der zweiten Drohne **DR2** und zumindest einen ersten Quantencomputer **QC1** der zweiten Drohne **DR2** und in dem Beispiel einen zweiten Quantencomputer **QC2** der zweiten Drohne **DR2.**

Ein drittes Quantencomputersystem **QUSYS** einer dritten Drohne **DR3** umfasst dabei zumindest eine zentrale Steuereinheit **ZSE** der dritten Drohne **DR3** und zumindest einen externen Datenbus **EXTDB** der dritten Drohne **DR3** und zumindest einen ersten Quantencomputer **QC1** der dritten Drohne **DR3** und in diesem Beispiel (zwecks Bezug?) einen zweiten Quantencomputer **QC2** der dritten Drohne **DR3.**

Die hier vorgelegte Schrift schlägt vor, dass eine Funkverbindung die drei externen Datenbusse **EXTDB** der drei Drohnen **DR1, DR2, DR3** und damit das erste Quantencomputersystem optional mit dem zweiten und dritten Quantencomputersystem **QUSYS** verbindet.

Die Figur 21 offenbart somit einen Fahrzeugschwarm gemäß einer optionalen Ausführungsform mit Schwarmmitgliedern - hier den Drohnen **DR1, DR2, DR3** -, wobei zumindest ein Teil der Schwarmmitglieder jeweils zumindest einen Quantencomputer **QC1,** wie er zuvor beschrieben wurde, umfasst.

Optional umfasst zumindest ein Teil der Schwarmmitglieder jeweils zumindest einen solchen Quantencomputer **QC1** in einem Quantencomputersystem **QUSYS** und zumindest einen weiteren solchen Quantencomputer **QC2** und/oder zumindest eine zentralen Steuereinheit **ZSE** in Form eines konventionellen Rechnersystems.

Optional sind die Quantencomputersysteme **QUSYS** von zumindest zwei Schwarmmitgliedern, besser von mehreren Schwarmmitgliedern, noch besser von allen Schwarmmitgliedern mittels einer drahtlosen Datenübertragungsstrecke miteinander gekoppelt. Drahtlose Übertragungsstrecken können im Sinne dieses Dokuments akustisch und/oder optisch und/oder elektromagnetisch und/oder partikelbasiert oder der gleichen sein. Dies hat den Vorteil, dass sich der Drohnenschwarm auch bei Ausfall einer einzelnen Drohne umkonfigurieren kann.

Es kann sich bei einem Schwarmmitglied im Sinne des hier vorgelegten Dokuments, dabei jedoch optional, auch um ein Fahrzeug, ein Kraftfahrzeug, ein Zweirad, ein Dreirad oder einen Lastwagen, ein Nutzfahrzeug, einen Roboter, ein Transportfahrzeug, einen Drohne, eine Roboterdrohne, einen Flugkörper, einen Schwimmkörper, einen Tauchkörper, ein Schiff, ein U-Boot, eine See-Mine, eine Landmine, eine Rakete, ein Geschoss, einen Satelliten, eine Raumstation, einen Anhänger, einen Schleppkahn, einen Container, insbesondere einen See-Container und/oder Smartphone und/oder ein Kleidungsstück und/oder ein Schmuckstück und/oder ein tragbares Quantencomputersystem und/oder ein mobiles Quantencomputersystem und/oder Fahrzeug und/oder einen Roboter und/oder ein Flugzeug und/oder einen Raumflugkörper und/oder ein Unterwasserfahrzeug und/oder einen Oberwasserschwimmkörper und/oder Unterwasserschwimmkörper und/oder eine bewegliche medizinische Vorrichtung und/oder ein verlegbares Waffensystem und/oder einen Gefechtskopf und/oder ein Über- oder Unterwasserfahrzeug und/oder Geschoss und/oder eine andere mobile Vorrichtung und/oder bewegliche Vorrichtung und/oder dergleichen handeln.

### Figur 22

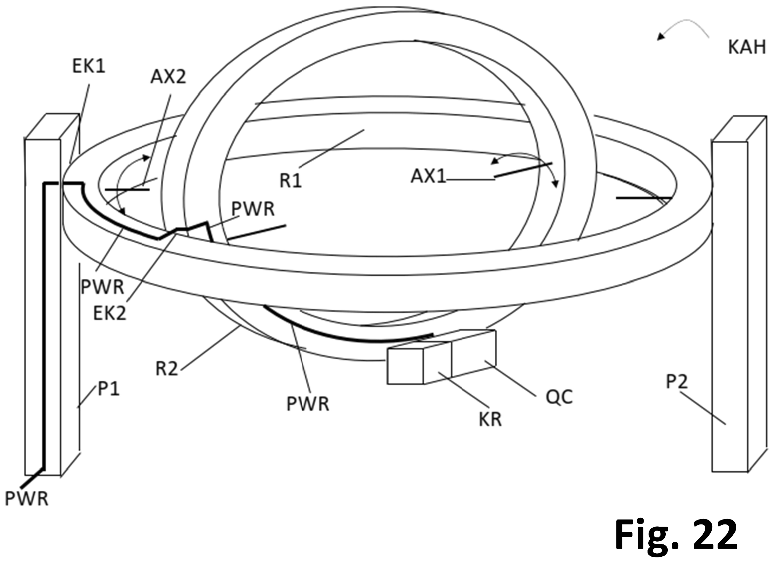

Figur 22 zeigt in einer scheamtischen Darstellung ein Quantencomputersystem gemäß einer optionalen Ausführungsform, aufweisend einen Quantencompupter, der in einer kardanischen Aufhängung **KAH** montiert ist. Die kardanische Aufhängung **KAH** ermöglicht, den Quantencomputer **QC** gegen Rotationsbeschleunigungen und/oder Rotationen um die erste Achse **AX1** und die zweite Achse **AX2** zu schützen. In dem Beispiel der Figur 22 umfasst die beispielhafte kardanische Aufhängung KAH einen ersten Pfosten P1 und einen zweiten Pfosten P2. An dem ersten Pfosten P1 und dem zweiten Pfosten P2 der kardanischen Aufhängung KAH ist beispielhaft ein erster Aufhängungsring R1 drehbar um eine erste Achse AX1 aufgehängt. Eine erste Energiekopplung EK1 verbindet drehbar um die erste Achse elektrisch leitend die Leitung der Energieversorgung PWR des ersten Pfostens P1 mit der Leitung der Energieversorgung PWR des ersten Aufhängungsring R1. In dem ersten Aufhängungsring R1 der kardanischen Aufhängung KAH ist drehbar um eine zweite Achse AX2 ein zweiter Aufhängungsring R2 montiert. Eine zweite Energiekopplung EKe verbindet die Leitung der Energieversorgung PWR des ersten Aufhängungsring R1 elektrisch leitend und drehbar um die zweite Achse AX2 mit Leitung der Energieversorgung PWR des zweiten Aufhängungsring R2.

Der Quantencomputer QC gemäß der gezeigten optionalen Ausführungsform ist fest an den zweiten Aufhängungsring R2 montiert. Hierdurch ist der Quantencomputer QC drehbar um die erste Achse AX1 und drehbar um die zweite Achse AX2 an der kardanischen Aufhängung KAH montiert. Optional versorgt die Leitung der Energieversorgung PWR des zweiten Aufhängungsring R2 den Quantencomputer QC mit elektrischer Energie.

Der Kreisel KR ist optional fest an den zweiten Aufhängungsring R2 montiert. Hierdurch ist der Kreisel KR drehbar um die erste Achse **AX1** und drehbar um die zweite Achse **AX2** an der kardanischen Aufhängung **KAH** montiert. Bevorzugt treibt ein Antrieb des Kreisels KR den Kreisel KR mit elektrischer Energie aus der Leitung der Energieversorgung PWR des zweiten Aufhängungsring **R2** an.

Im Sinne des hier vorgelegten Dokuments können optional die kardanische Aufhängung **KAH** des Quantencomputers **QC** und der Kreisel **KR** Teile des Quantencomputerssystems bilden.

Optional verfügt die kardanische Aufhängung **KAH** über einen ersten Antrieb, der den ersten Aufhängungsring **R1** gegenüber dem ersten Pfosten **P1** und/oder dem zweiten Pfosten **P2** um die erste Achse **AX1** um einen ersten Drehwinkel drehen kann. Es ist denkbar, dass der erste Antrieb den ersten Aufhängungsring **R1** um die erste Achse **AX1** in Abhängigkeit von einem Signal des Quantencomputers **QC** und/oder der Steuervorrichtung **µC** um einen vorgegebenen ersten Drehwinkel dreht.

Optional kann ein erster Drehwinkelsensor der kardanischen Aufhängung **KAH** die Verdrehung in Form eines ersten Werts des ersten Drehwinkels des ersten Aufhängungsrings **R1** gegenüber dem ersten Pfosten **P1** und/oder dem zweiten Pfosten **P2** um die erste Achse **AX1** erfassen und über eine erste Drehwinkelsignalleitung und ggf. zwischengeschaltete Signalkupplungen an den Quantencomputer **QC** und/oder dessen Steuervorrichtung **µC** melden. Hierbei kann eine Signalkupplung eine Verdrehung des ersten Aufhängungsrings **R1** gegenüber dem ersten Pfosten **P1** um einen beliebigen ersten Drehwinkel ermöglichen, ohne dass die Drehwinkelsignalleitung verdrillt oder unterbrochen wird.

Optional kann die kardanische Aufhängung **KAH** über einen zweiten Antrieb verfügen, der den zweiten Aufhängungsring **R2** um die zweite Achse **AX2** um einen zweiten Drehwinkel gegenüber dem ersten Aufhängungsring **R1** verdrehen kann. Optional kann der zweite Antrieb den zweiten Aufhängungsring **R2** um die zweite Achse **AX2** in Abhängigkeit von einem Signal des Quantencomputers **QC** und/oder der Steuervorrichtung **µC** um einen vorgegebenen zweiten Drehwinkel drehen.

Die erste Achse **AX1** ist optional senkrecht zur ersten Achse **AX1** angeordnet. Optional kann ein zweiter Drehwinkelsensor der kardanischen Aufhängung **KAH** die Verdrehung des zweiten Aufhängungsrings **R1** gegenüber dem ersten Aufhängungsring **R1** erfassen und über eine zweite Drehwinkelsignalleitung und ggf. zwischengeschaltete Signalkupplungen an den Quantencomputer **QC** und/oder dessen Steuervorrichtung **µC** melden. Hierbei ermöglicht eine Signalkupplung optional eine Verdrehung des zweiten Aufhängungsrings **R2** gegenüber dem ersten Aufhängungsring **R1** um einen beliebigen zweiten Drehwinkel, ohne dass die zweite Drehwinkelsignalleitung verdrillt oder unterbrochen wird.

Der Kreisel oder die Kreisel **KR** können sich derart stellen, dass bei ausgekuppelten, nicht vorhandenen oder nicht angetriebenen ersten Antrieben und zweiten Antrieben der Quantencomputer **QC** auch bei einer Drehung der kardanischen Aufhängung **KAH** um die erste Achse **AX1** und/oder zweite Achse **AX2** der Quantencomputer **QC** seine Ausrichtung nicht ändert.

Bevorzugt umfasst die kardanische Aufhängung **KAH** je einen Kreisel **KR** je Achse (AX1, AX2) der kardanischen **KAH.** Optional stehen die Achsen verschiedener Kreisel **KR** senkrecht zu einander.

Optional können sich statt des Quantencomputers QC an der Stelle des Quantencomputers QC auch nur Teile des Quantencomputers QC, wie beispielsweise das Substrat D mit den Quantenbits QUB und/oder nuklearen Quantenbits CQUB, befinden. Die Signale der anderen Vorrichtungsteile des Quantencomputers müssen dann mittels geeigneter Signalkupplungen verdrillungsfrei zu diesen Vorrichtungsteilen transportiert werden oder von diesen wegtransportiert werden.

### Bezugszeichenliste

- ADCV: Analog-zu-Digital-Wandler des Verstärkers **V;**
- AS: Abschirmung;
- BENG: erste Energiereserve;
- BENG2: zweite Energiereserve;
- B_{NV}: rotierendes Magnetfeld;
- BSC: Rückseitenkontakt;
- BTR: Energiereserve des Fahrzeugs (U-Boot, Kfz etc.);
- CBA: Kontrolleinheit A;
- CBB: Kontrolleinheit B;
- CECEQUREG: Kern-Elektron-Kern-Elektron-Quantenregister;
- CEQUREG1: erstes Kern-Elektron-Quantenregister;
- CEQUREG2: zweites Kern-Elektron-Quantenregister;
- CI1: erster Kernquantenpunkt. Optional handelt es sich bei dem beispielhaften ersten Kernquantenpunkt **CI1** um ein Isotop mit einem magnetischen Kernmoment in dem Substrat **D,** wobei das Substrat **D** im Bereich des Kernquantenpunkts **CI1** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4.;
- CI1₁: erster Kernquantenpunkt **CI1₁** der ersten QuantenALU **QUALU1.** Optional handelt es sich bei dem beispielhaften ersten Kernquantenpunkt **CI1₁** der ersten QuantenALU **QUALU1** um ein Isotop mit einem magnetischen Kernmoment in dem Substrat **D,** wobei das Substrat **D** im Bereich des Kernquantenpunkts **CI1₁** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der erste Kernquantenpunkt **CI1₁** der ersten QuantenALU **QUALU1** ist in der Figur 3 zur besseren Übersicht nicht eingezeichnet. Der Leser sollte davon ausgehen, dass in der Figur 3 der erste Kernquantenpunkt **CI1₁** der ersten QuantenALU **QUALU1** an den ersten Quantenpunkt **NV1** so angekoppelt ist, wie in der Figur 2 der erste Kernquantenpunkt **CI1₁** der ersten QuantenALU **QUALU1** an den ersten Quantenpunkt **NV1** angekoppelt ist;
- CI1₂: zweiter Kernquantenpunkt **CI1₂** der ersten QuantenALU **QUALU1.** Optional handelt es sich bei dem beispielhaften zweiten Kernquantenpunkt **CI1₂** der ersten QuantenALU **QUALU1** um ein Isotop mit einem magnetischen Kernmoment in dem Substrat **D,** wobei das Substrat **D** im Bereich des Kernquantenpunkts **CI1₂** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der zweite Kernquantenpunkt **CI1₂** der ersten QuantenALU **QUALU1** ist in der Figur 3 zur besseren Übersicht nicht eingezeichnet. Der Leser sollte davon ausgehen, dass in der Figur 3 der zweite Kernquantenpunkt **CI1₂** der ersten QuantenALU **QUALU1** an den ersten Quantenpunkt **NV1** so angekoppelt ist, wie in der Figur 2 der zweite Kernquantenpunkt **CI1₂** der ersten QuantenALU **QUALU1** an den ersten Quantenpunkt **NV1** angekoppelt ist;
- CI1₃: dritter Kernquantenpunkt **CI1₃** der ersten QuantenALU **QUALU1** Optional handelt es sich bei dem beispielhaften dritten Kernquantenpunkt **CI1₃** der ersten QuantenALU **QUALU1** um ein Isotop mit einem magnetischen Kernmoment in dem Substrat **D,** wobei das Substrat **D** im Bereich des Kernquantenpunkts **CI1₃** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der dritte Kernquantenpunkt **CI1₃** der ersten QuantenALU **QUALU1** ist in der Figur 3 zur besseren Übersicht nicht eingezeichnet. Der Leser sollte davon ausgehen, dass in der Figur 3 der dritte Kernquantenpunkt **CI1₃** der ersten QuantenALU **QUALU1** an den ersten Quantenpunkt **NV1** so angekoppelt ist, wie in der Figur 2 der dritte Kernquantenpunkt **CI1₃** der ersten QuantenALU **QUALU1** an den ersten Quantenpunkt **NV1** angekoppelt ist;
- CI2: zweiter Kernquantenpunkt. Optional handelt es sich bei dem beispielhaften zweiten Kernquantenpunkt **CI2** um ein Isotop mit einem magnetischen Kernmoment in dem Substrat **D,** wobei das Substrat **D** im Bereich des Kernquantenpunkts **CI2** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4.;
- CI2₁: erster Kernquantenpunkt **CI2₁** der zweiten QuantenALU **QUALU2.** Optional handelt es sich bei dem beispielhaften ersten Kernquantenpunkt **CI2₁** der zweiten QuantenALU **QUALU2** um ein Isotop mit einem magnetischen Kernmoment in dem Substrat **D,** wobei das Substrat **D** im Bereich des Kernquantenpunkts **CI2₁** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der erste Kernquantenpunkt **CI2₁** der zweiten QuantenALU **QUALU2** ist in der Figur 3 zur besseren Übersicht nicht eingezeichnet. Der Leser sollte davon ausgehen, dass in der Figur 3 der erste Kernquantenpunkt **CI2₁** der zweiten QuantenALU **QUALU2** an den zweiten Quantenpunkt **NV2** so angekoppelt ist, wie in der Figur 2 der erste Kernquantenpunkt **CI2₁** der zweiten QuantenALU **QUALU2** an den zweiten Quantenpunkt **NV2** angekoppelt ist;
- CI2₂: zweiter Kernquantenpunkt **CI2₂** der zweiten QuantenALU **QUALU2.** Optional handelt es sich bei dem beispielhaften zweiten Kernquantenpunkt **CI2₂** der zweiten QuantenALU **QUALU2** um ein Isotop mit einem magnetischen Kernmoment in dem Substrat **D,** wobei das Substrat **D** im Bereich des Kernquantenpunkts **CI2₂** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der zweite Kernquantenpunkt **CI2₂** der zweiten QuantenALU **QUALU2** ist in der Figur 3 zur besseren Übersicht nicht eingezeichnet. Der Leser sollte davon ausgehen, dass in der Figur 3 der zweite Kernquantenpunkt **CI2₂** der zweiten QuantenALU **QUALU2** an den zweiten Quantenpunkt **NV2** so angekoppelt ist, wie in der Figur 2 der zweite Kernquantenpunkt **CI2₂** der zweiten QuantenALU **QUALU2** an den zweiten Quantenpunkt **NV2** angekoppelt ist;
- CI2₃: dritter Kernquantenpunkt **CI2₃** der zweiten QuantenALU **QUALU2.** Optional handelt es sich bei dem beispielhaften ersten Kernquantenpunkt **CI2₃** der zweiten QuantenALU **QUALU2** um ein Isotop mit einem magnetischen Kernmoment in dem Substrat **D,** wobei das Substrat **D** im Bereich des Kernquantenpunkts **CI2₃** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der dritte Kernquantenpunkt **CI2₃** der zweiten QuantenALU **QUALU2** ist in der Figur 3 zur besseren Übersicht nicht eingezeichnet. Der Leser sollte davon ausgehen, dass in der Figur 3 der dritte Kernquantenpunkt **CI2₃** der zweiten QuantenALU **QUALU2** an den zweiten Quantenpunkt **NV2** so angekoppelt ist, wie in der Figur 2 der dritte Kernquantenpunkt **CI2₃** der zweiten QuantenALU **QUALU2** an den zweiten Quantenpunkt **NV2** angekoppelt ist;
- CI3: dritter Kernquantenpunkt. Optional handelt es sich bei dem beispielhaften dritten Kernquantenpunkt **CI3** um ein Isotop mit einem magnetischen Kernmoment in dem Substrat **D,** wobei das Substrat **D** im Bereich des Kernquantenpunkts **CI3** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4;
- CI3₁: erster Kernquantenpunkt **CI3₁** der dritten QuantenALU **QUALU3.** Optional handelt es sich bei dem beispielhaften ersten Kernquantenpunkt **CI3₁** der dritten QuantenALU **QUALU3** um ein Isotop mit einem magnetischen Kernmoment in dem Substrat **D,** wobei das Substrat **D** im Bereich des Kernquantenpunkts **CI3₁** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der erste Kernquantenpunkt **CI3₁** der dritten QuantenALU **QUALU3** ist in der Figur 3 und in der Figur 2 zur besseren Übersicht nicht eingezeichnet. Der Leser sollte davon ausgehen, dass in der Figur 3 der erste Kernquantenpunkt **CI3₁** der dritten QuantenALU **QUALU3** an den dritten Quantenpunkt **NV3** so angekoppelt ist, wie in der Figur 2 der erste Kernquantenpunkt **CI1₁** der ersten QuantenALU **QUALU1** an den ersten Quantenpunkt **NV1** angekoppelt ist;
- CI3₂: zweiter Kernquantenpunkt **CI3₂** der dritten QuantenALU **QUALU3.** Optional handelt es sich bei dem beispielhaften zweiten Kernquantenpunkt **CI3₂** der dritten QuantenALU **QUALU3** um ein Isotop mit einem magnetischen Kernmoment in dem Substrat **D,** wobei das Substrat **D** im Bereich des Kernquantenpunkts **CI3₂** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der zweite Kernquantenpunkt **CI3₂** der dritten QuantenALU **QUALU3** ist in der Figur 3 und in der Figur 2 zur besseren Übersicht nicht eingezeichnet. Der Leser sollte davon ausgehen, dass in der Figur 3 der zweite Kernquantenpunkt **CI3₂** der dritten QuantenALU **QUALU3** an den dritten Quantenpunkt **NV3** so angekoppelt ist, wie in der Figur 2 der zweite Kernquantenpunkt **CI1₂** der ersten QuantenALU **QUALU1** an den ersten Quantenpunkt **NV1** angekoppelt ist;
- CI3₃: dritter Kernquantenpunkt **CI3₃** der dritten QuantenALU **QUALU3.** Optional handelt es sich bei dem beispielhaften ersten Kernquantenpunkt **CI3₃** der dritten QuantenALU **QUALU3** um ein Isotop mit einem magnetischen Kernmoment in dem Substrat **D,** wobei das Substrat **D** im Bereich des Kernquantenpunkts **CI3₃** optional im Wesentlichen oder optional absolut keine Isotope mit einem magnetischen Kernmoment umfasst. Die hier vorgelegte Schrift verweist in diesem Zusammenhang auf die technische Lehre der bereits zitierten DE 10 2020 007 977 B4. Der dritte Kernquantenpunkt **CI3₃** der dritten QuantenALU **QUALU3** ist in der Figur 3 und in der Figur 2 zur besseren Übersicht nicht eingezeichnet. Der Leser sollte davon ausgehen, dass in der Figur 3 der dritte Kernquantenpunkt **CI3₃** der dritten QuantenALU **QUALU3** an den dritten Quantenpunkt **NV3** so angekoppelt ist, wie in der Figur 2 der erste Kernquantenpunkt **CI1₁** der ersten QuantenALU **QUALU1** an den ersten Quantenpunkt **NV1** angekoppelt ist;
- CIF: erste Kameraschnittstelle;
- CIF2: zweite Kameraschnittstelle;
- CM1: erste Kamera;
- CM2: zweite Kamera;
- CPU: Rechnerkern;
- D: Substrat;
- d1: erster Abstand in dem sich der erste Quantenpunkt **NV1** unter der Oberfläche **OF** des Substrats D befindet;
- d2: zweiter Abstand in dem sich der zweite Quantenpunkt **NV2** unter der Oberfläche **OF** des Substrats D befindet;
- DBIF: Datenschnittstelle;
- DBIFa: Datenschnittstelle A;
- DBIFb: Datenschnittstelle B;
- DBS: dichroitischer Spiegel;
- DEV: Energieversorgung von übrigen Vorrichtungsteilen des Quantencomputers **QC,** wobei dies typischerweise auch Vorrichtungsteile mit anderen Bezugszeichen betrifft. Zur besseren Übersicht sind die Energieversorgungsleitungen der übrigen Vorrichtungsteile des Quantencomputers **QC** in der Figur 1 nicht eingezeichnet;
- ENG: Antrieb des Fahrzeugs;
- ERS: Energiesystem;
- EXDB: externer Datenbus;
- EV: Energieversorgung;
- EV1: erste Spannungsregelstufe
- EV2: zweite Spannungsregelstufe
- λ_{fl}: Fluoreszenzstrahlungswellenlänge;
- λₚₘₚ.: Pumpstrahlungswellenlänge;
- FHB: Fabrikhalle bzw. stationäre Vorrichtung;
- f_{HF}: Mikrowellen- und/oder Radiowellenfrequenz;
- FL: Fluoreszenzstrahlung;
- FLC: Feuerleitstand. Der Feuerleitstand kann eine zentrale Steuereinheit **ZSE** sein.
- FLR: Fluglageregelungssystem;
- FZ: Flugzeug;
- FZT: Flugzeugträger;
- GDX: X-Steuervorrichtung für die translatorische Positioniervorrichtung in X-Richtung XT;
- GDY: Y-Steuervorrichtung für die translatorische Positioniervorrichtung in Y-Richtung YT;
- GH: Gehäuse;
- GPS: Navigationssystem oder Vorrichtung zur Positionsbestimmung und/oder Ausrichtungsbestimmung des Quantencomputers QC. Das Navigationssystem kann ggf. auch translatorische Geschwindigkeiten und/oder Rotationsgeschwindigkeiten des Quantencomputers **QC** bestimmen und an den rechnerkern **CPU** der Steuervorrichtung **µC** des Quantencomputers **QC** über den internen Datenbus **INTDB** melden. Das Navigationssystem kann ggf. auch translatorische Beschleunigungen und/oder Rotationsbeschleunigungen des Quantencomputers **QC** bestimmen und an den Rechnerkern **CPU** der Steuervorrichtung **µC** des Quantencomputers **QC** über den internen Datenbus **INTDB** melden;
- HD1: erste horizontale Treiberstufe zur Ansteuerung des ersten anzusteuernden Quantenpunkts **NV1;**
- HD2: zweite horizontale Treiberstufe zur Ansteuerung des zweiten anzusteuernden Quantenpunkts **NV2;**
- HD3: dritte horizontale Treiberstufe zur Ansteuerung des dritten anzusteuernden Quantenpunkts **NV3;**
- HeCLCS: Closed Loop Helium Gas Cooling-System;
- HS1: erste horizontale Empfängerstufe HS1, die mit der ersten horizontalen Treiberstufe **HD1** eine Einheit bilden kann, zur Ansteuerung des ersten anzusteuernden Quantenpunkts **NV1;**
- HS2: zweite horizontale Empfängerstufe **HS2,** die mit der zweiten horizontalen Treiberstufe **HD2** eine Einheit bilden kann, zur Ansteuerung des zweiten anzusteuernden Quantenpunkts **NV2;**
- HS3: dritte horizontale Empfängerstufe **HS3,** die mit der dritten horizontalen Treiberstufe **HD3** eine Einheit bilden kann, zur Ansteuerung des dritten anzusteuernden Quantenpunkts **NV3;**
- IH1: erster horizontaler Strom. Der erste horizontale Strom ist der elektrische Strom, der die erste horizontale Leitung **LH1** durchströmt.
- IH2: zweiter horizontaler Strom. Der zweite horizontale Strom ist der elektrische Strom, der die zweite horizontale Leitung **LH2** durchströmt.
- IH3: dritter horizontaler Strom. Der dritte horizontale Strom ist der elektrische Strom, der die dritte horizontale Leitung **LH3** durchströmt.
- Iₚ: Intensität der Pulse der gepulsten Pumpstrahlung **LB** der Lichtquelle **LD;**
- I_{pHF}: Amplitude **I_{pHF}** eines Pulses des zeitlichen Hüllkurvenverlaufs der Abstrahlung eines elektromagnetischen Feldes durch die eine oder die mehreren Vorrichtungen **MW/RF-AWFG** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃;**
- IS: Isolation;
- ISH1: erster horizontaler Abschirmstrom, der durch die erste horizontale Abschirmleitung **SH1** fließt;
- ISH2: zweiter horizontaler Abschirmstrom Strom, der durch die zweite horizontale Abschirmleitung **SH2** fließt;
- ISH3: dritter horizontaler Abschirmstrom Strom, der durch die dritte horizontale Abschirmleitung SH3 fließt;
- ISH4: vierter horizontaler Abschirmstrom Strom, der durch die vierte horizontale Abschirmleitung **SH4** fließt;
- ISV1: erster vertikaler Abschirmstrom, der durch die erste vertikale Abschirmleitung **SV1** fließt;
- ISV2: zweiter vertikaler Abschirmstrom, der durch die zweite vertikale Abschirmleitung **SV2** fließt;
- IV1: erster vertikaler Strom. Der erste vertikale Strom ist der elektrische Strom, der die erste vertikale Leitung **LV1** durchströmt;
- IVV: interner Verstärker innerhalb des Verstärkers V;
- KFZ: Auto als Beispiel eines Fahrzeugs;
- KH1: erster horizontaler Kontakt des ersten Quantenbits **QUB1** mit dem ersten Quantenpunkt **NV1.** Der erste horizontale Kontakt des ersten Quantenbits **QUB1** verbindet beispielsweise die erste horizontale Abschirmleitung **SH1** im ersten Quantenbit **QUB1** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KH2: zweiter horizontaler Kontakt des ersten Quantenbits **QUB1** mit dem ersten Quantenpunkt **NV1** und erster horizontaler Kontakt des zweiten Quantenbits **QUB2** mit dem zweiten Quantenpunkt **NV2.** Das erste Quantenbit **QUB1** und das zweite Quantenbit **QUB2** nutzen in dem Beispiel der Figur 3 diesen Kontakt gemeinsam. Der Kontakt verbindet beispielsweise die zweite horizontale Abschirmleitung **SH2** im ersten Quantenbit **QUB1** und im zweiten Quantenbit **QUB2** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KH3: zweiter horizontaler Kontakt des zweiten Quantenbits **QUB2** mit dem zweiten Quantenpunkt **NV2** und erster horizontaler Kontakt des dritten Quantenbits **QUB3** mit dem dritten Quantenpunkt **NV3.** Das zweite Quantenbit **QUB2** und das dritte Quantenbit **QUB3** nutzen in dem Beispiel der Figur 3 diesen Kontakt gemeinsam. Der Kontakt verbindet beispielsweise die dritte horizontale Abschirmleitung **SH3** im zweiten Quantenbit **QUB2** und im dritten Quantenbit **QUB3** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KH4: zweiter horizontaler Kontakt des dritten Quantenbits **QUB3** mit dem dritten Quantenpunkt **NV3.** Der Kontakt verbindet beispielsweise die vierte horizontale Abschirmleitung **SH3** im dritten Quantenbit **QUB3** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV11: erster vertikaler Kontakt des ersten Quantenbits **QUB1** mit dem ersten Quantenpunkt **NV1.** Der erste vertikale Kontakt des ersten Quantenbits **QUB1** verbindet die erste vertikale Abschirmleitung **SV1** im ersten Quantenbit **QUB1** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV12: zweiter vertikaler Kontakt des ersten Quantenbits **QUB1** mit dem ersten Quantenpunkt **NV1.** Der zweite vertikale Kontakt des ersten Quantenbits **QUB1** verbindet optional die zweite vertikale Abschirmleitung SH2 elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV21: erster vertikaler Kontakt des zweiten Quantenbits **QUB2** mit dem zweiten Quantenpunkt **NV2.** Der erste vertikale Kontakt des zweiten Quantenbits **QUB2** verbindet die erste vertikale Abschirmleitung **SV1** im zweiten Quantenbit **QUB2** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV22: zweiter vertikaler Kontakt des zweiten Quantenbits **QUB2** mit dem zweiten Quantenpunkt **NV2.** Der zweite vertikale Kontakt des zweiten Quantenbits **QUB2** verbindet optional die zweite vertikale Abschirmleitung **SH2** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV31: erster vertikaler Kontakt des dritten Quantenbits **QUB3** mit dem dritten Quantenpunkt **NV3.** Der erste vertikale Kontakt des dritten Quantenbits **QUB3** verbindet die erste vertikale Abschirmleitung **SV1** im dritten Quantenbit **QUB3** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV32: zweiter vertikaler Kontakt des dritten Quantenbits **QUB3** mit dem dritten Quantenpunkt **NV3.** Der zweite vertikale Kontakt des dritten Quantenbits **QUB3** verbindet optional die zweite vertikale Abschirmleitung **SH2** elektrisch mit dem Substrat **D** bzw. der epitaktischen Schicht **DEPI.** Optional handelt es sich im Falle von Diamant als Substratmaterial um einen Kontakt, der Titan umfasst oder aus Titan gefertigt ist;
- KV: verlegbare Kühlvorrichtung;
- LB: Pumpstrahlung;
- LD: Lichtquelle;
- LDRV: Lichtquellentreiber;
- LDV: Ladevorrichtung;
- LH1: erste horizontale Leitung;
- LH2: zweite horizontale Leitung;
- LH3: dritte horizontale Leitung;
- LM: Leuchte mit einem Leuchtmittel;
- LV1: erste vertikale Leitung;
- µC: Steuervorrichtung;
- µC1: erste Steuervorrichtung des ersten Quantencomputers **QC1;**
- µC1a: erste Steuervorrichtung A des ersten Quantencomputers **QC1;**
- µC1b: erste Steuervorrichtung B des ersten Quantencomputers **QC1;**
- µC2: zweite Steuervorrichtung des zweiten Quantencomputers **QC2;**
- µC3: dritte Steuervorrichtung des dritten Quantencomputers **QC3;**
- µC4: vierte Steuervorrichtung des vierten Quantencomputers **QC4;**
- µC5: fünfte Steuervorrichtung des fünften Quantencomputers **QC5;**
- µC6: sechste Steuervorrichtung des sechsten Quantencomputers **QC6;**
- µC7: siebte Steuervorrichtung des siebten Quantencomputers **QC7;**
- µC8: achte Steuervorrichtung des achten Quantencomputers **QC8;**
- µC9: neunte Steuervorrichtung des neunten Quantencomputers **QC9;**
- µC10: zehnte Steuervorrichtung des zehnten Quantencomputers **QC10;**
- µC11: elfte Steuervorrichtung des elften Quantencomputers **QC11;**
- µC12: zwölfte Steuervorrichtung des zwölften Quantencomputers **QC12;**
- µC13: dreizehnte Steuervorrichtung des dreizehnten Quantencomputers **QC13;**
- µC14: vierzehnte Steuervorrichtung des vierzehnten Quantencomputers **QC14;**
- µC15: fünfzehnte Steuervorrichtung des fünfzehnten Quantencomputers **QC15;**
- µC16: sechzehnte Steuervorrichtung des sechzehnten Quantencomputers **QC16;**
- µCV: Steuervorrichtung des Verstärkers V;
- MDBIF: interne Datenschnittstelle **MDBIF;**
- MEMDBV: Speicherdatenbus zwischen Steuervorrichtung **µCV** des Verstärkers **V** und Speicher **MEMV** des Verstärkers **V;**
- MEMV: Speicher des Verstärkers **V;**
- MFSx: erste Magnetfeldsteuerung;
- MFSy: zweite Magnetfeldsteuerung;
- MFSz: dritte Magnetfeldsteuerung;
- MGx: erstes Magnetfelderzeugungsmittel, das optional eine magnetische Flussdichte **Bₓ** erzeugt, die optional im Wesentlichen eine Richtung aufweist, die optional der ersten Richtung, also beispielsweise der Richtung der X-Achse, entspricht;
- MGy: zweites Magnetfelderzeugungsmittel, das optional eine magnetische Flussdichte **B_{y}** erzeugt, die optional im Wesentlichen eine Richtung aufweist, die optional der zweiten Richtung, also beispielsweise der Richtung der Y-Achse, entspricht;
- MGz: drittes Magnetfelderzeugungsmittel, das optional eine magnetische Flussdichte **B_{z}** erzeugt, die optional im Wesentlichen eine Richtung aufweist, die optional der dritten Richtung, also beispielsweise der Richtung der Z-Achse, entspricht;
- MSx: Magnetfeldsensor für die magnetische Flussdichte Bₓ in Richtung der X-Achse;
- MSy: Magnetfeldsensor für die magnetische Flussdichte B_{y} in Richtung der Y-Achse;
- MSz: Magnetfeldsensor für die magnetische Flussdichte B_{z} in Richtung der Z-Achse;
- mWA: Mikrowellen- und/oder Radiowellenantenne;
- MW/RF-AWFG: Mikrowellen- und/oder Radiowellenfrequenzgenerator zur Erzeugung weitestgehend frei vorgebbarer Wellenformen (Englisch: Arbitrary-Wave-Form-Generator);
- NAV: Navigationssystem und/oder Autopilot;
- NV1: erster Quantenpunkt. Optional handelt es sich bei dem beispielhaften ersten Quantenpunkt **NV1** um ein paramagnetisches Zentrum in dem Substrat **D.** Optional handelt es sich bei dem beispielhaften ersten Quantenpunkt **NV1** um ein NV-Zentrum oder um ein SiV-Zentrum oder ein ST1-Zentrum in dem Substrat **D;**
- NV2: zweiter Quantenpunkt. Optional handelt es sich bei dem beispielhaften zweiten Quantenpunkt **NV2** um ein paramagnetisches Zentrum in dem Substrat **D.** Optional handelt es sich bei dem beispielhaften zweiten Quantenpunkt **NV2** um ein NV-Zentrum oder um ein SiV-Zentrum oder ein ST1-Zentrum in dem Substrat **D;**
- NV3: dritten Quantenpunkt. Optional handelt es sich bei dem beispielhaften dritten Quantenpunkt **NV3** um ein paramagnetisches Zentrum in dem Substrat **D.** Optional handelt es sich bei dem beispielhaften dritten Quantenpunkt **NV3** um ein NV-Zentrum oder um ein SiV-Zentrum oder ein ST1-Zentrum in dem Substrat **D;**
- NVM: nicht flüchtiger Speicher;
- OF: Oberfläche;
- OS: optisches System;
- OSZ: Taktgeber des Rechnerkerns **CPU** der Steuervorrichtung **µC** des Quantencomputers **QC;**
- PD: Fotodetektor;
- PM: Permanentmagnet;
- PV: Positioniervorrichtung für den Permanentmagneten **PM;**
- PVC: Steuervorrichtung für die Positioniervorrichtung **PV** für den Permanentmagneten **PM;**
- PWR: Energieversorgung der Ladevorrichtung **LDV;**
- QC: Quantencomputer;
- QC1: erster Quantencomputer;
- QC2: zweiter Quantencomputer;
- QC3: dritter Quantencomputer;
- QC4: vierter Quantencomputer;
- QC5: fünfter Quantencomputer;
- QC6: sechster Quantencomputer;
- QC7: siebter Quantencomputer;
- QC8: achter Quantencomputer;
- QC9: neunter Quantencomputer;
- QC10: zehnter Quantencomputer;
- QC11: elfter Quantencomputer;
- QC12: zwölfter Quantencomputer;
- QC13: dreizehnter Quantencomputer;
- QC14: vierzehnter Quantencomputer;
- QC15: fünfzehnter Quantencomputer;
- QC16: sechzehnter Quantencomputer;
- QCTV: Quantencomputersystemtrennvorrichtung. Die Quantencomputersystemtrennvorrichtung trennt optional einen externen Datenbus **EXTDB,** der beispielsweise ein erstes Quantencomputersystem **QUSYS** mit einem zweiten Quantencomputersystem **QUSYS** verbindet im Bedarfsfall auf, sodass das Quantencomputersystem **QUSYS,** das zuvor das erste und das zweite Quantencomputersystem **QUSYS** umfasste durch die Auftrennung in zwei separate Quantencomputersysteme **QUSYS** zerfällt. Die Quantencomputersystemtrennvorrichtung kann aber auch ein zuvor separates erstes Quantencomputersystem **QUSYS** mit einem zuvor separaten zweiten Quantencomputersystem **QUSYS** verbinden und im Bedarfsfall koppeln, sodass das Quantencomputersystem **QUSYS** entsteht, das anschließend das erste und das zweite Quantencomputersystem **QUSYS** umfasst und durch die Verbindung dieser beiden Quantencomputersysteme über die Quantencomputersystemtrennvorrichtung zu einem Quantencomputersystem **QUSYS** verschmilzt;
- QUALU1: erste QuantenALU. Die beispielhafte erste QuantenALU besteht aus einem ersten Quantenpunkt **NV1** und einem ersten Kernquantenpunkt **CI1₁** der ersten QuantenALU und einem zweiten Kernquantenpunkt **CI1₂** der ersten QuantenALU und einem dritten Kernquantenpunkt **CI1₃** der ersten QuantenALU (Figur 2);
- QUALU2: zweite QuantenALU. Die beispielhafte zweite QuantenALU besteht aus einem zweiten Quantenpunkt **NV2** und einem ersten Kernquantenpunkt **CI2₁** der zweiten QuantenALU und einem zweiten Kernquantenpunkt **CI2₂** der zweiten QuantenALU und einem dritten Kernquantenpunkt **CI2₃** der zweiten QuantenALU (Figur 2);
- QUSYS: verlegbares Quantencomputersystem;
- RAM: flüchtiger Speicher;
- RKT: Rakete. Die Rakete ist nur ein Beispiel einer möglichen Zuladung. Die Zuladung kann selbst wieder ein oder mehrere Quantencomputersysteme **QUSYS** umfassen. Optional ist das Quantencomputersystem **QUSYS** der Zuladung während der Zeit der Zuladung mit dem Quantencomputersystem **QUSYS** des Fahrzeugs **FZ,** oder des Objekts, in dem die Zuladung aufgestellt oder gelagert wird, beispielsweise über einen Externen Datenbus **EXTDB** verbunden;
- RKTC: Raketenabschusskontrolle;
- S0: Empfängerausgangssignal;
- S1: Empfangssignal;
- S4: Messwertsignal;
- S5: Sendesignal;
- SC: See-Container. Der Seecontainer ist nur ein Beispiel eines transportablen Behältnisses in dem ein oder mehrere Quantencomputersysteme **QUSYS** oder ein oder mehrere Quantencomputer **QC** betrieben werden können;
- SCHR: Schiffsschraube;
- SDB: Steuerdatenbus;
- SDBV: interner Steuerdatenbus innerhalb des Verstärkers **V;**
- SENS: ein oder mehrere Sensoren;
- SH1: erste horizontale Abschirmleitung;
- SH2: zweite horizontale Abschirmleitung;
- SH3: dritte horizontale Abschirmleitung;
- SH4: vierte horizontale Abschirmleitung;
- SRG: erste Energieaufbereitungsvorrichtung, insbesondere ein Spannungswandler oder ein Spannungsregler oder ein Stromregler;
- SRG2: zweite Energieaufbereitungsvorrichtung, insbesondere ein Spannungswandler oder ein Spannungsregler oder ein Stromregler;
- ST: Temperatursensor;
- STAB: Stabilisierungsvorrichtung
- STM: halbdurchlässiger Spiegel;
- SUB: Unterseeboot (U-Boot);
- SV1: erste horizontale Abschirmleitung;
- SV2: zweite vertikale Abschirmleitung;
- TL: Tieflader. Der Tieflader ist ein Beispiel eines Fahrzeugs ohne eigenen Antrieb.
- TRP: Torpedos;
- TRPC: Torpedoabschusskontrolle;
- TS: Trennvorrichtung;
- t_{0HF}: Referenzzeitpunkt eines Pulses des gepulsten elektromagnetischen Felds mit Mikrowellen- und/oder Radiowellenfrequenz **f_{HF}.** Optional ist der Referenzzeitpunkt **t_{0HF}** gleich dem Referenzzeitpunkt **t₀ₚ** für eine Pulssequenz oder zeitlich fest beabstandet zum Referenzzeitpunkt für eine Pulssequenz **t₀ₚ;**
- t₀ₚ: Referenzzeitpunkt für eine Pulssequenz. Optional ist der Referenzzeitpunkt **t₀ₚ** für eine Pulssequenz gleich dem Referenzzeitpunkt **t_{0HF}** oder zeitlich fest beabstandet zum Referenzzeitpunkt **t_{0HF};**
- t_{dp}: die zeitliche Dauer **t_{dp}** der Pulse der gepulsten Pumpstrahlung **LB** der Lichtquelle **LD;**
- t_{dHF}: zeitliche Pulsdauer des Pulses des gepulsten elektromagnetischen Felds mit Mikrowellen- und/oder Radiowellenfrequenz **f_{HF}.** Es handelt sich um die zeitliche Pulsdauer des zeitlichen Hüllkurvenverlaufs der Abstrahlung eines elektromagnetischen Feldes durch die eine oder die mehreren Vorrichtungen **MW/RF-AWFG** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃** in Pulsform;
- tₛₚ: zeitliche Lage der Pulse der gepulsten Pumpstrahlung **LB** der Lichtquelle **LD** bezogen auf einen Bezugszeitpunkt **t₀** In der Regel bezeichnet die zeitliche Lage tₛₚ eines Pulses den Startzeitpunkt des betreffenden Pulses;
- t_{spHF}: Pulsstartzeitpunkt **t_{spHF}** relativ zum Referenzzeitpunkt **t_{0HF}** eines Pulses des zeitlichen Hüllkurvenverlaufs der Abstrahlung eines elektromagnetischen Feldes durch die eine oder die mehreren Vorrichtungen **MW/RF-AWFG** zur Erzeugung eines elektromagnetischen Wellenfeldes am jeweiligen Ort der Quantenpunkte **NV1, NV2, NV3** und am jeweiligen Ort der Kernquantenpunkte **CI1₁, CI1₂, CI1₃, CI2₁, CI2₂, CI2₃, CI3₁, CI3₂, CI3₃;**
- UDB1: erster Unterdatenbus;
- UDB2: zweiter Unterdatenbus;
- UDB3: dritter Unterdatenbus;
- UDB4: vierter Unterdatenbus;
- ÜOSZ: Überwachungstakterzeugung der Quantencomputerüberwachungsvorrichtung **QUV** des Quantencomputers **QC;**
- US: Unterseite des Substrats **D;**
- V: Verstärker;
- V1: Ausgangssignal des internen Verstärkers **IVV** des Verstärkers **V** und Eingangssignal des Analog-zu-Digital-Wandler **ADCV** des Verstärkers **V;**
- V2: Datenleitung zwischen der Steuervorrichtung **µCV** des Verstärkers **V** und dem Analog-zu-Digital-Wandler **ADCV** des Verstärkers **V;**
- V_{batext}: elektrische Energie einer externen Energieversorgung, beispielsweise einer externen Spannungsversorgung;
- VD1: erste vertikale Treiberstufe zur Ansteuerung der anzusteuernden Quantenpunkte **NV1, NV2, NV3;**
- VIF: Datenschnittstelle des Verstärkers **V** zum Steuerdatenbus **SDB;**
- VS1: erste vertikale Empfängerstufe, die mit der ersten vertikalen Treiberstufe **VD1** eine Einheit bilden kann, zur Ansteuerung der ersten anzusteuernden Quantenpunkte **NV1, NV2, NV3;**
- WFG: Wellenformgenerator;
- XT: translatorische Positioniervorrichtung in X-Richtung;
- YT: translatorische Positioniervorrichtung in Y-Richtung;
- ZM: Zugmaschine. Die Zugmaschine ist ein Beispiel für einen Antrieb für ein Behältnis mit einem oder mehreren Quantencomputern **QC** und/oder einem oder mehreren Quantencomputersystemen **QUSYS,** der von dem Behältnis getrennt werden kann oder dem Behältnis hinzugefügt werden kann. In dem Beispiel der Figur 6b ist das Behältnis ein beispielhafter Tieflader **TL** mit einem See-Container **SC;**
- ZSE: zentrale Steuereinheit;
- 1910, 1920, 1930, 1940, 1950, 1960: Verfahren
- 1901- 1906: Verfahrensschritte
- 1911 - 1912: Verfahrensschritte
- 1921- 1922: Verfahrensschritte
- 1931- 1932: Verfahrensschritte
- 1941- 1944: Verfahrensschritte
- 1952- 1956: Verfahrensschritte
- 1962- 1964: Verfahrensschritte
- RoS: Rotationssensor
- REV: Rotationsentkopplungsvorrichtung
- GYR: Gyroskop

### Liste zitierter Schriften

Sofern, im Rahmen der Nationalisierung einer internationalen Folgeanmeldung, das Recht des jeweiligen Rechtssystems des Staates, in dem die Nationalisierung der internationalen Anmeldung der hier vorgelegten Schrift erfolgt, eine Offenbarung per Referenz erlaubt , ist der Inhalt der folgenden Schriften vollumfänglicher Teil der hier vorgelegten Offenlegung.
CN 103 855 907 B,
CN 108 831 576 B,
CN 20 634 1126 U,
DE 1 240 967 B,
DE 1 564 070 B1,
DE 2 124 465 B2,
DE 7 219 216 U,
DE 69 411 078 T2,
DE 19 602 875 A1,
DE 19 738 066 A1,
DE 19 957 669 A1,
DE 19 782 844 538 B1,
DE 10 2014 225 346 A1,
DE 10 2018 127 394.0,
DE 10 2019 130 114.9,
DE 10 2019 120 076.8,
DE 10 2019 121 137,
DE 10 2020 125 189 A1,
DE 10 2020 101 784 B3,
DE 10 2020 007 977 B4,
DE 10 2020 008 157 B3,
DE 10 2021 110 964.7,
DE 20 2021 101 169 U1,
EP 2 874 292 B1,
EP 2 986 852 B1,
EP 3 007 350 B1,
EP 3 075 064 A1,
EP 3 093 966 B1,
EP 3 279 603 B1,
EP 3 345 290 B1,
EP 3 400 642 B1,
EP 3 646 452 B1,
EP 3 863 165 A1,
RU 126 229 U1,
RU 2 566 620 C2,
RU 2014 143 858 A,
US 5 443 657 A,
US 5 859 484 A,
US 8 552 616 B2,
US 2016 377 029 A1,
US 2018 226 165 A1,
US 2019 368 464 A1,
US 2021 147 061 A1,
WO 2009 103 974 A1,
WO 2014 031 037 A2,
WO 2016 100 008 A2,
WO 2019 143 396 A2,
WO 2021 159 117 A1,
https://de.wikipedia.org/wiki/Daisy_Chain
https://en.wikipedia.org/wiki/Cryocooler
https://www.youtube.com/watch?v=j0SZirc7TO8
P. Balasubramanian, M. H. Metsch, Reddy, R. Prithvi, J. Lachlan, N. B. Manson, M. W. Doherty, F. Jelezko, "Discovery of ST1 centers in natural diamond" Nanophotonics, Vol. 8, Nr. 11, 2019, Seiten 1993-2002. https://doi.org/10.1515/nanoph-2019-0148
Castelletto and Alberto Boretti, "Silicon carbide color centers for quantum applications" 2020 J. Phys. Photonics2 022001
Carlo Bradac, Weibo Gao, Jacopo Forneris, Matt Trusheim, Igor Aharonovich, "Quantum Nanophotonics with Group IV defects in Diamond", DOI: 10.1038/s41467-020-14316-x, arXiv:1906.10992
Ovidiu Calin, "Deep Learning Architectures: A Mathematical Approach (Springer Series in the Data Sciences)", Springer; 1st ed. 2020 Edition (14. Februar 2021), ISBN-10: 3030367231, ISBN-13: 978-3030367237
Franklin R. Chang Diaz, F. Wall y Baitty, Jared P. Squire, Richard H. Goulding, Edgar A. Bering, Roger D. Bengtson, "The Vasimr Engine: Project Status and Recent Accomplishments ", herunterladbar am 05.03.2023 von https://ntrs.nasa.gov/api/citations/20110011201/downloads/20110011201.pdf.
J. Davidsson, V. Ivády, R. Armiento, N. T. Son, A. Gali, I. A. Abrikosov, "First principles predictions of magneto-optical data for semiconductor point defect identification: the case of divacancy defects in 4H-SiC", New J. Phys., 2018, 20, 023035
J. Davidsson, V. Ivády, R. Armiento, T. Ohshima, N. T. Son, A. Gali, I. A. Abrikosov "Identification of divacancy and silicon vacancy qubits in 6H-SiC", Appl. Phys. Lett. 2019, 114, 112107
J. Foglszinger, A. Denisenko, T. Kornher, M. Schreck, W. Knolle, B. Yavkin, R. Kolesov, J. Wrachtrup "ODMR on Single TR12 Centers in Diamond" arXiv:2104.04746v1 [physics.optics]
M. Hollenbach, Y. Berencén, U. Kentsch, M. Helm, G. V. Astakhov "Engineering telecom single-photon emitters in silicon for scalable quantum photonics" Opt. Express 28, 26111 (2020), DOI: 10.1364/OE.397377, arXiv:2008.09425 [physics.app-ph]
V. Ivády, J. Davidsson, N. T. Son, T. Ohshima, I. A. Abrikosov, A. Gali, "Identification of Si-vacancy related room-temperature qubits in 4H silicon carbide", Phys. Rev.B, 2017, 96,161114
Takayuki Iwasaki, Yoshiyuki Miyamoto, Takashi Taniguchi, Petr Siyushev, Mathias H. Metsch, Fedor Jelezko, Mutsuko Hatano, "Tin-Vacancy Quantum Emitters in Diamond", Phys. Rev. Lett. 119, 253601 (2017), DOI: 10.1103/PhysRevLett.119.253601, arXiv:1708.03576 [quant-ph]
Rasmus Høy Jensen, Erika Janitz, Yannik Fontana, Yi He, Olivier Gobron, Ilya P. Radko, Mihir Bhaskar, Ruffin Evans, Cesar Daniel Rodriguez Rosenblueth, Lilian Childress, Alexander Huck, Ulrik Lund Andersen, "Cavity-Enhanced Photon Emission from a Single Germanium-Vacancy Center in a Diamond Membrane", arXiv:1912.05247v3 [quant-ph] 25 May 2020
Hugo K. Messerle (Autor ), "Magnetohydrodynamic Electrical Power Generation (UNESCO Energy Engineering Series)", John Wiley & Sons Ltd (1. August 1995), ISBN-10: 0471942529, ISBN-13: 978-0471942528.
Steven Prawer (Herausgeber), Igor Aharonovich (Herausgeber), "Quantum Information Processing with Diamond: Principles and Applications", Woodhead Publishing Series in Electronic and Optical Materials, Band 63, Woodhead Publishing, 8. Mai 2014 , ISBN-10 : 0857096567, ISBN-13 : 978-0857096562
Marina Radulaski, Matthias Widmann, Matthias Niethammer, Jingyuan Linda Zhang, Sang-Yun Lee, Torsten Rendler, Konstantinos G. Lagoudakis, Nguyen Tien Son, Erik Janzén, Takeshi Ohshima, Jörg Wrachtrup, Jelena Vučković, "Scalable Quantum Photonics with Single Color Centers in Silicon Carbide", Nano Letters 17 (3), 1782-1786 (2017), DOI: 10.1021/acs.nanolett.6b05102, arXiv:1612.02874
Petr Siyushev, Milos Nesladek, Emilie Bourgeois, Michal Gulka, Jaroslav Hruby, Takashi Yamamoto, Michael Trupke, Tokuyuki Teraji, Junichi Isoya, Fedor Jelezko, "Photoelectrical imaging and coherent spin-state readout of single nitrogen-vacancy centers in diamond", Science 363, 728-731 (2019) 15 February 2019
Akinori Tanaka, Akio Tomiya, Koji Hashimoto, "Deep Learning and Physics (Mathematical Physics Studies)" 21. Februar 2021, Herausgeber: Springer; 1st ed. 2021 Edition, ISBN-10: 9813361077, ISBN-13: 978-9813361072
Björn Tegetmeyer, "Luminescence properties of SiV-centers in diamond diodes" Promotionsschrift, Universität Freiburg, 30.01.2018
Matthew E. Trusheim, Noel H. Wan, Kevin C. Chen, Christopher J. Ciccarino, Ravishankar Sundararaman, Girish Malladi, Eric Bersin, Michael Walsh, Benjamin Lienhard, Hassaram Bakhru, Prineha Narang, Dirk Englund, "Lead-Related Quantum Emitters in Diamond" Phys. Rev. B 99, 075430 (2019), DOI: 10.1103/PhysRevB.99.075430, arXiv:1805.12202 [quant-ph]
Vasily Y. Ushakov (Autor), "Electrical Power Engineering: Current State, Problems and Perspectives (Green Energy and Technology)", Taschenbuch - 18. August 2018, Springer; 1st ed. 2018 Edition (18. August 2018), ISBN-10: 3319872850, ISBN-13: 978-3319872858.
C. Wang, C. Kurtsiefer, H. Weinfurter, and B. Burchard, "Single photon emission from SiV centres in diamond produced by ion implantation" J. Phys. B: At. Mol.Opt. Phys., 39(37), 2006
S. A. Zargaleh, S. Hameau, B. Eble, F. Margaillan, H. J. von Bardeleben, J. L. Cantin, W. Gao, "Nitrogen vacancy center in cubic silicon carbide: a promising qubit in the 1.5µm spectral range for photonic quantum networks" Phys. Rev.B, 2018, 98, 165203
S. A. Zargaleh et al "Evidence for near-infrared photoluminescence of nitrogen vacancy centers in 4H-SiC" Phys. Rev.B, 2016, 94, 060102

## Patentansprüche

1. Fahrzeug, aufweisend:
- eine Steuereinheit; und
- einen Sensor zur Erfassung von Umfelddaten;
**dadurch gekennzeichnet, dass** das Fahrzeug ferner aufweist:
- einen Quantencomputer; und
- einen Datenbus, der die Steuereinheit und den Quantencomputer zu einem Quantencomputersystem verbindet und das Quantencomputersystem mit dem Sensor verbindet;
wobei das Fahrzeug dazu eingerichtet ist, mittels des Sensors erfasste Umfelddaten dem Quantencomputersystem bereitzustellen und mittels des Quantencomputersystems anhand der Umfelddaten ein Objekt im Umfeld zu identifizieren.

2. Fahrzeug gemäß Anspruch 1, wobei die Steuereinheit dazu eingerichtet ist, ein neuronales Netzwerkmodell zumindest teilweise auszuführen.

3. Fahrzeug gemäß Anspruch 2, wobei das Quantencomputersystem dazu eingerichtet ist, das identifizierte Objekt mittels des neuronalen Netzwerkmodells zu klassifizieren.

4. Fahrzeug gemäß Anspruch 3, wobei das Quantencomputersystem dazu eingerichtet ist, zur Durchführung der Klassifizierung des identifizierten Objekts zumindest eine Quantenoperation zur Manipulation eines Quantenzustands zumindest eines Quantenpunkts des Quantencomputers zu verwenden.

5. Fahrzeug gemäß einem der Ansprüche 2 bis 4, wobei das neuronale Netzwerkmodell dazu eingerichtet ist, Eingangswerte und/oder Eingangssignale zu verarbeiten und Ausgangswerte und/oder Ausgangssignale auszugeben und wobei das Quantencomputersystem dazu eingerichtet ist, in Abhängigkeit von den Ausgangswerten des neuronalen Netzwerkmodells Quantenpunkte und/oder Kernquantenpunkte des Quantencomputers zu beeinflussen.

6. Fahrzeug gemäß einem der Ansprüche 2 bis 5, wobei Eingangswerte und/oder Eingangssignale des neuronalen Netzwerkmodells von einem Zustand eines oder mehrerer Quantenpunkte und/oder Kernquantenpunkte des Quantencomputers abhängen.

7. Fahrzeug gemäß einem der Ansprüche 2 bis 6, wobei ein erster Teil des neuronalen Netzwerkmodells durch die Steuereinheit des Fahrzeugs und ein zweiter Teil des neuronalen Netzwerkmodells durch eine Steuervorrichtung des Quantencomputers ausgeführt wird.

8. Fahrzeug gemäß einem der vorhergehenden Ansprüche, wobei das Fahrzeug ferner dazu eingerichtet ist, unter Verwendung des Quantencomputersystems anhand der Umfelddaten ein NP-vollständiges Problem einer Risikobewertung des identifizierten Objekts im Umfeld des Fahrzeugs zu bearbeiten.

9. Fahrzeug gemäß Anspruch 8, wobei das Bearbeiten des NP-vollständigen Problems der Risikobewertung unter Verwendung des Quantencomputers im Zusammenwirken mit der Steuereinheit des Fahrzeugs erfolgt.

10. Fahrzeug gemäß Anspruch 8 oder 9, wobei das Fahrzeug dazu eingerichtet ist, die Risikobewertung des identifizierten Objekts und/oder weiterer Objekte entlang einer Route des Fahrzeugs durchzuführen.

11. Fahrzeug gemäß einem der vorhergehenden Ansprüche, wobei das Fahrzeug dazu eingerichtet ist, anhand der Umfelddaten eine Route des Fahrzeugs zu bestimmen und/oder zu optimieren.

12. Fahrzeug gemäß Anspruch 11, wobei das Quantencomputersystem dazu eingerichtet ist, eine schnellste und zugleich risikoärmste Route des Fahrzeugs zu bestimmen.

13. Fahrzeug gemäß einem der vorhergehenden Ansprüche, wobei das Fahrzeug zumindest einen zweiten Quantencomputer aufweist, der einen Teil des Quantencomputersystems bildet.

14. Fahrzeug gemäß einem der vorhergehenden Ansprüche, wobei der Sensor ein erster Sensor ist und als Radarsensor, LIDAR-Sensor, Ultraschallsensor, kamerabasierter Sensor, Infrarotkamera, Multispektralkamera, Quantensensor und/oder Sonarsensor ausgebildet ist; und
wobei das Fahrzeug optional zumindest einen zweiten Sensor aufweist, der optional als Radarsensor, LIDAR-Sensor, Ultraschallsensor, kamerabasierter Sensor, Infrarotkamera, Multispektralkamera, Quantensensor und/oder Sonarsensor ausgebildet ist.

15. Verfahren zur Identifizierung eines Objekts im Umfeld eines Fahrzeugs, wobei das Fahrzeug eine Steuereinheit, einen Sensor, einen Quantencomputer und einen Datenbus umfasst und der Datenbus die Steuereinheit und den Quantencomputer zu einem Quantencomputersystem verbindet, und wobei das Verfahren umfasst:
- Bereitstellen von Umfelddaten mittels des Sensors und Übermitteln der Umfelddaten über den Datenbus an das Quantencomputersystem;
- Identifizieren des Objekts im Umfeld mittels des Quantencomputersystems anhand der mittels des Sensors bereitgestellten Umfelddaten.
